(19) Europäisches Patentamt
European Patent Office
Office européen des brevets

(11) **EP 4 657 056 A1**

(12) **EUROPEAN PATENT APPLICATION**
published in accordance with Art. 153(4) EPC

(43) Date of publication:
**03.12.2025 Bulletin 2025/49**

(21) Application number: **24845600.6**

(22) Date of filing: **23.07.2024**

(51) International Patent Classification (IPC):
***G01N 27/48*** *(2006.01)* ***G01N 27/26*** *(2006.01)*
***G01N 27/28*** *(2006.01)*

(52) Cooperative Patent Classification (CPC):
**G01N 27/26; G01N 27/28; G01N 27/48**

(86) International application number:
**PCT/JP2024/026224**

(87) International publication number:
**WO 2025/023224 (30.01.2025 Gazette 2025/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.07.2023 JP 2023121189**

(71) Applicant: **Extend Co., Ltd.**
**Tosu-shi, Saga 841-0056 (JP)**

(72) Inventors:
- **OHMAGARI, Shinya**
  **Tosu-shi, Saga 841-0056 (JP)**
- **KITAICHI, Mitsuru**
  **Tosu-shi, Saga 841-0056 (JP)**

(74) Representative: **Appelt, Christian W.**
**Boehmert & Boehmert**
**Anwaltspartnerschaft mbB**
**Pettenkoferstrasse 22**
**80336 München (DE)**

(54) **SENSOR, ANALYSIS DEVICE, TERMINAL DEVICE, ANALYSIS SYSTEM USING THESE, AND PROGRAM TO BE EXECUTED BY COMPUTER**

(57) A sensor 11 is used for measuring the cyclic voltammogram of a liquid analyte, detachably provided to a measurement device that measures the cyclic voltammogram, and configured to be discarded after each measurement of the cyclic voltammogram, and the sensor includes a substrate 111 having a flat plate shape, a working electrode 112, a counter electrode 113, a reference electrode 114, and wirings 115 to 117. The wirings 115 to 117 are provided on one surface of the substrate 111. The working electrode 112 is provided on one surface of the substrate 111 and electrically connected to one end of the wiring 115. The counter electrode 113 is provided on one surface of the substrate 111 and electrically connected to one end of the wiring 116. The reference electrode 114 is provided on one surface of the substrate 111 and electrically connected to one end of the wiring 117. The working electrode 112 has a circular or square planar shape.

Fig. 2

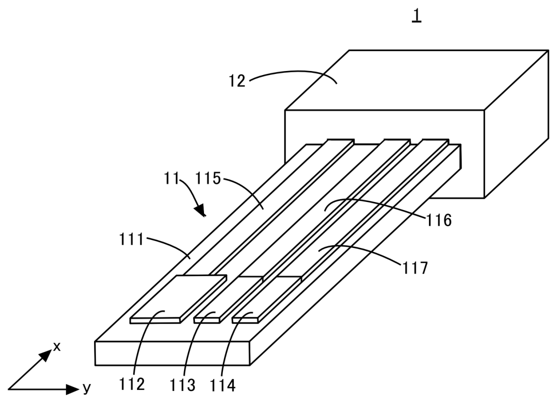




EP 4 657 056 A1

## Description

[Technical Field]

The present invention relates to a sensor, an analysis device, a terminal device, an analysis system using these, and a program to be executed by a computer.

[Background Art]

In solution analysis techniques for beverages, alcoholic drinks, tap water, urine, blood, and other liquids, analytical methods such as FTIR (Fourier Transform Infrared Spectroscopy), gas chromatography, taste sensors, and Raman spectroscopy have been used (NPL 1 to NPL 3).

However, the devices therefor have issues with portability because of their large sizes and high prices, and expertise is required to handle the devices because of their complexity.

In addition, individual sensors that measure temperature, humidity, total acidity (acidity of all types of acids in solutions), and alcohol content can be used for on-site measurement (measurement performed on-site), but many of these sensors cannot be used alone to determine the state of a solution, and multiple sensors must be used in combination.

The electrochemical sensor can simplify measurement systems and is compact, inexpensive, and highly portable, offering great potential as an on-site analysis technology for a wide range of solutions.

[Citation List]

[Non Patent Literature]

[NPL 1]
H. Yu, Y. Zhang, J. Zhao, and H. Tian, "Taste characteristics of Chinese bayberry juice characterized by sensory evaluation, chromatography analysis, and an electronic tongue," J Food Sci Technol 55(5), 1624-1631 (2018)

[NPL 2]
G.F. Abreu, F.M. Borem, L.F.C. Oliveira, M.R. Almeida, and A.P.C. Alves, "Raman spectroscopy: A new strategy for monitoring the quality of green coffee beans during storage," Food Chem 287, 241-248 (2019)

[NPL 3]
R. Ferrer-Gallego, J.M. Hernandez-Hierro, J.C. Rivas-Gonzalo, and M.T. Escribano-Bailon, "Evaluation of sensory parameters of grapes using near infrared spectroscopy," J Food Eng 118(3), 333-339 (2013)

[Summary of Invention]

[Technical Problem]

However, because the electrochemical sensor systems need to detect "specific chemicals" selectively and with high sensitivity, careful sample evaluation is required, including sample pretreatment, solvent extraction, and pH adjustment using buffer solutions.

The surface of the working electrode used in electrochemical sensors becomes contaminated by organic matter and radicals after multiple uses, resulting in a decrease in signal strength, and the electrode needs to be regenerated for example by physical polishing.

Therefore, according to an embodiment of the present invention, a sensor is provided that does not require electrode regeneration for example through physical polishing and sample pretreatment.

In addition, according to an embodiment of the invention, an analysis device is provided that can identify an analyte based on a characteristic measured using a sensor that does not require electrode regeneration for example through physical polishing and sample pretreatment.

Furthermore, according to an embodiment of the invention, a terminal device capable of acquiring an index used for identifying an analyte based on a characteristic measured using a sensor that does not require electrode regeneration for example through physical polishing and sample pretreatment.

Furthermore, according to an embodiment of the invention, an analysis system is provided that can identify an analyte based on a characteristic measured using a sensor that does not require electrode regeneration for example through physical polishing or sample pretreatment.

Furthermore, according to an embodiment of the invention, a program to be executed by a computer is provided that causes the computer to execute creation of an index used for identifying an analyte based on a characteristic measured using a sensor that does not require electrode regeneration for example through physical polishing and sample pretreatment.

[Solution to Problem]

Aspect 1

According to an embodiment of the invention, a sensor is used for measuring a cyclic voltammogram of a liquid analyte, detachably provided to a measurement device that measures the cyclic voltammogram, and configured to be discarded after each measurement of the cyclic voltammogram and includes a substrate, a first wiring, a second wiring, a third wiring, a working electrode, a reference electrode, and a counter electrode. The substrate has a flat plate shape. The first wiring is provided on one surface of the substrate in a first direction. The second wiring is provided on one surface of the substrate in the first direction and a prescribed space apart from the first wiring in a second direction orthogonal to the first direction. The third wiring is provided on one surface of the substrate in the first direction and a prescribed space apart from the second wiring in the second direction. The working electrode is provided on one surface of the substrate, electrically connected to one end of the first wiring, and configured to exchange electrons with the analyte. The reference electrode is provided on one surface of the substrate, electrically connected to one end of the second wiring to serve as a reference in determining the potential of the working electrode. The counter electrode is provided on one surface of the substrate, electrically connected to one end of the third wiring, and configured to return a current value equal to a current value generated at the working electrode to the system. The first wiring, the second wiring, and the third wiring are electrically connected to the measurement device when the other end of the substrate in the first direction is inserted in a recess of the measurement device. The counter electrode is provided between the working electrode and the reference electrode in the second direction. The working electrode has a circular or square planar shape.

Aspect 2

According to an embodiment of the invention, an analysis device is configured to create an index curve which serves as an index for identifying a liquid analyte based on a current-potential characteristic of a cyclic voltammogram of the analyte measured using a cyclic voltammetry method, and includes a calculation unit and a creation unit. The calculation unit is configured to perform calculation processing to calculate an integral value for a prescribed potential range of the current-potential characteristic based on the current-potential characteristic and to execute the calculation for all the prescribed potential ranges, thereby calculating multiple integral values for the multiple prescribed potential ranges. The creation unit is configured to create, as the index curve, a curve that indicates the dependence of the integral values on the prescribed potential ranges based on the multiple integral values for the multiple prescribed potential ranges calculated by the calculation unit.

Aspect 3

In aspect 2, the calculation unit calculates the area of the cyclic voltammogram in one of the prescribed potential ranges in the calculation processing and executes the calculation for all the multiple prescribed potential ranges to calculate the multiple integral values.

Aspect 4

In aspect 3, the calculation unit performs, in the calculation processing, subtraction processing to subtract a reduction wave current value from an oxidation wave current value of the cyclic voltammogram at one unit potential in one prescribed potential range, to calculate the intensity of the cyclic voltammogram at one unit potential, and performs the processing for all unit potentials in the one prescribed potential range, to calculate the sum of the multiple calculated intensities as the area of the cyclic voltammogram in the one prescribed potential range.

Aspect 5

In aspect 4, in the calculation processing, the calculation unit subtracts the reduction wave current value from the oxidation wave current value of the cyclic voltammogram at the one unit potential in the one prescribed potential range to calculate the intensity of the cyclic voltammogram at the one unit potential.

Aspect 6

In aspect 5, the calculation unit calculates a negative value intensity as the intensity of the cyclic voltammogram at the one unit potential when the reduction wave current value at the one unit potential is greater than the oxidation wave current value.

Aspect 7

In aspect 2, the analysis device further includes a judgement unit. The judgement unit is configured to judge whether P (P is an integer equal to or greater than 2) of the multiple integral values differ from each other, (where P is an integer equal to or greater than 2), when the calculation unit calculates the multiple integral values in the multiple prescribed potential ranges for each of P analytes in the calculation processing. When the judgement unit judges that the P of the multiple integral values differ from each other, the creation unit creates P of the curves based on the P of the multiple integral values.

Aspect 8

In aspect7, when Z combinations of two of [the multiple integral values] are extracted from the P of [the multiple integral values] and the Z combinations of two of [the multiple integral values] are defined as Z combinations of two of [n integral values $ITG_{1_i}$ to $ITG_{n_i}$] and [n integral values $ITG_{1_j}$ to $ITG_{n_j}$], where Z is the number of combinations ${}_pC_2$ of two of [the multiple integral values] when two of the [multiple integral values] are extracted from the P of [the multiple integral values], n represents the total number of the prescribed potential ranges, and $i \neq j$, the judgement unit judges that the P of [the multiple integral values] differ from each other upon judging that the two of [the n integral values $ITG_{1_i}$ to $ITG_{n_i}$] and [the n integral values $ITG_{1_j}$ to $ITG_{n_j}$] differ, for all combinations of two of [the n integral values $ITG_{1_i}$ to $ITG_{n_i}$] and [the n integral values $ITG_{1_j}$ to $ITG_{n_j}$] included in the Z combinations of two of [the n integral values $ITG_{1_i}$ to $ITG_{n_i}$] and [the n integral values $ITG_{1_j}$ to $ITG_{n_j}$].

Aspect 9

In aspect 8, the [n integral values $ITG_{1_i}$ to $ITG_{n_i}$] are associated with n classes $Cls_1$ to $Cls_n$, respectively, and the [n integral values $ITG_{1_j}$ to $ITG_{n_j}$] are associated with the n classes $Cls_1$ to $Cls_n$, respectively, and the judgement unit calculates the difference $DF_k$ between the integral values $ITG_{k_i}$ and $ITG_{k_j}$ in one class $Cls_k$, where k is any number from 1 to n, based on the two of [n integral values $ITG_{1_i}$ to $ITG_{n_i}$] and [n integral values $ITG_{1_j}$ to $ITG_{n_j}$], executes the calculation for all of the n classes $CLs_1$ to $Cls_n$ to calculate n differences $DF_1$ to $DF_n$, and judges that the two of [n integral values $ITG_{1_i}$ to $ITG_{n_i}$] and [n integral values $ITG_{1_j}$ to $ITG_{n_j}$] differ from each other upon judging that the standard deviation of the n differences $DF_1$ to $DF_n$ is greater than a threshold value.

Aspect 10

In aspect 7, the P analytes have mutually different P names, and when two analytes with different names among the P analytes with different names are defined as first and second analytes, and two analytes included in the first analyte and of different kinds are defined as third and fourth analytes, the judgement unit judges that the [multiple integral values] for the first analyte and the [multiple integral values] for the second analyte differ from each other when a first standard deviation as a standard deviation of the differences between the [multiple integral values] for the first analyte and the [multiple integral values] for the second analyte is greater than a first threshold value, and judges that the [multiple integral values] for the third analyte and the [multiple integral values] for the fourth analyte differ from each other when a send standard deviation as a standard deviation of the differences between the [multiple integral values] for the third analyte and the [multiple integral values] for the fourth analyte is greater than a second threshold value which is smaller than the first threshold value.

Aspect 11

In aspect 2, the analysis device further includes a display unit. The display unit is configured to display the curve created by the creation unit.

Aspect 12

Furthermore, according to an embodiment of the invention, a terminal device includes a receiving unit, a transmission unit, a display unit. The receiving unit is configured to receive measurement data of a cyclic voltammogram of a liquid analyte, measured using a cyclic voltammetry method, from a sensor device via wired or wireless communication and receive a curve created based on the measurement data to represent the dependence of multiple integral values on prescribed potential range in multiple potential ranges of the cyclic voltammogram, as [an index curve that serves as an index for identifying the analyte] from an analysis device over a network. The transmission unit is configured to transmit analysis data to the analysis device over a network, and the analysis data includes a current-potential characteristic in the measurement data received by the receiving unit. The display unit is configured to display a curve as the index curve received by the receiving unit.

Aspect 13

According to an embodiment of the invention, an analysis system includes a sensor device and an analysis device. The sensor device includes the sensor according to aspect 1 and a measurement device configured to measure a cyclic voltammogram of a liquid analyte using the sensor. The analysis device is an analysis device is a device according to any one of aspects 2 to 11.

Aspect 14

According to an embodiment of the invention, an analysis system includes a sensor device, an analysis device, and a terminal device. The sensor device includes the sensor according to aspect 1 and a measurement device configured to measure a cyclic voltammogram of a liquid analyte using the sensor. The analysis device is the analysis device according to any one of aspects 2 to 11. The terminal device is the terminal device according to claim 12.

Aspect 15

According to an embodiment of the invention, a program to be executed by a computer causes the computer to create an index curve which serves as an index for identifying a liquid analyte based on a current-potential characteristic of a cyclic voltammogram of the analyte measured using a cyclic voltammetry method, the program causes the computer to execute a first step in which a calculation unit calculates an integral value in a prescribed potential range of the current-potential characteristic based on the current-potential characteristic and execute a calculation processing which executes the calculation for all the prescribed potential ranges to calculate a plurality of the integral values for a plurality of the prescribed potential ranges, and a second step in which a creation unit creates, as the index curve, a curve representing the dependence of the integral values on the prescribed potential ranges, based on the plurality of integral values in the plurality of prescribed potential ranges calculated in the calculation processing in the first step.

Aspect 16

In aspect 15, in the calculation processing in the first step, the calculation unit calculates the area of the cyclic voltammogram in the one prescribed potential ranges and executes the calculation for all the plurality of prescribed potential ranges to calculate the plurality of integral values.

Aspect 17

In aspect 16, in the calculation processing in the first step, the calculation unit executes subtraction processing to subtract a reduction wave current value from an oxidation wave current value in the cyclic voltammogram at one unit potential in the one prescribed potential range to calculate the intensity of the cyclic voltammogram at the one unit potential, executes the calculation for all unit potentials in the one prescribed potential range to calculate multiple intensities in the one prescribed potential range, and calculates the sum of the calculated multiple intensities as the area of the cyclic voltammogram in the one prescribed potential range.

Aspect 18

In aspect 17, in the calculation processing in the first step, the calculation unit subtracts the reduction wave current wave value from the oxidation wave current value of the cyclic voltammogram at the one unit potential in the one prescribed potential range to calculate the intensity of the cyclic voltammogram at the one unit potential.

Aspect 19

In aspect 18, in the calculation processing in the first step, the calculation unit calculates the intensity of the cyclic voltammogram as a negative value at the one unit potential when the reduction wave current value at the one unit potential is greater than the oxidation wave current value.

Aspect 20

In aspect 15, when the calculation unit calculates the plurality of integral values in the plurality of prescribed potential ranges for each of P analytes, (where P is an integer equal to or greater than 2), in the calculation processing in the first step, the program causes the computer to execute a third step in which the judgement unit judges whether the P of [the plurality of integral values] differ from each other, and the creation unit creates P of the curves based on the P of [the plurality of integral values] in the second step when the judgement unit, in the third step, judges that the P of [the plurality of integral values] differ from each other.

Aspect 21

In aspect 20, when Z combinations of two of [the multiple integral values] are extracted from the P of [the multiple integral values] and the Z combinations of two of [the multiple integral values] are defined as Z combinations of two of [n integral values $ITG_{1_i}$ to $ITG_{n_i}$] and [n integral values $ITG_{1_j}$ to $ITG_{n_j}$], (where Z is the number of combinations ${}_pC_2$ of two of [the multiple integral values] when two of the [multiple integral values] are extracted from the P of [the multiple integral values], n represents the total number of the prescribed potential ranges, and $i \neq j$), in the third step, the judgement unit judges, that the P of [the multiple integral values] differ from each other upon judging that the two of [the n integral values $ITG_{1_i}$ to $ITG_{n_i}$] and [the n integral values $ITG_{1_j}$ to $ITG_{n_j}$] differ for all combinations of two of [the n integral values $ITG_{1_i}$ to $ITG_{n_i}$] and [the n integral values $ITG_{1_j}$ to $ITG_{n_j}$] included in the Z combinations of two of [the n integral values $ITG_{1_i}$ to $ITG_{n_j}$] and [the n integral values $ITG_{1_j}$ to $ITG_{n_j}$].

Aspect 22

In aspect 21, the [n integral values $ITG_{1_i}$ to $ITG_{n_i}$] are associated with n classes $Cls_1$ to $Cls_n$, respectively, the [n integral values $ITG_{1_j}$ to $ITG_{n_j}$] are associated with the n classes $Cls_1$ to $Cls_n$, respectively, and in the third step, the judgement unit calculates the difference $DF_k$ between the integral values $ITG_{k_i}$ and $ITG_{k_j}$ in one class $Cls_k$, where k is any number from 1 to n, based on the two of [n integral values $ITG_{1_i}$ to $ITG_{n_i}$] and [n integral values $ITG_{1_j}$ to $ITG_{n_j}$], executes the calculation for all of the n classes $CLs_1$ to $Cls_n$ to calculate n differences $DF_1$ to $DF_n$, and judges that the two of [n integral values $ITG_{1_i}$ to $ITG_{n_i}$] and [n integral values $ITG_{1_j}$ to $ITG_{n_j}$] differ from each other upon judging that the standard deviation of the n differences $DF_1$ to $DF_n$ is greater than a threshold value.

Aspect 23

In aspect 20, the P analytes have mutually different P names, when two analytes among the P analytes with different names are defined as first and second analytes, and two analytes included in the first analyte and of different kinds are defined as third and fourth analytes, in the third step, the judgement unit judges that the [multiple integral values] for the first analyte and the [multiple integral values] for the second analyte differ from each other when a first standard deviation as a standard deviation of the differences between the [multiple integral values] for the first analyte and the [multiple integral values] for the second analyte is greater than a first threshold value, and judges that the [multiple integral values] for the third analyte and the [multiple integral values] for the fourth analyte differ from each other when a send standard deviation as a standard deviation of the differences between the [multiple integral values] for the third analyte and the [multiple integral values] for the fourth analyte is greater than a second threshold value which is smaller than the first threshold value.

Aspect 24

In aspect 15, the program further causes the computer to execute a fourth step in which the display unit displays the curve created by the creation unit.

[Advantageous Effects of Invention]

According to an embodiment of the invention, a cyclic voltammogram of a liquid analyte can be measured using a cyclic voltammetry method without the need for electrode regeneration for example through physical polishing and sample pretreatment.

According to an embodiment of the invention, an index curve can be created, which serves as an index used for identifying an analyte based on a characteristic measured using a sensor that does not require electrode regeneration for example through physical polishing or sample pretreatment.

Furthermore, according to an embodiment of the invention, it is possible to obtain an index curve that serves as an index used for identifying an analyte based on a characteristic measured using a sensor that does not require electrode regeneration for example through physical polishing and sample pretreatment.

[Brief Description of Drawings]

[Fig. 1]
Fig. 1 is a schematic diagram of an analysis system according to a first embodiment of the invention.

[Fig. 2]
Fig. 2 is a schematic view of the sensor device 1 shown in Fig. 1.

[Fig. 3]
Fig. 3 is a perspective view of the measurement device 12 shown in Fig. 2.

[Fig. 4]
Fig. 4 is a schematic view of the measurement device 12 shown in Fig. 2.

[Fig. 5]
Fig. 5 is a schematic showing timing chart of potential supplied to the sensor 11 shown in Fig. 2.

[Fig. 6]
Fig. 6 is a schematic diagram of measurement data MRS.

[Fig. 7]
Fig. 7 is a schematic diagram of the analysis device 2 shown in Fig. 1.

[Fig. 8]
Fig. 8 is a schematic diagram to illustrate a method for creating a curve CUR representing the relation between multiple classes Cls and multiple integral values ITG.

[Fig. 9]
Fig. 9 is a first conceptual diagram for illustrating a method for calculating integral values.

[Fig. 10]
Fig. 10 is a second conceptual diagram for illustrating the method for calculating integral values.

[Fig. 11]
Fig. 11 is a figure which illustrates an example of calculation data.

[Fig. 12]
Fig. 12 is a figure which illustrates a part of a cyclic voltammogram.

[Fig. 13]
Fig. 13 is a figure which illustrates a cyclic voltammogram of Calpis.

[Fig. 14]
Fig. 14 is a figure which illustrates integral value spectra for undiluted Calpis, Calpis diluted twice with tap water, Calpis diluted three times with tap water, and Calpis diluted four times with tap water.

[Fig. 15]

Fig. 15 is a figure which illustrates the result of judging whether the curves k1 to k4 shown in Fig. 14 differ from each other.

[Fig. 16]
Fig. 16 is a figure which illustrates integral value spectra for red wine (Chile 2020), red wine (Australia 2010), and red wine (France 2013).

[Fig. 17]
Fig. 17 is a figure which illustrates the result of judging whether the curves k5 to k7 shown in Fig. 16 differ from each other.

[Fig. 18]
Fig. 18 is a figure which illustrates integral value spectra for red wine (Italy 2015), red wine (France 2016), and red wine (Italy year unknown).

[Fig. 19]
Fig. 19 is a figure which illustrates the result of judging whether the curves k8 to k10 shown in Fig. 18 differ from each other.

[Fig. 20]
Fig. 20 is a figure which illustrates integral value spectra for WONDA, CRAFT BOSS, and GOLD BREW.

[Fig. 21]
Fig. 21 is a figure which illustrates the result of judging whether the curves k11 to k13 shown in Fig. 20 differ from each other.

[Fig. 22]
Fig. 22 is a figure which illustrates integral value spectra of human urine collected on different days.

[Fig. 23]
Fig. 23 is a figure which illustrates the result of judging whether the curves k14 to k16 shown in Fig. 22 differ from each other.

[Fig. 24]
Fig. 24 is a figure which illustrates integral value spectra for human saliva collected on different days.

[Fig. 25]
Fig. 25 is a figure which illustrates the result of judging whether the curves k17 to k19 shown in Fig. 24 differ from each other.

[Fig. 26]
Fig. 26 is a figure which illustrates two integral value spectra for the same wine.

[Fig. 27]
Fig. 27 is a figure which illustrates the result of judging whether the curves k20 and k21 shown in Fig. 26 differ from each other.

[Fig. 28]
Fig. 28 is a figure which illustrates integral value spectra created based on cyclic voltammograms CVGs measured with varying potential scan rates.

[Fig. 29]
Fig. 29 is a figure which illustrates the result of judging whether the curves k22, k23, and k24 shown in Fig. 28 differ from each other.

[Fig. 30]
Fig. 30 is a first schematic diagram showing a new index curve for identifying an analyte.

[Fig. 31]
Fig. 31 is a figure which illustrates the result of judging whether the curves k25, k26, and k27 shown in Fig. 30 differ from each other.

[Fig. 32]
Fig. 32 is a second schematic diagram showing a new index curve for identifying the analyte.

[Fig. 33]
Fig. 33 is a figure which illustrates the result of judging whether the curves k28, k29, and k30 shown in Fig. 32 differ from each other.

[Fig. 34]
Fig. 34 is a figure which illustrates integral value spectra for undiluted Calpis, Calpis diluted twice with tap water, Calpis diluted three times with tap water, and Calpis diluted four times with tap water when the number of integral values is 3.

[Fig. 35]
Fig. 35 is a figure which illustrates the result of judging whether the curves k31 to k34 shown in Fig. 34 differ from each other.

[Fig. 36]
Fig. 36 is a figure which illustrates integral value spectra for undiluted Calpis, Calpis diluted twice with tap water, Calpis diluted three times with tap water, and Calpis diluted four times with tap water when the number of integral values is 4.

[Fig. 37]
Fig. 37 is a figure which illustrates the result of judging whether the curves k35 to k38 shown in Fig. 36 differ from each other.

[Fig. 38]
Fig. 38 is a figure which illustrates integral value spectra for undiluted Calpis, Calpis diluted twice with tap water, Calpis diluted three times with tap water, and Calpis diluted four times with tap water when the number of integral values is 5.

[Fig. 39]
Fig. 39 is a figure which illustrates the result of judging whether the curves k43 to k46 shown in Fig. 38 differ from each other.

[Fig. 40]
Fig. 40 is a figure which illustrates integral value spectra for undiluted Calpis, Calpis diluted twice with tap water, Calpis diluted three times with tap water, and Calpis diluted four times with tap water when the number of integral values is 6.

[Fig. 41]
Fig. 41 is a figure which illustrates the result of judging whether the curves k47 to k50 shown in Fig. 40 differ from each other.

[Fig. 42]
Fig. 42 is a figure which illustrates integral value spectra for undiluted Calpis, Calpis diluted twice with tap water, Calpis diluted three times with tap water, and Calpis diluted four times with tap water when the number of integral values is 8.

[Fig. 43]
Fig. 43 is a figure which illustrates the result of judging whether the curves k51 to k54 shown in Fig. 42 differ from each other.

[Fig. 44]
Fig. 44 is a figure which illustrates integral value spectra for undiluted Calpis, Calpis diluted twice with tap water, Calpis diluted three times with tap water, and Calpis diluted four times with tap water when the number of integral values is 13.

[Fig. 45]
Fig. 45 is a figure which illustrates the result of judging whether the curves k55 to k58 shown in Fig. 44 differ from each other.

[Fig. 46]
Fig. 46 is a figure which illustrates integral value spectra for the red wine (Chile 2020), red wine (Australia 2010), and red wine (France 2013)when the number of integral values is 3.

[Fig. 47]
Fig. 47 is a figure which illustrates the result of judging whether the curves k62 to k64 shown in Fig. 46 differ from each other.

[Fig. 48]
Fig. 48 is a figure which illustrates integral value spectra for red wine (Chile 2020), red wine (Australia 2010), and red wine (France 2013) when the number of integral values is 4.

[Fig. 49]
Fig. 49 is a figure which illustrates the result of judging whether the curves k65 to k67 shown in Fig. 48 differ from each other.

[Fig. 50]
Fig. 50 is a figure which illustrates integral value spectra for the red wine (Chile 2020), red wine (Australia 2010), and red wine (France 2013) when the number of integral values is 6.

[Fig. 51]
Fig. 51 is a figure which illustrates the result of judging whether the curves k68 to k70 shown in Fig. 50 differ from each other.

[Fig. 52]
Fig. 52 is a figure which illustrates integral value spectra for the red wine (Chile 2020), red wine (Australia 2010), and red wine (France 2013) when the number of integral values is 8.

[Fig. 53]
Fig. 53 is a figure which illustrates the result of judging whether the curves k71 to k73 shown in Fig. 52 differ from each other.

[Fig. 54]
Fig. 54 is a figure which illustrates integral value spectra for the red wine (Chile 2020), red wine (Australia 2010), and red wine (France 2013) when the number of integral values is 10.

[Fig. 55]
Fig. 55 is a figure which illustrates the result of judging whether the curves k74 to k76 shown in Fig. 54 differ from each other.

[Fig. 56]
Fig. 56 is a figure which illustrates integral value spectra for the red wine (Chile 2020), red wine (Australia 2010), and red wine (France 2013) when the number of integral values is 14.

[Fig. 57]
Fig. 57 is a figure which illustrates the result of judging whether the curves k77 to k79 shown in Fig. 56 differ from each other.

[Fig. 58]
Fig. 58 is a figure which illustrates integral value spectra for the red wine (Chile 2020), red wine (Australia 2010), and red wine (France 2013) when the number of integral values is 28.

[Fig. 59]
Fig. 59 is a figure which illustrates the result of judging whether the curves k80 to k82 shown in Fig. 58 differ from each other.

[Fig. 60]
Fig. 60 is a figure which illustrates integral value spectra for the red wine (Chile 2020), red wine (Australia 2010), and red wine (France 2013) when the number of integral values is 57.

[Fig. 61]
Fig. 61 is a figure which illustrates the result of judging whether the curves k83 to k85 shown in Fig. 60 differ from each other.

[Fig. 62]
Fig. 62 is a figure which illustrates integral value spectra for the red wine (Chile 2020), red wine (Australia 2010), and red wine (France 2013) when the number of integral values is 95.

[Fig. 63]
Fig. 63 is a figure which illustrates the result of judging whether the curves k86 to k88 shown in Fig. 62 differ from each other.

[Fig. 64]
Fig. 64 is a figure which illustrates integral value spectra for the red wine (Chile 2020), red wine (Australia 2010), and red wine (France 2013) when the number of integral values is 142.

[Fig. 65]
Fig. 65 is a figure which illustrates the result of judging whether the curves k89 to k91 shown in Fig. 64 differ from each other.

[Fig. 66]
Fig. 66 is a figure which illustrates integral value spectra for the red wine (Italy 2015), red wine (France 2016), and red wine (Italy year unknown) when the number of integral values is 3.

[Fig. 67]
Fig. 67 is a figure which illustrates the result of judging whether the curves k95 to k97 shown in Fig. 66 differ from each other.

[Fig. 68]
Fig. 68 is a figure which illustrates integral value spectra for the red wine (Italy 2015), red wine (France 2016), and red wine (Italy year unknown) when the number of integral values is 4.

[Fig. 69]
Fig. 69 is a figure which illustrates the result of judging whether the curves k98 to k100 shown in Fig. 68 differ from each other.

[Fig. 70]
Fig. 70 is a figure which illustrates integral value spectra for the red wine (Italy 2015), red wine (France 2016), and red wine (Italy year unknown) when the number of integral values is 6.

[Fig. 71]
Fig. 71 is a figure which illustrates the result of judging whether the curves k101 to k103 shown in Fig. 70 differ from each other.

[Fig. 72]
Fig. 72 is a figure which illustrates integral value spectra for the red wine (Italy 2015), red wine (France 2016), and red wine (Italy year unknown) when the number of integral values is 7.

[Fig. 73]
Fig. 73 is a figure which illustrates the result of judging whether the curves k104 to k106 shown in Fig. 72 differ from each other.

[Fig. 74]
Fig. 74 is a figure which illustrates integral value spectra for the red wine (Italy 2015), red wine (France 2016), and red wine (Italy year unknown) when the number of integral values is 8.

[Fig. 75]
Fig. 75 is a figure which illustrates the result of judging whether the curves k107 to k109 shown in Fig. 74 differ from each other.

[Fig. 76]
Fig. 76 is a figure which illustrates integral value spectra for the red wine (Italy 2015), red wine (France 2016), and red wine (Italy year unknown) when the number of integral values is 11.

[Fig. 77]
Fig. 77 is a figure which illustrates the result of judging whether the curves k110 to k112 shown in Fig. 76 differ from each other.

[Fig. 78]
Fig. 78 is a figure which illustrates integral value spectra for the red wine (Italy 2015), red wine (France 2016), and red wine (Italy year unknown) when the number of integral values is 16.

[Fig. 79]
Fig. 79 is a figure which illustrates the result of judging whether the curves k113 to k115 shown in Fig. 78 differ from each other.

[Fig. 80]
Fig. 80 is a figure which illustrates integral value spectra for the red wine (Italy 2015), red wine (France 2016), and red wine (Italy year unknown) when the number of integral values is 19.

[Fig. 81]
Fig. 81 is a figure which illustrates the result of judging whether the curves k116 to k118 shown in Fig. 80 differ from each other.

[Fig. 82]
Fig. 82 is a figure which illustrates integral value spectra for the red wine (Italy 2015), red wine (France 2016), and red wine (Italy year unknown) when the number of integral values is 47.

[Fig. 83]
Fig. 83 is a figure which illustrates the result of judging whether the curves k119 to k121 shown in Fig. 82 differ from each other.

[Fig. 84]
Fig. 84 is a figure which illustrates integral value spectra for WONDA, CRAFT BOSS, and GOLD BREW when the number of integral values is 3.

[Fig. 85]
Fig. 85 is a figure which illustrates the result of judging whether the curves k125 to k127 shown in Fig. 84 differ from each other.

[Fig. 86]
Fig. 86 is a figure which illustrates integral value spectra for WONDA, CRAFT BOSS, and GOLD BREW when the number of integral values is 4.

[Fig. 87]
Fig. 87 is a figure which illustrates the result of judging whether the curves k128 to k130 shown in Fig. 86 differ from each other.

[Fig. 88]
Fig. 88 is a figure which illustrates integral value spectra for WONDA, CRAFT BOSS, and GOLD BREW when the number of integral values is 5.

[Fig. 89]
Fig. 89 is a figure which illustrates the result of judging whether the curves k131 to k133 shown in Fig. 88 differ from each other.

[Fig. 90]
Fig. 90 is a figure which illustrates the integral value spectra for WONDA, CRAFT BOSS, and GOLD BREW when the number of integral values is 6.

[Fig. 91]
Fig. 91 is a figure which illustrates the result of judging whether the curves k134 to k136 shown in Fig. 90 differ from each other.

[Fig. 92]
Fig. 92 is a figure which illustrates integral value spectra for WONDA, CRAFT BOSS, and GOLD BREW when the number of integral values is 7.

[Fig. 93]
Fig. 93 is a figure which illustrates the result of judging whether the curves k137 to k139 shown in Fig. 92 differ from each other.

[Fig. 94]
Fig. 94 is a figure which illustrates integral value spectra for WONDA, CRAFT BOSS, and GOLD BREW when the number of integral values is 8.

[Fig. 95]
Fig. 95 is a figure which illustrates the result of judging whether the curves k140 to k142 shown in Fig. 94 differ from each other.

[Fig. 96]
Fig. 96 is a figure which illustrates integral value spectra for WONDA, CRAFT BOSS, and GOLD BREW when the number of integral values is 9.

[Fig. 97]
Fig. 97 is a figure which illustrates the result of judging whether the curves k143 to k145 shown in Fig. 96 differ from each other.

[Fig. 98]
Fig. 98 is a figure which illustrates the integral value spectra for WONDA, CRAFT BOSS, and GOLD BREW when the number of integral values is 10.

[Fig. 99]
Fig. 99 is a figure which illustrates the result of judging whether the curves k146 to k148 shown in Fig. 98 differ from each other.

[Fig. 100]
Fig. 100 is a figure which illustrates the integral value spectra for WONDA, CRAFT BOSS, and GOLD BREW when the number of integral values is 15.

[Fig. 101]
Fig. 101 is a figure which illustrates the result of judging whether the curves k149 to k151 shown in Fig. 100 differ from each other.

[Fig. 102]
Fig. 102 is a figure which illustrates integral value spectra for WONDA, CRAFT BOSS, and GOLD BREW when the number of integral values is 20.

[Fig. 103]
Fig. 103 is a figure which illustrates the result of judging whether the curves k152 to k154 shown in Fig. 102 differ from each other.

[Fig. 104]
Fig. 104 is a figure which illustrates integral value spectra for WONDA, CRAFT BOSS, and GOLD BREW when the number of integral values is 39.

[Fig. 105]
Fig. 105 is a figure which illustrates the result of judging whether the curves k155 to k157 shown in Fig. 104 differ from each other.

[Fig. 106]
Fig. 106 is a figure which illustrates integral value spectra for WONDA, CRAFT BOSS, and GOLD BREW when the number of integral values is 54.

[Fig. 107]
Fig. 107 is a figure which illustrates the result of judging whether the curves k158 to k160 shown in Fig. 114 differ from each other.

[Fig. 108]
Fig. 108 is a figure which illustrates integral value spectra for WONDA, CRAFT BOSS, and GOLD BREW when the number of integral values is 135.

[Fig. 109]
Fig. 109 is a figure which illustrates the result of judging whether the curves k161 to k163 shown in Fig. 108 differ from each other.

[Fig. 110]
Fig. 110 is a figure which illustrates integral value spectra of human urine collected on different days when the number of integral values is 3.

[Fig.111]
Fig. 111 is a figure which illustrates the result of judging whether the curves k167 to k169 shown in Fig. 110 differ from each other.

[Fig. 112]
Fig. 112 is a figure which illustrates integral value spectra of human urine collected on different days when there are four integral values.

[Fig. 113]
Fig. 113 is a figure which illustrates the result of judging whether the curves k170 to k172 shown in Fig. 112 differ from each other.

[Fig. 114]
Fig. 114 is a figure which illustrates integral value spectra of human urine collected on different days when the number of integral values is 5.

[Fig. 115]
Fig. 115 is a figure which illustrates the result of judging whether the curves k173 to k175 shown in Fig. 114 differ from each other.

[Fig. 116]
Fig. 116 is a figure which illustrates integral value spectra of human urine collected on different days when the number of integral values is 7.

[Fig. 117]
Fig. 117 is a figure which illustrates the result of judging whether the curves k176 to k178 shown in Fig. 116 differ from each other.

[Fig. 118]
Fig. 118 is a figure which illustrates integral value spectra of human urine collected on different days when the number of integral values is 9.

[Fig. 119]
Fig. 119 is a figure which illustrates the result of judging whether the curves k179 to k181 shown in Fig. 118 differ from each other.

[Fig. 120]
Fig. 120 is a figure which illustrates integral value spectra of human urine collected on different days when the number of integral values is 13.

[Fig. 121]
Fig. 121 is a figure which illustrates the result of judging whether the curves k182 to k184 shown in Fig. 120 differ from each other.

[Fig. 122]
Fig. 122 is a figure which illustrates the integral value spectrum for human saliva collected on different days when the number of integral values is 3.

[Fig. 123]
Fig. 123 is a figure which illustrates the result of judging whether the curves k188 to k190 shown in Fig. 122 differ from each other.

[Fig. 124]
Fig.124 is a figure which illustrates integral value spectra for human saliva collected on different days when the number of integral values is 4.

[Fig. 125]
Fig. 125 is a figure which illustrates the result of judging whether the curves k191 to k193 shown in Fig. 124 differ from each other.

[Fig. 126]
Fig. 126 is a figure which illustrates integral value spectra for human saliva collected on different days when the number of integral values is 5.

[Fig. 127]
Fig. 127 is a figure which illustrates the result of judging whether the curves k194 to k196 shown in Fig. 126 differ from each other.

[Fig. 128]
Fig. 128 is a figure which illustrates integral value spectra for human saliva collected on different dates when the number of integral values is 7.

[Fig. 129]
Fig. 129 is a figure which illustrates the result of judging whether the curves k197 to k199 shown in Fig. 128 differ from each other.

[Fig. 130]
Fig. 130 is a figure which illustrates integral value spectra for human saliva collected on different days when the number of integral values is 9.

[Fig. 131]
Fig. 131 is a figure which illustrates the result of judging whether the curves k200 to k202 shown in Fig. 130 differ from each other.

[Fig. 132]
Fig. 132 is a figure which illustrates the integral value spectrum for human saliva collected on different days when the number of integral values is 13.

[Fig. 133]
Fig. 133 is a figure which illustrates the result of judging whether the curves k203 to k205 shown in Fig. 132 differ from each other.

[Fig. 134]
Fig. 134 is a figure which illustrates two integral value spectra for the same wine when the number of integral values is 3.

[Fig. 135]
Fig. 135 is a figure which illustrates the result of judging whether the curves k208 and k209 shown in Fig. 134 differ from each other.

[Fig. 136]
Fig. 136 is a figure which illustrates two integral value spectra for the same wine when the number of integral values is 4.

[Fig. 137]
Fig. 137 is a figure which illustrates the result of judging whether the curves k210 and k211 shown in Fig. 136 differ from each other.

[Fig. 138]
Fig. 138 is a figure which illustrates two integral value spectra for the same wine when the number of integral values is 6.

[Fig. 139]
Fig. 139 is a figure which illustrates the result of judging whether the curves k212 and k213 shown in Fig. 138 differ from each other.

[Fig. 140]
Fig. 140 is a figure which illustrates two integral value spectra for the same wine when the number of integral values is 8.

[Fig. 141]
Fig. 141 is a figure which illustrates the result of judging whether the curves k214 and k215 shown in Fig. 140 differ from each other.

[Fig. 142]
Fig. 142 is a figure which illustrates two integral value spectra for the same wine when the number of integral values is 10.

[Fig. 143]
Fig. 143 is a figure which illustrates the result of judging whether the curves k216 and k217 shown in Fig. 142 differ from each other.

[Fig. 144]
Fig. 144 is a figure which illustrates two integral value spectra for the same wine when the number of integral values is 14.

[Fig. 145]
Fig. 145 is a figure which illustrates the result of judging whether the curves k218 and k219 shown in Fig. 144 differ from each other.

[Fig. 146]
Fig. 146 is a figure which illustrates the two integral value spectra for the same wine when the number of integral values is 28.

[Fig. 147]
Fig. 147 is a figure which illustrates the result of judging whether the curves k220 and k221 shown in Fig. 146 differ from each other.

[Fig. 148]
Fig. 148 is a figure which illustrates two integral value spectra for the same wine when the number of integral values is 41.

[Fig. 149]
Fig. 149 is a figure which illustrates the result of judging whether the curves k222 and k223 shown in Fig. 148 differ from each other.

[Fig. 150]
Fig. 150 is a figure which illustrates two integral value spectra for the same wine when the number of integral values is 95.

[Fig. 151]
Fig. 151 is a figure which illustrates the result of judging whether the curves k224 and k225 shown in Fig. 150 differ from each other.

[Fig. 152]
Fig. 152 is a figure which illustrates two integral value spectra for the same wine when the number of integral values is 142.

[Fig. 153]
Fig. 153 is a figure which illustrates the result of judging whether the curves k226 and k227 shown in Fig. 152 differ from each other.

[Fig. 154]
Fig. 154 is a figure which illustrates integral value spectra created based on cyclic voltammograms CVGs measured with varying potential scan rates when the number of integral values is 3.

[Fig. 155]
Fig. 155 is a figure which illustrates the result of judging whether the curves k231 to k233 shown in Fig. 154 differ from each other.

[Fig. 156]
Fig. 156 is a figure which illustrates integral value spectra created based on cyclic voltammograms CVGs measured with varying potential scan rates when the number of integral values is 4.

[Fig. 157]
Fig. 157 is a figure which illustrates the result of judging whether the curves k234 to k236 shown in Fig. 156 differ from each other.

[Fig. 158]
Fig. 158 is a figure which illustrates integral value spectra created based on cyclic voltammograms CVGs measured with varying potential scan rates when the number of integral values is 5.

[Fig. 159]
Fig. 159 is a figure which illustrates the result of judging whether the curves k237 to k239 shown in Fig. 158 differ from each other.

[Fig. 160]
Fig. 160 is a figure which illustrates integral value spectra created based on the cyclic voltammograms CVGs measured with varying scan rates when the number of integral values is 6.

[Fig. 161]
Fig. 161 is a figure which illustrates the result of judging whether the curves k240 to k242 shown in Fig. 160 differ from each other.

[Fig. 162]
Fig. 162 is a figure which illustrates the integral value spectrum created based on cyclic voltammograms CVGs measured with varying potential scan rates when the number of integral values is 7.

[Fig. 163]
Fig. 163 is a figure which illustrates the result of judging whether the curves k243 to k245 shown in Fig. 162 differ from each other.

[Fig. 164]
Fig. 164 is a figure which illustrates the integral value spectrum created based on the cyclic voltammogram CVG measured with varying potential scan rates when the number of integral values is 8.

[Fig. 165]
Fig. 165 is a figure which illustrates the result of judging whether the curves k246 to k248 shown in Fig. 164 differ from each other.

[Fig. 166]
Fig. 166 is a figure which illustrates integral value spectra created based on cyclic voltammograms CVGs measured with varying potential scan rates when the number of integral values is 9.

[Fig. 167]
Fig. 167 is a figure which illustrates the result of judging whether the curves k249 to k251 shown in Fig. 166 differ from each other.

[Fig. 168]
Fig. 168 is a figure which illustrates integral value spectra created based on the cyclic voltammograms CVGs measured with varying potential scan rates when the number of integral values is 10.

[Fig. 169]
Fig. 169 is a figure which illustrates the result of judging whether the curves k252 to k254 shown in Fig. 168 differ from each other.

[Fig. 170]
Fig. 170 is a figure which illustrates the integral value spectrum created based on cyclic voltammograms CVGs measured by varying potential scan rates when the number of integral values is 15.

[Fig. 171]
Fig. 171 is a figure which illustrates the result of judging whether the curves k255 to k257 shown in Fig. 170 differ from each other.

[Fig. 172]
Fig. 172 is a figure which illustrates integral value spectra created based on cyclic voltammograms CVGs measured with varying potential scan rate when the number of integral values is 20.

[Fig. 173]
Fig. 173 is a figure which illustrates the result of judging whether the curves k258 to k260 shown in Fig. 172 differ from each other.

[Fig. 174]
Fig. 174 is a figure which illustrates integral value spectra created based on cyclic voltammograms CVGs measured with varying potential scan rates when the number of integral values is 39.

[Fig. 175]
Fig. 175 is a figure which illustrates the result of judging whether the curves k261 to k263 shown in Fig. 174 differ from each other.

[Fig. 176]
Fig. 176 is a figure which illustrates integral value spectra created based on cyclic voltammograms CVGs measured with varying potential scan rates when the number of integral values is 54.

[Fig. 177]
Fig. 177 is a figure which illustrates the result of judging whether the curves k264 to k266 shown in Fig. 176 differ from each other.

[Fig. 178]
Fig. 178 is a figure which illustrates integral value spectra created based on cyclic voltammograms CVGs measured with varying potential scan rates when the number of integral values is 135.

[Fig. 179]
Fig. 179 is a figure which illustrates the result of judging whether the curves k267 to k269 shown in Fig. 178 differ from each other.

[Fig. 180]
Fig. 180 is a flowchart for illustrating the operation of the analysis system 10 shown in Fig. 1.

[Fig. 181]
Fig. 181 is a flowchart for illustrating detailed operation in step S9 in Fig. 180.

[Fig. 182]
Fig. 182 is a flowchart for illustrating detailed operation in step S12 in Fig. 180.

[Fig. 183]
Fig. 183 is a flowchart for illustrating detailed operation in step S13 in Fig. 180.

[Fig. 184]
Fig. 184 is a flowchart for illustrating detailed operation in step S14 in Fig. 180.

[Fig. 185]
Fig. 185 is a flowchart for illustrating detailed operation in step S144 in Fig. 184.

[Fig. 186]
Fig. 186 is another flowchart for illustrating detailed operation in step S144 in Fig. 184.

[Fig. 187]
Fig. 187 is a conceptual diagram of the result of judging whether ${}_pC_2$ pairs of two curves $CUR_i$ and $CUR_j$ differ from each other.

[Fig. 188]
Fig. 188 is a conceptual diagram showing the update from analysis data $ALY_D_{uni}$ to index data $IDX_{uni}$ in step S11 in Fig. 180.

[Fig. 189]
Fig. 189 is a conceptual diagram showing the update from P pieces of analysis data $ALY_D_1$ to $ALY_D_p$ to P pieces of index data $IDX_1$ to $IDX_P$ in step S16 of Fig. 180.

[Fig. 190]
Fig. 190 is another schematic diagram of the analysis device 2 shown in Fig. 1.

[Fig. 191]
Fig. 191 is a schematic diagram of an analysis system according to a second embodiment.

[Fig. 192]
Fig. 192 is a schematic diagram of the analysis device 2B shown in Fig. 191.

[Fig. 193]
Fig.193 is a schematic diagram of the terminal device 3 shown in Fig. 191.

[Fig. 194]
Fig. 194 is a first flowchart for illustrating the operation of the analysis system 10A shown in Fig. 191.

[Fig. 195]
Fig. 195 is a second flowchart for illustrating the operation of the analysis system 10A shown in Fig. 191.

[Fig. 196]
Fig. 196 is a flowchart for illustrating detailed operation in step S24 in Fig. 195.

[Fig. 197]
Fig. 197 is a flowchart for illustrating detailed operation in step S34 in Fig. 195.

[Fig. 198]
Fig. 198 is another schematic diagram of the analysis device 2B shown in Fig. 191.

[Fig. 199]
Fig. 199 is another schematic diagram of the terminal device 3 shown in Fig. 191.

[Description of Embodiments]

Embodiments of the present invention will be described in detail in conjunction with the accompanying drawings. Note that the same or corresponding portions in the drawings are denoted by the same reference numerals and their descriptions will not be repeated.

First Embodiment

Fig. 1 is a schematic diagram of an analysis system according to a first embodiment of the present invention. With reference to Fig. 1, the analysis system 10 according to the first embodiment includes a sensor device 1 and an analysis device 2.

The analysis system 10 may be provided in wine bars, Japanese food restaurants, Japanese Western-style restaurants, hospitals, and etc.

The sensor device 1 measures cyclic voltammogram measurement data of a liquid analyte such as soft drink, wine, coffee, human urine, and human saliva by a cyclic voltammetry method, and then transmits the measured cyclic voltammogram CVG data to the analysis device 2 via wireless or wired communication.

The cyclic voltammetry method (CV (cyclic voltammetry) method) is a measurement method used to analyze a current-potential curve (cyclic voltammogram CVG) obtained by measuring the current that flows during repeated potential sweeps across electrodes placed in a stationary solution, in order to examine redox characteristics and other properties.

The cyclic voltammogram CVG is a current-potential curve measured by the cyclic voltammetry method, and the measured data of the cyclic voltammogram CVG includes a current-potential characteristic (I-V) where current I with potential V are associated with each other.

The sensor device 1 transmits the measurement data of the cyclic voltammogram CVG to the analysis device 2 via wireless communication, for example, by Bluetooth® (registered trade mark).

When the sensor device 1 transmits the measurement data of the cyclic voltammogram CVG to the analysis device 2 via wired communication, the sensor device is connected to the analysis device 2 by a cable and transmits the measurement data to the analysis device 2 via the cable.

The analysis device 2 receives the measurement data of the cyclic voltammogram CVG from the sensor device 1 via wireless or wired communication. The analysis device 2 then calculates an integral value of the current-potential characteristic (I-V) included in the measurement data for a prescribed potential range based on the measurement data of the cyclic voltammogram CVG by the following method, executes the calculation for all prescribed potential ranges to calculate multiple integral values for multiple prescribed potential ranges, creates, based on the calculated multiple integral values for multiple prescribed potential ranges, a curve CUR representing the dependence of the integral values on the prescribed potential ranges as [an index curve which serves an index for identifying the analyte], and displays the curve CUR.

Fig. 2 is a schematic view of the sensor device 1 shown in Fig. 1. Fig. 3 is a perspective view of the measurement device 12 shown in Fig. 2.

With reference to Fig. 2, the sensor device 1 includes a sensor 11 and a measurement device 12. The sensor 11 includes a substrate 111, a working electrode 112, a counter electrode 113, a reference electrode 114, and wirings 115 to 117.

In Fig. 2, an x-y plane is defined. The substrate 111 has for example a flat plate shape and is arranged along the x-y plane.

The wirings 115 to 117 are provided in the x-axis direction (first direction) on the top surface of the substrate 111. The wiring 116 is provided in the x-axis direction (first direction) with a prescribed distance (e.g., 2 mm to 3 mm) from the wiring 115 in the y-axis direction (second direction orthogonal to the first direction). The wiring 117 is provided in the x-axis direction (first direction) with a prescribed distance (e.g., 2 mm to 3 mm) from the wiring 116 in the y-axis direction (second direction orthogonal to the first direction).

The working electrode 112 is placed on one end of the wiring 115 opposite the measurement device 12 and is electrically connected to the wiring 115. The counter electrode 113 is placed on one end of the wiring 116 opposite to the measurement device 12 and is electrically connected to the wiring 116. The reference electrode 114 is placed on one end of the wiring 117 opposite to the measurement device 12 and is electrically connected to the wiring 117.

The substrate 111 is made of for example a printed circuit board (PCB), a plastic plate, or a glass epoxy substrate and has a width of 12 mm, a length of 80 mm, and a thickness of 1 mm. The working electrode 112 includes for example one of boron(B)-doped diamond (BDD), carbon electrode, glassy carbon (glass-like diamond), gold (Au), and platinum (Pt). The counter electrode 113 includes for example gold (Au). The reference electrode 114 includes for example, gold (Au) or Ag/AgCl.

When the working electrode 12 includes diamond, the diamond may be a single crystal diamond or a polycrystalline diamond, preferably a polycrystalline diamond. In this case, the polycrystalline diamond more preferably has its dangling bonds on its outermost diamond surface terminated with hydrogen.

For example, the working electrode 112 has a square flat shape with an area of 3 x 3 $mm^2$, the counter electrode 113 has a square flat shape with an area of 3 x 3 $mm^2$, and the reference electrode 114 has a square flat shape with an area of 1 x 2 $mm^2$.

When the working electrode 112 includes diamond or gold, for example, the working electrode 112 has a flat, circular shape having a diameter of 3.5 mm.

When the working electrode 112 includes glassy carbon, the cyclic voltammograms CVG can be measured over a wide range.

The working electrode 112 is an electrode that transfers electrons to and from the analyte. The counter electrode 113 is an electrode that returns, to the system, the same current value as the current value generated by the working electrode 112. The reference electrode 114 is an electrode that serves as a reference for determining the potential of the working electrode 112.

A liquid analyte is supplied to the area where the working electrode 112, the counter electrode 113, and the reference electrode 114 are provided.

With reference to Fig. 3, the measurement device 12 has a recess 121A for inserting a portion of the other end of the sensor 11.

When the sensor 11 is electrically connected to the measurement device 12, a portion of the sensor 11 on the other end side in the x-axis direction (first direction) is inserted into the recess 121A of the measurement device 12. In this way, the wirings 115 to 117 of the sensor 11 are electrically connected to the measurement device 12. When the sensor 11 is not electrically connected to the measurement device 12, a portion of the sensor 11 on the other end side in the x-axis direction (first direction) is pulled out from the recess 121A of the measurement device 12.

Therefore, by attaching/detaching the portion of the sensor 11 on the other end side in the x-axis direction (first direction) to/from the recess 121A of the measurement device 12, the sensor 11 can be electrically connected/disconnected to/from the measurement device 12.

According to the embodiment of the present invention, the sensor 11 is used to measure a cyclic voltammogram CVG of the analyte and is detachably provided to the measurement device 12 that measures the cyclic voltammogram CVG. In other words, the sensor 11 is a disposable sensor that is discarded for each measurement of the cyclic voltammogram CVG.

As the sensor 11 is discarded after each measurement of the cyclic voltammogram, regeneration of the electrodes (working electrode 112, counter electrode 113 and reference electrode 114) for example by physical polishing and pretreatment of the sample (analytical object) are not required.

Fig. 4 is a schematic diagram of the measurement device 12 shown in Fig. 2. Fig. 5 is a schematic timing chart for the potential supplied to the sensor 11 shown in Fig. 2.

With reference to Fig. 4, the measurement device 12 includes a supply unit 121, a measurement unit 122, and a transmission unit 123.

The supply unit 121 is electrically connected to the working electrode 112 via the wiring 115. The supply unit 121 receives the potential scan range and the potential scan rate input by the user of the sensor device 1. The supply unit 121 then supplies the potential for the potential scan range to the working electrode 112 via the wiring 115 while varying the potential at the prescribed scan rate.

The user of the sensor device 1 is for example a waiter or waitress for example at a wine bar, Japanese restaurant, Western-style restaurant or a doctor or nurse at a hospital.

The measurement unit 122 is electrically connected to the working electrode 112, the counter electrode 113, and the reference electrode 114 by the wirings 115, 116, and 117, respectively and measures the potential V of the working electrode 112 with the reference the potential of the electrode 114, and the current value I from the counter electrode 113, to create measurement data MRS including the current-potential characteristic (I-V) where the measured potential V and the measured current I are associated with each other.

The prescribed scan rate is, for example, 0.3 V/sec, 0.5 V/sec, or 0.6 V/sec. The potential scan range is, for example, -2.5 V to +2.5 V.

With reference to Fig. 5, during the period from time t1 to time t2, the supply unit 121 supplies the potential V in the range from 0 V to +2.5 V to the working electrode 112 while varying the potential V at the prescribed scan rate.

Thereafter, during the period from time t2 to time t3, the supply unit 121 supplies the potential V in the range from +2.5 V to 0 V to the working electrode 112 while varying the potential V at the prescribed scan rate.

Subsequently, during the period from time t3 to time t4, the supply unit 121 supplies the potential V in the range from 0 V to -2.5 V to the working electrode 112 while varying the potential V at the prescribed scan rate.

Furthermore, during the period from time t4 to time t5, the supply unit 121 supplies the potential V in the range from -2.5 V to 0 V to the working electrode 112 while varying the potential V at the prescribed scan rate.

In this way, the supply unit 121 supplies the triangular wave potential V to the working electrode 112.

Fig. 6 is a schematic diagram of the measurement data MRS. With reference to Fig. 6, the measurement data MRS includes the name of the analyte, the kind of the analyte, and the current-potential characteristic (I-V). The current-potential characteristic (I-V) is defined by the association between the potential V and the current value I.

The name of the analyte may be one of soft drinks, wine, coffee, human urine, and human saliva.

The kinds of analytes include, for example, red wine (Chile 2020), red wine (Australia 2010), and red wine (France 2013) when the name of the analyte is wine.

The potential V and the current value I are associated with each other. The potential V is from $V_1$ to $V_d$, and the current value I is from $I_1$ to $I_d$. The current values $I_1$ to $I_d$ are associated with the potential values $V_1$ to $V_d$, respectively.

When the scan range of the potential V is -2.5V to +2.5V, the potentials $V_1$, $V_2$, $V_3$, $V_4$, ..., $V_{d-2}$, $V_{d-1}$, and $V_d$ are 0V, 1 mV, 2 mV, 3 mV, ..., 2499 mV, 2500 mV, 2499 mV, ..., 2 mV, 1 mV, 0 mV, -1 mV, -2 mV, ..., -2499 mV, -2500 mV, - 2499 mV, ..., -2 mV, -1 mV, and 0 V. In other words, the potentials $V_1$, $V_2$, $V_3$, $V_4$, ..., $V_{d-2}$, $V_{d-1}$, and $V_d$ vary by a unit potential (i.e., 1 mV).

As a result, d represents twice the total number of unit potentials in the scan range of the potential V.

The measurement unit 122 receives the name and type of the analyte from the user of the sensor device 1 and measures the current-potential characteristic (I-V) of the analyte. The measurement unit 122 then creates measurement data MRS, which includes the name of the analyte, the kind of analyte, and the current-potential characteristic (I-V), and outputs the created measurement data MRS to the transmission unit 123.

The transmission unit 123 receives the measurement data MRS from the measurement unit 122 and transmits the received measurement data MRS to the analysis device 2 via wired or wireless communication.

The transmission unit 123 transmits the measurement data MRS to the analysis device 2, for example, by Bluetooth® (registered trademark) when transmitting the measurement data MRS to the analysis device 2 via wireless communication.

When the transmission unit 123 transmits the measurement data MRS to the analysis device 2 via wired communication, the transmission unit 123 is connected to the analysis device 2 by a cable.

When the sensor device 1 measures P (where P is an integer greater than or equal to 2) cyclic voltammograms of P analytes using the cyclic voltammetry method, the measurement unit 122 of the sensor device 1 creates P pieces of measurement data MRS _1 to MRS_P, and the transmission unit 123 of the sensor device 1 transmits the P pieces of measurement data MRS_1 to MRS_P created by the measurement unit 122 to the analysis device 2 via wired or wireless communication. In this case, each of the P pieces of measurement data MRS_1 to MRS_P has the same configuration as the measurement data MRS shown in Fig. 6.

Fig. 7 is a schematic diagram of the analysis device 2 shown in Fig. 1. With reference to Fig. 7, the analysis device 2 includes a receiving unit 21, a control unit 22, a calculation unit 23, a judgement unit 24, a display unit 26, an accepting unit 27, and a database 28.

The receiving unit 21 receives the measurement data MRS from the measurement device 12 (transmission unit 123) of the sensor device 1 via wireless or wired communication and outputs the received measurement data MRS to the control unit 22.

Here, the measurement data MRS may be a single piece of measurement data or multiple pieces of measurement data.

The control unit 22 has a built-in timer. Upon receiving a single piece of measurement data MRS_uni from the receiving unit 21, the control unit 22 refers to the timer to detect the time $t_{uni}$ of receiving the measurement data MRS_uni and also issues identification information $ID_{uni}$ for identifying the measurement data MRS_uni.

The control unit 22 then detects the name of the analyte $ALY_Na_{uni}$, the kind of analyte $ALY_Kd_{uni}$, and the current-voltage characteristic $(I\text{-}V)_{uni}$, which shows the association between the current value I and the potential V, from the measurement data MRS _uni.

Then, the control unit 22 creates analysis data $ALY_D_{uni} = [t_{uni}/ID_{uni}/ALY_Na_{uni}/ALY_Kd_{uni}/\ (I\text{-}V)_{uni}]$, where the time $t_{uni}$, the identification information $ID_{uni}$, the name of the analyte $ALY_Na_{uni}$, the kind of the analyte $ALY_Kd_{uni}$, and the current-potential characteristic $(I\text{-}V)_{uni}$, are associated with each other.

The control unit 22 stores the analysis data $ALY_D_{uni}$ in the database 28 and also outputs the analysis data $ALY_D_{uni}$ to the calculation unit 23.

Upon receiving P pieces of measurement data MRS_1 to MRS_P (i.e., multiple pieces of measurement data) from the receiving unit 21, the control unit 22 refers to the timer to detect the time times $t_1$ to time $t_P$ at the time of receiving the P pieces of measurement data MRS_1 to MRS_P, respectively, and also issues P pieces of identification information $ID_1$ to $ID_P$ to identify the P pieces of measurement data MRS_1 to MRS_P, respectively.

The control unit 22 then detects the name $ALY_Na_p$ of the analyte, the kind of the analyte $ALY_Kd_p$, and the current-potential characteristic $(I\text{-}V)_p$ showing the relationship between current and potential from the measurement data MRS_p (where p is any number from 1 to P) for all the P pieces of measurement data MRS_1 to MRS_P (i.e., multiple pieces of measurement data).

Then, the control unit 22 creates, for all the P pieces of analysis data, the analysis data $ALY_D_p = [t_p/ID_p/ALY_Na_p/ALY_Kd_p/(I\text{-}V)_p]$ (p = 1 to P) where the time $t_p$, the identification information $ID_p$, the name of the analyte $ALY_Na_p$, the kind of the analyte $ALY_Kd_p$, and the current-potential characteristic $(I\text{-}V)_p$ (where p is any from 1 to P) are associated with each other, and creates P pieces of analysis data $ALY_D_1 = [t_1/ID_1/ALY_Na_1/ALY_Kd_1/(I\text{-}V)_1]$ to $ALY_[t_p/ID_p/ALY_Na_p/ALY_Kd_p/(I\text{-}V)_P]$.

Then, the control unit 22 stores the P pieces of analysis data $ALY_D_1$ to $ALY_D_P$ in the database 28 and outputs the P pieces of analysis data $ALY_D_1$ to $ALY_D_P$ to the calculation unit 23.

Furthermore, after outputting the analysis data $ALY_D_{uni}$ to the calculation unit 23, and upon receiving the analysis result $ALY_RLS_{uni}=[ID_{uni}/CAL_{uni}/CUR_{uni}]$ where identification information $ID_{uni}$, calculation data $CAL_{uni}$, and a curve CUR $_{uni}$ are associated with each other from the creation unit 25, the control unit 22 detects the identification information $ID_{uni}$, the calculation data $CAL_{uni}$, and a curve $CUR_{uni}$ from the analysis result $ALY_RL_{uni}$, and reads out the analysis data $ALY_D_{uni}$ having the same identification information as the detected identification information $ID_{uni}$ from the database 28.

The control unit 22 stores the calculation data $CAL_{uni}$ and the curve $CUR_{uni}$ in the analysis data $ALY_D_{uni}$ read from the database 28, updates the analysis data $ALY_D_{uni}$ to index data $IDX_{uni}$, and stores the updated index data $IDX_{uni}$ in the database 28 in place of the analysis data $ALY_D_{uni}$.

Furthermore, after outputting the P pieces of analysis data $ALY_D_1$ to $ALY_D_P$ to the calculation unit 23 and upon receiving, from the creation unit 25, P analysis results $ALY_RLS_1 = [ID_1/CAL_1/CUR_1]$ to $ALY_RLS_P = [ID_P/CAL_P/CUR_P]$ in which the P pieces of identification information $ID_1$ to $ID_P$, the P pieces of calculation data $CAL_1$ to $CAL_P$, and the P pieces of curves $CUR_1$ to $CUR_P$, respectively are associated with each other, the control unit 22 detects the identification information $ID_P$, the calculation data $CAL_p$, and the curve $CUR_p$ from the analysis results $ALY_RLS_P = [ID_p/CAL_p/CUR_p]$ (where p is any number from 1 to P), and reads out the analysis data $ALY_D_p$ with the same identification information as the detected identification information $ID_p$ from the database 28.

The control unit 22 then stores the calculation data $CAL_p$ and the curve $CUR_p$ in the analysis data $ALY_D_p$ read from the database 28, updates the analysis data $ALY_D_p$ to an index data $IDX_p$, and stores the updated index data $IDX_p$ in the database 28 in place of the analysis data $ALY_D_p$.

The control unit 22 executes the updating processing that updates the analysis data $ALY_D_p$ to the index data $IDX_p$ by the method described above for all of the P pieces of analysis data $ALY_D_1$ to $ALY_D_P$, updates the P pieces of analysis data $ALY_D_1$ to $ALY_D_P$ to P index data $IDX_1$ to index data $IDX_P$, respectively, and then stores the updated P index data $IDX_1$ to index data $IDX_P$ in the database 28 in place of the P pieces of analysis data $ALY_D_1$ to $ALY_D_P$.

Furthermore, upon receiving a request $RQT_{uni}$ from the accepting unit 27 to display the name ALY $_Na_{uni}$ of the analyte and the curve $CUR_{uni}$ associated with the name ALY $_Na_{uni}$, the control unit 22 detects the curve $CUR_{uni}$ associated with the name $ALY_Na_{uni}$ of the analyte from the database 28 based on the name $ALY_Na_{uni}$ of the analyte, and outputs the name of the analyte $ALY_Na_{uni}$ and the curve $CUR_{uni}$ to the display unit 26.

Upon receiving a request $RQT_q$ to display q (which is an integer that satisfies $1 \leq q \leq P$) names $ALY_Na_1$ to $ALY_Na_q$ of the P names $ALY_Na_1$ to $ALY_Na_P$ of the P analytes, and q curves $CUR_1$ to $CUR_q$, which are associated with the q names $ALY_Na_1$ to $ALY_Na_q$, respectively, from the accepting unit 27, the control unit 22 detects, from the database 28, the q names $ALY_Na_1$ to ALY_Na $Na_q$ of the q analytes and the q curves $CUR_1$ to $CUR_q$, which are associated with the q names $ALY_Na_1$ to $ALY_Na_q$ of the q analytes, based on the q names $ALY_Na_1$ to $ALY_Na_q$ and outputs the q names $ALY_Na_1$ to $ALY_Na_q$ of the q analytes and the q curves $CUR_1$ to $CUR_q$, to the display unit 26.

In this case, in the request $RQT_q$, the q kinds $ALY_Kd_1$ to $ALY_Kd_q$ of the q analytes may be used instead of the q

names $ALY_Na_1$ to $ALY_Na_q$ of the q analytes.

The calculation unit 23 receives the analysis data $ALY_D_{uni}$ = [$t_{uni}$/$ID_{uni}$/$ALY_Na_{uni}$/$ALY_Kd_{uni}$/$(I-V)_{uni}$] from the control unit 22.

Then, the calculation unit 23 calculates, for all prescribed potential ranges V_ITV, the integral value ITG of the cyclic voltammogram CVG for each prescribed potential range V_ITV, based on the current-potential characteristic $(I-V)_{uni}$ of the analysis data $ALY_D_{uni}$=[$t_{uni}$/$ID_{uni}$/$ALY_Na_{uni}$/$ALY_Kd_{uni}$/$(I-V)_{uni}$], using the method which will be described.

Then, when the number of the prescribed potential ranges V_ITV is $N_{SEC}$, the calculation unit 23 defines a first prescribed potential range V_ITV as "class 1," a second prescribed potential range V_ITV as "class 2," ..., and so on, the ($N_{SEC}$-1)-th prescribed potential range V_ITV as "class ($N_{SEC}$-1)," and an $N_{SEC}$-th prescribed potential range V_ITV as "class $N_{SEC}$."

In this way, the calculation unit 23 creates the calculation data $CAL_{uni}$, in which $N_{SEC}$ classes are associated with $N_{SEC}$ integral values and then creates the calculation result $CAL_RLS_{uni}$ = [$ID_{uni}$/$CAL_{uni}$], where the created calculation data $CAL_{uni}$ is associated with the identification information $ID_{uni}$. The calculation unit 23 then outputs the calculation result $CAL_RLS_{uni}$ = [$ID_{uni}$/$CAL_{uni}$] and a signal S_u indicating that there is one piece of calculation data to the creation unit 25.

The calculation unit 23 also receives the p analysis data $ALY_D_1$ to $ALY_D_P$ from the control unit 22.

Similarly to the case when receiving the analysis data $ALY_D_{uni}$ = [$t_{uni}$/$ID_{uni}$/$ALY_Na_{uni}$/$(I-V)_{uni}$] from the control unit 22, the calculation unit 23 creates calculation data $CAL_p$ in which the $N_{SEC}$ classes and the $N_{SEC}$ integral values are associated with each other, for all P pieces of analysis data $ALY_D_1$ to $ALY_D_P$ based on the current-voltage characteristic $(I-V)_p$ (where p is any number from 1 to P) of the analysis data $ALY_D_p$ = [$t_p$/$ID_p$/$ALY_Na_p$/$ALY_Kd_p$/$(I-V)_p$], to create P pieces of calculation data $CAL_1$ to $CAL_p$.

The calculation unit 23 then outputs P pieces of calculation results $CAL_RLS_1$ = [$ID_1$/$CAL_1$] to $CAL_RLS_P$ = [$ID_P$/$CAL_P$], where the P pieces of identification information $ID_1$ to $ID_P$ are associated with the P piece of calculation data $CAL_1$ to $CAL_P$, to the judgement unit 24 and the creation unit 25.

In this way, upon creating the single piece of calculation data $CAL_{uni}$, the calculation unit 23 outputs the calculation result $CAL_RLS_{uni}$=[$ID_{uni}$/$CAL_{uni}$] to the creation unit 25 only, and upon creating P pieces of calculation results $CAL_RLS_1$=[$ID_1$/$CAL_1$] to $CAL_RLS_p$=[$ID_p$/$CAL_p$] (i.e., multiple calculation results), the calculation unit 23 outputs the P pieces of calculation results $CAL_RLS_1$ to $CAL_RLS_P$ (i.e., the multiple calculation results) to both of the judgement unit 24 and the creation unit 25.

As described above, the calculation data $CAL_{uni}$ is defined by the association between $N_{SEC}$ classes and $N_{SEC}$ integral values, but since each of the $N_{SEC}$ classes consists of a prescribed potential range V_ITV, the calculation data $CAL_{uni}$ is defined by the association between the $N_{SEC}$ prescribed potential ranges V_ITV and the $N_{SEC}$ integral values. The same applies to each of the P pieces of calculation data $CAL_1$ to $CAL_P$.

The judgement unit 24 receives the P calculation results $CAL_RLS_1$ to $CAL_RLS_P$ (i.e., multiple calculation results) from the calculation unit 23. The judgement unit 24 then detects the P pieces of calculation data $CAL_1$ to $CAL_P$ included in the P calculation results $CAL_RLS_1$ to $CAL_RLS_P$.

Then, the judgement unit 24 detects ${}_PC_2$ pairs of two pieces of calculation data $CAL_i$ and $CAL_j$ ($i \neq j$) based on the P pieces of calculation data $CAL_1$ to $CAL_P$. Here, ${}_PC_2$ is the number of combinations of the two different pieces of calculation data $CAL_i$ and $CAL_j$ ($i \neq j$) when extracting two different calculation data pieces $CAL_i$ and $CAL_j$ ($i \neq j$) from the P pieces calculation data $CAL_1$ to $CAL_P$.

Then, the judgement unit 24 calculates, based on two pieces of calculation data CALi and CALj ($i \neq j$), the differences between the multiple integrated values included in the calculation data $CAL_i$ and the multiple integrated values included in calculation data $CAL_j$, and the standard deviation of the calculated differences, for all ${}_PC_2$ pairs of two pieces of calculation data $CAL_i$ and $CAL_j$ ($i \neq j$)

The judgement unit 24 calculates the differences between the multiple integral values included in the calculation data $CAL_i$ and the multiple integral values included in the calculation data $CAL_j$ by the following method.

The judgement unit 24 calculates the difference $DF_k$ between the integral value $ITG_{k_i}$ and the integral value $ITG_{k_j}$ in one class $Cls_k$ based on the multiple integral values $ITG_{1_i}$ to $ITG_{n_i}$ included in the calculation data $CAL_i$ and the multiple integral values $ITG_{1_j}$ to $ITG_{n_j}$ included in the calculation data $CAL_j$, using the following expression.

[Math. 1]

$$DF_k = \left[ \frac{\left(|ITG_{k_i}| - |ITG_{k_j}|\right)}{\left(ITG_{k_i} + ITG_{k_j}\right)/2} \right] \times 100 \cdots (1)$$

Note that the unit of the difference $DF_k$ calculated by the expression (1) is "%".

The judgement unit 24 then calculates the difference $DF_k$ in one class $Cls_k$ by the expression (1) for all the n classes $Cls_1$ to $Cls_n$ to calculate n differences $DF_1$ to $DF_n$.

Then, the judgement unit 24 calculates the standard deviation $\sigma_{DF}$ of the n differences $DF_1$ to $DF_n$.

Then, when the standard deviation $\sigma_{DF}$ of the differences is greater than a threshold $\sigma_{th}$ (=15%), the judgement unit 24 judges that the two pieces of calculation data $CAL_i$ and $CAL_j$ (i≠j) differ, and when the standard deviation of the differences, $\sigma_{DF}$, is equal to or less than the threshold value $\sigma_{th}$ (=15%), it is judged that the two pieces of calculation data $CAL_i$ and $CAL_j$ (i≠j) do not differ. The judgement unit 24 holds the threshold value $\sigma_{th}$ (=15%), in advance.

The judgement unit 24 judges whether the two pieces of calculation data $CAL_i$ and $CAL_j$ (i≠j) differ, using the method described above, for all of the $_PC_2$ pairs of two pieces of calculation data $CAL_i$ and $CAL_j$ (i≠j), and judges whether the $_PC_2$ pairs of two pieces of calculation data $CAL_i$ and $CAL_j$ (i≠j) differ.

Furthermore, judging that the two pieces of calculation data $CAL_i$ and $CAL_j$ (i≠j) do not differ is equivalent to judging that the two pieces of calculation data $CAL_i$ and $CAL_j$ (i≠j) cannot be distinguished, and judging that the two pieces of calculation data $CAL_i$ and $CAL_j$ (i≠j) differ is equivalent to judging that the two pieces of calculation data $CAL_i$ and $CAL_j$ (i≠j) can be distinguished.

The judgement unit 24 judges whether each pair of two pieces of calculation data CALi and CALj (i≠j) among the $_PC_2$ pairs of two pieces of calculation data CALi and CALj (i≠j) differ using the method described above, and creates the judgement result shown in Table 1. The judgement unit 24 then outputs the judgement result shown in Table 1 to the creation unit 25.

[Table 1]

| | $CAL_1$ | $CAL_2$ | $CAL_3$ | ... | $CAL_p$ |
|---|---|---|---|---|---|
| $CAL_1$ | | ○ or × | ○ or × | ... | ○ or × |
| $CAL_2$ | ○ or × | | ○ or × | ... | ○ or × |
| $CAL_3$ | ○ or × | ○ or × | | ... | ○ or × |
| ... | ... | . . . | . . . | | ○ or × |
| $CAL_p$ | ○ or × | ○ or × | ○ or × | ○ × | |

∘: TWO PIECES OF CALCULATION DATA DIFFER
×: TWO PIECES OF CALCULATION DATA DO NOT DIFFER

Judging that the P pieces of calculation data $CAL_1$ to $CAL_P$ do not differ from each other is equivalent to judging that the P pieces of calculation data $CAL_1$ to $CAL_P$ cannot be distinguished from each other, and judging that the P pieces of calculation data $CAL_1$ to $CAL_P$ differ from each other is equivalent to judging that the P pieces of calculation data $CAL_1$ to $CAL_P$ can be distinguished from each other.

Upon receiving a single calculation result $CAL_RLS_{uni}$ and a signal S_u indicating that there is a single piece of calculation data from the calculation unit 23, the creation unit 25 creates a curve $CUR_{uni}$ based on the calculation data $CAL_{uni}$ by the following method.

Fig. 8 illustrates the method for creating a curve CUR that indicates the relation between multiple classes Cls and multiple integral values ITG.

Fig. 8 at (a) shows a single piece of calculation data $CAL_{uni}$, and Fig. 8 at (b) shows the curve $CUR_{uni}$ that indicates the relation between integral values and classes.

With reference to Fig. 8 at (a), the calculation data $CAL_{uni}$ includes the name of the analyte $ALY\text{-}Na_{uni}$, the kind of the analyte $ALY\text{-}Kd_{uni}$, the class Cls, and the integral values ITG. The class Cls consists of n classes $Cls_1$ to $Cls_n$, and the integral values ITG consists of n integral values $ITG_1$ to $ITG_n$. Here, n represents the total number of prescribed potential ranges, and when the potential scan range is [$-V_{S1}$ to $+V_{S2}$] and one prescribed potential range is $V_{PTS}$, n = $(|=V_{S1}| + |+V_{S2}|)/V_{PTS}$ holds.

The n integral values $ITG_1$ to $ITG_n$ are associated with the n classes $Cls_1$ to $Cls_n$, respectively.

Upon receiving the single piece of calculation data $CAL_{uni}$ and the signal S_u indicating that there is one piece of calculation data from the calculation unit 23, the creation unit 25 judges that there is the single piece of calculation data CAL calculated by the calculation unit 23 based on the signal S_u.

The creation unit 25 detects a pair (class $Cls_1$, integral value $ITG_1$) associated with each other from the calculation data $CAL_{uni}$, and then detects a pair (class $Cls_2$, integral value $ITG_2$) from the calculation data $CAL_{uni}$, ..., detects a pair (class $Cls_{n-1}$, integral value $ITG_{n-1}$) from the calculation data $CAL_{uni}$, and detects a pair (class $Cls_n$, integral value $ITG_n$) from the calculation data $CAL_{uni}$.

Then, the creation unit 25 plots, on a graph where the abscissa represents the class and the ordinate represents the integral value, the pair (class $Cls_1$, integral value $ITG_1$), the pair (class $Cls_2$, integral value $ITG_2$), the pair (class $Cls_3$, integral value $ITG_3$), ..., the pair (class $Cls_{n-2}$, integral value $ITG_{n-2}$), the pair (class $Cls_{n-1}$, integral value $ITG_{n-1}$) and the pair

(class $Cls_n$, integral value $ITG_n$).

Then, the creation unit 25 creates the curve $CUR_{uni}$ by connecting the n plotted points. In this case, the n plotted points are plotted for each class Cls, and therefore the creation unit 25 can create the curve $CUR_{uni}$ as a smooth curve by connecting the n plotted points.

In addition, after plotting the n points, the creation unit 25 may create the curve $CUR_{uni}$ by plotting the n points and then determining a regression curve using the class Cls as the explanatory variable and the integral value ITG as the dependent variable.

Then, the creation unit 25 sets the curve $CUR_{uni}$ as the [index curve which serves an index for identifying the analysis object].

The creation unit 25 also receives P pieces of calculation results $CAL_RLS_1$ to $CAL_RLS_p$ (i.e., multiple calculation results) from the calculation unit 23, and also receives judgement results (the judgement results shown in Table 1) indicating whether the P pieces of calculation data $CAL_1$ to $CAL_P$ differ from each other from the judgement unit 24.

Then, the creation unit 25 creates a curve $CUR_p$ which shows the class dependence of the integrated value ITG, based on a single piece of calculation data CAL, (where p is any of 1 to P), by the method described with reference to Fig. 8, for all the P pieces of calculation data $CAL_1$ to $CAL_p$, to create P curves $CUR_1$ to $CUR_P$ (i.e., multiple curves CUR).

In this case, each of the P pieces of calculation data CAL1 to CALP (i.e., the multiple pieces of calculation data) has the same configuration as the calculation data $CAL_{uni}$ shown in Fig. 8 at (a).

The curve $CUR_{uni}$ represents the dependence of [n integral values $ITG_1$ to $ITG_n$] on [n classes $Cls_1$ to $Cls_n$]. Since each of the n classes $Cls_1$ to $Cls_n$ is defined by a prescribed potential range, the curve $CUR_{uni}$ is a curve that represents the dependence of the integral value on the prescribed potential range. Similarly, each of the P curves $CUR_1$ to $CUR_P$ is also a curve that represents the dependence of the integral value on the prescribed potential range.

When creating one curve $CUR_{uni}$, the creation unit 25 adds the curve $CUR_{uni}$ to the calculation result $CAL_RLS_{uni}$ to create the analysis result $ALY_RLS_{uni}$ = [$ID_{uni}$/$CAL_{uni}$/$CUR_{uni}$] and outputs the created analysis result $ALY_RLS_{uni}$ = [$ID_{uni}$/$CAL_{uni}$/$CUR_{uni}$] to the control unit 22 and the curve $CUR_{uni}$ to the display unit 26.

Meanwhile, upon creating P curves $CUR_1$ to $CUR_P$, the creation unit 25 adds the P curves $CUR_1$ to $CUR_p$ to P pieces of calculation results $CAL_RLS_1$ to $CAL_RLS_P$, respectively to create P analysis results $ALY_RLS_1$ = [$ID_1$/$CAL_1$/$CUR_1$] to $ALY_RLS_P$ = [$ID_P$/$CAL_P$/$CUR_P$] and outputs the P analysis results $ALY_RLS_1$ to $ALY_RLS_p$ and judgement results (judgement results shown in Fig. 187 described later) to the control unit 22 and the P curves $CUR_1$ to $CUR_P$ and the judgement results (the judgement results shown in Fig. 187 described later) to the display unit 26.

Upon receiving the single curve $CUR_{uni}$ from the creation unit 25, the display unit 26 displays the received single curve $CUR_{uni}$.

Meanwhile, upon receiving the P curves $CUR_1$ to $CUR_P$ and the judgement results (judgement results shown in Fig. 187 described later) from the creation unit 25, the display unit 26 displays the P curves $CUR_1$ to $CUR_P$ and the judgement results (the judgement results shown in Fig. 187 described later).

As a result, the staff of places where the analysis system 10 is installed such as wine bars, Japanese restaurants, and Japanese Western style restaurants or hospitals (e.g., doctors or nurses) can refer to the P curves $CUR_1$ to $CUR_P$ and the judgement results (the judgement results shown in Fig. 187) displayed on the display unit 26 to determine whether the P curves $CUR_1$ to $CUR_p$ differ from each other, which of the P curves $CUR_1$ to $CUR_p$ differ from each other, and which of the P curves $CUR_1$ to $CUR_P$ do not differ from each other.

Upon receiving the name of the analyte $ALY_Na_{uni}$ and the curve $CUR_{uni}$ from the control unit 22, the display unit 26 displays the received name of the analyte $ALY_Na_{uni}$ and the curve $CUR_{uni}$.

Upon receiving, from the control unit 22, the q names $ALY_Na_1$ to $ALY_Na_q$ of q (where q is an integer satisfying $1 \leq q \leq P$) analytes and the q curves $CUR_1$ to $CUR_q$, the display unit 26 displays the received q names $ALY_Na_1$ to $ALY_Na_q$ and the q curves $CUR_1$ to $CUR_q$.

The accepting unit 27 accepts a request $RQT_{uni}$ from the user of the analysis device 2 (for example, a waiter at a wine bar, Japanese restaurant, or Western restaurant, or a hospital staff member such as a doctor and a nurse) to display the name of the analyte $ALY_Na_{uni}$ of an analyte and the curve $CUR_{uni}$ associated with the name $ALY_Na_{uni}$. The accepting unit 27 then outputs the request $RQT_{uni}$ to the control unit 22.

The accepting unit 27 also accepts a request $RQT_q$ to display q names $ALY_Na_1$ to $ALY_Na_q$ of p names $ALY_Na_1$ to $ALY_Na_P$ of P analytes and q curves $CUR_1$ to $CUR_q$ associated with the q names $ALY_Na_1$ to $ALY_Na_q$ from the user of the analysis device 2 (for example, a waiter at a wine bar, Japanese restaurant, or Western restaurant, or a hospital staff member (for example, a doctor or nurse)). The accepting unit 27 then outputs the request $RQT_q$ to the control unit 22.

The database 28 stores analysis data $ALY_D_{uni}$ or P pieces of analysis data $ALY_D_1$ to $ALY_D_P$, or stores index data $IDX_{uni}$ instead of the analysis data $ALY_D_{uni}$, or stores P pieces of index data $IDX_1$ to $IDX_P$ instead of the P pieces of analysis data $ALY_D_1$ to $ALY_D_P$, respectively.

Figs. 9 and 10 are first and second conceptual diagrams for illustrating a method for calculating integral values.

With reference to Fig. 9, the cyclic voltammogram CVG is obtained by scanning the potential V at a prescribed scan rate from 0 V to +2500 mV, then scanning the potential V at a prescribed scan rate from +2500 mV to 0 V, further scanning the potential V at a prescribed scan rate from 0 V to -2500 mV, and subsequently scanning the potential V at a prescribed scan rate from -2500 mV to 0 V.

As a result, in the cyclic voltammogram CVG, the solid line part represents the current value I when the potential V is scanned in the positive direction, and the dotted line part represents the current value I when the potential V is scanned in the negative direction.

Therefore, in the cyclic voltammogram CVG, the solid line part represents the current value I of the oxidation wave, and the dotted line part represents the current value I of the reduction wave.

The prescribed scan rate is, for example, one of 0.3 V/sec, 0.5 V/sec, and 0.6 V/sec.

When calculating the integral values ITG of the cyclic voltammogram CVG, the prescribed potential ranges V_ITV are, for example, [0 to 100 mV], [101 to 200 mV], [201 to 300 mV], ..., [2301 to 2400 mV], [2401 to 2500 mV], [0 to -100 mV], [-101 to -200 mV], ..., [-2301 to -2400 mV], and [-2401 to -2500 mV].

Fig. 10 shows an enlarged view of a part of the prescribed potential range [$V_1$ to $V_2$] of the cyclic voltammogram CVG shown in Fig. 9.

With reference to Fig. 10, when calculating the integral value ITG for the prescribed potential range [$V_1$ to $V_2$], the calculation unit 23 detects the current value Iox_1 of the oxidation wave and the current value Ird_1 of the reduction wave at the potential $V_1$, and calculates the difference (Iox_1-Ird_1) between the current values Iox_1 and Ird_1 to obtain the intensity (Iox_1-Ird_1) of the cyclic voltammogram CVG at potential $V_1$.

The calculation unit 23 then detects the current value Iox_2 of the oxidation wave and the current value Ird_2 of the reduction wave at the potential $V_1$+1, which is the potential $V_1$ plus a unit potential (=1 mV), and calculates the difference (Iox_2-Ird_2) between the current values Iox _2 and Ird_2 to obtain the intensity (Iox_2-Ird_2) of the cyclic voltammogram CVG at the potential $V_1$+1.

The calculation unit 23 also detects the current value Iox_3 of the oxidation wave and the current value Ird_3 of the reduction wave at the potential $V_1$+2, which is the potential $V_1$+1 plus a unit potential (=1mV), and calculates the difference (Iox_3-Ird_3) between the current values Iox_3 and Ird_3 to obtain the intensity (Iox_3-Ird_3) of the cyclic voltammogram CVG at the potential $V_1$+2.

Similarly, the calculation unit 23 detects the current value Iox_N of the oxidation wave and the current value Ird_N of the reduction wave at the potential $V_2$, which is the potential $V_2$-1 plus a unit potential (=1mV), and calculates the difference (Iox_N-Ird_N) between the current value Iox_N and the current value Ird_N to obtain the intensity (Iox_N-Ird_N) of the cyclic voltammogram CVG at potential $V_2$.

Then, the calculation unit 23 calculates the integral value ITG in the predetermined potential interval [$V_1$ to $V_2$] using the following expression.

[Math. 2]

$$ITG(V_1 - V_2) = (Iox_1 - Ird_1) + (Iox_2 - Ird_2) + \cdots + (Iox_N - Ird_N) \cdots (2)$$

In other words, the calculation unit 23 calculates the multiple intensities ((Iox_1-Ird_1), (Iox_2-Ird_2), ..., and (Iox_N-Ird_N)) of the cyclic voltammogram CVG for each unit potential (1 mV) for the prescribed potential range [$V_1$ to $V_2$] and then adds the calculated multiple intensities ((Iox_1-Ird_1), (Iox_2-Ird_2), ..., and (Iox_N-Ird_N)) to calculate the integral value ITG of the cyclic voltammogram CVG for the prescribed potential range [$V_1$ to $V_2$].

Here, for the prescribed potential range [$V_1$ to $V_2$], calculating the difference (Iox_1 - Ird_1) at the potential $V_1$, the difference (Iox_2 - Ird_2) at the potential $V_1$+1, the difference (Iox_3 - Ird_3) at the potential $V_1$+2, ..., and the difference (Iox_N-Ird_N) at potential $V_2$ is equivalent to executing subtraction processing to subtract the current value of the reduction wave from the current value of the oxidation wave in the cyclic voltammogram at one unit potential within a prescribed potential range, and executing the calculation of the intensity of the cyclic voltammogram at the unit potential for all unit potentials within the single prescribed potential range to calculate multiple intensities within the single prescribed potential range.

Then, calculating the integral value ITG for the prescribed potential range [$V_1$ to $V_2$] using the expression (2) is equivalent to calculating the sum of the calculated multiple intensities as the area of the cyclic voltammogram for the single prescribed potential range.

Also, calculating the difference (Iox_1-Ird_1) at the potential $V_1$, calculating the difference (Iox_2-Ird_2) at the potential $V_1$+1, calculating the difference (Iox_3-Ird_3) at potential $V_1$+2, ..., and calculating the difference (Iox_N-Ird_N) at the potential $V_2$ are each equivalent to subtracting the current value of the reduction wave from the current value of the oxidation wave in the cyclic voltammogram at a single unit potential in a single prescribed potential range, thereby calculating the intensity of the cyclic voltammogram at the single unit potential.

The calculation unit 23 calculates multiple integration values $ITG_1$, $ITG_2$, $ITG_3$, ..., $ITG_{24}$, $ITG_{25}$, $ITG_{26}$, $ITG_{27}$,..., $ITG_{49}$, $ITG_{50}$ in the multiple prescribed potential ranges [0 to 100 mV], [101 to 200 mV], [201 to 300 mV ], ..., [2301 to 2400 mV], [2401 to 2500 mV], [0 to -100 mV], [-101 to -200 mV], ..., [-2301 to -2400 mV], and [-2401 to -2500 mV] by the method for calculating the integral value ITG of the cyclic voltammogram CVG for the prescribed potential range [$V_1$ to $V_2$] as described above.

By calculating the multiple integral values $ITG_1$ to $ITG_{50}$ using the method shown in Figs. 9 and 10, it is possible to correct for the characteristic variations among the sensors used to measure the cyclic voltammograms CVG and clearly show the signal intensity differences among analyte solutions.

In the expression (2), (Iox_1-Ird_1), (Iox_2-Ird_2), ..., and (Iox_N-Ird_N) each represent the current value in the oxidation reaction and reduction reaction between the electrode (working electrode 112) and the analyte at each unit potential.

The sum (i.e., the integral value) of the subtraction results (Iox-Ird) for a prescribed potential range represents the total number of electrons in oxidation and reduction reactions between the electrode (working electrode) and the analyte for the prescribed potential range.

Furthermore, the curve CUR represents the dependence of the total number of electrons (i.e., integral value) in the oxidation and reduction reactions between the electrode (working electrode) and the analyte on the prescribed potential range.

According to the embodiment of the invention, the calculation unit 23 may calculate the integral value ITG for the prescribed potential range [$V_1$ to $V_2$] by the following expression.

[Math. 3]

$$\left.\begin{aligned} I_{ox}^{ITG} &= \sum_{n=1}^{N} I_{ox_n} \cdots (3A) \\ I_{rd}^{ITG} &= \sum_{n=1}^{N} I_{rd_n} \cdots (3B) \\ ITG(V_1 - V_2) &= I_{ox}^{ITG} - I_{rd}^{ITG} \cdots (3C) \end{aligned}\right\} \cdots (3)$$

In the expression (3), the expression 3A represents the sum total of the oxidation wave currents for the prescribed potential range [$V_1$ to $V_2$], and the expression (3B) represents the sum total of the reduction wave currents for the prescribed potential range [$V_1$ to $V_2$]. In the expressions 3A and 3B, N is the total number of unit potentials for the prescribed potential range [$V_1$ to $V_2$], and n = 1 to N.

As a result, the expression 3C represents the integral value ITG for the prescribed potential range [$V_1$ to $V_2$].

The calculation unit 23 calculates the total sum of the oxidation wave currents $I^{ITG}_{OX}$ for the prescribed potential range [$V_1$ to $V_2$] using the expression (3A), and calculates the total sum of the reduction wave currents $I^{ITG}_{rd}$ for the prescribed potential range [$V_1$ to $V_2$] using the expression (3B).

Then, the calculation unit 23 calculates the integral value ITG ($V_1$-$V_2$) for the prescribed potential range [$V_1$-$V_2$] by subtracting the total sum of reduction wave currents $I^{ITG}_{rd}$ from the total sum of oxidation wave currents $I^{ITG}_{ox}$ according to the expression (3C).

The integral value ITG ($V_1$-$V_2$) calculated using the expression (3) is the same as the integral value ITG ($V_1$-$V_2$) calculated using the expression (2) described above.

Fig. 11 shows an example of calculation data. With reference to Fig. 11, when the calculation unit 23 calculates multiple integral values $ITG_1$, $ITG_2$, $ITG_3$,..., $ITG_{24}$, $ITG_{25}$, $ITG_{26}$, $ITG_{27}$,..., $ITG_{49}$, and $ITG_{50}$, defines the multiple prescribed potential ranges [0 to 100 mV], [101 to 200 mV], [201 to 300 mV], ..., [2301 to 2400 mV], [2401 to 2500 mV], [0 to -100 mV, [-101 to -200 mV], ..., [-2301 to -2400 mV], and [-2401 to -2500 mV] as multiple classes $Cls_1$ to $Cls_{50}$, respectively, and associates the multiple integral values $ITG_1$, $ITG_2$, $ITG_3$,..., $ITG_{24}$, $ITG_{25}$, $ITG_{26}$, $ITG_{27}$,..., $ITG_{49}$, and $ITG_{50}$ with the multiple classes $C1s_1$ to $Cls_{50}$, respectively to create calculation data $CAL_1$.

Fig. 12 shows a part of a cyclic voltammogram. Fig. 12 shows a cyclic voltammogram having a region REG in which the oxidation wave is located below the reduction wave. In Fig. 12 at (a), the region REG is located in the positive current region, in Fig. 12 at (b), the reduction wave is located in the positive current region and the oxidation wave is located in the negative current region in the region REG, and in Fig. 12 at (c), the region REG is located in the negative current region.

Here, the current values of the oxidation wave at the unit potentials of the region REG are defined as $I_{ox_1_REG}$, $I_{ox_2_REG}$, ..., and $I_{ox_N'_REG}$ (where N' is the total number of unit potentials in the region REG), the current values of the reduction wave at the unit potentials of the region REG are defined as $I_{rd_1_REG}$, $I_{rd_2_REG}$, ..., and $I_{rd_N'_REG}$.

With reference to Fig. 12 at (a), when calculating the integral value in a prescribed potential range in the region REG, the current values of the oxidation wave $I_{ox_1_REG}$, $I_{ox_2_REG}$, ..., and $I_{ox_N'_REG}$ are smaller than the current values of the reduction wave, $I_{rd_1_REG}$, $I_{rd_2_REG}$, ..., and $I_{rd_N'_REG}$, so that the integral value ITG for the prescribed potential range in the region REG takes a negative value.

With reference to Fig. 12 at (b), when calculating the integral value for the prescribed potential range in the region REG, each of the current values of the oxidation wave $I_{ox_1_REG}$, $I_{ox_2_REG}$, ..., $I_{ox_N'_REG}$ is a negative current value, and each of the current values of the reduction wave $I_{rd_1_REG}$, $I_{rd_2_REG}$, ..., and $I_{rd_N'_REG}$ is a positive current value, so that the integral value ITG for the prescribed potential range in the region REG takes a negative value.

With reference to Fig. 12 at (c), when calculating the integral value for the prescribed potential range in the region REG, each of the current values of the oxidation wave $I_{ox_1_REG}$, $I_{ox_2_REG}$, ..., and $I_{ox_N'_REG}$ is a negative current value, and each of the current values of the reduction wave $I_{rd_1_REG}$, $I_{rd_2_REG}$, ..., and $I_{rd_N'_REG}$ is a negative current value, and the absolute values $|I_{ox_1_REG}|$, $|I_{ox_2_REG}|$, ..., and $|I_{ox_N'_REG}|$ of the oxidation wave $I_{ox_1_REG}$, $I_{ox_2_REG}$, ..., and $I_{ox_N'_REG}$ are greater than the absolute values $|I_{rd_1_REG}|$, $|I_{rd_2_REG}|$, ..., and $|I_{rd_N'_R}|$ of the current values of the reduction wave $I_{rd_1_REG}$, $I_{rd_2_REG}$, ..., and $I_{rd_N'_R}$, respectively, so the integral value ITG for the prescribed potential range in the region REG takes a negative value.

Therefore, according to the embodiment of the present invention, the integral value for the prescribed potential range in the cyclic voltammogram having the region REG in which the oxidation wave is located below the reduction wave takes a negative value in the region REG.

The calculation unit 23 may calculate the multiple integral values in multiple prescribed potential ranges using a method different from the method described above.

For example, the calculation unit 23 calculates the regression curve RC1 (solid line) indicating the oxidation wave of the cyclic voltammogram CVG and the regression curve RC2 (dotted line) indicating the reduction wave in Fig. 9, using the potential V as the explanatory variable and the current I as the objective variable, calculates the integral value ITG_RC1 of the regression curve RC1 and the integral value ITG_RC2 of the regression curve RC2 for the prescribed potential range [$V_1$-$V_2$] and then executes about all of the prescribed potential range calculating integral values of the cyclic voltammogram CVG shown in Fig. 9 in the prescribed potential range [$V_1$-$V_2$] by subtracting the integral value ITG_RC2 from the integral value ITG_RC1 to calculate multiple integral values for multiple prescribed potential ranges.

The calculation unit 23 may calculate multiple integral values for multiple prescribed potential ranges using any method that allows for calculation of the multiple integral values for the multiple prescribed potential ranges.

Examples

The curve CUR created by the analysis device 2 will be described when the analytes are Calpis, wine, coffee, human urine, and human saliva.

(1) Calpis

Fig. 13 shows cyclic voltammograms of Calpis. Fig. 13 at (a) shows the cyclic voltammogram CVG_Cal_1 of undiluted Calpis, and Fig. 13 at (b) shows the cyclic voltammogram CVG_Cal_2 of Calpis diluted twice with tap water, and Fig. 13 at (c) shows the cyclic voltammogram CVG_Cal_3 of Calpis diluted five times with tap water.

With reference to Fig. 13, the standard deviation $\sigma_{CVG_Cal_1}$ of the multiple current values in the cyclic voltammogram CVG_Cal_1 is 163.81, and the standard deviation $\sigma_{CVG_Cal_2}$ of the multiple current values in the cyclic voltammogram CVG_Cal_2 is 160.75, and the standard deviation $\sigma_{CVG_Cal_3}$ of the multiple current values in the cyclic voltammogram CVG_Cal_3 is 152.89.

Then, the indexes $IDX_1$ to $IDX_3$ are calculated using the following expressions based on the standard deviations $\sigma_{CVG_Cal_1}$ to $\sigma_{CVG_Cal_3}$.

[Math. 4]

$$\left.\begin{aligned} IDX_1 &= 100 \times \left(\sigma_{CVG_CAL_1} - \sigma_{CVG_AVERAGE}\right)/\sigma_{CVG_AVERAGE} \cdots (4A) \\ IDX_2 &= 100 \times \left(\sigma_{CVG_CAL_2} - \sigma_{CVG_AVERAGE}\right)/\sigma_{CVG_AVERAGE} \cdots (4B) \\ IDX_3 &= 100 \times \left(\sigma_{CVG_CAL_3} - \sigma_{CVG_AVERAGE}\right)/\sigma_{CVG_AVERAGE} \cdots (4C) \end{aligned}\right\} \cdots (4)$$

In each of the expressions (4A) to (4C), $\sigma_{CVG_AVERAGE}$ is the average of the three standard deviations $\sigma_{CVG_Cal_1}$ to $\sigma_{CVG_Cal_3}$ of three cyclic voltammograms CVG_Cal_1 - CVG_Cal_3 which are the object of comparisons, and is calculated by $\sigma_{CVG_AVERAGE} = (\sigma_{CVG_CAL_1} + \sigma_{CVG_CAL_2} + \sigma_{CVG_CAL_3})/3$.

Then, using $\sigma_{CVG_Cal_1} = 163.81$, $\sigma_{CVG_Cal_2} = 160.75$, and $\sigma_{CVG_Cal_3} = 152.89$, the indexes $IDX_1$ to $IDX_3$ are calculated as $IDX_1 = 2.93\%$, $IDX_2 = 1.01\%$, and $IDX_3 = -3.93\%$.

As a result, the indexes $IDX_1$ to $IDX_3$ are each less than the threshold value $\sigma_{th}$ (=15%).

Therefore, the three cyclic voltammograms CVG_Cal_1 to CVG_Cal_3 do not differ from each other.

As a result, it is difficult to distinguish between the "undiluted Calpis," the "Calpis diluted twice with tap water," and the "Calpis diluted 5 times with tap water" using the three cyclic voltammograms CVG_CAL_1 to CVG_CAL_3.

Fig. 14 shows the integral value spectra for the undiluted Calpis, Calpis diluted twice with tap water, Calpis diluted three times with tap water, and Calpis diluted four times with tap water.

With reference to Fig. 14, each of the curves k1 to k4 is a CUR (index curve) created by the analysis device 2 by the method described above. Then, the curve k1 shows the integral value spectrum for the undiluted Calpis, the curve k2 shows the integral value spectrum for the Calpis diluted twice with tap water, the curve k3 shows the integral value spectrum for Calpis diluted three times with tap water, and curve k4 shows the integral value spectrum for Calpis diluted four times with tap water.

The measurement conditions for the cyclic voltammogram, on which the calculation of the multiple integral values for each of the curves k1 to k4 is based are shown in Table 2.

[Table 2]

| | |
|---|---|
| Working electrode | Diamond electrode (diameter: 3.5 mm) |
| Counter electrode | Gold (rode-shaped electrode) |
| Reference electrode | Gold (rode-shaped electrode) |
| Potential scan range | ±2.5 V |
| Integral value extraction potential | 192 mV |
| Potential scan rate | 500 mV/s |

made of gold rods

As shown in Table 2, the working electrode includes diamond and has a circular flat shape, and the counter and reference electrodes are made of gold rods. When measuring cyclic voltammograms, the potential scan range is from -2.5 V to +2.5 V, the prescribed potential range (integral value extraction potential) for calculating the integral value is 192 mV, and the potential scan rate is 500 mV/s.

Fig. 15 shows the results of determining whether the curves k1 to k4 shown in Fig. 14 differ from each other.

Whether the curves k1 to k4 differ from each other is judged by judging whether two of the curves k1 to k4 differ from each other, and then performing the judgement for all combinations of two curves among the curves k1 to k4.

There are six combinations of two curves among the curves k1 to k4: (k1, k2), (k1, k3), (k1, k4), (k2, k3), (k2, k4), and (k3, k4).

Fig. 15 shows whether the two curves differ in each of the six combinations (k1, k2), (k1, k3), (k1, k4), (k2, k3), (k2, k4), and (k3, k4).

With reference to Fig. 15, the standard deviation $\sigma_{DF_k1, k2}$ of the differences between the multiple integral values on the curve k1 and the multiple integral values on the curve k2 is $\sigma_{DF_k1, k2}$ = 49.37 (%), and the standard deviation $\sigma_{DF_k1, k3}$ of the differences between the multiple integral values on the curve k1 and the multiple integral values on the curve k3 $\sigma_{DF_k1, k3}$ is $\sigma_{DF_k1, k3}$ = 69.61 (%), and the standard deviation $\sigma_{DF_k1, k4}$ of the differences between the multiple integral values on curve k1 and the multiple integral values on curve k4 is $\sigma_{DF_k1, k4}$ = 592.03 (%).

The standard deviation $\sigma_{DF_k2, k3}$ of the differences between the multiple integral values on the curve k2 and the multiple integral values on the curve k3 is $\sigma_{DF_k2, k3}$ = 44.49 (%), and the standard deviation $\sigma_{DFF_k2, k4}$ of the differences between the multiple integral values on the curve k2 and the multiple integral values on the curve k4 is $\sigma_{DFF_k2, k4}$ = 25.14 (%), and the standard deviation $\sigma_{DF_k3, k4}$ of the differences between the multiple integral values on curve k3 and the multiple integral values on curve k4 is $\sigma_{DF_k3, k4}$ = 48.83 (%).

As a result, the standard deviation of the differences $\sigma_{DF_k1, k2}$ (=49.37 (%)), the standard deviation of the differences $\sigma_{DF_k1, k3}$ (=69.61 (%)), the standard deviation of the differences $\sigma_{DF_k1, k4}$ (=59.03 (%)), the standard deviation of the differences $\sigma_{DF_k2, k3}$ (=44.49 (%)), the standard deviation of the differences $\sigma_{DF_k2, k4}$ (=25.14 (%)), and the standard deviation of the differences $\sigma_{DF_k3, k4}$ (=48.83 (%)) are all greater than the threshold value $\sigma_{th}$ (=15 %).

Therefore, the two curves k1 and k2 differ, the two curves k1 and k3 differ, the two curves k1 and k4 differ, the two curves k2 and k3 differ, the two curves k2 and k4 differ, and the two curves k3 and k4 differ (see the "○" in Fig. 15). Therefore, the curves k1 to k4 are curves that differ from each other.

Also, the curve k1 has two peaks, the curves k2 to k4 have three peaks, and therefore it is easy to understand that the curve k1 differs from the curves k2 to k4.

The curves k2 to k4 have the same number of peaks, but the positions of the peaks of the curves k2 to k4 in the range of classes 15 to 25 differ from each other.

Therefore, by determining whether the number of peaks is the same and whether the peak positions are the same, it is possible to determine that the curves k1 to k4 differ from each other.

The analysis system 10 is installed in places such as soft drink retailers, and the analysis device 2 of the analysis system 10 has a display unit 26, which allows the staff of such soft drink retailers to determine that the curves k1 to k4 differ from each other as the display unit 26 displays the curves k1 to k4 and the judgement results shown in Fig. 15.

As described above, the curves k1 to k4 can be used to distinguish between the undiluted Calpis, the Calpis diluted twice with tap water, the Calpis diluted three times with tap water, and the Calpis diluted four times with tap water.

Therefore, when it is judged that the curves k1 to k4 differ from each other, the curve k1 is a curve for uniquely identifying the "undiluted Calpis," the curve k2 is a curve for uniquely identifying the "Calpis diluted twice by tap water," the curve k3 is a curve for uniquely identifying the "Calpis diluted three times by tap water," and the curve k4 is a curve for uniquely identifying the "Calpis diluted four times with tap water." The curve k1 indicates a feature quantity based on integral values for the "undiluted Calpis," the curve k2 indicates a feature quantity based on integral values for the "Calpis diluted twice with tap water," the curve k3 indicates a feature quantity based on integral values for "Calpis diluted three times with tap water," and the curve k4 represents a feature quantity based on integral values for the "Calpis diluted four times with tap water."

As a result, the curves k1 to k4, which are the index curves, can be used for authentication to judge whether the item is genuine or not.

(2) Wine

Fig. 16 shows the integral value spectra for red wine (Chile 2020), red wine (Australia 2010), and red wine (France 2013).

With reference to Fig. 16, each of the curves k5 to k7 is a curve CUR created by the analysis device 2 by the method described above. The curve k5 shows the integral value spectrum of the red wine (Chile 2020), the curve k6 shows the integral value spectrum of the red wine (Australia 2010), and the curve k7 shows the integral value spectrum of the red wine (France 2013).

The measurement conditions for the cyclic voltammograms, on which the calculation of the multiple integral values for each of curves k5 to k7 is based are shown in Table 3.

[Table 3]

| | |
|---|---|
| Working electrode | Diamond electrode (diameter: 3 mm) |
| Counter electrode | Gold (rode-shaped electrode) |
| Reference electrode | Gold (rode-shaped electrode) |
| Potential scan range | ±2.5v |
| Integral value extraction | 17.6 mV |
| potential | |
| Potential scan rate | 600 mV/S |

As shown in Table 3, the working electrode is made of diamond and has a circular flat shape, and the counter and reference electrodes are made of gold bar. When measuring the cyclic voltammogram, the potential scan range is from -2.5 V to +2.5 V, the prescribed potential range (integral value extraction potential) for calculating the integral value is 17.6 mV, and the potential scan rate is 600 mV/s.

Fig. 17 shows the results of judging whether the curves k5 to k7 shown in Fig. 16 differ from each other.

Whether the curves k5 to k7 differ from each other is determined by judging whether two of the curves k5 to k7 differ from each other for all combinations of two curves from the curves k5 to k7.

There are three combinations of two curves among the curves k5 to k7: (k5, k6), (k5, k7), and (k6, k7).

Fig. 17 shows whether the two curves differ in each of the three combinations (k5, k6), (k5, k7), and (k6, k7).

With reference to Fig. 17, the standard deviation $\sigma_{DF_k5,k6}$ of the differences between the multiple integral values on the curve k5 and the multiple integral values on the curve k6 is $\sigma_{DF_k5,k6}$ = 65.70 (%), and the standard deviation $\sigma_{DF_k5,k7}$ of the differences between the multiple integral values on the curve k5 and the multiple integral values on the curve k7 is $\sigma_{DF_k5,k7}$ = 74.94 (%), and the standard deviation $\sigma_{DF_k6,k7}$ of the differences between the multiple integral values on curve k6 and the multiple integral values on curve k7 is $\sigma_{DF_k6,k7}$ = 93.19 (%).

As a result, the standard deviation of the differences $\sigma_{DF_k5,k6}$ (=65.70 (%)), the standard deviation of the differences $\sigma_{DF_k5,k7}$ (=74.94 (%)), and the standard deviation of the differences $\sigma_{DF_k6,k7}$ (=93.19 (%)) are all greater than the threshold value $\sigma_{th}$ (=15%).

Therefore, the two curves k5 and k6 differ, the two curves k5 and k7 differ, and the two curves k6 and k7 differ (see the "○" in Fig. 17). Therefore, the curves k5 to k7 are curves that differ from each other.

The curves k5 and k6 have two peaks, and the curve k7 has three peaks, and therefore it is easy to understand that the curve k7 differs from the curves k5 and k6.

The curves k5 and k6 have the same number of peaks, but the positions of the peaks of the curves k5 and k6 differ from each other.

Therefore, by determining whether the number of peaks is the same and whether the positions of the peaks are the same, it is also possible to determine that the curves k5 to k7 differ from each other.

The analysis system 10 is installed, for example, in wine bars, Japanese restaurants, and Japanese Western-style restaurants, and the analysis device 2 of the analysis system 10 has a display unit 26, which allows the staff of the wine bars, Japanese restaurants, and Japanese Western-style restaurants to judge that the curves k5 to k7 differ from each other as the display unit 26 displays the curves k5 to k7 and the judgement results shown in Fig. 17.

As described above, the curves k5 to k7 can be used to distinguish between the red wine (Chile 2020), the red wine (Australia 2010), and the red wine (France 2013).

Therefore, when it is judged that the curves k5 to k7 differ from each other, the curve k5 is a curve for uniquely identifying the red wine (Chile 2020), the curve k6 is a curve for uniquely identifying the red wine (Australia 2010), and the curve k7 is a curve for uniquely identifying the red wine (France 2013). The curve k5 indicates the feature values by the integral values for the "red wine (Chile 2020)", the curve k6 indicates the feature values by the integral values for the "red wine (Australia 2010)", and the curve k7 indicates the feature values by the integral values for the "red wine (France 2013)".

As a result, the curves k5 to k7, which are the index curves, can be used for authentication to determine whether the item is genuine or not.

Fig. 18 shows the integral value spectra for red wine (Italy 2015), red wine (France 2016), and red wine (Italy year unknown).

With reference to Fig. 18, each of the curves k8 to k10 is a curve CUR which the analysis device 2 created by the method described above. The curve k8 indicates the integral value spectrum of the red wine (Italy 2015), the curve k9 indicates the integral value spectrum of the red wine (France 2016), and the curve k10 indicates the integral value spectrum of the red wine (Italy year unknown).

The measurement conditions for the cyclic voltammograms, on which the calculation of the multiple integral values for each of the curves k8 to k10 is based, are shown in Table 4.

[Table 4]

| | |
|---|---|
| Working electrode | Gold electrode (diameter: 3.5 mm) |
| Counter electrode | Gold (rod-shaped electrode) |
| Reference electrode | Gold (rod-shaped electrode) |
| Potential scan range | -1.2 ~ +2.0v |
| Integral value extraction potential | 34 mV |
| Potential scan rate | 600 mV/S |

As shown in Table 4, the working electrode is made of gold and has a circular flat shape, the counter and reference electrodes are made of gold which is rod-shaped. The potential scan range is from -1.2 V to +2.0 V, the prescribed potential range (integral value extraction potential) for calculating the integral value is 34 mV, and the potential scan rate is 600 mV/s.

As described above, the measurement conditions for the cyclic voltammograms shown in Table 4 differ from the measurement conditions for the cyclic voltammograms shown in Table 3 in that a sensor 11 with a gold working electrode is used, the potential scan range is from -1.2 V to +2.0 V, and the prescribed potential range (integral value extraction potential) is 34 mV.

Fig. 19 illustrates the results of judging whether the curves k8 to k10 shown in Fig. 18 differ from each other.

Whether the curves k8 to k10 differ from each other is judged by determining whether two of the curves k8 to k10 differ from each other for all combinations of two curves among the curves k8 to k10.

There are three combinations of two curves among the curves k8 to k10: (k8, k9), (k8, k10), and (k9, k10).

Fig. 19 shows whether the two curves differ in each of the three combinations (k8, k9), (k8, k10), and (k9, k10).

With reference to Fig. 19, the standard deviation $\sigma_{DF_k8, k9}$ of the differences between the multiple integral values on the curve k8 and the multiple integral values on the curve k9 is $\sigma_{DF_k8, k9}$ = 57.13 (%), and the standard deviation $\sigma_{DF_k8, k10}$ of the differences between the multiple integral values on the curve k8 and the multiple integral values on the curve k10 is $\sigma_{DF_k8, k10}$ = 40.56 (%), and the standard deviationo$_{DF_k9, k10}$ of the differences between the multiple integral values on the curve k9 and the multiple integral values on the curve k10 is $\sigma_{DF_k9, k10}$ = 17.85 (%).

As a result, the standard deviation $\sigma_{DF_k8, k9}$ (=57.13 (%)) of the differences, the standard deviation $\sigma_{DF_k8, k10}$ (=40.56 (%)) of the differences, and the standard deviation $\sigma_{DF_k9, k10}$ (=17.85 (%)) of the differences are all greater than the threshold value $\sigma_{th}$ (=15%).

Therefore, the two curves k8 and k9 differ, the two curves k8 and k10 differ, and the two curves k9 and k10 differ (see the "○" in Fig. 19). Therefore, the curves k8 to k10 are curves that differ from each other.

The curves k8 to k10 all have three peaks, but the positions of the peaks of the curves k8 to k10 in the range where the class is from 0 to 20 differ from each other.

Therefore, it can be determined that the curves k8 to k10 differ from each other by determining whether the positions of the peaks are the same.

The analysis system 10 is installed for example in wine bars, Japanese restaurants, and Japanese Western-style restaurants, and the analysis device 2 of the analysis system 10 has the display unit 26, so that the staff of the wine bars, Japanese restaurants, Japanese Western-style restaurants can determine that the curves k8 to k10 differ from each other as the display unit 26 displays the curves k8 to k10 shown in Fig. 18 and the judgement results shown in Fig. 19.

As described above, the curves k8 to k10 can be used to distinguish between the red wine (Italy 2015), the red wine (France 2016), and the red wine (Italy, year unknown).

Therefore, when it is determined that the curves k8 to k10 differ from each other, the curve k8 is a curve for uniquely identifying the red wine (Italy 2015), the curve k9 is a curve for uniquely identifying the red wine (France 2016), and the curve k10 is a curve for uniquely identifying the red wine (Italy, year unknown). The curve k8 represents the feature values based on the integral values for the "red wine (Italy 2015)," the curve k9 represents the feature values based on the integral values for the "red wine (France 2016)," and the curve k10 represents the feature values based on the integral values for the "red wine (Italy, year unknown)."

As a result, the curves k8 to k10, which serves as index curves, can be used to determine whether the item is genuine or not.

As for spoiled wine, as a result of measuring the cyclic voltammogram, the current-potential characteristic (I-V) of the cyclic voltammogram includes the area REG shown in Fig. 12. As a result, the curve CUR, which shows the dependence of the integral values on the class (dependence on the prescribed potential range), includes negative integral values.

Therefore, it has been verified that if the curve CUR includes a negative integral value, it can be judged that the analyte is spoiled wine.

In this way, it is possible to determine whether the wine as an analyte is spoiled based on the curve CUR created by the analysis device 2. In other words, it is possible to judge the quality of the wine as an analyte based on the curve CUR.

In cyclic voltammograms, it is difficult to determine that the current value of the oxidation wave is below that of the reduction wave, but it is easy to determine whether the curve CUR, which shows the dependence of the integral values on the class (prescribed potential range dependence), includes a negative integral value, and it is therefore easy to determine the quality of the wine as an analyte based on the curve CUR.

As described above, the approach of creating a curve CUR using the analysis device 2 and determining the quality of wine based on the created curve CUR is advantageous.

(3) Coffee

Fig. 20 illustrates the integral value spectra for WONDA, CRAFT BOSS, and GOLD BREW.

WONDA, CRAFT BOSS, and GOLD BREW are kinds of coffee.

With reference to Fig. 20, each of the curves k11 to k13 is a curve CUR created by the analysis device 2 by the method described above. The curve k11 represents the integral value spectrum for coffee (WONDA), the curve k12 represents the integral value spectrum for coffee (CRAFT BOSS), and the curve k13 represents the integral value spectrum for coffee (GOLD BREW).

The measurement conditions for the cyclic voltammogram, on which the calculation of the multiple integral values for each of the curves k11 to k13 is based are shown in Table 5.

[Table 5]

| | |
|---|---|
| Working electrode | Diamond electrode (diameter: 3.5 mm) |
| Counter electrode | Gold (rod-shaped electrode) |
| Reference electrode | Gold (rod-shaped electrode) |
| Potential scan range | ±2.5v |
| Integral value extraction potential | 18.4 mV |

(continued)

| | |
|---|---|
| Potential scan rate | 600 mV/S |

As shown in Table 5, the working electrode is made of diamond and has a circular planar shape, and the counter and reference electrodes are made of gold with rod-shaped. The potential scan range is from -2.5 V to +2.5 V, the prescribed potential range (integral value extraction potential) for calculating the integral value is 18.4 mV, and the potential scan rate is 600 mV/s.

Fig. 21 illustrates the results of judging whether the curves k11 to k13 shown in Fig. 20 differ from each other.

Whether the curves k11 to k13 differ from each other is judged by judging whether two curves of the curves k11 to k13 differ from each other for all combinations of two curves among the curves k11 to k13.

There are three combinations of two curves among the curves k11 to k13: (k11, k12), (k11, k13), and (k12, k13).

Fig. 21 illustrates whether the two curves differ in each of the three combinations: (k11, k12), (k11, k13), and (k12, k13).

With reference to Fig. 21, the standard deviation $\sigma_{DF_k11,\ k12}$ of the differences between the multiple integral values on the curve k11 and the multiple integral values on the curve k12 is $\sigma_{DF_k11,\ k12}$=37. 00 (%), and the standard deviation $\sigma_{DF_k11,\ k13}$ of the differences between the multiple integral values on the curve k11 and the multiple integral values on the curve k13 is $\sigma_{DF_k11,\ k13}$ = 66.20 (%), and the standard deviation $\sigma_{DF_k12,\ k13}$ of the differences between the multiple integral values on the curve k12 and the multiple integral values on the curve k13 is $\sigma_{DF_k12,\ k13}$ = 50.55 (%).

As a result, the standard deviation of the differences $\sigma_{DF_k11,\ k12}$ (=37.00 (%)), the standard deviation of the differences $\sigma_{DF_k11,k13}$ (=66.20 (%)), and the standard deviation of the differences $\sigma_{DF_k12,k13}$ (= 50.55 (%)) are all greater than the threshold value $\sigma_{th}$ (= 15%).

Therefore, the two curves k11 and k12 differ, the two curves k11 and k13 differ, and the two curves k12 and k13 differ (see the "○" in Fig. 21). Therefore, the curves k11 to k13 differ from each other.

The curves k11 to k13 all have three peaks, but in the range where the class is from 200 and 270, the positions of the two peaks of the curve k13 differ from the positions of the two peaks of the curves k11 and k12.

Furthermore, the peak values of the curves k11 to k13 differ from each other in the range where the class is from 50 to 100, and the peak values also differ from each other in the range where the class is from 230 to 270.

Therefore, by judging whether the peak positions or peak values are the same, it is also possible to judge that the curves k11 to k13 differ from each other.

The analysis system 10 is provided at a coffee store, and since the analysis device 2 of the analysis system 10 has the display unit 26, the clerk at the coffee store can judge that the curves k11 to k13 differ from each other as the display unit 26 displays the curves k11 to k13 shown in Fig. 20 and the judgement results shown in Fig.21.

As a result, the curves k11 to k13 can be used to distinguish between the coffee (WONDA), the coffee (CRAFT BOSS), and the coffee (GOLD BREW) from each other.

Therefore, when it is determined that the curves k11 to k13 differ from each other, the curve k11 is a curve for uniquely identifying the coffee (WONDA), the curve k12 is a curve for uniquely identifying the coffee (CRAFT BOSS), and the curve k13 is a curve for uniquely identifying the coffee (GOLD BREW). The curve k11 represents the feature values based on the integral values for the "coffee (WONDA)," the curve k12 represents the feature values based on the integral values for the "coffee (CRAFT BOSS)," and the curve k13 represents the feature values based on the integral values for the "coffee (GOLD BREW)."

As a result, it is possible to perform authentication to judge whether an item is genuine or not using the index curves k11 to k13.

(4) Human urine

Fig. 22 shows the integral value spectra of human urine collected on different days. With reference to Fig. 22, each of the curves k14 to k16 is a curve CUR created by the analysis device 2 by the method described above. The curves k14 to k16 indicate the integral value spectra of urine from the same individual, and the curve k14 indicates the integral value spectrum for urine from the same individual collected on the first day, and curve k15 shows the integral value spectrum for urine from the same individual collected on the second day, and the curve k16 shows the integral value spectrum for urine from the same individual collected on the third day.

The measurement conditions for the cyclic voltammogram, on which the calculation of the multiple integral values for each of the curves k14 to k16 is based are shown in Table 6.

[Table 6]

| | |
|---|---|
| Working electrode | Diamond electrode (diameter: 3.5 mm) |

(continued)

| | |
|---|---|
| Counter electrode | Gold (rod-shaped electrode) |
| Reference electrode | Gold (rod-shaped electrode) |
| Potential scan range | ±2.5v |
| Integral value extraction potential | 192 mV |
| Potential scan rate | 600 mV/s |

As shown in Table 6, the working electrode is made of diamond with a circular planar shape, and the counter and reference electrodes are made of gold in a rod shape. The potential scan range is from -2.5V to +2.5V, and the specified potential range (integral value extraction potential) for calculating the integral value is 192mV, and the potential scan rate is 600mV/s.

Fig. 23 shows the results of judging whether the curves k14 to k16 shown in Fig. 22 differ from each other.

Whether the curves k14 to k16 differ from each other or not is judged by judging whether two of the curves k14 to k16 differ from each other for all combinations of two curves among the curves k14 to k16.

There are three combinations of two curves among the curves k14 to k16: (k14, k15), (k14, k16), and (k15, k16).

Therefore, Fig. 23 shows whether the two curves differ in each of the three combinations (k14, k15), (k14, k16), and (k15, k16).

With reference to Fig. 23, the standard deviation $\sigma_{DF_k19, k15}$ of the differences between the multiple integral values on the curve k14 and the multiple integral values on the curve k15 is $\sigma_{DF_k14, k15}$ = 38.45 (%), and the standard deviation $\sigma_{DF_k14, k16}$ of the differences between the multiple integral values on the curve k14 and the multiple integral values on the curve k16 is $\sigma_{DF_k14, k16}$ = 26.04 (%), and the standard deviation $\sigma_{DF_k15, k16}$ of the differences between the multiple integral values on curve k15 and the multiple integral values on curve k16 is $\sigma_{DF_k15, k16}$ = 22.93 (%).

As a result, the standard deviation of the differences, $\sigma_{DF_k14, k15}$ (=38.45 (%)), the standard deviation of the differences, $\sigma_{DF_k14, k16}$ (=26.04 (%)), and the standard deviation of the difference $\sigma_{DF_k15, k16}$ (=22.93 (%)) are all greater than the threshold value $\sigma_{th}$ (=15%).

Therefore, the two curves k14 and k15 differ, the two curves k14 and k16 differ, and the two curves k15 and k16 differ (see the "○" in Fig. 23). Therefore, the curves k14 to k16 are curves that differ from each other.

The curves k14 to k16 have two peaks in common. However, the curves k14 to k16 have different peak positions in the range where the class is from 5 to 10, and have different peak positions in the range where the class is from 20 to 25.

Furthermore, the curves k14 to k16 have different peak values in the ranges where the class is from 5 to 10 and the class is from 20 to 25.

Therefore, it is possible to judge that the curves k14 to k16 differ from each other by judging whether the peak positions or peak values are the same.

The analysis system 10 is installed in a hospital, and the analysis device 2 of the analysis system 10 has a display unit 26, so that as the display unit 26 displays the curves k14 to k16 shown in Fig. 22 and the judgement results shown in Fig. 23, doctors and other hospital staff can judge that the curves k14 to k16 differ from each other.

As described above, the curves k14 to k16 can be used to distinguish between urine samples from the same individual collected on the first, second and third days.

Therefore, when it is determined that the curves k14 to k16 differ from each other, the curve k14 is a curve for uniquely identifying urine collected on the first day, the curve k15 is a curve for uniquely identifying urine collected on the second day, and the curve k16 is a curve for uniquely identifying urine collected on the third day. The curve k14 represents the feature value by the integral value for "urine collected on the first day", the curve k15 represents the feature value by the integral value for "urine collected on the second day", and the curve k16 represents the feature value by the integral value for "urine collected on the third day".

As a result, it is possible to perform authentication to judge whether the sample is genuine or not using the index curves k14 to k16.

(5) Human saliva

Fig. 24 shows the integral value spectra for human saliva collected on different days. With reference to Fig. 24, each of the curves k17 to k19 is a curve CUR created by the analysis device 2 by the method described above. The curves k17 to k19 show the integral value spectra for saliva from the same individual, the curve k17 shows the integral value spectrum for saliva from the same individual collected on the first day, the curve k18 shows the integral value spectrum for saliva from the same individual collected on the second day, and the curve k19 shows the integral value spectrum for saliva from the same individual collected on the third day.

The measurement conditions for the cyclic voltammogram, on which the calculation of the multiple integral values for the curves k17 to k19 is based are the same as those shown in Table 6.

Fig. 25 shows the results of judging whether the curves k17 to k19 shown in Fig. 24 differ from each other.

Whether the curves k17 to k19 differ from each other is judged by judging whether two of the curves k17 to k19 differ from each other for all combinations of two curves among the curves k17 to k19.

There are three combinations of two curves among the curves k17 to k19: (k17, k18), (k17, k19), and (k18, k19).

Fig. 25 illustrates whether the two curves differ in each of the three combinations (k17, k18), (k17, k19), and (k18, k19).

With reference to Fig. 25, the standard deviation $O_{DF_k17,\ k18}$ of the differences between the multiple integral values on the curve k17 and the multiple integral values on the curve k18 is $\sigma_{DF_k17,\ k18}$ = 162.23 (%), and the standard deviation $\sigma_{DF_k17,\ k19}$ of the differences between the multiple integral values on the curve k17 and the multiple integral values on the curve k19 is $\sigma_{DF_k17,\ k19}$ = 30.81 (%)%, and the standard deviation $\sigma_{DF_k18,\ k19}$ of the differences between the multiple integral values on the curve k18 and the multiple integral values on the curve k19 is $\sigma_{DF_k18,\ k19}$ = 75.69 (%).

As a result, the standard deviation of the differences $\sigma_{DF_k17,\ k18}$ (=162.23 (%)), the standard deviation of the differences $\sigma_{DF_k17,\ k19}$ (=30.81 (%)), and the standard deviation of the difference $\sigma_{DF_k18,\ k19}$ (=75.69 (%)) are all greater than the threshold value $\sigma_{th}$ (=15%).

Therefore, the two curves k17 and k18 differ, the two curves k17 and k19 differ, and the two curves k18 and k19 differ (see the "○" in Fig. 25). Therefore, the curves k17 to k19 are curves that differ from each other.

The curves k17 to k19 are common in having two peaks. However, the curves k17 to k19 have different peak positions in the range where the class is from 5 to 10 and have different peak values in the range where the class is from 5 to 10 and in the range where the class is 20 or more.

Therefore, it is also possible to judge that curves k17 to k19 differ from each other by judging whether the peak positions or peak values are the same.

The analysis system 10 is installed in a hospital, and the analysis device 2 of the analysis system 10 has a display unit 26, so that as the display unit 26 displays the curves k17 to k19 shown in FIG. 24 and the judgement results shown in FIG. 25, the doctors and other hospital staff can determine that the curves k17 to k19 differ from each other.

As described above, the curves k17 to k19 can be used to distinguish between saliva samples from the same individual collected on the first, second, and third days, respectively.

Therefore, when it is determined that the curves k17 to k19 differ from each other, the curve k17 is a curve for uniquely identifying the saliva from the same individual collected on the first day, the curve k18 is a curve for uniquely identifying the saliva from the same individual collected on the second day, and curve k19 is a curve for uniquely identifying the saliva from the same individual collected on the third day. The curve k17 represents feature values based on the integral values for the "saliva collected on the first day", the curve k18 represents feature values based on the integral values for the "saliva collected on the second day", and the curve k19 represents feature values based on the integral values for the "saliva collected on the third day".

As a result, it is possible to perform authentication to judge whether a sample is genuine or not using the index curves k17 to k19.

As in the above description in (1) to (5), it is possible to judge that the multiple integral value spectra created by the analysis device 2 for each of Calpis, wine, coffee, human urine, and human saliva differ from each other.

Also as in the above description (1) to (5), it is also possible to judge whether the multiple integral value spectra differ from each other by judging whether the number of peaks, peak positions, and peak values of the integral value spectra are the same for each of Calpis, wine, coffee, human urine, and human saliva.

Therefore, an example will be described in which it can be judged that the multiple integral value spectra do not differ. Fig. 26 shows two integral value spectra for the same wine.

The curve k20 represents the integral value spectrum created by the analysis device 2 based on the cyclic voltammogram CVG_a measured using a sensor 11a, and the curve k21 represents the integral value spectrum created by the analysis device 2 based on the cyclic voltammogram CVG_b measured using a sensor 11b instead of the sensor 11a.

Each of the sensors 11a and 11b has the same configuration as the sensor 11 shown in Fig. 2. In addition, the working, reference, and counter electrodes of the sensors 11a and 11b are made of the same materials.

In the measurement of the cyclic voltammogram CVG in the sensor device 1, the cyclic voltammogram CVG_a was measured using the sensor 11a, then the sensor 11b was attached to the measurement device 12 in place of the sensor 11a, and the cyclic voltammogram CVG_b was measured using the sensor 11b.

Fig. 27 shows the results of judging whether the curves k20 and k21 shown in Fig. 26 differ from each other.

With reference to Fig. 27, the standard deviation $\sigma_{DF_k20,\ k21}$ of the differences between the multiple integral values on curve k20 and the multiple integral values multiple integral values on the curve k21 is $\sigma_{DF_k20,\ k21}$ = 10.95 (%).

As a result, the standard deviation of the differences $\sigma_{DF_k20,\ k21}$ (=10.95(%)) is less than the threshold value $\sigma_{th}$ (=15%).

Therefore, the two curves k20 and k21 do not differ (see "×" in Fig. 27).

In this way, the analysis device 2 judges that the two curves k20 and k21 do not differ, which indicates that the creation of the integral value spectrum based on the cyclic voltammogram CVG by the analysis device 2 is reproducible.

Other Indexes

Fig. 28 shows the integral value spectrum created based on the cyclic voltammogram CVG measured with varying potential scan rates.
With reference to Fig. 28, the curve k22 shows the integral value spectrum created by the analysis device 2 based on the cyclic voltammogram CVG_600 mV/s measured with the potential scan rate set to 600 mV/s, the curve k23 shows the integral value spectrum created by the analysis device 2 based on the cyclic voltammogram CVG_500 mV/s measured with the potential scan rate set to 500 mV/s, and the curve k24 shows the integral value spectrum created by the analysis device 2 based on the cyclic voltammogram CVG_300 mV/s measured with the potential scan rate set to 300 mV/s. The analyte measured for the cyclic voltammograms CVG_600 mV/s, CVG_500 mV/s, and CVG_300 mV/s is the same.
The measurement conditions for the cyclic voltammograms CVG_600 mV/s, CVG_500 mV/s, and CVG_300 mV/s are shown in Table 7.

[Table 7]

| | |
|---|---|
| Working electrode | Diamond electrode (diameter: 3.5 mm) |
| Counter electrode | Gold (rod-shaped electrode) |
| Reference electrode | Gold (rod-shaped electrode) |
| Potential scan range | ±2.5v |
| Integral value extraction potential | 18.4 mV |
| Potential scan rate | 600 mV/s, 500 mV/s, 300 mV/s |

As shown in Table 7, the working electrode is made of diamond and has a circular planar shape, and the counter electrode and the reference electrode are made of gold. The potential scan range is from -2.5V to +2.5V, and the prescribed potential range (integral value extraction potential) for calculating the integral value is 18.4 mV, and the potential scan rate is 600 mV/s, 500 mV/s, or 300 mV/s.
Fig. 29 is a diagram showing the results of judging whether the curves k22, k23, and k24 shown in Fig. 28 differ from each other.
With reference to Fig. 29, whether the curves k22 to k24 differ from each other is judged by judging whether two of the curves k22 to k24 differ from each other for all combinations of two curves among the curves k22 to k24.
There are three combinations of two curves among curves k22 to k24: (k22, k23), (k22, k24), and (k23, k24).
Fig. 29 shows whether the two curves differ in each of the three combinations of two curves: (k22, k23), (k22, k24), and (k23, k24).
With reference to Fig. 29, the standard deviation $\sigma_{DF_k22,\ k23}$ of the differences between the multiple integral values on curve k22 and the multiple integral values on curve k23 is $\sigma_{DF_k22,\ k23}$ = 34.69 (%), and the standard deviation $\sigma_{DF_k22,\ k24}$ of the differences between the multiple integral values on curve k22 and the multiple integral values on curve k24 is $\sigma_{DF_k22,\ k24}$ = 51.23 (%), and the standard deviation $\sigma_{DF_k23,\ k24}$ of the differences between the multiple integral values on the curve k23 and the multiple integral values on the curve k24 is $\sigma_{DF_k23,\ k24}$ = 30.26 (%).
As a result, the standard deviation of the differences $\sigma_{DF_k22,\ k23}$ (=34.69 (%)), the standard deviation of the differences $\sigma_{DF_k22,\ k24}$ (=51.23 (%)), and the standard deviation of the differences $\sigma_{DF_k23,\ k24}$ (=30.26 (%)) are all greater than the threshold value, $\sigma_{th}$ (=15%).
Therefore, the two curves k22 and k23 differ, the two curves k22 and k24 differ, and the two curves k23 and k24 differ (see the "○" in Fig. 29). Therefore, the curves k22 to k24 are curves that differ from each other.
The curves k22 to k24 all have three peaks. However, the curves k22 to k24 have different peak positions in the range where the class is from 50 to 100, and have different peak positions in the range where the class is from 230 to 270.
The curves k22 to k24 also have different peak values in the ranges where the class is from 50 to 100 and from 230 to 270.
Therefore, by judging whether the peak positions or peak values are the same, it is also possible to judge that the curves k22 to k24 differ from each other.
Fig. 30 is a first schematic diagram showing new index curves for identifying an analyte. With reference to Fig. 30, the curve k25 shows an integral value spectrum, where the integral value for each class is defined as the sum of three integral values for each class of the three curves k22 to k24 for the class shown in Fig. 28.
The curve k26 shows an integral value spectrum, where the integral value for each class is defined as the sum of two integral values for each class of the two curves k22 and k23 for the class shown in Fig. 28.

The curve k27 shows an integral value spectrum, where the integral value for each class is defined as the sum of two integral values for each class of the two curves k23 and k24 for each class shown in Fig. 28.

Fig. 31 shows the results of judging whether the curves k25, k26, and k27 shown in Fig. 30 differ from each other.

Whether the curves k25 to k27 differ from each other is judged by judging whether two of the curves k25 to k27 differ from each other for all combinations of two curves among the curves k25 to k27.

There are three combinations of two curves among the curves k25 to k27: (k25, k26), (k25, k27), and (k26, k27).

Fig. 31 shows whether the two curves differ in each of the three combinations (k25, k26), (k25, k27), and (k26, k27).

With reference to Fig. 31, the standard deviation $\sigma_{DF_k25,\ k26}$ of the differences between the multiple integral values on the curve k25 and the multiple integral values on the curve k26 is $\sigma_{DF_k25,\ k26}$ = 15.22 (%), the standard deviation $\sigma_{DF_k25,\ k27}$ of the differences between the multiple integral values on the curve k25 and the multiple integral values on the curve k27 is $\sigma_{DF_k25,\ k27}$ = 27.76 (%), and the standard deviation $\sigma_{DF_k26,\ k27}$ of the differences between the multiple integral values on the curve k26 and the multiple integral values on the curve k27 is $\sigma_{DF_k26,\ k27}$ i.e., 30.92 (%).

As a result, the standard deviation of the differences $\sigma_{DF_k25,\ k26}$ (=15.22 (%)), the standard deviation of the differences $\sigma_{DF_k25,\ k27}$ (=27.76 (%)), and the standard deviation of the differences $\sigma_{DF_k26,\ k27}$ (=30.92 (%)) are all greater than the threshold value $\sigma_{th}$ (=15%).

Therefore, the two curves k25 and k26 differ, the two curves k25 and k27 differ, and the two curves k26 and k27 differ (see the "○" in Fig. 31). Therefore, the curves k25 to k27 are curves that differ from each other.

Then, the integral values for at least two curves of the curves k22, k23, and k24 created based on the cyclic voltammograms CVG_600 mV/s, CVG_500 mV/s, and CVG_300 mV/s, respectively measured with varying scan rates can be added for each class, and the curves k25, k26, k27, which show the class dependence of the addition results, can be used as new index curves.

When the curves k25, k26, and k27 are used as new index curves, the display unit 26 of the analysis device 2 displays the curves k25 to k27 shown in Fig. 30 and the judgement results shown in Fig. 31.

Fig. 32 is a second schematic diagram showing the new index curves for identifying the analyte. With reference to Fig. 32, the curve k28 shows an integral value spectrum, where the subtraction result of three integral values for each class of the three curves k22 to k24 shown in Fig. 28 is defined as the integral values for each class.

The curve k29 represents an integral value spectrum where the subtraction result of two integral values for each class of the two curves k22 and k23 shown in Fig. 28 is defined as the integral value for each class.

The curve k30 also shows an integral value spectrum where the subtraction result of two integral values for each class of the two curves k23 and k24 shown in Fig. 28 is defined as the integral value for each class.

Fig. 33 shows the results of judging whether the curves k28, k29, and k30 shown in Fig. 32 differ from each other.

Whether the curves k28 to k30 differ from each other is judged by judging whether two of the curves k28 to k30 differ from each other for all combinations of two curves among the curves k28 to k30.

There are three combinations of two curves among curves k28 to k30: (k28, k29), (k28, k30), and (k29, k30).

Fig. 33 shows whether the two curves differ in each of the three combinations of two curves (k28, k29), (k28, k30), and (k29, k30).

With reference to Fig. 33, the standard deviation $\sigma_{DF_k28,\ k29}$ of the differences between the multiple integral values on curve k28 and the multiple integral values on curve k29 is $\sigma_{DF_k28,\ k29}$ = 51.37 (%), and the standard deviation $\sigma_{DF_k28,\ k30}$ of the differences between the multiple integral values on the curve k28 and the multiple integral values on the curve k30 is $\sigma_{DF_k28,\ k30}$ = 6415.85 (%), and the standard deviation $\sigma_{DF_k29,\ k30}$ of the differences between the multiple integral values on the curve k29 and the multiple integral values on the curve k30 is $\sigma_{DF_k29,\ k30}$ = 87.68 (%).

As a result, the standard deviation of the differences, $\sigma_{DF_k28,\ k29}$ (=51.37 (%)), the standard deviation of the differences, $\sigma_{DF_k28,\ k30}$ (=6415.85 (%)), and the standard deviation of the difference $\sigma_{DF_k29,\ k30}$ (= 87.68%) are all greater than the threshold value $\sigma_{th}$ (= 15%)

Therefore, the two curves k28 and k29 differ, the two curves k28 and k30 differ, and the two curves k29 and k30 differ (see the "○" in Fig. 33). Therefore, the curves k28 to k30 differ from each other.

Then, the curves k28, k29, and k30 which show the class dependence of the subtraction results obtained by subtracting the integral values for each class of at least two of the curves k22, k23, and k24 created based on the cyclic voltammograms CVG_600 mV/s, CVG_500 mV/s, and CVG_300 mV/s, respectively measured with varying potential scan rates can be used as new index curves.

In this way, the curves showing the class dependence of the addition or subtraction results of the integral values of at least two of the curves k22, k23, and k24 added or subtracted for each class can be used as new index curves.

When subtracting, from the integral value of one of the curves k22, k22, k23, the integral values of the remaining two curves, the integral value of the curve k22 and the integral value of the curve k24 may be subtracted from the integral value of the curve k23 (k23-k22-k24), or the integral value of the curves k22 and the integral value of the curve k23 may be subtracted from the integral value of the curve k24 (k24-k22-k23).

When subtracting, from the integral value of one of the curve k22, k22, k23, the integral value of another one of curve, for each class, the integral value of the curve k22 may be subtracted from the integral value of the curve k23 (k23-k22), or the integral value of the curve k22 may be subtracted from the integral value of the curve k24 (k24-k22), or the integral value of the curve k24 may be subtracted from the integral value of the curve k22 (k22-k24), or the integral value of the curve k23 may be subtracted from the integral value of the curve k24 (k24-k23).

When the curves k28, k29, and k30 are used as new index curves, the display unit 26 of the analysis device 2 displays the curves k28 to k30 shown in Fig. 32 and the judgement results shown in Fig. 33.

Relation between Number of Integral Values and Standard Deviation of Differences

(A) Calpis

Fig. 34 shows the integral value spectra for undiluted Calpis, Calpis diluted twice with tap water, Calpis diluted three times with tap water, and Calpis diluted four times with tap water, when the number of integral values is three.

With reference to Fig. 34, each of the curves k31 to k34 is a curve CUR created by the analysis device 2 by the method described above. The curve k31 shows an integral value spectrum for the undiluted Calpis, the curve k32 shows an integral value spectrum for Calpis diluted twice with tap water, the curve k33 shows an integral value spectrum for Calpis diluted three times with tap water, and the curve k34 shows an integral value spectrum for Calpis diluted four times with tap water.

The measurement conditions for the cyclic voltammogram for calculating the multiple integral values (3 integral values) for each of the curves k31 to k34 are the same as those shown in Table 2, except that the prescribed potential range (i.e., the integral value extraction potential) is changed from 192 mV to 1536 mV.

As a result, in Fig. 34, each of the classes 1 and 2 is made up of a prescribed potential range of 1536 mV (i.e., the integral value extraction potential), and the class 3 is made up of a prescribed potential range of 1920 mV (i.e., the integral value extraction potential).

Fig. 35 shows the results of judging whether the curves k31 to k34 shown in Fig. 34 differ from each other.

Whether the curves k31 to k34 differ from each other is judged by judging whether two of the curves k31 to k34 differ from each other for all combinations of two curves among the curves k31 to k34.

There are six combinations of two curves among the curves k31 to k34: (k31, k32), (k31, k33), (k31, k34), (k32, k33), (k32, k34), and (k33, k34).

Fig. 35 shows whether the two curves differ in each of the six combinations, (k31, k32), (k31, k33), (k31, k34), (k32, k33), (k32, k34), and (k33, k34).

With reference to Fig. 35, the standard deviation $\sigma_{DF_k31,\ k32}$ of the differences between the multiple integral values (3 integral values) on the curve 31 and the multiple integral values (3 integral values) on the curve k32 is 42.50 (%), and the standard deviation $\sigma_{DF_k31,\ k33}$ of the differences between the multiple integral values (3 integral values) on the curve 31 and the multiple integral values (3 integral values) on the curve k33, is 71.86 (%), and the standard deviation $\sigma_{DF_k31,\ k34}$ of the differences between the multiple integral values (3 integral values) multiple integral values on the curve k31 and the multiple integral values (3 integral values) on the curve k34 is 54.84 (%).

The standard deviation $\sigma_{DF_k32,\ k33}$ of the differences between the multiple integral values (3 integral values) on the curve k32 and the multiple integral values (3 integral values) on the curve k33 is 31.44 (%), the standard deviation $\sigma_{DF_k32,\ k34}$ of the differences between the multiple integral values (3 integral values) on the curve 32 and the multiple integral values (3 integral values) on the curve k34 $\sigma_{DF_k32,\ k34}$, is 15.15 (%), and the standard deviation $\sigma_{DF_k33,\ k34}$ of the differences between the multiple integral values (3 integral values) on the curve 33 and the multiple integral values (3 integral values) on the curve k34 is 23.15 (%).

As a result, the standard deviation of the differences $\sigma_{DF_k31,\ k32}$ (=42.50 (%)), the standard deviation of the differences $\sigma_{DF_k31,\ k33}$ (=71.86 (%)), the standard deviation of the differences $\sigma_{DF_k31,\ k34}$ (=54.84 (%)), the standard deviation of the differences $\sigma_{DF_k32,\ k33}$ (=31.44 (%)), the standard deviation of the difference $\sigma_{DF_k32,\ k34}$ (=15.15 (%)) and the standard deviation of the difference $\sigma_{DF_k33,\ k34}$ (=23.15 (%)) are all greater than the threshold value $\sigma_{th}$ (=15 (%)).

Therefore, the two curves k31 and k32 differ, the two curves k31 and k33 differ, the two curves k31 and k34 differ, the two curves k32 and k33 differ, the two curves k32 and k34 differ, and the two curves k33 and k34 differ (see the "○" in Fig. 35). Therefore, the curves k31 to k34 are curves that differ from each other.

Fig. 36 shows integral value spectra for undiluted Calpis, Calpis diluted twice with tap water, Calpis diluted three times with tap water, and Calpis diluted four times with tap water, when the number of integral values is 4.

With reference to Fig. 36, each of the curves k35 to k38 is a curve CUR created by the analysis device 2 by the method described above. The curve k35 shows the integral value spectrum for the undiluted Calpis, the curve k36 shows the integral value spectrum for the Calpis diluted twice with tap water, the curve k37 shows the integral value spectrum for the Calpis diluted three times with tap water, and curve k38 shows the integral value spectrum for the Calpis diluted four times with tap water.

The measurement conditions for the cyclic voltammograms, on which the calculation of the multiple integral values (4 integral values) for each of the curves k35 to k38 is based are the same as those shown in Table 2, except that the prescribed potential range (i.e., the integral value extraction potential) is changed from 192 mV to 1152 mV.

As a result, in Fig. 36, each of classes 1, 2, and 3 is made up of a prescribed potential range of 1152 mV (i.e., the integral value extraction potential), and the class 4 is made up of a prescribed potential range of 1536 mV (i.e., the integral value extraction potential).

Fig. 37 shows the results of judging whether the curves k35 to k38 shown in Fig. 36 differ from each other.

Whether the curves k35 to k38 differ from each other is judged by judging whether two of the curves k35 to k38 differ from each other for all combinations of two curves among the curves k35 to k38.

There are six combinations of two curves among the curves k35 to k38: (k35, k36), (k35, k37), (k35, k38), (k36, k37), (k36, k38), and (k37, k38).

Fig. 37 shows whether the two curves differ in each of the six combinations (k35, k36), (k35, k37), (k35, k38), (k36, k37), (k36, k38), and (k37, k38).

With reference to Fig. 37, the standard deviation $\sigma_{DF_k35,\ k36}$ of the differences between the multiple integral values (4 integral values) on the curve k35 and the multiple integral values (4 integral values) on the curve k36 is 48.30 (%), and the standard deviation $\sigma_{DF_k35,\ k37}$ of the differences between the multiple integral values (4 integral values) on the curve k35 and the multiple integral values (4 integral values) on the curve k37 is 56.45 (%), and the standard deviation $\sigma_{DF_k35,\ k38}$ of the differences between the multiple integral values (4 integral values) on the curve k35 and the multiple integral values (4 integral values) on the curve k38 is 53.12 (%).

The standard deviation $\sigma_{DF_k36,\ k37}$ of the differences between the multiple integral values (4 integral values) on the curve k36 and the multiple integral values (4 integral values) on the curve k37 is 12.30 (%), the standard deviation $\sigma_{DF_k36,\ k38}$ of the differences between the multiple integral values (4 integral values) on the curve k36 and the multiple integral values (4 integral values) on the curve k38 is 6.86 (%), and the standard deviation $\sigma_{DF_k37,\ k38}$ of the differences between the multiple integral values (4 integral values) on the curve k37 and the multiple integral values (4 integral values) on the curve k38 is 11.70 (%).

As a result, the standard deviation of the differences $\sigma_{DF_k35,\ k36}$ (=48.30 (%)), the standard deviation of the differences $\sigma_{DF_k35,\ k37}$ (=56.45 (%)), and the standard deviation of the differences $\sigma_{DF_k35,\ k38}$ (=53.12 (%)) are greater than the threshold value $\sigma_{th}$ (=15%), while the standard deviation of the differences $\sigma_{DF_k36,\ k37}$ (=12.30 (%)), the standard deviation of the differences $\sigma_{DF_k36,\ k38}$ (=6.86 (%)), and the standard deviation of the differences $\sigma_{DF_k37,\ k38}$ (=11.70 (%)) are smaller than the threshold value $\sigma_{th}$ (=15%).

Therefore, the two curves k35 and k36 differ, the two curves k35 and k37 differ, the two curves k35 and k38 differ, and the two curves k36 and k37 do not differ, and the two curves k36 and k38 do not differ, and the two curves k37 and k38 do not differ.

Therefore, when the number of integral values is 4, the curves k35 to k38 are not curves that differ from each other.

It can be judged that the two curves k35 and k36, the two curves k35 and k37, and the two curves k35 and k38 differ from each other.

Fig. 38 shows the integral value spectra for the undiluted Calpis, the Calpis diluted twice with tap water, the Calpis diluted three times with tap water, and the Calpis diluted four times with tap water, when the number of integral values is 5.

With reference to Fig. 38, each of the curves k43 to k46 is a curve CUR created by the analysis device 2 by the method described above. The curve k43 shows the integral value spectrum for the undiluted Calpis, the curve k44 shows the integral value spectrum for the Calpis diluted twice with tap water, the curve k45 shows the integral value spectrum for the Calpis diluted three times with tap water, and the curve k46 shows the integral value spectrum for the Calpis diluted four times with tap water.

The measurement conditions for the cyclic voltammogram, on which the calculation of the multiple integral values (5 integral values) for each of the curves k43 to k46 is based, are the same as those shown in Table 2, except that the prescribed potential range (i.e., integral value extraction potential) of 192 mV in Table 2 is changed to 960 mV.

As a result, in Fig. 38, each of classes 1, 2, 3, and 4 consists of a prescribed potential range (i.e., integral value extraction potential) of 960 mV, and class 5 consists of a prescribed potential range (i.e., integral value extraction potential) of 1152 mV.

Fig. 39 shows the results of judging whether the curves k43 to k46 shown in Fig. 38 differ from each other.

Whether the curves k43 to k46 differ from each other is judged by judging whether two of the curves k43 to k46 differ from each other for all combinations of two curves among the curves k43 to k46.

There are six combinations of two curves among the curves k43 to k46: (k43, k44), (k43, k45), (k43, k46), (k44, k45), (k44, k46), and (k45, k46).

Fig. 39 shows whether the two curves differ in each of the six combinations (k43, k44), (k43, k45), (k43, k46), (k44, k45), (k44, k46), and (k45, k46).

With reference to Fig. 39, the standard deviation $\sigma_{DF_k43,\ k44}$ of the differences between the multiple integral values (5 integral values) on the curve k43 and the multiple integral values (5 integral values) on the curve k44 is 39.20 (%), and the standard deviation $\sigma_{DF_k93,\ k45}$ of the differences between the multiple integral values (5 integral values) on the curve k43 and the multiple integral values (5 integral values) on the curve k45 is 44.75 (%), and the standard deviation $\sigma_{DF_k43,\ k46}$ of the differences between the multiple integral values (5 integral values) on the curve k43 and the multiple integral values (5 integral values) on the curve k46 is 39.30 (%).

The standard deviation $\sigma_{DF_k44,\ k45}$ of the differences between the multiple integral values (5 integral values) on the curve k44 and the multiple integral values (5 integral values) on the curve k45 is 13.02 (%), the standard deviation $\sigma_{DF_k44,\ k46}$ of the differences between the multiple integral values (5 integral values) on the curve k44 and the multiple integral values (5 integral values) on the curve k46 is 10.04 (%), and the standard deviation $\sigma_{DF_k45,\ k46}$ of the differences between the multiple integral values (5 integral values) on the curve k45 and the multiple integral values (5 integral values) on the curve k46 is 19.83 (%).

As a result, the standard deviation of the differences $\sigma_{DF_k43,\ k44}$ (=39.20 (%)), the standard deviation of the differences $\sigma_{DF_k43,\ k45}$ (=44.75 (%)), the standard deviation of the differences $_{DF_k43,\ k46}$ (=39.30 (%)), and the standard deviation of the differences $\sigma_{DF_k45,\ k46}$ (=19.83 (%)) are greater than the threshold $\sigma_{th}$ (=15%), while the standard deviation of the differences $\sigma_{DF_k44,\ k45}$ (=13.02 (%)) and the standard deviation of the differences $\sigma_{DF_k44,\ k46}$ (=10.04 (%)) are smaller than the threshold $\sigma_{th}$ (=15%).

Therefore, the two curves k43 and k44 differ, the two curves k43 and k45 differ, the two curves k43 and k46 differ, and the two curves k45 and k46 differ, while the two curves k44 and k45 do not differ, and the two curves k44 and k46 do not differ.

Therefore, when the number of integral values is 5, the curves k43 to k46 are not curves that differ from each other.

Fig. 40 shows the integral value spectra for undiluted Calpis, Calpis diluted twice with tap water, Calpis diluted three times with tap water, and Calpis diluted four times with tap water, when the number of integral values is 6.

With reference to Fig. 40, each of the curves k47 to k50 is a curve CUR created by the analysis device 2 by the method described above. The curve k47 shows the integral value spectrum for the undiluted Calpis, the curve k48 shows the integral value spectrum for the Calpis diluted twice with tap water, the curve k49 shows the integral value spectrum for the Calpis diluted three times with tap water, and the curve k50 shows the integral value spectrum for the Calpis diluted four times with tap water.

The measurement conditions for the cyclic voltammogram, on which the calculation of the multiple integral values (6 integral values) for each of the curves k47 to k50 is based, are the same as those shown in Table 2, except that the prescribed potential range (i.e., integral value extraction potential) of 192 mV in Table 2 is changed to 768 mV.

As a result, in Fig. 40, each of classes 1, 2, 3, 4, and 5 consists of a prescribed potential range (i.e., integral value extraction potential) of 768 mV, and class 6 consists of a prescribed potential range (i.e., integral value extraction potential) of 1152 mV.

Fig. 41 shows the results of judging whether the curves k47 to k50 shown in Fig. 40 differ from each other.

Whether the curves k47 to k50 differ from each other is judged by judging whether two of the curves k47 to k50 differ from each other for all combinations of two curves among the curves k47 to k50.

There are six combinations of two curves among the curves k47 to k50: (k47, k48), (k47, k49), (k47, k50), (k48, k49), (k48, k50), and (k49, k50).

Fig. 41 shows whether the two curves differ in each of the six combinations (k47, k48), (k47, k49), (k47, k50), (k48, k49), (k48, k50), and (k49, k50).

With reference to Fig. 41, the standard deviation $\sigma_{DF_k47,\ k48}$ of the differences between the multiple integral values (6 integral values) on the curve k47 and the multiple integral values (6 integral values) on the curve k48 is 38.05 (%), the standard deviation $\sigma_{DF_k47,\ k49}$ of the differences between the multiple integral values (6 integral values) on the curve k47 and the multiple integral values (6 integral values) on the curve k49 is 45.94 (%), and the standard deviation $\sigma_{DF_k47,\ k50}$ of the differences between the multiple integral values (6 integral values) on the curve k47 and the multiple integral values (6 integral values) on the curve k50 is 40.25 (%).

The standard deviation of the differences between the multiple integral values (6 integral values) on the curve k48 and the multiple integral values (6 integral values) on the curve k49 $\sigma_{DF_k48,\ k49}$ is 16.90 (%), and the standard deviation $\sigma_{DF_k48,\ k50}$ of the differences between the multiple integral values (6 integral values) on the curve k48 and the multiple integral values (6 integral values) on the curve k50 is 11.89 (%), and the standard deviation $\sigma_{DF_k49,\ k50}$ of the differences between the multiple integral values (6 integral values) on the curve k49 and the multiple integral values (6 integral values) on the curve k50 is 18.04 (%).

As a result, the standard deviation of the differences $\sigma_{DF_k47,\ k48}$ (=38.05 (%)), the standard deviation of the differences $\sigma_{DF_k47,\ k49}$ (=45.94 (%)), the standard deviation of the differences $\sigma_{DF_k47,\ k50}$ (=40.25 (%)), the standard deviation of the differences $\sigma_{DF_k48,\ k49}$ (=16.90 (%)) and the standard deviation of the differences $\sigma_{DF_k49,\ k50}$ (=18.04 (%)) are all greater than the threshold value $\sigma_{th}$ (=15%), while the standard deviation of the differences $\sigma_{DF_k48,\ k50}$ (=11.89 (%)) is less than the threshold value $\sigma_{th}$ (=15%).

Therefore, the two curves k47 and k48 differ, the two curves k47 and k49 differ, the two curves k47 and k50 differ, the two curves k48 and k49 differ, the two curves k49 and k50 differ, and the two curves k48 and k50 do not differ.

Therefore, when the number of integral values is 6, the curves k47 to k50 are not curves that differ from each other.

Fig. 42 shows the integral value spectra for undiluted Calpis, Calpis diluted twice with tap water, Calpis diluted three times with tap water, and Calpis diluted four times with tap water, when the number of integral values is 8.

With reference to Fig. 42, the curves k51 to k54 are each a curve CUR created by the analysis device 2 by the method described above. The curve k51 shows the integral value spectrum for the undiluted Calpis, the curve k52 shows the integral value spectrum for the Calpis diluted twice with tap water, the curve k53 shows the integral value spectrum for the Calpis diluted three times with tap water, and the curve k54 shows the integral value spectrum for the Calpis diluted four times with tap water.

The measurement conditions for the cyclic voltammogram, on which the calculation of the multiple integral values (8 integral values) for each of the curves k51 to k54 is based, are the same as those shown in Table 2, except that the prescribed potential range (i.e., integral value extraction potential) of 192 mV in Table 2 is changed to 576 mV.

As a result, in Fig. 42, each of classes 1, 2, 3, 4, 5, 6, and 7 consists of a prescribed potential range (i.e., integral value extraction potential) of 576 mV, and class 8 consists of a prescribed potential range (i.e., integral value extraction potential) of 960 mV.

Fig. 43 shows the results of judging whether the curves k51 to k54 shown in Fig. 42 differ from each other.

Whether the curves k51 to k54 differ from each other is judged by judging whether two of the curves k51 to k54 differ from each other for all combinations of two curves among the curves k51 to k54.

There are six combinations of two curves among curves k51 to k54: (k51, k52), (k51, k53), (k51, k54), (k52, k53), (k52, k54), and (k53, k54).

Fig. 43 shows whether the two curves differ in each of the six combinations (k51, k52), (k51, k53), (k51, k54), (k52, k53), (k52, k54), and (k53, k54).

With reference to Fig. 43, the standard deviation $\sigma_{DF_k51, k52}$ of the differences between the multiple integral values (8 integral values) on the curve k51 and the multiple integral values (8 integral values) on the curve k52 is 87.13 (%), the standard deviation $\sigma_{DF_k51, k53}$ of the differences between the multiple integral values (8 integral values) on the curve k51 and the multiple integral values (8 integral values) on the curve k53 is 88.91 (%), and the standard deviation $\sigma_{DF_k51, k54}$ of the differences between the multiple integral values (8 integral values) on the curve k51 and the multiple integral values (8 integral values) on the curve k54 is 87.77 (%).

The standard deviation $\sigma_{DF_k52, k53}$ of the differences between the multiple integral values (8 integral values) on the curve k52 and the multiple integral values (8 integral values) on the curve k53 is 32.87 (%), the standard deviation $\sigma_{DF_kS2, k54}$ of the differences between the multiple integral values (8 integral values) on the curve k52 and the multiple integral values (8 integral values) on the curve k54 is 24.08 (%), and the standard deviation $\sigma_{DF_k53, k54}$ of the differences between the multiple integral values (8 integral values) on the curve k53 and the multiple integral values (8 integral values) on the curve k54 is 23.98 (%).

As a result, the standard deviation of the differences $\sigma_{DF–k51, k52}$ (=87.13 (%)), the standard deviation of the differences $\sigma_{DF_k51, k53}$ (=88.91 (%)), the standard deviation of the differences $\sigma_{DF_k51, k54}$ (=87.77 (%)), the standard deviation of the differences $\sigma_{DF_k52, k53}$ (=32.87 (%)), the standard deviation of the differences $\sigma_{DF_k52, k54}$ (=24.08 (%)) and the standard deviation of the differences$\sigma_{DF_k53, k54}$ (=23.98 (%)) are all greater than the threshold $\sigma_{th}$ (=15%).

Therefore, the two curves k51 and k52 differ, the two curves k51 and k53 differ, the two curves k51 and k54 differ, the two curves k52 and k53 differ, and the two curves k52 and k54 differ, and the two curves k53 and k54 differ (see the "∘" in Fig. 43). Therefore, the curves k51 to k54 differ from each other.

Fig. 44 shows the integral value spectra for undiluted Calpis, Calpis diluted twice with tap water, Calpis diluted three times with tap water, and Calpis diluted four times with tap water, when the number of integral values is 13.

With reference to Fig. 44, each of the curves k55 to k58 is a curve CUR created by the analysis device 2 by the method described above. The curve k55 shows the integral value spectrum for the undiluted Calpis, the curve k56 shows the integral value spectrum for the Calpis diluted twice with tap water, the curve k57 shows the integral value spectrum for the Calpis diluted three times with tap water, and the curve k58 shows the integral value spectrum for the Calpis diluted four times with tap water.

The measurement conditions for the cyclic voltammogram, on which the calculation of the multiple integral values (13 integral values) for each of the curves k55 to k58 is based, are the same as those shown in Table 2, except that the prescribed potential range (i.e., integral value extraction potential) of 192 mV in Table 2 is changed to 384 mV.

As a result, in Fig. 44, each of classes 1 to 13 consists of a prescribed potential range (i.e., integral value extraction potential) of 384 mV.

Fig. 45 is a diagram showing the results of judging whether the curves k55 to k58 shown in Fig. 44 differ from each other.

Whether the curves k55 to k58 differ from each other is judged by judging whether two of the curves k55 to k58 differ from each other for all combinations of two curves among the curves k55 to k58.

There are six combinations of two curves among the curves k55 to k58: (k55, k56), (k55, k57), (k55, k58), (k56, k57), (k56, k58), and (k57, k58).

Fig. 45 shows whether the two curves differ in each of the six combinations (k55, k56), (k55, k57), (k55, k58), (k56, k57), (k56, k58), and (k57, k58).

With reference to Fig. 45, the standard deviation $\sigma_{DF_k55,\ k56}$ of the differences between the multiple integral values (13 integral values) on the curve k55 and the multiple integral values (13 integral values) on the curve k56 is 45.88 (%), the standard deviation $\sigma_{DF_k55,\ k57}$ of the differences between the multiple integral values (13 integral values) on the curve k55 and the multiple integral values (13 integral values) on the curve k57 is 75.41 (%), and the standard deviation $\sigma_{DF_k55,\ k58}$ of the differences between the multiple integral values (13 integral values) on the curve k55 and the multiple integral values (13 integral values) on the curve k58 is 71.80 (%).

The standard deviation $\sigma_{DF_k56,\ k57}$ of the differences between the multiple integral values (13 integral values) on the curve k56 and the multiple integral values (13 integral values) on the curve k57 is 55.94 (%), the standard deviation $\sigma_{DF_k56,\ k58}$ of the differences between the multiple integral values (13 integral values) on the curve k56 and the multiple integral values (13 integral values) on the curve k58 is 50.10 (%), and the standard deviation $\sigma_{DF_k57,\ k58}$ of the differences between the multiple integral values (13 integral values) on the curve k57 and the multiple integral values (13 integral values) on the curve k58 is 58.32 (%).

As a result, the standard deviation of the differences $\sigma_{DF_k55,\ k56}$ (=45.88 (%)), the standard deviation of the differences $\sigma_{DF_k55,k57}$ (=75.41 (%)), the standard deviation of the differences $\sigma_{DF_k55,\ k58}$ (=71.80 (%)), the standard deviation of the differences $\sigma_{DF_k56,\ k57}$ (=55.94 (%)), the standard deviation of the differences $\sigma_{DF_k56,\ k58}$ (=50.10 (%)), and the standard deviation of the differences $\sigma_{DF_k57,\ k58}$ (=58.32 (%)) are all greater than the threshold $\sigma_{th}$ (=15%).

Therefore, the two curves k55 and k56 differ, the two curves k55 and k57 differ, the two curves k55 and k58 differ, the two curves k56 and k57 differ, and the two curves k56 and k58 differ, and the two curves k57 and k58 differ (see the "◦" in Fig. 45). Therefore, the curves k55 to k58 are curves that differ from each other.

Fig. 14 shows the integral value spectra for undiluted Calpis, Calpis diluted twice with tap water, Calpis diluted three times with tap water, and Calpis diluted four times with tap water, when the number of integral values (the number of classes) is 26. Fig. 15 shows that the standard deviation of the differences $\sigma_{DF_k1,\ k2}$ (=49.37 (%)), the standard deviation of the differences $\sigma_{DF_k1,\ k3}$ (=69.61 (%)), the standard deviation of the differences $\sigma_{DF_k1,\ k4}$ (=59.03 (%)), the standard deviation of the differences $\sigma_{DF_k2,\ k3}$ (=44.49 (%)), the standard deviation of the differences $\sigma_{DF_k2,\ k4}$ (=25.14 (%)) and the standard deviation of the differences $\sigma_{DF_k3,\ k4}$ (=48.83 (%)) are all greater than the threshold value $\sigma_{th}$ (=15%).

Therefore, it was found that when the number of integral values is 3, 8, 13, or 26, it is possible to obtain integral value spectra (i.e., curve CUR) that can be used to uniquely identify the undiluted Calpis, Calpis diluted twice with tap water, Calpis diluted three times with tap water, and Calpis diluted four times with tap water.

In other words, when the number of integral values is 3, the curve k31 is an integral value spectrum for uniquely identifying the undiluted Calpis, the curve k32 is an integral value spectrum for uniquely identifying the Calpis diluted twice with tap water, the curve k33 is an integral value spectrum for uniquely identifying the Calpis diluted three times with tap water, and the curve k34 is an integral value spectrum for uniquely identifying the Calpis diluted four times with tap water.

When the number of integral values is 8, the curve k51 is an integral value spectrum for uniquely identifying the undiluted Calpis, the curve k52 is an integral value spectrum for uniquely identifying the Calpis diluted twice with tap water, the curve k53 is an integral value spectrum for uniquely identifying the Calpis diluted three times with tap water, and the curve k54 is an integral value spectrum for uniquely identifying the Calpis diluted four times with tap water.

When the number of integral values is 13, the curve k55 is an integral value spectrum for uniquely identifying the undiluted Calpis, the curve k56 is an integral value spectrum for uniquely identifying the Calpis diluted twice with tap water, the curve k57 is an integral value spectrum for uniquely identifying the Calpis diluted three times with tap water, and the curve k58 is an integral value spectrum for uniquely identifying the Calpis diluted four times with tap water.

When the number of integral values is 26, as described above, the curve k1 is an integral value spectrum for uniquely identifying the undiluted Calpis, the curve k2 is an integral value spectrum for uniquely identifying the Calpis diluted twice with tap water, the curve k3 is an integral value spectrum for uniquely identifying the Calpis diluted three times with tap water, and the curve k4 is an integral value spectrum for uniquely identifying the Calpis diluted four times with tap water.

In this case, the integral value spectrum (i.e., index curve) for uniquely identifying the undiluted Calpis is represented by the curve k31 when the number of integral values is 3, the curve k51 when the number of integral values is 8, the curve k55 when the number of integral values is 13, and the curve k1 when the number of integral values is 26.

The integral value spectrum (i.e., index curve) for uniquely identifying the Calpis diluted twice with tap water is represented by the curve k32 when the number of integral values is 3, the curve k52 when the number of integral values is 8, the curve k56 when the number of integral values is 13, and the curve k2 when the number of integral values is 26.

The integral value spectrum (i.e., the index curve) for uniquely identifying the Calpis diluted three times with tap water is represented by the curve k33 when the number of integral values is 3, the curve k53 when the number of integral values is 8, the curve k57 when the number of integral values is 13, and the curve k3 when the number of integral values is 26.

Furthermore, the integral value spectrum (i.e., index curve) for uniquely identifying the Calpis diluted four times with tap water is represented by the curve k34 when the number of integral values is 3, the curve k54 when the number of integral values is 8, the curve k58 when the number of integral values is 13, and the curve k4 when the number of integral values is 26.

In general, the integral value spectrum (i.e., index curve) for uniquely identifying the undiluted Calpis is represented by multiple (i.e., 4) index curves (i.e., the curves k31, k51, k55, and k1) with different numbers of integral values, and the integral value spectrum (i.e., index curve) for uniquely identifying the Calpis diluted twice with tap water is represented by multiple (i.e., 4) index curves (i.e., the curves k32, k52, k56, and k2) with different numbers of integral values, and the integral value spectrum (i.e., index curve) for uniquely identifying the Calpis diluted three times with tap water is represented by multiple (i.e., 4) index curves (i.e., the curves k33, k53, k57, and k3) with different numbers of integral values, and the integral value spectrum (i.e., index curve) for uniquely identifying the Calpis diluted four times with tap water is represented by multiple (i.e., 4) index curves (i.e., the curves k34, k54, k58, and k4) with different numbers of integral values.

It was found that the minimum number of integral values required to obtain an integral value spectrum that can uniquely identify the undiluted Calpis, Calpis diluted twice with tap water, Calpis diluted three times with tap water, and Calpis diluted four times with tap water is 3.

(B) Red wine 1

Fig. 46 shows the integral value spectra for red wine (Chile 2020), red wine (Australia 2010), and red wine (France 2013) when the number of integral values is 3.

With reference to Fig. 46, the curves k62 to k64 are each a curve CUR created by the analysis device 2 by the method described above. The curve k62 shows the integral value spectrum of the red wine (Chile 2020), the curve k63 shows the integral value spectrum of the red wine (Australia 2010), and the curve k64 shows the integral value spectrum of the red wine (France 2013).

The measurement conditions for the cyclic voltammogram, on which the calculation of the multiple integral values (3 integral values) for each of the curves k62 to k64 is based, are the same as those shown in Table 3, except that the prescribed potential range (i.e., the integral value extraction potential) of 17.6 mV in Table 3 is changed to 1654.4 mV.

As a result, in Fig. 46, classes 1 and 2 each consist of a prescribed potential range (i.e., integral value extraction potential) of 1654.4 mV, and class 3 consists of a prescribed potential range (i.e., integral value extraction potential) of 1689.6 mV.

Fig. 47 shows the results of judging whether the curves k62 to k64 shown in Fig. 46 differ from each other.

Whether the curves k62 to k64 differ from each other is judged by judging whether two of the curves k62 to k64 differ from each other for all combinations of two curves from the curves k62 to k64.

There are three combinations of two curves among the curves k62 to k64: (k62, k63), (k62, k64), and (k63, k64).

Fig. 47 shows whether the two curves differ in each of the three combinations (k62, k63), (k62, k64), and (k63, k64).

With reference to Fig. 47, the standard deviation $\sigma_{DF_k62,\ k63}$ of the differences between the multiple integral values (3 integral values) on the curve k62 and the multiple integral values (3 integral values) on the curve k63 is 19.05 (%), and the standard deviation $\sigma_{DF_k62,\ k64}$ of the differences between the multiple integral values (3 integral values) on the curve k62 and the multiple integral values (3 integral values) on the curve k64 is 71.82 (%), and the standard deviation $\sigma_{DF_k63,\ k64}$ of the differences between the multiple integral values (3 integral values) on the curve k63 and the multiple integral values (3 integral values) on the curve k64 is 86.34 (%).

As a result, the standard deviation of the differences $\sigma_{DF_k62,\ k63}$ (=19.05 (%)), the standard deviation of the differences $\sigma_{DF_k62,\ k64}$ (=71.82 (%)), and the standard deviation of the differences $\sigma_{DF_k63,\ k64}$ (=86.34 (%)) are all greater than the threshold value $\sigma_{th}$ (=15 (%)).

Therefore, the two curves k62 and k63 differ, the two curves k62 and k64 differ, and the two curves k63 and k64 differ (see the "o" in Fig. 47). Therefore, the curves k62 to k64 are curves that differ from each other.

Fig. 48 shows the integral value spectra for the red wine (Chile 2020), the red wine (Australia 2010), and the red wine (France 2013) when the number of integral values is 4.

With reference to Fig. 48, the curves k65 to k67 are each a curve CUR created by the analysis device 2 by the method described above. The curve k65 shows the integral value spectrum of the red wine (Chile 2020), the curve k66 shows the integral value spectrum of the red wine (Australia 2010), and the curve k67 shows the integral value spectrum of the red wine (France 2013).

The measurement conditions for the cyclic voltammogram, on which the calculation of the multiple integral values (4 integral values) for each of the curves k65 to k67 is based, are the same as those shown in Table 3, except that the prescribed potential range (i.e., integral value extraction potential) of 17.6 mV in Table 3 is changed to 1249.6 mV.

As a result, in Fig. 48, each of classes 1 to 4 consists of a prescribed potential range (i.e., integral value extraction potential) of 1249.6 mV.

Fig. 49 shows the result of judging whether the curves k65 to k67 shown in Fig. 48 differ from each other.

Whether the curves k65 to k67 differ from each other is judged by judging whether two of the curves k65 to k67 differ from each other for all combinations of two curves among the curves k65 to k67.

There are three combinations of two curves among curves k65 to k67: (k65, k66), (k65, k67), and (k66, k67).

Fig. 49 shows whether the two curves differ in each of the three combinations (k65, k66), (k65, k67), and (k66, k67).

With reference to Fig. 49, the standard deviation $\sigma_{DF_k65,\ k66}$ of the differences between the multiple integral values (4 integral values) on the curve k65 and the multiple integral values (4 integral values) on the curve k66 is 19.34 (%), the standard deviation $\sigma_{DF_k65,\ k67}$ of the differences between the multiple integral values (4 integral values) on the curve k65 and the multiple integral values (4 integral values) on the curve k67 is 80.96 (%), and the standard deviation $\sigma_{DF_k66,\ k67}$ of the differences between the multiple integral values (4 integral values) on the curve k66 and the multiple integral values (4 integral values) on the curve k67 is 91.77 (%).

As a result, the standard deviation of the differences $\sigma_{DF_k65,\ k66}$ (=19.34 (%)), the standard deviation of the differences $\sigma_{DF_k65,\ k67}$ (=80.96 (%)) and the standard deviation of the differences $\sigma_{DF_k66,\ k67}$ (=91.77 (%)), are all greater than the threshold value $\sigma_{th}$ (=15 (%)).

Therefore, the two curves k65 and k66 differ, the two curves k65 and k67 differ, and the two curves k66 and k67 differ (see the "◦" in Fig. 49). Therefore, the curves k65 to k67 are curves that differ from each other.

Fig. 50 shows the integral value spectra for the red wine (Chile 2020), the red wine (Australia 2010), and the red wine (France 2013) when the number of integral values is 6.

With reference to Fig. 50, the curves k68 to k70 are each a curve CUR created by the analysis device 2 by the method described above. The curve k68 represents the integral value spectrum of the red wine (Chile 2020), the curve k69 represents the integral value spectrum of the red wine (Australia 2010), and the curve k70 represents the integral value spectrum of the red wine (France 2013).

The measurement conditions for the cyclic voltammogram, on which the calculation of the multiple integral values (6 integral values) for each of the curves k68 to k70 is based, are the same as those shown in Table 3, except that the prescribed potential range (i.e., the integral value extraction potential) of 17.6 mV in Table 3 is changed to 827.2 mV.

As a result, in Fig. 50, classes 1 to 5 each consist of the prescribed potential range (i.e., integral value extraction potential) of 827.2 mV, and class 6 consists of 862.4 mV.

Fig. 51 shows the results of judging whether the curves k68 to k70 shown in Fig. 50 differ from each other.

Whether the curves k68 to k70 differ from each other is judged by judging whether two of the curves k68 to k70 differ from each other for all combinations of two curves from the curves k68 to k70.

There are three combinations of two curves among curves k68 to k70: (k68, k69), (k68, k70), and (k69, k70).

Fig. 51 shows whether the two curves differ in each of the three combinations (k68, k69), (k68, k70), and (k69, k70).

With reference to Fig. 51, the standard deviation $\sigma_{DF_k68,\ k69}$ of the differences between the multiple integral values (6 integral values) of the curve k68 and the multiple integral values (6 integral values) on the curve k69 is 27.33 (%), the standard deviation $\sigma_{DF_k68,\ k70}$ of the differences between the multiple integral values (6 integral values) on the curve k68 and the multiple integral values (6 integral values) on the curve k70 is 70.78 (%), and the standard deviation $\sigma_{DF_k69,\ k70}$ of the differences between the multiple integral values (6 integral values) on the curve k69 and the multiple integral values (6 integral values) on the curve k70 is 80.57 (%).

As a result, the standard deviation of the differences $\sigma_{DF_k68,\ k69}$ (=27.33 (%)), the standard deviation of the differences $\sigma_{DF_k68,\ k70}$ (=70.78 (%)) and the standard deviation of the differences $\sigma_{DF_k69,\ k70}$ (=80.57 (%)) are all greater than the threshold value $\sigma_{th}$ (=15 (%)).

Therefore, the two curves k68 and k69 differ, the two curves k68 and k70 differ, and the two curves k69 and k70 differ (see the "◦" in Fig. 51). Therefore, the curves k68 to k70 are curves that differ from each other.

Fig. 52 shows the integral value spectra for the red wine (Chile 2020), the red wine (Australia 2010), and the red wine (France 2013) when the number of integral values is 8.

With reference to Fig. 52, the curves k71 to k73 are each a curve CUR created by the analysis device 2 by the method described above. The curve k71 shows the integral value spectrum of the red wine (Chile 2020), the curve k72 shows the integral value spectrum of the red wine (Australia 2010), and the curve k73 shows the integral value spectrum of the red wine (France 2013).

The measurement conditions for the cyclic voltammogram, on which the calculation of the multiple integral values (8 integral values) for each of the curves k71 to k73 is based, are the same as those shown in Table 3, except that the prescribed potential range (i.e., integral value extraction potential) of 17.6 mV in Table 3 is changed to 616 mV.

As a result, in Fig. 52, classes 1 to 7 each consist of the prescribed potential range (i.e., integral value extraction potential) of 616 mV, and class 8 consists of 686.4 mV.

Fig. 53 shows the results of judging whether the curves k71 to k73 shown in Fig. 52 differ from each other.

Whether the curves k71 to k73 differ from each other is judged by judging whether two of the curves k71 to k73 differ from each other for all combinations of the two curves among the curves k71 to k73.

There are three combinations of two curves among curves k71 to k73: (k71, k72), (k71, k73), and (k72, k73).

Fig. 53 shows whether the two curves differ in each of the three combinations (k71, k72), (k71, k73), and (k72, k73).

With reference to Fig. 53, the standard deviation $\sigma_{DF_k71,\ k72}$ of the differences between the multiple integral values (8 integral values) on the curve k71 and the multiple integral values (8 integral values) on the curve k72 is 34.73 (%), the standard deviation $\sigma_{DF_k71,\ k73}$ of the differences between the multiple integral values (8 integral values) on the curve k71 and the multiple integral values (8 integral values) on the curve k73 is 67.65 (%), and the standard deviation $\sigma_{DF_k72,\ k73}$ of the differences between the multiple integral values (8 integral values) on the curve k72 and the multiple integral values (8 integral values) on the curve k73 is 77.44 (%).

As a result, the standard deviation of the differences $\sigma_{DF_k71,\ k72}$ (=34.73 (%)), the standard deviation of the differences $\sigma_{DF_k71,\ k73}$ (=67.65 (%)), and the standard deviation of the differences $\sigma_{DF_k72,\ k73}$ (=77.44 (%)) are all greater than the threshold value $\sigma_{th}$ (=15 (%)).

Therefore, the two curves k71 and k72 differ, the two curves k71 and k73 differ, and the two curves k72 and k73 differ (see the "∘" in Fig. 53). Therefore, the curves k71 to k73 differ from each other.

Fig. 54 shows the integral value spectra for the red wine (Chile 2020), the red wine (Australia 2010), and the red wine (France 2013) when the number of integral values is 10.

With reference to Fig. 54, the curves k74 to k76 are each a curve CUR created by the analysis device 2 by the method described above. The curve k74 shows the integral value spectrum of the red wine (Chile 2020), the curve k75 shows the integral value spectrum of the red wine (Australia 2010), and the curve k76 shows the integral value spectrum of the red wine (France 2013).

The measurement conditions for the cyclic voltammogram, on which the calculation of the multiple integral values (10 integral values) for each of curves k74 to k76 is based, are the same as those shown in Table 3, except that the prescribed potential range (i.e., the integral value extraction potential) of 17.6 mV in Table 3 is changed to 492.8 mV.

As a result, in Fig. 54, each of classes 1 to 9 consists of a prescribed potential range (i.e., integral value extraction potential) of 492.8 mV, and class 10 consists of 563.2 mV.

Fig. 55 shows the results of judging whether the curves k74 to k76 shown in Fig. 54 differ from each other.

Whether the curves k74 to k76 differ from each other is judged by judging whether two of the curves k74 to k76 differ from each other for all combinations of two curves among the curves k74 to k76.

There are three combinations of two curves among curves k74 to k76: (k74, k75), (k74, k76), and (k75, k76).

Fig. 55 shows whether the two curves differ in each of the three combinations (k74, k75), (k74, k76), and (k75, k76).

With reference to Fig. 55, the standard deviation $\sigma_{DF_k74,\ k75}$ of the differences between the multiple integral values (10 integral values) on the curve k74 and the multiple integral values (10 integral values) on the curve k75 is 45.00 (%), the standard deviation $\sigma_{DF_k74,\ k76}$, of the differences between the multiple integral values (10 integral values) on the curve k74 and the multiple integral values (10 integral values) on the curve k76 is 77.58 (%), and the standard deviation $\sigma_{DF_k75,\ k76}$ of the differences between the multiple integral values (10 integral values) on the curve k75 and the multiple integral values (10 integral values) on the curve k76 is 89.41 (%).

As a result, the standard deviation $\sigma_{DF_k74,\ k75}$ (=45.00 (%)) of the differences, the standard deviation $\sigma_{DF_k74,\ k76}$ (=77.58 (%)) of the differences, and the standard deviation of the differences $\sigma_{DF_k75,\ k76}$ (=89.41 (%)), are all greater than the threshold value $\sigma_{th}$ (=15 (%)).

Therefore, the two curves k74 and k75 differ, the two curves k74 and k76 differ, and the two curves k75 and k76 differ (see the "∘" in Fig. 55). Therefore, the curves k74 to k76 differ from each other.

Fig. 56 shows the integral value spectra for the red wine (Chile 2020), the red wine (Australia 2010), and the red wine (France 2013) when the number of integral values is 14.

With reference to Fig. 56, the curves k77 to k79 are each a curve CUR created by the analysis device 2 by the method described above. The curve k77 shows the integral value spectrum of the red wine (Chile 2020), the curve k78 shows the integral value spectrum of the red wine (Australia 2010), and the curve k79 shows the integral value spectrum of the red wine (France 2013).

The measurement conditions for the cyclic voltammogram, on which the calculation of the multiple integral values (14 integral values) for each of the curves k77 to k79 is based, are the same as those shown in Table 3, except that the prescribed potential range (i.e., integral value extraction potential) of 17.6 mV in Table 3 is changed to 352 mV.

As a result, in Fig. 56, each of classes 1 to 13 consists of a prescribed potential range (i.e., integral value extraction potential) of 352 mV, and class 14 consists of 422.4 mV.

Fig. 57 shows the results of judging whether the curves k77 to k79 shown in Fig. 56 differ from each other.

Whether the curves k77 to k79 differ from each other is judged by judging whether two of the curves k77 to k79 differ from each other for all combinations of two curves from the curves k77 to k79.

There are three combinations of two curves of the curves k77 to k79: (k77, k78), (k77, k79), and (k78, k79).

Fig. 57 shows whether the two curves differ in each of the three combinations (k77, k78), (k77, k79), and (k78, k79).

With reference to Fig. 57, the standard deviation $\sigma_{DF_k77,\ k78}$ of the differences between the multiple integral values (14 integral values) on the curve k77 and the multiple integral values (14 integral values) on the curve k78 is 61.41 (%), the standard deviation $\sigma_{DF_k77,\ k79}$ of the differences between the multiple integral values (14 integral values) on the curve k77 and the multiple integral values (14 integral values) on the curve k79 is 78.91 (%), and the standard deviation $\sigma_{DF_k78,\ k79}$ of the differences between the multiple integral values (14 integral values) on the curve k78 and the multiple integral values (14 integral values) on the curve k79 is 91.76 (%).

As a result, the standard deviation of the differences $\sigma_{DF_k77,\ k78}$ (=61.41 (%)), the standard deviation of the differences $\sigma_{DF_k77,\ k79}$ (=78.91 (%)), and the standard deviation of the differences $\sigma_{DF_k78,\ k79}$ (=91.76 (%)) are all greater than the threshold value $\sigma_{th}$ (=15 (%)).

Therefore, the two curves k77 and k78 differ, the two curves k77 and k79 differ, and the two curves k78 and k79 differ (see the "◦" in Fig. 57). Therefore, the curves k77 to k79 differ from each other.

Fig. 58 shows the integral value spectra for the red wine (Chile 2020), the red wine (Australia 2010), and the red wine (France 2013) when the number of integral values is 28.

With reference to Fig. 58, the curves k80 to k82 are each a curve CUR created by the analysis device 2 by the method described above. The curve k80 shows the integral value spectrum of the red wine (Chile 2020), the curve k81 shows the integral value spectrum of the red wine (Australia 2010), and the curve k82 shows the integral value spectrum of the red wine (France 2013).

The measurement conditions for the cyclic voltammogram, on which the calculation of the multiple integral values (28 integral values) for each of the curves k80 to k82 is based, are the same as those shown in Table 3, except that the prescribed potential range (i.e., the integral value extraction potential) of 17.6 mV in Table 3 is changed to 176 mV.

As a result, in Fig. 58, each of classes 1 to 27 consists of the prescribed potential range (i.e., integral value extraction potential) of 176 mV, and class 28 consists of 246.4 mV.

Fig. 59 shows the results of judging whether the curves k80 to k82 shown in Fig. 58 differ from each other.

Whether the curves k80 to k82 differ from each other is judged by judging whether two of the curves k80 to k82 differ from each other for all combinations of two curves from the curves k80 to k82.

There are three combinations of two curves among curves k80 to k82: (k80, k81), (k80, k82), and (k81, k82).

Fig. 59 shows whether the two curves differ in each of the three combinations (k80, k81), (k80, k82), and (k81, k82).

With reference to Fig. 59, the standard deviation $\sigma_{DF_k80,\ k81}$ of the differences between the multiple integral values (28 integral values) on the curve k80 and the multiple integral values (28 integral values) on the curve k81 is 58.15 (%), and the standard deviation $\sigma_{DF_k80,\ k82}$ of the differences between the multiple integral values (28 integral values) on the curve k80 and the multiple integral values (28 integral values) on the curve k82 is 71.16 (%), and the standard deviation $\sigma_{DF_k81,\ k82}$ of the differences between the multiple integral values (28 integral values) on the curve k81 and the multiple integral values (28 integral values) on the curve k82 is 89.81 (%).

As a result, the standard deviation of the differences $\sigma_{DF_k80,\ k81}$ (=58.15 (%)), the standard deviation of the differences $\sigma_{DF_k80,\ k82}$ (=71.16 (%)) and the standard deviation of the differences $\sigma_{DF_k81,\ k82}$ (=89.81 (%)) are all greater than the threshold value $\sigma_{th}$ (=15 (%)).

Therefore, the two curves k80 and k81 differ, the two curves k80 and k82 differ, and the two curves k81 and k82 differ (see the "◦" in Fig. 59). Therefore, the curves k80 to k82 are mutually different curves.

Fig. 60 shows the integral value spectra for the red wine (Chile 2020), the red wine (Australia 2010), and the red wine (France 2013) when the number of integral values is 57.

With reference to Fig. 60, the curves k83 to k85 are each a curve CUR created by the analysis device 2 by the method described above. The curve k83 shows the integral value spectrum of the red wine (Chile 2020), the curve k84 shows the integral value spectrum of the red wine (Australia 2010), and the curve k85 shows the integral value spectrum of the red wine (France 2013).

The measurement conditions for the cyclic voltammogram, on which the calculation of the multiple integral values (57 integral values) for each of the curves k83 to k85 is based, are the same as those shown in Table 3, except that the prescribed potential range (i.e., integral value extraction potential) of 17.6 mV in Table 3 is changed to 88 mV.

As a result, in Fig. 60, classes 1 to 56 each consist of a prescribed potential range of 88 mV (i.e., integral value extraction potential), and the class 57 consists of 70.4 mV.

Fig. 61 shows the results of judging whether the curves k83 to k85 shown in Fig. 60 differ from each other.

Whether the curves k83 to k85 differ from each other is judged by judging whether two of the curves k83 to k85 differ from each other for all combinations of two curves from the curves k83 to k85.

There are three combinations of two curves among curves k83 to k85: (k83, k84), (k83, k85), and (k84, k85).

Fig. 61 shows whether the two curves differ in each of the three combinations: (k83, k84), (k83, k85), and (k84, k85).

With reference to Fig. 61, the standard deviation $\sigma_{DF_k83,\ k84}$ of the differences between the multiple integral values (57 integral values) on the curve k83 and the multiple integral values (57 integral values) on the curve k84 is 67.36 (%), the standard deviation $\sigma_{DF_k83,\ k85}$ of the differences between the multiple integral values (57 integral values) on the curve k83 and the multiple integral values (57 integral values) on the curve k85 is 76.13 (%), and the standard deviation $\sigma_{DF_k84,\ k85}$ of the differences between the multiple integral values (57 integral values) on the curve k84 and the multiple integral values (57 integral values) on the curve k85 is 95.05 (%).

As a result, the standard deviation of the differences $\sigma_{DF_k83,\ k84}$ (=67.36 (%)), the standard deviation of the differences $\sigma_{DF_k83,\ k85}$ (=76.13 (%)), and the standard deviation of the differences $\sigma_{DF_k84,\ k85}$ (=95.05 (%)) are all greater than the threshold value $\sigma_{th}$ (=15 (%)).

Therefore, the two curves k83 and k84 differ, the two curves k83 and k85 differ, and the two curves k84 and k85 differ (see the "◦" in Fig. 61). Therefore, the curves k83 to k85 differ from each other.

Fig. 62 shows the integral value spectra for the red wine (Chile 2020), the red wine (Australia 2010), and the red wine (France 2013) when the number of integral values is 95.

With reference to Fig. 62, the curves k86 to k88 are each a curve CUR created by the analysis device 2 by the method described above. The curve k86 shows the integral value spectrum of the red wine (Chile 2020), the curve k87 shows the integral value spectrum of the red wine (Australia 2010), and the curve k88 shows the integral value spectrum of the red wine (France 2013).

The measurement conditions for the cyclic voltammogram, on which the calculation of the multiple integral values (95 integral values) for each of curves k86 to k88 is based, are the same as those shown in Table 3, except that the prescribed potential range (i.e., integral value extraction potential) is 52.8 mV instead of 17.6 mV in Table 3.

As a result, in Fig. 62, classes 1 to 94 each consist of a prescribed potential range of 52.8 mV (i.e., integral value extraction potential) and class 95 consists of 35.2 mV.

Fig. 63 is a diagram showing the results of judging whether the curves k86 to k88 shown in Fig. 62 differ from each other.

Whether the curves k86 to k88 differ from each other is judged by judging whether two of the curves k86 to k88 differ from each other for all combinations of two curves among the curves k86 to k88.

There are three combinations of two curves among the curves k86 to k88: (k86, k87), (k86, k88), and (k87, k88).

Fig. 63 shows whether the two curves differ in each of the three combinations (k86, k87), (k86, k88), and (k87, k88).

With reference to Fig. 63, the standard deviation $\sigma_{DF_k86,\ k87}$ of the differences between the multiple integral values (95 integral values) on the curve k86 and the multiple integral values (95 integral values) on the curve k87 is 65.84 (%), the standard deviation $\sigma_{DF_k86,\ k88}$ of the differences between the multiple integral values (95 integral values) on the curve k86 and the multiple integral values (95 integral values) on the curve k88 is 75.14 (%), and the standard deviation $\sigma_{DF_k87,\ k88}$ of the differences between the multiple integral values (95 integral values) on the curve k87 and the multiple integral values (95 integral values) on the curve k88 is 93.73 (%).

As a result, the standard deviation of the differences $\sigma_{DF_k86,\ k87}$ (=65.84 (%)), the standard deviation of the differences $\sigma_{DF_k86,\ k88}$ (=75.14 (%)), and the standard deviation of the differences $\sigma_{DF_k87,\ k88}$ (= 93.73 (%)) are all greater than the threshold value $\sigma_{th}$ (= 15 (%)).

Therefore, the two curves k86 and k87 differ, the two curves k86 and k88 differ, and the two curves k87 and k88 differ (see the "◦" in Fig. 63). Therefore, the curves k86 to k88 are curves that differ from each other.

Fig. 64 shows the integral value spectra for the red wine (Chile 2020), the red wine (Australia 2010), and the red wine (France 2013) when the number of integral values is 142.

With reference to Fig. 64, the curves k89 to k91 are each a curve CUR created by the analysis device 2 by the method described above. The curve k89 shows the integral value spectrum of the red wine (Chile 2020), the curve k90 shows the integral value spectrum of the red wine (Australia 2010), and the curve k91 shows the integral value spectrum of the red wine (France 2013).

The measurement conditions for the cyclic voltammogram, on which the calculation of the multiple integral values (142 integral values) for each of the curves k89 to k91 is based, are the same as those shown in Table 3, except that the prescribed potential range (i.e., integral value extraction potential) is 35.2 mV instead of 17.6 mV in Table 3.

As a result, in Fig. 64, classes 1 to 142 each consist of a prescribed potential range (i.e., integral value extraction potential) of 35.2 mV.

Fig. 65 shows the results of judging whether the curves k89 to k91 shown in Fig. 64 differ from each other.

Whether the curves k89 to k91 differ from each other is judged by judging whether two of the curves k89 to k91 differ from each other for all combinations of two curves from the curves k89 to k91.

There are three combinations of two curves among curves k89 to k91: (k89, k90), (k89, k91), and (k90, k91).

Fig. 65 shows whether the two curves differ for the three combinations: (k89, k90), (k89, k91), and (k90, k91).

With reference to Fig. 65, the standard deviation $\sigma_{DF_k89,\ k90}$ of the differences between the multiple integral values (142 integral values) on the curve k89 and the multiple integral values (142 integral values) on the curve k90 is 66.26 (%), the standard deviation $\sigma_{DF_k89,\ k91}$ of the differences between the multiple integral values (142 integral values) on the curve k89 and the multiple integral values (142 integral values) on the curve k91 is 75.30 (%), and the standard deviation $\sigma_{DF_k90,\ k91}$ of the differences between the multiple integral values (142 integral values) on the curve k90 and the multiple integral values (142 integral values) on the curve k91 is 93.45 (%).

As a result, the standard deviation $\sigma_{DF_k89,\ k90}$ (=66.26 (%)) of the differences, the standard deviation $\sigma_{DF_k89,\ k91}$ (=75.30 (%)) of the differences, and the standard deviation $\sigma_{DF_k90,\ k91}$ (=93.45 (%)) are all greater than the threshold value $\sigma_{th}$ (=15%).

Therefore, the two curves k89 and k90 differ, the two curves k89 and k91 differ, and the two curves k90 and k91 differ (see the "◦" in Fig. 65). Therefore, the curves k89 to k91 differ from each other.

Fig. 16 shows that the integral value spectra for the red wine (Chile 2020), the red wine (Australia 2010), and the red wine (France 2013) when the number of integral values (i.e., the number of classes) is 284, and Fig. 17 shows that the standard deviation $\sigma_{DF_k5,\ k6}$ (=65.70 (%)) of the differences, the standard deviation $\sigma_{DF_k5,\ k7}$ (=74.94 (%)) of the differences, and the standard deviation $\sigma_{DF_k6,\ k7}$ (=93.19 (%)) of the differences are all greater than the threshold value $\sigma_{th}$ (=15 (%)).

Therefore, it was found that when the number of integral values is 3, 4, 6, 8, 10, 14, 28, 57, 95, 142, and 284, the integral value spectra (i.e., the curves CUR) for uniquely identifying the red wine (Chile 2020), the red wine (Australia 2010), and the red wine (France 2013) can be obtained.

In other words, when the number of integral values is 3, the curve k62 represents the integral value spectrum for uniquely identifying the red wine (Chile 2020), the curve k63 represents the integral value spectrum for uniquely identifying the red wine (Australia 2010), and the curve k64 is an integral value spectrum for uniquely identifying the red wine (France 2013).

When the number of integral values is 4, the curve k65 represents the integral value spectrum for uniquely identifying the red wine (Chile 2020), the curve k66 represents the integral value spectrum for uniquely identifying the red wine (Australia 2010), and the curve k67 represents the integral value spectrum for uniquely identifying the red wine (France 2013).

Furthermore, when the number of integral values is 6, the curve k68 represents the integral value spectrum for uniquely identifying the red wine (Chile 2020), the curve k69 represents the integral value spectrum for uniquely identifying the red wine (Australia 2010), and the curve k70 represents the integral value spectrum for uniquely identifying the red wine (France 2013).

Furthermore, when the number of integral values is 8, the curve k71 represents the integral value spectrum for uniquely identifying the red wine (Chile 2020), the curve k72 represents the integral value spectrum for uniquely identifying the red wine (Australia 2010), and the curve k73 is the integral value spectrum for uniquely identifying the red wine (France 2013).

Furthermore, when the number of integral values is 10, the curve k74 represents the integral value spectrum for uniquely identifying the red wine (Chile 2020), the curve k75 represents the integral value spectrum for uniquely identifying the red wine (Australia 2010), and the curve k76 represents the integral value spectrum for uniquely identifying the red wine (France 2013).

Furthermore, when the number of integral values is 14, the curve k77 represents the integral value spectrum for uniquely identifying the red wine (Chile 2020), the curve k78 represents the integral value spectrum for uniquely identifying the red wine (Australia 2010), and the curve k79 represents the integral value spectrum for uniquely identifying the red wine (France 2013).

Furthermore, when the number of integral values is 28, the curve k80 represents the integral value spectrum for uniquely identifying the red wine (Chile 2020), the curve k81 represents the integral value spectrum for uniquely identifying the red wine (Australia 2010), and the curve k82 represents the integral value spectrum for uniquely identifying the red wine (France 2013).

Furthermore, when the number of integral values is 57, the curve k83 represents the integral value spectrum for uniquely identifying the red wine (Chile 2020), the curve k84 represents the integral value spectrum for uniquely identifying the red wine (Australia 2010), and the curve k85 represents the integral value spectrum for uniquely identifying red wine (France 2013).

Furthermore, when the number of integral values is 95, the curve k86 represents the integral value spectrum for uniquely identifying the red wine (Chile 2020), the curve k87 represents the integral value spectrum for uniquely identifying the red wine (Australia 2010), and the curve k88 represents the integral value spectrum for uniquely identifying the red wine (France 2013).

Furthermore, when the number of integral values is 142, the curve k89 represents the integral value spectrum for uniquely identifying the red wine (Chile 2020), the curve k90 represents the integral value spectrum for uniquely identifying the red wine (Australia 2010), and the curve k91 represents the integral value spectrum for uniquely identifying the red wine (France 2013).

Furthermore, when the number of integral values is 284, the curve k5 represents the integral value spectrum for uniquely identifying the red wine (Chile 2020), the curve k6 represents the integral value spectrum for uniquely identifying the red wine (Australia 2010), and the curve k7 represents the integral value spectrum for uniquely identifying the red wine (France 2013).

Then, the integral value spectrum (i.e., index curve) for uniquely identifying the red wine (Chile 2020) consists of the curve k62 when the number of integral values is 3, the curve k65 when the number of integral values is 4, the curve k68 when the number of integral values is 6, the curve k71 when the number of integral values is 8, the curve k74 when the number of integral values is 10, and the curve k77 when the number of integral values is 14, the curve k80 when the number of integral values is 28, the curve k83 when the number of integral values is 57, the curve k86 when the number of integral values is 95, the curve k89 when the number of integral values is 142, and the curve k5 when the number of integral values is 284.

The integral value spectrum (i.e., index curve) for uniquely identifying the red wine (Australia 2010) consists of the curve k63 when the number of integral values is 3, the curve k66 when the number of integral values is 4, the curve k69 when the number of integral values is 6, the curve k72 when the number of integral values is 8, the curve k75 when the number of integral values is 10, the curve k78 when the number of integral values is 14, the curve k81 when the number of integral values is 28, the curve k84 when the number of integral values is 57, the curve k87 when the number of integral values is 95, the curve k90 when the number of integral values is 142, and the curve k6 when the number of integral values is 284.

Furthermore, the integral value spectrum (i.e., index curve) for uniquely identifying the red wine (France 2013) consists of the curve k64 when the number of integral values is 3, the curve k67 when the number of integral values is 4, the curve k70 when the number of integral values is 6, the k73 when the number of integral values is 8, the curve k76 when the number of integral values is 10, the curve k79 when the number of integral values is 14, the curve k82 when the number of integral values is 28, the curve k85 when the number of integral values is 57, the curve k88 when the number of integral values is 95, the curve k91 when the number of integral values is 142, and the curve k7 when the number of integral values is 284.

Therefore, in general, the integral value spectrum (i.e., index curve) for uniquely identifying the red wine (Chile 2020) consists of multiple (i.e., 11) index curves (i.e., the curves k62, k65, k68, k71, k74, k77, k80, k83, k86, k89, and k5) with different numbers of integral values, the integral value spectrum (index curve) for uniquely identifying the red wine (Australia 2010) consists of multiple (i.e., 11) index curves (the curves k63, k66, k69, k72, k75, k78, k81, k84, k87, k90, and k6) with different numbers of integral values, and the integral value spectrum (i.e., index curve) for uniquely identifying the red wine (France 2013) consists of multiple (i.e., 11) index curves (i.e., the curves k64, k67, k70, k73, k76, k79, k82, k85, k88, k91, and k7) with different numbers of integral values.

It was found that the minimum number of integral values required to obtain an integral value spectrum for uniquely identifying each of the red wine (Chile 2020), the red wine (Australia 2010), and the red wine (France 2013) is 3.

(C) Red wine 2

Fig. 66 shows the integral value spectra for red wine (Italy 2015), red wine (France 2016), and red wine (Italy year unknown) when the number of integral values is 3.

With reference to Fig. 66, the curves k95 to k97 are each a curve CUR created by the analysis device 2 by the method described above. The curve k95 shows the integral value spectrum of the red wine (Italy 2015), the curve k96 shows the integral value spectrum of the red wine (France 2016), and the curve k97 shows the integral value spectrum of the red wine (Italy year unknown).

The measurement conditions for the cyclic voltammogram, on which the calculation of the multiple integral values (3 integral values) for each of the curves k95 to k97 is based, are the same as those shown in Table 4, except that the prescribed potential range (i.e., integral value extraction potential) is 1054 mV instead of 34 mV in Table 4.

As a result, in Fig. 66, classes 1 and 2 each consist of a prescribed potential range of 1054 mV (i.e., integral value extraction potential), and class 3 consists of a prescribed potential range of 1088 mV (i.e., integral value extraction potential).

Fig. 67 shows the results of judging whether the curves k95 to k97 shown in Fig. 66 differ from each other.

Whether the curves k95 to k97 differ from each other is judged by judging whether two of the curves k95 to k97 differ from each other for all combinations of two curves among the curves k95 to k97.

There are three combinations of two curves among the curves k95 to k97: (k95, k96), (k95, k97), and (k96, k97).

Fig. 67 shows whether the two curves differ in each of the three combinations: (k95, k96), (k95, k97), and (k96, k97).

With reference to Fig. 67, the standard deviation $\sigma_{DF_k95,\ k96}$ of the differences between the multiple integral values (3 integral values) on the curve k95 and the multiple integral values (3 integral values) on the curve k96 is 7.62 (%), the standard deviation $\sigma_{DF_k95,\,k97}$ of the differences between the multiple integral values (3 integral values) on the curve k95 and the multiple integral values (3 integral values) on the curve k97 is 16.68 (%), and the standard deviation $\sigma_{DF_k96,\,k97}$ of the differences between the multiple integral values (3 integral values) on the curve k96 and the multiple integral values (3 integral values) on the curve k97 is 10.33 (%).

As a result, the standard deviation of the differences $\sigma_{DF_k95,\,k97}$ (=16.68 (%)) is greater than the threshold value $\sigma_{th}$ (=15 (%)), while the standard deviation of the differences $\sigma_{DF_k95,\,k96}$ (=7.62 (%)), and the standard deviation of the differences $\sigma_{DF_k96,\,k97}$ (=10.33 (%)) are smaller than the threshold value $\sigma_{th}$ (=15 (%)).

Therefore, the two curves k95 and k97 differ, the two curves k95 and k96 do not differ, and the two curves k96 and k97 do not differ.

Therefore, the curves k95 to k97 are not curves that differ from each other.

Fig. 68 shows the integral value spectra for the red wine (Italy 2015), the red wine (France 2016), and the red wine (Italy year unknown) when the number of integral values is 4.

With reference to Fig. 68, the curves k98 to k100 are each a curve CUR created by the analysis device 2 by the method described above. The curve k98 represents the integral value spectrum of the red wine (Italy 2015), the curve k99 represents the integral value spectrum of the red wine (France 2016), and the curve k100 represents the integral value spectrum of the red wine (Italy year unknown).

The measurement conditions for the cyclic voltammogram, on which the calculation of the multiple integral values (4 integral values) for each of the curves k98 to k100 is based, are the same as those shown in Table 4, except that the prescribed potential range (i.e., integral value extraction potential) is 782 mV instead of 34 mV in Table 4.

As a result, in Fig. 68, classes 1 to 3 each consist of a prescribed potential range (i.e., integral value extraction potential) of 782 mV, and class 4 consists of a prescribed potential range (i.e., integral value extraction potential) of 850 mV.

Fig. 69 shows the results of judging whether the curves k98 to k100 shown in Fig. 68 differ from each other.

Whether the curves k98 to k100 differ from each other is judged by judging whether two of the curves k98 to k100 differ from each other for all combinations of two curves from the curves k98 to k100.

There are three combinations of two curves among the curves k98 to k100: (k98, k99), (k98, k100), and (k99, k100).

Fig. 69 shows whether the two curves differ in each of the three combinations: (k98, k99), (k98, k100), and (k99, k100).

With reference to Fig. 69, the standard deviation $\sigma_{DF_k98,\,k99}$ of the differences between the multiple integral values (4 integral values) on the curve k98 and the multiple integral values (4 integral values) on the curve k99 is 30.51 (%), the standard deviation $\sigma_{DF_k98,\,k100}$ of the differences between the multiple integral values (4 integral values) on the curve k98 and the multiple integral values (4 integral values) on the curve k100 is 35.29 (%), and the standard deviation $\sigma_{DF_k99,\,k100}$ of the differences between the multiple integral values (4 integral values) on the curve k99 and the multiple integral values (4 integral values) on the curve k100 is 9.36 (%).

As a result, the standard deviation of the differences $\sigma_{DF_k98,\,k99}$ (=30.51 (%)) and the standard deviation of the differences $\sigma_{DF_k98,\,k100}$ (=35.29 (%)) are both greater than the threshold value $\sigma_{th}$ (=15 (%)) and the standard deviation of the differences $\sigma_{DF_k99,\,k100}$ (=9.36 (%)) is smaller than the threshold value $\sigma_{th}$ (=15 (%)).

Therefore, the two curves k98 and k99 differ, the two curves k98 and k100 differ, and the two curves k99 and k100 do not differ.

Therefore, the curves k98 to k100 are not curves that differ from each other.

Fig. 70 shows the integral value spectra for the red wine (Italy 2015), the red wine (France 2016), and the red wine (Italy year unknown) when the number of integral values is 6.

With reference to Fig. 70, the curves k101 to k103 are each a curve CUR created by the analysis device 2 by the method described above. The curve k101 represents the integral value spectrum of the red wine (Italy 2015), the curve k102 represents the integral value spectrum of the red wine (France 2016), and the curve k103 represents the integral value spectrum of the red wine (Italy year unknown).

The measurement conditions for the cyclic voltammogram, on which the calculation of the multiple integral values (6 integral values) for each of the curves k101 to k103 is based are the same as those shown in Table 4, except that the prescribed potential range (i.e., integral value extraction potential) is 510 mV instead of 34 mV in Table 4.

As a result, in Fig. 70, classes 1 to 5 each consist of a prescribed potential range of 510 mV (i.e., integral value extraction potential), and class 6 consists of a prescribed potential range (i.e., integral value extraction potential) of 646 mV.

Fig. 71 shows the results of judging whether the curves k101 to k103 shown in Fig. 70 differ from each other.

Whether the curves k101 to k103 differ from each other is judged by judging whether two of the curves k101 to k103 differ from each other for all combinations of two curves among the curves k101 to k103.

There are three combinations of two curves among the curves k101 to k103: (k101, k102), (k101, k103), and (k102, k103).

Fig. 71 shows whether the two curves differ in each of the three combinations: (k101, k102), (k101, k103), and (k102, k103).

With reference to Fig. 71, the standard deviation $\sigma_{DF_k101,\ k102}$ of the differences between the multiple integral values (6 integral values) on the curve k101 and the multiple integral values (6 integral values) on the curve k102 is 16.42 (%), the standard deviation $\sigma_{DF_k101,\ k103}$ of the differences between the multiple integral values (6 integral values) on the curve k101 and the multiple integral values (6 integral values) on the curve k103 is 21.20 (%), and the standard deviation $\sigma_{DF_k102,\ k103}$ of the differences between the multiple integral values (6 integral values) on the curve k102 and the multiple integral values (6 integral values) on the curve k103 is 13.85 (%).

As a result, the standard deviation of the differences $\sigma_{DF_k101,\ k102}$ (=16.42 (%)) and the standard deviation of the differences $\sigma_{DF_k101,\ k103}$ (=21.20 (%)) are greater than the threshold value $\sigma_{th}$ (=15 (%)), and the standard deviation of the differences $\sigma_{DF_k102,\ k103}$ (=13.85 (%)) is smaller than the threshold value $\sigma_{th}$ (=15 (%)).

Therefore, the two curves k101 and k102 differ, the two curves k101 and k103 differ, and the two curves k102 and k103 do not differ.

Therefore, the curves k101 to k103 are not curves that differ from each other.

Fig. 72 shows the integral value spectra for the red wine (Italy 2015), the red wine (France 2016), and the red wine (Italy year unknown) when the number of integral values is 7.

With reference to Fig. 72, the curves k104 to k106 are each a curve CUR created by the analysis device 2 by the method described above. The curve k104 represents the integral value spectrum of the red wine (Italy 2015), the curve k105 represents the integral value spectrum of the red wine (France 2016), and the curve k106 represents the integral value spectrum of the red wine (Italy year unknown).

The measurement conditions for the cyclic voltammogram, on which the calculation of the multiple integral values (7 integral values) for each of the curves k104 to k106 is based, are the same as those shown in Table 4, except that the prescribed potential range (i.e., integral value extraction potential) is 476 mV instead of 34 mV in Table 4.

As a result, in Fig. 72, classes 1 to 6 each consist of the prescribed potential range (i.e., integral value extraction potential) of 476 mV, and class 7 consists of the prescribed potential range (i.e., integral value extraction potential) of 340 mV.

Fig. 73 shows the results of judging whether the curves k104 to k106 shown in Fig. 72 differ from each other.

Whether the curves k104 to k106 differ from each other is judged by judging whether two of the curves k104 to k106 differ from each other for all combinations of two curves among the curves k104 to k106.

There are three combinations of two curves among curves k104 to k106: (k104, k105), (k104, k106), and (k105, k106).

Fig. 73 shows whether the two curves differ in each of the three combinations: (k104, k105), (k104, k106), and (k105, k106).

With reference to Fig. 73, the standard deviation $\sigma_{DF_k104,\ k105}$ of the differences between the multiple integral values (7 integral values) on the curve k104 and the multiple integral values (7 integral values) on the curve k105 is 20.05 (%), the standard deviation $\sigma_{DF_k104,\ k106}$ of the differences between the multiple integral values (7 integral values) on the curve k104 and the multiple integral values (7 integral values) on the curve k106 is 23.59 (%), and the standard deviation $\sigma_{DF_k105,\ k106}$ of the differences between the multiple integral values (7 integral values) on the curve k105 and the multiple integral values (7 integral values) on the curve k106 is 15.11 (%).

As a result, the standard deviation of the differences $\sigma_{DF_k104,\ k105}$ (= 20.05 (%)), the standard deviation of the differences $\sigma_{DF_k104,\ k106}$ (= 23.59 (%)), and the standard deviation of the differences $\sigma_{DF_k105,\ k106}$ (= 15.11 (%)) are all greater than the threshold value $\sigma_{th}$ (= 15 (%)).

Therefore, the two curves k104 and k105 differ, the two curves k104 and k106 differ, and the two curves k105 and k106 differ (see the "◦" in Fig. 73). Therefore, the curves k104 to k106 are curves that differ from each other.

Fig. 74 shows the integral value spectra for the red wine (Italy 2015), the red wine (France 2016), and the red wine (Italy year unknown) when the number of integral values is 8.

With reference to Fig. 74, each of the curves k107 to k109 is a curve CUR created by the analysis device 2 by the method described above. The curve k107 represents the integral value spectrum of the red wine (Italy 2015), the curve k108 shows the integral value spectrum of the red wine (France 2016), and the curve k109 shows the integral value spectrum of the red wine (Italy year unknown).

The measurement conditions for the cyclic voltammogram, on which the calculation of the multiple integral values (8 integral values) for each of the curves k107 to k109 is based, are the same as those shown in Table 4, except that the prescribed potential range (i.e., integral value extraction potential) is 408 mV instead of 34 mV in Table 4.

As a result, in Fig. 74, classes 1 to 7 each consist of the prescribed potential range (i.e., integral value extraction potential) of 408 mV, and class 8 consists of the prescribed potential range (i.e., integral value extraction potential) of 340 mV.

Fig. 75 shows the results of judging whether the curves k107 to k109 shown in Fig. 74 differ from each other.

Whether the curves k107 to k109 differ from each other is judged by judging whether two of the curves k107 to k109 differ from each other for all combinations of two curves among the curves k107 to k109.

There are three combinations of two of the curves k107 to k109: (k107, k108), (k107, k109), and (k108, k109).

Fig. 75 shows whether the two curves differ in each of the three combinations: (k107, k108), (k107, k109), and (k108, k109).

With reference to Fig. 75, the standard deviation $\sigma_{DF_k107,\ k108}$ of the differences between the multiple integral values (8 integral values) on the curve k107 and the multiple integral values (8 integral values) on the curve k108 is 62.94 (%), the standard deviation $\sigma_{DF_k107,\ k109}$ of the differences between the multiple integral values (8 integral values) on the curve k107 and the multiple integral values (8 integral values) on the curve k109 is 67.43 (%), and the standard deviation $\sigma_{DF_k108,\ k109}$ of the differences between the multiple integral values (8 integral values) on the curve k108 and the multiple integral values (8 integral values) on the curve k109 is 38.08 (%).

As a result, the standard deviation of the differences $\sigma_{DF_k107,\ k108}$ (=62.94 (%)), the standard deviation of the differences $\sigma_{DF_k107,\ k109}$ (=67.43 (%)) and the standard deviation of the differences $\sigma_{DF_k108,\ k109}$ (=38.08 (%)) are all greater than the threshold value $\sigma_{th}$ (=15 (%)).

Therefore, the two curves k107 and k108 differ, the two curves k107 and k109 differ, and the two curves k108 and k109 differ (see the "◦" in Fig. 75). Therefore, the curves k107 to k109 are curves that differ from each other.

Fig. 76 shows the integral value spectra for the red wine (Italy 2015), the red wine (France 2016), and the red wine (Italy year unknown) when the number of integral values is 11.

With reference to Fig. 76, the curves k110 to k112 are each a curve CUR created by the analysis device 2 by the method described above. The curve k110 represents the integral value spectrum of the red wine (Italy 2015), the curve k111 represents the integral value spectrum of the red wine (France 2016), and the curve k112 represents the integral value spectrum of the red wine (Italy year unknown).

The measurement conditions for the cyclic voltammogram, on which the calculation of the multiple integral values (11 integral values) for each of the curves k110 to k112 is based, are the same as those shown in Table 4, except that the prescribed potential range (i.e., integral value extraction potential) is 306 mV instead of 34 mV in Table 4.

As a result, in Fig. 76, classes 1 to 10 each consist of a prescribed potential range (i.e., integral value extraction potential) of 306 mV, and the class 11 consists of a prescribed potential range (i.e., integral value extraction potential) of 136 mV.

Fig. 77 shows the results of judging whether the curves k110 to k112 shown in Fig. 76 differ from each other.

Whether the curves k110 to k112 differ from each other is judged by judging whether two curves among the curves k110 to k112 differ from each other for all combinations of two curves among the curves k110 to k112.

There are three combinations of two curves among the curves k110 to k112: (k110, k111), (k110, k112), and (k111, k112).

Fig. 77 shows whether the two curves differ in each of the three combinations: (k110, k111), (k110, k112), and (k111, k112).

With reference to Fig. 77, the standard deviation $\sigma_{DF_k110,\ k111}$ of the differences between the multiple integral values (11 integral values) on the curve k110 and the multiple integral values (11 integral values) on the curve k111 is 27.60 (%), the standard deviation $\sigma_{DF_k110,\ k112}$ of the differences between the multiple integral values (11 integral values) on the curve k110 and the multiple integral values (11 integral values) on the curve k112 is 30.63 (%), and the standard deviation $\sigma_{DF_k111,\ k112}$ of the differences between the multiple integral values (11 integral values) on the curve k111 and the multiple integral values (11 integral values) on the curve k112 is 16.41 (%).

As a result, the standard deviation of the differences $\sigma_{DF_k110,\ k111}$ (=27.60 (%)), the standard deviation of the differences $\sigma_{DF_k110,\ k112}$ (=30.63 (%)) and the standard deviation of the differences $\sigma_{DF_k111,\ k112}$ (= 16.41 (%)) are all greater than the threshold value $\sigma_{th}$ (= 15 (%)).

Therefore, the two curves k110 and k111 differ, the two curves k110 and k112 differ, and the two curves k111 and k112 differ (see the "◦" in Fig. 77). Therefore, the curves k110 to k112 are curves that differ from each other.

Fig. 78 shows the integral value spectra for the red wine (Italy 2015), the red wine (France 2016), and the red wine (Italy year unknown) when the number of integral values is 16.

With reference to Fig. 78, the curves k113 to k115 are each a curve CUR created by the analysis device 2 by the method described above. The curve k113 represents the integral value spectrum of the red wine (Italy 2015), the curve k114 represents the integral value spectrum of the red wine (France 2016), and the curve k115 represents the integral value spectrum of the red wine (Italy year unknown).

The measurement conditions for the cyclic voltammogram, on which the calculation of the multiple integral values (16 integral values) for each of the curves k113 to k115 is based, are the same as those shown in Table 4, except that the prescribed potential range (i.e., integral value extraction potential) is 204 mV instead of 34 mV in Table 4.

As a result, in Fig. 78, classes 1 to 15 each consist of a prescribed potential range (i.e., integral value extraction potential) of 204 mV, and class 16 consists of a prescribed potential range (i.e., integral value extraction potential) of 272 mV.

Fig. 79 shows the results of judging whether the curves k113 to k115 shown in Fig. 78 differ from each other.

Whether the curves k113 to k115 differ from each other is judged by judging whether two of the curves k113 to k115 differ from each other for all combinations of two curves among the curves k113 to k115.

There are three combinations of two curves among curves k113 to k115: (k113, k114), (k113, k115), and (k114, k115).

Fig. 79 shows whether the two curves differ in each of the three combinations: (k113, k114), (k113, k115), and (k114, k115).

With reference to Fig. 79, the standard deviation $\sigma_{DF_k113,\ k114}$ of the differences between the multiple integral values (16 integral values) on the curve k113 and the multiple integral values (16 integral values) on the curve k114 is 25.16 (%), the standard deviation $\sigma_{DF_k113,k115}$ of the differences between the multiple integral values (16 integral values) on the curve k113 and the multiple integral values (16 integral values) on the curve k115 is 29.10 (%), and the standard deviation $\sigma_{DF_k114,k115}$ of the differences between the multiple integral values (16 integral values) on the curve k114 and the multiple integral values (16 integral values) on the curve k115 is 16.01 (%).

As a result, the standard deviation of the differences $\sigma_{DF_k113,\ k114}$ (=25.16 (%)), the standard deviation of the differences $\sigma_{DF_k113,\ k115}$ (=29.10 (%)) and the standard deviation of the differences $\sigma_{DF_k114,\ k115}$ (=16.01 (%)) are all greater than the threshold value $\sigma_{th}$ (=15 (%)).

Therefore, the two curves k113 and k114 differ, the two curves k113 and k115 differ, and the two curves k114 and k115 differ (see the "◦" in Fig. 79). Therefore, the curves k113 to k115 are curves that differ from each other.

Fig. 80 shows the integral value spectra for the red wine (Italy 2015), the red wine (France 2016), and the red wine (Italy year unknown) when the number of integral values is 19.

With reference to Fig. 80, the curves k116 to k118 are each a curve CUR created by the analysis device 2 by the method described above. The curve k116 represents the integral value spectrum of the red wine (Italy 2015), the curve k117 represents the integral value spectrum of the red wine (France 2016), and the curve k118 represents the integral value spectrum of the red wine (Italy year unknown).

The measurement conditions for the cyclic voltammogram, on which the calculation of the multiple integral values (19 integral values) for each of the curves k116 to k118 is based, are the same as those shown in Table 4, except that the prescribed potential range (i.e., integral value extraction potential) is 170 mV instead of 34 mV in Table 4.

As a result, in Fig. 80, classes 1 to 18 each consist of a prescribed potential range of 170 mV (i.e., integral value extraction potential), and class 19 consists of a prescribed potential range of 136 mV (i.e., integral value extraction potential).

Fig. 81 shows the results of judging whether the curves k116 to k118 shown in Fig. 80 differ from each other.

Whether the curves k116 to k118 differ from each other is judged by judging whether two of the curves k116 to k118 differ from each other for all combinations of two curves among the curves k116 to k118.

There are three combinations of two curves among curves k116 to k118: (k116, k117), (k116, k118), and (k117, k118).

Fig. 81 shows whether the two curves differ in each of the three combinations: (k116, k117), (k116, k118), and (k117, k118).

With reference to Fig. 81, the standard deviation $\sigma_{DF_k116,\ k117}$ of the differences between the multiple integral values (19 integral values) on the curve k116 and the multiple integral values (19 integral values) on the curve k117 is 28.90 (%), the standard deviation $\sigma_{DF_k116,k118}$ of the differences between the multiple integral values (19 integral values) on the curve k116 and the multiple integral values (19 integral values) on the curve k118 is 33.05 (%), and the standard deviation $\sigma_{DF_k117,k118}$ of the differences between the multiple integral values (19 integral values) on the curve k117 and the multiple integral values (19 integral values) on the curve k118 is 17.31 (%).

As a result, the standard deviation of the differences $\sigma_{DF_k116,\ k117}$ (=28.90 (%)), the standard deviation of the differences $\sigma_{DF_k116,\ k118}$ (=33.05 (%)) and the standard deviation of the differences $\sigma_{DF_k117,\ k118}$ (=17.31 (%)) are all greater than the threshold value $\sigma_{th}$ (=15 (%)).

Therefore, the two curves k116 and k117 differ, the two curves k116 and k118 differ, and the two curves k117 and k118 differ (see the "◦" in Fig. 81). Therefore, the curves k116 to k118 are curves that differ from each other.

Fig. 82 shows the integral value spectra for the red wine (Italy 2015), the red wine (France 2016), and the red wine (Italy year unknown) when the number of integral values is 47.

With reference to Fig. 82, the curves k119 to k121 are each a curve CUR created by the analysis device 2 by the method described above. The curve k119 represents the integral value spectrum of the red wine (Italy 2015), the curve k120 represents the integral value spectrum of the red wine (France 2016), and the curve k121 represents the integral value spectrum of the red wine (Italy year unknown).

The measurement conditions for the cyclic voltammogram, on which the calculation of the multiple integral values (47 integral values) for each of the curves k119 to k121 is based, are the same as those shown in Table 4, except that the prescribed potential range (i.e., integral value extraction potential) is 68 mV instead of 34 mV in Table 4.

As a result, in Fig. 82, classes 1 to 47 each consist of a prescribed potential range (i.e., integral value extraction potential) of 68 mV.

Fig. 83 shows the results of judging whether the curves k119 to k121 shown in Fig. 82 differ from each other.

Whether the curves k119 to k121 differ from each other is judged by judging whether two of the curves k119 to k121 differ from each other for all combinations of two curves among the curves k119 to k121.

There are three combinations of two curves among curves k119 to k121: (k119, k120), (k119, k121), and (k120, k121).

Fig. 83 shows whether the two curves differ in each of the three combinations (k119, k120), (k119, k121), and (k120, k121).

With reference to Fig. 83, the standard deviation $\sigma_{DF_k119, k120}$ of the differences between the multiple integral values (47 integral values) on the curve k119 and the multiple integral values (47 integral values) on the curve k120 is 37.61 (%), the standard deviation $\sigma_{DF_k119, k121}$ of the differences between the multiple integral values on the curve k119 (47 integral values) and the multiple integral values on the curve k121 (47 integral values) is 39.71 (%), and the standard deviation $\sigma_{DF_k120, k121}$ of the differences between the multiple integral values (47 integral values) on the curve k129 and the multiple integral values (47 integral values) on the curve k121 is 17.49 (%).

As a result, the standard deviation of the differences $\sigma_{DF_k119, k120}$ (=37.61 (%)), the standard deviation $\sigma_{DF_k119, k121}$ of the differences (=39.71 (%)) and the standard deviation $\sigma_{DF_k120, k121}$ of the differences (=17.49 (%)) are all greater than the threshold value $\sigma_{th}$ (=15 (%)).

Therefore, the two curves k119 and k120 differ, the two curves k119 and k121 differ, and the two curves k120 and k121 differ (see the "◦" in Fig. 83). Therefore, the curves k119 to k121 are curves that differ from each other.

Fig. 18 shows the integral value spectra for the red wine (Italy 2015), the red wine (France 2016), and the red wine (Italy year unknown) when the number of integral values (i.e., the number of classes) is 94, and Fig. 19 shows that the standard deviation of the differences $\sigma_{DF_k8, k9}$ (=57.13 (%)), the standard deviation of the differences $\sigma_{DF_k8, k10}$ (=40.56 (%)), and the standard deviation of the differences $\sigma_{DF_k9, k10}$ (=17.85 (%)) are all greater than the threshold value $\sigma_{th}$ (=15 (%)).

Therefore, it was found that when the number of integral values is 7, 8, 11, 16, 19, 47, and 94, it is possible to obtain integral value spectra (= curves CUR) that can be used to uniquely identify the red wine (Italy 2015), the red wine (France 2016), and the red wine (Italy year unknown), respectively.

In other words, when the number of integral values is 7, the curve k104 represents the integral value spectrum for uniquely identifying the red wine (Italy 2015), the curve k105 represents the integral value spectrum for uniquely identifying the red wine (France 2016), and the curve k106 represents the integral value spectrum for uniquely identifying the red wine (Italy year unknown).

When the number of integral values is 8, the curve k107 represents the integral value spectrum for uniquely identifying the red wine (Italy 2015), and the curve k108 represents the integral value spectrum for uniquely identifying the red wine (France 2016), and the curve k109 represents the integral value spectrum for uniquely identifying the red wine (Italy unknown).

When the number of integral values is 11, the curve k110 represents the integral value spectrum for uniquely identifying the red wine (Italy 2015), the curve k111 represents the integral value spectrum for uniquely identifying the red wine (France 2016), and the curve k112 represents the integral value spectrum for uniquely identifying the red wine (Italy year unknown).

Furthermore, when the number of integral values is 16, the curve k113 represents the integral value spectrum for uniquely identifying the red wine (Italy 2015), the curve k114 represents the integral value spectrum for uniquely identifying the red wine (France 2016), and the curve k115 represents the integral value spectrum for uniquely identifying the red wine (Italy year unknown).

Furthermore, when the number of integral values is 19, the curve k116 represents the integral value spectrum for uniquely identifying the red wine (Italy 2015), the curve k117 represents the integral value spectrum for uniquely identifying the red wine (France 2016), and the curve k118 represents the integral value spectrum for uniquely identifying the red wine (Italy year unknown).

Furthermore, when the number of integral values is 47, the curve k119 represents the integral value spectrum for uniquely identifying red wine (Italy 2015), and the curve k120 is an integral value spectrum for uniquely identifying red wine (France 2016), and the curve k121 represents the integral value spectrum for uniquely identifying the red wine (Italy year unknown).

Furthermore, when the number of integral values is 94, the curve k8 represents the integral value spectrum for uniquely identifying the red wine (Italy 2015), the curve k9 represents the integral value spectrum for uniquely identifying the red wine (France 2016), and the curve k10 represents the integral value spectrum for uniquely identifying the red wine (Italy, unknown vintage).

Then, the integral value spectrum (i.e., index curve) for uniquely identifying the red wine (Italy 2015) is represented by the curve k104 when the number of integral values is 7, the curve k107 when the number of integral values is 8, the curve k110 when the number of integral values is 11, the curve k113 when the number of integral values is 16, the curve k116 when the number of integral values is 19, the curve k119 when the number of integral values is 47, and the curve k8 when the number of integral values is 94.

The integral value spectrum (i.e., index curve) for uniquely identifying the red wine (France 2016) is represented by the curve k105 when the number of integral values is 7, the curve k108 when the number of integral values is 8, the curve k111 when the number of integral values is 11, the curve k114 when the number of integral values is 16, the curve k117 when the number of integral values is 19, the curve k120 when the number of integral values is 47, and the curve k9 when the number of integral values is 94.

Furthermore, the integral value spectrum (i.e., index curve) for uniquely identifying the red wine (Italy year unknown) is represented by the curve k106 when the number of integral values is 7, the curve k109 when the number of integral values is 8, the curve k112 when the number of integral values is 11, the curve k115 when the number of integral values is 16, the curve k118 when the number of integral values is 19, and the curve k121 when the number of integral values is 47, and the curve k10 when the number of integral values is 94.

Therefore, in general, the integral value spectrum (i.e., index curve) for uniquely identifying the red wine (Italy 2015) is represented by multiple (i.e., 7) index curves (i.e., the curves k104, k107, k110, k113, k116, k119, and k8) with different numbers of integral values, the integral value spectrum (i.e., index curve) for uniquely identifying the red wine (France 2016) is represented by multiple (i.e., 7) index curves (i.e., the curves k105, k108, k111, k114, k117, k120, and k9) with different numbers of integral values, and the integral value spectrum (i.e., index curve) for uniquely identifying the red wine (Italy year unknown) is represented by multiple (i.e., 7) index curves (i.e., the curves k106, k109, k112, k115, k118, k121, and k10) with different numbers of integral values.

It was found that the minimum number of integral values required to obtain integral value spectra that can uniquely identify the red wines (Italy 2015), the red wines (France 2016), and the red wines (Italy year unknown) is 7.

When the number of integral values is 3, the standard deviation $\sigma_{k95,\ k97}$ of the differences between the three integral values on the curve k95, which indicates the red wine (Italy 2015), and the three integral values on the curve k97, which indicates the red wine (Italy year unknown), is 16.68 (%) (see Fig. 67), which is greater than the threshold value $\sigma_{th}$ (= 15 (%)). When the number of integral values is 4, the standard deviation $\sigma_{k98,\ k100}$ of the differences between the four integral values on the curve k98, which indicates the red wine (Italy 2015), and the four integral values on the curve k100, which indicates the red wine (Italy year unknown), is 35.29 (%) (see Fig. 69), which is greater than the threshold value $\sigma_{th}$ (= 15 (%)). When the number of integral values is 6, the standard deviation $\sigma_{k101,\ k103}$ of the differences between the six integral values on the curve k101, which indicates the red wine (Italy 2015), and the six integral values on the curve k103, which indicates the red wine (Italy year unknown), is 21.20 (%) (see Fig. 71), which is greater than the threshold value $\sigma_{th}$ (= 15 (%)).

When the number of integral values is 7, the standard deviation $\sigma_{k104,\ k106}$ of the differences between the 7 integral values on the curve k104, which indicates the red wine (Italy 2015), and the 7 integral values on the curve k106, which indicates the red wine (Italy year unknown), is 23.59 (%) (see Fig. 73), which is greater than the threshold value $\sigma_{th}$ (= 15 (%)), and when the number of integral values is 8, the standard deviation $\sigma_{k107,k109}$ of the differences between the eight integral values on the curve k107, which shows the red wine (Italy 2015), and the eight integral values on the curve k109, which shows the red wine (year unknown in Italy), is 67.43 (%), which is greater than the threshold value $\sigma_{th}$ (= 15 (%)) (see Fig. 75). When the number of integral values is 11, the standard deviation $\sigma_{k110,\ k112}$ of the differences between the 11 integral values on the curve k110, which indicates the red wine (Italy 2015), and the 11 integral values on the curve k112, which indicates the red wine (Italy year unknown) is 30.63 (%) (see Fig. 77), which is greater than the threshold value $\sigma_{th}$ (= 15 (%)), and when the number of integral values is 16, the standard deviation $\sigma_{k113,\ k115}$ of the differences between the 16 integral values on the curve k113, which indicates the red wine (Italy 2015), and the 16 integral values on the curve k115, which indicates the red wine (Italy unknown year), is 29.10 (%) (see Fig. 79), which is greater than the threshold value $\sigma_{th}$ (= 15 (%)).

Furthermore, when the number of integral values is 19, the standard deviation $\sigma_{k116,\ k118}$ of the differences between the 19 integral values on the curve k116, which indicates the red wine (Italy 2015), and the 19 integral values on the curve k118, which indicates the red wine (Italy year unknown), is 33.05 (%) (see Fig. 81), which is greater than the threshold value $\sigma_{th}$ (= 15 (%)). When the number of integral values is 47, the standard deviation $\sigma_{k119,k121}$ of the differences between the 47 integral values on the curve k119, which indicates the red wine (Italy 2015), and the 47 integral values on the curve k121, which indicates the red wine (Italy year unknown), is 39.71 (%) (see Fig. 83), which is greater than the threshold value $\sigma_{th}$ (= 15 (%)). When the number of integral values is 94, the standard deviation $\sigma_{k8,\ k10}$ of the differences between the 94 integral values on the curve k8, which indicates the red wine (Italy 2015), and the 94 integral values on the curve k10, which indicates the red wine (Italy year unknown), is 40.56 (%) (see Fig. 19), which is greater than the threshold value $\sigma_{th}$ (= 15 (%)).

As a result, the standard deviation of the differences between the multiple integral values on the curve which represents the red wine (Italy 2015) and the multiple integral values on the curve which represents the red wine (Italy year unknown) is greater than the threshold value $\sigma_{th}$ (= 15 (%)) for all cases where the number of integral values is 3, 4, 6, 7, 8, 11, 16, 19, 47, and 94.

Therefore, the above-described curves k95, k98, k101, k104, k107, k110, k113, k116, k119, and k8 represent integral value spectra for uniquely identifying the red wine (Italy 2015), and the above-described curves k97, k100, k103, k106, k109, k112, k115, k118, k121, and k10 represents integral value spectra for uniquely identifying the red wine (Italy year unknown).

It was found that the minimum number of integral values for the integral value spectrum for uniquely identifying the red wine (Italy 2015) and the minimum number of integral values for the integral value spectrum for uniquely identifying the red wine (Italy year unknown) are both 3.

(D) Coffee

Fig. 84 shows the integral value spectra for WONDA, CRAFT BOSS, and GOLD BREW when the number of integral values is 3.

With reference to Fig. 84, each of the curves k125 to k127 is a curve CUR created by the analysis device 2 by the method described above. The curve k125 represents the integral value spectrum for coffee (WONDA), the curve k126 represents the integral value spectrum for coffee (CRAFT BOSS), and the curve k127 represents the integral value spectrum for coffee (GOLD BREW).

The measurement conditions for the cyclic voltammogram, on which the calculation of the multiple integral values (3 integral values) for each of curves k125 to k127 is based, are the same as those shown in Table 5, except that the prescribed potential range (i.e., integral value extraction potential) is 1656 mV instead of 18.4 mV in Table 5.

As a result, in Fig. 84, class 1 and 2 each consist of a prescribed potential range (i.e., integral value extraction potential) of 1656 mV, and class 3 consists of a prescribed potential range of 1674.4 mV (i.e., integral value extraction potential).

Fig. 85 shows the results of judging whether the curves k125 to k127 shown in Fig. 84 differ from each other.

Whether the curves k125 to k127 differ from each other is judged by judging whether two of the curves k125 to k127 differ from each other for all combinations of two curves among the curves k125 to k127.

There are three combinations of two curves among curves k125 to k127: (k125, k126), (k125, k127), and (k126, k127).

Fig. 85 shows whether the two curves differ in each of the three combinations (k125, k126), (k125, k127), and (k126, k127).

With reference to Fig. 85, the standard deviation $\sigma_{DF_k125,\ k126}$ of the differences between the multiple integral values (3 integral values) on the curve k125 and the multiple integral values (3 integral values) on the curve k126 is 10.36 (%), and the standard deviation $\sigma_{DF_k125,k127}$ of the differences between the multiple integral values (3 integral values) on the curve k125 and the multiple integral values (3 integral values) on the curve k127 is 21.07 (%), and the standard deviation $\sigma_{DF_k126,k127}$ of the differences between the multiple integral values (3 integral values) on the curve k126 and the multiple integral values (3 integral values) on the curve k127 is 10.73 (%).

As a result, the standard deviation of the differences $\sigma_{DF_k125,\ k126}$ (= 10.36 (%)) is smaller than the threshold value $\sigma_{th}$ (= 15 (%)), and the standard deviation of the differences $\sigma_{DF_k126,\ k127}$ (= 10.73 (%)) is smaller than threshold value $\sigma_{th}$ (= 15 (%)), and the standard deviation of the differences $\sigma_{DF_k125,k127}$ (= 21.07 (%),) is greater than the threshold value $\sigma_{th}$ (= 15 (%)).

Therefore, the two curves k125 and k127 differ, the two curves k125 and k126 do not differ, and the two curves k126 and k127 do not differ. Therefore, when the number of integral values is three, the curves k125 to k127 are not curves that differ from each other.

Fig. 86 shows the integral value spectra for WONDA, CRAFT BOSS, and GOLD BREW when the number of integral values is 4.

With reference to Fig. 86, each of the curves k128 to k130 is a curve CUR created by the analysis device 2 by the method described above. The curve k128 represents the integral value spectrum for coffee (WONDA), the curve k129 represents the integral value spectrum for coffee (CRAFT BOSS), and the curve k130 represents the integral value spectrum for coffee (GOLD BREW).

The measurement conditions for the cyclic voltammogram, on which the calculation of the multiple integral values (4 integral values) for each of the curves k128 to k130 is based, are the same as those shown in Table 5, except that the prescribed potential range (i.e., integral value extraction potential) is 1251.2 mV instead of 18.4 mV in Table 5.

As a result, in Fig. 86, classes 1 to 3 each consist of a prescribed potential range (i.e., integral value extraction potential) of 1251.2 mV, and class 4 consists of a prescribed potential range (i.e., integral value extraction potential) of 1232.8 mV.

Fig. 87 shows the results of judging whether the curves k128 to k130 shown in Fig. 86 differ from each other.

Whether the curves k128 to k130 differ from each other is judged by judging whether two of the curves k128 to k130 differ from each other for all combinations of two curves among the curves k128 to k130.

There are three combinations of two curves among the curves k128 to k130: (k128, k129), (k128, k130), and (k129, k130).

Fig. 87 shows whether two curves differ in each of the three combinations (k128, k129), (k128, k130), and (k129, k130).

With reference to Fig. 87, the standard deviation $\sigma_{DF_k128,\ k129}$ of the differences between the multiple integral values (4 integral values) on the curve k128 and the multiple integral values (4 integral values) on the curve k129 is 11.64 (%), and the standard deviation $\sigma_{DF_k128,\ k130}$ of the differences between the multiple integral values (4 integral values) on the curve k128 and the multiple integral values (4 integral values) on the curve k130 is 39.98 (%), and the standard deviation$\sigma_{DF_k129,\ k130}$ of the differences between the multiple integral values (= four integral values) on the curve k129 and the multiple integral values (4 integral values) on the curve k130 is 24.26 (%).

As a result, the standard deviation of the differences $\sigma_{DF_k128,\ k129}$ (= 11.64 (%)) is smaller than the threshold value $\sigma_{th}$ (= 15 (%)), and the standard deviation of the differences $\sigma_{DF_k128,\ k130}$ (= 39.98 (%)) is greater than the threshold value $\sigma_{th}$ (= 15 (%)), and the standard deviation of the differences $\sigma_{DF_k129,\ k130}$ (= 24.26 (%),) is greater than the threshold value $\sigma_{th}$ (= 15 (%)).

Therefore, the two curves k128 and k130 differ, the two curves k129 and k130 differ, and the two curves k128 and k129 do not differ. Therefore, when the number of integral values is four, all of the curves k128 to k130 are not curves that differ from each other.

Fig. 88 shows the integral value spectra for WONDA, CRAFT BOSS, and GOLD BREW when the number of integral values is 5.

With reference to Fig. 88, each of the curves k131 to k133 is a curve CUR created by the analysis device 2 by the method described above. The curve k131 represents the integral value spectrum of the coffee (WONDA), the curve k132 represents the integral value spectrum of the coffee (CRAFT BOSS), and the curve k133 represents the integral value spectrum of the coffee (GOLD BREW).

The measurement conditions for the cyclic voltammogram, on which the calculation of the multiple integral values (5 integral values) for each of the curves k131 to k133 is based, are the same as those shown in Table 5, except that the prescribed potential range (i.e., integral value extraction potential) is 993.6 mV instead of 18.4 mV in Table 5.

As a result, in Fig. 88, classes 1 to 4 each consist of a prescribed potential range (i.e., integral value extraction potential) of 993.6 mV, and class 5 consists of a prescribed potential range (i.e., integral value extraction potential) of 1012 mV.

Fig. 89 shows the results of judging whether the curves k131 to k133 shown in Fig. 88 differ from each other.

Whether the curves k131 to k133 differ from each other is judged by judging whether two of the curves k131 to k133 differ from each other for all combinations of two curves among the curves k131 to k133.

There are three combinations of two curves among the curves k131 to k133: (k131, k132), (k131, k133), and (k132, k133).

Fig. 89 shows whether the two curves differ in each of the three combinations (k131, k132), (k131, k133), and (k132, k133).

With reference to Fig. 89, the standard deviation $\sigma_{DF_k131,\ k132}$ of the differences between the multiple integral values (5 integral values) on the curve k131 and the multiple integral values (5 integral values) on the curve k132 is 13.44 (%), the standard deviation $\sigma_{DF_k131,\ k133}$ of the differences between the multiple integral values (5 integral values) on the curve k131 and the multiple integral values (5 integral values) on the curve k133 is 30.78 (%), and the standard deviation $\sigma_{DF_k132,\ k133}$ of the differences between the multiple integral values (5 integral values) on the curve k132 and the multiple integral values (5 integral values) on the curve k133 is 19.88 (%).

As a result, the standard deviation of the differences $\sigma_{DF_k131,\ k132}$ (= 13.44 (%)) is smaller than the threshold value $\sigma_{th}$ (= 15 (%)), the standard deviation of the differences $\sigma_{DF_k131,\ k133}$ (= 30.78 (%)), is greater than the threshold value $\sigma_{th}$ (= 15 (%)), and the standard deviation of the differences $\sigma_{DF_k132,\ k133}$(= 19.88 (%)) is greater than the threshold value $\sigma_{th}$ (= 15 (%)).

Therefore, the two curves k131 and k133 differ, the two curves k132 and k133 differ, and the two curves k131 and k132 do not differ. Therefore, when the number of integral values is 5, the curves k131 to k133 are not curves that differ from each other.

Fig. 90 shows the integral value spectra for WONDA, CRAFT BOSS, and GOLD BREW when the number of integral values is 6.

With reference to Fig. 90, each of the curves k134 to k136 is a curve CUR created by the analysis device 2 by the method described above. The curve k134 represents the integral value spectrum of the coffee (WONDA), the curve k135 represents the integral value spectrum of the coffee (CRAFT BOSS), and the curve k136 represents the integral value spectrum of the coffee (GOLD BREW).

The measurement conditions for the cyclic voltammogram, on which the calculation of the multiple integral values (6 integral values) for each of the curves k134 to k136 is based, are the same as those shown in Table 5, except that the prescribed potential range (i.e., integral value extraction potential) is 828 mV instead of 18.4 mV in Table 5.

As a result, in Fig. 90, classes 1 to 5 each consist of a prescribed potential range (i.e., integral value extraction potential) of 828 mV, and class 6 consists of a prescribed potential range (i.e., integral value extraction potential) of 846.4 mV.

Fig. 91 shows the results of judging whether the curves k134 to k136 shown in Fig. 90 differ from each other.

Whether the curves k134 to k136 differ from each other is judged by judging whether two of the curves k134 to k136 differ from each other for all combinations of two curves among the curves k134 to k136.

There are three combinations of two curves among curves k134 to k136: (k134, k135), (k134, k136), and (k135, k136).

Fig. 91 shows whether the two curves differ in each of the three combinations of (k134, k135), (k134, k136), and (k135, k136).

With reference to Fig. 91, the standard deviation $\sigma_{DF_k134,\ k135}$ of the differences between the multiple integral values (6 integral values) on the curve k134 and the multiple integral values (6 integral values) on the curve k135 is 15.26 (%), the standard deviation $\sigma_{DF_k134,\ k136}$ of the differences between the multiple integral values (6 integral values) on the curve k134 and the multiple integral values (6 integral values) on the curve k136 is 41.83 (%), and the standard deviation $\sigma_{DF_k135,\ k136}$ of the differences between the multiple integral values (6 integral values) on the curve k135 and the multiple integral values (6 integral values) on the curve k136 is 31.27 (%).

As a result, the standard deviation of the differences $\sigma_{DF_k134,\ k135}$ (= 15.26 (%)) is greater than the threshold value $\sigma_{th}$ (= 15 (%)), the standard deviation of the differences $\sigma_{DF_k134,\ k136}$ (= 41.83 (%)) is greater than the threshold value $\sigma_{th}$ (= 15 (%)), and the standard deviation of the differences $\sigma_{DF_k135,\ k136}$ (= 31.27 (%)) is greater than the threshold value $\sigma_{th}$ (= 15 (%)).

Therefore, the two curves k134 and k135 differ, the two curves k134 and k136 differ, and the two curves k135 and k136 differ (see "◦" in Fig. 91). Therefore, the curves k134 to k136 are curves that differ from each other.

Fig. 92 shows the integral value spectra for WONDA, CRAFT BOSS, and GOLD BREW when the number of integral values is 7.

With reference to Fig. 92, each of the curves k137 to k139 is a curve CUR created by the analysis device 2 by the method described above. The curve k137 represents the integral value spectrum of the coffee (WONDA), the curve k138 represents the integral value spectrum of the coffee (CRAFT BOSS), and the curve k139 represents the integral value spectrum of the coffee (GOLD BREW).

The measurement conditions for the cyclic voltammogram, on which the calculation of the multiple integral values (7 integral values) for each of the curves k137 to k139 is based, are the same as those shown in Table 5, except that the prescribed potential range (i.e., integral value extraction potential) is 717.6 mV instead of 18.4 mV in Table 5.

As a result, in Fig. 92, classes 1 to 6 each consist of a prescribed potential range (i.e., integral value extraction potential) of 717.6 mV, and class 7 consists of a prescribed potential range (i.e., integral value extraction potential) of 680.8 mV.

Fig. 93 shows the results of judging whether the curves k137 to k139 shown in Fig. 92 differ from each other.

Whether the curves k137 to k139 differ from each other is judged by judging whether two of the curves k137 to k139 differ from each other for all combinations of two curves among the curves k137 to k139.

There are three combinations of two curves of the curves k137 to k139: (k137, k138), (k137, k139), and (k138, k139).

Fig. 93 shows whether the two curves differ in each of the three combinations (k137, k138), (k137, k139), and (k138, k139).

With reference to Fig. 93, the standard deviation $\sigma_{DF_k137,\ k138}$ of the differences between the multiple integral values (7 integral values) on the curve k137 and the multiple integral values (7 integral values) on the curve k138 is 16.64 (%), the standard deviation $\sigma_{DF_k137,\ k139}$ of the differences between the multiple integral values (7 integral values) on the curve k137 and the multiple integral values (7 integral values) on the curve k139 is 45.35 (%), and the standard deviation $\sigma_{DF_k138,\ k139}$ of the differences between the multiple integral values (7 integral values) on the curve k138 and the multiple integral values (7 integral values) on the curve k139 is 33.46 (%).

As a result, the standard deviation of the differences $\sigma_{DF_k137,\ k138}$ (= 16.64 (%)), is greater than the threshold value $\sigma_{th}$ (= 15 (%)), the standard deviation of the differences $\sigma_{DF_k137,\ k139}$ (= 45.35 (%)) is greater than the threshold value $\sigma_{th}$(= 15 (%)), and the standard deviation of the differences $\sigma_{DF_k138,\ k139}$ (= 33.46 (%)) is greater than the threshold value $\sigma_{th}$(= 15 (%)).

Therefore, the two curves k137 and k138 differ, the two curves k137 and k139 differ, and the two curves k138 and k139 differ (see "◦" in Fig. 93). Therefore, the curves k137 to k139 are curves that differ from each other.

Fig. 94 shows the integral value spectra for WONDA, CRAFT BOSS, and GOLD BREW when the number of integral values is 8.

With reference to Fig. 94, each of the curves k140 to k142 is a curve CUR created by the analysis device 2 by the method described above. The curve k140 represents the integral value spectrum of the coffee (WONDA), the curve k141 represents the integral value spectrum of the coffee (CRAFT BOSS), and the curve k142 represents the integral value spectrum of the coffee (GOLD BREW).

The measurement conditions for the cyclic voltammogram, on which the calculation of the multiple integral values (8 integral values) for each of the curves k140 to k142 is based, are the same as those shown in Table 5, except that the prescribed potential range (i.e., integral value extraction potential) is 625.6 mV instead of 18.4 mV in Table 5.

As a result, in Fig. 94, classes 1 to 7 each consist of a prescribed potential range (i.e., integral value extraction potential) of 625.6 mV, and class 8 consists of a prescribed potential range (i.e., integral value extraction potential) of 607.2 mV.

Fig. 95 shows the results of judging whether the curves k140 to k142 shown in Fig. 94 differ from each other.

Whether the curves k140 to k142 differ from each other is judged by judging whether two of the curves k140 to k142 differ from each other for all combinations of two curves among the curves k140 to k142.

There are three combinations of two curves among curves k140 to k142: (k140, k141), (k140, k142), and (k141, k142).

Fig. 95 shows whether the two curves differ in each of the three combinations (k140, k141), (k140, k142), and (k141, k142).

With reference to Fig. 95, the standard deviation $\sigma_{DF_k140,\ k141}$ of the differences between the multiple integral values (8 integral values) on the curve k140 and the multiple integral values (8 integral values) on the curve k141 is 18.56 (%), the standard deviation $\sigma_{DF_k140,\ k142}$ of the differences between the multiple integral values (8 integral values) on the curve k140 and the multiple integral values (8 integral values) on the curve k142 is 59.01 (%), and the standard deviation $\sigma_{DF_k141,\ k142}$ of the differences between the multiple integral values (8 integral values) on the curve k141 and the multiple integral values (8 integral values) on the curve k142 is 48.44 (%).

As a result, the standard deviation of the differences $\sigma_{DF_k140,\ k141}$ (= 18.56 (%)), is greater than the threshold value $\sigma_{th}$ (= 15 (%)), and the standard deviation of the differences $\sigma_{DF_k140,\ k142}$ (= 59.01 (%)) is greater than the threshold value $\sigma_{th}$ (= 15 (%)), and the standard deviation of the differences $\sigma_{DF_k141,\ k142}$ (= 48.44 (%)) is greater than the threshold value $\sigma_{th}$ (= 15 (%)).

Therefore, the two curves k140 and k141 differ, the two curves k140 and k142 differ, and the two curves k141 and k142 differ (see "◦" in Fig. 95). Therefore, the curves k140 to k142 are curves that differ from each other.

Fig. 96 shows the integral value spectra for WONDA, CRAFT BOSS, and GOLD BREW when the number of integral values is 9.

With reference to Fig. 96, each of the curves k143 to k145 is a curve CUR created by the analysis device 2 by the method described above. The curve k143 represents the integral value spectrum of the coffee (WONDA), the curve k144 represents the integral value spectrum of the coffee (CRAFT BOSS), and the curve k145 represents the integral value spectrum of the coffee (GOLD BREW).

The measurement conditions for the cyclic voltammogram, on which the calculation of the multiple integral values (9 integral values) for each of the curves k143 to k145 is based, are the same as those shown in Table 5, except that the prescribed potential range (i.e., the integral value extraction potential) is 552 mV instead of 18.4 mV in Table 5.

As a result, in Fig. 96, classes 1 to 8 each consist of a prescribed potential range (i.e., integral value extraction potential) of 552 mV, and class 9 consists of a prescribed potential range (i.e., integral value extraction potential) of 570.4 mV.

Fig. 97 shows the result of judging whether the curves k143 to k145 shown in Fig. 96 differ from each other.

Whether the curves k143 to k145 differ from each other is judged by judging whether two of the curves k143 to k145 differ from each other for all combinations of two curves among the curves k143 to k145.

There are three combinations of two curves among the curves k143 to k145: (k143, k144), (k143, k145), and (k144, k145).

Fig. 97 shows whether the two curves differ in each of the three combinations (k143, k144), (k143, k145), and (k144, k145).

With reference to Fig. 97, the standard deviation $\sigma_{DF_k143,\ k144}$ of the differences between the multiple integral values (9 integral values) on the curve k143 and the multiple integral values (9 integral values) on the curve k144 is 21.65 (%), the standard deviation $\sigma_{DF_k143,\ k145}$ of the differences between the multiple integral values (9 integral values) on the curve k143 and the multiple integral values (9 integral values) on the curve k145 is 70.36 (%), and the standard deviation $\sigma_{DF_k144,\ k145}$ of the differences between the multiple integral values (9 integral values) on the curve k144 and the multiple integral values (9 integral values) on the curve k145 is 65.19 (%).

As a result, the standard deviation of the differences $\sigma_{DF_k143,\ k144}$ (= 21.65 (%)) is greater than the threshold value $\sigma_{th}$ (= 15 (%)), the standard deviation of the differences $\sigma_{DF_k143,\ k145}$ (= 70.36 (%)) is greater than the threshold value $\sigma_{th}$ (= 15 (%)), and the standard deviation of the differences $\sigma_{DF_k144,\ k145}$ (= 65.19 (%)) is greater than the threshold value $\sigma_{th}$ (= 15 (%)).

Therefore, the two curves k143 and k144 differ, the two curves k143 and k145 differ, and the two curves k144 and k145 differ (see "◦" in Fig. 97). Therefore, the curves k143 to k145 are curves that differ from each other.

Fig. 98 shows the integral value spectra for WONDA, CRAFT BOSS, and GOLD BREW when the number of integral values is 10.

With reference to Fig. 98, each of the curves k146 to k148 is a curve CUR created by the analysis device 2 by the method described above. The curve k146 represents the integral value spectrum of the coffee (WONDA), the curve k147 represents the integral value spectrum of the coffee (CRAFT BOSS), and the curve k148 shows the integral value spectrum of the coffee (GOLD BREW).

The measurement conditions for the cyclic voltammogram, on which the calculation of the multiple integral values (i.e., 10 integral values) for each of the curves k146 to k148 is based, are the same as those shown in Table 5, except that the prescribed potential range (i.e., integral value extraction potential) is 496.8 mV instead of 18.4 mV in Table 5.

As a result, in Fig. 98, classes 1 to 9 each consist of a prescribed potential range (i.e., integral value extraction potential) of 496.8 mV, and class 10 consists of a prescribed potential range (i.e., integral value extraction potential) of 515.2 mV.

Fig. 99 shows the results of judging whether the curves k146 to k148 shown in Fig. 98 differ from each other.

Whether the curves k146 to k148 differ from each other is judged by judging whether two of the curves k146 to k148 differ from each other for all combinations of two curves among the curves k146 to k148.

There are three combinations of two curves among curves k146 to k148: (k146, k147), (k146, k148), and (k147, k148).

Fig. 99 shows whether the two curves differ in each of the three combinations (k146, k147), (k146, k148), and (k147, k148).

With reference to Fig. 99, the standard deviation $\sigma_{DF_k146,\ k147}$ of the differences between the multiple integral values (10 integral values) on the curve k146 and the multiple integral values (10 integral values) on the curve k147 is 25.21 (%), the standard deviation $\sigma_{DF_k146,k148}$ of the differences between the multiple integral values (10 integral values) on the curve k146 and the multiple integral values (10 integral values) on the curve k148 is 84.29 (%), and the standard deviation $\sigma_{DF_k147,k148}$ of the differences between the multiple integral values (10 integral values) on the curve k147 and the multiple integral values (10 integral values) on the curve k148 is 78.52 (%).

As a result, the standard deviation of the differences $\sigma_{DF_k146,\ k147}$ (= 25.21 (%)), is greater than the threshold value $\sigma_{th}$ (= 15 (%)), the standard deviation of the differences $\sigma_{DF_k146,k148}$ (= 84.29 (%)) is greater than the threshold value $\sigma_{th}$ (= 15 (%)), and the standard deviation of the differences $\sigma_{DF_k147,\ k148}$ (= 78.52 (%)) is greater than the threshold value $\sigma_{th}$ (= 15 (%)).

Therefore, the two curves k146 and k147 differ, the two curves k146 and k148 differ, and the two curves k147 and k148 differ (see the "◦" in Fig. 99). Therefore, the curves k146 to k148 are curves that differ from each other.

Fig. 100 shows the integral value spectra for WONDA, CRAFT BOSS, and GOLD BREW when the number of integral values is 15.

With reference to Fig. 100, each of the curves k149 to k151 is a curve CUR created by the analysis device 2 by the method described. The curve k149 represents the integral value spectrum of the coffee (WONDA), the curve k150 represents the integral value spectrum of the coffee (CRAFT BOSS), and the curve k151 represents the integral value spectrum of the coffee (GOLD BREW).

The measurement conditions for the cyclic voltammogram, on which the calculation of the multiple integral values (15 integral values) for each of the curves k149 to k151 is based, are the same as those shown in Table 5 except that the prescribed potential range (i.e., integral value extraction potential) is 349.6 mV instead of 18.4 mV in Table 5.

As a result, in Fig. 100, classes 1 to 14 each consist of a prescribed potential range (i.e., integral value extraction potential) of 349.6 mV, and class 15 consists of a prescribed potential range (i.e., integral value extraction potential) of 92 mV.

Fig. 101 shows the results of judging whether the curves k149 to k151 shown in Fig. 100 differ from each other.

Whether the curves k149 to k151 differ from each other is judged by judging whether two of the curves k149 to k151 differ from each other for all combinations of two curves among the curves k149 to k151.

There are three combinations of two curves among curves k149 to k151: (k149, k150), (k149, k151), and (k150, k151).

Fig. 101 shows whether the two curves differ in each of the three combinations (k149, k150), (k149, k151), and (k150, k151).

With reference to Fig. 101, the standard deviation $\sigma_{DF_k149,\ k150}$ of the differences between the multiple integral values (15 integral values) on the curve k149 and the multiple integral values (15 integral values) on the curve k150 is 54.79 (%), the standard deviation $\sigma_{DF_k149,k151}$ of the differences between the multiple integral values (15 integral values) on the curve k149 and the multiple integral values (15 integral values) on the curve k151 is 67.29 (%), and the standard deviation $\sigma_{DF_150,k151}$ of the differences between the multiple integral values (15 integral values) on the curve k150 and the multiple integral values (15 integral values) on the curve k151 is 48.38 (%).

As a result, the standard deviation of the differences $\sigma_{DF_k149,\ k150}$ (= 54.79 (%)) is greater than the threshold value $\sigma_{th}$ (= 15 (%)), the standard deviation of the differences $\sigma_{DF_k149,k151}$ (= 67.29 (%)) is greater than the threshold value $\sigma_{th}$(= 15 (%)), and the standard deviation of the differences $\sigma_{DF_k250,\ k151}$(= 48.38 (%)) is greater than the threshold value $\sigma_{th}$(= 15 (%)).

Therefore, the two curves k149 and k150 differ, the two curves k149 and k151 differ, and the two curves k150 and k151 differ (see the "o" in Fig. 101). Therefore, the curves k149 to k151 are curves that differ from each other.

Fig. 102 shows the integral value spectra for WONDA, CRAFT BOSS, and GOLD BREW when the number of integral values is 20.

With reference to Fig. 102, each of the curves k152 to k154 is a curve CUR created by the analysis device 2 by the method described above. The curve k152 represents the integral value spectrum of the coffee (WONDA), the curve k153 represents the integral value spectrum of the coffee (CRAFT BOSS), and the curve k154 represents the integral value spectrum of the coffee (GOLD BREW).

The measurement conditions for the cyclic voltammogram, on which the calculation of the multiple integral values (i.e., 20 integral values) for each of the curves k152 to k154 is based, are the same as those shown in Table 5, except that the prescribed potential range (i.e., integral value extraction potential) is 257.6 mV instead of 18.4 mV in Table 5.

As a result, in Fig. 102, classes 1 to 19 each consist of a prescribed potential range (i.e., integral value extraction potential) of 257.6 mV, and class 20 consists of a prescribed potential range (i.e., integral value extraction potential) of 92 mV.

Fig. 103 shows the results of judging whether the curves k152 to k154 shown in Fig. 102 differ from each other.

Whether the curves k152 to k154 differ from each other is judged by judging whether two of the curves k152 to k154 differ from each other for all combinations of two curves among the curves k152 to k154.

There are three combinations of two curves among curves k152 to k154: (k152, k153), (k152, k154), and (k153, k154).

Fig. 103 shows whether the two curves differ in each of the three combinations (k152, k153), (k152, k154), and (k153, k154).

With reference to Fig. 103, the standard deviation $\sigma_{DF_k152,\ k153}$ of the differences between the multiple integral values (20 integral values) on the curve k152 and the multiple integral values (20 integral values) on the curve k153 is 34.35 (%), the standard deviation $\sigma_{DF_k152,\ k154}$ of the differences between the multiple integral values (20 integral values) on the curve k152 and the multiple integral values (20 integral values) on the curve k154 is 77.77 (%), and the standard deviation $\sigma_{DF_k153,\ k154}$ of the differences between the multiple integral values (20 integral values) on the curve k153 and the multiple integral values (20 integral values) on the curve k154 is 64.33 (%).

As a result, the standard deviation of the differences $\sigma_{DF_k152,\ k153}$ (= 34.35 (%)) is greater than the threshold value $\sigma_{th}$ (= 15 (%)), the standard deviation of the differences $\sigma_{DF_k152,\ k154}$ (= 77.77 (%)) is greater than the threshold value $\sigma_{th}$(= 15 (%)), and the standard deviation of the differences $\sigma_{DF_k153,\ k254}$(= 64.33 (%)) is greater than the threshold value $\sigma_{th}$(= 15 (%)).

Therefore, the two curves k152 and k153 differ, the two curves k152 and k154 differ, and the two curves k153 and k154 differ (see "◦" in Fig. 103). Therefore, the curves k152 to k154 are curves that differ from each other.

Fig. 104 shows the integral value spectra for WONDA, CRAFT BOSS, and GOLD BREW when the number of integral values is 39.

With reference to Fig. 104, each of the curves k155 to k157 is a curve CUR created by the analysis device 2 by the method described above. The curve k155 represents the integral value spectrum of the coffee (WONDA), the curve k156 represents the integral value spectrum of the coffee (CRAFT BOSS), and the curve k157 represents the integral value spectrum of the coffee (GOLD BREW).

The measurement conditions for the cyclic voltammogram, on which the calculation of the multiple integral values (i.e., 39 integral values) for each of the curves k155 to k157 is based, are the same as those shown in Table 5, except that the prescribed potential range (i.e., integral value extraction potential) is 128.8 mV instead of 18.4 mV in Table 5.

As a result, in Fig. 104, classes 1 to 38 each consist of a prescribed potential range (i.e., integral value extraction potential) of 128.8 mV, and class 39 consists of a prescribed potential range (i.e., integral value extraction potential) of 92 mV.

Fig. 105 shows the results of judging whether the curves k155 to k157 shown in Fig. 104 differ from each other.

Whether the curves k155 to k157 differ from each other is judged by judging whether two of the curves k155 to k157 differ from each other for all combinations of two curves from the curves k155 to k157.

There are three combinations of two curves among curves k155 to k157: (k155, k156), (k155, k157), and (k156, k157).

Fig. 105 shows whether the two curves differ in each of the three combinations (k155, k156), (k155, k157), and (k156, k157).

With reference to Fig. 105, the standard deviation $\sigma_{DF_k155,\ k156}$ of the differences between the multiple integral values (39 integral values) on the curve k155 and the multiple integral values (39 integral values) on the curve k156 is 40.61 (%), the standard deviation $\sigma_{DF_k155,\ k157}$ of the differences between the multiple integral values (= 39 integral values) on the curve k155 and the multiple integral values (= 39 integral values) on the curve k157 is 67.02 (%), and the standard deviation $\sigma_{DF_k156,\ k157}$ of the differences between the multiple integral values (39 integral values) on the curve k156 and the multiple integral values (39 integral values) on the curve k157 is 50.55 (%).

As a result, the standard deviation of the differences $\sigma_{DF_k155,\ k156}$ (= 40.61 (%)) is greater than the threshold

value $\sigma_{th}$ (= 15 (%)), the standard deviation of the differences $\sigma_{DF_k155,k157}$ (= 67.02 (%)) is greater than the threshold value $\sigma_{th}$ (= 15 (%)), and the standard deviation of the differences $\sigma_{DF_k156,k157}$ (= 50.55 (%)) is greater than the threshold value $\sigma_{th}$ (= 15 (%)).

Therefore, the two curves k155 and k156 differ, the two curves k155 and k157 differ, and the two curves k156 and k157 differ (see the "o" in Fig. 105). Therefore, the curves k155 to k157 are curves that differ from each other.

Fig. 106 shows the integral value spectra for WONDA, CRAFT BOSS, and GOLD BREW when the number of integral values is 54.

With reference to Fig. 106, each of the curves k158 to k160 is a curve CUR created by the analysis device 2 by the method described above. The curve k158 represents the integral value spectrum of the coffee (WONDA), the curve k159 represents the integral value spectrum of the coffee (CRAFT BOSS), and the curve k160 represents the integral value spectrum of the coffee (GOLD BREW).

The measurement conditions for the cyclic voltammogram, on which the calculation of the multiple integral values (54 integral values) for each of the curves k158 to k160 is based, are the same as those shown in Table 5, except that the prescribed potential range (i.e., integral value extraction potential) is 92 mV instead of 18.4 mV in Table 5.

As a result, in Fig. 106, classes 1 to 53 each consist of a prescribed potential range (i.e., integral value extraction potential) of 92 mV, and class 54 consists of a prescribed potential range (i.e., integral value extraction potential) of 110.4 mV.

Fig. 107 shows the result of judging whether the curves k158 to k160 shown in Fig. 106 differ from each other.

Whether the curves k158 to k160 differ from each other is judged by judging whether two of the curves k158 to k160 differ from each other for all combinations of two curves among the curves k158 to k160.

There are three combinations of two curves among curves k158 to k160: (k158, k159), (k158, k160), and (k159, k160).

Fig. 107 shows whether the two curves differ in each of the three combinations (k158, k159), (k158, k160), and (k159, k160).

With reference to Fig. 107, the standard deviation $\sigma_{DF_k158,k159}$ of the differences between the multiple integral values (54 integral values) on the curve k158 and the multiple integral values (54 integral values) on the curve k159 is 37.13 (%), the standard deviation $\sigma_{DF_k158,k160}$ of the differences between the multiple integral values (54 integral values) on the curve k158 and the multiple integral values (54 integral values) on the curve k160 is 64.89 (%), and the standard deviation $\sigma_{DF_k159,k160}$ of the differences between the multiple integral values (54 integral values) on the curve k159 and the multiple integral values (54 integral values) on the curve k160 is 52.12 (%).

As a result, the standard deviation of the differences $\sigma_{DF_k158,k159}$ (= 37.13 (%)), is greater than the threshold value $\sigma_{th}$ (= 15 (%)), the standard deviation of the differences $\sigma_{DF_k158,k160}$ (= 64.89 (%)) is greater than the threshold value $\sigma_{th}$ (= 15 (%)), and the standard deviation of the differences $\sigma_{DF_k159,k160}$ (= 52.12 (%)) is greater than the threshold value $\sigma_{th}$ (= 15 (%)).

Therefore, the two curves k158 and k159 differ, the two curves k158 and k160 differ, and the two curves k159 and k160 differ (see the "o" in Fig. 107). Therefore, the curves k158 to k160 are curves that differ from each other.

Fig. 108 shows the integral value spectra for WONDA, CRAFT BOSS, and GOLD BREW when the number of integral values is 135.

With reference to Fig. 108, each of the curves k161 to k163 is a curve CUR created by the analysis device 2 by the method described above. The curve k161 represents the integral value spectrum of the coffee (WONDA), the curve k162 represents the integral value spectrum of the coffee (CRAFT BOSS), and the curve k163 represents the integral value spectrum of the coffee (GOLD BREW).

The measurement conditions for the cyclic voltammogram, on which the calculation of the multiple integral values (135 integral values) for each of the curves k161 to k163 is based, are the same as those shown in Table 5, except that the prescribed potential range (i.e., integral value extraction potential) is 36.8 mV instead of 18.4 mV in Table 5.

As a result, in Fig. 108, classes 1 to 134 each consist of a prescribed potential range (i.e., integral value extraction potential) of 36.8 mV, and class 135 consists of a prescribed potential range (i.e., integral value extraction potential) of 55.2 mV.

Fig. 109 shows the results of judging whether the curves k161 to k163 shown in Fig. 108 differ from each other.

Whether the curves k161 to k163 differ from each other is judged by judging whether two of the curves k161 to k163 differ from each other for all combinations of two curves among the curves k161 to k163.

There are three combinations of two curves among curves k161 to k163: (k161, k162), (k161, k163), and (k162, k163).

Fig. 109 shows whether the two curves differ in each of the three combinations (k161, k162), (k161, k163), and (k162, k163).

With reference to Fig. 109, the standard deviation $\sigma_{DF_k161,k162}$ of the differences between the multiple integral values (135 integral values) on the curve k161 and the multiple integral values (135 integral values) on the curve k162 is 37.87 (%), the standard deviation $\sigma_{DF_k161,k163}$ of the differences between the multiple integral values (135 integral values) on the curve k161 and the multiple integral values (135 integral values) on the curve k163 is 66.31 (%), and the standard deviation $\sigma_{DF_k162, k163}$ of the differences between the multiple integral values (135 integral values) on the curve k162 and the multiple integral values (135 integral values) on the curve k163 is 50.33 (%).

As a result, the standard deviation of the differences $\sigma_{DF_k161, k162}$ (= 37.87 (%)) is greater than the threshold value $\sigma_{th}$ (= 15 (%)), the standard deviation of the differences $\sigma_{DF_k161, k163}$ (= 66.31 (%)) is greater than the threshold value $\sigma_{th}$(= 15 (%)), and the standard deviation of the differences $\sigma_{DF_k162, k163}$(= 50.33 (%)) is greater than the threshold value $\sigma_{th}$(= 15 (%)).

Therefore, the two curves k161 and k162 differ, the two curves k161 and k163 differ, and the two curves k162 and k163 differ (see the "o" in Fig. 109). Therefore, the curves k161 to k163 are curves that differ from each other.

Fig. 20 shows the integral value spectra of the coffee (WONDA),the coffee (CRAFT BOSS), and the coffee (GOLD BREW) when the number of integral values (i.e., the number of classes) is 271, and as shown in Fig. 21, the standard deviation of the differences $\sigma_{DF_k11, k12}$ (= 37.00 (%)), the standard deviation of the differences $\sigma_{DF_k11, k13}$ (= 66.20 (%)) and the standard deviation of the differences $\sigma_{DF_k12, k13}$ (= 50.55 (%)) are all greater than the threshold value $\sigma_{th}$(= 15 (%)).

Therefore, it was found that when the number of integral values is 6, 7, 8, 9, 10, 15, 20, 39, 54, 135, and 271, it is possible to obtain an integral value spectrum (= curve CUR) that uniquely identifies each of the coffee (WONDA), the coffee (CRAFT BOSS), and the coffee (GOLD BREW).

In other words, when the number of integral values is 6, the curve k134 represents the integral value spectrum for uniquely identifying the coffee (WONDA), the curve k135 represents the integral value spectrum for uniquely identifying the coffee (CRAFT BOSS), and the curve k136 represents the integral value spectrum for uniquely identifying the coffee (GOLD BREW).

When the number of integral values is 7, the curve k137 represents the integral value spectrum for uniquely identifying the coffee (WONDA), the curve k138 represents the integral value spectrum for uniquely identifying the coffee (CRAFT BOSS), and the curve k139 represents the integral value spectrum for uniquely identifying the coffee (GOLD BREW).

Furthermore, when the number of integral values is 8, the curve k140 is the integral value spectrum for uniquely identifying the coffee (WONDA), the curve k141 is the integral value spectrum for uniquely identifying the coffee (CRAFT BOSS), and the curve k142 is the integral value spectrum for uniquely identifying the coffee (GOLD BREW).

Furthermore, when the number of integral values is 9, the curve k143 is the integral value spectrum for uniquely identifying the coffee (WONDA), the curve k144 is the integral value spectrum for uniquely identifying the coffee (CRAFT BOSS), and the curve k145 is the integral value spectrum for uniquely identifying the coffee (GOLD BREW).

Furthermore, when the number of integral values is 10, the curve k146 represents the integral value spectrum for uniquely identifying the coffee (WONDA), the curve k147 represents the integral value spectrum for uniquely identifying coffee (CRAFT BOSS), and the curve k148 represents the integral value spectrum for uniquely identifying the coffee (GOLD BREW).

Furthermore, when the number of integral values is 15, the curve k149 represents the integral value spectrum for uniquely identifying the coffee (WONDA), the curve k150 represents the integral value spectrum for uniquely identifying the coffee (CRAFT BOSS), and the curve k151 represents the integral value spectrum for uniquely identifying the coffee (GOLD BREW).

Furthermore, when the number of integral values is 20, the curve k152 represents the integral value spectrum for uniquely identifying the coffee (WONDA), the curve k153 represents the integral value spectrum for uniquely identifying the coffee (CRAFT BOSS), and the curve k154 represents the integral value spectrum for uniquely identifying the coffee (GOLD BREW).

Furthermore, when the number of integral values is 39, the curve k155 represents the integral value spectrum for uniquely identifying the coffee (WONDA), the curve k156 represents the integral value spectrum for uniquely identifying coffee (CRAFT BOSS), and the curve k157 represents the integral value spectrum for uniquely identifying coffee (GOLD BREW).

Furthermore, when the number of integral values is 54, the curve k158 represents the integral value spectrum for uniquely identifying the coffee (WONDA), the curve k159 represents the integral value spectrum for uniquely identifying the coffee (CRAFT BOSS), and the curve k160 represents the integral value spectrum for uniquely identifying the coffee (GOLD BREW).

Furthermore, when the number of integral values is 135, the curve k161 represents the integral value spectrum for uniquely identifying the coffee (WONDA), the curve k162 represents the integral value spectrum for uniquely identifying the coffee (CRAFT BOSS), and the curve k163 represents the integral value spectrum for uniquely identifying the coffee (GOLD BREW).

Furthermore, when the number of integral values is 271, the curve k11 represents the integral value spectrum for uniquely identifying the coffee (WONDA), the curve k12 represents the integral value spectrum for uniquely identifying the coffee (CRAFT BOSS), and the curve k13 represents the integral value spectrum for uniquely identifying the coffee (GOLD BREW).

Then, the integral value spectrum (i.e., index curve) for uniquely identifying the coffee (WONDA) is represented by the curve k134 when the number of integral values is 6, the curve k137 when the number of integral values is 7, the curve k140 when the number of integral values is 8, the curve k143 when the number of integral values is 9, the curve k146 when the number of integral values is 10, and the curve k149 when the number of integral values is 15, the curve k152 when the number of integral values is 20, the curve k155 when the number of integral values is 39, the curve k158 when the number of integral values is 54, the curve k161 when the number of integral values is 135, and the curve k11 when the number of integral values is 271.

The integral value spectrum (i.e., index curve) for uniquely identifying the coffee (CRAFT BOSS) is represented by the curve k135 when the number of integral values is 6, the curve k138 when the number of integral values is 7, the curve k141 when the number of integral values is 8, the curve k144 when the number of integral values is 9, the curve k147 when the number of integral values is 10, the curve k150 when the number of integral values is 15, the curve k153 when the number of integral values is 20, the curve k156 when the number of integral values is 39, the curve k159 when the number of integral values is 54, the curve k162 when the number of integral values is 135, and k12 when the number of integral values is 271.

Furthermore, the integral value spectrum (i.e., index curve) for uniquely identifying the coffee (GOLD BREW) is represented by the curve k136 when the number of integral values is 6, the curve k139 when the number of integral values is 7, the curve k142 when the number of integral values is 8, the curve k145 when the number of integral values is 9, the curve k148 when the number of integral values is 10, and the curve k151 when the number of integral values is 15, the curve k154 when the number of integral values is 20, the curve k157 when the number of integral values is 39, the curve k160 when the number of integral values is 54, the curve k163 when the number of integral values is 135, and the curve k13 when the number of integral values is 271.

Therefore, in general, the integral value spectrum (i.e., index curve) for uniquely identifying the coffee (WONDA) is represented by multiple (i.e., 11) index curves (i.e., the curves k134, k137, k140, k143, k146, k149, k152, k155, k158, k161, and k11) with different numbers of integral values, the integral value spectrum (i.e., index curve) for uniquely identifying the coffee (CRAFT BOSS) is represented by multiple (i.e., 11) index curves (i.e., the curves k135, k138, k141, k144, k147, k150, k153, k156, k159, k162, and k12) and the integral value spectrum (i.e., index curve) for uniquely identifying the coffee (GOLD BREW) is represented by multiple (i.e., 11) index curves (i.e., the curves k136, k139, k142, k145, k148, k151, k154, k157, k160, k163, and k13) with different numbers of integral values.

It was found that the minimum number of integral values required to obtain integral value spectra that uniquely identify the coffee (WONDA), the coffee (CRAFT BOSS), and the coffee (GOLD BREW) is 6.

When the number of integral values is 3, the standard deviation $\sigma_{k125,\ k127}$ of the differences between the 3 integral values on the curve k125, which indicates the coffee (WONDA), and the 3 integral values on the curve k127, which indicates the coffee (GOLD BREW), is 21.07 (%) (see Fig. 85), which is greater than the threshold value $\sigma_{th}$ (= 15 (%)). When the number of integral values is 4, the standard deviation $\sigma_{k128,\ k130}$ of the differences between the 4 integral values on the curve k128, which indicates the coffee (WONDA), and the 4 integral values on the curve k130, which indicates the coffee (GOLD BREW), is 39.98 (%) (see Fig. 87), which is greater than the threshold value $\sigma_{th}$ (= 15 (%)). When the number of integral values is 5, the standard deviation $\sigma_{k131,\ k133}$ of the differences between the 5 integral values on the curve k131, which indicates the coffee (WONDA), and the 5 integral values on the curve k133, which indicates the coffee (GOLD BREW), is 30.78 (%), which is greater than the threshold value $\sigma_{th}$ (= 15 (%)) (see Fig. 89). When the number of integral values is 6, the standard deviation $\sigma_{k134,\ k136}$ of the differences between the 6 integral values on the curve k134, which indicates the coffee (WONDA), and the 6 integral values on the curve k136, which indicates the coffee (GOLD BREW), is 41.83 (%) (see Fig. 91), which is greater than the threshold value $\sigma_{th}$ (= 15 (%)).

When the number of integral values is 7, the standard deviation $\sigma_{k137,\ k139}$ of the differences between the 7 integral values on the curve k137, which indicates the coffee (WONDA), and the 7 integral values on the curve k139, which indicates the coffee (GOLD BREW), is 45.35 (%) (see Fig. 93), which is larger than the threshold value $\sigma_{th}$ (= 15 (%)). When the number of integral values is 8, the standard deviation $\sigma_{k140,\ k142}$ of the differences between the 8 integral values on the curve k140, which indicates the coffee (WONDA), and the 8 integral values on the curve k142, which indicates the coffee (GOLD BREW), is 59.01 (%), which is greater than the threshold value $\sigma_{th}$ (= 15 (%)) (see Fig. 95). When the number of integral values is 9, the standard deviation $\sigma_{k143,\ k145}$ of the differences between the 9 integral values on the curve k143, which indicates the coffee (WONDA), and the nine integral values on the curve k145, which indicates the coffee (GOLD BREW), is 70.36 (%), which is greater than the threshold value $\sigma_{th}$ (= 15 (%)) (see Fig. 97). When the number of integral values is 10, the standard deviation $\sigma_{k146,\ k148}$ of the differences between the 10 integral values on the curve k146, which indicates the coffee (WONDA), and the 10 integral values on the curve k148, which indicates the coffee (GOLD BREW) is 84.29 (%), which is greater than the threshold value $\sigma_{th}$ (= 15 (%)) (see Fig. 99).

Furthermore, when the number of integral values is 15, the standard deviation $\sigma_{k149,\ k151}$ of the differences between the 15 integral values on the curve k149, which indicates the coffee (WONDA), and the 15 integral values on the curve k151, which indicates the coffee (GOLD BREW), is 67.29 (%) (see Fig. 101), which is greater than the threshold

value $\sigma_{th}$ (= 15 (%)) when the number of integral values is 20, the standard deviation $\sigma k_{152, k154}$ of the differences between the 20 integral values on the curve k152, which indicates the coffee (WONDA), and the 20 integral values on the curve k154, which indicates the coffee (GOLD BREW), is 77.77 (%) (see Fig. 103), which is greater than the threshold value $\sigma_{th}$ (= 15 (%)). When the number of integral values is 39, the standard deviation $\sigma_{k155, k157}$ of the differences between the 39 integral values on the curve k155, which indicates the coffee (WONDA), and the 39 integral values on the curve k157, which indicates the coffee (GOLD BREW) is 67.02 (%) (see Fig. 105), which is greater than the threshold value $\sigma_{th}$ (= 15 (%)). When the number of integral values is 54, the standard deviation $\sigma_{k158, k160}$ of the differences between the 54 integral values on the curve k158, which indicates the coffee (WONDA), and the 54 integral values on the curve k160, which indicates the coffee (GOLD BREW) is 64.89 (%), which is greater than the threshold value $\sigma_{th}$ (= 15 (%)) (see Fig. 107).

Furthermore, when the number of integral values is 135, the standard deviation $\sigma_{k161, k163}$ of the differences between the 135 integral values on the curve k161, which indicates the coffee (WONDA), and the 135 integral values on the curve k163, which indicates the coffee (GOLD BREW), is 66.31 (%) (see Fig. 109), which is greater than the threshold value $\sigma_{th}$ (= 15 (%)). When the number of integral values is 271, the standard deviation $\sigma_{k11, k13}$ of the differences between the 271 integral values on the curve k11, which indicates the coffee (WONDA), and the 271 integral values on the curve k13, which indicates the coffee (GOLD BREW), is 66.20 (%) (see Fig. 21), which is greater than the threshold value $\sigma_{th}$ (= 15 (%)).

As a result, the standard deviation of the differences between the multiple integral values on the curve which indicates the coffee (WONDA) and the multiple integral values on the curve which indicates the coffee (GOLD BREW) is greater than the threshold value $\sigma_{th}$ (= 15 (%)) in all cases where the number of integral values is 3, 4, 5, 6, 7, 8, 9, 10, 15, 20, 39, 54, 135, and 271.

Therefore, the above-described curves k125, k128, k131, k134, k137, k140, k143, k146, k149, k152, k155, k158, k161, and k11 represent the integral value spectra for uniquely identifying the coffee (WONDA), and the above-described curves k127, k130, k133, k136, k139, k142, k145, k148, k151, k154, k157, k160, k163, and k13 represent integral value spectra for uniquely identifying the coffee (GOLD BREW).

It was found that the minimum number of integral values in the integral value spectrum for uniquely identifying the coffee (WONDA) and the minimum number of integral values in the integral value spectrum for uniquely identifying the coffee (GOLD BREW) are both 3.

(E) Human urine

Fig. 110 shows the integral value spectra of human urine collected on different days when the number of integral values is 3.

With reference to Fig. 110, each of the curves k167 to k169 is a curve CUR created by the analysis device 2 by the method described above. The curves k167 to k169 represent the integral value spectra of urine from the same individual, the curve k167 represents the integral value spectrum for the urine from the same individual collected on the first day, the curve k168 represents the integral value spectrum for the urine from the same individual collected on the second day, and the curve k169 represents the integral value spectrum for the urine from the same individual collected on the third day.

The measurement conditions for the cyclic voltammogram, on which the calculation of the multiple integral values (3 integral values) for each of curves k167 to k169 is based, are the same as those shown in Table 6, except that the prescribed potential range (i.e., integral value extraction potential) is 1728 mV instead of 192 mV in Table 6.

As a result, in Fig. 110, classes 1 and 2 each consist of a prescribed potential range (i.e., integral value extraction potential) of 1728 mV, and class 3 consists of a prescribed potential range (i.e., integral value extraction potential) of 1536 mV.

Fig. 111 shows the result of judging whether the curves k167 to k169 shown in Fig. 110 differ from each other.

Whether the curves k167 to k169 differ from each other is judged by judging whether two of the curves k167 to k169 differ from each other for all combinations of two curves among the curves k167 to k169.

There are three combinations of two curves among curves k167 to k169: (k167, k168), (k167, k169), and (k168, k169).

Fig. 111 shows whether the two curves differ in each of the three combinations (k167, k168), (k167, k169), and (k168, k169).

With reference to Fig. 111, the standard deviation $\sigma_{DF_k167, k168}$ of the differences between the multiple integral values (3 integral values) on the curve k167 and the multiple integral values (3 integral values) on the curve k168 is 1.50 (%), the standard deviation $\sigma_{DF_k167, k169}$ of the differences between the multiple integral values (3 integral values) on the curve k167 and the multiple integral values (3 integral values) on the curve k169 is 7.90 (%), and the standard deviation $\sigma_{DF_k168, k169}$ of the differences between the multiple integral values (3 integral values) on the curve k168 and the multiple integral values (3 integral values) on the curve k169 is 6.38 (%).

As a result, the standard deviation of the differences $\sigma_{DF_k167, k168}$ (= 1.50 (%)) is smaller than the threshold value $\sigma_{th}$ (= 15 (%)), the standard deviation of the differences $\sigma_{DF_k167, k169}$ (= 7.90 (%)) is smaller than the threshold value $\sigma_{th}$ (=

15 (%)), and the standard deviation of the differences $\sigma_{DF_k168,k169}$ (= 6.38 (%)) is smaller than the threshold value $\sigma_{th}$ (= 15 (%)).

Therefore, the two curves k167 and k168 do not differ, the two curves k167 and k169 do not differ, and the two curves k168 and k169 do not differ. Therefore, when the number of integral values is 3, the curves k167 to k169 are not curves that differ from each other.

Fig. 112 shows the integral value spectra of human urine collected on different days when the number of integral values is 4.

With reference to Fig. 112, each of the curves k170 to k172 is a curve CUR created by the analysis device 2 by the method described above. The curves k170 to k172 represent the integral value spectra of the urine from the same individual, the curve k170 represents the integral value spectrum for the urine from the same individual collected on the first day, the curve k171 represents the integral value spectrum for the urine from the same individual collected on the second day, and the curve k172 represents the integral value spectrum for the urine from the same individual collected on the third day.

The measurement conditions for the cyclic voltammogram, on which the calculation of the multiple integral values (4 integral values) for each of the curves k170 to k172 is based, are the same as those shown in Table 6 above, except that the prescribed potential range (i.e., integral value extraction potential) is 1344 mV instead of 192 mV in Table 6.

As a result, in Fig. 112, each of classes 1 to 3 consists of a prescribed potential range (i.e., integral value extraction potential) of 1344 mV, and class 4 consists of a prescribed potential range (i.e., integral value extraction potential) of 960 mV.

Fig. 113 shows results of judging whether the curves k170 to k172 shown in Fig. 112 differ from each other.

Whether the curves k170 to k172 differ from each other is judged by judging whether two of the curves k170 to k172 differ from each other for all combinations of two curves among the curves k170 to k172.

There are three combinations of two curves among the curves k170 to k172: (k170, k171), (k170, k172), and (k171, k172).

Fig. 113 shows whether the two curves differ in each of the three combinations (k170, k171), (k170, k172), and (k171, k172).

With reference to Fig. 113, the standard deviation $\sigma_{DF_k170,\ k171}$ of the differences between the multiple integral values (4 integral values) on the curve k170 and the multiple integral values (4 integral values) on the curve k171 is 45.88 (%), and the standard deviation $\sigma_{DF_k170,\ k172}$ of the differences between the multiple integral values (4 integral values) on the curve k170 and the multiple integral values (4 integral values) on the curve k172 is 44.49 (%), and the standard deviation $\sigma_{DF_k171,k172}$ of the differences between the multiple integral values (4 integral values) on the curve k171 and the multiple integral values (4 integral values) on the curve k172 is 6.76 (%).

As a result, the standard deviation of the differences $\sigma_{DF_k170,\ k171}$ (=45.88 (%)) is greater than the threshold value $\sigma_{th}$ (=15 (%)), the standard deviation of the differences $\sigma_{DF_k170,k172}$ (=44.49 (%)) is greater than the threshold value $\sigma_{th}$ (= 15 (%)), and the standard deviation of the differences $\sigma_{DF_k171,k172}$ (= 6.76 (%)) is smaller than the threshold value $\sigma_{th}$ (= 15 (%)).

Therefore, the two curves k170 and k171 differ, the two curves k170 and k172 differ, and the two curves k171 and k172 do not differ. Therefore, when the number of integral values is 4, the curves k170 to k172 are not curves that differ from each other.

Fig. 114 shows the integral value spectra of human urine collected on different days, when the number of integral values is 5.

With reference to Fig. 114, each of the curves k173 to k175 is a curve CUR created by the analysis device 2 by the method described above. The curves k173 to k175 show the integral value spectra of the urine of the same person, and the curve k173 shows the integral value spectrum for the urine for the same individual collected on the first day, and curve k174 shows the integral value spectrum for the urine from the same individual collected on the second day, and the curve k175 shows the integral value spectrum for the urine from the same individual collected on the third day.

The measurement conditions for the cyclic voltammogram, on which the calculation of the multiple integral values (5 integral values) for each of the curves k173 to k175 is based, are the same as those shown in Table 6, except that the prescribed potential range (i.e., integral value extraction potential) is 1152 mV instead of 192 mV in Table 6.

As a result, in Fig. 114, each of classes 1 to 4 consists of a prescribed potential range of 1152 mV (i.e., integral value extraction potential), and class 5 consists of a prescribed potential range of 384 mV (= integral value extraction potential).

Fig. 115 shows the results of judging whether the curves k173 to k175 shown in Fig. 114 differ from each other.

Whether the curves k173 to k175 differ from each other is judged by judging whether two of the curves k173 to k175 differ from each other for all combinations of two curves among the curves k173 to k175.

There are three combinations of two curves among the curves k173 to k175: (k173, k174), (k173, k175), and (k174, k175).

Fig. 115 shows whether the two curves differ in each of the three combinations (k173, k174), (k173, k175), and (k174, k175).

With reference to Fig. 115, the standard deviation $\sigma_{DF_k173,\,k174}$ of the differences between the multiple integral values (5 integral values) on the curve k173 and the multiple integral values (5 integral values) on the curve k174 is 8.95 (%), the standard deviation $\sigma_{DF_k173,\,k175}$ of the differences between the multiple integral values (5 integral values) on the curve k173 and the multiple integral values (5 integral values) on the curve k175 is 10.78 (%), and the standard deviation $\sigma_{DF_k174,\,k175}$ of the differences between the multiple integral values (5 integral values) on the curve k174 and the multiple integral values (5 integral values) on the curve k175 is 16.99 (%).

As a result, the standard deviation of the differences $\sigma_{DF_k173,\,k174}$ (= 8.95 (%)) is smaller than the threshold value $\sigma_{th}$ (= 15 (%)), and the standard deviation of the differences $\sigma_{DF_k173,\,k175}$ (= 10.78 (%)) is smaller than the threshold value $\sigma_{th}$ (=15 (%)), and the standard deviation of the differences $\sigma_{DF_k174,\,k175}$ (=16.99 (%)) is greater than the threshold value $\sigma_{th}$ (=15 (%)).

Therefore, the two curves k173 and k174 do not differ, the two curves k173 and k175 do not differ, and the two curves k174 and k175 do differ. Therefore, when the number of integral values is 5, the curves k173 to k175 are not curves that differ from each other.

Fig. 116 shows the integral value spectrum for human urine collected on different days, when the number of integral values is 7.

With reference to Fig. 116, each of the curves k176 to k178 is a curve CUR created by the analysis device 2 by the method described above. The curves k176 to k178 show the integral value spectra of the urine from the same individual, the curve k176 shows the integral value spectrum for the urine from the same individual collected on the first day, the curve k177 shows the integral value spectrum for the urine from the same individual collected on the second day, and the curve k178 shows the integral value spectrum for the urine from the same individual collected on the third day.

The measurement conditions for the cyclic voltammogram, on which the calculation of the multiple integral values (7 integral values) for each of the curves k176 to k178 is based, are the same as those shown in Table 6, except that the prescribed potential range (i.e., integral value extraction potential) is 768 mV instead of 192 mV in Table 6.

As a result, in Fig. 116, each of classes 1 to 6 consists of a prescribed potential range (i.e., integral value extraction potential) of 768 mV, and class 7 consists of a prescribed potential range (i.e., integral value extraction potential) of 384 mV.

Fig. 117 shows the results of judging whether the curves k176 to k178 shown in Fig. 116 differ from each other.

Whether the curves k176 to k178 differ from each other is judged by judging whether two of the curves k176 to k178 differ from each other for all combinations of two curves among the curves k176 to k178.

There are three combinations of two curves among the curves k176 to k178: (k176, k177), (k176, k178), and (k177, k178).

Fig. 117 shows whether the two curves differ in each of the three combinations (k176, k177), (k176, k178), and (k177, k178).

With reference to Fig. 117, the standard deviation $\sigma_{DF_k176,\,k177}$ of the differences between the multiple integral values (7 integral values) on the curve k176 and the multiple integral values (7 integral values) on the curve k177 is 7.75 (%), the standard deviation $\sigma_{DF_k176,\,k178}$ of the differences between the multiple integral values (7 integral values) on the curve k176 and the multiple integral values (7 integral values) on the curve k178 is 10.81 (%), and the standard deviation $\sigma_{DF_k177,k178}$ of the differences between the multiple integral values (= 7 integral values) on the curve k177 and the multiple integral values (= 7 integral values) on the curve k178 is 14.73 (%).

As a result, the standard deviation of the differences $\sigma_{DF_k176,\,k177}$ (= 7.75 (%)) is smaller than the threshold value $\sigma_{th}$ (= 15 (%)), and the standard deviation of the differences $\sigma_{DF_k176,\,k178}$ (= 10.81 (%)) is smaller than the threshold value $\sigma_{th}$ (=15 (%)), and the standard deviation of the differences $\sigma_{DF_k177,\,k178}$ (=14.73 (%)) is smaller than the threshold value $\sigma_{th}$ (=15 (%)).

Therefore, the two curves k176 and k177 do not differ, the two curves k176 and k178 do not differ, and the two curves k177 and k178 do not differ. Therefore, when the number of integral values is 7, the curves k176 to k178 are not curves that differ from each other.

Fig. 118 shows the integral value spectra of human urine collected on different days when the number of integral values is 9.

With reference to Fig. 118, each of the curves k179 to k181 is a curve CUR created by the analysis device 2 by the method described above. The curves k179 to k181 represent the integral value spectra of the urine from the same individual, the curve k179 represents the integral value spectrum for the urine from the same individual collected on the first day, the curve k180 represents the integral value spectrum for the urine from the same individual collected on the second day, and the curve k181 represents the integral value spectrum for the urine from the same individual collected on the third day.

The measurement conditions for the cyclic voltammogram, on which the calculation of the multiple integral values (9 integral values) for each of the curves k179 to k181 is based, are the same as those shown in Table 6, except that the prescribed potential range (i.e., integral value extraction potential) is 576 mV instead of 192 mV in Table 6.

As a result, in Fig. 118, classes 1 to 8 each consist of a prescribed potential range (i.e., integral value extraction potential) of 576 mV, and class 9 consists of a prescribed potential range (i.e., integral value extraction potential) of 384 mV.
Fig. 119 shows the results of judging whether the curves k179 to k181 shown in Fig. 118 differ from each other.
Whether the curves k179 to k181 differ from each other is judged by judging whether two of the curves k179 to k181 differ from each other for all combinations of two curves among the curves k179 to k181.
There are three combinations of two curves among the curves k179 to k181: (k179, k180), (k179, k181), and (k180, k181).
Fig. 119 shows whether the two curves differ in each of the three combinations (k179, k180), (k179, k181), and (k180, k181).
With reference to Fig. 119, the standard deviation $\sigma_{DF_k179,\,k180}$ of the differences between the multiple integral values (9 integral values) on the curve k179 and the multiple integral values (9 integral values) on the curve k180 is 12.59 (%), the standard deviation $\sigma_{DF_k179,\,k181}$ of the differences between the multiple integral values (9 integral values) on the curve k179 and the multiple integral values (9 integral values) on the curve k181 is 10.75 (%), and the standard deviation $\sigma_{DF_k180,\,k181}$ of the differences between the multiple integral values (9 integral values) on the curve k180 and the multiple integral values (9 integral values) on the curve k181 is 16.42 (%).
As a result, the standard deviation of the differences $\sigma_{DF_k179,\,k180}$ (= 12.59 (%)), is smaller than the threshold value $\sigma_{th}$ (= 15 (%)), the standard deviation of the differences $\sigma_{DF_k179,\,k131}$ (= 10.75 (%)) is smaller than the threshold value $\sigma_{th}$ (= 15 (%)), and the standard deviation of the differences $\sigma_{DF_k180,\,k181}$ (= 16.42 (%)) is greater than the threshold value $\sigma_{th}$ (= 15%).
Therefore, the two curves k179 and k180 do not differ, the two curves k179 and k181 do not differ, and the two curves k180 and k181 differ. Therefore, when the number of integral values is 9, the curves k179 to k181 are not curves that differ from each other.
Fig. 120 shows the integral value spectra of human urine collected on different days when the number of integral values is 13.
With reference to Fig. 120, each of the curves k182 to k184 is a curve CUR created by the analysis device 2 by the method described above. The curves k182 to k184 represent the integral value spectra of the urine from the same individual, the curve k182 represents the integral value spectrum for the urine from the same individual collected on the first day, the curve k183 represents the integral value spectrum for the urine from the same individual collected on the second day, and the curve k184 represents the integral value spectrum for the urine from the same individual collected on the third day.
The measurement conditions for the cyclic voltammogram, on which the calculation of the multiple integral values (13 integral values) for each of the curves k182 to k184 is based, are the same as those shown in Table 6, except that the prescribed potential range (i.e., integral value extraction potential) is 384 mV instead of 192 mV in Table 6.
As a result, in Fig. 120, classes 1 to 13 each consist of a prescribed potential range (i.e., integral value extraction potential) of 384 mV.
Fig. 121 shows the results of judging whether the curves k182 to k184 shown in Fig. 120 differ from each other.
Whether the curves k182 to k184 differ from each other is judged by judging whether two of the curves k182 to k184 differ from each other for all combinations of two curves among the curves k182 to k184.
There are three combinations of two curves among curves k182 to k184: (k182, k183), (k182, k184), and (k183, k184).
Fig. 121 shows whether the two curves differ in each of the three combinations (k182, k183), (k182, k184), and (k183, k184).
With reference to Fig. 121, the standard deviation $\sigma_{DF_k182,\,k183}$ of the differences between the multiple integral values (13 integral values) on the curve k182 and the multiple integral values (13 integral values) on the curve k183 is 29.22 (%), the standard deviation $\sigma_{DF_k182,\,k134}$ of the differences between the multiple integral values (13 integral values) on the curve k182 and the multiple integral values (13 integral values) on the curve k184 is 17.45 (%), and the standard deviation $\sigma_{DF_k183,\,k184}$ of the differences between the multiple integral values (13 integral values) on the curve k183 and the multiple integral values (13 integral values) on the curve k184 is 21.55 (%).
As a result, the standard deviation of the differences $\sigma_{DF_k182,\,k183}$ (= 29.22 (%)) is greater than the threshold value $\sigma_{th}$ (= 15 (%)), the standard deviation of the differences $\sigma_{DF_k182,\,k184}$ (= 17.45 (%)) is greater than the threshold value $\sigma_{th}$ (= 15 (%)), and the standard deviation of the differences $\sigma_{DF_k183,\,k184}$ (= 21.55 (%)) is greater than the threshold value $\sigma_{th}$ (= 15 (%)).
Therefore, the two curves k182 and k183 differ, the two curves k182 and k184 differ, and the two curves k183 and k184 differ (see the "o" in Fig. 121). Therefore, when the number of integral values is 13, the curves k182 to k184 are curves that differ from each other.
Fig. 22 shows the integral value spectra of the urine from the same individual collected on the first day, the urine from the same individual collected on the second day, and the urine from the same individual collected on the third day when the number of integral values (i.e., the number of classes) is 26, and Fig. 23 shows that the standard deviation of the

differences $\sigma_{DF_k14, k15}$ (= 38.45 (%)), the standard deviation of the differences $\sigma_{DF_k14, k16}$ (= 26.04 (%)), and the standard deviation of the differences $\sigma_{DF_k15, k16}$ (= 22.93 (%)) are all greater than the threshold value $\sigma_{th}$ (= 15 (%)).

Therefore, it was found that when the number of integral values is 13 or 26, it is possible to obtain integral value spectra (i.e., curves CUR) for uniquely identifying the urine from the same individual collected on the first day, the urine from the same individual collected on the second day, and the urine from the same individual collected on the third day.

In other words, when the number of integral values is 13, the curve k182 represents the integral value spectrum for uniquely identifying the urine from the same individual collected on the first day, the curve k183 represents the integral value spectrum for uniquely identifying the urine from the same individual collected on the second, and the curve k184 represents the integral value spectrum for uniquely identifying the urine from the same individual collected on the third day.

When the number of integral values is 26, the curve k14 represents the integral value spectrum for uniquely identifying the urine from the same individual collected on the first day, the curve k15 represents an integral value spectrum for uniquely identifying the urine from the same individual collected on the second day, and the curve k16 represents the integral value spectrum for uniquely identifying the urine from the same individual collected on the third day.

Then, the integral value spectrum (i.e., index curve) for uniquely identifying the urine from the same individual collected on the first day is represented by the curve k182 when the number of integral values is 13 and the curve k14 when the number of integral values is 26, the integral value spectrum (i.e., index curve) for uniquely identifying the urine from the same individual collected on the second day is represented by the curve k183 when the number of integral values is 13 and the curve k15 when the number of integral values is 26, and the integral value spectrum (i.e., index curve) for uniquely identifying the urine from the same individual collected on the third day is represented by the curve k184 when the number of integral values is 13 and the curve k16 when the number of integral values is 26.

Therefore, in general, the integral value spectrum (i.e., index curve) for uniquely identifying the urine from the same individual collected on the first day is represented by multiple (i.e., two) index curves k182 and k14 with different numbers of integral values, the integral value spectrum (i.e., index curve) for identifying the urine from the same individual collected on the second day is represented by multiple (i.e., two) index curves k183 and k15 with different numbers of integral values, and the integral value spectrum (i.e., index curve) for uniquely identifying the urine from the same individual collected on the third day is represented by multiple (i.e., two) index curves k184 and k16 with different numbers of integral values.

It was found that the minimum number of integral values required to obtain integral value spectra for uniquely identifying the urine from the same individual collected on the first day, the urine from the same individual collected on the second day, and the urine from the same individual collected on the third day is 13.

When the number of integral values is 4, the standard deviation $\sigma_{k170, k171}$ of the differences between the 4 integral values on the curve k170, which represents the urine from the same individual collected on the first day, and the 4 integral values on the curve k171, which represents the urine from the same individual collected on the second day, is 45.88 (%) (see Fig. 113), which is greater than the threshold value $\sigma_{th}$ (= 15 (%)). When the number of integral values is 13, the standard deviation $\sigma_{k182, k183}$ of the differences between the 13 integral values on the curve k182, which represents the urine from the same individual collected on the first day, and the 13 integral values on the curve k183, which represents the urine from the same individual collected on the second day, is 29.22 (%) (see Fig. 121), which is greater than the threshold value $\sigma_{th}$ (= 15 (%)). When the number of integral values is 26, the standard deviation $\sigma_{k14, k15}$ of the differences between the 26 integral values on the curve k14, which represents the urine from the same individual collected on the first day, and the 26 integral values on the curve k15, which represents the urine from the same individual collected on the second day is 38.45 (%) (see Fig. 23), which is greater than the threshold value $\sigma_{th}$ (= 15 (%)).

As a result, the standard deviation of the differences between the multiple integral values on the curve which represents the urine from the same individual collected on the first day and the multiple integral values on the curve which represents the urine from the same individual collected on the second day is greater than the threshold value $\sigma_{th}$ (= 15 (%)) in all cases where the number of integral values is 4, 13, and 26.

Therefore, the above-described curves k170, k182, and k14 are each an integral value spectrum for uniquely identifying the urine from the same individual collected on the first day, and the above-described curves k171, k183, and k15 are each an integral value spectrum for uniquely identifying the urine from the same individual collected on the second day.

It was found that the minimum number of integral values in the integral value spectrum for uniquely identifying the urine from the same individual collected on the first day and the minimum number of integral values in the integral value spectrum for uniquely identifying the urine from the same individual collected on the second day are both 4.

When the number of integral values is 4, the standard deviation $\sigma_{k170, k172}$ of the differences between the 4 integral values on the curve k170, which represents the urine from the same individual collected on the first day, and the 4 integral values on the curve k172, which represents the urine from the same individual collected on the third day, is 44.49 (%) (see Fig. 113), which is greater than the threshold value $\sigma_{th}$ (= 15 (%)). When the number of integral values is 13, the standard deviation $\sigma_{k182, k189}$ of the differences between the 13 integral values on the curve k182, which represents the urine from the same individual collected on the first day, and the 13 integral values on the curve k184, which represents the urine from the same individual collected on the third day, is 17.45 (%) (see Fig. 121), which is greater than the threshold value $\sigma_{th}$ (= 15 (%)). When the number of integral values is 26, the standard deviation $\sigma_{k14, k16}$ of the differences between the 26 integral values on the curve k14, which represents the urine from the same individual collected on the first day, and the 26 integral values on the curve k16, which represents the urine from the same individual collected on the third day, is 26.04 (%) (see Fig. 23), which is greater than the threshold value $\sigma_{th}$ (= 15 (%)).

As a result, the standard deviation of the differences between the multiple integral values on the curve which represents the urine from the same individual collected on the first day and the multiple integral values on the curve which represents the urine from the same individual collected on the third day is greater than the threshold value $\sigma_{th}$ (= 15 (%)) in all cases where the number of integral values is 4, 13, and 26.

Therefore, the above-described curves k170, k182, and k14 each represent an integral value spectrum for uniquely identifying the urine from the same individual collected on the first day, and the above-described curves k172, k184, and k16 each represent an integral value spectrum for uniquely identifying the urine from the same individual collected on the third day.

It was found that the minimum number of integral values in the integral value spectrum for uniquely identifying the urine from the same individual collected on the first day and the minimum number of integral values in the integral value spectrum for uniquely identifying the urine from the same individual collected on the third day are both 4.

(F) Human saliva

Fig. 122 shows the integral value spectra for human saliva collected on different days when the number of integral values is 3.

With reference to Fig. 122, each of the curves k188 to k190 is a curve CUR created by the analysis device 2 by the method described above. The curves k188 to k190 represent the integral value spectra of saliva from the same individual, the curve k188 represents the integral value spectrum of saliva from the same individual collected on the first day, the curve k189 represents the integral value spectrum of the saliva from the same individual collected on the second day, and the curve k190 represents the integral value spectrum of the saliva from the same individual collected on the third day.

The measurement conditions for the cyclic voltammogram, on which the calculation of the multiple integral values (3 integral values) for each of the curves k188 to k190 is based, are the same as those shown in Table 6, except that the prescribed potential range (i.e., integral value extraction potential) is 1728 mV instead of 192 mV in Table 6.

As a result, in Fig. 122, classes 1 and 2 each consist of a prescribed potential range (i.e., integral value extraction potential) of 1728 mV, and class 3 consists of a prescribed potential range (i.e., integral value extraction potential) of 1536 mV.

Fig. 123 shows the results of judging whether the curves k188 to k190 shown in Fig. 122 differ from each other.

Whether the curves k188 to k190 differ from each other is judged by d judging whether two of the curves k188 to k190 differ from each other for all combinations of two curves from the curves k188 to k190.

There are three combinations of two curves among the curves k188 to k190: (k188, k189), (k188, k190), and (k189, k190).

Fig. 123 shows whether the two curves differ in each of the three combinations (k188, k189), (k188, k190), and (k189, k190).

With reference to Fig. 123, the standard deviation $\sigma_{DF_k188, k189}$ of the differences between the multiple integral values (3 integral values) on the curve k188 and the multiple integral values (3 integral values) on the curve k189 is 11.45 (%), the standard deviation $\sigma_{DF_k188, k190}$ of the differences between the multiple integral values (3 integral values) on the curve k188 and the multiple integral values (3 integral values) on the curve k190 is 19.72 (%), and the standard deviation $\sigma_{DF_k189, k190}$ of the differences between the multiple integral values (3 integral values) on the curve k189 and the multiple integral values (3 integral values) on the curve k190 is 30.41 (%).

As a result, the standard deviation of the differences $\sigma_{DF_k188, k189}$ (= 11.45 (%)) is smaller than the threshold value $\sigma_{th}$ (= 15 (%)), and the standard deviation of the differences $\sigma_{DF_k188, k190}$ (= 19.72 (%)) is greater than the threshold value $\sigma_{th}$ (= 15 (%)), and the standard deviation of the differences $\sigma_{DF_k189, k190}$ (= 30.41 (%)) is greater than the threshold value $\sigma_{th}$ (= 15 (%)).

Therefore, the two curves k188 and k190 differ, the two curves k189 and k190 differ, and the two curves k188 and k189 do not differ. Therefore, when the number of integral values is 3, the curves k188 to k190 are not curves that differ from each other.

Fig. 124 shows the integral value spectra of saliva from an individual collected on different days when the number of integral values is 4.

With reference to Fig. 124, each of the curves k191 to k193 is a curve CUR created by the analysis device 2 by the method described above. The curves k191 to k193 represent the integral value spectra of saliva from the same individual, the curve k191 represents the integral value spectrum of saliva from the same individual collected on the first day, the curve k192 represents the integral value spectrum of saliva from the same individual collected on the second day, and the curve k193 represents the integral value spectrum of saliva from the same individual collected on the third day.

The measurement conditions for the cyclic voltammogram, on which the calculation of the multiple integral values (4 integral values) for each of the curves k191 to k193 is based, are the same as those shown in Table 6, except that the prescribed potential range (i.e., integral value extraction potential) is 1344 mV instead of 192 mV in Table 6.

As a result, in Fig. 124, classes 1 to 3 each consist of a prescribed potential range (i.e., integral value extraction potential) of 1344 mV, and class 4 consists of a prescribed potential range (i.e., integral value extraction potential) of 960 mV.

Fig. 125 shows the results of judging whether the curves k191 to k193 shown in Fig. 124 differ from each other.

Whether the curves k191 to k193 differ from each other is judged by judging whether two of the curves k191 to k193 differ from each other for all combinations of two curves among the curves k191 to k193.

There are three combinations of two curves among the curves k191 to k193: (k191, k192), (k191, k193), and (k192, k193).

Fig. 125 shows whether the two curves differ in each of the three combinations (k191, k192), (k191, k193), and (k192, k193).

With reference to Fig. 125, the standard deviation $\sigma_{DF_k191, k192}$ of the differences between the multiple integral values (4 integral values) on the curve k191 and the multiple integral values (4 integral values) on the curve k192 is 18.14 (%), the standard deviation $\sigma_{DF_k191, k193}$ of the differences between the multiple integral values (4 integral values) on the curve k191 and the multiple integral values (4 integral values) on the curve k193 is 24.39 (%), the standard deviation $\sigma_{DF_k192, k193}$ of the differences between the multiple integral values (4 integral values) on the curve k192 and the multiple integral values (4 integral values) on the curve k193 is 39.68 (%).

As a result, the standard deviation of the differences $\sigma_{DF_k191, k192}$ (= 18.14 (%)) is greater than the threshold value $\sigma_{th}$ (= 15 (%)), the standard deviation of the differences $\sigma_{DF_k191, k193}$ (= 24.39 (%)) is greater than the threshold value $\sigma_{th}$ (= 15 (%)), the standard deviation of the differences $\sigma_{DF_k192, k193}$ (= 39.68 (%)) is greater than the threshold value $\sigma_{th}$ (= 15 (%)).

Therefore, the two curves k191 and k192 differ, the two curves k191 and k193 differ, and the two curves k192 and k193 differ (see the "o" in Fig. 125). Therefore, when the number of integral values is 4, the curves k191 to k193 are curves that differ from each other.

Fig. 126 shows the integral value spectrum of human saliva collected on different days when the number of integral values is 5.

With reference to Fig. 126, each of the curves k194 to k196 is a curve CUR created by the analysis device 2 by the method described above. The curves k194 to k196 represent the integral value spectra of the saliva from the same individual, the curve k194 represents the integral value spectrum of the saliva from the same individual collected on the first day, the curve k195 represents the integral value spectrum of the saliva from the same individual collected on the second day, and the curve k196 represents the integral value spectrum of the saliva from the same individual collected on the third day.

The measurement conditions for the cyclic voltammogram, on which the calculation of the multiple integral values (5 integral values) for each of the curves k194 to k196 is based, are the same as those shown in Table 6, except that the prescribed potential range (i.e., integral value extraction potential) is 1152 mV instead of 192 mV in Table 6.

As a result, in Fig. 126, classes 1 to 4 each consist of a prescribed potential range (i.e., integral value extraction potential) of 1152 mV, and class 5 consists of a prescribed potential range (i.e., integral value extraction potential) of 384 mV.

Fig. 127 shows the results of judging whether the curves k194 to k196 shown in Fig. 126 differ from each other.

Whether the curves k194 to k196 differ from each other is judged by judging whether two of the curves k194 to k196 differ from each other for all combinations of two curves among the curves k194 to k196.

There are three combinations of two curves among the curves k194 to k196: (k194, k195), (k194, k196), and (k195, k196).

Fig. 127 shows whether the two curves differ in each of the three combinations (k194, k195), (k194, k196), and (k195, k196).

With reference to Fig. 127, the standard deviation $\sigma_{DF_k194, k195}$ of the differences between the multiple integral values (5 integral values) on the curve k194 and the multiple integral values (5 integral values) on the curve k195 is 15.52 (%), the standard deviation $\sigma_{DF_k194, k196}$ of the differences between the multiple integral values (5 integral values) on the curve k194 and the multiple integral values (5 integral values) on the curve k196 is 26.19 (%), and the standard deviation $\sigma_{DF_k195, k196}$ of the differences between the multiple integral values (5 integral values) on the curve k195 and the multiple integral values (5 integral values) on the curve k196 is 36.17 (%).

As a result, the standard deviation of the differences $\sigma_{DF_k194, k195}$ (= 15.52 (%)) is greater than the threshold value $\sigma_{th}$ (= 15 (%)), the standard deviation of the differences $\sigma_{DF_k199, k196}$ (= 26.19 (%)) is greater than the threshold $\sigma_{th}$ (= 15 (%)), and the standard deviation of the differences $\sigma_{DF–k195, k196}$ (= 36.17 (%)) is greater than the threshold $\sigma_{th}$ (= 15 (%)).

Therefore, the two curves k194 and k195 differ, the two curves k194 and k196 differ, and the two curves k195 and k196 differ (see the "o" in Fig. 127). Therefore, when the number of integral values is 5, the curves k194 to k196 are mutually different curves.

Fig. 128 shows the integral value spectra of human saliva collected on different days when the number of integral values is 7.

With reference to Fig. 128, each of the curves k197 to k199 is a curve CUR created by the analysis device 2 by the method described above. The curves k197 to k199 represent the integral value spectra of the saliva from the same individual, the curve k197 represents the integral value spectrum of the saliva from the same individual collected on the first day, and the curve k198 represents the integral value spectrum of the saliva from the same individual collected on the second day, and the curve k199 represents the integral value spectrum of the saliva from the same individual collected on the third day.

The measurement conditions for the cyclic voltammogram, on which the calculation of the multiple integral values (7 integral values) for each of the curves k197 to k199 is based, are the same as those shown in Table 6, except that the prescribed potential range (i.e., integral value extraction potential) is 768 mV instead of 192 mV in Table 6.

As a result, in Fig. 128, classes 1 to 6 each consist of a prescribed potential range of 768 mV (i.e., integral value extraction potential), and class 7 consists of a prescribed potential range (i.e., integral value extraction potential) of 384 mV.

Fig. 129 shows the result of judging whether the curves k197 to k199 shown in Fig. 128 differ from each other.

Whether the curves k197 to k199 differ from each other is judged by judging whether two of the curves k197 to k199 differ from each other for all combinations of two curves among the curves k197 to k199.

There are three combinations of two curves among the curves k197 to k199: (k197, k198), (k197, k199), and (k198, k199).

Fig. 129 shows whether the two curves differ in each of the three combinations (k197, k198), (k197, k199), and (k198, k199).

With reference to Fig. 129, the standard deviation $\sigma_{DF_k197,\,k198}$ of the differences between the multiple integral values (7 integral values) on the curve k197 and the multiple integral values (7 integral values) on the curve k198 is 20.88 (%), the standard deviation $\sigma_{DF_k197,\,k199}$ of the differences between the multiple integral values (7 integral values) on the curve k197 and the multiple integral values (7 integral values) on the curve k199 is 22.47 (%), and the standard deviation $\sigma_{DF_k198,\,k199}$ of the differences between the multiple integral values (7 integral values) on the curve k198 and the multiple integral values (7 integral values) on the curve k199 is 34.84 (%).

As a result, the standard deviation of the differences $\sigma_{DF_k197,\,k198}$ (= 20.88 (%)) is greater than the threshold value $\sigma_{th}$ (= 15 (%)), the standard deviation of the differences $\sigma_{DF_k197,\,k199}$ (= 22.47 (%)) is greater than the threshold value $\sigma_{th}$ (= 15 (%)), and the standard deviation of the differences $\sigma_{DF_k198,\,k199}$ (= 34.84 (%)) is greater than the threshold value $\sigma_{th}$ (= 15 (%)).

Therefore, the two curves k197 and k198 differ, the two curves k197 and k199 differ, and the two curves k198 and k199 differ (see the "o" in Fig. 129). Therefore, when the number of integral values is 7, the curves k197 to k199 are curves that differ from each other.

Fig. 130 shows the integral value spectra of human saliva collected on different days when the number of integral values is 9.

With reference to Fig. 130, each of the curves k200 to k202 is a curve CUR created by the analysis device 2 by the method described above. The curves k200 to k202 represent the integral value spectra of the saliva from the same individual, the curve k200 represents the integral value spectrum of the saliva from the same individual collected on the first day, the curve k201 represents the integral value spectrum of the saliva from the same individual collected on the second day, and the curve k202 represents the integral value spectrum of the saliva from the same individual collected on the third day.

The measurement conditions for the cyclic voltammogram, on which the calculation of the multiple integral values (9 integral values) for each of the curves k200 to k202 is based, are the same as those shown in Table 6, except that the prescribed potential range (i.e., the integral value extraction potential) is 576 mV instead of 192 mV in Table 6.

As a result, in Fig. 130, classes 1 to 8 each consist of a prescribed potential range of 576 mV (i.e., integral value extraction potential), and class 9 consists of a prescribed potential range of 384 mV (i.e., integral value extraction potential).

Fig. 131 shows the results of judging whether the curves k200 to k202 shown in Fig. 130 differ from each other.

Whether the curves k200 to k202 differ from each other is judged by judging whether two of the curves k200 to k202 differ from each other for all combinations of two curves among the curves k200 to k202.

There are three combinations of two curves among the curves k200 to k202: (k200, k201), (k200, k202), and (k201, k202).

Fig. 131 shows whether the two curves differ in each of the three combinations (k200, k201), (k200, k202), and (k201, k202).

With reference to Fig. 131, the standard deviation $\sigma_{DF_k200, k201}$ of the differences between the multiple integral values (9 integral values) on the curve k200 and the multiple integral values (9 integral values) on the curve k201 is 29.60 (%), the standard deviation $\sigma_{DF_k200, k202}$ of the differences between the multiple integral values (9 integral values) on the curve k200 and the multiple integral values (9 integral values) on the curve k202 is 23.73 (%), and the standard deviation $\sigma_{DF_k201, k202}$ of the differences between the multiple integral values (9 integral values) on the curve k201 and the multiple integral values (9 integral values) on the curve k202 is 43.96 (%).

As a result, the standard deviation of the differences $\sigma_{DF_k200, k201}$ (= 29.60 (%)) is greater than the threshold value $\sigma_{th}$ (= 15 (%)), and the standard deviation of the differences $\sigma_{DF_k200, k202}$ (= 23.73 (%)) is greater than the threshold value $\sigma_{th}$ (= 15 (%)), and the standard deviation of the differences $\sigma_{DF_k201, k202}$ (= 43.96 (%),) is greater than the threshold value $\sigma_{th}$ (= 15 (%)).

Therefore, the two curves k200 and k201 differ, the two curves k200 and k202 differ, and the two curves k201 and k202 differ (see the "o" in Fig. 131). Therefore, when the number of integral values is 9, the curves k200 to k202 are curves that differ from each other.

Fig. 132 shows the integral value spectra of human saliva collected on different days when the number of integral values is 13.

With reference to Fig. 132, each of the curves k203 to k205 is a curve CUR created by the analysis device 2 by the method described above. The curves k203 to k205 represent the integral value spectra of the saliva from the same individual, the curve k203 represents the integral value spectrum of the saliva from the same individual collected on the first day, the curve k204 shows the integral value spectrum of the saliva from the same individual collected on the second day, and the curve k205 shows the integral value spectrum of the saliva from the same individual collected on the third day.

The measurement conditions for the cyclic voltammogram, on which the calculation of the multiple integral values (13 integral values) for each of the curves k203 to k205 is based, are the same as those shown in Table 6, except that the prescribed potential range (i.e., integral value extraction potential) is 384 mV instead of 192 mV in Table 6.

As a result, in Fig. 132, each of classes 1 to 13 consist of a prescribed potential range of 384 mV (i.e., integral value extraction potential).

Fig. 133 shows the results of judging whether the curves k203 to k205 shown in Fig. 132 differ from each other.

Whether the curves k203 to k205 differ from each other is judged by judging whether two of the curves k203 to k205 differ from each other for all combinations of two curves among the curves k203 to k205.

There are three combinations of two curves among the curves k203 to k205: (k203, k204), (k203, k205), and (k204, k205).

Fig. 133 shows whether the two curves differ in each of the three combinations (k203, k204), (k203, k205), and (k204, k205).

With reference to Fig. 133, the standard deviation $\sigma_{DF_k203, k204}$ of the differences between the multiple integral values (13 integral values) on the curve k203 and the multiple integral values (13 integral values) on the curve k204 is 71.00 (%), the standard deviation $\sigma_{DF_k203, k205}$ of the differences between the multiple integral values (13 integral values) on the curve k203 and the multiple integral values (13 integral values) on the curve k205 is 24.48 (%), and the standard deviation $\sigma_{DF_k204, k205}$ of the differences between the multiple integral values (13 integral values) on the curve k204 and the multiple integral values (13 integral values) on the curve k205 is 76.92 (%).

As a result, the standard deviation of the differences $\sigma_{DF_k203, k204}$ (= 71.00 (%)) is greater than the threshold value $\sigma_{th}$ (= 15 (%)), the standard deviation of the differences $\sigma_{DF_k203, k205}$ (= 24.48 (%)) is greater than the threshold value $\sigma_{th}$ (= 15 (%)), and the standard deviation of the differences $\sigma_{DF_k204, k205}$ (= 76.92 (%)) is greater than the threshold value $\sigma_{th}$ (= 15 (%)).

Therefore, the two curves k203 and k204 differ, the two curves k203 and k205 differ, and the two curves k204 and k205 differ (see the "o" in Fig. 133). Therefore, when the number of integral values is 13, the curves k203 to k205 are curves that differ from each other.

Fig. 24 above shows the integral value spectra of the saliva from the same individual collected on the first, second and third days when the number of integral values (i.e., the number of classes) is 26, and Fig. 25 indicates that the standard deviation of the differences $\sigma_{DF_k17, k18}$ (= 162.23 (%)), the standard deviation of the differences $\sigma_{DF_k17, k19}$ (= 30.81 (%)), and the standard deviation of the differences $\sigma_{DF_k18, k19}$ (= 75.69 (%)) are all greater than the threshold value $\sigma_{th}$ (= 15 (%)).

Therefore, it was found that when the number of integral values is 4, 5, 7, 9, 13, and 26, it is possible to obtain integral value spectra (= curves CUR) for uniquely identify the saliva collected from the same individual on the first day, the second day, and the third day.

In other words, when the number of integral values is 4, the curve k191 represents the integral value spectrum for uniquely identifying the saliva from the same individual collected on the first day, the curve k192 represents the integral value spectrum for uniquely identifying the saliva from the same individual collected on the second day, and the curve k193 represents the integral value spectrum for uniquely identifying the saliva from the same individual collected on the third day.

When the number of integral values is 5, the curve k194 is the integral value spectrum for uniquely identifying the saliva from the same individual collected on the first day, the curve k195 represents the integral value spectrum for uniquely identifying the saliva collected from the same individual on the second day, and the curve k196 represents the integral value spectrum for uniquely identifying the saliva collected from the same individual on the third day.

When the number of integral values is 7, the curve k197 represents the integral value spectrum for uniquely identifying saliva collected from the same individual on the first day, the curve k198 represents the integral value spectrum for uniquely identifying the saliva from the same individual collected on the second day, and the curve k199 represents the integral value spectrum for uniquely identifying the saliva collected from the same individual on the third day.

Furthermore, when the number of integral values is 9, the curve k200 represents the integral value spectrum for uniquely identifying the saliva from the same individual collected on the first day, the curve k201 represents the integral value spectrum for uniquely identifying the saliva from the same individual collected on the second day, and the curve k202 represents the integral value spectrum for uniquely identifying saliva collected from the same individual on the third day.

Furthermore, when the number of integral values is 13, the curve k203 represents the integral value spectrum for uniquely identifying the saliva from the same individual collected on the first day, and the curve k204 represents the integral value spectrum for uniquely identifying the saliva from the same individual collected on the second day, and the curve k205 represents the integral value spectrum for uniquely identifying the saliva collected from the same individual on the third day.

Furthermore, when the number of integral values is 26, the curve k17 represents the integral value spectrum for uniquely identifying the saliva collected from the same individual on the first day, the curve k18 represents the integral value spectrum for uniquely identifying the saliva collected from the same individual on the second day, and the curve k19 represents the integral value spectrum for uniquely identifying the saliva collected from the same individual on the third day.

Then, the integral value spectrum (i.e., index curve) for uniquely identifying the saliva collected from the same individual on the first day is represented by the curve k191 when the number of integral values is 4, the curve k194 when the number of integral values is 5, the curve k197 when the number of integral values is 7, the curve k200 when the number of integral values is 9, the curve k203 when the number of integral values is 13, and the curve k17 when the number of integral values is 26.

The integral value spectrum (i.e., index curve) for uniquely identifying the saliva from the same individual collected on the second day is represented by the curve k192 when the number of integral values is 4, the curve k195 when the number of integral values is 5, the curve k198 when the number of integral values is 7, the curve k201 when the number of integral values is 9, the curve k 204 when the number of integral values is 13, and the curve k18 when the number of integral values is 26.

Furthermore, the integral value spectrum (i.e., index curve) for uniquely identifying the saliva collected from the same individual on the third day is represented by the curve k193 when the number of integral values is 4, the curve k196 when the number of integral values is 5, the curve k199 when the number of integral values is 7, the curve k202 when the number of integral values is 9, the curve k205 when the number of integral values is 13, and the curve k19 when the number of integral values is 26.

Therefore, in general, the integral value spectrum (i.e., index curve) for uniquely identifying the saliva collected from the same individual on the first day is represented by multiple (i.e., 6) index curves (i.e., the curves k191, k194, k197, k200, k203, and k17) with different numbers of integral values, and the integral value spectrum (i.e., index curve) for uniquely identifying the saliva from the same individual on the second day is represented by multiple (i.e., 6) index curves (i.e., the curves k192, k195, k198, k201, k204, and k18) with different numbers of integral values, and the integral value spectrum (i.e., index curve) for uniquely identifying saliva collected from the same individual on the third day is represented by multiple (i.e., 6) index curves (i.e., the curves k193, k196, k199, k202, k205, and k19) with different numbers of integral values.

It was found that the minimum number of integral values required to obtain an integral value spectrum that can uniquely identify saliva collected from the same individual on the first day, saliva collected from the same individual on the second day, and saliva collected from the same individual on the third day is 4.

When the number of integral values is 3, the standard deviation $\sigma_{k188,\ k190}$ of the differences between the 3 integral values on the curve k188, which represents the saliva collected from the same individual on the first day and the 3 integral values on the curve k190, which represents the saliva collected from the same individual on the third day, is 19.72 (%) (see Fig. 123), which is greater than the threshold value $\sigma_{th}$ (= 15 (%)). When the number of integral values is 4, the standard deviation $\sigma_{k191,\ k193}$ of the differences between the 4 integral values on the curve k191, which represents the saliva collected from the same individual on the first day and the 4 integral values on the curve k193, which represents the saliva collected from the same individual on the third day, is 24.39 (%) (see Fig. 125), which is greater than the threshold value $\sigma_{th}$ (= 15 (%)). When the number of integral values is 5, the standard deviation $\sigma_{k194,\ k196}$ of the differences between the 5 integral values on the curve k194, which represents the saliva collected from the same individual on the first day and the 5 integral values on the curve k196, which represents the saliva collected from the same individual on the third day, is 26.19 (%), which is greater than the threshold value $\sigma_{th}$ (= 15 (%)) (see Fig. 127). When the number of integral values is 7, the standard deviation $\sigma_{k197, k199}$ of the differences between the 7 integral values on the curve k197, which represents the saliva collected from the same individual on the first day and the 7 integral values on the curve k199, which represents the saliva collected from the same individual on the third day, is 22.47 (%) (see Fig. 129), which is greater than the threshold value $\sigma_{th}$ (= 15 (%)).

When the number of integral values is 9, the standard deviation $\sigma_{k200, k202}$ of the differences between the 9 integral values on the curve k200, which represents the saliva collected from the same individual on the first day and the 9 integral values on the curve k202, which represents the saliva collected from the same individual on the third day, is 23.73 (%) (see Fig. 131), which is greater than the threshold value $\sigma_{th}$ (= 15 (%)). When the number of integral values is 13, the standard deviation $\sigma_{k203, k205}$ of the differences between the 13 integral values on the curve k203, which represents the saliva collected from the same individual on the first day and the 13 integral values on the curve k205, which represents the saliva collected from the same individual on the third day, is 24.48 (%) (see Fig. 133), which is greater than the threshold value $\sigma_{th}$ (= 15 (%)). When the number of integral values is 26, the standard deviation $\sigma_{k17, k19}$ of the differences between the 26 integral values on the curve k17, which represents the saliva collected from the same individual on the first day and the 26 integral values on the curve k19, which represents the saliva collected from the same individual on the third day, is 30.81 (%) (see Fig. 25), which is greater than the threshold value $\sigma_{th}$ (= 15 (%)).

As a result, the standard deviation of the differences between the multiple integral values on the curve that represents the saliva collected from the same individual on the first day and the multiple integral values on the curve that represents the saliva collected from the same individual on the third day is greater than the threshold value $\sigma_{th}$ (= 15 (%)) in all cases where the number of integral values is 3, 4, 5, 7, 9, 13, and 26.

Therefore, the curves k188, k191, k194, k197, k200, k203, and k17 described above each represent an integral value spectrum for uniquely identifying the saliva from the same individual collected on the first day, and the curves k190, k193, k196, k199, k202, k205, and k19 described above each represent an integral value spectrum for uniquely identifying the saliva from the same individual collected on the third day.

It was found that the minimum number of integral values in the integral value spectrum for uniquely identifying the saliva from the same individual collected on the first day and the minimum number of integral values in the integral value spectrum for uniquely identifying the saliva from the same individual collected on the third day are both 3.

When the number of integral values is 3, the standard deviation $\sigma_{k189, k190}$ of the differences between the 3 integral values on the curve k189, which represents the saliva from the same individual collected on the second day, and the 3 integral values in curve k190, which represents the saliva form the same individual collected on the third day, is 30.41 (%) (see Fig. 123), which is greater than the threshold value $\sigma_{th}$ (= 15 (%)). When the number of integral values is 4, the standard deviation $\sigma_{k192, k193}$ of the differences between the 4 integral values on the curve k192, which represents the saliva from the same individual collected on the second day, and the 4 integral values on the curve k193, which represents the saliva from the same individual collected on the third day, is 39.68 (%) (see Fig. 125), which is greater than the threshold $\sigma_{th}$ (= 15 (%)). When the number of integral values is 5, the standard deviation $\sigma_{k195, k196}$ of the differences between the 5 integral values on the curve k195, which represents the saliva from the same individual collected on the second day, and the 5 integral values on the curve k196, which represents the saliva from the same individual collected on the third day, is 36.17 (%) (see Fig. 127), which is greater than the threshold $\sigma_{th}$ (=15 (%)). When the number of integral values is 7, the standard deviation $\sigma_{k198, k199}$ of the differences between the 7 integral values on curve k198, which represents the saliva from same individual collected on the second day, and the 7 integral values on the curve k199, which represents the saliva from the same individual collected on the third day, is 34.84 (%) (see Fig. 129), which is greater than the threshold $\sigma_{th}$ (=15 (%)).

When the number of integral values is 9, the standard deviation $\sigma_{k201, k202}$ of the differences between the 9 integral values on the curve k201, which represents the saliva collected from the same individual on the second day and the 9 integral values on the curve k202, which represents the saliva collected from the same individual on the third day, is 43.96 (%) (see Fig. 131), which is greater than the threshold value $\sigma_{th}$ (= 15 (%)). When the number of integral values is 13, the standard deviation $\sigma_{k204, k205}$ of the differences between the 13 integral values on the curve k204, which represents the saliva from the same individual collected on the second day and the 13 integral values on the curve k205, which represents the saliva collected from the same individual on the third day, is 76.92 (%), which is greater than the threshold value $\sigma_{th}$ (= 15 (%)) (see Fig. 133). When the number of integral values is 26, the standard deviation $\sigma_{k18, k19}$ of the differences between the 26 integral values on the curve k18, which represents the saliva collected from the same individual on the second day and the 26 integral values on the curve k19, which represents the saliva collected from the same individual on the third day, is 75.69 (%) (see Fig. 25), which is greater than the threshold value $\sigma_{th}$ (= 15 (%)).

As a result, the standard deviation of the differences between the multiple integral values on the curve which represents the saliva collected from the same individual on the second day and the multiple integral values on the curve which represents the saliva collected from the same individual on the third day is greater than the threshold value $\sigma_{th}$ (= 15 (%)) in all cases where the number of integral values is 3, 4, 5, 7, 9, 13, and 26.

Therefore, the curves k189, k192, k195, k198, k201, k204, and k18 are each an integral value spectrum for uniquely identifying the saliva collected from the same individual on the second day, and the curves k190, k193, k196, k199, k202, k205, and k19 are each an integral value spectrum for uniquely identifying the saliva collected from the same individual on the third day.

It was found that the minimum number of integral values in the integral value spectrum for uniquely identifying the saliva collected from the same individual on the second day and the minimum number of integral values in the integral value spectrum for uniquely identifying the saliva collected from the same individual on the third day are both 3.

(G) Same wine

Fig. 134 shows two integral value spectra of the same wine when the number of integral values is 3.

The curve k208 represents the integral value spectrum created by the analysis device 2 based on the cyclic voltammogram CVG_a measured using the sensor 11a, and the curve k209 represents the integral value spectrum created by the analysis device 2 based on the cyclic voltammogram CVG_b measured using the sensor 11b.

The analyte is the same when cyclic voltammograms CVG_a and CVG_b are measured using the sensors 11a and 11b, respectively. The description of the sensors 11a and 11b is as provided above.

Fig. 135 shows the results of judging whether the curves k208 and k209 shown in Fig. 134 differ from each other.

With reference to Fig. 135, the standard deviation $\sigma_{k208,\ k209}$ of the differences between the multiple integral values (3 values) on the curve k208 and the multiple integral values (3 values) on the curve 209 is 1.24 (%).

As a result, the standard deviation of the differences $\sigma_{k208,k209}$ (= 1.24 (%)), is smaller than the threshold value $\sigma_{th}$ (= 15 (%)).

Therefore, the two curves k208 and k209 do not differ from each other (see the "×" in Fig. 135).

Fig. 136 shows two integral value spectra of the same wine when the number of integral values is 4.

The curve k210 represents the integral value spectrum created by the analysis device 2 based on the cyclic voltammogram CVG_a measured using the sensor 11a, and the curve k211 represents the integral value spectrum created by the analysis device 2 based on the cyclic voltammogram CVG_b measured using the sensor 11b.

Fig. 137 shows the result of judging whether the curves k210 and k211 shown in Fig. 136 differ from each other.

With reference to Fig. 137, the standard deviation $\sigma_{k210,\ k211}$ of the differences between the multiple integral values (4 values) on the curve k210 and the multiple integral values (4 values) on the curve 211 is 3.96 (%).

As a result, the standard deviation of the differences $\sigma_{k210,k211}$ (= 3.96 (%)) is smaller than the threshold value $\sigma_{th}$ (= 15%).

Therefore, the two curves k210 and k211 do not differ from each other (see the "×" in Fig. 137).

Fig. 138 shows two integral value spectra of the same wine when the number of integral values is 6.

The curve k212 represents the integral value spectrum created by the analysis device 2 based on the cyclic voltammogram CVG_a measured using the sensor 11a, and the curve k213 represents the integral value spectrum created by the analysis device 2 based on the cyclic voltammogram CVG_b measured using the sensor 11b.

Fig. 139 shows the results of judging whether the curves k212 and k213 shown in Fig. 138 differ from each other.

With reference to Fig. 139, the standard deviation $\sigma_{k212,\ k213}$ of the differences between the multiple integral values (6 values) on the curve k212 and the multiple integral values (6 values) on the curve 213 is 3.85 (%).

As a result, the standard deviation of the differences $\sigma_{k212,k213}$ (= 3.85 (%)) is smaller than the threshold value $\sigma_{th}$ (= 15 (%)).

Therefore, the two curves k212 and k213 do not differ from each other (see "×" in Fig. 139).

Fig. 140 shows two integral value spectra of the same wine when the number of integral values is 8.

The curve k214 represents the integral value spectrum created by the analysis device 2 based on the cyclic voltammogram CVG_a measured using the sensor 11a, and the curve k215 represents the integral value spectrum created by the analysis device 2 based on the cyclic voltammogram CVG_b measured using the sensor 11b.

Fig. 141 shows the result of judging whether the curves k214 and k215 shown in Fig. 140 differ from each other.

With reference to Fig. 141, the standard deviation $\sigma_{k214,\ k215}$ of the differences between the multiple integral values (8 values) on the curve k214 and the multiple integral values (8 values) on the curve 215 is 4.24 (%).

As a result, the standard deviation of the differences $\sigma_{k214,k215}$ (= 4.24 (%)) is smaller than the threshold value $\sigma_{th}$ (= 15 (%)).

Therefore, the two curves k214 and k215 do not differ from each other (see the "×" in Fig. 141).

Fig. 142 shows two integral value spectra of the same wine when the number of integral values is 10.

The curve k216 represents the integral value spectrum created by the analysis device 2 based on the cyclic voltammogram CVG_a measured using the sensor 11a, and the curve k217 represents the integral value spectrum created by the analysis device 2 based on the cyclic voltammogram CVG_b measured using the sensor 11b.

Fig. 143 shows the result of judging whether the curves k216 and k217 shown in Fig. 142 differ from each other.

With reference to Fig. 143, the standard deviation $\sigma_{k216,\ k217}$ of the differences between the multiple integral values (10 integral values) on the curve k216 and the multiple integral values (10 integral values) on the curve k217 is 4.61

(%).

As a result, the standard deviation of the differences $\sigma_{k216, k217}$ (= 4.61 (%)) is smaller than the threshold value $\sigma_{th}$ (= 15%).

Therefore, the two curves k216 and k217 do not differ from each other (see the "×" in Fig. 143).

Fig. 144 shows two integral value spectra of the same wine when the number of integral values is 14.

The curve k218 represents the integral value spectrum created by the analysis device 2 based on the cyclic voltammogram CVG_a measured using the sensor 11a, and the curve k219 represents the integral value spectrum created by the analysis device 2 based on the cyclic voltammogram CVG_b measured using the sensor 11b.

Fig. 145 shows the results of judging whether the curves k218 and k219 shown in Fig. 144 differ from each other.

With reference to Fig. 145, the standard deviation $\sigma_{k218, k219}$ of the differences between the multiple integral values (values 14) on the curve k218 and the multiple integral values (values 14) on the curve 219 is 5.00 (%).

As a result, the standard deviation of the differences $\sigma_{k218, k219}$ (= 5.00 (%)) is smaller than the threshold value $\sigma_{th}$ (= 15%).

Therefore, the two curves k218 and k219 do not differ from each other (see "×" in Fig. 145).

Fig. 146 shows two integral value spectra of the same wine when the number of integral values is 28.

The curve k220 represents the integral value spectrum created by the analysis device 2 based on the cyclic voltammogram CVG_a measured using the sensor 11a, and the curve k221 represents the integral value spectrum created by the analysis device 2 based on the cyclic voltammogram CVG_b measured using the sensor 11b.

Fig. 147 shows the results of judging whether the curves k220 and k221 shown in Fig. 146 differ from each other.

With reference to Fig. 147, the standard deviation $\sigma_{k220, k221}$ of the differences between the multiple integral values (28 integral values) on the curve k220 and the multiple integral values (28 integral values) on the curve 221 is 7.86 (%).

As a result, the standard deviation of the differences $\sigma_{k220, k221}$ (= 7.86 (%)) is smaller than the threshold value $\sigma_{th}$ (= 15%).

Therefore, the two curves k220 and k221 do not differ from each other (see the "×" in Fig. 147).

Fig. 148 shows two integral value spectra of the same wine when the number of integral values is 41.

The curve k222 represents the integral value spectrum created by the analysis device 2 based on the cyclic voltammogram CVG_a measured using the sensor 11a, and the curve k223 represents the integral value spectrum created by the analysis device 2 based on the cyclic voltammogram CVG_b measured using the sensor 11b.

Fig. 149 shows the result of judging whether the curves k222 and k223 shown in Fig. 148 differ from each other.

With reference to Fig. 149, the standard deviation $\sigma_{k222, k223}$ of the differences between the multiple integral values (41 values) on the curve k222 and the multiple integral values (41 values) on the curve 223 is 6.97 (%).

As a result, the standard deviation of the differences$\sigma_{k222, k223}$ (= 6.97 (%)) is smaller than the threshold value $\sigma_{th}$ (= 15%).

Therefore, the two curves k222 and k223 do not differ from each other (see "×" in Fig. 149).

Fig. 150 shows two integral value spectra of the same wine when the number of integral values is 95.

The curve k224 represents the integral value spectrum created by the analysis device 2 based on the cyclic voltammogram CVG_a measured using the sensor 11a, and the curve k225 represents the integral value spectrum created by the analysis device 2 based on the cyclic voltammogram CVG_b measured using the sensor 11b.

Fig. 151 shows the result of judging whether the curves k224 and k225 shown in Fig. 150 differ from each other.

With reference to Fig. 151, the standard deviation $\sigma_{k224, k225}$ of the differences between the multiple integral values (95 values) on the curve k224 and the multiple integral values (95 values) on the curve 225 is 9.75 (%).

As a result, the standard deviation of the differences $\sigma_{k224, k225}$ (= 9.75 (%)) is smaller than the threshold value $\sigma_{th}$ (= 15%).

Therefore, the two curves k224 and k225 do not differ from each other (see the "×" in Fig. 151).

Fig. 152 shows two integral value spectra of the same wine when the number of integral values is 142.

The curve k226 represents the integral value spectrum created by the analysis device 2 based on the cyclic voltammogram CVG_a measured using the sensor 11a, and the curve k227 represents the integral value spectrum created by the analysis device 2 based on the cyclic voltammogram CVG_b measured using the sensor 11b.

Fig. 153 shows the result of judging whether the curves k226 and k227 shown in Fig. 152 differ from each other.

With reference to Fig. 153, the standard deviation $\sigma_{k226, k227}$ of the differences between the multiple integral values (142 values) on the curve k226 and the multiple integral values (142 values) on the curve 227 is 7.29 (%).

As a result, the standard deviation of the differences $\sigma_{k226, k227}$ (= 7.29 (%)) is smaller than the threshold value $\sigma_{th}$ (= 15%).

Therefore, the two curves k226 and k227 do not differ from each other (see "×" in Fig. 153).

Fig. 26 shows two integral value spectra of the same wine when the number of integral values (the number of classes) is 284, and Fig. 27 shows that the standard deviation of the differences $\sigma_{DF_k20, k21}$ is smaller than the threshold value $\sigma_{th}$ (= 15 (%)).

Therefore, it was found that when the number of integral values is 3, 4, 6, 8, 10, 14, 28, 41, 95, 142, and 284, the integral value spectrum created by the analysis device 2 based on the cyclic voltammogram CVG_a measured using the sensor 11a and the integral value spectrum created by the analysis device 2 based on the cyclic voltammogram CVG_b measured using the sensor 11b do not differ from each other.

It was also found that the minimum number of integral values required to judge that the integral value spectrum created by the analysis device 2 based on the cyclic voltammogram CVG_a measured using the sensor 11a does not differ from the integral value spectrum created by the analysis device 2 based on the cyclic voltammogram CVG_b measured using the sensor 11b is 3.

(H) Other Indexes

Fig. 154 shows the integral value spectrum created based on the cyclic voltammograms CVGs measured with varying potential scan rates when the number of integral values is 3.

With reference to Fig. 154, the curve k231 represents the integral value spectrum created by the analysis device 2 based on the cyclic voltammogram CVG_600 mV/s measured at the potential scan rate of 600 mV/s, and the curve k232 represents the integral value spectrum created by the analysis device 2 based on the cyclic voltammogram CVG_500 mV/s measured with a potential scan rate of 500 mV/s, and the curve k233 represents the integral value spectrum created by the analysis device 2 based on the cyclic voltammogram CVG_300 mV/s measured with a potential scan rate of 300 mV/s.

The measurement conditions for the cyclic voltammogram, on which the calculation of the multiple integral values (3 integral values) for each of the curves k231 to k233 is based, are the same as those shown in Table 7, except that the prescribed potential range (i.e., integral value extraction potential) is 1674.4 mV instead of 18.4 mV in Table 7.

As a result, in Fig. 154, classes 1 and 2 each consist of a prescribed potential range (i.e., integral value extraction potential) of 1674.4 mV, and class 3 consists of a prescribed potential range (i.e., integral value extraction potential) of 1637.6 mV.

Fig. 155 shows the results of judging whether the curves k231 to k233 shown in Fig. 154 differ from each other.

Whether the curves k231 to k233 differ from each other is judged by judging whether two of the curves k231 to k233 differ from each other for all combinations of two curves among the curves k231 to k233.

There are three combinations of two curves from among the curves k231 to k233: (k231, k232), (k231, k233), and (k232, k233).

Fig. 155 shows whether the two curves differ in each of the three combinations (k231, k232), (k231, k233), and (k232, k233).

With reference to Fig. 155, the standard deviation $\sigma_{DF_k231,\,k232}$ of the differences between the multiple integral values (3 integral values) on the curve k231 and the multiple integral values (3 integral values) on the curve k232 is 4.16 (%), the standard deviation $\sigma_{DF_k231,\,k233}$ of the differences between the multiple integral values (3 integral values) on the curve k231 and the multiple integral values (3 integral values) on the curve k233 is 6.09 (%), and the standard deviation $\sigma_{DF_k232,\,k233}$ of the differences between the multiple integral values (3 integral values) on the curve k232 and the multiple integral values (3 integral values) on the curve k233 is 3.84 (%).

As a result, the standard deviation of the differences $\sigma_{DF_k231,\,k232}$ (= 4.16 (%)) is smaller than the threshold value $\sigma_{th}$ (= 15 (%)), the standard deviation of the differences $\sigma_{DF_k231,\,k233}$ (= 6.09 (%)) is smaller than the threshold value $\sigma_{th}$ (= 15 (%)), and the standard deviation of the differences $\sigma_{DF_k232,\,k233}$ (= 3.84 (%)) is smaller than the threshold value $\sigma_{th}$ (= 15 (%)).

Therefore, the two curves k231 and k232 do not differ, the two curves k231 and k233 do not differ, and the two curves k232 and k233 do not differ (see the "×" in Fig. 155). Therefore, when the number of integral values is 3, the curves k231 to k233 are not curves that differ from each other.

Fig. 156 shows the integral value spectra based on the cyclic voltammograms CVGs measured with varying potential scan rates when the number of integral values is 4.

With reference to Fig. 156, the curve k234 represents the integral value spectrum created by the analysis device 2 based on the cyclic voltammogram CVG_600 mV/s measured with a potential scan rate of 600 mV/s, and the curve k235 represents the integral value spectrum created by the analysis device 2 based on the cyclic voltammogram CVG_500 mV/s measured with a potential scan rate of 500 mV/s, and the curve k236 represents the integral value spectrum created by the analysis device 2 based on the cyclic voltammogram CVG_300 mV/s measured with a potential scan rate of 300 mV/s.

The measurement conditions for the cyclic voltammogram, on which the calculation of the multiple integral values (4 integral values) for each of the curves k234 to k236 is based, are the same as those shown in Table 7, except that the prescribed potential range (i.e., integral value extraction potential) is 1251.2 mV instead of 18.4 mV in Table 7.

As a result, in Fig. 156, classes 1 to 3 each consist of a prescribed potential range (i.e., integral value extraction potential) of 1251.2 mV, and class 4 consists of a prescribed potential range (i.e., integral value extraction potential) of 1232.8 mV.

Fig. 157 shows the results of judging whether the curves k234 to k236 shown in Fig. 156 differ from each other.

Whether the curves k234 to k236 differ from each other is judged by judging whether two of the curves k234 to k236 differ from each other for all combinations of two curves among the curves k234 to k236.

There are three combinations of two curves among the curves k234 to k236: (k234, k235), (k234, k236), and (k235, k236).

Fig. 157 shows whether the two curves differ in each of the three combinations (k234, k235), (k234, k236), and (k235, k236).

With reference to Fig. 157, the standard deviation $\sigma_{DF_k234,\ k235}$ of the differences between the multiple integral values (4 integral values) on the curve k234 and the multiple integral values (4 integral values) on the curve k235 is 6.06 (%), the standard deviation $\sigma_{DF_k234,\ k236}$ of the differences between the multiple integral values (4 integral values) on the curve k234 and the multiple integral values (4 integral values) on the curve k236 is 16.30 (%), and the standard deviation $\sigma_{DF_k235,\ k236}$, of the differences between the multiple integral values (4 integral values) on the curve k235 and the multiple integral values (4 integral values) on the curve k236 is 11.05 (%).

As a result, the standard deviation of the difference, $\sigma_{DF_k234,\ k235}$ (= 6.06 (%)), is smaller than the threshold value $\sigma_{th}$ (= 15 (%)), the standard deviation of the difference, $\sigma_{DF_k234,\ k236}$ (= 16.30 (%)) is greater than the threshold value $\sigma_{th}$ (= 15 (%)), and the standard deviation of the differences $\sigma_{DF_k235,\ k236}$ (= 11.05%) is less than the threshold value $\sigma_{th}$ (= 15 (%)).

Therefore, the two curves k234 and k235 do not differ (see "×" in Fig. 157), the two curves k234 and k236 do differ (see "o" in Fig. 157), and the two curves k235 and k236 do not differ (see "×" in Fig. 157). Therefore, when the number of integral values is 4, the curves k234 to k236 are not mutually different curves.

Fig. 158 shows the integral value spectra based on the cyclic voltammograms CVGs measured with varying potential scan rates when the number of integral values is 5.

With reference to Fig. 158, the curve k237 represents the integral value spectrum created by the analysis device 2 based on the cyclic voltammogram CVG_600 mV/s measured with a potential scan rate of 600 mV/s, the curve k238 represents the integral value spectrum created by the analysis device 2 based on the cyclic voltammogram CVG_500 mV/s measured with a potential scan rate of 500 mV/s, and the curve k239 represents the integral value spectrum created by the analysis device 2 based on the cyclic voltammogram CVG_300 mV/s measured with a potential scan rate of 300 mV/s.

The measurement conditions for the cyclic voltammogram, on which the calculation of the multiple integral values (5 integral values) for each of the curves k237 to k239 is based, are the same as those shown in Table 7, except that the prescribed potential range (i.e., integral value extraction potential) is 1012 mV instead of 18.4 mV in Table 7.

As a result, in Fig. 158, classes 1 to 4 each consist of a prescribed potential range (i.e., integral value extraction potential) of 1012 mV, and class 5 consists of a prescribed potential range (i.e., integral value extraction potential) of 938.4 mV.

Fig. 159 shows the results of judging whether the curves k237 to k239 shown in Fig. 158 differ from each other.

Whether the curves k237 to k239 differ from each other is judged by judging whether two of the curves k237 to k239 differ from each other for all combinations of two curves among the curves k237 to k239.

There are three combinations of two curves among the curves k237 to k239: (k237, k238), (k237, k239), and (k238, k239).

Fig. 159 shows whether the two curves differ in each of the three combinations (k237, k238), (k237, k239), and (k238, k239).

With reference to Fig. 159, the standard deviation $\sigma_{DF_k237,\ k238}$ of the differences between the multiple integral values (5 integral values) on the curve k237 and the multiple integral values (5 integral values) on the curve k238 is 7.06 (%), the standard deviation $\sigma_{DF_k237,\ k239}$ of the differences between the multiple integral values (5 integral values) on the curve k237 and the multiple integral values (5 integral values) on the curve k239 is 15.11 (%), and the standard deviation $\sigma_{DF_k238,\ k239}$ of the differences between the multiple integral values (5 integral values) on the curve k238 and the multiple integral values (5 integral values) on the curve k239 is 9.04 (%).

As a result, the standard deviation of the differences $\sigma_{DF_k237,\ k238}$ (= 7.06 (%)) is smaller than the threshold value $\sigma_{th}$ (= 15 (%)), the standard deviation of the differences $\sigma_{DF_k237,\ k239}$ (= 15.11 (%)) is greater than the threshold value $\sigma_{th}$ (= 15 (%)), and the standard deviation of the differences $\sigma_{DF_k238,\ k239}$ (= 9.04 (%)) is smaller than the threshold value $\sigma_{th}$ (= 15 (%)).

Therefore, the two curves k237 and k238 do not differ (see "×" in Fig. 159), the two curves k237 and k239 differ (see "◦" in Fig. 159), and the two curves k238 and k239 do not differ (see "×" in Fig. 159). Therefore, when the number of integral values is 5, the curves k237 to k239 are not curves that differ from each other.

Fig. 160 shows the integral value spectra based on the cyclic voltammograms CVGs measured with varying potential scan rates when the number of integral values is 6.

With reference to Fig. 160, the curve k240 shows the integral value spectrum created by the analysis device 2 based on the cyclic voltammogram CVG_600 mV/s measured with a potential scan rate of 600 mV/s, the curve k241 represents the integral value spectrum created by the analysis device 2 based on the cyclic voltammogram CVG_500 mV/s measured with a potential scan rate of 500 mV/s, and the curve k242 represents the integral value spectrum created by the analysis device 2 based on the cyclic voltammogram CVG_300 mV/s measured with a potential scan rate of 300 mV/s.

The measurement conditions for the cyclic voltammogram, on which the calculation of the multiple integral values (6 integral values) for each of the curves k240 to k242 is based, are the same as those shown in Table 7, except that the prescribed potential range (i.e., integral value extraction potential) is 828 mV instead of 18.4 mV in Table 7.

As a result, in Fig. 160, classes 1 to 5 each consist of a prescribed potential range (i.e., integral value extraction potential) of 828 mV, and class 6 consists of a prescribed potential range (i.e., integral value extraction potential) of 846.4 mV.

Fig. 161 shows the results of judging whether the curves k240 to k242 shown in Fig. 160 differ from each other.

Whether the curves k240 to k242 differ from each other is judged by judging whether two of the curves k240 to k242 differ from each other for all combinations of two curves among the curves k240 to k242.

There are three combinations of two curves among the curves k240 to k242: (k240, k241), (k240, k242), and (k241, k242).

Fig. 161 shows whether the two curves differ in each of the three combinations (k240, k241), (k240, k242), and (k241, k242).

With reference to Fig. 161, the standard deviation $\sigma_{DF_k240,k241}$ of the differences between the multiple integral values (6 integral values) on the curve k240 and the multiple integral values (6 integral values) on the curve k241 is 9.07 (%), the standard deviation $\sigma_{DF_k240,k242}$ of the differences between the multiple integral values (6 integral values) on the curve k240 and the multiple integral values (6 integral values) on the curve k242 is 20.09 (%), and the standard deviation $\sigma_{DF_k241,k242}$ of the differences between the multiple integral values (6 integral values) on the curve k241 and the multiple integral values (6 integral values) on the curve k242 is 13.67 (%).

As a result, the standard deviation of the differences $\sigma_{DF_k240,k241}$ (= 9.07 (%)) is smaller than the threshold value $\sigma_{th}$ (= 15 (%)), the standard deviation of the differences $\sigma_{DF_k240,k242}$ (= 20.09 (%)) is greater than the threshold value $\sigma_{th}$ (= 15 (%)), and the standard deviation of the differences $\sigma_{DF_k241,k242}$ (= 13.67%) is smaller than the threshold value $\sigma_{th}$ (= 15 (%)).

Therefore, the two curves k240 and k241 do not differ (see "×" in Fig. 161), the two curves k240 and k242 differ (see "◦" in Fig. 161), and the two curves k241 and k242 do not differ (see "×" in Fig. 161). Therefore, when the number of integral values is 6, the curves k240 to k242 are not curves that differ from each other.

Fig. 162 shows the integral value spectra based on the cyclic voltammograms CVGs measured with varying potential scan rates when the number of integral values is 7.

With reference to Fig. 162, the curve k243 represents the integral value spectrum created by the analysis device 2 based on the cyclic voltammogram CVG_600 mV/s measured with a potential scan rate of 600 mV/s, the curve k244 represents the integral value spectrum created by the analysis device 2 based on the cyclic voltammogram CVG_500 mV/s measured with a potential scan rate of 500 mV/s, and the curve k245 represents the integral value spectrum created by the analysis device 2 based on the cyclic voltammogram CVG_300 mV/s measured with a potential scan rate of 300 mV/s.

The measurement conditions for the cyclic voltammogram, on which the calculation of the multiple integral values (7 integral values) for each of the curves k243 to k245 is based, are the same as those shown in Table 7, except that the prescribed potential range (i.e., integral value extraction potential) is 717.6 mV instead of 18.4 mV in Table 7.

As a result, in Fig. 162, classes 1 to 6 each consist of a prescribed potential range (i.e., integral value extraction potential) of 717.6 mV, and class 7 consists of a prescribed potential range (i.e., integral value extraction potential) of 680.8 mV.

Fig. 163 shows the results of judging whether the curves k243 to k245 shown in Fig. 162 differ from each other.

Whether the curves k243 to k245 differ from each other is judged by judging whether two of the curves k243 to k245 differ from each other for all combinations of two curves among the curves k243 to k245.

There are three combinations of two curves among the curves k243 to k245: (k243, k244), (k243, k245), and (k244, k245).

Fig. 163 shows whether the two curves differ in each of the three combinations (k243, k244), (k243, k245), and (k244, k245).

With reference to Fig. 163, the standard deviation $\sigma_{DF_k243,k244}$ of the differences between the multiple integral values (7 integral values) on the curve k243 and the multiple integral values (7 integral values) on the curve k244 is 8.75 (%), the standard deviation $\sigma_{DF_k243,k245}$ of the differences between the multiple integral values (7 integral values) on the curve k243 and the multiple integral values (7 integral values) on the curve k245 is 16.32 (%), and the standard deviation $\sigma_{DF_k244,k245}$ of the differences between the multiple integral values (7 integral values) on the curve k244 and the multiple integral values (7 integral values) on the curve k245 is 9.88 (%).

As a result, the standard deviation of the differences $\sigma_{DF_k243, k244}$ (= 8.75 (%)) is smaller than the threshold value $\sigma_{th}$ (= 15 (%)), the standard deviation of the differences $\sigma_{DF_k243, k245}$ (= 16.32 (%)) is greater than the threshold value $\sigma_{th}$ (= 15 (%)), and the standard deviation of the differences $\sigma_{DF_k244, k245}$ (= 9.88 (%)) is smaller than the threshold value $\sigma_{th}$ (= 15 (%)).

Therefore, the two curves k243 and k244 do not differ (see "×" in Fig. 163), the two curves k243 and k245 differ (see "∘" in Fig. 163), and the two curves k244 and k245 do not differ (see "×" in Fig. 163). Therefore, when the number of integral values is 7, the curves k243 to k245 are not curves that differ from each other.

Fig. 164 shows the integral value spectra based on the cyclic voltammograms CVGs measured with varying potential scan rates when the number of integral values is 8.

With reference to Fig. 164, the curve k246 represents the integral value spectrum created by the analysis device 2 based on the cyclic voltammogram CVG_600 mV/s measured with a potential scan rate of 600 mV/s, the curve k247 represents the integral value spectrum created by the analysis device 2 based on the cyclic voltammogram CVG_500 mV/s measured with a potential scan rate of 500 mV/s, and the curve k248 represents the integral value spectrum created by the analysis device 2 based on the cyclic voltammogram CVG_300 mV/s measured with a potential scan rate of 300 mV/s.

The measurement conditions for the cyclic voltammogram, on which the calculation of the multiple integral values (8 integral values) for each of the curves k246 to k248 is based, are the same as those shown in Table 7, except that the prescribed potential range (i.e., integral value extraction potential) is 625.6 mV instead of 18.4 mV in Table 7.

As a result, in Fig. 164, classes 1 to 7 each consist of a prescribed potential range (i.e., integral value extraction potential) of 625.6 mV, and class 8 consists of a prescribed potential range (i.e., integral value extraction potential) of 607.2 mV.

Fig. 165 shows the results of judging whether the curves k246 to k248 shown in Fig. 164 differ from each other.

Whether the curves k246 to k248 differ from each other is judged by judging whether two of the curves k246 to k248 differ from each other for all combinations of two curves from the curves k246 to k248.

There are three combinations of two curves among the curves k246 to k248: (k246, k247), (k246, k248), and (k247, k248).

Fig. 165 shows whether the two curves differ in each of the three combinations (k246, k247), (k246, k248), and (k247, k248).

With reference to Fig. 165, the standard deviation $\sigma_{DF_k246, k247}$ of the differences between the multiple integral values (8 integral values) on the curve k246 and the multiple integral values (8 integral values) on the curve k247 is 10.30 (%), the standard deviation $\sigma_{DF_k246, k248}$ of the differences between the multiple integral values (8 integral values) on the curve k246 and the multiple integral values (8 integral values) on the curve k248 is 22.14 (%), and the standard deviation $\sigma_{DF_k247, k248}$ of the differences between the multiple integral values (8 integral values) on the curve k247 and the multiple integral values (8 integral values) on the curve k248 is 15.43 (%).

As a result, the standard deviation of the differences $\sigma_{DF_k246, k247}$ (= 10.30 (%)) is smaller than the threshold value $\sigma_{th}$ (= 15 (%)), the standard deviation of the differences $\sigma_{DF_k246, k248}$ (= 22.14 (%)) is greater than the threshold value $\sigma_{th}$ (= 15 (%)), and the standard deviation of the differences $\sigma_{DF_k247, k248}$ (= 15.43 (%)) is greater than the threshold value $\sigma_{th}$ ( = 15 (%)).

Therefore, the two curves k246 and k247 do not differ (see "×" in Fig. 165), the two curves k246 and k248 differ (see "∘" in Fig. 165), and the two curves k247 and k248 differ (see "∘" in Fig. 165). Therefore, when the number of integral values is 8, the curves k246 to k248 are not curves that differ from each other.

Fig. 166 shows the integral value spectrum based on the cyclic voltammograms CVGs measured with varying potential scan rates when the number of integral values is 9.

With reference to Fig. 166, the curve k249 represents the integral value spectrum created by the analysis device 2 based on the cyclic voltammogram CVG_600 mV/s measured with a potential scan rate of 600 mV/s, the curve k250 represents the integral value spectrum created by the analysis device 2 based on the cyclic voltammogram CVG_500 mV/s measured with a potential scan rate of 500 mV/s, and the curve k251 represents the integral value spectrum created by the analysis device 2 based on the cyclic voltammogram CVG_300 mV/s measured with a potential scan rate of 300 mV/s.

The measurement conditions for the cyclic voltammogram, on which the calculation of the multiple integral values (9 integral values) for each of the curves k249 to k251 is based are the same as those shown in Table 7, except that the prescribed potential range (i.e., the integral value extraction potential) is 552 mV instead of 18.4 mV in Table 7.

As a result, in Fig. 166, classes 1 to 8 each consist of a prescribed potential range (i.e., integral value extraction potential) of 552 mV, and class 9 consists of a prescribed potential range (i.e., integral value extraction potential) of 570.4 mV.

Fig. 167 shows the results of judging whether the curves k249 to k251 shown in Fig. 166 differ from each other.

Whether the curves k249 to k251 differ from each other is judged by judging whether two of the curves k249 to k251 differ from each other for all combinations of two curves from the curves k249 to k251.

There are three combinations of two curves among the curves k249 to k251: (k249, k250), (k249, k251), and (k250, k251).

Fig. 167 shows whether the two curves differ in each of the three combinations (k249, k250), (k249, k251), and (k250, k251).

With reference to Fig. 167, the standard deviation $\sigma_{DF_k249,\ k250}$ of the differences between the multiple integral values (9 integral values) on the curve k249 and the multiple integral values (9 integral values) on the curve k250 is 11.24 (%), the standard deviation $\sigma_{DF_k249,\ k251}$ of the differences between the multiple integral values (9 integral values) on the curve k249 and the multiple integral values (9 integral values) on the curve k251 is 20.68 (%), and the standard deviation $\sigma_{DF_k250,k251}$ of the differences between the multiple integral values (9 integral values) on the curve k250 and the multiple integral values (9 integral values) on the curve k251 is 13.46 (%).

As a result, the standard deviation of the differences $\sigma_{DF_k249,\ k250}$ (= 11.24 (%)) is smaller than the threshold value $\sigma_{th}$ (= 15 (%)), the standard deviation of the differences $\sigma_{DF_k249,\ k251}$ (= 20.68%) is greater than the threshold value $\sigma_{th}$ (= 15 (%)), and the standard deviation of the differences $\sigma_{DF_k250,\ k251}$ (= 13.46 (%)) is smaller than the threshold value $\sigma_{th}$ (= 15%).

Therefore, the two curves k249 and k250 do not differ (see "×" in Fig. 167), the two curves k249 and k251 differ (see "◦" in Fig. 167), and the two curves k250 and k251 do not differ (see "×" in Fig. 167). Therefore, when the number of integral values is 9, the curves k249 to k251 are not curves that differ from each other.

Fig. 168 shows the integral value spectra based on the cyclic voltammograms CVGs measured with varying potential scan rates when the number of integral values is 10.

With reference to Fig. 168, the curve k252 represents the integral value spectrum created by analysis device 2 based on the cyclic voltammogram CVG_600 mV/s measured with the potential scan rate of 600 mV/s, the curve k253 represents the integral value spectrum created by analysis device 2 based on the cyclic voltammogram CVG_500 mV/s measured with a potential scan rate of 500 mV/s, and the curve k254 represents the integral value spectrum created by analysis device 2 based on the cyclic voltammogram CVG_300 mV/s measured with a potential scan rate of 300 mV/s.

The measurement conditions for the cyclic voltammogram, on which the calculation of the multiple integral values (10 integral values) for each of the curves k252 to k254 is based, are the same as those shown in Table 7, except that the prescribed potential range (i.e., integral value extraction potential) is 496.8 mV instead of 18.4 mV in Table 7.

As a result, in Fig. 168, classes 1 to 9 each consist of a prescribed potential range (i.e., integral value extraction potential) of 496.8 mV, and class 10 consists of a prescribed potential range (i.e., integral value extraction potential) of 515.2 mV.

Fig. 169 shows the results of judging whether the curves k252 to k254 shown in Fig. 168 differ from each other.

Whether the curves k252 to k254 differ from each other is judged by judging whether two of the curves k252 to k254 differ from each other for all combinations of two curves among the curves k252 to k254.

There are three combinations of two curves among the curves k252 to k254: (k252, k253), (k252, k254), and (k253, k254).

Fig. 169 shows whether the two curves differ in each of the three combinations (k252, k253), (k252, k254), and (k253, k254).

With reference to Fig. 169, the standard deviation $\sigma_{DF_k252,\ k253}$ of the differences between the multiple integral values (10 integral values) on the curve k252 and the multiple integral values (10 integral values) on the curve k253 is 13.34 (%), the standard deviation $\sigma_{DF_k252,\ k254}$ of the differences between the multiple integral values (10 integral values) on the curve k252 and the multiple integral values (10 integral values) on the curve k254 is 26.22 (%), and the standard deviation $\sigma_{DF_k253,\ k254}$ of the differences between the multiple integral values (10 integral values) on the curve k253 and the multiple integral values (10 integral values) on the curve k254 is 17.22 (%).

As a result, the standard deviation of the differences $\sigma_{DF_k252,\ k253}$ (= 13.34 (%)) is smaller than the threshold value $\sigma_{th}$ (= 15%), the standard deviation of the differences $\sigma_{DF_k252,\ k254}$ (= 26.22 (%)) is greater than the threshold value $\sigma_{th}$ (= 15 (%)), and the standard deviation of the differences $\sigma_{DF_k253,\ k254}$ (= 17.22 (%)) is greater than the threshold value $\sigma_{th}$ (= 15 (%)).

Therefore, the two curves k252 and k253 do not differ (see "×" in Fig. 169), the two curves k252 and k254 differ (see "◦" in Fig. 169), and the two curves k253 and k254 differ (see "◦" in Fig. 169). Therefore, when the number of integral values is 10, the curves k252 to k254 are not curves the differ from each other.

Fig. 170 shows the integral value spectra based on the cyclic voltammograms CVGs measured with varying potential scan rates when the number of integral values is 15.

With reference to Fig. 170, the curve k255 represents the integral value spectrum created by the analysis device 2 based on the cyclic voltammogram CVG_600 mV/s measured with a potential scan rate of 600 mV/s, the curve k256 represents the integral value spectrum created by the analysis device 2 based on the cyclic voltammogram CVG_500 mV/s measured with a potential scan rate of 500 mV/s, and the curve k257 represents the integral value spectrum created by the analysis device 2 based on the cyclic voltammogram CVG_300 mV/s measured with a potential scan rate of 300 mV/s.

The measurement conditions for the cyclic voltammogram, on which the calculation of the multiple integral values (15 integral values) for each of the k255 to k257 curves is based, are the same as those shown in Table 7, except that the prescribed potential range (i.e., integral value extraction potential) is 349.6 mV instead of 18.4 mV in Table 7.

As a result, in Fig. 170, classes 1 to 14 each consist of a prescribed potential range (i.e., integral value extraction potential) of 349.6 mV, and class 15 consists of a prescribed potential range (i.e., integral value extraction potential) of 92 mV.

Fig. 171 shows the results of judging whether the curves k255 to k257 shown in Fig. 170 differ from each other.

Whether the curves k255 to k257 differ from each other is judged by judging whether two of the curves k255 to k257 differ from each other for all combinations of two curves among the curves k255 to k257.

There are three combinations of two curves among the curves k255 to k257: (k255, k256), (k255, k257), and (k256, k257).

Fig. 171 shows whether the two curves differ in each of the three combinations (k255, k256), (k255, k257), and (k256, k257).

With reference to Fig. 171, the standard deviation $\sigma_{DF_k255,\ k256}$ of the differences between the multiple integral values (15 integral values) on the curve k255 and the multiple integral values (15 integral values) on the curve k256 is 26.26 (%), the standard deviation $\sigma_{DF_k255,\ k257}$ of the differences between the multiple integral values (= 15 integral values) on the curve k255 and the multiple integral values (= 15 integral values) on the curve k257 is 39.25 (%), and the standard deviation $\sigma_{DF_k256,\ k257}$ of the differences between the multiple integral values (15 integral values) on the curve k256 and the multiple integral values (15 integral values) on the curve k257 is 19.46 (%).

As a result, the standard deviation of the differences $\sigma_{DF_k255,\ k256}$ (= 26.26 (%)) is greater than the threshold value $\sigma_{th}$ (= 15 (%)), the standard deviation of the difference, $\sigma_{DF_k255,\ k257}$ (= 39.25 (%)) is larger than the threshold $\sigma_{th}$ (= 15 (%)), and the standard deviation of the differences $\sigma_{DF_k256,\ k257}$ (= 19.46 (%)) is larger than the threshold $\sigma_{th}$ (= 15 (%)).

Therefore, the two curves k255 and k256 differ (see the "◦" in Fig. 171), the two curves k255 and k257 differ (see the "◦" in Fig. 171), and the two curves k256 and k257 differ (see the "◦" in Fig. 171). Therefore, when the number of integral values is 15, the curves k255 to k257 are curves that differ from each other.

Fig. 172 shows the integral value spectra based on the cyclic voltammograms CVGs measured with varying potential scan rates when the number of integral values is 20.

With reference to Fig. 172, the curve k258 represents the integral value spectrum created by the analysis device 2 based on the cyclic voltammogram CVG_600 mV/s measured with a potential scan rate of 600 mV/s, and the curve k259 represents the integral value spectrum created by the analysis device 2 based on the cyclic voltammogram CVG_500 mV/s measured with a potential scan rate of 500 mV/s, and the curve k260 represents the integral value spectrum created by the analysis device 2 based on the cyclic voltammogram CVG_300 mV/s measured with a potential scan rate of 300 mV/s.

The measurement conditions for the cyclic voltammogram, on which the calculation of the multiple integral values (20 integral values) for each of the curves k258 to k260 is based, are the same as those shown in Table 7, except that the prescribed potential range (i.e., integral value extraction potential) is 257.6 mV instead of 18.4 mV in Table 7.

As a result, in Fig. 172, classes 1 to 19 each consist of a prescribed potential range (i.e., integral value extraction potential) of 257.6 mV, and class 20 consists of a prescribed potential range (i.e., integral value extraction potential) of 92 mV.

Fig. 173 shows the results of judging whether the curves k258 to k260 shown in Fig. 172 differ from each other.

Whether the curves k258 to k260 differ from each other is judged by judging whether two of the curves k258 to k260 differ from each other for all combinations of two curves from the curves k258 to k260.

There are three combinations of two curves among curves k258 to k260: (k258, k259), (k258, k260), and (k259, k260).

Fig. 173 shows whether the two curves differ in each of the three combinations (k258, k259), (k258, k260), and (k259, k260).

With reference to Fig. 173, the standard deviation $\sigma_{DF_k258,\ k259}$ of the differences between the multiple integral values (20 integral values) on the curve k258 and the multiple integral values (20 integral values) on the curve k259 is 48.49 (%), the standard deviation $\sigma_{DF_k258,\ k260}$ of the differences between the multiple integral values (20 integral values) on the curve k258 and the multiple integral values (20 integral values) on the curve k260 is 59.43 (%), and the standard deviation $\sigma_{DF_k259,\ k260}$ of the differences between the multiple integral values (20 integral values) on the curve k259 and the multiple integral values (20 integral values) on the curve k260 is 20.12 (%).

As a result, the standard deviation of the differences, $\sigma_{DF_k258,\ k259}$ (= 48.49 (%)), is greater than the threshold value $\sigma_{th}$ (= 15 (%)), the standard deviation of the differences, $\sigma_{DF_k258,\ k260}$ (= 59.43 (%)) is greater than the threshold $\sigma_{th}$ (= 15 (%)), and the standard deviation of the differences, $\sigma_{DF_k259,\ k260}$ (= 20.12 (%)) is greater than the threshold $\sigma_{th}$ (= 15 (%)).

Therefore, the two curves k258 and k259 differ (see the "o" in Fig. 173), the two curves k258 and k260 differ (see the "◦" in Fig. 173), and the two curves k259 and k260 differ (see the "◦" in Fig. 173). Therefore, when the number of integral values is 20, the curves k258 to k260 are curves that differ from each other.

Fig. 174 shows the integral value spectra created based on the cyclic voltammogram CVG measured with varying potential scan rates when the number of integral values is 39.

With reference to Fig. 174, the curve k261 represents the integral value spectrum created by the analysis device 2 based on the cyclic voltammogram CVG_600 mV/s measured with a potential scan rate of 600 mV/s, the curve k262 represents the integral value spectrum created by the analysis device 2 based on the cyclic voltammogram CVG_500 mV/s measured with a potential scan rate of 500 mV/s, and the curve k263 represents the integral value spectrum created by the analysis device 2 based on the cyclic voltammogram CVG_300 mV/s measured with a potential scan rate of 300 mV/s.

The measurement conditions for the cyclic voltammogram, on which the calculation of the multiple integral values (39 integral values) for each of the curves k261 to k263 is based, are the same as those shown in Table 7, except that the prescribed potential range (i.e., integral value extraction potential) is 128.8 mV instead of 18.4 mV in Table 7.

As a result, in Fig. 174, classes 1 to 38 each consist of a prescribed potential range (i.e., integral value extraction potential) of 128.8 mV, and class 39 consists of a prescribed potential range (i.e., integral value extraction potential) of 92 mV.

Fig. 175 shows the results of judging whether the curves k261 to k263 shown in Fig. 174 differ from each other.

Whether the curves k261 to k263 differ from each other is judged by judging whether two of the curves k261 to k263 differ from each other for all combinations of two curves among the curves k261 to k263.

There are three combinations of two curves among curves k261 to k263: (k261, k262), (k261, k263), and (k262, k263).

Fig. 175 shows whether the two curves differ in each of the three combinations (k261, k262), (k261, k263), and (k262, k263).

With reference to Fig. 175, the standard deviation $\sigma_{DF_k261,\,k262}$ of the differences between the multiple integral values (39 integral values) on the curve k261 and the multiple integral values (39 integral values) on the curve k262 is 29.26 (%), the standard deviation $\sigma_{DF_k261,\,k263}$ of the differences between the multiple integral values (= 39 integral values) on the curve k261 and the multiple integral values (= 39 integral values) on the curve k263 is 49.81 (%), and the standard deviation $\sigma_{DF_k262,\,k263}$ of the differences between the multiple integral values (39 integral values) on the curve k262 and the multiple integral values (39 integral values) on the curve k263 is 34.00 (%).

As a result, the standard deviation of the differences, $\sigma_{DF_k261,\,k262}$ (= 29.26 (%)), is greater than the threshold value $\sigma_{th}$ (= 15 (%)), the standard deviation of the differences, $\sigma_{DF_k261,\,k263}$ (= 49.81 (%)) is greater than the threshold $\sigma_{th}$ (= 15 (%)), and the standard deviation of the differences $\sigma_{DF_k262,\,k263}$ (= 34.00 (%)) is greater than the threshold $\sigma_{th}$ (= 15 (%)).

Therefore, the two curves k261 and k262 differ (see the "◦" in Fig. 175), the two curves k261 and k263 differ (see the "◦" in Fig. 175), and the two curves k262 and k263 differ (see the "◦" in Fig. 175). Therefore, when the number of integral values is 39, the curves k261 to k263 are mutually different curves.

Fig. 176 shows the integral value spectrum based on the cyclic voltammogram CVG measured with varying potential scan rates when the number of integral values is 54.

With reference to Fig. 176, the curve k264 represents the integral value spectrum created by the analysis device 2 based on the cyclic voltammogram CVG_600 mV/s measured with a potential scan rate of 600 mV/s, the curve k265 represents the integral value spectrum created by the analysis device 2 based on the cyclic voltammogram CVG_500 mV/s measured with a potential scan rate of 500 mV/s, and the curve k266 shows the integral value spectrum created by the analysis device 2 based on the cyclic voltammogram CVG_300 mV/s measured with a potential scan rate of 300 mV/s.

The measurement conditions for the cyclic voltammogram, on which the calculation of the multiple integral values (54 integral values) for each of the curves k264 to k266 is based, are the same as those shown in Table 7, except that the prescribed potential range (i.e., integral value extraction potential) is 92 mV instead of 18.4 mV in Table 7.

As a result, in Fig. 176, classes 1 to 53 each consist of a prescribed potential range (i.e., integral value extraction potential) of 92 mV, and class 54 consists of a prescribed potential range (i.e., integral value extraction potential) of 110.4 mV.

Fig. 177 shows the results of judging whether the curves k264 to k266 shown in Fig. 176 differ from each other.

Whether the curves k264 to k266 differ from each other is judged by judging whether two of the curves k264 to k266 differ from each other for all combinations of two curves among the curves k264 to k266.

There are three combinations of two curves among curves k264 to k266: (k264, k265), (k264, k266), and (k265, k266).

Fig. 177 shows whether the two curves differ in each of the three combinations (k264, k265), (k264, k266), and (k265, k266).

With reference to Fig. 177, the standard deviation $\sigma_{DF_k264,\,k265}$ of the differences between the multiple integral values (54 integral values) on the curve k264 and the multiple integral values (54 integral values) on the curve k265 is 34.33 (%), the standard deviation $\sigma_{DF_k264,\,k266}$ of the differences between the multiple integral values (54 integral values) on the curve k264 and the multiple integral values (54 integral values) on the curve k266 is 49.35 (%), and the standard deviation $\sigma_{DF_k265, k266}$ of the differences between the multiple integral values (54 integral values) on the curve k265 and the multiple integral values (54 integral values) on the curve k266 is 24.81 (%).

As a result, the standard deviation of the difference, $\sigma_{DF_k264, k265}$ (= 34.33 (%)), is greater than the threshold value $\sigma_{th}$ (= 15 (%)), the standard deviation of the difference, $\sigma_{DF_k264, k266}$ (= 49.35 (%)) is greater than the threshold $\sigma_{th}$ (= 15 (%)), and the standard deviation of the differences $\sigma_{DF_k265, k266}$ (= 24.81 (%)) is greater than the threshold $\sigma_{th}$ (= 15 (%)).

Therefore, the two curves k264 and k265 differ (see the "∘" in Fig. 177), the two curves k264 and k266 differ (see the "∘" in Fig. 177), and the two curves k265 and k266 differ (see the "∘" in Fig. 177). Therefore, when the number of integral values is 54, the curves k264 to k266 are mutually different curves.

Fig. 178 shows the integral value spectra based on the cyclic voltammogram CVG measured with varying potential scan rates when the number of integral values is 135.

With reference to Fig. 178, the curve k267 represents the integral value spectrum created by the analysis device 2 based on the cyclic voltammogram CVG_600 mV/s measured with a potential scan rate of 600 mV/s, the curve k268 represents the integral value spectrum created by the analysis device 2 based on the cyclic voltammogram CVG_500 mV/s measured with a potential scan rate of 500 mV/s, and the curve k269 represents the integral value spectrum created by the analysis device 2 based on the cyclic voltammogram CVG_300 mV/s measured with a potential scan rate of 300 mV/s.

The measurement conditions for the cyclic voltammogram, on which the calculation of the multiple integral values (135 integral values) for each of the curves k267 to k269 is based, are the same as those shown in Table 7, except that the prescribed potential range (i.e., integral value extraction potential) is 36.8 mV instead of 18.4 mV in Table 7.

As a result, in Fig. 178, classes 1 to 134 each consist of a prescribed potential range of 36.8 mV (i.e., integral value extraction potential), and class 135 consists of a prescribed potential range (i.e., integral value extraction potential) of 55.2 mV.

Fig. 179 shows the results of judging whether the curves k267 to k269 shown in Fig. 178 differ from each other.

Whether the curves k267 to k269 differ from each other is judged by judging whether two of the curves k267 to k269 differ from each other for all combinations of two curves among the curves k267 to k269.

There are three combinations of two curves among curves k267 to k269: (k267, k268), (k267, k269), and (k268, k269).

Fig. 179 shows whether the two curves differ in each of the three combinations (k267, k268), (k267, k269) and (k268, k269).

With reference to Fig. 179, the standard deviation $\sigma_{DF_k267, k268}$ of the differences between the multiple integral values (135 integral values) on the curve k267 and the multiple integral values (135 integral values) on the curve k268 is 36.71 (%), the standard deviation $\sigma_{DF_k267, k269}$ of the differences between the multiple integral values (135 integral values) on the curve k267 and the multiple integral values (135 integral values) on the curve k269 is 50.79 (%), and the standard deviation $\sigma_{DF_k268, k269}$ of the differences between the multiple integral values (135 integral values) on the curve k268 and the multiple integral values (135 integral values) on the curve k269 is 25.96 (%).

As a result, the standard deviation of the differences $\sigma_{DF_k267, k268}$ (= 36.71 (%)) is greater than the threshold value $\sigma_{th}$ (= 15 (%)), the standard deviation of the differences, $\sigma_{DF_k267, k269}$ (= 50.79 (%)) is greater than the threshold $\sigma_{th}$ (= 15 (%)), and the standard deviation of the differences $\sigma_{DF_k268, k269}$ (= 25.96 (%)) is greater than the threshold $\sigma_{th}$ (= 15 (%)).

Therefore, the two curves k267 and k268 differ (see the "∘" in Fig. 179), the two curves k267 and k269 differ (see the "∘" in Fig. 179), and the two curves k268 and k269 differ (see the "∘" in Fig. 179). Therefore, when the number of integral values is 135, the curves k267 to k269 are curves that differ from each other.

Fig. 28 shows the integral value spectra created by the analysis device 2 when the number of integral values (i.e., the number of classes) is 271, specifically: the spectrum based on cyclic voltammogram CVG_600 mV/s measured with a potential scan rate of 600 mV/s; the spectrum based on cyclic voltammogram CVG_500 mV/s measured with a potential scan rate of 500 mV/s; and the spectrum based on cyclic voltammogram CVG_300 mV/s measured with a potential scan rate of 300 mV/s, and Fig. 29 indicates that the standard deviation of the differences $\sigma_{DF_k22, k23}$ (= 34.69 (%)), the standard deviation of the differences $\sigma_{DF_k22, k24}$ (= 51.23 (%)), and the standard deviation of the differences, $\sigma_{DF_k23, k24}$ (= 30.26 (%)) are all greater than the threshold $\sigma_{th}$ (= 15 (%)).

Therefore, it was found that when the number of integral values is 15, 20, 39, 54, 135, and 271, the integral value spectra created by the analysis device 2, specifically: the integral value spectrum created based on the cyclic voltammogram CVG_600 mV/s measured with a potential scan rate of 600 mV/s, the integral value spectrum created based on the cyclic voltammogram CVG_500 mV/s measured with a potential scan rate of 500 mV/s, and the integral value spectrum created based on the cyclic voltammogram CVG_300 mV/s measured with a potential scan rate of 300 mV/s differ from each other.

As a result, when the number of integral values is 15, the curve k255 represents the integral value spectrum for uniquely identifying the analyte measured with a potential scan rate of 600 mV/s, and the curve k256 represents the integral value spectrum for uniquely identifying the analyte measured with a potential scan rate of 500 mV/s, and the curve k257 is the integral value spectrum for uniquely identifying the analyte measured with a potential scan rate of 300 mV/s.

When the number of integral values is 20, the curve k258 represents the integral value spectrum for uniquely identifying the analyte measured with a potential scan rate of 600 mV/s, the curve k259 represents the integral value spectrum for uniquely identifying the analyte measured with a potential scan rate of 500 mV/s, and the curve k260 represents the integral value spectrum for uniquely identifying the analyte measured with a potential scan rate of 300 mV/s.

Furthermore, when the number of integral values is 39, the curve k261 represents the integral value spectrum for uniquely identifying the analyte measured with a potential scan rate of 600 mV/s, the curve k262 represents the integral value spectrum for uniquely identifying the analyte measured with a potential scan rate of 500 mV/s, and the curve k263 is the integral value spectrum for uniquely identifying the analyte measured with a potential scan rate of 300 mV/s.

Furthermore, when the number of integral values is 54, the curve k264 represents the integral value spectrum for uniquely identifying the analyte measured with a potential scan rate of 600 mV/s, the curve k265 represents the integral value spectrum for uniquely identifying the analyte measured with a potential scan rate at 500 mV/s, and the curve k266 represents the integral value spectrum for uniquely identifying the analyte measured with a potential scan rate at 300 mV/s.

Furthermore, when the number of integral values is 135, the curve k267 represents the integral value spectrum for uniquely identifying the analyte measured with a potential scan rate of 600 mV/s, the curve k268 represents the integral value spectrum for uniquely identifying the analyte measured with a potential scan rate of 500 mV/s, and the curve k269 represents the integral value spectrum for uniquely identifying the analyte measured with a potential scan rate of 300 mV/s.

Furthermore, when the number of integral values is 271, the curve k22 represents the integral value spectrum for uniquely identifying the analyte measured with a potential scan rate of 600 mV/s, the curve k23 represents the integral value spectrum for uniquely identifying the analyte measured with a potential scan rate of 500 mV/s, and the curve k24 represents the integral value spectrum for uniquely identifying the analyte measured with a potential scan rate of 300.

Then, the integral value spectrum (i.e., index curve) for uniquely identifying the analyte measured with a potential scan rate of 600 mV/s is represented by the curve k255 when the number of integral values is 15, the curve k258 when the number of integral values is 20, the curve k261 when the number of integral values is 39, the curve k264 when the number of integral values is 54, the curve k267 when the number of integral values is 135, and the curve k22 when the number of integral values is 271.

The integral value spectrum (i.e., index curve) for uniquely identifying the analyte measured with a potential scan rate of 500 mV/s is represented by the curve k256 when the number of integral values is 15, the curve k259 when the number of integral values is 20, the curve k262 when the number of integral values is 39, the curve k265 when the number of integral values is 54, and the curve k268 when the number of integral values is 135, and the curve k23 when the number of integral values is 271.

Furthermore, the integral value spectrum (i.e., index curve) for uniquely identifying the analyte measured with a potential scan rate of 300 mV/s is represented by the curve k257 when the number of integral values is 15, the curve k260 when the number of integral values is 20, the curve k263 when the number of integral values is 39, the curve k266 when the number of integral values is 54, and the curve k269 when the number of integral values is 135, and k24 when the number of integral values is 271.

Therefore, in general, the integral value spectra (i.e., index curves) for uniquely identifying the analyte measured with a potential scan rate of 600 mV/s include multiple (i.e., 6) index curves (i.e., the curves k255, k258, k261, k264, k267, and k22) with different numbers of integral values, and the integral value spectra (i.e., index curves) for uniquely identifying the analyte measured with a potential scan rate of 500 mV/s include multiple (i.e., 6) index curves (i.e., the curves k256, k259, k262, k265, k268, and k23) with different numbers of integral values, the integral value spectra (i.e., index curves) for uniquely identifying the analyte measured with a potential scan rate of 300 mV/s includes multiple (i.e., 6) index curves (i.e., the curves k257, k260, k263, k266, k269, and k24) with different numbers of integral values.

It was found that the minimum number of integral values required to obtain integral value spectra for uniquely identifying the analyte measured with a potential scan rate of 600 mV/s, the analyte measured with a potential scan rate of 500 mV/s, and the analytes measured with a potential scan rate of 300 mV/s is 15.

When the number of integral values is 4, the standard deviation $\sigma_{k234,\ k236}$ of the differences between the 4 integral values on the curve k234 created by the analysis device 2 based on the cyclic voltammogram CVG_600 mV/s measured with a potential scan rate of 600 mV/s and the 4 integral values on the curve k236 created by the analysis device 2 based on the cyclic voltammogram CVG_300 mV/s measured with a potential scan rate of 300 mV/s is 16.30 (%) (see Fig. 157), which is greater than the threshold value $\sigma_{th}$ (= 15 (%)). When the number of integral values is 5, the standard deviation $\sigma_{k237,\ k239}$ of the differences between the 5 integral values on the curve k237 created by the analysis device 2 based on the cyclic voltammogram CVG_600 mV/s measured with a potential scan rate of 600 mV/s and the 5 integral values on the curve k239 created by the analysis device 2 based on the cyclic voltammogram CVG_300 mV/s measured with the potential scanning rate of 300 mV/S is 15.11 (%) (see Fig. 159), which is greater than threshold value $\sigma_{th}$ (= 15 (%)). When the number of integral values is 6, the standard deviation $\sigma_{k240,\ k242}$ of the differences between the 6 integral values on the curve k240 created by the analysis device 2 based on the cyclic voltammogram CVG_600 mV/s measured with a potential scan rate of 600 mV/s and the 6 integral values on the curve k242 created by the analysis device 2 based on the cyclic voltammogram CVG_300 mV/s measured with a potential scan rate of 300 mV/s is 20.09 (%) (see Fig. 161), which is greater than the threshold value $\sigma_{th}$ (= 15 (%)). When the number of integral values is 7, the standard deviation $\sigma_{k234, k235}$ of the differences between the 7 integral values on the curve k243 created by the analysis device 2 based on the cyclic voltammogram CVG_600 mV/s measured with a potential scan rate of 600 mV/s and the 7 integral values on the curve k245 created by the analysis device 2 based on the cyclic voltammogram CVG_300 mV/s measured with a potential scan rate of 300 mV/s is 16.32 (%) (Fig. 163), which is greater than the threshold value $\sigma_{th}$ (= 15 (%)). When the number of integral values is 8, the standard deviation $\sigma_{k246, k248}$ of the differences between the 8 integral values on the curve k246 created by the analysis device 2 based on the cyclic voltammogram CVG_600 mV/s measured with a potential scan rate of 600 mV/s and the 8 integral values on the curve k248 created by analysis device 2 based on the cyclic voltammogram CVG_300 mV/s measured with a potential scan rate of 300 mV/s is 22.14 (%) (see Fig. 165), which is greater than the threshold value $\sigma_{th}$ (= 15 (%)). When the number of integral values is 9, the standard deviation $\sigma_{k249, k251}$ of the differences between the 9 integral values on the curve k249 created by the analysis device 2 based on the cyclic voltammogram CVG_600 mV/s measured with a potential scan rate of 600 mV/s and the 9 integral values on the curve k251 created by analysis device 2 based on the cyclic voltammogram CVG_300 mV/s measured with a potential scan rate of 300 mV/s is 20.68 (%) (see Fig. 167), which is greater than the threshold $\sigma_{th}$ (= 15 (%)). When the number of integral values is 10, the standard deviation $\sigma_{k252, k254}$ of the differences between the 10 integral values on the curve k252 created by the analysis device 2 based on the cyclic voltammogram CVG_600 mV/s measured with a potential scan rate of 600 mV/s and the 10 integral values on the curve k254 created by the analysis device 2 based on the cyclic voltammogram CVG_300 mV/s measured with a potential scan rate of 300 mV/s is 26.22 (%) (see Fig. 169), which is greater than the threshold $\sigma_{th}$ (= 15 (%)) (see Fig. 169). When the number of integral values is 15, the standard deviation $\sigma_{k255, k257}$ of the differences between the 15 integral values on the curve k255 created by the analysis device 2 based on the cyclic voltammogram CVG_600 mV/s measured with a potential scan rate of 600 mV/s and the 15 integral values on the curve k257 created by the analysis device 2 based on the cyclic voltammogram CVG_300 mV/s measured with a potential scan rate of 300 mV/s is 39.25 (%) (Fig. 171), which is greater than the threshold $\sigma_{th}$ (= 15 (%)).

When the number of integral values is 20, the standard deviation $\sigma_{k258, k260}$ of the differences between the 20 integral values on the curve k258 created by the analysis device 2 based on the cyclic voltammogram CVG_600 mV/s measured with a potential scan rate of 600 mV/s and the 20 integral values on the curve k260 created by the analysis device 2 based on the cyclic voltammogram CVG_300 mV/s measured with a potential scan rate of 300 mV/s is 59.43 (%) (Fig. 173), which is greater than the threshold $\sigma_{th}$ (= 15 (%)). When the number of integral values is 39, the standard deviation $\sigma_{k261, k263}$ of the differences between the 39 integral values on the curve k261 created by the analysis device 2 based on the cyclic voltammogram CVG_600 mV/s measured with a potential scan rate of 600 mV/s and the 39 integral values on the curve k263 created by the analysis device 2 based on the cyclic voltammogram CVG_300 mV/s measured with a potential scan rate of 300 mV/s is 49.81 (%) (Fig. 175), which is greater than the threshold $\sigma_{th}$ (= 15 (%)). When the number of integral values is 54, the standard deviation $\sigma_{k264, k266}$ of the differences between the 54 integral values on the curve k264 created by analysis device 2 based on the cyclic voltammogram CVG_600 mV/s measured with a potential scan rate of 600 mV/s and the 54 integral values on the curve k266 created by analysis device 2 based on the cyclic voltammogram CVG_300 mV/s measured with a potential scan rate of 300 mV/s is 49.35 (%) (see Fig. 177), which is greater than the threshold value $\sigma_{th}$ (= 15 (%))). When the number of integral values is 135, the standard deviation $\sigma_{k267, k269}$ of the differences between the 135 integral values on the curve k267 created by the analysis device 2 based on the cyclic voltammogram CVG_600 mV/s measured with a potential scan rate of 600 mV/s and the 135 integral values on the curve k269 created by the analysis device 2 based on the cyclic voltammogram CVG_300 mV/s measured with a potential scan rate of 300 mV/s is 50.79 (%) (see Fig. 179), which is greater than the threshold value $\sigma_{th}$ (= 15 (%)). When the number of integral values is 271, the standard deviation $\sigma_{k22, k24}$ of the differences between the 271 integral values on the curve k22 created by the analysis device 2 based on the cyclic voltammogram CVG_600 mV/s measured with a scan rate of 600 mV/s and the 271 integral values on the curve k 24 created by the analysis device 2 based on the cyclic voltammogram CVG_300 mV/s measured with a scan rate of 300 mV/s is 51.23 (%) (Fig. 29), which is greater than the threshold $\sigma_{th}$ (= 15 (%)).

As a result, the standard deviation of the differences between the multiple integral values on the curve created by the analysis device 2 based on the cyclic voltammogram CVG_600 mV/s measured with a potential scan rate of 600 mV/s and the multiple integral values on the curve created by the analysis device 2 based on the cyclic voltammogram CVG_300 mV/s measured with a potential scan rate of 300 mV/s is greater than the threshold $\sigma_{th}$ (= 15 (%)) in all cases where the number of integral values is 4, 5, 6, 7, 8, 9, 10, 15, 20, 39, 54, 135, and 271.

Therefore, the curves k234, k237, k240, k243, k246, k249, k252, k255, k258, k261, k264, k267, and k22 are integral value spectra for uniquely identifying the analyte measured with a potential scan rate of 600 mV/s, and the curves k236, k239, k242, k245, k248, k251, k254, k257, k260, k263, k266, k269, and k24 are integral value spectra for uniquely identifying the analyte measured with a potential scan rate of 300 mV/s.

It was found that the minimum number of integral values in the integral value spectrum for uniquely identifying the analyte measured with a potential scan rate of 600 mV/s and the minimum number of integral values in the integral value spectrum for uniquely identifying the analyte measured with a potential scan rate of 300 mV/s are both 4.

When the number of integral values is 8, the standard deviation $\sigma_{k247,\ k248}$ of the differences between the 8 integral values on the curve k247 created by the analysis device 2 based on the cyclic voltammogram CVG_500 mV/s measured with a potential scan rate of 500 mV/s and the 8 integral values on the curve k248 created by the analysis device 2 based on the cyclic voltammogram CVG_300 mV/s measured with a potential scan rate of 300 mV/s is 15.43 (%) (see Fig. 165), which is greater than the threshold $\sigma_{th}$ (= 15 (%)). When the number of integral values is 10, the standard deviation $\sigma_{k253,\ k254}$ of the difference between the 10 integral values on the curve k253 created by the analysis device 2 based on the cyclic voltammogram CVG_500 mV/s measured with a potential scan rate of 500 mV/s and the 10 integral values on the curve k254 created by the analysis device 2 based on the cyclic voltammogram CVG_300 mV/s measured with a potential scan rate of 300 mV/s is 17.22 (%) (see Fig. 169), which is greater than the threshold $\sigma_{th}$ (= 15 (%)). When the number of integral values is 15, the standard deviation $\sigma_{k256,\ k257}$ of the differences between the 15 integral values on the curve k256 created by the analysis device 2 based on the cyclic voltammogram CVG_500 mV/s measured with a potential scan rate of 500 mV/s and the 15 integral values on the curve k257 created by the analysis device 2 based on the cyclic voltammogram CVG_300 mV/s measured with a potential scan rate of 300 mV/s is 19.46 (%) (see Fig. 171), which is greater than the threshold $\sigma_{th}$ (= 15 (%)). When the number of integral values is 20, the standard deviation $\sigma_{k259,\ k260}$ of the differences between the 20 integral values on the curve k259 created by the analysis device 2 based on the cyclic voltammogram CVG_500 mV/s measured with a potential scan rate of 500 mV/s and the 20 integral values on the curve k260 created by the analysis device 2 based on the cyclic voltammogram CVG_300 mV/s measured with a potential scan rate of 300 mV/s is 20.12 (%) (see Fig. 173), which is greater than the threshold $\sigma_{th}$ (= 15 (%)). When the number of integral values is 39, the standard deviation $\sigma_{k262,\ k263}$ of the difference between the 39 integral values on the curve k262 created by the analysis device 2 based on the cyclic voltammogram CVG_500 mV/s with a potential scan rate of 500 mV/s, and the 39 integral values on the curve k263 created by the analysis device 2 based on the cyclic voltammogram CVG_300 mV/s measured with a potential scan rate of 300 mV/s is 34.00 (%) (see Fig. 175), which is greater than the threshold $\sigma_{th}$ (= 15 (%)).

When the number of integral values is 54, the standard deviation $\sigma_{k265,\ k266}$ of the differences between the 54 integral values on the curve k265 created by the analysis device 2 based on the cyclic voltammogram CVG_500 mV/s measured with a potential scan rate of 500 mV/s and the 54 integral values on the curve k266 created by analysis device 2 based on the cyclic voltammogram CVG_300 mV/s measured with a potential scan rate of 300 mV/s is 24.81 (%) (Fig. 177), which is greater than the threshold value $\sigma_{th}$ (= 15 (%)). When the number of integral values is 135, the standard deviation $\sigma_{k268,\ k269}$ of the differences between the 135 integral values on the curve k268 created by the analysis device 2 based on the cyclic voltammogram CVG_500 mV/s measured with a potential scan rate of 500 mV/s and the 135 integral values on the curve k269 created by the analysis device 2 based on the cyclic voltammogram CVG_300 mV/s measured with a potential scan rate of 300 mV/s is 25.96 (%) (see Fig. 179), which is greater than the threshold $\sigma_{th}$ (= 15 (%)). When the number of integral values is 271, the standard deviation $\sigma_{k23,\ k24}$ of the differences between the 271 integral values on the curve k23 created by the analysis device 2 based on the cyclic voltammogram CVG_500 mV/s measured with a potential scan rate of 500 mV/s and the 271 integral values on the curve k24 created by the analysis device 2 based on the cyclic voltammogram CVG_300 mV/s measured with a potential scan rate of 300 mV/s is 30.26 (%) (see Fig. 29), which is greater than the threshold $\sigma_{th}$ (= 15 (%)).

As a result, the standard deviation of the differences between the multiple integral values on the curve created by the analysis device 2 based on the cyclic voltammogram CVG_500 mV/s measured with a potential scan rate of 500 mV/s and the multiple integral values on the curve created by the analysis device 2 based on the cyclic voltammogram CVG_300 mV/s measured with a potential scan rate of 300 mV/s is greater than the threshold $\sigma_{th}$ (= 15 (%)) in all cases where the number of integral values is 8, 10, 15, 20, 39, 54, 135, and 271.

Therefore, the curves k247, k253, k256, k259, k262, k265, k268, and k23 are integral value spectra for uniquely identifying the analyte measured with a potential scan rate of 500 mV/s, and the curves k248, k254, k257, k260, k263, k266, k269, and k24 are integral value spectra for uniquely identifying the analyte measured with a potential scan rate of 300 mV/s.

It was found that the minimum number of integral values in the integral value spectrum for uniquely identifying the analyte measured with a potential scan rate of 500 mV/s and the minimum number of integral values in the integral value spectrum for uniquely identifying the analyte measured with a potential scan rate of 300 mV/s are both 8.

As described above, according to the embodiment of the invention, the number of integral values used to create an integral value spectrum for uniquely identifying a single analyte is not limited to a single number and may include multiple numbers.

For example, the number of integral values used to create four integral value spectra for uniquely identifying undiluted Calpis, Calpis diluted twice, Calpis diluted three times, and Calpis diluted four times is any of 3 (see Figs. 34 and 35), 8 (see Figs. 42 and 43), 13 (see Figs. 44 and 45), and 26 (see Figs. 14 and 15).

When creating multiple integral value spectra for uniquely identifying multiple analytes, it is sufficient to set a single number for the number of integral values for creating the integral value spectra and create the multiple integral value spectra for uniquely identifying the multiple analytes.

For example, when creating four integral value spectra to uniquely identify undiluted Calpis, Calpis diluted twice, Calpis diluted three times, and Calpis diluted four times, the number of integral values may be set to 3, and four integral value spectra k31, k32, k33 and k34 to uniquely identify the undiluted Calpis, the Calpis diluted twice, the Calpis diluted three times, and the Calpis diluted four times may be created (see Figs. 34 and 35).

The same applies to the case where four integral value spectra are created to uniquely identify undiluted Calpis, Calpis diluted twice, Calpis diluted three times, and Calpis diluted four times, by setting the number of integral values to 8, 13, or 26.

The same applies to the analytes other than Calpis.

In the above description, upon judging whether the two curves $CUR_i$ and $CUR_j$ differ, the judgement unit 24 judges that the curves $CUR_i$ and $CUR_j$ differ when the standard deviation $\sigma_{DF_CURi,\ CURj}$ of the differences between the multiple integral values on the curve $CUR_i$ and the multiple integral values on the curve $CUR_j$ is greater than the threshold $\sigma_{th}$ (= 15%) and that the curves $CUR_i$ and $CUR_j$ do not differ when the standard deviation $\sigma_{DF_CURi,\ CURj}$ of the differences is equal to or less than the threshold value $\sigma_{th}$ (= 15%), while alternatively the judgement unit 24 may judge whether the two curves $CUR_i$ and $CUR_j$ differ by the following method according to the first embodiment.

(I) Differentiate the curve $CUR_i$ to calculate multiple differential values $DFE_{1_i}$ to $DFE_{n_i}$ for each class.

(II) Differentiate the curve $CUR_j$ to calculate multiple differential values $DFE_{1_j}$ to $DFE_{n_j}$ for each class.

(III) Calculate the standard deviation $\sigma_{DF_DFE}$ of the differences between the multiple differential values $DFE_{1_i}$ to $DFE_{n_i}$, and the multiple differential values $DFE_{1_j}$ to $DFE_{n_j}$.

(IV) When the standard deviation of the differences $\sigma_{DF_DFE}$ is greater than the threshold $\sigma_{th}$ (= 15%), it is judged that the curves $CUR_i$ and $CUR_j$ differ from each other, and when the standard deviation of the differences $\sigma_{DF_DFE}$ is equal to or less than the threshold $\sigma_{th}$ (= 15%), it is judged that the curves $CUR_i$ and $CUR_j$ do not differ.

In the above (III), the judgement unit 24 calculates the difference $DF_DFE_k$ between the differential values $DFE_{k_i}$ and $DFE_{k_j}$ for one class $Cls_k$ based on the multiple differential values $DFE_{1_i}$ to $DFE_{n_i}$ and the multiple differential values $DFE_{1_j}$ to $DFE_{n_j}$ according to the following expression.

[Math. 5]

$$DF_DFE_k = \left[\frac{\left(|DFE_{k_i}| - |DFE_{k_j}|\right)}{\left(DFE_{k_i} + DFE_{k_j}\right)/2}\right] \times 100 \cdots (5)$$

The unit of the difference DF_DFEk calculated by the expression (5) is "%".

The judgement unit 24 calculates the difference $DF_DFE_k$ of differential value on one class $Cls_k$ using the expression (5) for all n classes $Cls_1$ to $Cls_n$ to calculate n differences $DF_DFE_1$ to $DF_DFE_n$.

Then, the judgement unit 24 calculates the standard deviation $\sigma_{DF_DFE}$ of the n differences $DF_DFE_1$ to $DF_DFE_n$.

In the above description, it was described about the method for judging whether multiple kinds of analytes with the same name differ from each other.

However, when for example the curves k5 to k7 which are the index curves for identifying the three kinds of wine shown in Fig. 16 and the curves k11 to k13 which are the index curves for identifying the three kinds of coffee shown in Fig. 20 are compared, the possible range of integral values for the curves k11 to k13 significantly differs from that for the curves k5 to k7.

For example, upon judging whether the index curve k5 which is used to identify red wine (Chile 2020), differs from the index curve k11 which is used to identify coffee (WONDA), when the standard deviation $\sigma_{DF_k5,\ k11}$ of the differences between the multiple integral values on the curve k5 and the multiple integral values on the curve k11 is greater than the threshold $\sigma_{th}$ (= 20%), it is judged that the curves k5 and k11 differ, and upon judging whether the curves k5 and k6 differ, it may be judged that the curves k5 and k6 differ when the standard deviation $\sigma_{DF_k5,\ k6}$ of the differences between the multiple integral values on the curve k5 and the multiple integral values on the curve k6 is greater than the threshold value $\sigma_{th}$ (= 15%).

In other words, upon judging whether two curves with different analyte names differ, the threshold value $\sigma_{th}$ may

be set to a first value (e.g., 20%), and upon judging whether two curves which name of the analyte is same and kinds of the analyte is different differ, the threshold value $\sigma_{th}$ may be set to a second value (e.g., 15%) that is smaller than the first value (e.g., 20%).

The same applies to the judgement of whether the curve k5, which serves as an index for identifying the red wine (Chile 2020), differs from the curve k12, which serves as an index for identifying coffee (CRAFT BOSS), and to the judgement of whether the curve k5, which serves as an index for identifying the red wine (Chile 2020), differs from the curve k13, which serves as an index for identifying coffee (GOLD BREW).

The same applies to the judgement of whether the curve k6, which serves as an index to identify the red wine (Australia 2010), differs from the curve k11, which serves as an index to identify the coffee (WONDA), to the judgement of whether the curve k6, which serves as an index to identify the red wine (Australia 2010), differs from the curve k12, which serves as an index to identify the coffee (CRAFT BOSS), and to the judgement of whether the index curve k6, which serves as an index to identify the red wine (Australia 2010) differs from the index curve k13, which serves as an index to identify the coffee (GOLD BREW).

Furthermore, the same applies to the judgement of whether the curve k7, which serves as an index to identify the red wine (France 2013) differs from the curve k11, which serves as an index to identify the coffee (WONDA), to the judgement of whether the curve k7, which serves as an index to identify the red wine (France 2013) differs from the index curve k12, which serves as an index to identify the coffee (CRAFT BOSS), and to the judgement of whether the curve k7, which serves as an index to identify the red wine (France 2013) differs from the curve k13, which serves as an index to identify the coffee (GOLD BREW).

In general, assuming that P analytes have P mutually distinct names, two analytes with different names among the P analytes are defined as first and second analytes, and two analytes included in the first analyte and of mutually distinct kinds are defined as third and fourth analytes, the judgement unit 24 determines that the [multiple integral values] for the first analyte and the [multiple integral values] for the second analyte differ if the standard deviation of the differences between the [multiple integral values] for the first analyte and the [multiple integral values] for the second analyte is greater than a first threshold value, and that the [multiple integral values] for the third analyte and the [multiple integral values] for the fourth analyte differ from each other if the standard deviation of the differences between the [multiple integral values] for the third analyte and the [multiple integral values] for the fourth analyte is greater than a second threshold value smaller than the first threshold.

Time $t_{uni}$ and time $t_1$ to $t_P$ is expressed in the format YYYY/MM/DD/h/m/s (year/month/day/hour/minute/second).

Fig. 180 is a flowchart for illustrating the operation of the analysis system 10 shown in Fig. 1.

With reference to Fig. 180, when the operation of the analysis system 10 starts, the supply unit 121 of the sensor device 1 accepts a potential scan range V_s and a potential scan rate V_r inputted to the measurement device 12 by the user of the sensor device 1 (step S1).

The supply unit 121 of the sensor device 1 receives a start signal inputted to the measurement device 12 by the user of the sensor device 1, and the measurement unit 122 of the sensor device 1 receives an end signal inputted to the measurement device 12 by the user of the sensor device 1.

Then, the supply unit 121 of the sensor device 1 applies a potential V to the solution (analyte) in the potential scan range V_s while varying the potential applied to the solution at a scan rate V_r, and the measurement unit 122 measures the potential V of the working electrode 112 with reference to the potential of the reference electrode 114, and also measures the current value I from the counter electrode 113, so that the current-potential characteristic [I-V]_r of the cyclic voltammogram is obtained (step S2).

After that, the measurement unit 122 creates measurement data MRS which includes the association between the current values and the potentials in the current-potential characteristic [I-V]_r (step S3).

Then, the measurement unit 122 judges whether to end the measurement of the cyclic voltammogram of the solution (step S4).

In this case, the measurement unit 122 judges that measurement is complete when it receives an end signal input to the measurement device 12 by the user of the sensor device 1, and judges that measurement is not complete when it does not receive an end signal.

If it is judged in step S4 that the measurement of the cyclic voltammogram of the solution is not complete, the operation of the sensor device 1 proceeds to step S1, and steps S1 to S4 are repeatedly executed until it is judged in step S4 that the measurement of the cyclic voltammogram of the solution is terminated.

In this case, each time it is judged in step S4 that the measurement is not complete, the sensor 11 used for measuring the cyclic voltammogram is discarded, and a sensor 11 that has not been used for measuring the cyclic voltammogram is attached to the measurement device 12, and the above-described steps S1 to S4 are sequentially executed.

Then, if it is judged in step S4 that the measurement of the cyclic voltammogram of the solution ends, the measurement unit 122 of the sensor device 1 outputs m (m is an integer equal to or greater than 1) measurement data pieces MRS_1 to MRS_m to the transmission unit 123. Upon receiving the m measurement data pieces MRS_1 to MRS_m from the measurement unit 122, the transmission unit 123 transmits the received m measurement data pieces MRS_1 to MRS_m to the analysis device 2 via wired or wireless communication (step S5).

The receiving unit 21 of the analysis device 2 receives the m measurement data pieces MRS_1 to MRS_m from the transmission unit 123 of the sensor device 1 via wired or wireless communication (step S6) and outputs the received m measurement data pieces MRS_1 to MRS_m to a control unit 22.

The control unit 22 of the analysis device 2 receives the m measurement data pieces MRS_1 to MRS_m from the receiving unit 21. The control unit 22 then judges whether it has received multiple pieces of measurement data based on the m pieces of measurement data MRS_1 to MRS_m (step S7).

In this case, if the control unit 22 has not received multiple measurement data from the receiving unit 21, it judges that it has received the measurement data MRS_uni from the receiving unit 21, and upon receiving multiple pieces of measurement data from the receiving unit 21, it judges that it has received P pieces of measurement data MRS_1 to MRS_P (multiple pieces of measurement data MRS) from the receiving unit 21.

If it is judges in step S7 that multiple measurement data pieces have not been received, the control unit 22 creates a single piece of analysis data $ALY_D_{uni}$ based on the single piece of measurement data MRS_uni (step S8) and stores the created analysis data $ALY_D_{uni}$ in a database 28 while also outputting the analysis data $ALY_D_{uni}$ to the calculation unit 23.

The calculation unit 23 receives the analysis data $ALY_D_{uni}$ from the control unit 22. Then, the calculation unit 23 and a creation unit 25 create, as an index curve, a curve $CUR_{uni}$ that shows the class dependence of the integral values based on the analysis data $ALY_D_{uni}$ (step S9).

Then, the creation unit 25 outputs the created curve $CUR_{uni}$ to the display unit 26, and the display unit 26 displays the received curve $CUR_{uni}$ upon receiving the curve $CUR_{uni}$ from the creation unit 25 (step S10).

Then, upon receiving an analysis result $ALY_RLS_{uni}$ from the creation unit 25, the control unit 22 updates the analysis data $ALY_D_{uni}$ to index data $IDX_{uni}$ based on the received analysis result $ALY_RLS_{uni}$ (step S11) and stores the updated index data $IDX_{uni}$ in the database 28 in place of the analysis data $ALY_D_{uni}$.

Meanwhile, if it is judged in step S7 that multiple pieces of measurement data have been received, the control unit 22 creates P pieces of analysis data $ALY_D_1$ to $ALY_D_P$ based on P pieces of measurement data MRS_1 to MRS_P using the method described above (step S12) and stores the created P pieces of analysis data $ALY_D_1$ to $ALY_D_P$ in the database 28, while also outputting the P pieces of analysis data $ALY_D_1$ to $ALY_D_P$ to the calculation unit 23.

The calculation unit 23 receives the P pieces of analysis data $ALY_D_1$ to $ALY_D_P$ from the control unit 22. Then, the calculation unit 23 and the creation unit 25 create P curves $CUR_1$ to $CUR_P$, which indicate the class dependence of the integral values based on the P pieces of analysis data $ALY_D_1$ to $ALY_D_P$, as P index curves for the P analytes (step S13).

The judgement unit 24 then creates judgement results (the judgement results shown in Fig. 187) indicating whether the P curves $CUR_1$ to $CUR_P$ differ (step S14) and outputs the created judgement results (the judgement results shown in Fig. 187 which will be described) to the creation unit 25.

Upon receiving the judgement results (the judgement results shown in Fig. 187 which will be described) from the judgement unit 24, the creation unit 25 outputs the P curves $CUR_1$ to $CUR_P$ and the judgement results (the judgement results shown in Fig. 187 which will be described) to the display unit 26.

The creation unit 25 also adds the P curves $CUR_1$ to $CUR_P$ to P calculation results $CAL_RLS_1$=[$ID_1$/$CAL_1$] to $CAL_RLS_P$=[$ID_P$/$CAL_P$] to create P analysis results $ALY_RLS_1$=[$ID_1$/$CAL_1$/$CUR_1$] to $ALY_RLS_P$=[$ID_P$/$CAL_P$/$CUR_P$]. Then, the creation unit 25 outputs the P analysis results $ALY_RLS_1$ to $ALY_RLS_P$ to the control unit 22.

Upon receiving the P curves $CUR_1$ to $CUR_P$ and the judgement results (judgement results shown in Fig. 187 which will be described) from the creation unit 25, the display unit 26 displays the P curves $CUR_1$ to $CUR_P$ and the judgement results (judgement results shown in Fig. 187 which will be described) (step S15).

Then, upon receiving the P analysis results $ALY_RLS_1$ to $ALY_RLS_P$ from the creation unit 25, the control unit 22 updates the P pieces of analysis data $ALY_D_1$ to $ALY_D_P$ based on the P analysis results $ALY_RLS_1$ to $ALY_RLS_P$, respectively, to P pieces of index data $IDX_1$ to $IDX_P$ (step S16), and stores the updated P pieces of index data $IDX_1$ to $IDX_P$ in the database 28 in place of the P pieces of analysis data $ALY_D_1$ to $ALY_D_P$.

In this case, the control unit 22 detects the identification information $ID_P$, the calculation data $CAL_p$, and the curve $CUR_p$ from the analysis result $ALY_RLS_p$ (where p is any number from 1 to P), reads the analysis data $ALY_D_p$ with the same identification information as the detected identification information $ID_p$ from the database 28, and then updates the analysis data $ALY_D_p$ to the index data $IDX_p$ by adding the calculation data $CAL_p$ and the curve $CUR_p$ to the analysis data $ALY_D_p$. This process is performed for all of the P pieces of analysis data $ALY_D_1$ to $ALY_D_P$.

As a result, the P pieces of analysis data $ALY_D_1$ to $ALY_D_P$ are updated to the P pieces of index data $IDX_1$ to $IDX_P$, respectively.

The control unit 22 then stores the P index data $IDX_1$ to $IDX_P$ in the database 28 in place of the P pieces of analysis data $ALY_D_1$ to $ALY_D_P$ and stores the judgement results (the judgement results shown in Fig. 187 which will be described) in the database 28, in association with the P index data $IDX_1$ to $IDX_P$.

After step S11 or step S16, the operation of the analysis system 10 ends.

When creating multiple index curves for a single analyte, each of which has a different number of integral values, in step S9 in Fig. 180, the calculation unit 23 and the creation unit 25 create multiple index curves based on the analysis data $ALY_D_{uni}$, while varying the number of integral values to multiple.

For each of the P analytes, when creating multiple index curves with different numbers of integral values from each other, in step S13 in Fig. 180, the calculation unit 23 and the creation unit 25 create multiple index curves based on one analysis data piece $ALY_D_p$ among the P pieces of analysis data $ALY_D_1$ to $ALY_D_p$ by changing the number of integral values into multiple and execute this process for all of the P pieces of analysis data $ALY_D_1$ to $ALY_D_p$ to create multiple index curves with different numbers of integral values for each of the P analytes.

According to the flowchart shown in Fig. 180, upon judging in step S7 that multiple pieces of measurement data has not been received, the analysis device 2 creates and displays a single curve $CUR_{uni}$ (see steps S9 and S10), and upon judging in step S7 that multiple pieces of measurement data has been received, the analysis device 2 creates P curves $CUR_1$ to $CUR_p$ and the judgement results (the judgement results shown in Fig. 187 which will be described) indicating whether the P curves $CUR_1$ to $CUR_P$ differ from each other, and displays the created P curves $CUR_1$ to $CUR_P$ and the judgement results (the judgement results shown in Fig. 187) (see steps S13 to S15).

Therefore, the analysis device 2 or the analysis system 10 can create the curve $CUR_{uni}$ (or the P curves $CUR_1$ to $CUR_P$) as an index curve(s), which serves an index for identifying the analyte.

Fig. 181 is a flowchart for illustrating the detailed operation of step S9 in Fig. 180.

With reference to Fig. 181, after step S8 in Fig. 180, the calculation unit 23 receives one piece of analysis data $ALY_D_{uni}$ from the control unit 22 (step S91).

Then, the calculation unit 23 sets k = 1 (step S92). Here, k is an argument that represents a prescribed potential range.

After step S92, the calculation unit 23 detects N combinations (Iox_1_k, Ird_1_k) to (Iox_N_k, Ird_N_k) from N oxidation wave current values Iox_1_k to Iox_N_k and N reduction wave current values Ird_1_k to Ird_N_k in a prescribed potential range $V_k$ from the current-potential characteristic $(I\text{-}V)_{uni}$ of the analysis data $ALY_D_{uni}$ (step S93).

Here, N represents the total number of unit potentials (e.g., 1 mV) in one prescribed potential range $V_k$.

When, example, one prescribed potential range $V_k$ is [0 to 100 mV], the current-potential characteristic $(I\text{-}V)_{uni}$ includes the current value $I_{0\to100}$ when the potential V is scanned from 0 mV to 100 mV and the current value $I_{100\to0}$ when the potential V is scanned from 100 mV to 0 mV, the calculation unit 23 detects the current value $I_{0\to100}$ when the potential V is scanned from 0 mV to 100 mV as [N oxidation wave current values Iox_1_k to Iox_N_k] and detects the current value $I_{100\to0}$ when the potential V is scanned from 100 mV to 0 mV as [N reduction wave current values Ird_1_k to Ird_N_k], and detects N combinations: (Iox_1_k, Ird_1_k) to (Iox_N_k, Ird_N_k). The same applies when a single prescribed potential range $V_k$ is other than [0 to 100 mV].

After step S93, the calculation unit 23 sets $n_{uip} = 1$ (step S94). Here, $n_{uip}$ is an argument that represents each of the N unit potentials in the single prescribed potential range $V_k$.

After step S94, the calculation unit 23 subtracts the current value of the reduction wave $Ird_n_{uip}_k$ from the current value $Iox_n_{uip}_k$ of the oxidation wave, and calculates the subtraction result $R_sbt_n_{uip}_k$ (step S95).

Then, the calculation unit 23 judges whether $n_{uip} = N$ (step S96).

If it is judged in step S96 that $n_{uip}$ is not equal to N, the calculation unit 23 sets $n_{uip}$ to $n_{uip} + 1$ (step S97). Thereafter, the operation of the analysis device 2 proceeds to step S95, and steps S95 to S97 are repeatedly executed until it is judged in step S96 that $n_{uip}$ is equal to N.

Then, if it is judged in step S96 that $n_{uip} = N$, the calculation unit 23 adds N subtraction results R_sbt_1_k to R_sbt_N_k to obtain an integral value $ITG_k$ in the prescribed potential range $V_k$ (step S98).

Subsequently, the calculation unit 23 sets the prescribed potential range $V_k$ as class Cls_k and creates a pair (Cls_k, $ITG_k$) of class Cls_k and the integral value $ITG_k$ (step S99).

Then, the calculation unit 23 judges whether k = n (step S100). Here, n is the total number of prescribed potential ranges $V_k$.

If it is judged in step S100 that k is not equal to n, the calculation unit 23 sets k = k + 1 (step S101). Thereafter, the operation of the analysis device 2 proceeds to step S93, and steps S93 to S101 are repeatedly executed until it is judged in step S100 that k is equal to n.

Then, if it is judged in step S100 that k = n, the calculation unit 23 generates n pairs (Cls_1, $ITG_1$) to (Cls_n, $ITG_n$) (step S102).

After that, the calculation unit 23 outputs the n pairs (Cls_1, $ITG_1$) to (Cls_n, $ITG_n$) to the creation unit 25.

The creation unit 25 receives the n pairs (Cls_1, $ITG_1$) to (Cls_n, $ITG_n$) from the calculation unit 23, and plots the received n pairs (Cls_1, $ITG_1$) to (Cls_n, $ITG_n$) to create a curve CUR that shows the class dependence of the integral values (step S103).

After step S103, the operation of the analysis device 2 proceeds to step S10 in Fig. 180.

Fig. 182 is a flowchart for illustrating the detailed operation of step S12 in Fig. 180.

With reference to Fig. 182, if it is judged in step S7 in Fig. 180 that multiple pieces of measurement data have been received, the control unit 22 of the analysis device 2 has already received P pieces of measurement data MRS_1 to MRS_P from the receiving unit 21. The control unit 22 then sets p = 1 (step S121). Here, p is an argument that indicates each of the P pieces of measurement data MRS_1 to MRS_P, and p = 1 to P.

After step S121, the control unit 22 detects the time $t_p$ when the measurement data MRS_p has been received with reference to the timer (step S122), and issues the identification information $ID_p$ for identifying the measurement data MRS_p (step S123).

The control unit 22 then detects the name of the analyte $ALY_Na_p$, the kind of the analyte $ALY_Kd_p$, and the current-potential characteristic $(I\text{-}V)_p$ from the measurement data MRS_p (step S124).

Then, the control unit 22 creates analysis data $ALY_Dp=[t_p/ID_p/ALY_Na_p/ALY_Kd_p/(I\text{-}V)_p]$ in which the time $t_p$, the identification information $ID_p$, the name of the analyte $ALY_Na_p$, the kind of the analyte $ALY_Kd_p$, and the current-potential characteristic $(I\text{-}V)_p$, are associated with each other (step S125).

The control unit 22 then judges whether p = P (step S126).

If it is judged in step S126 that p is not equal to P, the control unit 22 sets p = p + 1 (step S127). Thereafter, the operation of the analysis device 2 proceeds to step S122, and steps S122 to S127 are repeatedly executed until it is judged in step S126 that p = P.

Then, if it is judged in step S126 that p = P, the operation of the analysis device 2 proceeds to step S13 in Fig. 180.

In the flowchart shown in Fig. 182, if it is determined in step S126 that p = P, P pieces of analysis data $ALY_D_1$ to $ALY_D_P$ have been created.

Fig. 183 is a flowchart for illustrating the detailed operation of step S13 in Fig. 180.

With reference to Fig. 183, after step S12 in Fig. 180, the calculation unit 23 receives the P pieces of analysis data $ALY_D_1$ to $ALY_D_P$ from the control unit 22 (step S131).

Then, the calculation unit 23 sets p = 1 (step S132). Here, p is an argument that represents each of the P pieces of analysis data $ALY_D_1$ to $ALY_D_P$.

After the step S132, the calculation unit 23 and the creation unit 25 create a curve $CUR_p$ as the p-th index curve by sequentially executing steps S91 to S103 in Fig. 181 based on the analysis data $ALY_D_p$ (step S133).

In this case, in step S93 in Fig. 181, the "analysis data $ALY_D_{uni}$" is read as the "analysis data $ALY_D_p$," and the "current-potential characteristic $(I\text{-}V)_{uni}$" is read as the "current-potential characteristic $(I\text{-}V)_p$."

After step S133, the calculation unit 23 judges whether p = P (step S134).

If it is judged in step S134 that p is not equal to P, the calculation unit 23 sets p = p + 1 (step S135). Thereafter, the operation of the analysis device 2 proceeds to step S133, and steps S133 to S135 are repeatedly executed until it is judged in step S134 that p = P.

Then, if it is judged that p = P in step S134, the operation of the analysis device 2 proceeds to step S14 in Fig. 180.

According to the flowchart shown in Fig. 183, if it is judged in step S134 that p = P, P curves $CUR_1$ to $CUR_P$ have been created as P index curves for P analytes, respectively.

Fig. 184 is a flowchart for illustrating the detailed operation of step S14 in Fig. 180.

With reference to Fig. 184, after the step S13 in Fig. 180, the judgement unit 24 receives the P pieces of calculation data $CAL_1$ to $CAL_P$ for creating the P curves $CUR_1$ to $CUR_P$ from the calculation unit 23 (step S141).

The judgement unit 24 then selects $Z(Z={}_pC_2)$ combinations of two pieces of calculation data $\{CAL_i, CAL_j\ (i\neq j)\}$_1 to $\{CAL_i, CAL_j\ (i\neq j)\}$_Z from the P pieces of calculation data $CAL_1$ to $CAL_P$ (step S142). Here, the two pieces of calculation data $CAL_i$ and $CAL_j$ are different pieces of calculation data.

After step S142, the judgement unit 24 sets z = 1 (step S143). Here, z is an argument that represents each of the Z combinations of two pieces of calculation data $\{CAL_i, CAL_j\ (i\neq j)\}$_1 to $\{CAL_i, CAL_j\ (i\neq j)\}$_Z.

After step S143, the judgement unit 24 judges whether the two pieces of calculation data $\{CAL_i, CAL_j\ (i\neq j)\}$_z differ based on the two pieces of calculation data $\{CAL_i, CAL_j\ (i\neq j)\}$_z and creates the result of judgement $JDR_z$(step S144) .

Then, the judgement unit 24 judges whether z = Z (step S145). Here, Z represents the total number of Z combinations of two pieces of calculation data $\{CAL_i, CAL_j\ (i\neq j)\}$_1 to $\{CAL_i, CAL_j\ (i\neq j)\}$_Z.

If it is judged in step S145 that z is not equal to Z, the judgement unit 24 sets z = z + 1 (step S146). After that, the operation of the judgement unit 24 proceeds to step S144, and steps S144 to S146 are repeatedly executed until it is judged in step S145 that z = Z.

Then, if it is judged in step S145 that z = Z, the judgement unit 24 creates judgement results on whether two pieces of calculation data $\{CAL_i, CAL_j\ (i\neq j)\}$_z in each of the Z combinations of two pieces of calculation data $\{CAL_i, CAL_j\ (i\neq j)\}$_1 to $\{CAL_i, CAL_j\ (i\neq j)\}$_Z differ based on Z judgement results $JDR_1$ to $JDR_z$ (step S147).

After step S147, the operation of the analysis device 2 proceeds to step S15 in Fig. 180.

Fig. 185 is a flowchart for illustrating the detailed operation of step S144 in Fig. 184.

With reference to Fig. 185, after step S143 in Fig. 184, the judgement unit 24 detects the number $N_{CALi_}z$ of local maximum values of multiple integral values in calculation data $CAL_{i_}z$ and the number $N_{CALj_}z$ of local maximum values of multiple integral values in calculation data $CAL_{j_}z$ based on the two pieces of calculation data $\{CAL_i, CAL_j\ (i\neq j)\}$_z (step S1441).

The judgement unit 24 detects class $Cls_max_i_z$, in which the integral value in the calculation data $CAL_i_z$ is maximized locally and class $Cls_max_j_z$, in which the integral value in the calculation data $CAL_j_z$ is maximized locally, based on the two pieces of calculation data $\{CAL_i, CAL_j (i{\neq}j)\}_z$ (step S1442).

After that, the judgement unit 24 detects the local maximum value $ITG_max_i_z$ of the multiple integral values in the calculation data $CAL_i_z$ and the local maximum value $ITG_max_j_z$ of the multiple integral values in the calculation data $CAL_j_z$ based on the two pieces of calculation data $\{CAL_i, CAL_j (i{\neq}j)\}_z$ (step S1443).

When the local maximum value $ITG_max_i_z$ includes multiple local maximum values, one of the multiple local maximum values is set as the local maximum value $ITG_max_i_z$, and when the local maximum value $ITG_max_J_z$ includes multiple maximum values, one of the maximum values is set as the local maximum value $ITG_max_J_z$.

The judgement unit 24 then calculates the standard deviation $\sigma_{DF_ITGi},\ _{ITGj_z}$ of the differences between the multiple integral values in the calculation data $CAL_i_z$ and the multiple integral values in the calculation data $CAL_j_z$ (step S1444).

Then, the judgement unit 24 judges whether the number $N_{CALi_}z$ of local maximum values is equal to the number $N_{CALj_}z$ of local maximum values (step S1445).

If it is judged in step S1445 that the number of local maximum values $N_{CALi_}z$ is equal to the number of local maximum values $N_{CALj_}z$, the judgement unit 24 judges whether class $Cls_max_i_z$ is the same as class $cls_max_j_z$ (step S1446).

If it is judged in step S1446 that class $Cls_max_i_z$ is the same as class $cls_max_j_z$, the judgement unit 24 calculates the absolute value $|ITG_max_i_z - ITG_max_j_z|$ of the difference between the local maximum values $ITG_max_i_z$ and $ITG_max_j_z$, and also detects the maximum value $max(\sigma_{ITGi_}z, \sigma_{ITGj_}z)$ of the standard deviations $\sigma_{ITGi_z}, \sigma_{ITGj_z}$. Then, the judgement unit 24 judges whether the absolute value $|ITG_maxi_z\text{-}ITG_max_j_z|$ is greater than the maximum value max $(\sigma_{ITGi_}z, \sigma_{ITGj_}z)$ (step S1447).

When the standard deviation $\sigma_{ITGi_}z$ is the same as the standard deviation $\sigma_{ITGj_}z$, the judgement unit 24 detects one of the standard deviations $\sigma_{ITGi_}z, \sigma_{ITGj_}z$ as the maximum value max $(\sigma_{ITGi_}z, \sigma_{ITGj_}z)$ .

If it is judged in step S1447 that the absolute value $|ITG_maxi_z\text{-}ITG_max_j_z|$ is not greater than the maximum value $max(\sigma_{ITGi_}z,\sigma_{ITGj_}z)$ (i.e., if the absolute value $|ITG_max_i_z - ITG_max_j_z|$ is judged to be equal to or less than the maximum value max $(\sigma_{ITGi_}z, \sigma_{ITGj_}z)$), the judgement unit 24 judges whether the standard deviation of the differences $\sigma_{DF_ITGi,\ ITGj_z}$ is greater than the threshold $\sigma_{th}$ (= 15%) (step S1448).

If it is judged in step S1448 that the standard deviation of the differences $\sigma_{DF_ITGi,\ ITGj}$ is not greater than the threshold $\sigma_{th}$ (i.e., if it is judged that the standard deviation of the differences $\sigma_{DF_ITGi,\ ITGj}$ is equal to or less than to the threshold $\sigma_{th}$), the judgement unit 24 judges that the calculation data $CAL_i_z$ and the calculation data $CAL_j_z$ do not differ (step S1449).

Meanwhile, if it is judged in step S1445 that the number of local maximum values $N_{CALi_}z$ is not equal to the number of m local aximum values $N_{CALj_}z$, or if it is judged in step S1446 that class $Cls_max_i_z$ is not the same as class $Cls_max_z$, or if it is judged in step S1447 that the absolute value $|ITG_max_i_z\text{-}ITG_max_j_z|$ is greater than the maximum value max $(\sigma_{ITGi_}z, \sigma_{ITGj_}z)$, or if it is judged in step S1448 that the standard deviation of the differences $\sigma_{DF_ITGi,\ ITGj}$ is greater than the threshold $\sigma_{th}$, the judgement unit 24 judges that the calculation data $CAL_i_z$ and the calculation data $CAL_j_z$ differ (step S1450).

Then, after step S1449 or step S1450, the operation of the analysis device 2 proceeds to step S145 in Fig. 184.

"The result of the judgement that the calculation data $CAL_i_z$ and the calculation data $CAL_j_z$ do not differ" in step S1449 or "the result of the judgement that the calculation data $CAL_i_z$ and calculation data $cAL_j_z$ differ" in step S1450 constitutes the "judgement result $JDR_z$" in step S144 of Fig. 184.

If it is judged in step S1445 that the number of local maximum values $N_{CALi_}z$ is not equal to the number of local maximum values $N_{CALj_}z$, it is judged that the calculation data $CAL_i_z$ and the calculation data $CAL_j_z$ differ because the number of local maximum values $N_{CALi_}z$ corresponds to the number of peaks $N_{CURi_}z$ of the curve $C_{URi_}z$, and the number of local maximum values $N_{CALj_}z$ corresponds to the number of peaks $N_{CURj_}z$ of the curve $C_{URj_}z$, and therefore it is clear that the curve $CUR_i_z$ differs from the curve $CUR_j_z$ if the number of peaks $N_{CURi_}z$ is not equal to the number of peaks $N_{CURj_}z$.

If it is judged in step S1446 that class $Cls_max_i_z$ is not the same as class $cls_max_j_z$, it is judged that the calculation data $CAL_i_z$ and the calculation data $CAL_j_z$ differ. This is because class $Cls_max_i_z$ corresponds to the peak position $PS_{CURi_}z$ of the curve $CUR_i_z$, and class $cls_max_j_z$ corresponds to the peak position $PS_{CURj_}z$ of the curve $CUR_j_z$, the peak position $PS_{CURi_}z$ is at least one class away from the peak position $PS_{CURj_}z$ if the peak positions $PS_{CURi_}z$ and $PS_{CURj_}z$ are not equal, and since one class represents one prescribed potential range (e.g., the range from 101 mV to 200 mV), there is a significant difference between the peak position $PS_{CURi_}z$ and the peak position $PS_{CURj_}z$.

Furthermore, if it is judged in step S1447 that the absolute value $|ITG_max_i_z\text{-}ITG_max_j_z|$ is greater than the maximum value max $(\sigma_{ITGi_}z, \sigma_{ITGj_}z\ )$, it is judged that the calculation data $CAL_i_z$ and the calculation data $CAL_j_z$ differ, because the local maximum value $ITG_max_i_z$ of the integral values corresponds to the peak value $PV_{CURi_}z$ of the curve $CUR_i_z$, and the local maximum value $ITG_max_j_z$ of the integral values corresponds to the peak value $PV_{CURj_}z$ of the

curve $CUR_j$_z, the difference between the peak value $PV_{CURi}$_z and the peak value $PV_{CURj}$_z does not fall within the ranges of variation of the multiple integral values on the curve $CUR_i$_z and the ranges of variation of the multiple integral values on the curve $CUR_j$_z.

Furthermore, if it is judged in step S1448 that the standard deviation of the differences $\sigma_{DF_ITGi, ITGj_z}$ is greater than the threshold $\sigma_{tn}$, it is judged that the calculation data $CAL_i$_z and the calculation data $CAL_j$_z differ because the multiple integral values on the curve $CUR_i$_z created from the calculation data $CAL_i$_z differ from the multiple integral values on the curve $CUR_j$_z created from the calculation data $CAL_j$_z.

In the flowchart shown in Fig. 185, the judgement unit 24 may execute only step S1445 among steps S1445 to S1448 to judge whether the calculation data $CAL_i$_z and the calculation data $CAL_j$_z differ, may execute only step S1446 among steps S1445 to S1448 to judge whether the calculation data $CAL_i$_z and the calculation data $CAL_j$_z differ, may execute only step S1447 among steps S1445 to S1448 to judge whether the calculation data $CAL_i$_z and the calculation data $CAL_j$_z differ, may execute only step S1448 among steps S1445 to S1448 to judge whether the calculation data $CAL_i$_z and the calculation data $CAL_j$_z differ, or may execute at least one of the steps S1445 to S1448 to judge whether the calculation data $CAL_i$_z and the calculation data $CAL_j$_z differ.

As a result, the conditions for judging whether the calculation data $CAL_i$_z and the calculation data $CAL_j$_z differ are as shown in Table 8.

[Table 8]

| | Conditions for judging whether calculation data $CaL_i$ z differs from calculation data $CAL_j$ z |
|---|---|
| 1 | Step S1445: : $N_{CALi_}z=N_{CALj_}z$? |
| 2 | Step S1447 : $Cls_max_i_z=Cls_max_j_z$? |
| 3 | Step S1447 : $\lvert ITG_max_i_z-ITG_max_j_z\rvert>rnax(\sigma_{ITGi_}z,\sigma_{ITGj_}z)$? |
| 4 | Step S1448 : $\sigma_{DF_ITGi, ITGj_z}>\sigma_{th}$? |
| 5 | Step S1445 : $N_{CALi_}z=N_{CALj_}z$?<br>Step S1446 : $Cls_max_i_z=Cls_max_j_z$? |
| 6 | Step S1445 : $N_{CALi_}z=N_{CALj_}z$?<br>Step S1447 : $\lvert ITG_max_i_z-ITG_max_j_z\rvert>max(\sigma_{ITGi_}z,\sigma_{ITGj_}z)$? |
| 7 | Step S1445 : $N_{CALi_}z=N_{CALj_}z$?<br>Step S1448 : $\sigma_{DF_ITGi, ITGj_z}>\sigma_{th}$? |
| 8 | Step S1446 : $Cls_max_i_z=Cls_max_j_z$?<br>Step S1447 : $\lvert ITG_max_i_z-ITG_max_j_z\rvert>max(\sigma_{ITGi_}z, \sigma_{ITGj_}z)$? |
| 9 | Step S1446 : $Cls_max_i_z=Cls_max_j_z$?<br>Step S1448 : $\sigma_{DF_ITGi, ITGj_z}>\sigma_{th}$? |
| 10 | Step S1447 : $\lvert ITG_max_i_z-ITG_max_j_z\rvert>max(\sigma_{ITGi_}z,\sigma_{ITGj_}z)$?<br>Step S1448 : $\sigma_{DF_ITGi, ITGj_z}>\sigma_{th}$? |
| 11 | Step S1445 : $N_{CALi_}z=N_{CALj_}z$?<br>Step S1446 : $Cls_max_i_z=Cls_max_j_z$?<br>Step S1447 : $\lvert ITG_maxi\ _z-ITG_maxj\ _z\rvert>max(\sigma_{ITGi_z},\sigma_{ITGj}\ z)$? |
| 12 | Step S1445 : $N_{CURi_}z=N_{CURj_}z$?<br>Step S1446 : $Cls_max_i_z=Cls_max_j_z$?<br>Step S1448 : $\sigma_{DF_ITGi, ITGj_z}>\sigma_{th}$? |
| 13 | Step S1446 : $Cls_max_i_z=Cls_max_j_z$?<br>Step S1447 : $\lvert ITG_maxi_{_z}-ITG\ max_j\ z\rvert>max(\sigma_{ITGi_}z,\sigma_{ITGj_}z)$?<br>Step S1448 : $\sigma_{DF_ITGi, ITGj_z}>\sigma_{th}$? |
| 14 | Step S1445 : $N_{CALi_}z={}_{NALj_}z$?<br>Step S1447 : $\lvert ITG_max_i_z-ITG_max_j_z\rvert>max(\sigma_{ITGi_}z,{}_{\sigma ITGj_}z)$?<br>Step S1448 : $\sigma_{DF_CALi_z,CALj_z}>\sigma_{th}$ |
| 15 | Step S1445 : $N_{CALi_}z=N_{CALj_}z$?<br>Step S1446 : $Cls_max_i_z=Cls_max_j_z$? |

(continued)

| | Conditions for judging whether calculation data $CaL_i_z$ differs from calculation data $CAL_j_z$ |
|---|---|
| | Step S1447 : $\|ITG_max_i_z-ITG_max_j_z\|>max(\sigma_{ITGi}_z,\sigma_{ITGj}_z)$ ?<br>Step S1448 : $\sigma_{DF_ITGi,\ ITGj_z}>\sigma_{th}$? |

Fig. 186 is another flowchart for illustrating the detailed operation of step S144 in Fig. 184.

The flowchart shown in Fig. 186 is identical to the flowchart shown in Fig. 185, except that steps S1444 and S1448 in the flowchart shown in Fig. 185 are replaced with steps S1444A and S1448A, respectively.

With reference to Fig. 186, after step S143 in Fig. 184, steps S1441 to S1443 described above are executed sequentially.

After step S1443, the judgement unit 24 calculates the standard deviation $\sigma_{DF_DFFi,\ DFFj_z}$ of the differences between multiple differential values in multiple classes obtained by differentiating the curve $CUR_{i_z}$ and multiple differential values in multiple classes obtained by differentiating the curve $CUR_{j_z}$ using the above-described method (step S1444A).

After step S1444A, steps S1445, S1446, and S1447 are executed sequentially, and if it is judged in step S1447 that the absolute value $|ITG_max_i_z-ITG_max_j_z|$ is not greater than the maximum value max $(\sigma_{ITGi}_z, \sigma_{ITGj}_z)$ (i.e., if the absolute value $|ITG_max_i_z-ITG_max_j_z|$ is judged to be equal to or less than the maximum value max $(\sigma_{ITGi_z}, \sigma_{ITGj_z})$ ), the judgement unit 24 judges whether the standard deviation of the differences $\sigma_{DF_DFFi,\ DFFj_z}$ is greater than the threshold value $\sigma_{th}$ (= 15%) (step S1448A).

Then, if it is judged in step S1448A that the standard deviation of the differences $\sigma_{DF_DFFi,\ DFFj_z}$ is not greater than the threshold value $\sigma_{th}$ (=15%) (i.e., if it is judged that the standard deviation of the differences $\sigma_{DF_DFFi,\ DFFj_z}$ is less than the threshold value $\sigma_{th}$ (=15%), the judgement unit 24 judges that the calculation data $CAL_i_z$ and the calculation data $CAL_j_z$ do not differ (step S1449).

Meanwhile, if it is judged in step S1448A that the standard deviation of the differences $\sigma_{DF_DFFi,\ DFFj_z}$ is greater than the threshold value $\sigma_{th}$ (=15%), the judgement unit 24 judges that the calculation data $CAL_i_z$ and the calculation data $CAL_j_z$ differ (step S1450).

Then, after step S1449 or step S1450, the operation of the analysis device 2 proceeds to step S145 in Fig. 184.

Furthermore, "the judgement result that the calculation data $CAL_i_z$ and the calculation data $CAL_j_z$ do not differ" in step S1449 or "the judgement result that the calculation data $CAL_i_z$ and calculation data $CAL_j_z$ differ" in step S1450 constitutes the "judgement result $JDR_z$" in step S144 of Fig. 184.

If it is judged in step S1448A that the standard deviation of the differences $\sigma_{DF_DFFi,\ DFFj_z}$ is greater than the threshold value $\sigma_{th}$ (=15%), it is judged that the calculation data $CAL_i_z$ and the calculation data $CAL_j_z$ differ. This is because the multiple differential values $DFE_i_z$ on the curve $CUR_i_z$ represent the slope of the curve $CUR_i_z$ at each class of curve $CUR_i_z$, the multiple differential values $DFE_j_z$ on the curve $CUR_j_z$ represent the slope of the curve $CUR_j_z$ at each class of the curve $CUR_j_z$, and when the standard deviation of the differences $\sigma_{DF_DFFi,\ DFFj_z}$ is greater than the threshold value $\sigma_{th}$ (= 15%), the multiple slopes of the curve $CUR_i_z$ differ from the multiple slopes of the curve $CUR_j_z$.

In the flowchart shown in Fig. 186, the judgement unit 24 may execute only step S1445, step S1446, step S1447, or step 1448A among steps S1445 to S1447 and S1448A or at least one of the steps S1445 to S1447 and S1448A to judge whether the calculation data $CAL_i_z$ and the calculation data $CAL_j_z$ differ.

As a result, the conditions for judging whether the calculation data $CAL_i_z$ and the calculation data $CAL_j_z$ differ are as shown in Table 9.

[Table 9]

| | Conditions for judging whether calculation data $CaL_i_z$ differs from calculation data $CAL_j_z$ |
|---|---|
| 1 | Step S1445: : $N_{CALi}_z=N_{CALj}_z$? |
| 2 | Step S1447 : $Cls_max_i_z=Cls_max_j_z$? |
| 3 | Step S1447 : $\|ITG_ITG_max_i_z-ITG_max_j_z\|>max(\sigma_{ITGi}_z,\sigma_{ITGj}_z)$? |
| 4 | Step S1448A : $\sigma_{DF_DFEi,DFEj_z}>\sigma_{th}$? |
| 5 | Step S1445 : $N_{CALi}_z=N_{CALj}_z$?<br>Step S1446 : $Cls_max_i_z=Cls_max_j_z$? |
| 6 | Step S1445 : $N_{CALi}_z=N_{CALj}_z$?<br>Step S1447 : $\|ITG_max_i_z-ITG_max_j_z\|>max(\sigma_{ITGi}_z,\sigma_{ITGj}_z)$ ? |
| 7 | Step S1445 : $N_{CALi}_z=N_{CALj}_z$?<br>Step S1448A : $\sigma_{DF_DFEi,DFEj_z}>\sigma_{th}$? |

(continued)

| | Conditions for judging whether calculation data $CaL_{i_}z$ differs from calculation data $CAL_{j_}z$ |
|---|---|
| 8 | Step S1446 : $Cls_max_{i_}z=Cls_max_{j_}z$?<br>Step S1447 : $\|ITG_max_{i_}z-ITG_max_{j_}z\|>max(\sigma_{ITGi_}z,\sigma_{ITGj_}z)$ ? |
| 9 | Step S1446 : $Cls_max_{i_}z=Cls_max_{j_}z$?<br>Step S1448A : $\sigma_{DF_DFEi,DFEj_z}>\sigma_{th}$? |
| 10 | Step S1447 : $\|ITG_max_{i_}z-ITG_max_{j_}z\|>max(\sigma_{ITGi_}z,\sigma_{ITGj_}z)$ ?<br>Step S1448A : $\sigma_{DF_DFEi,DFEj_z}>\sigma_{th}$? |
| 11 | Step S1445 : $N_{CALi_}z=NC_{ALj_}z$?<br>Step S1446 : $Cls_max_{i_}z=Cls_max_{j_}z$?<br>Step S1447 : $\|ITG_ITG_max_{i_}z-ITG_max_{j_}z\|>max(\sigma_{ITGi_}z,\sigma_{ITGj_}z)$ ? |
| 12 | Step S1445 : $N_{CURi_Z}=NC_{URj_}z$?<br>Step S1446 : $Cls_max_{i_}z=Cls_max_{j_}z$?<br>Step S1448A : $\sigma_{DF_ITGi, ITGj_z}>\sigma_{th}$? |
| 13 | Step S1446 : $Cls_max_{i_}z=Cls_max_{j_}z$?<br>Step S1447 : $\|ITG_ITG_maxi_{_z}-ITG_max_{j_}z\|>max(\sigma_{ITGi}z,\sigma_{ITGj_}z)$ ?<br>Step S1448A : $\sigma_{DF_DFEi,DFEj_z}>\sigma_{th}$? |
| 14 | Step S1445 : $N_{CALi_}z=N_{CALj_}z$?<br>Step S1447 : $\|ITG_max_{i_}z-ITG_max_{j_}z\|>max(\sigma_{ITGi_}z,\sigma ITG_{j_}z)$ ?<br>Step S1448 : $\sigma_{DF_DFEi,DFEj\ _z}>\sigma_{th}$? |
| 15 | Step S1445 : $N_{CALi_}z=N_{CALj_}z$?<br>Step S1446 : $Cls_max_{i_}z=Cls_max_{j_}z$?<br>Step S1447 : $\|ITG_max_{i_}z-ITG_max_{j_}z\|>max(\sigma_{ITGi_}z,\sigma_{ITGj_}z)$ ?<br>Step S1448A : $\sigma_{DF_DFEi,DFEj_z}>\sigma_{th}$? |

Fig. 187 is a conceptual view showing the results of judging whether the ${}_PC_2$ combinations of two curves $CUR_i$ and $CUR_j$ differ.

With reference to Fig. 187, in the ${}_PC_2$ combinations of two curves $CUR_i$ and $CUR_j$ (i≠j), the threshold value $\sigma_{th}$ $(_{CURi,CURj})$ for judging whether the two curves $CUR_i$ and $CUR_j$ (where i≠j, i = 1 to P, and j = 1 to P) differ is for example 15%. Here, ${}_PC_2$ is the number of combinations of two different curves $CUR_i$ and $CUR_j$ (i≠j), when the two different curves $CUR_i$ and $CUR_j$ (i≠j) are extracted from the P curves $CUR_1$ to $CUR_P$.

Then, if the judgement results indicates that all of the ${}_PC_2$ combinations of two curves $CUR_i$ and $CUR_j$ differ (◦), it is judged that the P curves $CUR_1$ to $CUR_p$ differ from each other. In this case, the P curves $CUR_1$ to $CUR_P$ represent a feature quantity by the integral values for the P analytes.

Meanwhile, if at least one combination of two curves $CUR_i$ and $CUR_j$ of the ${}_PC_2$ combinations of the two curves $CUR_i$ and $CUR_j$ does not differ, the P curves $CUR_1$ to $CUR_P$ do not differ from each other.

When at least one combination of two curves $CUR_i$ and $CUR_j$ among the ${}_PC_2$ combinations of two curves $CUR_i$ and $CUR_j$ does not differ, referring to the judgement results shown in Fig. 187 makes it easy to understand which two curves $CUR_i$ and $CUR_j$ differ and which two curves $CUR_i$' and $CUR_j$' do not differ.

When all the ${}_PC_2$ combinations of two curves $CUR_i$ and $CUR_j$ do not differ (×), it is judged that the P curves $CUR_1$ to $CUR_P$ do not differ from each other.

In step S14 of Fig. 180, the judgement unit 24 creates the judgement results shown in Fig. 187. The judgement unit 24 outputs the judgement results shown in Fig. 187 to the creation unit 25.

Upon receiving the judgement results shown in Fig. 187 from the judgement unit 24, the creation unit 25 outputs the P curves $CUR_1$ to $CUR_P$ and the judgement results shown in Fig. 187 to the display unit 26. Then, the display unit 26 receives the P curves $CUR_1$ to $CUR_P$ and the judgement results shown in Fig. 187 from the creation unit 25 and displays the P curves $CUR_1$ to $CUR_P$ and the judgement results shown in Fig. 187 (see step S15 in Fig. 180).

Upon receiving the judgement results shown in Fig. 187 from the judgement unit 24, the creation unit 25 of the analysis device 2 may refer to the judgement results in Fig. 187, detect multiple curves $CUR_{DIFF}$ judged to differ from each other, output the detected multiple curves $CUR_{DIFF}$ to the display unit 26, and display the multiple curves $CUR_{DIFF}$ using the display unit 26. In other words, the creation unit 25 of the analysis device 2 may display only the multiple curves $CUR_{DIFF}$ judged to differ among the P curves $CUR_1$ to $CUR_P$ using the display unit 26.

Furthermore, upon receiving the judgement results shown in Fig. 187 from the judgement unit 24, the creation unit 25 of the analysis device 2 detects multiple curves $CUR_{NO-DIFF}$ judged as not differing from each other by referring to the judgement results in Fig. 187 and may output the multiple curves $CUR_{NO-DIFF}$ to the display unit 26, and the display unit 26 may display the multiple curves $CUR_{NO-DIFF}$. In other words, the creation unit 25 of the analysis device 2 may display only the multiple curves $CUR_{NO-DIFF}$ judged as not differing from each other among the P curves $CUR_1$ to $CUR_P$ using the display unit 26.

Furthermore, when the calculation unit 23 calculates multiple integral values in multiple classes (i.e., multiple prescribed potential ranges) for each of the P analytes, the judgement unit 24 of the analysis device 2 may judge whether the P [multiple integral values] differ from each other, and when the judgement unit 24 judges that the P [multiple integral values] differ from each other, the creation unit 25 may create P curves $CUR_1$ to $CUR_P$, based on the P [multiple integral values].

Furthermore, when the calculation unit 23 calculates multiple integral values in multiple classes (i.e., multiple prescribed potential ranges) for each of the P analytes, the judgement unit 24 of the analysis device 2 may judge whether the P [multiple integral values] differ from each other, and when the judgement unit 24 judges that the P [multiple integral values] do not differ from each other, the creation unit 25 may create P curves $CUR_1$ to $CUR_P$, based on the P [multiple integral values].

Furthermore, when the calculation unit 23 calculates multiple integral values in multiple classes (i.e., multiple prescribed potential ranges) for each of the P analytes, the judgement unit 24 of the analysis device 2 may judge whether the P [multiple integral values] differ from each other, and when the judgement unit 24 has judged that G (where G is an integer that satisfies $2 \leq G < P$) of the P [multiple integral values] differ from each other and that (P-G) [multiple integral values] do not differ from each other, the creation unit 25 may separate the P curves $CUR_1$ to $CUR_P$ into G curves $CUR_1$ to $CUR_G$ and (P-G) curves $CUR_{G+1}$ to $CUR_P$ and have the display unit 26 display these curves.

Alternatively, the creation unit 25 of the analysis device 2 may display, via the display unit 26, any combination of curves CUR from the P curves $CUR_1$ to $CUR_P$.

Fig. 188 is a conceptual view for illustrating the update of analysis data $ALY_D_{uni}$ to index data $IDX_{uni}$ in step S11 in Fig. 180.

With reference to Fig. 188, in step S8 in Fig. 180, the control unit 22 of the analysis device 2 creates the analysis data $ALY_D_{uni}$ which includes time $t_{uni}$, identification information $ID_{uni}$, the name of analyte $ALY_Na_{uni}$, the kind of the analyte $ALY_Kd_{uni}$, and the current-potential characteristic $(I\text{-}V)_{uni}$, based on measurement data MRS_uni (see Fig. 188 at (a)).

Then, after outputting the analysis data $ALY_D_{uni}$ to the calculation unit 23 and upon receiving the analysis result $ALY_RLS_{uni}=[ID_{uni}/CAL_{uni}/CUR_{uni}]$ from the creation unit 25, the control unit 22 reads out the analysis data $ALY_D_{uni}$ with the same identification information as the identification information $ID_{uni}$ in the analysis result $ALY_RLS_{uni}$ from the database 28.

Then, the control unit 22 detects the calculation data $CAL_{uni}$ and the curve $CUR_{uni}$ from the analysis result $ALY_RLS_{uni}=[ID_{uni}/CAL_{uni}/CUR_{uni}]$ and creates the index data $IDX_{uni}$ by adding the detected calculation data $CAL_{uni}$ and the curve $CUR_{uni}$ to the analysis data $ALY_D_{uni}$, to update the analysis data $ALY_D_{uni}$ to the index data $IDX_{uni}$ (see Fig. 188 at (b)).

The control unit 22 then stores the index data $IDX_{uni}$ in the database 28 in place of the analysis data $ALY_D_{uni}$.

Fig. 189 is a conceptual view illustrating the update of P pieces of analysis data $ALY_D_1$ to $ALY_D_P$ to P pieces of index data $IDX_1$ to $IDX_P$ in step S16 in Fig. 180.

With reference to Fig. 189, in step S12 of Fig. 180, the control unit 22 of the analysis device 2 creates, based on the P pieces of measurement data MRS_1 to MRS_P, analysis data $ALY_D_1$ including time $t_1$, identification information $ID_1$, the name of the analyte $ALY_Na_1$, the kind of the analyte $ALY_Kd_1$, and the current-potential characteristic $(I\text{-}V)_1$, analysis data $ALY_D_2$ including time $t_2$, identification information $ID_2$, the name of the analyte $ALY_Na_2$, the kind of the analyte $ALY_Kd_2$, and the current-potential characteristic $(I\text{-}V)_2$ ..., and analysis data $ALY_D_p$ including time $t_P$, identification information $ID_P$, the name of analyte $ALY_Na_P$, the kind of analyte $ALY_Kd_P$, and the current-potential characteristic $(I\text{-}V)_P$ (see Fig. 189 at (a)). In other words, the control unit 22 creates the P pieces of analysis data $ALY_D_1$ to $ALY_D_P$ based on the P pieces of measurement data MRS_1 to MRS_P.

Then, after outputting the P pieces of analysis data $ALY_D_1$ to $ALY_D_P$ to the calculation unit 23, the control unit 22 receives P pieces of analysis results $ALY_RLS_1=[ID_1/CAL_1/CUR_1]$ to $ALY_RLS_P=[ID_P/CAL_P/CUR_P]$ from the creation unit 25, and then reads out, from the database 28, the P pieces of analysis data $ALY_D_1$ to $ALY_D_P$ with the same identification information as the P pieces of identification information $ID_1$ to $ID_P$ in the P pieces of analysis results $ALY_RLS_1$ to $ALY_RLS_P$.

The control unit 22 then detects the calculation data $CAL_p$ and the curve $CUR_p$ from the analysis result $ALY_RLS_p=[ID_p/CAL_p/CUR_p]$ (where p is any number from 1 to P), adds the detected calculation data $CAL_p$ and the curve $CUR_p$ to the analysis data $ALY_D_p$ to create index data $IDX_p$, updates the analysis data $ALY_D_p$ to the index data $IDX_p$, and perform the update for all the P pieces of analysis data $ALY_D_1$ to $ALY_D_P$ to update the P analysis data $ALY_D_1$

to $ALY_D_P$ to P index data $IDX_1$ to $IDX_P$, respectively (see Fig. 189 at (b)).

The control unit 22 then associates the judgement results (the judgement results shown in Fig. 187) with the P pieces of index data $IDX_1$ to $IDX_P$ (see Fig. 189 at (b)).

In this way, the control unit 22 stores the P pieces of index data $IDX_1$ to $IDX_P$ in the database 28 in place of the P pieces of analysis data $ALY_D_1$ to $ALY_D_P$, and stores the judgement results (the judgement results shown in Fig. 187) in the database 28 in association with the P pieces of index data $IDX_1$ to $IDX_P$.

According to an embodiment of the invention, the operation of the analysis device 2 may be performed by software. In this case, the analysis device 2 may include a CPU (Central Processing Unit), a ROM (Read Only Memory), and a RAM (Random Access Memory).

The ROM stores a program Prog_A which includes steps S6 to S16 shown in Fig. 180 (including the flowcharts shown in Figs. 181 to 185) or a program Prog_B which includes steps S6 to S16 shown in Fig. 180 (including the flowcharts shown in Figs. 181 to 184 and the flowchart shown in Fig. 186).

The CPU reads out the program Prog_A or the program Prog_B from the ROM, executes the read program Prog_A or program Prog_B, and creates a curve CUR that shows the relation between integral values and classes as an index curve.

In this case, the RAM temporarily stores for example the standard deviation of the differences $\sigma_{DF_CURi, CURj}$ (i≠j, i=1 to P, j=1 to P), the standard deviation of the differences $\sigma_{DF_DFFi, DFFj}$ (i≠j, i=1 to P, j=1 to P) and the threshold value $\sigma_{th}$.

Therefore, the program Prog_A or Prog_B is a program that causes the computer (CPU) to create a curve CUR as an index curve which serves as an index for identifying an analyte.

Fig. 190 is the other schematic diagram of the analysis device 2 shown in Fig. 1. According to the first embodiment, the analysis device 2 shown in Fig. 1 may composed of an analysis device 2A shown in Fig. 190.

With reference to Fig. 190, the analysis device 2A is identical to the analysis device 2 shown in Fig. 7, except that the receiving unit 21, the control unit 22, the calculation unit 23, the judgement unit 24, the creation unit 25, the display unit 26, and the receiving unit 27 of the analysis device 2 are replaced with a receiving circuit 21A, a control circuit 22A, a calculation circuit 23A, a judgement circuit 24A, a creation circuit 25A, a display circuit 26A, and a receiving circuit 27A, respectively, while the other components remain the same as the analysis device 2 shown in Fig. 7.

The receiving circuit 21A, the control circuit 22A, the calculation circuit 23A, the judgement circuit 24A, the creation circuit 25A, the display circuit 26A, and the receiving circuit 27A each perform the same operations as the receiving unit 21, the control unit 22, the calculation unit 23, the judgement unit 24, the creation unit 25, the display unit 26, and the receiving unit 27, respectively.

Second Embodiment

Fig. 191 is a schematic diagram of an analysis system according to a second embodiment. With reference to Fig. 191, the analysis system 10A according to the second embodiment includes a sensor device 1, an analysis device 2B and a terminal device 3.

According to the second embodiment, the sensor device 1 and the terminal device 3 are installed, for example, in wine bars, Japanese restaurants, Japanese Western style restaurant or hospitals.

The terminal device 3 has a built-in timer. The terminal device 3 receives measurement data MRS_uni, which is a single piece of measurement data MRS, from the sensor device 1 via wireless or wired communication. The terminal device 3 then detects the time $t_{uni}$ which represents the reception time of the measurement data MRS_uni with reference to the timer.

The terminal device 3 also issues the identification information $ID_{uni}$ for identifying the measurement data MRS_uni, detects the name of the analyte $ALY_Na_{uni}$, the kind of the analyte $ALY_Kd_{uni}$, and the current-potential characteristic $(I\text{-}V)_{uni}$ (including the relation between the potentials $V_1$ to $V_d$ and the current values $I_1$ to $I_d$) from the measurement data MRS_uni.

Then, the terminal device 3 creates analysis data

$ALY_D_{uni}=[t_{uni}/ID_{uni}/ALY_Na_{uni}/ALY_Kd_{uni}/(I\text{-}V)_{uni}]$, in which the time $t_{uni}$, the identification information $ID_{uni}$, the name of the analyte $ALY_Na_{uni}$, the kind of the analyte $ALY_Kd_{uni}$, and the current-potential characteristic $(I\text{-}V)_{uni}$ are associated with each other, stores the created analysis data $ALY_D_{uni}$ in a database, and transmits the analysis data $ALY_D_{uni}$ to the analysis device 2B provided in the server 30 over the network 20.

After transmitting the analysis data $ALY_D_{uni}$ to the analysis device 2B over the network, the terminal device 3 receives, from the analysis device 2B over the network 20, the analysis result $ALY_RLS_{uni}= [ID_{uni}/CAL_{uni}/CUR_{uni}]$, in which the calculation data $CAL_{uni}$ for creating the curve $CUR_{uni}$ as an index curve which serves an index for identifying one analyte, the curve $CUR_{uni}$, and the identification information $ID_{uni}$ are associated with each other.

Then, the terminal device 3 detects the identification information $ID_{uni}$, the calculation data $CAL_{uni}$, and the curve

$CUR_{uni}$ from the received analysis result $ALY_RLS_{uni}$, reads out, from the database, the analysis data $ALY_D_{uni}$ having the same identification information as the detected identification information $ID_{uni}$, and adds the calculation data $CAL_{uni}$ and the curve $CUR_{uni}$ to the analysis data $ALY_D_{uni}$ to create the index data $IDX_{uni}$ and update the analysis data $ALY_D_{uni}$ to the index data $IDX_{uni}$.

Then, the terminal device 3 stores the index data $IDX_{uni}$ in the database in place of the analysis data $ALY_D_{uni}$ and displays the curve $CUR_{uni}$.

Meanwhile, upon receiving the P pieces of measurement data MRS_1 to MRS_P from the sensor device 1 via wireless or wired communication, the terminal device 3 detects the time $t_1$ to $t_P$ when the P pieces of measurement data MRS_1 to MRS_P were received with reference to the timer.

The terminal device 3 issues identification information $ID_1$ to $ID_P$ to identify the P pieces of measurement data MRS_1 to MRS_P, and detects, from the P pieces of measurement data MRS_1 to MRS_P, P names of analytes $ALY_Na_1$ to $ALY_Na_P$, P kinds of analytes $ALY_Kd_1$ to $ALY_Kd_P$, and P current-potential characteristics $(I\text{-}V)_1$ to $(I\text{-}V)_P$ (each of $(I\text{-}V)_1$ to $(I\text{-}V)_P$ includes the association between potential $V_1$ to $V_d$ and current value $I_1$ to $I_d$).

Then, the terminal device 3 creates P pieces of analysis data $ALY_D_1=[t_1/ID_1/ALY_Na_1/ALY_Kd_1/(I\text{-}V)_1]$ to $ALY_D_P=[t_P/ID_P/ALY_Na_P/ALY_Kd_P/(I\text{-}V)_P]$, in which time $t_1$ to $t_P$, identification information $ID_1$ to $ID_P$, the names of analytes $ALY_Na_1$ to $ALY_Na_P$, the kinds of analytes $ALY_Kd_1$ to $ALY_Kd_P$, and current-potential characteristics $(I\text{-}V)_1$ to $(I\text{-}V)_P$ are associated with each other, stores the created P pieces of analysis data $ALY_D_1$ to $ALY_D_P$ in a database and also transmits the P pieces of analysis data $ALY_D_1$ to $ALY_D_P$ to the analysis device 2B over the network 20.

After transmitting the P pieces of analysis $ALY_D_1$ to $ALY_D_P$ to the analysis device 2B over the network 20, the terminal device 3 receives, from the analysis device 2B over the network 20, P pieces of analysis results $ALY_RLS_1=[ID_1/CAL_1/CUR_1]$ to $ALY_RLS_P=[ID_P/CAL_P/CUR_P]$, in which P pieces of calculation data $CAL_1$ to $CAL_P$, for creating P curves $CUR_1$ to $CUR_P$ as index curves which serve as indexes for identifying the P pieces of analytes, the P curves $CUR_1$ to $CUR_P$, and P pieces of identification information $ID_1$ to $ID_P$ are associated with each other, and the judgement results (the judgement results shown in Fig. 187).

The terminal device 3 then detects the identification information $ID_p$, the calculation data $CAL_p$, and the curve $CUR_p$ from the received analysis result $ALY_RLS_P$ (where p is any number from 1 to P), reads out the analysis data $ALY_D_p$ having the same identification information as the detected identification information $ID_p$ from the database, adds the calculation data $CAL_p$ and the curve $CUR_p$ to the read analysis data $ALY_D_p$, updates the analysis data $ALY_D_p$ to the index data $IDX_p$, and perform the update for all P pieces of analysis data $ALY_D_1$ to $ALY_D_P$, to update the P analysis data $ALY_D_1$ to $ALY_D_P$ to the P pieces of index data $IDX_1$ to $IDX_P$, respectively.

In this way, the terminal device 3 stores the P pieces of index data $IDX_1$ to $IDX_P$ and the judgement results (judgement results shown in Fig. 187) in the database in place of the P pieces of analysis data $ALY_D_1$ to $ALY_D_P$, and displays the P pieces of curves $CUR_1$ to $CUR_P$ and the judgement results (judgement results shown in Fig. 187).

When receiving the measurement data MRS_uni or the P pieces of measurement data MRS_1 to MRS_P via wireless communication from the sensor device 1, the terminal device 3 receives the measurement data MRS_uni or the P pieces of measurement data MRS_1 to MRS_P from the sensor device 1, for example, using Bluetooth® (registered trademark).

When receiving the measurement data MRS_uni or P pieces of measurement data MRS_1 to MRS_P from the sensor device 1 via wired communication, the terminal device 3 is connected to the sensor device 1 via a wired cable, and receives the measurement data MRS_uni or P pieces of measurement data MRS_1 to MRS_P from the sensor device 1 via the wired cable.

The analysis device 2B is provided in the server 30. The analysis device 2B receives the analysis data $ALY_D_{uni}$ from the terminal device 3 over the network 20, and creates the curve $CUR_{uni}$ as the index curve which serves as an index for identifying a single analyte by the method described above based on the received analysis data $ALY_D_{uni}$. Then, the analysis device 2B creates the analysis result $ALY_RLS_{uni}=[ID_{uni}/CAL_{uni}/CUR_{uni}]$, in which the identification information $ID_{uni}$, the calculation data $CAL_{uni}$, and the curve $CUR_{uni}$ are associated with each other, and transmits the analysis result $ALY_RLS_{uni}=[ID_{uni}/CAL_{uni}/CUR_{uni}]$ to the terminal device 3 over the network 20.

The analysis device 2B receives the P pieces of analysis data $ALY_D_1$ to $ALY_D_P$ from the terminal device 3 over the network 20, and creates P index curves $CUR_1$ to $CUR_P$, which serve as indexes for identifying P analytes using the method described above, based on the received P pieces of analysis data $ALY_D_1$ to $ALY_D_P$.

The analysis device 2B creates P analysis results $ALY_RLS_1=[ID_1/CAL_1/CUR_1]$ to $ALY_RLS_P=[ID_P/CAL_P/CUR_P]$, in which P pieces of identification information $ID_1$ to $ID_P$, P pieces of calculation data $CAL_1$ to $CAL_P$, and P pieces of curves $CUR_1$ to $CUR_P$ are associated with each other.

Then, the analysis device 2B creates judgement results (judgement results shown in Fig. 187) indicating whether the P curves $CUR_1$ to $CUR_P$ differ.

Then, the analysis device 2B transmits the P analysis results $ALY_RLS_1$ to $ALY_RLS_P$ and the judgement results (the judgement results shown in Fig. 187) to the terminal device 3 over the network 20.

Fig. 192 is a schematic diagram of the analysis device 2B shown in Fig. 191. With reference to Fig. 192, the analysis device 2B is identical to the analysis device 2 shown in Fig. 7, except that the creation unit 25 of the analysis device 2 shown in Fig. 7 is replaced with the creation unit 25B, the display unit 26 is replaced with the transmission unit 29, and the control unit 22, the reception unit 27, and the database 28 of the analysis device 2 shown in Fig 7 are deleted.

In the analysis device 2B, the receiving unit 21 receives the analysis data $ALY_D_{uni}$ (or P pieces of analysis data $ALY_D_1$ to $ALY_D_P$) from the terminal device 3 over the network 20 and outputs the received analysis data $ALY_D_{uni}$ (or P pieces of analysis data $ALY_D_1$ to $ALY_D_P$) to the calculation unit 23.

Upon receiving the calculation result $CAL_RLS_{uni}$=[$ID_{uni}$/$CAL_{uni}$] and a signal S_u from the calculation unit 23, the creation unit 25B creates a curve $CUR_{uni}$ based on the received calculation result $CAL_RLS_{uni}$ using the method described above.

Then, the creation unit 25B adds the curve $CUR_{uni}$ to the calculation result $CAL_RLS_{uni}$=[$ID_{uni}$/$CAL_{uni}$] to create the analysis result $ALY_RLS_{uni}$=[$ID_{uni}$/$CAL_{uni}$/$CUR_{uni}$], and outputs the created analysis result $ALY_RLS_{uni}$ to the transmission unit 29.

Upon receiving the P calculation results $CAL_RLS_1$=[$ID_1$/$CAL_1$] to $CAL_RLS_P$=[$ID_P$/$CAL_P$] from the calculation unit 23, the creation unit 25B creates P curves $CUR_1$ to $CUR_P$ (i.e., multiple curves CUR) based on the received P calculation results $CAL_RLS_1$=[$ID_1$/$CAL_1$] to $CAL_RLS_P$=[$ID_P$/$CAL_P$] using the method described above.

Then, the creation unit 25B adds the curve $CUR_p$ to the calculation result $CAL_RLS_p$=[$ID_p$/$CAL_p$] (where p is any number from 1 to P) to create the analysis result $ALY_RLS_p$=[$ID_p$/$CAL_p$/$CUR_p$], perform the process for all P calculation results $CAL_RLS_1$ to $CAL_RLS_P$, and creates P analysis results $ALY_RLS_1$=[$ID_1$/$CAL_1$/$CUR_1$] to $ALY_RLS_P$=[$ID_P$/$CAL_P$/$CUR_P$].

Furthermore, the creation unit 25B receives the judgement results (the judgement results shown in Fig. 187) from the judgement unit 24.

Then, the creation unit 25B outputs the P analysis results $ALY_RLS_1$ to $ALY_RLS_P$ and the judgement results (the judgement results shown in Fig. 187) to the transmission unit 29.

Upon receiving the analysis result $ALY_RLS_{uni}$ from the creation unit 25B, the transmission unit 29 transmits the analysis result $ALY_RLS_{uni}$ to the terminal device 3 over the network 20.

Upon receiving the P analysis results $ALY_RLS_1$ to $ALY_RLS_P$ and the judgement results (the judgement results shown in Fig. 187) from the creation unit 25B, the transmission unit 29 transmits the P analysis results $ALY_RLS_1$ to $ALY_RLS_P$ and judgement results (the judgement results shown in Fig. 187) to the terminal device 3 over the network 20.

Fig. 193 is a schematic diagram of the terminal device 3 shown in Fig. 191. With reference to Fig. 193, the terminal device 3 includes an antenna 31, a receiving unit 32, a control unit 33, a transmission unit 34, a display unit 35, an accepting unit 36, and a database 37.

The receiving unit 32 receives the measurement data MRS_uni from the sensor device 1 via the antenna 31 over wireless communication and outputs the received measurement data MRS_uni to the control unit 33.

The receiving unit 32 receives P pieces of measurement data MRS_1 to MRS_P from the sensor device 1 via the antenna 31 over wireless communication, and outputs the received P pieces of measurement data MRS_1 to MRS_P to the control unit 33.

Furthermore, the receiving unit 32 receives the analysis result $ALY_RLS_{uni}$ from the analysis device 2B over the network 20 and the antenna 31, and outputs the received analysis result $ALY_RLS_{uni}$ to the control unit 33.

Furthermore, the receiving unit 32 receives the P analysis results $ALY_RLS_1$ to $ALY_RLS_P$ and the judgement results (judgement results shown in Fig. 187) from the analysis device 2B over the network 20 and the antenna 31, and outputs the received P analysis results $ALY_RLS_1$ to $ALY_RLS_P$ and the judgement results (judgement results shown in Fig. 187) to the control unit 33.

The control unit 33 has a built-in timer. Upon receiving the measurement data MRS_uni from the receiving unit 32, the control unit 33 detects the time $t_{uni}$ which represents the reception time of the measurement data MRS_uni with reference to the timer, and also issues identification information $ID_{uni}$ for identifying the measurement data MRS_uni.

The control unit 33 detects the name $ALY_Na_{uni}$ of the analyte $ALY_{uni}$, the kind $ALY_Kd_{uni}$ of the analyte $ALY_{uni}$, and the current-potential characteristic $(I\text{-}V)_{uni}$ (including the correspondence relationship between potential $V_1$ to $V_d$ and current $I_1$ to $I_d$) from the measurement data MRS_uni.

Then, the control unit 33 creates analysis data $ALY_D_{uni}$=[$t_{uni}$/$ID_{uni}$/$ALY_Na_{uni}$/$ALY_Kd_{uni}$/$(I\text{-}V)_{uni}$], in which the time $t_{uni}$, the identification information $ID_{uni}$, the name $ALY_Na_{uni}$ of the analyte $ALY_{uni}$, the kind $ALY_Kd_{uni}$ of the analyte $ALY_{uni}$ and the current-potential characteristic $(I\text{-}V)_{uni}$ are associated with each other, stores the created analysis data $ALY_D_{uni}$ in the database 37 and outputs the analysis data $ALY_D_{uni}$ to the transmission unit 34.

Upon receiving the P pieces of measurement data MRS_1 to MRS_P from the receiving unit 32, the control unit 33 detects the times $t_1$ to $t_P$ which represent the time of reception of the P pieces of measurement data MRS_1 to MRS_P from the receiving unit 32, with reference to the timer.

The control unit 33 issues identification information $ID_1$ to $ID_P$ for identifying the P pieces of measurement data MRS_1 to MRS_P, respectively and also detects, from the P pieces of measurement data MRS_1 to MRS_P, the names $ALY_Na_1$ to $ALY_Na_P$ of analytes $ALY_1$ to $ALY_P$ and the kinds $ALY_Kd_1$ to $ALY_Kd_P$ of the analytes $ALY_1$ to $ALY_P$, and the current-potential characteristics $(I\text{-}V)_1$ to $(I\text{-}V)_P$ (where each of $(I\text{-}V)_1$ to $(I\text{-}V)_P$ include the association between the potential $V_1$ to $V_d$ and the current values $I_1$ to $I_d$).

Then, the control unit 33 creates P pieces of analysis data $ALY_D_1$=[$t_1$/$ID_1$/$ALY_Na_1$/$ALY_Kd_1$/$(I\text{-}V)_1$] to $ALY_D_P$=[$t_P$/$ID_P$/$ALY_Na_P$/$ALY_Kd_P$/$(I\text{-}V)_P$], in which the time $t_1$ to $t_P$, the identification information $ID_1$ to $ID_P$ , the names $ALY_Na_1$ to $ALY_Na_P$ of analytes $ALY_1$ to $ALY_P$, the kinds $ALY_Kd_1$ to $ALY_Kd_P$ of the analytes $ALY_1$ to $ALY_P$, and the current-potential characteristics $(I\text{-}V)_1$ to $(I\text{-}V)_P$ are associated with each other, stores the created P pieces of analysis data $ALY_D_1$ to $ALY_D_P$ in the database 37, and also outputs the P pieces of analysis data $ALY_D_1$ to $ALY_D_P$ to the transmission unit 34.

Furthermore, upon receiving the analysis result $ALY_RLS_{uni}$=[$ID_{uni}$/$CAL_{uni}$/$CUR_{uni}$] from the receiving unit 32, the control unit 33 detects the identification information $ID_{uni}$, the calculation data $CAL_{uni}$, and the curve $CUR_{uni}$ from the analysis result $ALY_RLS_{uni}$, and then detects, from the database 37, the analysis data $ALY_D_{uni}$ that has the same identification information as the detected identification information $ID_{uni}$.

The control unit 33 then adds the calculation data $CAL_{uni}$ and the curve $CUR_{uni}$ to the detected analysis data $ALY_D_{uni}$ to create index data $IDX_{uni}$, and updates the analysis data $ALY_D_{uni}$ to the index data $IDX_{uni}$.

After that, the control unit 33 reads out the curve $CUR_{uni}$ from the index data $IDX_{uni}$ and outputs the read curve $CUR_{uni}$ to the display unit 35.

Then, the control unit 33 stores the index data $IDX_{uni}$ in the database 37 in place of the analysis data $ALY_D_{uni}$.

Meanwhile, upon receiving the P analysis results $ALY_RLS_1$ to $ALY_RLS_P$ and the judgement results (judgement results shown in Fig. 187) from the receiving unit 32, the control unit 33 detects the identification information $ID_P$, the calculation data $CAL_p$, and the curve $CUR_p$ from the analysis result $ALY_RLS_P$ (where p is any number from 1 to P), and detects the analysis data $ALY_D_p$ having the same identification information as the detected identification information $ID_p$ from the database 37.

The control unit 33 then adds the calculation data $CAL_p$ and the curve $CUR_p$ to the detected analysis data $ALY_D_p$ to create index data $IDX_p$, and then updates the analysis data $ALY_D_p$ to the index data $IDX_p$ for all the P pieces of analysis data $ALY_D_1$ to $ALY_D_P$.

As a result, the control unit 33 updates the P pieces of analysis data $ALY_D_1$ to $ALY_D_P$ to the P pieces of index data $IDX_1$ to $IDX_P$, respectively.

After that, the control unit 33 detects P curves $CUR_1$ to $CUR_P$ from the P pieces of index data $IDX_1$ to $IDX_P$, respectively, and outputs the detected P curves $CUR_1$ to $CUR_P$ and the judgement results (the judgement results shown in Fig. 187) to the display unit 35.

The control unit 33 then associates the judgement results (the judgement results shown in Fig. 187) with the P pieces of index data $IDX_1$ to $IDX_P$, and stores the P pieces of index data $IDX_1$ to $IDX_P$ and the judgement results (the judgement results shown in Fig. 187) in the database 37, in place of the P pieces of analysis data $ALY_D_1$ to $ALY_D_P$.

Furthermore, upon receiving, from the accepting unit 36, a request $RQT_{uni}$ to display the name $ALY_Na_{uni}$ of the analyte (or the kind $ALY_Kd_{uni}$ of the analyte), a curve $CUR_{uni}$ associated with the name $ALY_Na_{uni}$ (or the kind $ALY_Kd_{uni}$) from the user of the terminal device 3 (for example, a waiter or waitress at a wine bar, Japanese restaurant, or Japanese Western-style restaurant, or a doctor or nurse at a hospital), the control unit 33 detects the name $ALY_Na_{uni}$ (or kind $ALY_Kd_{uni}$) from the received request $RQT_{uni}$ and the curve $CUR_{uni}$ associated with the name $ALY_Na_{uni}$ (or kind $ALY_Kd_{uni}$) from the index data $IDX_{uni}$ stored in the database 37.

The control unit 33 then outputs the name $ALY_Na_{uni}$ (or kind $ALY_Kd_{uni}$) and the curve $CUR_{uni}$ to the display unit 35.

Furthermore, upon receiving a request $RQT_q$ to display q names $ALY_Na_1$ to $ALY_Na_q$ out of P names $ALY_Na_1$ to $ALY_Na_P$ of P analytes (or q kinds $ALY_Kd_1$ to $ALY_Kd_q$ out of P kinds $ALY_Kd_1$ to $ALY_Kd_P$ of P analytes) and q curves $CUR_1$ to $CUR_q$ associated with the q names $ALY_Na_1$ to $ALY_Na_q$ (or q kinds $ALY_Kd_1$ to $ALY_Kd_q$) from the user of the terminal device 3 (such as the staff of a wine bar, Japanese restaurant, or Japanese Western style restaurant or a doctor or nurse at a hospital), the control unit 33 detects the q names $ALY_Na_1$ to $ALY_Na_q$ (or q kinds $ALY_Kd_1$ to $ALY_Kd_q$) from the received request $RQT_q$ and detect the q curves $CUR_1$ to $CUR_q$ associated with the detected q names $ALY_Na_1$ to $ALY_Na_q$ (or q kinds $ALY_Kd_1$ to $ALY_Kd_q$) from q pieces of index data $IDX_1$ to $IDX_q$ stored in the database 37.

The control unit 33 outputs the q names $ALY_Na_1$ to $ALY_Na_q$ (or q kinds $ALY_Kd_1$ to $ALY_Kd_q$) and the q curves $CUR_1$ to $CUR_q$ to the display unit 35.

If $q \geq 2$, the control unit 33 outputs the q names $ALY_Na_1$ to $ALY_Na_q$ (or the q kinds $ALY_Kd_1$ to $ALY_Kd_q$), the q curves $CUR_1$ to $CUR_q$, and the judgement results (judgement results shown in Fig. 187) to the display unit 35.

Upon receiving the analysis data $ALY_D_{uni}$ from the control unit 33, the transmission unit 34 transmits the analysis data $ALY_D_{uni}$ to the analysis device 2B via the antenna 31 and over the network 20.

Upon receiving the P pieces of analysis data $ALY_D_1$ to $ALY_D_P$ from the control unit 33, the transmission unit 34 transmits the P pieces of analysis data $ALY_D_1$ to $ALY_D_P$ to the analysis device 2B via the antenna 31 and over the network 20.

Upon receiving the curve $CUR_{uni}$ from the control unit 33, the display unit 35 displays the received curve $CUR_{uni}$.

Upon receiving the P curves $CUR_1$ to $CUR_P$ and the judgement results (judgement results shown in Fig. 187) from the control unit 33, the display unit 35 displays the received P curves $CUR_1$ to $CUR_P$ and the judgement results (judgement results shown in Fig. 187).

The accepting unit 36 accepts a request $RQT_{uni}$ from the user of the terminal device 3 (for example, a waiter or waitress at a wine bar, Japanese restaurant, or Japanese Western-style restaurant, or a doctor or nurse at a hospital), and outputs the accepted request $RQT_{uni}$ to the control unit 33.

The accepting unit 36 also receives a request $RQT_q$ from the user of the terminal device 3 (for example, a waiter or waitress at a wine bar, Japanese restaurant, or Japanese Western-style restaurant, or a doctor or nurse at a hospital) and outputs the received request $RQT_q$ to the control unit 33.

Upon receiving the name $ALY_Na_{uni}$ (or kind $ALY_Kd_{uni}$) and the curve $CUR_{uni}$ from the control unit 33, the display unit 35 displays the received name $ALY_Na_{uni}$ (or type $ALY_Kd_{uni}$) and the curve $CUR_{uni}$.

Upon receiving the q names $ALY_Na_1$ to $ALY_Na_q$ (or the q kinds $ALY_Kd_1$ to $ALY_Kd_q$), and the q curves $CUR_1$ to $CUR_q$ from the control unit 33, the display unit 35 displays the q names $ALY_Na_1$ to $ALY_Na_q$ (or the q kinds $ALY_Kd_1$ to $ALY_Kd_q$) and the q curves $CUR_1$ to $CUR_q$.

If $q \geq 2$, the display unit 35 receives the q names $ALY_Na_1$ to $ALY_Na_q$ (or the q kinds $ALY_Kd_1$ to $ALY_Kd_q$), the q curves $CUR_1$ to $CUR_q$, and the judgement results (judgement results shown in Fig. 187) from the control unit 33, and displays the received q names $ALY_Na_1$ to $ALY_Na_q$ (or the q kinds $ALY_Kd_1$ to $ALY_Kd_q$), the q curves $CUR_1$ to $CUR_q$, and the judgement results (the judgement results shown in Fig. 187).

Figs. 194 and 195 are first and second flowcharts for illustrating the operation of the analysis system 10A shown in Fig. 191.

The flowcharts shown in Figs. 194 and 195 are the same as the flowchart shown in Fig. 180, except that steps S5 to S16 of the flowcharts shown in Fig. 180 are replaced with steps S21 to S34.

With reference to Fig. 194, when the operation of the analysis system 10A starts, the sensor device 1 sequentially executes steps S1 to S4.

Then, if it is judged that the measurement is to end in step S4, the transmission unit 123 of the sensor device 1 transmits m pieces of measurement data MRS_1 to MRS_m to the terminal device 3 via wireless or wired communication (step S21).

With reference to Fig. 195, after step S21 in Fig. 194, the receiving unit 32 of the terminal device 3 receives the m pieces of measurement data MRS_1 to MRS_m from the sensor device 1 via wireless or wired communication (step S22).

When receiving the m pieces of measurement data MRS_1 to MRS_m from the sensor device 1 via wireless communication, the receiving unit 32 receives the m pieces of measurement data MRS_1 to MRS_m from the sensor device 1 via the antenna 31.

Meanwhile, when receiving the m pieces of measurement data MRS_1 to MRS_m from the sensor device 1 via wired communication, the receiving unit 32 receives the m pieces of measurement data MRS_1 to MRS_m from sensor device 1 via a wired cable.

Upon receiving the m pieces of measurement data MRS_1 to MRS_m, the receiving unit 32 outputs the received m pieces of measurement data MRS_1 to MRS_m to the control unit 33.

The control unit 33 receives the m pieces of measurement data MRS_1 to MRS_m from the receiving unit 32. The control unit 33 then creates m pieces of analysis data $ALY_D_1$ to $ALY_D_m$ based on the m pieces of measurement data MRS_1 to MRS_m, respectively (step S23).

The control unit 33 then stores the m pieces of analysis data $ALY_D_1$ to $ALY_D_m$ in the database 37 and outputs the m pieces of analysis data $ALY_D_1$ to $ALY_D_m$ to the transmission unit 34.

Upon receiving the m pieces of analysis data $ALY_D_1$ to $ALY_D_m$ from the control unit 33, the transmission unit 34 transmits the m pieces of analysis data $ALY_D_1$ to $ALY_D_m$ to the analysis device 2B via the antenna 31 and over the network 20 (step S24).

The analysis device 2B receives the m pieces of analysis data $ALY_D_1$ to $ALY_D_m$ from the terminal device 3 over the network 20 (step S25).

The analysis device 2B then judges whether the multiple pieces of analysis data have been received (step S26).

Here in step S26, upon judging that multiple pieces of analysis data have not been received, the analysis device 2B judges that one piece of analysis data $ALY_D_{uni}$ has been received, and upon judging that multiple pieces of analysis data have been received, the analysis device 2B judges that the P pieces of analysis data $ALY_D_1$ to $ALY_D_P$ have been received.

If it is judged in step S26 that multiple pieces of analysis data have not been received, the analysis device 2B creates, as an index curve, a curve $CUR_{uni}$ that shows the class dependence of the integral values based on a single piece of analysis data $ALY_D_{uni}$ (step S27).

Then, the analysis device 2B creates an analysis result

$ALY_RLS_{uni}$=[$ID_{uni}$/$CAL_{uni}$/$CUR_{uni}$], in which the calculation data $CAL_{uni}$ and the curve $CUR_{uni}$ are associated with the identification information $ID_{uni}$ (step S28).

Meanwhile, if it is judged in step S26 that multiple pieces of analysis data have been received, the analysis device 2B creates P curves $CUR_1$ to $CUR_P$, which indicate the dependence of the integral values on the class, based on P pieces of analysis data $ALY_D_1$ to $ALY_D_P$, respectively, as P index curves for P analytes (step S29).

The analysis device 2B then creates P pieces of analysis results $ALY_RLS_1$=[$ID_1$/$CAL_1$/$CUR_1$] to $ALY_RLS_P$=[$ID_P$/$CAL_P$/$CUR_P$], in which P pieces of calculation data $CAL_1$ to $CAL_P$ and P curves $CUR_1$ to $CUR_P$ are associated with P pieces of identification information $ID_1$ to $ID_P$, respectively (step S30).

Then, the analysis device 2B creates judgement results (the judgement results shown in Fig. 187) indicating whether the P curves $CUR_1$ to $CUR_P$ differ (step S31).

Then, the analysis device 2B transmits the analysis result $ALY_RLS_{uni}$ or [the P analysis results $ALY_RLS_1$ to $ALY_RLS_P$ and the judgement results shown in Fig. 187)] to the terminal device 3 over the network 20 (step S32).

The terminal device 3 receives the analysis results $ALY_RLS_{uni}$ or [the P analysis results $ALY_RLS_1$ to $ALY_RLS_P$ and the judgement results (judgement results shown in Fig. 187)] from the analysis device 2B over the network 20 (step S33).

Then, the terminal device 3 updates the analysis data $ALY_D_{uni}$ to index data $IDX_{uni}$ based on the analysis result $ALY_RLS_{uni}$ and displays the curve $CUR_{uni}$, or updates the P pieces of analysis data $ALY_D_1$ to $ALY_D_P$ based on the [P analysis results $ALY_RLS_1$ to $ALY_RLS_P$ and the judgement results (judgement results shown in Fig. 187)] to P pieces of index data $IDX_1$ to $IDX_P$, and displays [P curves $CUR_1$ to $CUR_P$ and the judgement results (judgement results shown in Fig. 187)] (step S34).

This ends the operation of the analysis system 10A.

According to the flowcharts shown in Figs. 194 and 195, upon judging in step S26 that multiple measurement pieces of data have not been received, the analysis device 2B creates a single curve $CUR_{uni}$ as an index curve (see step S27), and upon judging in step S26 that multiple pieces of measurement data have been received, it creates P curves $CUR_1$ to $CUR_P$, and judgement results (the judgement results shown in Fig. 187) indicating whether the P curves $CUR_1$ to $CUR_P$ differ (see steps S29 and S31).

Therefore, the analysis device 2B or the analysis system 10A can create the curve $CUR_{uni}$ or the P curves $CUR_1$ to $CUR_P$ as an index curve(s), which serves as an index for identifying an analyte.

According to the flowchart shown in Fig. 195, the terminal device 3 receives the analysis result $ALY_RLS_{uni}$ or P analysis results $ALY_RLS_1$ to $ALY_RLS_P$ from the analysis device 2B over the network 20 (see step S33). The analysis result $ALY_RLS_{uni}$ includes the curve $CUR_{uni}$, and the P analysis results $ALY_RLS_1$ to $ALY_RLS_P$ include the P curves $CUR_1$ to $CUR_P$, respectively.

Therefore, the terminal device 3 uses the curve $CUR_{uni}$ or the P curves $CUR_1$ to $CUR_P$ as an index curve(s), which serves as an index for identifying an analyte.

In the flowchart shown in Fig. 195, the detailed operation of step S23 is performed by the flowchart shown in Fig. 182.

In this case, the terms the "receiving unit 21" and the "control unit 22" in the description of the flowchart shown in Fig. 182 should be read as the "receiving unit 32" and "control unit 33," respectively.

In the flowchart shown in Fig. 195, when the transition is made from step S28 to step S32, in step S32, the analysis device 2B transmits the analysis result $ALY_RLS_{uni}$ to the terminal device 3 over the network 20, and in step S33, the terminal device 3 receives the analysis result $ALY_RLS_{uni}$ over the network 20, and in step S34, updates the analysis data $ALY_D_{uni}$ to the index data $IDX_{uni}$ based on the received analysis result $ALY_RLS_{uni}$ to display the curve $CUR_{uni}$.

Meanwhile, in the flowchart shown in Fig. 195, when the transition is made from step S31 to step S32, in step S32, the analysis device 2B transmits [P analysis results $ALY_RLS_1$ to $ALY_RLS_P$ and judgement results (judgement results shown in Fig. 187)] to the terminal device 3 over the network 20, in step S33, the terminal device 3 receives the [P analysis results $ALY_RLS_1$ to $ALY_RLS_P$ and judgement results (judgement results shown in Fig. 187)] over the network 20, and in step S34, the terminal device 3 updates the P pieces of analysis data $ALY_D_1$ to $ALY_D_P$ based on the received [the P analysis results $ALY_RLS_1$ to $ALY_RLS_P$ and judgement results (judgement results shown in Fig. 187)] to the P pieces of index data $IDX_1$ to $IDX_P$, respectively, and displays the [P curves $CUR_1$ to $CUR_P$ and the judgement results (judgement results shown in Fig. 187)].

Fig. 196 is a flowchart for illustrating the detailed operation of step S24 in Fig. 195.

With reference to Fig. 196, after step S23 in Fig. 195, the control unit 33 of the terminal device 3 stores m pieces of analysis data $ALY_D_1$=[$t_1ID_1ALY_Na_1$/$ALY_Kd_1$/$(I\text{-}V)_1$] to ALY_Dm=[$t_m$/$ID_m$/$ALY_Na_m$/$ALY_Kd_m$/$(I\text{-}V)_m$] in the database 37 (step S241) and outputs the m pieces of analysis data $ALY_D_1$=[$t_1ID_1ALY_Na_1$/$ALY_Kd_1$/$(I\text{-}V)_1$] to $ALY_D_m$=[$t_m$/$ID_m$/$ALY_Na_m$/$ALY_Kd_m$/$(I\text{-}V)_m$] to the transmission unit 34 (step S242).

The transmission unit 34 receives the m pieces of analysis data $ALY_D_1$=[$t_1ID_1ALY_Na_1$/$ALY_Kd_1$/$(I\text{-}V)_1$] to $ALY_D_m$=[$t_m$/$ID_m$/$ALY_Na_m$/$ALY_Kd_m$/$(I\text{-}V)_m$] from the control unit 33.

Then, the transmission unit 34 transmits the m pieces of analysis data $ALY_D_1$=[$t_1ID_1ALY_Na_1$/$ALY_Kd_1$/$(I\text{-}V)_1$]

to $ALY_D_m$=[$t_m$/$ID_m$/$ALY_Na_m$/$ALY_Kd_m$/$(I\text{-}V)_m$] to the analysis device 2B via the antenna 31 and over the network 20 (step S243).

After step S243, the operation of the analysis system 10A proceeds to step S25 in Fig. 195.

Fig. 197 is a flowchart for illustrating the detailed operation of step S34 in Fig. 195.

With reference to Fig. 197, after step S33 in Fig. 195, the control unit 33 of the terminal device 3 judges whether the analysis result $ALY_RLS_{uni}$ has been received (step S341).

In this case, upon receiving the analysis result $ALY_RLS_{uni}$ from the receiving unit 32, the control unit 33 judges that it has received the analysis result $ALY_RLS_{uni}$ and when it has not received the analysis result $ALY_RLS_{uni}$ from the receiving unit 32, the control unit 33 judges that it has received the P analysis results $ALY_RLS_1$ to $ALY_RLS_P$ and judgement results (the judgement results shown in Fig. 187).

If it is judged in step S341 that the analysis result $ALY_RLS_{uni}$ has been received, the control unit 33 detects the identification information $ID_{uni}$, the calculation data $CAL_{uni}$, and the curve $CUR_{uni}$ from the analysis result $ALY_RLS_{uni}$ (step S342).

The control unit 33 then detects the analysis data $ALY_D_{uni}$ that has the same identification information as the detected identification information $ID_{uni}$ from the database 37 (step S343).

After that, the control unit 33 adds the calculation data $CAL_{uni}$ and the curve $CUR_{uni}$ to the analysis data $ALY_D_{uni}$, and updates the analysis data $ALY_D_{uni}$ to the index data $IDX_{uni}$ (step S344).

The control unit 33 then outputs the curve $CUR_{uni}$ of index data $IDX_{uni}$ to the display unit 35, and the display unit 35 displays the curve $CUR_{uni}$ received from the control unit 33 (step S345).

The control unit 33 then stores the index data $IDX_{uni}$ in the database 37 in place of the analysis data $ALY_D_{uni}$ (step S346).

Meanwhile, if it is judged in step S341 that the analysis result $ALY_RLS_{uni}$ has not been received (i.e., if it is judged that the [P analysis results $ALY_RLS_1$ to $ALY_RLS_P$ and the judgement results (the judgement results shown in Fig. 187)] have been received), the control unit 33 sets p = 1 (step S347).

The control unit 33 then detects the identification information $ID_p$, the calculation data $CAL_p$, and the curve $CUR_p$ from the analysis result $ALY_RLS_p$ (step S348).

The control unit 33 then detects, from the database 37, the analysis data $ALY_D_p$ that has the same identification information as the detected identification information $ID_p$ (step S349).

The control unit 33 then adds the calculation data $CAL_p$ and the curve $CUR_p$ to the analysis data $ALY_D_p$, and updates the analysis data $ALY_D_p$ to the index data $IDX_p$ (step S350).

The control unit 33 then determines whether p = P (step S351).

If it is judged in step S351 that p is not equal to P, the control unit 33 sets p=p+1 (step S352). Thereafter, the operation of the terminal device 3 proceeds to step S348, and steps S348 to S352 are repeatedly executed until it is judged in step S351 that p is equal to P (i.e., p=P).

Then, if it is judged in step S351 that p is equal to P (i.e., p=P), the control unit 33 outputs the P curves $CUR_1$ to $CUR_P$ in the P index data $IDX_1$ to $IDX_P$ and the judgement results (the judgement results shown in Fig. 187) to the display unit 35, and the display unit 35 displays the P curves $CUR_1$ to $CUR_P$ and the judgement results (the judgement results shown in Fig. 187) received from the control unit 33 (step S353).

After that, the control unit 33 stores the P index data $IDX_1$ to $IDX_P$ in the database 37 in place of the P pieces of analysis data $ALY_D_1$ to $ALY_D_P$, respectively and stores the judgement results (the judgement results shown in Fig. 187) in association with the P pieces of index data $IDX_1$ to $IDX_P$ in the database 37 (step S354).

After step S346 or step S354, the operation of the analysis system 10A proceeds to "End" in Fig. 195.

The detailed operation of step S27 in Fig. 48 is performed according to the flowchart shown in Fig. 35.

The detailed operation of step S29 in Fig. 195 is performed according to the flowchart shown in Fig. 183, based on the analysis data $ALY_D_p$ (where p is an argument that indicates each of the P analysis data $ALY_D_1$ to $ALY_D_P$).

Furthermore, the detailed operation of step S31 in Fig. 195 is performed according to the flowchart shown in Fig. 184 (including the flowchart shown in Fig. 185 or the flowchart shown in Fig. 186).

In the flowchart shown in Fig. 195, the receiving unit 32 of the terminal device 3 receives the m pieces of measurement data MRS_1 to MRS_m of the cyclic voltammogram CVG from the sensor device 1 via wired or wireless communication in step S22, and the transmission unit 34 transmits the m pieces of analysis data $ALY_D_1$ to $ALY_D_m$, created based on the m pieces of measurement data MRS_1 to MRS_m, respectively, to the analysis device 2B via the antenna 31 and over the network 20 in step S24, and in step S33, the receiving unit 32 receives the analysis result $ALY_RLS_{uni}$=[$ID_{uni}$/$CAL_{uni}$/$CUR_{uni}$] (or P pieces of analysis results $ALY_RLS_1$=[$ID_1$/$CAL_1$/$CUR_1$] to $ALY_RLS_P$=[$ID_P$/$CAL_P$/$CUR_P$]) over the network 20 and via the antenna 31, and the display unit 35 displays the curve $CUR_{uni}$ (or the P curves $CUR_1$ to $CUR_P$) in step S34.

The m pieces of analysis data $ALY_D_1$ to $ALY_D_m$ include m current-potential characteristics $(I\text{-}V)_1$ to $(I\text{-}V)_m$ included in the m pieces of measurement data MRS_1 to MRS_m, respectively, and the calculation unit 23 and the creation unit 25B of the analysis device 2B create the curve $CUR_{uni}$ according to the flowchart shown in Fig. 181 in step S27 of Fig.

195, and create P curves $CUR_1$ to $CUR_P$ according to the flowchart shown in Fig. 183 in step S29 in Fig. 195.

In this case, the curves $CUR_{uni}$, $CUR_1$ to $CUR_P$ are curves created based on the current-potential characteristics $(I-V)_{uni}$, $(I-V)_1$ to $(I-V)_P$ included in the measurement data MRS_uni, MRS_1 to MRS_P and are curves that indicate the dependence of multiple integral values in the multiple prescribed potential ranges of the cyclic voltammogram CVG on the prescribed potential ranges.

Therefore, the terminal device 3 includes

a receiving unit 31 that receives, via wired or wireless communication from the sensor device 1, measurement data of a cyclic voltammogram CVG of a liquid analyte measured using a cyclic voltammetry method and also receives, over the network 20 from the analysis device 2B, a curve created based on the measurement data, which indicates the dependence of multiple integral values in multiple prescribed potential ranges of the cyclic voltammogram CVG on the prescribed potential ranges, as an [index curve which serves as an index for identifying the analyte],

a transmission unit 34 that transmits, to the analysis device 2B over the network 20, analysis data including a current-potential characteristic of the measurement data received by the receiving unit 31 and

a display unit 35 that displays the curve $CUR_{uni}$(or the p curves $CUR_1$ to $CUR_p$) as an index curve received by the receiving unit 31.

The conceptual diagram illustrating the update from the analysis data $ALY_D_{uni}$ to the index data $IDX_{uni}$ in step S344 in Fig. 197 is the same as the conceptual diagram shown in Fig. 188, and the conceptual diagram illustrating the update from the P pieces of analysis data $ALY_D_1$ to $ALY_D_P$ to the P pieces of index data $IDX_1$ to $IDX_P$ when steps S348 to S350 in Fig. 197 are executed P times is the same as the conceptual diagram shown in Fig. 189.

According to the embodiment of the invention, the operation of the terminal device 3 may be carried out by software. In this case, the terminal device 3 includes a CPU, a ROM, and a RAM.

The ROM stores a program Prog_C including steps S22 to S24, S33, and S34 shown in Fig. 195 (including the flowchart shown in Fig. 196 and the flowchart shown in Fig. 197).

The CPU reads out the program Prog_C from the ROM, executes the program Prog_C to create m pieces of analysis data $ALY_D_1$ to $ALY_D_m$, transmits the m pieces of analysis data $ALY_D_1$ to $ALY_D_m$ to the analysis device 2B over the network 20, receives, over a network, an analysis result $ALY_RLS_{uni}$ or [P analysis results $ALY_RLS_1$ to $ALY_RLS_p$ and judgement results (judgement results shown in Fig. 187)], and displays the curve $CUR_{uni}$ included in the received analysis result $ALY_RLS_{uni}$ or the [P curves $CUR_1$ to $CUR_p$ and the judgement results (judgement results shown in Fig. 187)] included in the [P analysis results $ALY_RLS_1$ to $ALY_RLS_p$ and the judgement results (judgement results shown in Fig. 187)].

In this case, the RAM temporality stores the m pieces of analysis data $ALY_D_1$ to $ALY_D_m$, the analysis data $ALY_RLS_{uni}$, and the [P analysis results $ALY_RLS_1$ to $ALY_RLS_p$ and the judgement results (judgement results shown in Fig. 187)].

Therefore, the program Prog_C causes the computer (CPU) to create the m pieces of analysis data $ALY_D_1$ to $ALY_D_m$, update the analysis data $ALY_D_{uni}$ to the index data $IDX_{uni}$, or update the P pieces of analysis data $ALY_D_1$ to $ALY_D_P$ to the P index data $IDX_1$ to $IDX_P$, and display the curve $CUR_{uni}$ or the [P curves $CUR_1$ to $CUR_P$ and the judgement results (the judgement results shown in Fig. 187)].

According to the embodiment of the invention, the operation of the analysis device 2B may be performed by software. In this case, the analysis device 2B includes a CPU, a ROM, and a RAM.

The ROM stores a program Prog_D, which includes steps S25 to S32 shown in Fig. 195 (including the flowchart shown in Fig. 181, the flowchart shown in Fig. 183, and the flowchart shown in Fig. 184 (including the flowchart shown in Fig. 185)) or a program Prog_E, which includes steps S25 to S32 shown in Fig. 195 (including the flowchart shown in Fig. 181, the flowchart shown in Fig. 183, and the flowchart shown in Fig. 184 (including the flowchart shown in Fig. 186)).

The CPU reads out the program Prog_D or program Prog_E from the ROM, executes the read program Prog_D or program Prog_E, and creates a curve (curve $CUR_{uni}$ or curves $CUR_1$ to $CUR_P$) representing the relation between integral values and classes (prescribed potential ranges) as an index curve, and transmits the analysis result $ALY_RLS_{uni}$ or the [P analysis results $ALY_RLS_1$ to $ALY_RLS_P$ and judgement results (judgement results shown in Fig. 187)] to the terminal device 3 over the network 20.

In this case, the RAM temporarily stores the standard deviation of the differences $\sigma_{DF_ITGi,\ ITGj}$ or the standard deviation of the differences $\sigma_{DF_DFFi,\ DFFj}$.

Therefore, the program Prog_D or program Prog_E is a program for causing the computer (CPU) to execute the creation of the curve $CUR_{uni}$ as an index curve or the creation of [P curves $CUR_1$ to $CUR_P$ as index curves and judgement results (judgement results shown in Fig. 187)].

Fig. 198 is another schematic diagram of the analysis device 2B shown in Fig. 191. The analysis device 2B shown in Fig. 191 may composed of the analysis device 2C shown in Fig. 198.

With reference to Fig. 198, the analysis device 2C is substantially identical to the analysis device 2B shown in Fig. 192 except that the receiving unit 21, the calculation unit 23, the judgement unit 24, the creation unit 25B, and the transmission unit 29 are replaced with the receiving circuit 21A, the calculation circuit 23A, the judgement circuit 24A, a creation circuit 25C, and a transmission circuit 29A, respectively.

The receiving circuit 21A, the calculation circuit 23A, the judgement circuit 24A, the creation circuit 25C, and the transmission circuit 29A each perform the same operations as the receiving unit 21, the calculation unit 23, the judgement unit 24, the creation unit 25B, and the transmission unit 29, respectively.

Fig. 199 is another schematic diagram of the terminal device 3 shown in Fig. 191. The terminal device 3 shown in Fig. 191 may composed of a terminal device 3A shown in Fig. 199.

With reference to Fig. 199, the terminal device 3A is substantially identical to the terminal device 3 shown in Fig. 193 except that the receiving unit 32, the control unit 33, the transmission unit 34, the display unit 35, and the accepting unit 36 of the terminal device 3 shown in Fig. 193 are replaced with a receiving circuit 32A, a control circuit 33A, a transmission circuit 34A, a display circuit 35A and an accepting circuit 36A, respectively.

The receiving circuit 32A, control circuit 33A, transmitting circuit 34A, display circuit 35A, and the accepting circuit 36A perform the same operations as the receiving unit 32, the control unit 33, the transmitting unit 34, the display unit 35, and the accepting unit 36, respectively.

In the above description, the analysis system 10A includes one terminal device 3 (or one terminal device 3A) and one sensor device 1, but according to the second embodiment, the analysis system 10A may include R (where R is an integer greater than or equal to 2) terminal devices $3_1$ to $3_R$ (multiple terminal devices) and R sensor devices $1_1$ to $1_R$ (multiple sensor devices).

In this case, the R terminal devices $3_1$ to $3_R$ are associated with the R sensor devices $1_1$ to $1_R$, respectively. Each of the R terminal devices 3 has the same configuration as the terminal 3 or 3A, the R sensor devices $1_1$ to $1_R$ each have the same configuration as the sensor device 1 described above. The R terminal devices $3_1$ to $3_R$ receive measurement data MRS_uni or P pieces of measured data MRS_1 to MRS_P via wireless or wired communication, create analysis data $ALY_D_{uni}$ or P pieces of analysis data $ALY_D_1$ to $ALY_D_p$ using the method described above based on the received measured data MRS_uni or P pieces of measured data MRS_1 to MRS_P, and transmits the created analysis data $ALY_D_{uni}$ or P pieces of analysis data $ALY_D_1$ to $ALY_D_P$ to the analysis device 2B or 2C over the network 20.

After that, the R terminal devices $3_1$ to $3_R$ each receive the analysis result $ALY_RLS_{uni}$ or [the P analysis results $ALY_RLS_1$ to $ALY_RLS_P$ and judgement results (judgement results shown in Fig. 187)] from the analysis device 2B or the analysis device 2C over the network 20.

Then, the R terminal devices $3_1$ to $3_R$ each update the analysis data $ALY_D_{uni}$ to the index data $IDX_{uni}$ based on the analysis results $ALY_RLS_{uni}$ to display the curve $CUR_{uni}$, or update the P pieces of analysis data $ALY_D_1$ to $ALY_D_P$ to P pieces of index data $IDX_1$ to $IDX_P$, respectively based on the P analysis results $ALY_RLS_1$ to $ALY_RLS_P$ and the judgement results (judgement results shown in Fig. 187)], and display the [P pieces of curves $CUR_1$ to $CUR_P$ and judgement results (judgement results shown in Fig. 187)].

The [terminal device $3_1$ and sensor device $1_1$], the [terminal device $3_2$ and sensor device $1_2$], ..., and [terminal device $3_R$ and sensor device $1_R$] may be provided in different stores (for example, a wine bar, a Japanese restaurant, and a Japanese Western-style restaurant, etc.), or in different hospitals, or in different departments of one hospital.

According to the second embodiment, the sensor device 1 and the terminal device 3 or the terminal device 3A may be provided in a first country, and the analysis device 2B or the analysis device 2C may be provided in a second country which is different from the first country.

When the analysis system 10A includes R terminal devices $3_1$ to $3_R$ and R sensor devices $1_1$ to $1_R$, R pairs of (terminal device $3_1$, sensor device $1_1$) to (terminal device $3_R$, sensor device $1_R$) may be provided in the same country or in different countries from each other. The analysis device 2B or the analysis device 2C may be provided in the same country as the R terminal devices $3_1$ to $3_R$ and the R sensor devices $1_1$ to $1_R$, or may be provided in a different country from the R terminal devices $3_1$ to $3_R$ and the R sensor devices $1_1$ to $1_R$.

The description of the other part of the second embodiment is the same as that of the first embodiment.

According to the first embodiment, when the analysis device 2 (or the analysis device 2A) receives m pieces of measurement data MRS_1 to MRS_m from the sensor device 1, and when the received m pieces of measurement data MRS_1 to MRS_m are one measurement data MRS_uni, creates a curve $CUR_{uni}$ that indicates the class dependence of integral values (the dependence of integral values on a predetermined potential range) as an [index curve that serves as an index for identifying the analyte] based on one piece of analysis data $ALY_D_{uni}$, and when m pieces of analysis data $ALY_D_1$ to $ALY_D_m$ are P pieces of analysis data $ALY_D_1$ to $ALY_D_P$, the analysis device creates P curves $CUR_1$ to $CUR_P$ that indicate the dependence of the integral values on class (the dependence of integral values on a prescribed potential range) based on the P pieces of analysis data $ALY_D_1$ to $ALY_D_P$ as [P index curves that serve as indexes for identifying P analytes], and judgement results (the judgement results shown in Fig. 187)to indicate whether the P curves $CUR_1$ to $CUR_P$ differ.

According to the second embodiment described above, when the analysis device 2B (or analysis device 2C) receives m pieces of analysis data $ALY_D_1$ to $ALY_D_m$ from the terminal device 3 (or terminal device 3A) over the network 20, and when the received m pieces of analysis data $ALY_D_1$ to $ALY_D_m$ are one piece of analysis data $ALY_D_{uni}$, the analysis device creates a curve $CUR_{uni}$ that indicates the dependence of integral values on class (the dependence of integral values on a prescribed potential range) as an [index curve that serves as an index for identifying an analyte] based on the one piece of analysis data $ALY_D_{uni}$, and when the m pieces of analysis data $ALY_D_1$ to $ALY_D_m$ are P pieces of analysis data $ALY_D_1$ to $ALY_D_P$, the analysis device creates, based on the P pieces of analysis data $ALY_D_1$ to $ALY_D_P$, P curves $CUR_1$ to $CUR_P$ that indicate the dependence of integral values on class (the dependence of integral values on a prescribed potential range) as [P index curves which serve as indexes for identifying P analytes], and also creates judgement results (judgement results shown in Fig. 187) indicating whether the P curves $CUR_1$ to $CUR_p$ differ.

According to the first and second embodiments, the P curves $CUR_1$ to $CUR_P$ are each created by the same method as the method used to create the single curve $CUR_{uni}$.

As a result, the analysis device 2 (or analysis device 2A) according to the first embodiment and the analysis device 2B (or analysis device 2C) according to the second embodiment are similar in that these devices both calculate the integral value $ITG_k$ of the cyclic voltammogram in a prescribed potential range $V_k$ of the current-potential characteristic $(I-V)_{uni}$ based on the current-potential characteristic $(I-V)_{uni}$ of a single piece of analysis data $ALY_D_{uni}$, and execute the calculation for all of n prescribed potential ranges $V_1$ to $V_n$ to calculate n integral values $ITG_1$ to $ITG_n$ in the n prescribed potential ranges $V_1$ to $V_n$, plot the calculated n integral values $ITG_1$ to $ITG_n$ for n classes Cls_1 to Cls_n (i.e, n prescribed potential ranges $V_1$ to $V_n$), and create a curve $CUR_{uni}$ which indicates the dependence of the n integral values $ITG_1$ to $ITG_n$ on class (i.e., prescribed potential range dependence) as an [index curve that serves as an index for identifying an analyte].

Therefore, the analysis device 2 (or analysis device 2A) according to the first embodiment and the analysis device 2B (or analysis device 2C) according to the second embodiment include a calculation unit 23 (or calculation circuit 23A) that calculates the integral value $ITG_k$ of the cyclic voltammogram in the prescribed potential range $V_k$ of the current-potential characteristic $(I-V)_{uni}$ based on the current-potential characteristic $(I-V)_{uni}$ and execute the calculation for all n prescribed potential ranges $V_1$ to $V_n$ to calculate the n integral values $ITG_1$ to $ITG_n$ for the n prescribed potential ranges $V_1$ to $V_n$, and

a creation unit 25 (creation circuit 25A, creation circuit 25C or creation unit 25B) that creates, as an [index curve which serves as an index for identifying an analyte], a curve $CUR_{uni}$ that indicates the dependence of integral values on a prescribed potential range based on the n integral values $ITG_1$ to $ITG_n$ in the n prescribed potential ranges $V_1$ to $V_n$ calculated by the calculation unit 23 (or calculation circuit 23A).

Therefore, according to an embodiment of the present invention, an analysis device is configured to create an index curve which serves as an index for identifying a liquid analyte based on a current-potential characteristic of a cyclic voltammogram of the analyte measured using a cyclic voltammetry method, and the analysis device may include:

a calculation unit configured to perform calculation processing to calculate an integral value for a prescribed potential range of the current-potential characteristic based on the current-potential characteristic and to execute the calculation for all the prescribed potential ranges, thereby calculating multiple integral values for the multiple prescribed potential ranges and

a creation unit configured to create, as the index curve which is a curve that serves as an indicator when identifying an object to be analyzed, a curve that represents the dependence of the integral values on the prescribed potential ranges based on the multiple integral values for the multiple prescribed potential ranges calculated by the calculation unit.

According to an embodiment of the invention, a program to be executed by a computer may cause the computer to create an index curve which serves as an index for identifying a liquid analyte based on a current-potential characteristic of a cyclic voltammogram of the liquid analyte measured using a cyclic voltammetry method, and the program may cause the computer to execute a first step in which a calculation unit calculates an integral value in a prescribed potential range of the current-potential characteristic based on the current-potential characteristic and executes the calculation for all the prescribed potential ranges to calculate a plurality of integral values for a plurality of prescribed potential ranges; and

a second step in which a creation unit creates, as the index curve which is a curve that serves as an indicator when identifying an object to be analyzed,
a curve that indicates the dependence of the integral values on the prescribed potential ranges, based on the plurality of integral values in the plurality of prescribed potential ranges calculated in the calculation processing in the first step.

The embodiments disclosed herein are to be considered illustrative in all respects and not restrictive. The scope of the invention is defined by the appended claims, not by the foregoing description of the embodiments, and it is intended that all modifications fall within the scope of claims and their equivalents.

[Industrial Applicability]

The invention is applicable to a sensor, an analysis device, a terminal device, an analysis system using them, and a program to be executed by a computer.

## Claims

1. A sensor used for measuring a cyclic voltammogram of a liquid analyte, detachably provided to a measurement device that measures the cyclic voltammogram, and configured to be discarded after each measurement of the cyclic voltammogram,
the sensor comprising:

    a substrate having a flat plate shape;
    a first wiring provided on one surface of the substrate in a first direction;
    a second wiring provided on one surface of the substrate in the first direction and a prescribed space apart from the first wiring in a second direction orthogonal to the first direction;
    a third wiring provided on one surface of the substrate in the first direction and a prescribed space apart from the second wiring in the second direction;
    a working electrode provided on one surface of the substrate, electrically connected to one end of the first wiring, and configured to exchange electrons with the analyte;
    a reference electrode provided on one surface of the substrate, electrically connected to one end of the second wiring to serve as a reference in determining the potential of the working electrode; and
    a counter electrode provided on one surface of the substrate, electrically connected to one end of the third wiring, and configured to return a current value equal to a current value generated at the working electrode to the system,
    wherein the first wiring, the second wiring, and the third wiring are electrically connected to the measurement device when the other end of the substrate in the first direction is inserted in a recess of the measurement device, the counter electrode is provided between the working electrode and the reference electrode in the second direction, and the working electrode has a circular or square planar shape.

2. An analysis device configured to create an index curve which serves as an index for identifying a liquid analyte, based on a current-potential characteristic of a cyclic voltammogram of the analyte measured using a cyclic voltammetry method,
the analysis device comprising:

    a calculation unit configured to perform calculation processing to calculate an integral value in a prescribed potential range of the current-potential characteristic based on the current-potential characteristic and to execute the calculation for all the prescribed potential ranges, thereby calculating multiple integral values in the multiple prescribed potential ranges; and
    a creation unit configured to create, as the index curve, a curve that indicates the dependence of the integral values on the prescribed potential ranges based on the multiple integral values in the multiple prescribed potential ranges calculated by the calculation unit.

3. The analysis device according to claim 2, wherein the calculation unit calculates the area of the cyclic voltammogram in one of the prescribed potential ranges in the calculation processing and executes the calculation for all the multiple prescribed potential ranges to calculate the multiple integral values.

4. The analysis device according to claim 3, wherein the calculation unit performs, in the calculation processing, subtraction processing to subtract a reduction wave current value from an oxidation wave current value of the cyclic voltammogram at one unit potential in one of the prescribed potential ranges, to calculate the intensity of the cyclic voltammogram at the one unit potential, and performs the processing for all unit potentials in the one prescribed potential range, to calculate the sum of the multiple calculated intensities as the area of the cyclic voltammogram in the one prescribed potential range.

5. The analysis device according to claim 4, wherein in the calculation processing, the calculation unit subtracts the reduction wave current value from the oxidation wave current value of the cyclic voltammogram at the one unit potential in the one prescribed potential range to calculate the intensity of the cyclic voltammogram at the one unit potential.

**6.** The analysis device according to claim 5, wherein in the calculation processing, the calculation unit calculates a negative value intensity as the intensity of the cyclic voltammogram at the one unit potential when the reduction wave current value at the one unit potential is greater than the oxidation wave current value.

**7.** The analysis device according to claim 2, further comprising a judgement unit configured to judge whether P (P is an integer equal to or greater than 2)of the multiple integral values differ from each other, when the calculation unit calculates the multiple integral values in the multiple prescribed potential ranges for each of P of the analytes in the calculation processing, and
the creation unit creates P of the curves based on the P of the multiple integral values when the judgement unit judges that the P of the multiple integral values differ from each other.

**8.** The analysis device according to claim 7, wherein when Z combinations of two of [the multiple integral values] are extracted from the P of [the multiple integral values] and the Z combinations of two of [the multiple integral values] are defined as Z combinations of two of [n integral values $ITG_{1_i}$ to $ITG_{n_i}$] and [n integral values $ITG_{1_j}$ to $ITG_{n_j}$], where Z is the number of combinations ${}_{p}C_{2}$ of two of [the multiple integral values] when two of the [multiple integral values] are extracted from the P of [the multiple integral values] and n represents the total number of the prescribed potential ranges, and $i \neq j$, the judgement unit judges that the P of [the multiple integral values] differ from each other upon judging that the two of [the n integral values $ITG_{1_i}$ to $ITG_{n_i}$] and [the n integral values $ITG_{1_j}$ to $ITG_{n-j}$] differ, for all combinations of two of [the n integral values $ITG_{1_i}$ to $ITG_{n_i}$] and [the n integral values $ITG_{1_j}$ to $ITG_{n_j}$] included in the Z combinations of two of [the n integral values $ITG_{1_i}$ to $ITG_{n_i}$] and [the n integral values $ITG_{1_j}$ to $ITG_{n_j}$].

**9.** The analysis device according to claim 8, wherein the [n integral values $ITG_{1_i}$ to $ITG_{n_i]}$ are associated with n classes $Cls_1$ to $Cls_n$, respectively, and the [n integral values $ITG_{1_j}$ to $ITG_{n_j}$] are associated with the n classes $Cls_1$ to $Cls_n$, respectively, and
the judgement unit calculates the difference $DF_k$ between the integral values $ITG_{k_i}$ and $ITG_{k_j}$ in one class $Cls_k$, where k is any number from 1 to n, based on the two of [n integral values $ITG_{1_i}$ to $ITG_{n_i]}$ and [n integral values $ITG_{1_j}$ to $ITG_{n_j}$], executes the calculation for all of the n classes $CLs_1$ to $Cls_n$ to calculate n differences $DF_1$ to $DF_n$, and judges that the two of [n integral values $ITG_{1_i}$ to $ITG_{n_i]}$ and [n integral values $ITG_{1_j}$ to $ITG_{n-j}$] differ from each other upon judging that the standard deviation of the n differences $DF_1$ to $DF_n$ is greater than a threshold value.

**10.** The analysis device according to claim 7, wherein the P analytes have mutually different P names,

when two analytes with different names among the P analytes are defined as first and second analytes, and two analytes included in the first analyte and of different kinds are defined as third and fourth analytes,
the judgement unit judges that the [multiple integral values] for the first analyte and the [multiple integral values] for the second analyte differ from each other when a first standard deviation as a standard deviation of the differences between the [multiple integral values] for the first analyte and the [multiple integral values] for the second analyte is greater than a first threshold value, and judges that the [multiple integral values] for the third analyte and the [multiple integral values] for the fourth analyte differ from each other when a second standard deviation as a standard deviation of the differences between the [multiple integral values] for the third analyte and the [multiple integral values] for the fourth analyte is greater than a second threshold value which is smaller than the first threshold value.

**11.** The analysis device according to claim 2, further comprising a display unit configured to display the curve created by the creation unit.

**12.** A terminal device comprising:

a receiving unit configured to receive measurement data of a cyclic voltammogram of a liquid analyte, measured using a cyclic voltammetry method, from a sensor device via wired or wireless communication and receive a curve created based on the measurement data to represent the dependence of multiple integral values on prescribed potential range in multiple potential ranges of the cyclic voltammogram, as [an index curve that serves as an index for identifying the analyte] from an analysis device over a network;
a transmission unit configured to transmit analysis data to the analysis device over a network, the analysis data including a current-potential characteristic in the measurement data received by the receiving unit; and

a display unit configured to display a curve as the index curve received by the receiving unit.

**13.** An analysis system comprising:

a sensor device comprising the sensor according to claim 1 and a measurement device configured to measure a cyclic voltammogram of a liquid analyte using the sensor; and
the analysis device according to any one of claims 2 to 11.

**14.** An analysis system comprising a sensor device comprising the sensor according to claim 1 and a measurement device configured to measure a cyclic voltammogram of a liquid analyte using the sensor;

the analysis device according to any one of claims 2 to 11; and
the terminal device according to claim 12.

**15.** A program to be executed by a computer, the program causing the computer to create an index curve which serves as an index for identifying a liquid analyte based on a current-potential characteristic of a cyclic voltammogram of the analyte measured using a cyclic voltammetry method, the program causing the computer to execute:

a first step in which a calculation unit calculates an integral value in a prescribed potential range of the current-potential characteristic based on the current-potential characteristic and execute a calculation processing which executes the calculation for all the prescribed potential ranges to calculate a plurality of the integral values in a plurality of the prescribed potential ranges; and
a second step in which a creation unit creates, as the index curve, a curve representing the dependence of the integral values on the prescribed potential ranges, based on the plurality of integral values in the plurality of prescribed potential ranges calculated in the calculation processing in the first step.

**16.** The program to be executed by a computer according to claim 15, wherein in the calculation processing in the first step, the calculation unit calculates the area of the cyclic voltammogram in one of the prescribed potential ranges and executes the calculation for all the plurality of prescribed potential ranges to calculate the plurality of integral values.

**17.** The program to be executed by a computer according to claim 16, wherein in the calculation processing in the first step, the calculation unit executes subtraction processing to subtract a reduction wave current value from an oxidation wave current value in the cyclic voltammogram at one unit potential in the one prescribed potential range to calculate the intensity of the cyclic voltammogram at the one unit potential, executes the calculation for all unit potentials in the one prescribed potential range to calculate multiple intensities in the one prescribed potential range, and calculates the sum of the calculated multiple intensities as the area of the cyclic voltammogram in the one prescribed potential range.

**18.** The program to be executed by a computer according to claim 17, wherein the calculation unit, in the calculation processing in the first step, subtracts the reduction wave current wave value from the oxidation wave current value of the cyclic voltammogram at the one unit potential in the one prescribed potential range to calculate the intensity of the cyclic voltammogram at the one unit potential.

**19.** The program to be executed by a computer according to claim 18, wherein the calculation unit, in the calculation processing in the first step, calculates the intensity of the cyclic voltammogram as a negative value at the one unit potential when the reduction wave current value at the one unit potential is greater than the oxidation wave current value.

**20.** The program to be executed by a computer according to claim 15, wherein when the calculation unit calculates the plurality of integral values in the plurality of prescribed potential ranges for each of P analytes, where P is an integer equal to or greater than 2, in the calculation processing in the first step, the program causes the computer to execute a third step in which the judgement unit judges whether the P of [the plurality of integral values] differ from each other, and
the creation unit creates P of the curves based on the P of [the plurality of integral values] in the second step when the judgement unit, in the third step, judges that the P of [the plurality of integral values] differ from each other.

**21.** The program to be executed by a computer according to claim 20, wherein when Z combinations of two of [the multiple integral values] are extracted from the P of [the multiple integral values] and the Z combinations of two of [the multiple integral values] are defined as Z combinations of two of [n integral values $ITG_{1_i}$ to $ITG_{n_i}$] and [n integral values $ITG_{1_j}$ to $ITG_{n_j}$], where Z is the number of combinations ${}_pC_2$ of two of [the multiple integral values] when two of the [multiple integral values] are extracted from the P of [the multiple integral values], n represents the total number of the prescribed potential ranges, and $i \neq j$, in the third step, the judgement unit judges that the P of [the multiple integral values] differ from each other upon judging that the two of [the n integral values $ITG_{1_i}$ to $ITG_{n_i}$] and [the n integral values $ITG_{1_j}$ to $ITG_{n_j}$] differ for all combinations of two of [the n integral values $ITG_{1_i}$ to $ITG_{n_i}$] and [the n integral values $ITG_{1_j}$ to $ITG_{n_j}$] included in the Z combinations of two of [the n integral values $ITG_{1_i}$ to $ITG_{n_i}$] and [the n integral values $ITG_{1_j}$ to $ITG_{n_j}$].

**22.** The program to be executed by a computer according to claim 21, wherein the [n integral values $ITG_{1_i}$ to $ITG_{n_i}$] are associated with n classes $Cls_1$ to $Cls_n$, respectively, the [n integral values $ITG_{1_j}$ to $ITG_{n_j}$] are associated with the n classes $Cls_1$ to $Cls_n$, respectively, and
in the third step, the judgement unit calculates the difference $DF_k$ between the integral values $ITG_{k_i}$ and $ITG_{k_j}$ in one class $Cls_k$, where k is any number from 1 to n, based on the two of [n integral values $ITG_{1_i}$ to $ITG_{n_i}$] and [n integral values $ITG_{1_j}$ to $ITG_{n_j}$], executes the calculation for all of the n classes $CLs_1$ to $Cls_n$ to calculate n differences $DF_1$ to $DF_n$, and judges that the two of [n integral values $ITG_{1_i}$ to $ITG_{n_i}$] and [n integral values $ITG_{1_j}$ to $ITG_{n_j}$] differ from each other upon judging that the standard deviation of the n differences $DF_1$ to $DF_n$ is greater than a threshold value.

**23.** The analysis device according to claim 20, wherein the P analytes have mutually different P names,

when two analytes among the P analytes with different names are defined as first and second analytes, and two analytes included in the first analyte and of different kinds are defined as third and fourth analytes,
in the third step, the judgement unit judges that the [multiple integral values] for the first analyte and the [multiple integral values] for the second analyte differ from each other when a first standard deviation as a standard deviation of the differences between the [multiple integral values] for the first analyte and the [multiple integral values] for the second analyte is greater than a first threshold value, and judges that the [multiple integral values] for the third analyte and the [multiple integral values] for the fourth analyte differ from each other when a second standard deviation as a standard deviation of the differences between the [multiple integral values] for the third analyte and the [multiple integral values] for the fourth analyte is greater than a second threshold value which is smaller than the first threshold value.

**24.** The program for causing a computer to execute creation according to claim 15, wherein the program further causes the computer to execute a fourth step in which the display unit displays the curve created by the creation unit.

Fig. 1

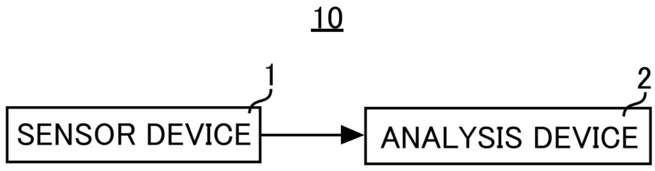


Fig. 2

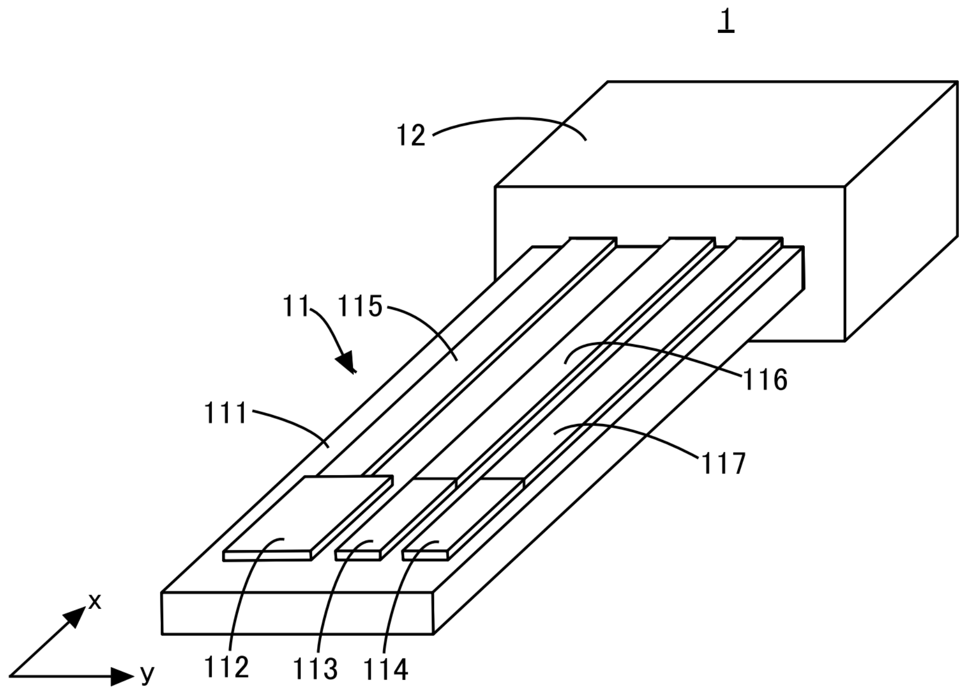


Fig. 3

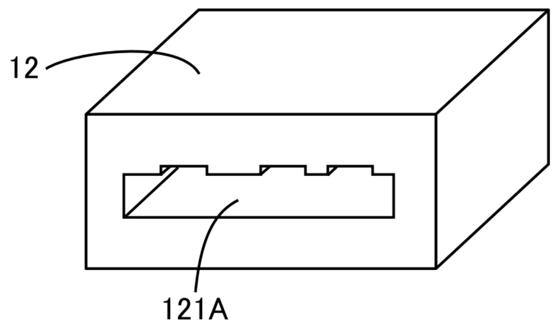

Fig. 4

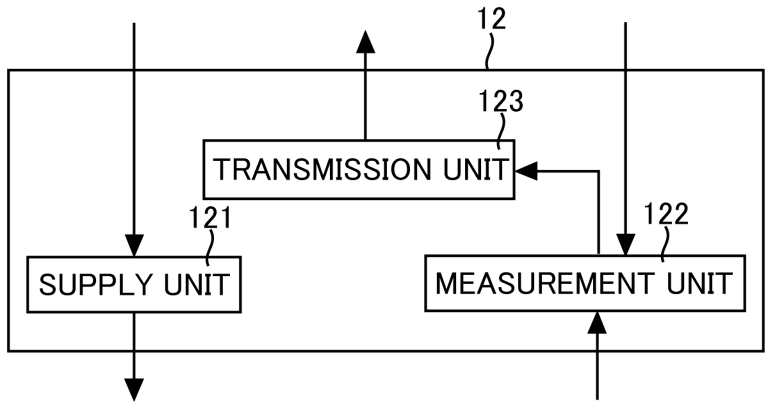
12
123
TRANSMISSION UNIT
121
122
SUPPLY UNIT
MEASUREMENT UNIT

Fig. 5

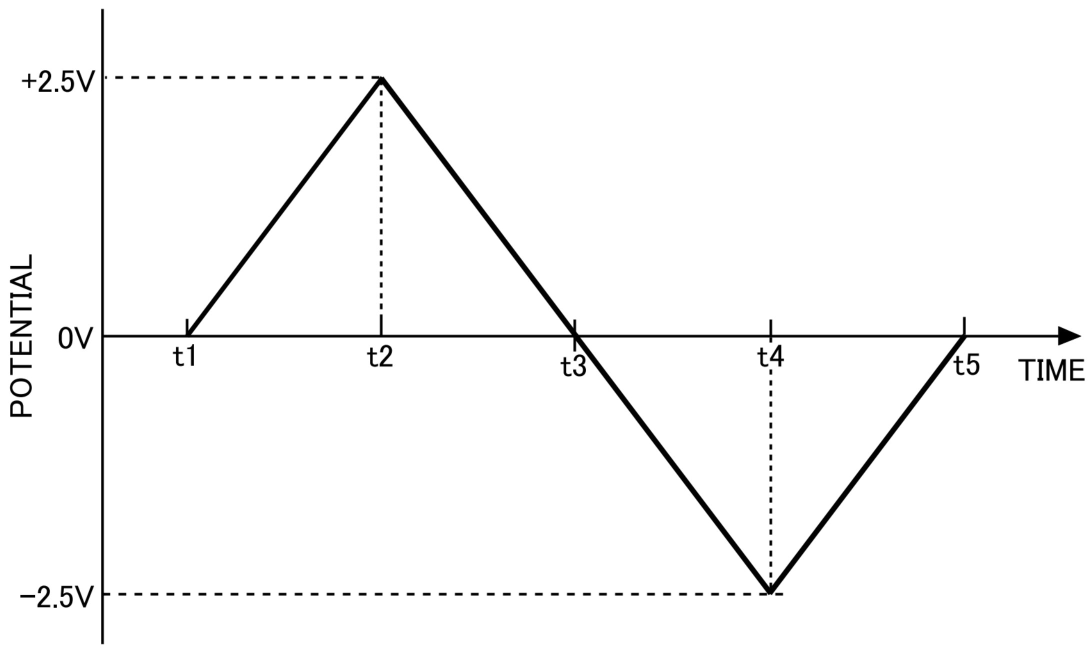
+2.5V
0V
−2.5V
POTENTIAL
t1
t2
t3
t4
t5
TIME

Fig. 6

MRS

| NAME OF ANALYTE | |
|---|---|
| KIND OF ANALYTE | |
| POTENTIAL V | CURRENT VALUE I |
| $V_1$ | $I_1$ |
| $V_2$ | $I_2$ |
| $V_3$ | $I_3$ |
| $V_4$ | $I_4$ |
| ⋮ | ⋮ |
| $V_{d-2}$ | $I_{d-2}$ |
| $V_{d-1}$ | $I_{d-1}$ |
| $V_d$ | $I_d$ |

Fig. 7

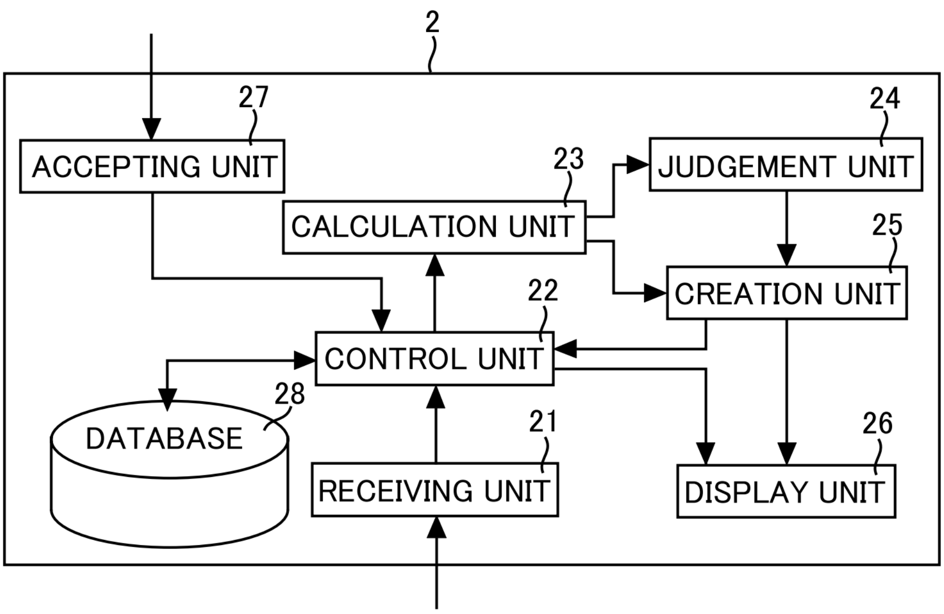

Fig. 8

$CAL_{uni}$

| NAME OF ANALYTE | |
|---|---|
| KIND OF ANALYTE | |
| CLASSES Cls | INTEGRAL VALUES ITG |
| $Cls_1$ | $ITG_1$ |
| $Cls_2$ | $ITG_2$ |
| $Cls_3$ | $ITG_3$ |
| $Cls_4$ | $ITG_4$ |
| ⋮ | ⋮ |
| $Cls_{n-2}$ | $ITG_{n-2}$ |
| $Cls_{n-1}$ | $ITG_{n-1}$ |
| $Cls_n$ | $ITG_n$ |

(a)

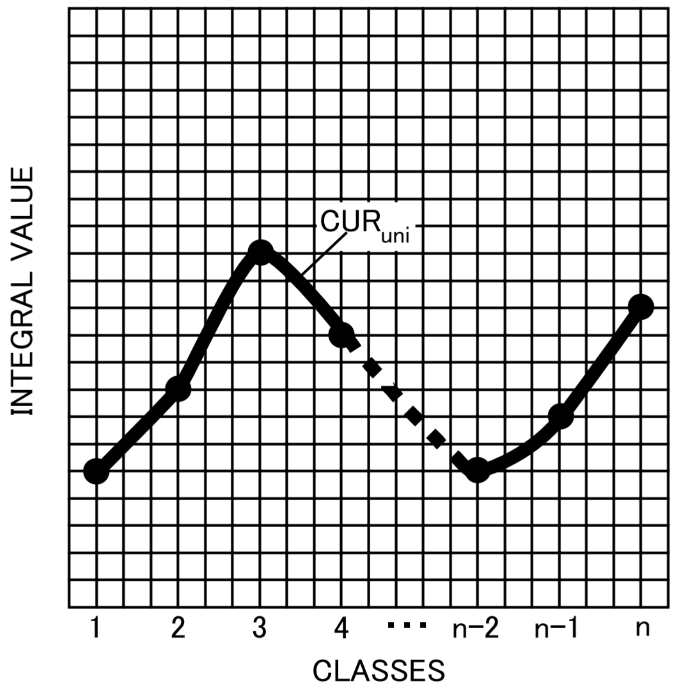


(b)

Fig. 9

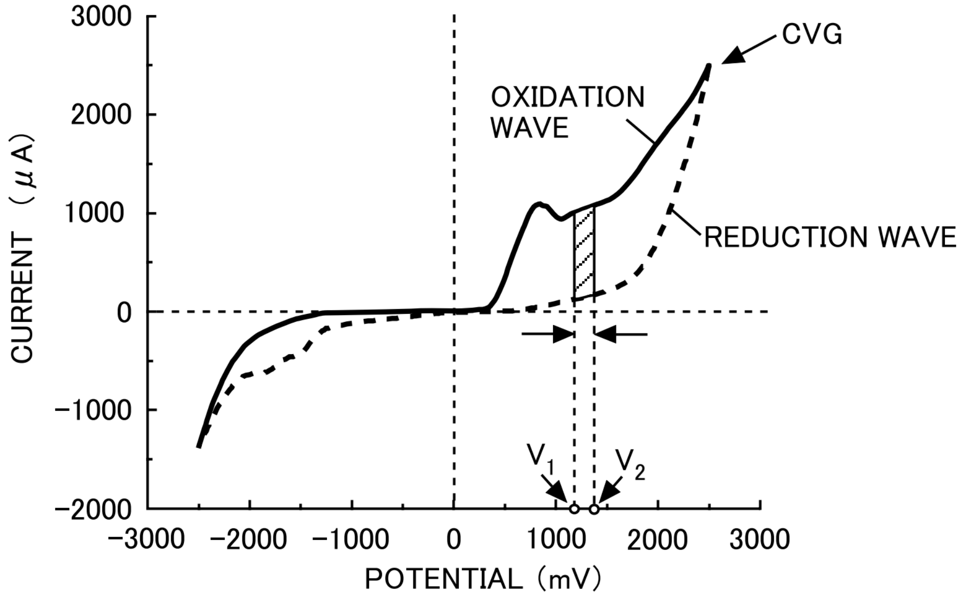
3000
2000
1000
0
−1000
−2000
CURRENT （μA）
−3000
−2000
−1000
0
1000
2000
3000
POTENTIAL（mV）
CVG
OXIDATION WAVE
REDUCTION WAVE
V1
V2

Fig. 10

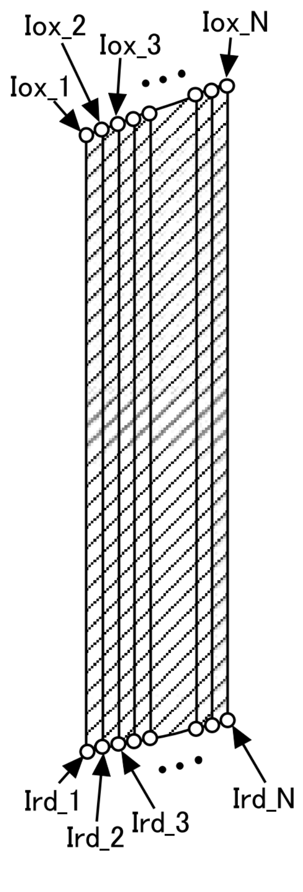
Iox_1
Iox_2
Iox_3
Iox_N
Ird_1
Ird_2
Ird_3
Ird_N

Fig. 11

$CAL_1$

| NAME OF ANALYTE | |
|---|---|
| KIND OF ANALYTE | |
| CLASSES Cls | INTEGRAL VALUES ITG |
| $Cls_1$(=0～100mV) | $ITG_1$ |
| $Cls_2$(=101～200mV) | $ITG_2$ |
| $Cls_3$(=201～300mV) | $ITG_3$ |
| ⋮ | ⋮ |
| $Cls_{24}$(=2301～2400mV) | $ITG_{24}$ |
| $Cls_{25}$(=2401～2500mV) | $ITG_{25}$ |
| $Cls_{26}$(=0～−100mV) | $ITG_{26}$ |
| $Cls_{27}$(=−101～−200mV) | $ITG_{27}$ |
| ⋮ | ⋮ |
| $Cls_{49}$(=−2301～−2400mV) | $ITG_{49}$ |
| $Cls_{50}$(=−2401～−2500mV) | $ITG_{50}$ |

Fig. 12

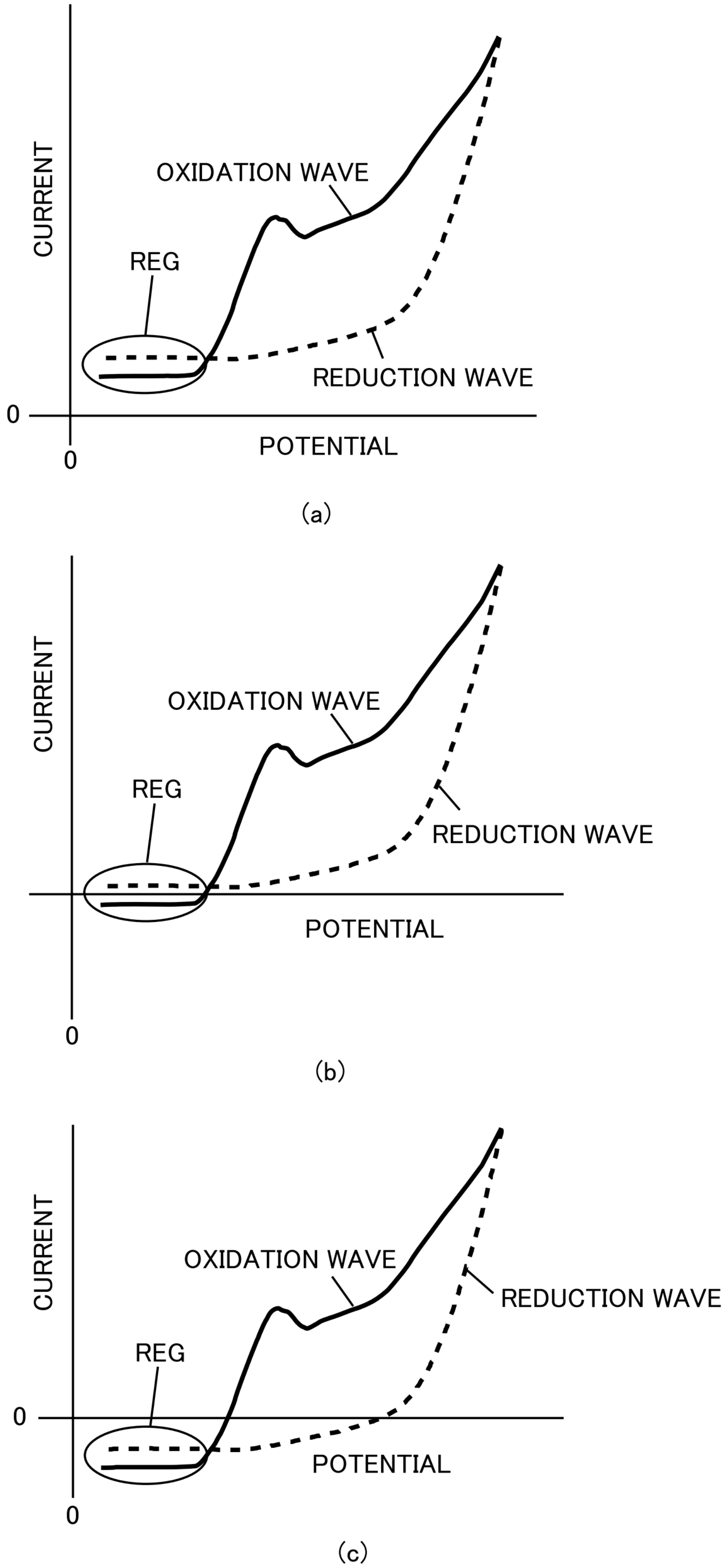
CURRENT
OXIDATION WAVE
REG
REDUCTION WAVE
0
POTENTIAL
0
(a)
CURRENT
OXIDATION WAVE
REG
REDUCTION WAVE
POTENTIAL
0
(b)
CURRENT
OXIDATION WAVE
REDUCTION WAVE
REG
0
POTENTIAL
0
(c)

Fig. 13

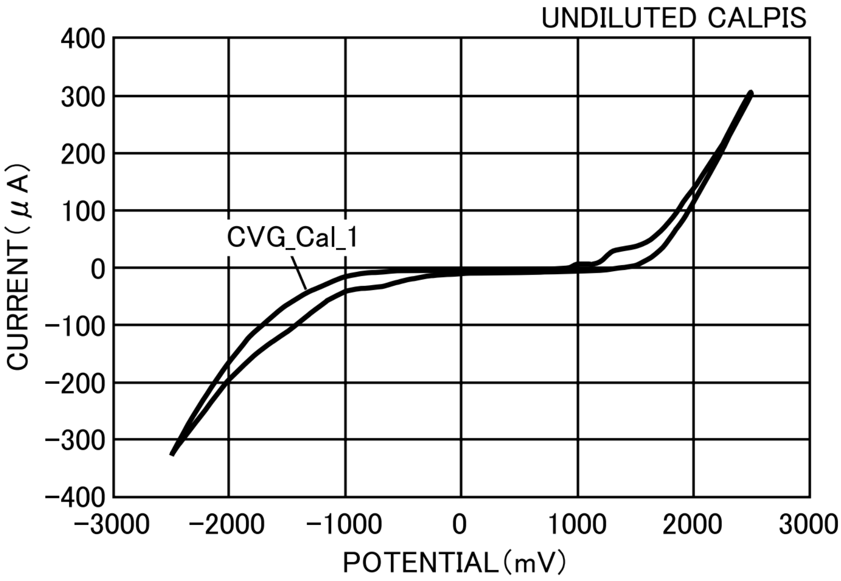
UNDILUTED CALPIS
CVG_Cal_1
CURRENT (μA)
POTENTIAL (mV)
400
300
200
100
0
−100
−200
−300
−400
−3000
−2000
−1000
0
1000
2000
3000

(a)

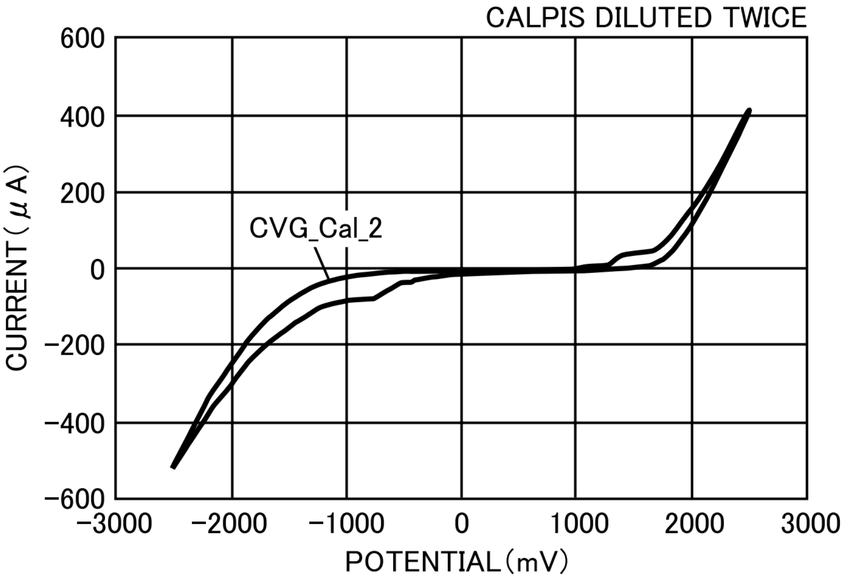
CALPIS DILUTED TWICE
CVG_Cal_2
CURRENT (μA)
POTENTIAL (mV)
600
400
200
0
−200
−400
−600
−3000
−2000
−1000
0
1000
2000
3000

(b)

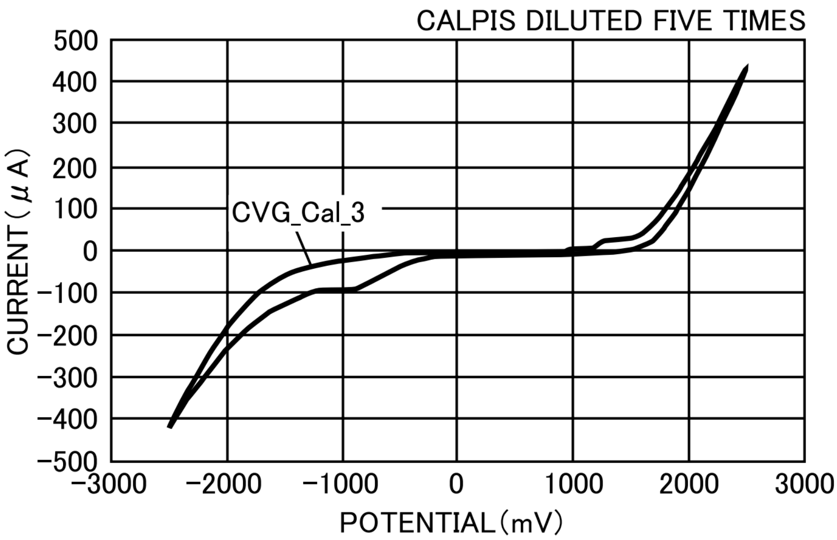
CALPIS DILUTED FIVE TIMES
CVG_Cal_3
CURRENT (μA)
POTENTIAL (mV)
500
400
300
200
100
0
−100
−200
−300
−400
−500
−3000
−2000
−1000
0
1000
2000
3000

(c)

Fig. 14

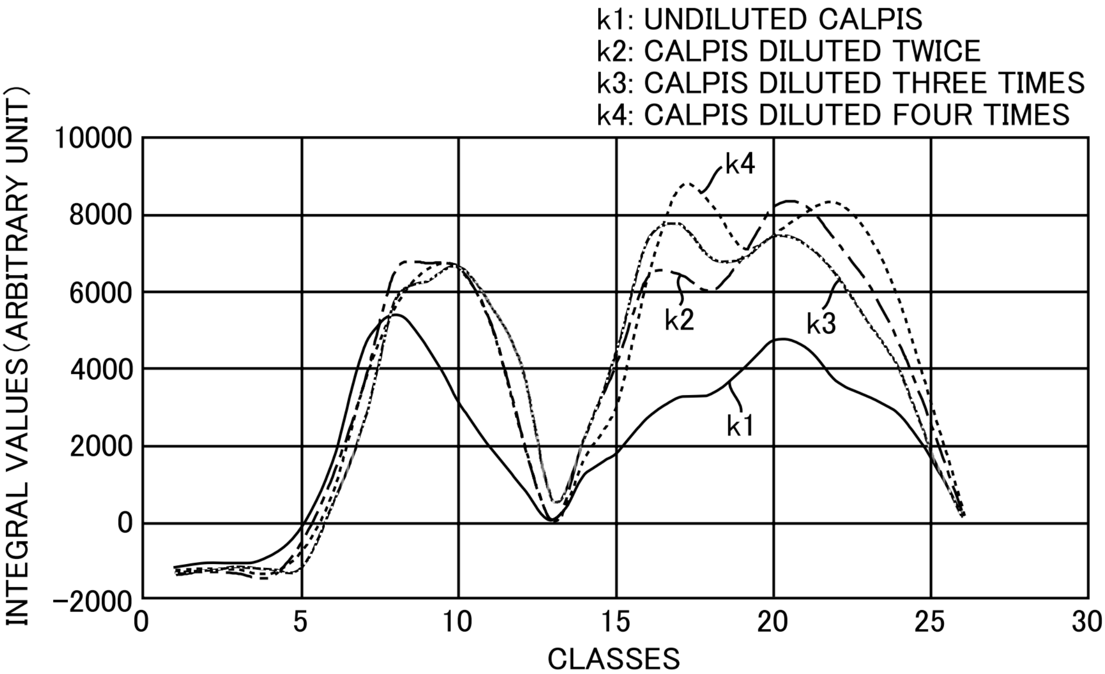
k1: UNDILUTED CALPIS
k2: CALPIS DILUTED TWICE
k3: CALPIS DILUTED THREE TIMES
k4: CALPIS DILUTED FOUR TIMES
INTEGRAL VALUES (ARBITRARY UNIT)
10000
8000
6000
4000
2000
0
−2000
0
5
10
15
20
25
30
CLASSES
k1
k2
k3
k4

Fig. 15

| | CURVE k1 | CURVE k2 | CURVE k3 | CURVE k4 |
|---|---|---|---|---|
| STANDARD DEVIATION OF DIFFERENCES BETWEEN MULTIPLE INTEGRAL VALUES ON CURVE k1 AND MULTIPLE INTEGRAL VALUES ON OTHER CURVES | | STANDARD DEVIATION DIFFERENCES $\sigma_{DF_k1,k2}$=49.37(%) | STANDARD DEVIATION DIFFERENCES $\sigma_{DF_k1,k3}$=69.61(%) | STANDARD DEVIATION DIFFERENCES $\sigma_{DF_k1,k4}$=59.03(%) |
| THRESHOLD VALUE | | 15(%) | 15(%) | 15(%) |
| JUDGMENT RESULT | | ○ | ○ | ○ |
| STANDARD DEVIATION OF DIFFERENCES BETWEEN MULTIPLE INTEGRAL VALUES ON CURVE k2 AND MULTIPLE INTEGRAL VALUES ON OTHER CURVES | STANDARD DEVIATION DIFFERENCES $\sigma_{DF_k1,k2}$=49.37(%) | | STANDARD DEVIATION DIFFERENCES $\sigma_{DF_k2,k3}$=44.49(%) | STANDARD DEVIATION DIFFERENCES $\sigma_{DF_k2,k4}$=25.14(%) |
| THRESHOLD VALUE | 15(%) | | 15(%) | 15(%) |
| JUDGMENT RESULT | ○ | | ○ | ○ |
| STANDARD DEVIATION OF DIFFERENCES BETWEEN MULTIPLE INTEGRAL VALUES ON CURVE k3 AND MULTIPLE INTEGRAL VALUES ON OTHER CURVES | STANDARD DEVIATION DIFFERENCES $\sigma_{DF_k1,k3}$=69.61(%) | STANDARD DEVIATION DIFFERENCES $\sigma_{DF_k2,k3}$=44.49(%) | | STANDARD DEVIATION DIFFERENCES $\sigma_{DF_k3,k4}$=48.83(%) |
| THRESHOLD VALUE | 15(%) | 15(%) | | 15(%) |
| JUDGMENT RESULT | ○ | ○ | | ○ |
| STANDARD DEVIATION OF DIFFERENCES BETWEEN MULTIPLE INTEGRAL VALUES ON CURVE k4 AND MULTIPLE INTEGRAL VALUES ON OTHER CURVES | STANDARD DEVIATION DIFFERENCES $\sigma_{DF_k1,k4}$=59.03(%) | STANDARD DEVIATION DIFFERENCES $\sigma_{DF_k2,k4}$=25.14(%) | STANDARD DEVIATION DIFFERENCES $\sigma_{DF_k3,k4}$=48.83(%) | |
| THRESHOLD VALUE | 15(%) | 15(%) | 15(%) | |
| JUDGMENT RESULT | ○ | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 16

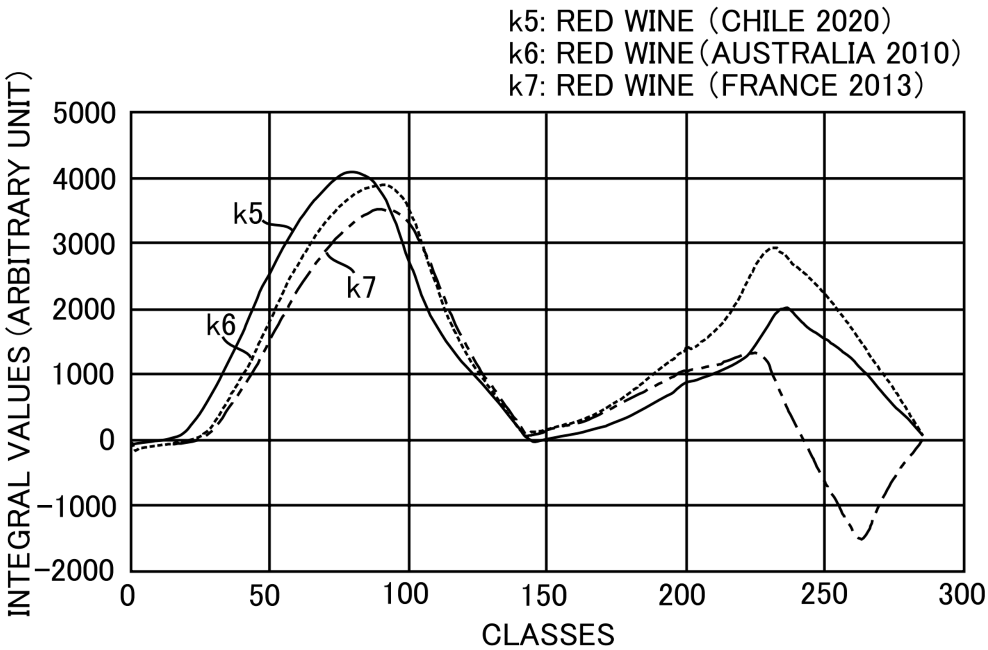
k5: RED WINE (CHILE 2020)
k6: RED WINE (AUSTRALIA 2010)
k7: RED WINE (FRANCE 2013)
INTEGRAL VALUES (ARBITRARY UNIT)
5000
4000
3000
2000
1000
0
−1000
−2000
0
50
100
150
200
250
300
CLASSES
k5
k6
k7

Fig. 17

| | CURVE k5 | CURVE k6 | CURVE k7 |
|---|---|---|---|
| STANDARD DEVIATION OF DIFFERENCES BETWEEN MULTIPLE INTEGRAL VALUES ON CURVE k5 AND MULTIPLE INTEGRAL VALUES ON OTHER CURVES | | STANDARD DEVIATION DIFFERENCES $\sigma_{DF_k5,k6}$=65.70(%) | STANDARD DEVIATION DIFFERENCES $\sigma_{DF_k5,k7}$=74.94(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k6 AND MULTIPLE INTEGRAL VALUES ON OTHER CURVES | STANDARD DEVIATION DIFFERENCES $\sigma_{DF_k5,k6}$=65.70(%) | | STANDARD DEVIATION DIFFERENCES $\sigma_{DF_k6,k7}$=93.19(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k7 AND MULTIPLE INTEGRAL VALUES ON OTHER CURVES | STANDARD DEVIATION DIFFERENCES $\sigma_{DF_k5,k7}$=74.94(%) | STANDARD DEVIATION DIFFERENCES $\sigma_{DF_k6,k7}$=93.19(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 18

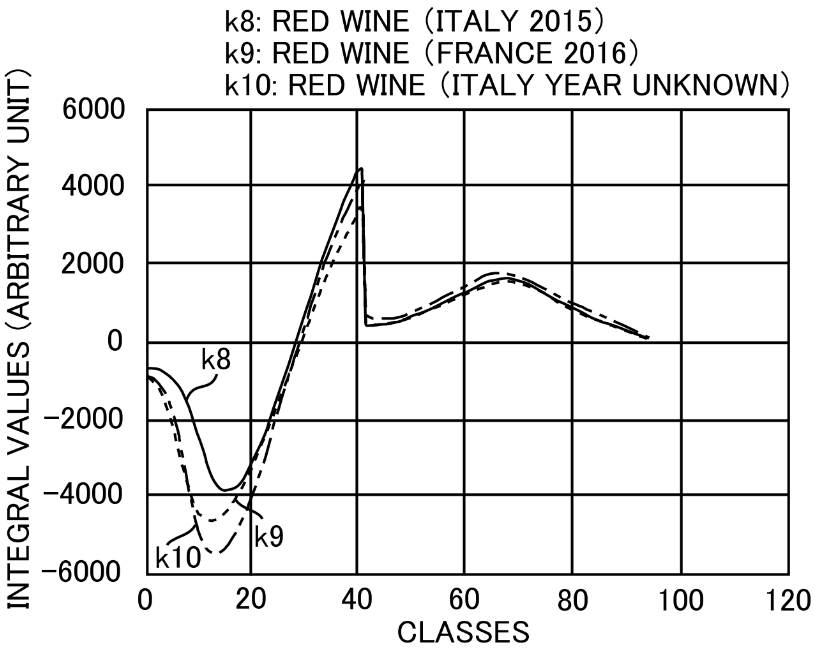
k8: RED WINE (ITALY 2015)
k9: RED WINE (FRANCE 2016)
k10: RED WINE (ITALY YEAR UNKNOWN)
INTEGRAL VALUES (ARBITRARY UNIT)
6000
4000
2000
0
−2000
−4000
−6000
0
20
40
60
80
100
120
CLASSES
k8
k9
k10

Fig. 19

| | CURVE k8 | CURVE k9 | CURVE k10 |
|---|---|---|---|
| STANDARD DEVIATION OF DIFFERENCES BETWEEN MULTIPLE INTEGRAL VALUES ON CURVE k8 AND MULTIPLE INTEGRAL VALUES ON OTHER CURVES | | STANDARD DEVIATION DIFFERENCES $\sigma_{DF_k8,k9}$=57.13(%) | STANDARD DEVIATION DIFFERENCES $\sigma_{DF_k8,k10}$=40.56(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k9 AND MULTIPLE INTEGRAL VALUES ON OTHER CURVES | STANDARD DEVIATION DIFFERENCES $\sigma_{DF_k8,k9}$=57.13(%) | | STANDARD DEVIATION DIFFERENCES $\sigma_{DF_k9,k10}$=17.85(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k10 AND MULTIPLE INTEGRAL VALUES ON OTHER CURVES | STANDARD DEVIATION DIFFERENCES $\sigma_{DF_k8,k10}$=40.56(%) | STANDARD DEVIATION DIFFERENCES $\sigma_{DF_k9,k10}$=17.85(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 20

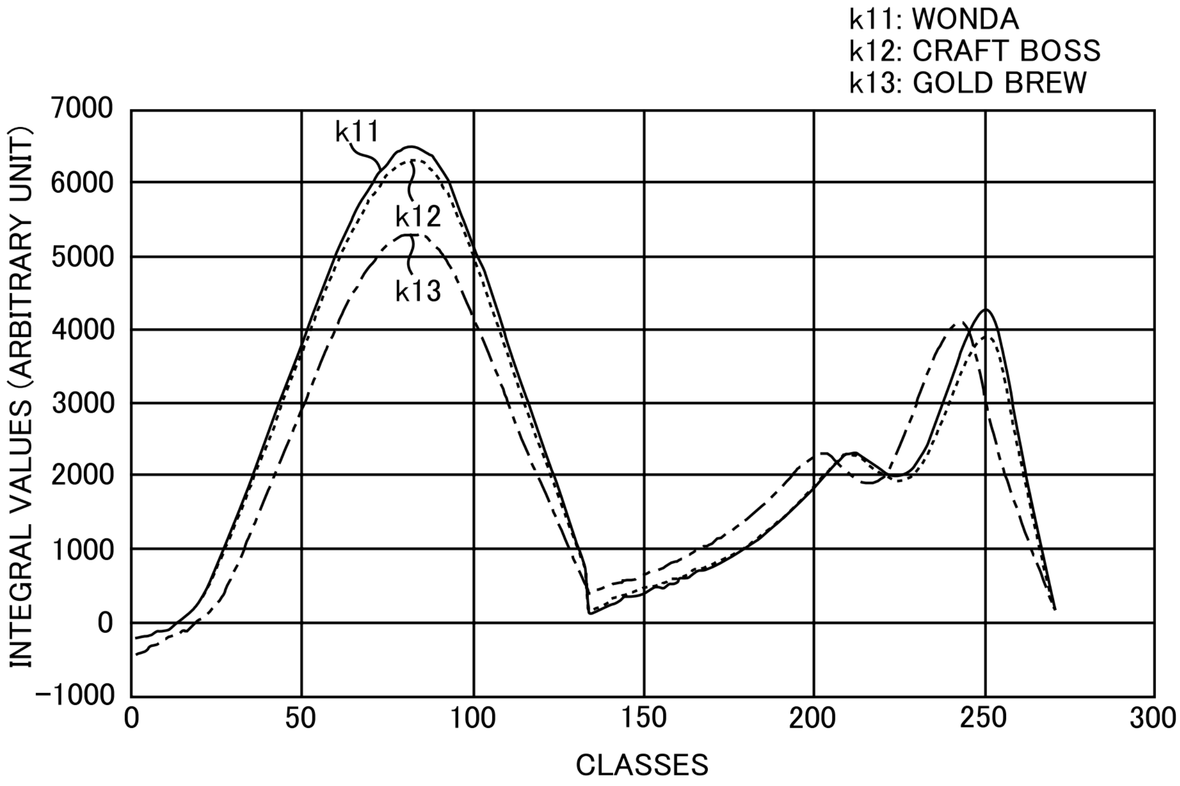
k11: WONDA
k12: CRAFT BOSS
k13: GOLD BREW
k11
k12
k13
INTEGRAL VALUES (ARBITRARY UNIT)
7000
6000
5000
4000
3000
2000
1000
0
−1000
0
50
100
150
200
250
300
CLASSES

Fig. 21

| | CURVE k11 | CURVE k12 | CURVE k13 |
|---|---|---|---|
| STANDARD DEVIATION OF DIFFERENCES BETWEEN MULTIPLE INTEGRAL VALUES ON CURVE k11 AND MULTIPLE INTEGRAL VALUES ON OTHER CURVES | | STANDARD DEVIATION DIFFERENCES $\sigma_{DF_k11,k12}$=37.00(%) | STANDARD DEVIATION DIFFERENCES $\sigma_{DF_k11,k13}$=66.20(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k12 AND MULTIPLE INTEGRAL VALUES ON OTHER CURVES | STANDARD DEVIATION DIFFERENCES $\sigma_{DF_k11,k12}$=37.00(%) | | STANDARD DEVIATION DIFFERENCES $\sigma_{DF_k12,k13}$=50.55(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k13 AND MULTIPLE INTEGRAL VALUES ON OTHER CURVES | STANDARD DEVIATION DIFFERENCES $\sigma_{DF_k11,k13}$=66.20(%) | STANDARD DEVIATION DIFFERENCES $\sigma_{DF_k12,k13}$=50.55(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 22

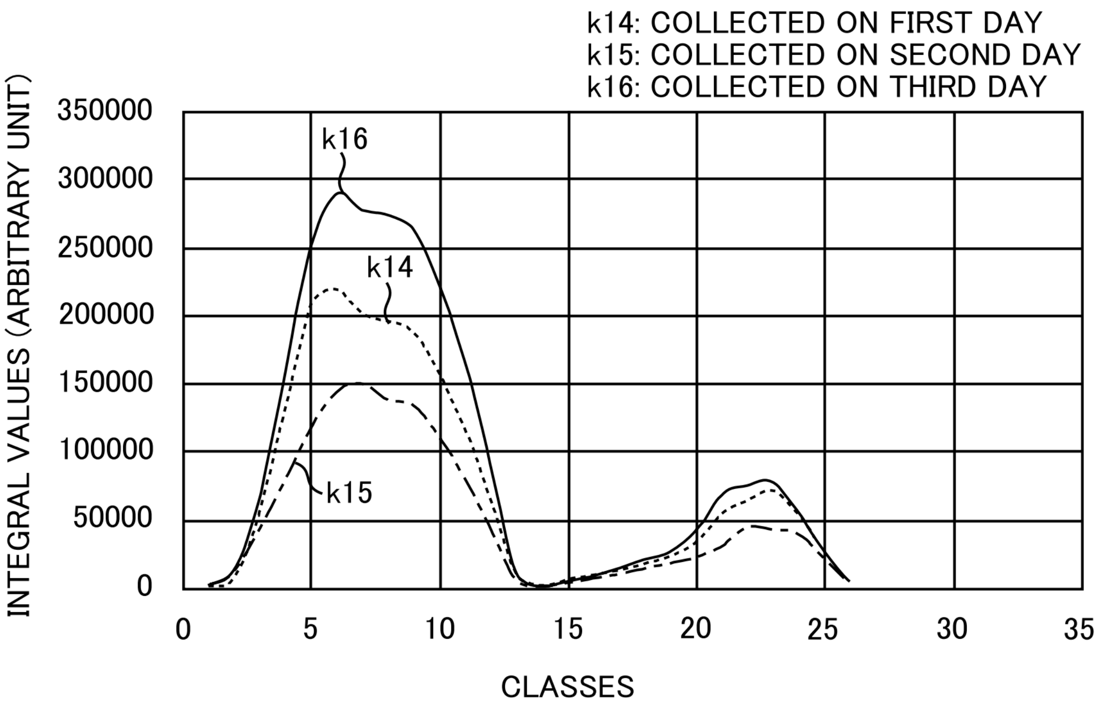
k14: COLLECTED ON FIRST DAY
k15: COLLECTED ON SECOND DAY
k16: COLLECTED ON THIRD DAY
INTEGRAL VALUES (ARBITRARY UNIT)
350000
300000
250000
200000
150000
100000
50000
0
k16
k14
k15
0
5
10
15
20
25
30
35
CLASSES

Fig. 23

| | CURVE k14 | CURVE k15 | CURVE k16 |
|---|---|---|---|
| STANDARD DEVIATION OF DIFFERENCES BETWEEN MULTIPLE INTEGRAL VALUES ON CURVE k14 AND MULTIPLE INTEGRAL VALUES ON OTHER CURVES | | STANDARD DEVIATION DIFFERENCES $\sigma_{DF_k14,k15}$=38.45(%) | STANDARD DEVIATION DIFFERENCES $\sigma_{DF_k14,k16}$=26.04(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k15 AND MULTIPLE INTEGRAL VALUES ON OTHER CURVES | STANDARD DEVIATION DIFFERENCES $\sigma_{DF_k14,k15}$=38.45(%) | | STANDARD DEVIATION DIFFERENCES $\sigma_{DF_k15,k16}$=22.93(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k16 AND MULTIPLE INTEGRAL VALUES ON OTHER CURVES | STANDARD DEVIATION DIFFERENCES $\sigma_{DF_k14,k16}$=26.04(%) | STANDARD DEVIATION DIFFERENCES $\sigma_{DF_k15,k16}$=22.93(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 24

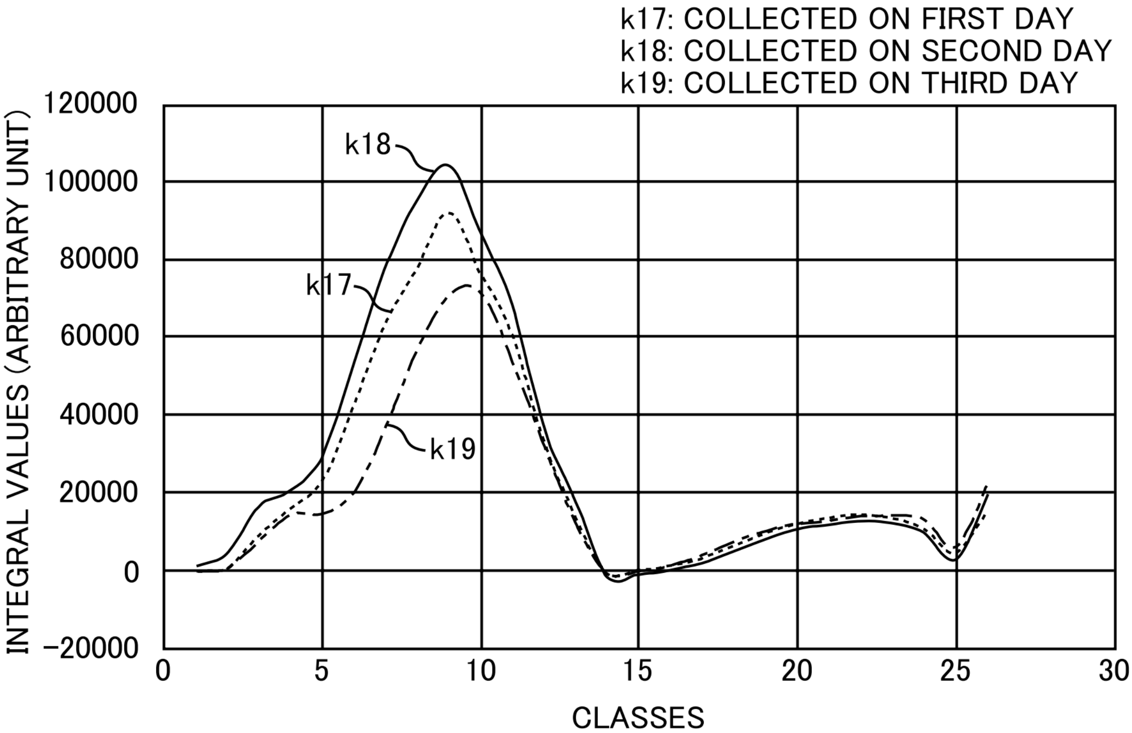
k17: COLLECTED ON FIRST DAY
k18: COLLECTED ON SECOND DAY
k19: COLLECTED ON THIRD DAY
INTEGRAL VALUES (ARBITRARY UNIT)
120000
100000
80000
60000
40000
20000
0
−20000
0
5
10
15
20
25
30
CLASSES
k18
k17
k19

Fig. 25

| | CURVE k17 | CURVE k18 | CURVE k19 |
|---|---|---|---|
| STANDARD DEVIATION OF DIFFERENCES BETWEEN MULTIPLE INTEGRAL VALUES ON CURVE k17 AND MULTIPLE INTEGRAL VALUES ON OTHER CURVES | | STANDARD DEVIATION DIFFERENCES $\sigma_{DF_k17,k18}$=162.23(%) | STANDARD DEVIATION DIFFERENCES $\sigma_{DF_k17,k19}$=30.81(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k18 AND MULTIPLE INTEGRAL VALUES ON OTHER CURVES | STANDARD DEVIATION DIFFERENCES $\sigma_{DF_k17,k18}$=162.23(%) | | STANDARD DEVIATION DIFFERENCES $\sigma_{DF_k18,k19}$=75.69(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k19 AND MULTIPLE INTEGRAL VALUES ON OTHER CURVES | STANDARD DEVIATION DIFFERENCES $\sigma_{DF_k17,k19}$=30.81(%) | STANDARD DEVIATION DIFFERENCES $\sigma_{DF_k18,k19}$=75.69(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 26

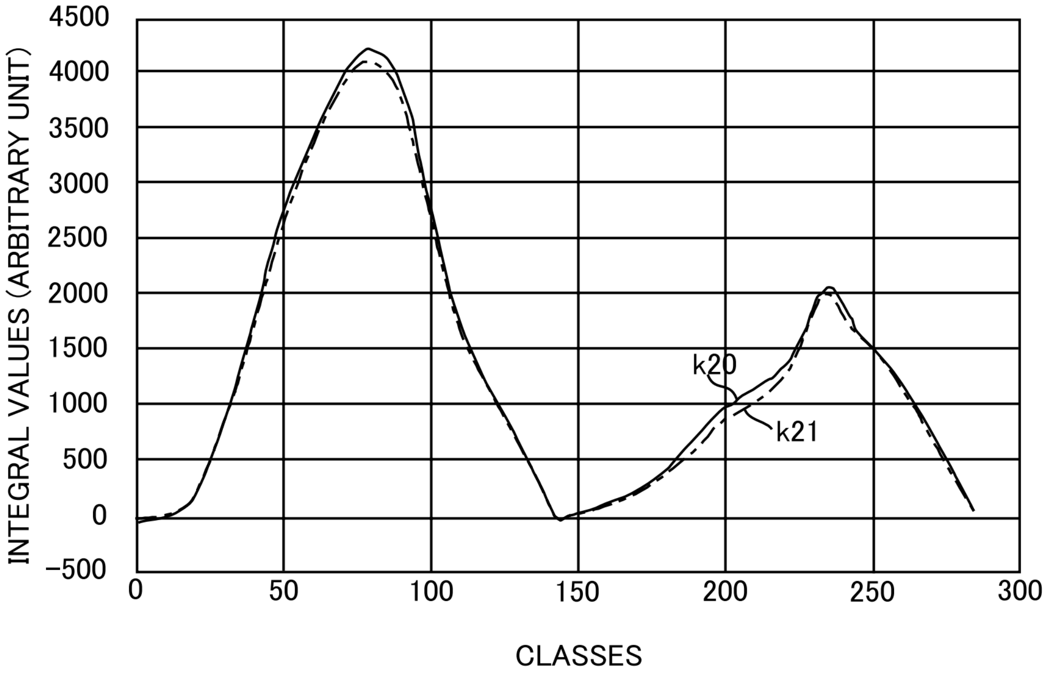


Fig. 27

| | CURVE k20 | CURVE k21 |
|---|---|---|
| STANDARD DEVIATION OF DIFFERENCES BETWEEN MULTIPLE INTEGRAL VALUES ON CURVE k20 AND MULTIPLE INTEGRAL VALUES ON OTHER CURVES | | STANDARD DEVIATION DIFFERENCES $\sigma_{DF_k20,k21}$=10.95(%) |
| THRESHOLD VALUE | | 15(%) |
| JUDGMENT RESULT | | × |
| STANDARD DEVIATION OF DIFFERENCES BETWEEN MULTIPLE INTEGRAL VALUES ON CURVE k21 AND MULTIPLE INTEGRAL VALUES ON OTHER CURVES | STANDARD DEVIATION DIFFERENCES $\sigma_{DF_k20,k121}$=10.95(%) | |
| THRESHOLD VALUE | 15(%) | |
| JUDGMENT RESULT | × | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 28

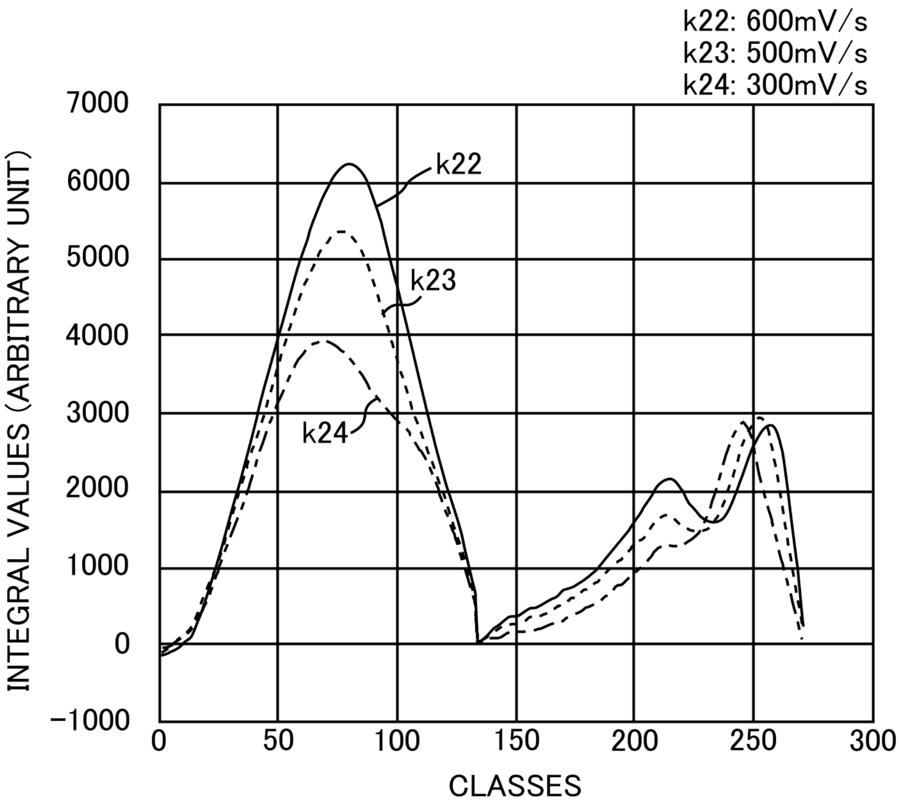
k22: 600mV/s
k23: 500mV/s
k24: 300mV/s
INTEGRAL VALUES (ARBITRARY UNIT)
7000
6000
5000
4000
3000
2000
1000
0
−1000
0
50
100
150
200
250
300
CLASSES
k22
k23
k24

Fig. 29

| | CURVE k22 | CURVE k23 | CURVE k24 |
|---|---|---|---|
| STANDARD DEVIATION OF DIFFERENCES BETWEEN MULTIPLE INTEGRAL VALUES ON CURVE k22 AND MULTIPLE INTEGRAL VALUES ON OTHER CURVES | | STANDARD DEVIATION DIFFERENCES $\sigma_{DF_k22,k23}$=34.69(%) | STANDARD DEVIATION DIFFERENCES $\sigma_{DF_k22,k24}$=51.23(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k23 AND MULTIPLE INTEGRAL VALUES ON OTHER CURVES | STANDARD DEVIATION DIFFERENCES $\sigma_{DF_k22,k23}$=34.69(%) | | STANDARD DEVIATION DIFFERENCES $\sigma_{DF_k23,k24}$=30.26(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k24 AND MULTIPLE INTEGRAL VALUES ON OTHER CURVES | STANDARD DEVIATION DIFFERENCES $\sigma_{DF_k22,k24}$=51.23(%) | STANDARD DEVIATION DIFFERENCES $\sigma_{DF_k23,k24}$=30.26(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 30

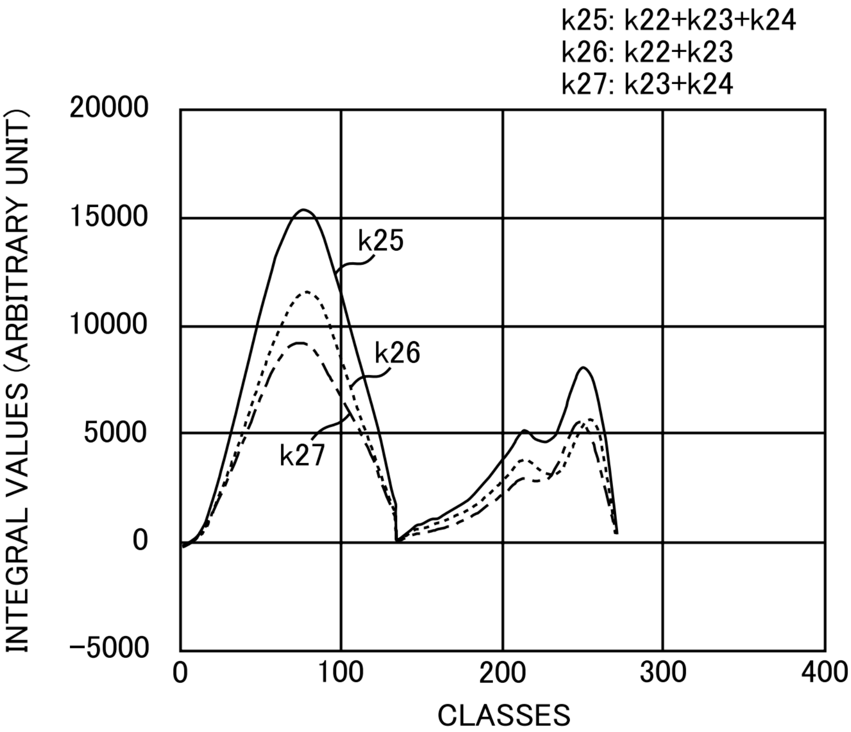
k25: k22+k23+k24
k26: k22+k23
k27: k23+k24
20000
15000
10000
5000
0
−5000
INTEGRAL VALUES (ARBITRARY UNIT)
k25
k26
k27
0
100
200
300
400
CLASSES

Fig. 31

| | CURVE k25 | CURVE k26 | CURVE k27 |
|---|---|---|---|
| STANDARD DEVIATION OF DIFFERENCES BETWEEN MULTIPLE INTEGRAL VALUES ON CURVE k25 AND MULTIPLE INTEGRAL VALUES ON OTHER CURVES | | STANDARD DEVIATION DIFFERENCES $\sigma_{DF_k25,k26}$=15.22(%) | STANDARD DEVIATION DIFFERENCES $\sigma_{DF_k25,k27}$=27.76(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k26 AND MULTIPLE INTEGRAL VALUES ON OTHER CURVES | STANDARD DEVIATION DIFFERENCES $\sigma_{DF_k25,k26}$=15.22(%) | | STANDARD DEVIATION DIFFERENCES $\sigma_{DF_k26,k27}$=30.92(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k27 AND MULTIPLE INTEGRAL VALUES ON OTHER CURVES | STANDARD DEVIATION DIFFERENCES $\sigma_{DF_k25,k27}$=27.76(%) | STANDARD DEVIATION DIFFERENCES $\sigma_{DF_k26,k27}$=30.92(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 32

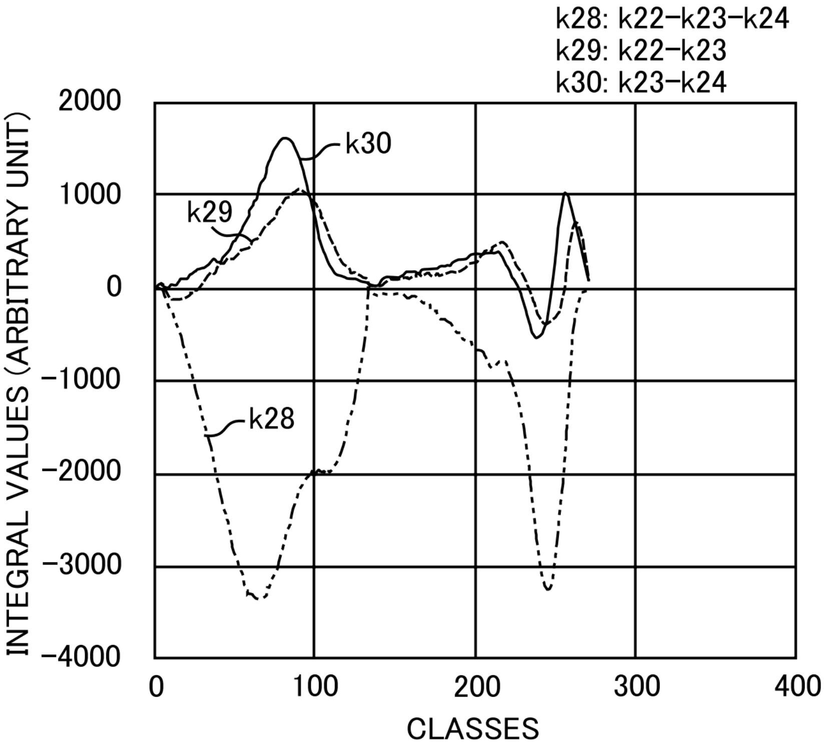
k28: k22−k23−k24
k29: k22−k23
k30: k23−k24
2000
1000
0
−1000
−2000
−3000
−4000
INTEGRAL VALUES (ARBITRARY UNIT)
0
100
200
300
400
CLASSES
k30
k29
k28

Fig. 33

| | CURVE k28 | CURVE k29 | CURVE k30 |
|---|---|---|---|
| STANDARD DEVIATION OF DIFFERENCES BETWEEN MULTIPLE INTEGRAL VALUES ON CURVE k28 AND MULTIPLE INTEGRAL VALUES ON OTHER CURVES | | STANDARD DEVIATION DIFFERENCES $\sigma_{DF_k28,k29}$=51.37(%) | STANDARD DEVIATION DIFFERENCES $\sigma_{DF_k28,k30}$=6415.85(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k29 AND MULTIPLE INTEGRAL VALUES ON OTHER CURVES | STANDARD DEVIATION DIFFERENCES $\sigma_{DF_k28,k29}$=51.37(%) | | STANDARD DEVIATION DIFFERENCES $\sigma_{DF_k29,k30}$=87.68(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k30 AND MULTIPLE INTEGRAL VALUES ON OTHER CURVES | STANDARD DEVIATION DIFFERENCES $\sigma_{DF_k28,k30}$=6415.85(%) | STANDARD DEVIATION DIFFERENCES $\sigma_{DF_k29,k30}$=87.68(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 34

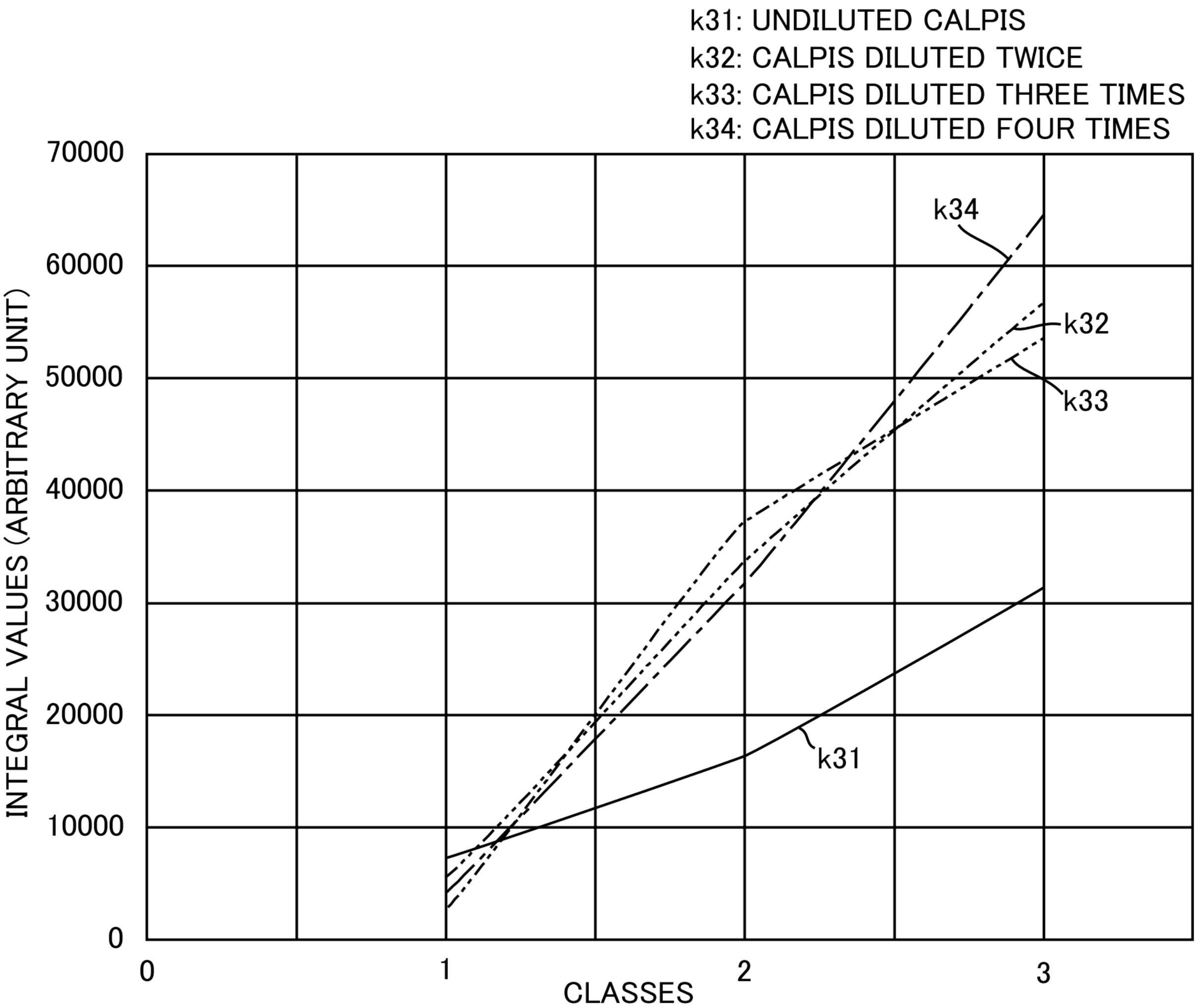
k31: UNDILUTED CALPIS
k32: CALPIS DILUTED TWICE
k33: CALPIS DILUTED THREE TIMES
k34: CALPIS DILUTED FOUR TIMES
INTEGRAL VALUES (ARBITRARY UNIT)
70000
60000
50000
40000
30000
20000
10000
0
0
1
2
3
CLASSES
k34
k32
k33
k31

Fig. 35

| NUMBER OF INTEGRAL VALUES: 3 | CURVE k31 | CURVE k32 | CURVE k33 | CURVE k34 |
|---|---|---|---|---|
| STANDARD DEVIATION OF DIFFERENCES BETWEEN MULTIPLE INTEGRAL VALUES ON CURVE k31 AND MULTIPLE INTEGRAL VALUES ON OTHER CURVES | | STANDARD DEVIATION DIFFERENCES $\sigma_{DF_k31,k32}$=42.50(%) | STANDARD DEVIATION DIFFERENCES $\sigma_{DF_k31,k33}$=71.86(%) | STANDARD DEVIATION DIFFERENCES $\sigma_{DF_k31,k34}$=54.84(%) |
| THRESHOLD VALUE | | 15(%) | 15(%) | 15(%) |
| JUDGMENT RESULT | | ○ | ○ | ○ |
| STANDARD DEVIATION OF DIFFERENCES BETWEEN MULTIPLE INTEGRAL VALUES ON CURVE k32 AND MULTIPLE INTEGRAL VALUES ON OTHER CURVES | STANDARD DEVIATION DIFFERENCES $\sigma_{DF_k32,k31}$=42.50(%) | | STANDARD DEVIATION DIFFERENCES $\sigma_{DF_k32,k33}$=31.44(%) | STANDARD DEVIATION DIFFERENCES $\sigma_{DF_k32,k34}$=15.15(%) |
| THRESHOLD VALUE | 15(%) | | 15(%) | 15(%) |
| JUDGMENT RESULT | ○ | | ○ | ○ |
| STANDARD DEVIATION OF DIFFERENCES BETWEEN MULTIPLE INTEGRAL VALUES ON CURVE k33 AND MULTIPLE INTEGRAL VALUES ON OTHER CURVES | STANDARD DEVIATION DIFFERENCES $\sigma_{DF_k33,k31}$=71.86(%) | STANDARD DEVIATION DIFFERENCES $\sigma_{DF_k33,k32}$=31.44(%) | | STANDARD DEVIATION DIFFERENCES $\sigma_{DF_k33,k34}$=23.15(%) |
| THRESHOLD VALUE | 15(%) | 15(%) | | 15(%) |
| JUDGMENT RESULT | ○ | ○ | | ○ |
| STANDARD DEVIATION OF DIFFERENCES BETWEEN MULTIPLE INTEGRAL VALUES ON CURVE k34 AND MULTIPLE INTEGRAL VALUES ON OTHER CURVES | STANDARD DEVIATION DIFFERENCES $\sigma_{DF_k34,k31}$=54.84(%) | STANDARD DEVIATION DIFFERENCES $\sigma_{DF_k34,k32}$=15.15(%) | STANDARD DEVIATION DIFFERENCES $\sigma_{DF_k34,k33}$=23.15(%) | |
| THRESHOLD VALUE | 15(%) | 15(%) | 15(%) | |
| JUDGMENT RESULT | ○ | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 36

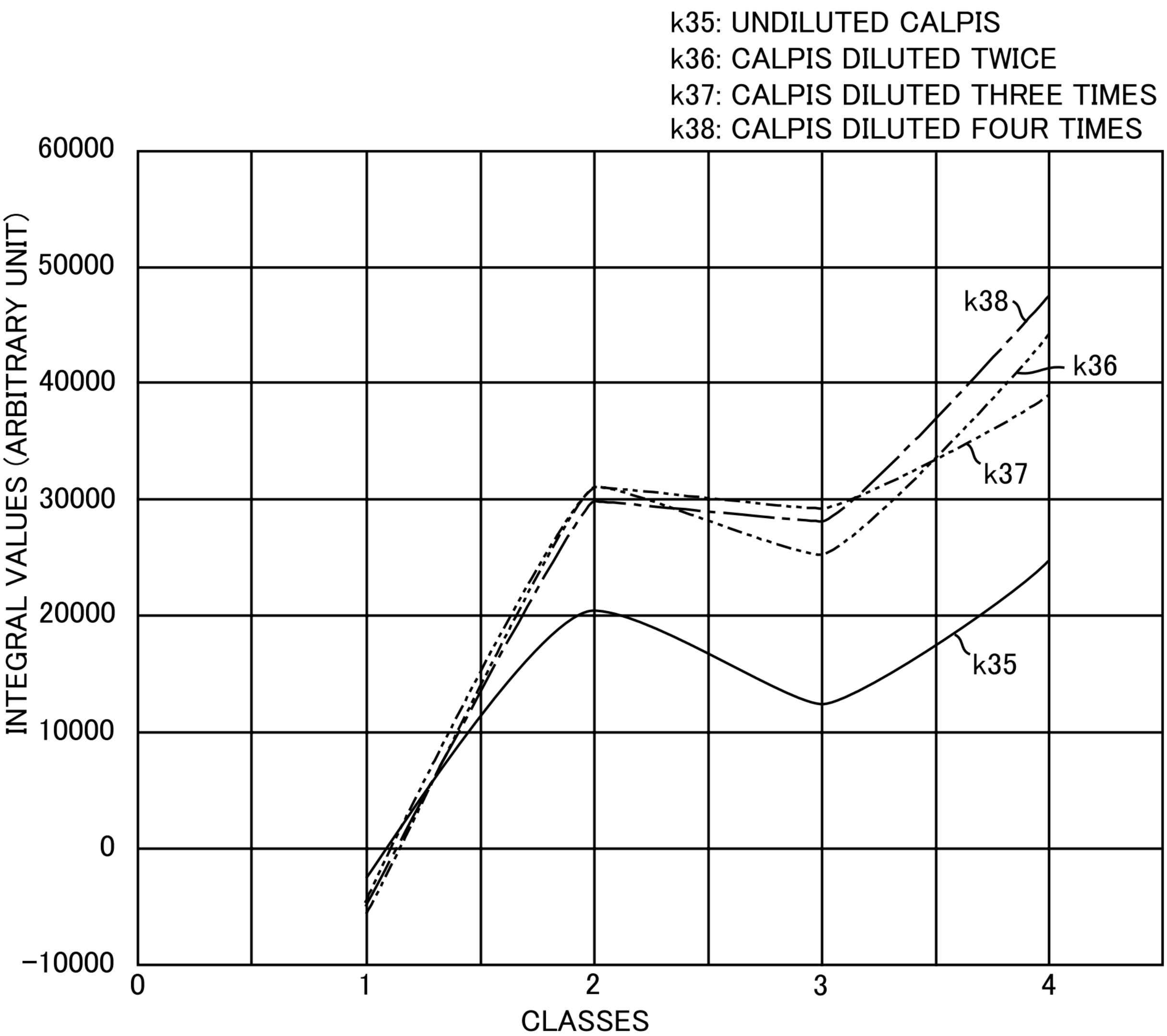
k35: UNDILUTED CALPIS
k36: CALPIS DILUTED TWICE
k37: CALPIS DILUTED THREE TIMES
k38: CALPIS DILUTED FOUR TIMES
INTEGRAL VALUES (ARBITRARY UNIT)
60000
50000
40000
30000
20000
10000
0
−10000
0
1
2
3
4
CLASSES
k38
k36
k37
k35

Fig. 37

| NUMBER OF INTEGRAL VALUES: 4 | CURVE k35 | CURVE k36 | CURVE k37 | CURVE k38 |
|---|---|---|---|---|
| STANDARD DEVIATION OF DIFFERENCES BETWEEN MULTIPLE INTEGRAL VALUES ON CURVE k35 AND MULTIPLE INTEGRAL VALUES ON OTHER CURVES | | STANDARD DEVIATION DIFFERENCES $\sigma_{DF_k35,k36}$=48.30(%) | STANDARD DEVIATION DIFFERENCES $\sigma_{DF_k35,k37}$=56.45(%) | STANDARD DEVIATION DIFFERENCES $\sigma_{DF_k35,k38}$=53.12(%) |
| THRESHOLD VALUE | | 15(%) | 15(%) | 15(%) |
| JUDGMENT RESULT | | ○ | ○ | ○ |
| STANDARD DEVIATION OF DIFFERENCES BETWEEN MULTIPLE INTEGRAL VALUES ON CURVE k36 AND MULTIPLE INTEGRAL VALUES ON OTHER CURVES | STANDARD DEVIATION DIFFERENCES $\sigma_{DF_k36,k35}$=48.30(%) | | STANDARD DEVIATION DIFFERENCES $\sigma_{DF_k36,k37}$=12.30(%) | STANDARD DEVIATION DIFFERENCES $\sigma_{DF_k36,k38}$=6.86(%) |
| THRESHOLD VALUE | 15(%) | | 15(%) | 15(%) |
| JUDGMENT RESULT | ○ | | × | × |
| STANDARD DEVIATION OF DIFFERENCES BETWEEN MULTIPLE INTEGRAL VALUES ON CURVE k37 AND MULTIPLE INTEGRAL VALUES ON OTHER CURVES | STANDARD DEVIATION DIFFERENCES $\sigma_{DF_k37,k35}$=56.45(%) | STANDARD DEVIATION DIFFERENCES $\sigma_{DF_k37,k36}$=12.30(%) | | STANDARD DEVIATION DIFFERENCES $\sigma_{DF_k37,k38}$=11.70(%) |
| THRESHOLD VALUE | 15(%) | 15(%) | | 15(%) |
| JUDGMENT RESULT | ○ | × | | × |
| STANDARD DEVIATION OF DIFFERENCES BETWEEN MULTIPLE INTEGRAL VALUES ON CURVE k38 AND MULTIPLE INTEGRAL VALUES ON OTHER CURVES | STANDARD DEVIATION DIFFERENCES $\sigma_{DF_k38,k35}$=53.12(%) | STANDARD DEVIATION DIFFERENCES $\sigma_{DF_k38,k36}$=6.86(%) | STANDARD DEVIATION DIFFERENCES $\sigma_{DF_k38,k37}$=11.70(%) | |
| THRESHOLD VALUE | 15(%) | 15(%) | 15(%) | |
| JUDGMENT RESULT | ○ | × | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 38

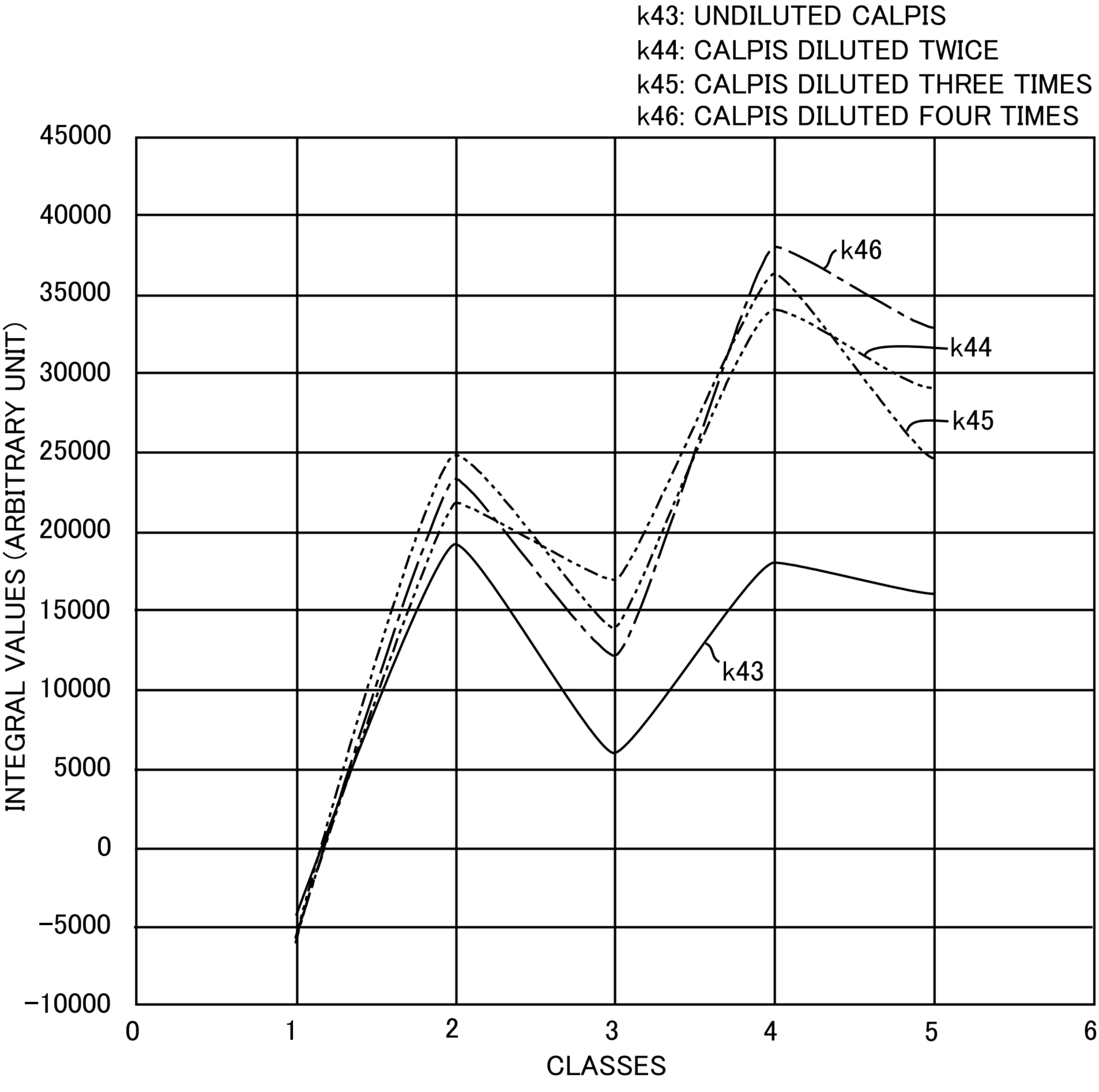
k43: UNDILUTED CALPIS
k44: CALPIS DILUTED TWICE
k45: CALPIS DILUTED THREE TIMES
k46: CALPIS DILUTED FOUR TIMES
45000
40000
35000
30000
25000
20000
15000
10000
5000
0
−5000
−10000
INTEGRAL VALUES (ARBITRARY UNIT)
0
1
2
3
4
5
6
CLASSES
k46
k44
k45
k43

Fig. 39

| NUMBER OF INTEGRAL VALUES: 5 | CURVE k43 | CURVE k44 | CURVE k45 | CURVE k46 |
|---|---|---|---|---|
| STANDARD DEVIATION OF DIFFERENCES BETWEEN MULTIPLE INTEGRAL VALUES ON CURVE k43 AND MULTIPLE INTEGRAL VALUES ON OTHER CURVES | | STANDARD DEVIATION DIFFERENCES $\sigma_{DF_k43,k44}$=39.20(%) | STANDARD DEVIATION DIFFERENCES $\sigma_{DF_k43,k45}$=44.75(%) | STANDARD DEVIATION DIFFERENCES $\sigma_{DF_k43,k46}$=39.30(%) |
| THRESHOLD VALUE | | 15(%) | 15(%) | 15(%) |
| JUDGMENT RESULT | | ○ | ○ | ○ |
| STANDARD DEVIATION OF DIFFERENCES BETWEEN MULTIPLE INTEGRAL VALUES ON CURVE k44 AND MULTIPLE INTEGRAL VALUES ON OTHER CURVES | STANDARD DEVIATION DIFFERENCES $\sigma_{DF_k44,k43}$=39.20(%) | | STANDARD DEVIATION DIFFERENCES $\sigma_{DF_k44,k45}$=13.02(%) | STANDARD DEVIATION DIFFERENCES $\sigma_{DF_k44,k46}$=10.04(%) |
| THRESHOLD VALUE | 15(%) | | 15(%) | 15(%) |
| JUDGMENT RESULT | ○ | | × | × |
| STANDARD DEVIATION OF DIFFERENCES BETWEEN MULTIPLE INTEGRAL VALUES ON CURVE k45 AND MULTIPLE INTEGRAL VALUES ON OTHER CURVES | STANDARD DEVIATION DIFFERENCES $\sigma_{DF_k45,k43}$=44.75(%) | STANDARD DEVIATION DIFFERENCES $\sigma_{DF_k45,k44}$=13.02(%) | | STANDARD DEVIATION DIFFERENCES $\sigma_{DF_k45,k46}$=19.83(%) |
| THRESHOLD VALUE | 15(%) | 15(%) | | 15(%) |
| JUDGMENT RESULT | ○ | × | | ○ |
| STANDARD DEVIATION OF DIFFERENCES BETWEEN MULTIPLE INTEGRAL VALUES ON CURVE k46 AND MULTIPLE INTEGRAL VALUES ON OTHER CURVES | STANDARD DEVIATION DIFFERENCES $\sigma_{DF_k46,k43}$=39.30(%) | STANDARD DEVIATION DIFFERENCES $\sigma_{DF_k46,k44}$=10.04(%) | STANDARD DEVIATION DIFFERENCES $\sigma_{DF_k46,k45}$=19.83(%) | |
| THRESHOLD VALUE | 15(%) | 15(%) | 15(%) | |
| JUDGMENT RESULT | ○ | × | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 40

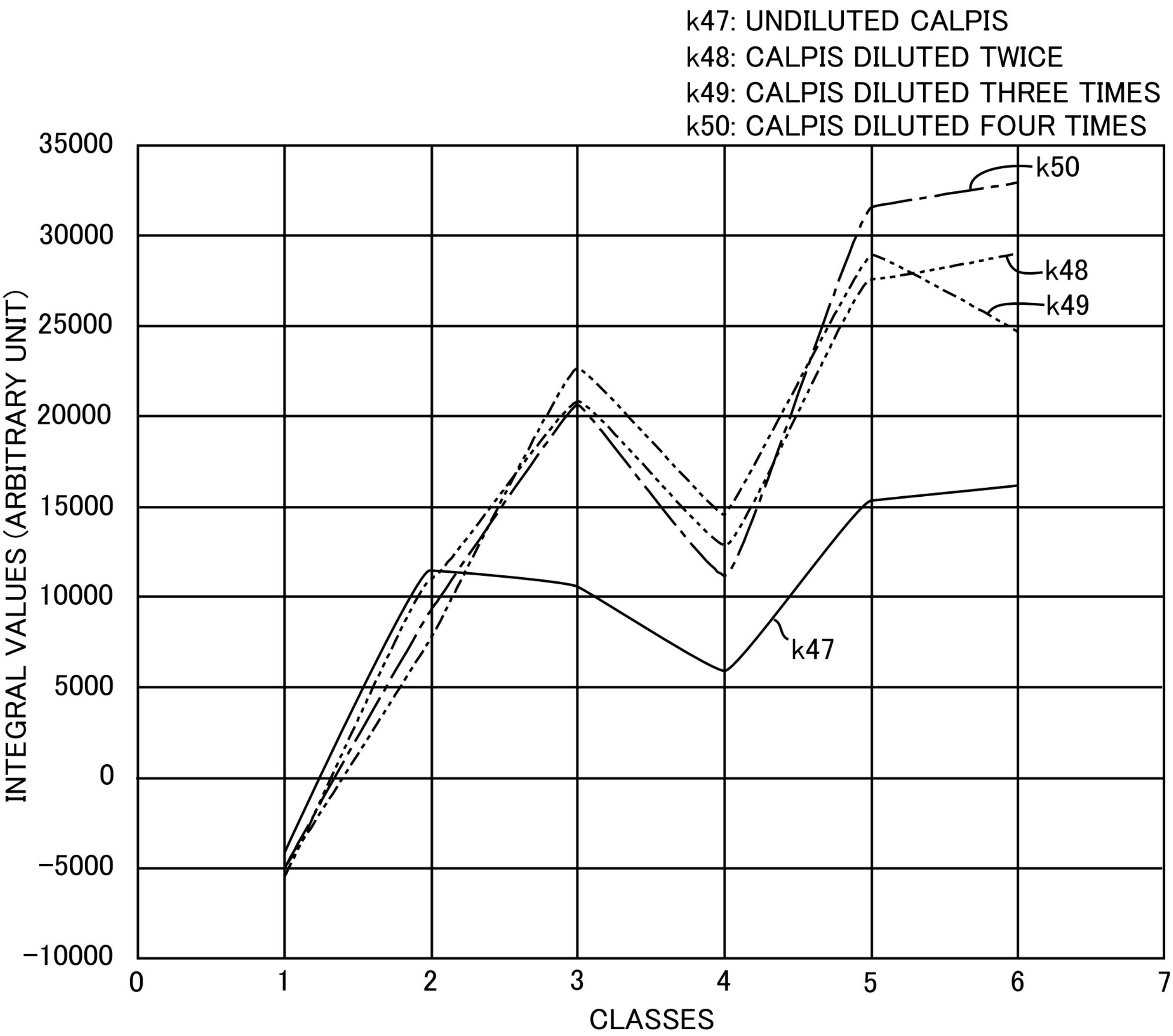
k47: UNDILUTED CALPIS
k48: CALPIS DILUTED TWICE
k49: CALPIS DILUTED THREE TIMES
k50: CALPIS DILUTED FOUR TIMES
INTEGRAL VALUES (ARBITRARY UNIT)
35000
30000
25000
20000
15000
10000
5000
0
−5000
−10000
0
1
2
3
4
5
6
7
CLASSES
k50
k48
k49
k47

Fig. 41

| NUMBER OF INTEGRAL VALUES: 6 | CURVE k47 | CURVE k48 | CURVE k49 | CURVE k50 |
|---|---|---|---|---|
| STANDARD DEVIATION OF DIFFERENCES BETWEEN MULTIPLE INTEGRAL VALUES ON CURVE k47 AND MULTIPLE INTEGRAL VALUES ON OTHER CURVES | | STANDARD DEVIATION DIFFERENCES $\sigma_{DF_k47,k48}$=38.05(%) | STANDARD DEVIATION DIFFERENCES $\sigma_{DF_k47,k49}$=45.94(%) | STANDARD DEVIATION DIFFERENCES $\sigma_{DF_k47,k50}$=40.25(%) |
| THRESHOLD VALUE | | 15(%) | 15(%) | 15(%) |
| JUDGMENT RESULT | | ○ | ○ | ○ |
| STANDARD DEVIATION OF DIFFERENCES BETWEEN MULTIPLE INTEGRAL VALUES ON CURVE k48 AND MULTIPLE INTEGRAL VALUES ON OTHER CURVES | STANDARD DEVIATION DIFFERENCES $\sigma_{DF_k48,k47}$=38.05(%) | | STANDARD DEVIATION DIFFERENCES $\sigma_{DF_k48,k49}$=16.90(%) | STANDARD DEVIATION DIFFERENCES $\sigma_{DF_k48,k50}$=11.89(%) |
| THRESHOLD VALUE | 15(%) | | 15(%) | 15(%) |
| JUDGMENT RESULT | ○ | | ○ | × |
| STANDARD DEVIATION OF DIFFERENCES BETWEEN MULTIPLE INTEGRAL VALUES ON CURVE k49 AND MULTIPLE INTEGRAL VALUES ON OTHER CURVES | STANDARD DEVIATION DIFFERENCES $\sigma_{DF_k49,k47}$=45.94(%) | STANDARD DEVIATION DIFFERENCES $\sigma_{DF_k49,k48}$=16.90(%) | | STANDARD DEVIATION DIFFERENCES $\sigma_{DF_k49,k50}$=18.04(%) |
| THRESHOLD VALUE | 15(%) | 15(%) | | 15(%) |
| JUDGMENT RESULT | ○ | ○ | | ○ |
| STANDARD DEVIATION OF DIFFERENCES BETWEEN MULTIPLE INTEGRAL VALUES ON CURVE k50 AND MULTIPLE INTEGRAL VALUES ON OTHER CURVES | STANDARD DEVIATION DIFFERENCES $\sigma_{DF_k50,k47}$=40.25(%) | STANDARD DEVIATION DIFFERENCES $\sigma_{DF_k50,k48}$=11.89(%) | STANDARD DEVIATION DIFFERENCES $\sigma_{DF_k50,k49}$=18.04(%) | |
| THRESHOLD VALUE | 15(%) | 15(%) | 15(%) | |
| JUDGMENT RESULT | ○ | × | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 42

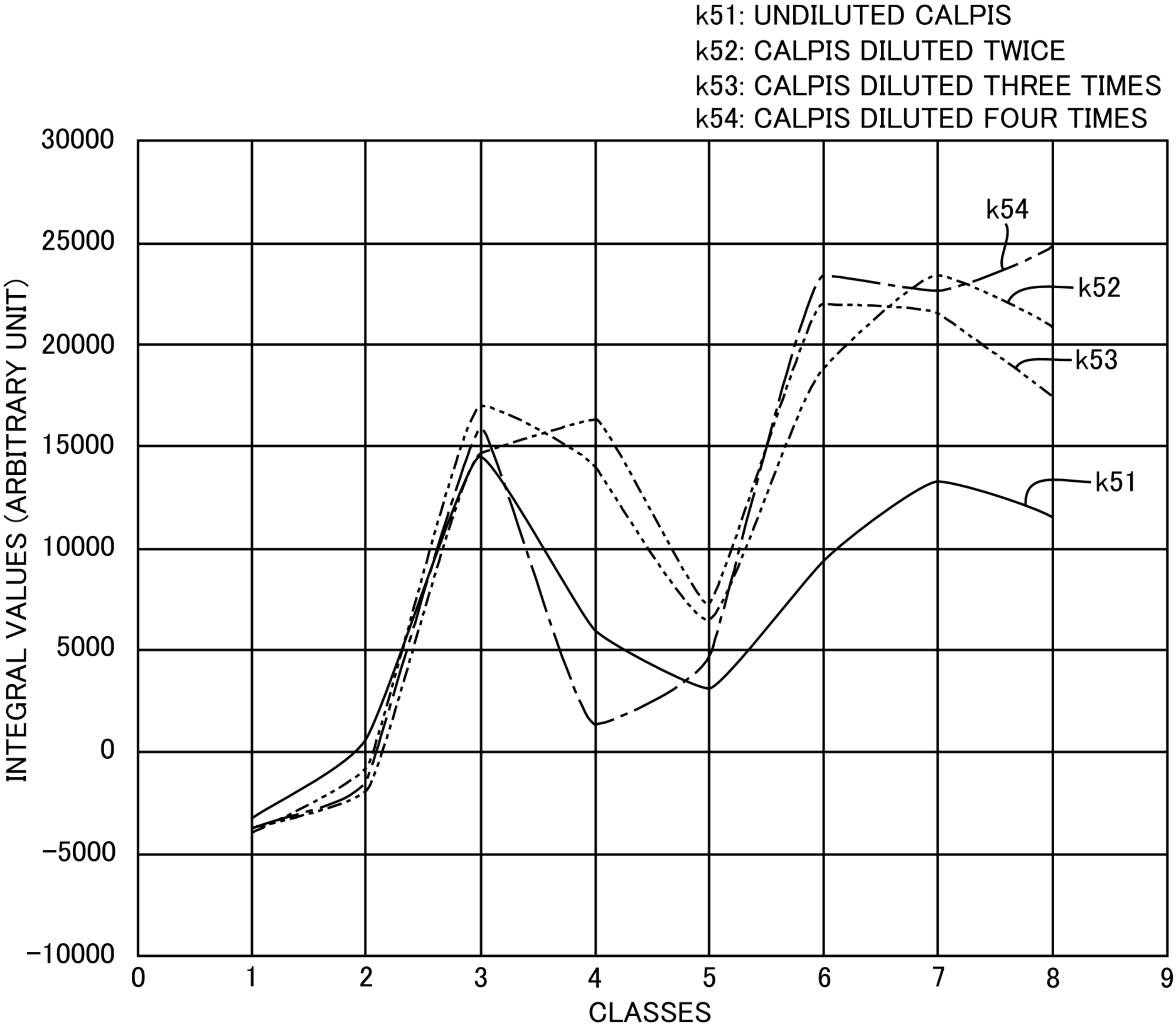
k51: UNDILUTED CALPIS
k52: CALPIS DILUTED TWICE
k53: CALPIS DILUTED THREE TIMES
k54: CALPIS DILUTED FOUR TIMES
INTEGRAL VALUES (ARBITRARY UNIT)
30000
25000
20000
15000
10000
5000
0
−5000
−10000
0
1
2
3
4
5
6
7
8
9
CLASSES
k54
k52
k53
k51

Fig. 43

| NUMBER OF INTEGRAL VALUES: 8 | CURVE k51 | CURVE k52 | CURVE k53 | CURVE k54 |
|---|---|---|---|---|
| STANDARD DEVIATION OF DIFFERENCES BETWEEN MULTIPLE INTEGRAL VALUES ON CURVE k51 AND MULTIPLE INTEGRAL VALUES ON OTHER CURVES | | STANDARD DEVIATION DIFFERENCES $\sigma_{DF_k51,k52}$=87.13(%) | STANDARD DEVIATION DIFFERENCES $\sigma_{DF_k51,k53}$=88.91(%) | STANDARD DEVIATION DIFFERENCES $\sigma_{DF_k51,k54}$=87.77(%) |
| THRESHOLD VALUE | | 15(%) | 15(%) | 15(%) |
| JUDGMENT RESULT | | ○ | ○ | ○ |
| STANDARD DEVIATION OF DIFFERENCES BETWEEN MULTIPLE INTEGRAL VALUES ON CURVE k52 AND MULTIPLE INTEGRAL VALUES ON OTHER CURVES | STANDARD DEVIATION DIFFERENCES $\sigma_{DF_k52,k51}$=87.13(%) | | STANDARD DEVIATION DIFFERENCES $\sigma_{DF_k52,k53}$=32.87(%) | STANDARD DEVIATION DIFFERENCES $\sigma_{DF_k52,k54}$=24.08(%) |
| THRESHOLD VALUE | 15(%) | | 15(%) | 15(%) |
| JUDGMENT RESULT | ○ | | ○ | ○ |
| STANDARD DEVIATION OF DIFFERENCES BETWEEN MULTIPLE INTEGRAL VALUES ON CURVE k53 AND MULTIPLE INTEGRAL VALUES ON OTHER CURVES | STANDARD DEVIATION DIFFERENCES $\sigma_{DF_k53,k51}$=88.91(%) | STANDARD DEVIATION DIFFERENCES $\sigma_{DF_k53,k52}$=32.87(%) | | STANDARD DEVIATION DIFFERENCES $\sigma_{DF_k53,k54}$=23.98(%) |
| THRESHOLD VALUE | 15(%) | 15(%) | | 15(%) |
| JUDGMENT RESULT | ○ | ○ | | ○ |
| STANDARD DEVIATION OF DIFFERENCES BETWEEN MULTIPLE INTEGRAL VALUES ON CURVE k54 AND MULTIPLE INTEGRAL VALUES ON OTHER CURVES | STANDARD DEVIATION DIFFERENCES $\sigma_{DF_k54,k51}$=87.77(%) | STANDARD DEVIATION DIFFERENCES $\sigma_{DF_k54,k52}$=24.08(%) | STANDARD DEVIATION DIFFERENCES $\sigma_{DF_k54,k53}$=23.98(%) | |
| THRESHOLD VALUE | 15(%) | 15(%) | 15(%) | |
| JUDGMENT RESULT | ○ | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 44

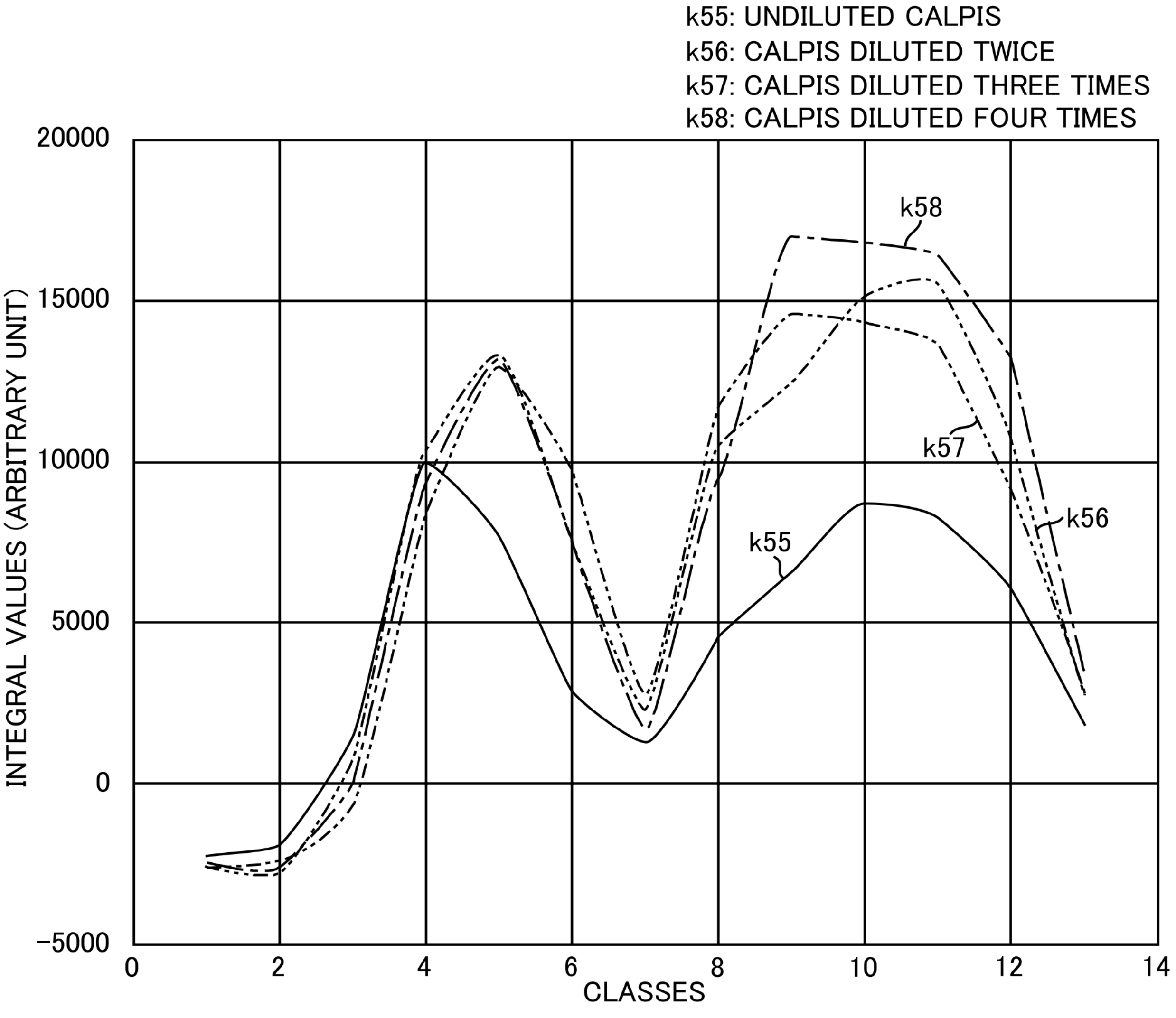
k55: UNDILUTED CALPIS
k56: CALPIS DILUTED TWICE
k57: CALPIS DILUTED THREE TIMES
k58: CALPIS DILUTED FOUR TIMES
INTEGRAL VALUES (ARBITRARY UNIT)
20000
15000
10000
5000
0
−5000
0
2
4
6
8
10
12
14
CLASSES
k55
k56
k57
k58

Fig. 45

| NUMBER OF INTEGRAL VALUES: 13 | CURVE k55 | CURVE k56 | CURVE k57 | CURVE k58 |
|---|---|---|---|---|
| STANDARD DEVIATION OF DIFFERENCES BETWEEN MULTIPLE INTEGRAL VALUES ON CURVE k55 AND MULTIPLE INTEGRAL VALUES ON OTHER CURVES | | STANDARD DEVIATION DIFFERENCES $\sigma_{DF_k55,k56}$=45.88(%) | STANDARD DEVIATION DIFFERENCES $\sigma_{DF_k55,k57}$=75.41(%) | STANDARD DEVIATION DIFFERENCES $\sigma_{DF_k55,k58}$=71.80(%) |
| THRESHOLD VALUE | | 15(%) | 15(%) | 15(%) |
| JUDGMENT RESULT | | ○ | ○ | ○ |
| STANDARD DEVIATION OF DIFFERENCES BETWEEN MULTIPLE INTEGRAL VALUES ON CURVE k56 AND MULTIPLE INTEGRAL VALUES ON OTHER CURVES | STANDARD DEVIATION DIFFERENCES $\sigma_{DF_k56,k55}$=45.88(%) | | STANDARD DEVIATION DIFFERENCES $\sigma_{DF_k56,k57}$=55.94(%) | STANDARD DEVIATION DIFFERENCES $\sigma_{DF_k56,k58}$=50.10(%) |
| THRESHOLD VALUE | 15(%) | | 15(%) | 15(%) |
| JUDGMENT RESULT | ○ | | ○ | ○ |
| STANDARD DEVIATION OF DIFFERENCES BETWEEN MULTIPLE INTEGRAL VALUES ON CURVE k57 AND MULTIPLE INTEGRAL VALUES ON OTHER CURVES | STANDARD DEVIATION DIFFERENCES $\sigma_{DF_k57,k55}$=75.41(%) | STANDARD DEVIATION DIFFERENCES $\sigma_{DF_k57,k56}$=55.94(%) | | STANDARD DEVIATION DIFFERENCES $\sigma_{DF_k57,k58}$=58.32(%) |
| THRESHOLD VALUE | 15(%) | 15(%) | | 15(%) |
| JUDGMENT RESULT | ○ | ○ | | ○ |
| STANDARD DEVIATION OF DIFFERENCES BETWEEN MULTIPLE INTEGRAL VALUES ON CURVE k58 AND MULTIPLE INTEGRAL VALUES ON OTHER CURVES | STANDARD DEVIATION DIFFERENCES $\sigma_{DF_k58,k55}$=71.80(%) | STANDARD DEVIATION DIFFERENCES $\sigma_{DF_k58,k56}$=50.10(%) | STANDARD DEVIATION DIFFERENCES $\sigma_{DF_k58,k57}$=58.32(%) | |
| THRESHOLD VALUE | 15(%) | 15(%) | 15(%) | |
| JUDGMENT RESULT | ○ | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 46

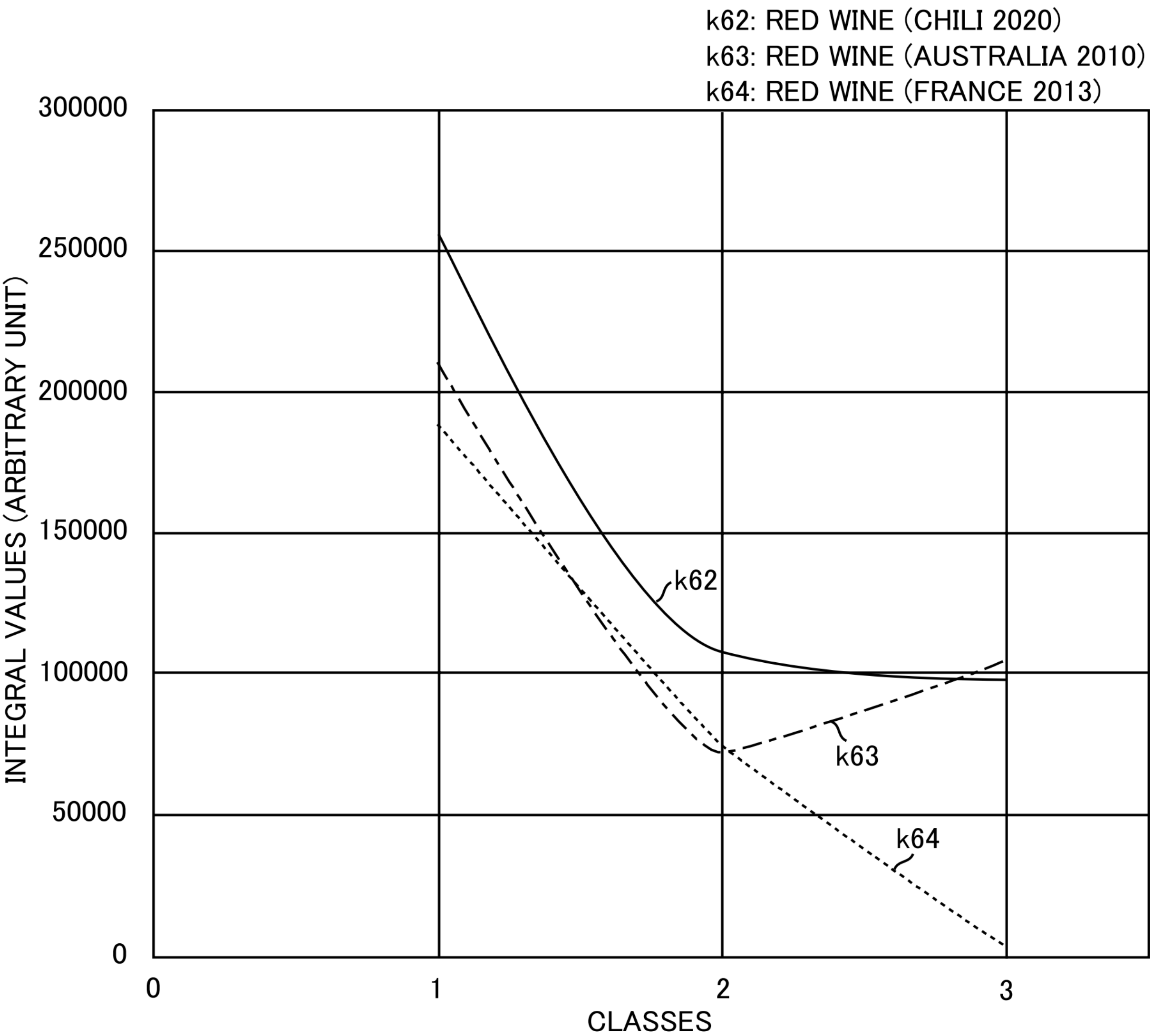
k62: RED WINE (CHILI 2020)
k63: RED WINE (AUSTRALIA 2010)
k64: RED WINE (FRANCE 2013)
300000
250000
200000
150000
100000
50000
0
INTEGRAL VALUES (ARBITRARY UNIT)
k62
k63
k64
0
1
2
3
CLASSES

Fig. 47

| NUMBER OF INTEGRAL VALUES: 3 | CURVE k62 | CURVE k63 | CURVE k64 |
|---|---|---|---|
| STANDARD DEVIATION OF DIFFERENCES BETWEEN MULTIPLE INTEGRAL VALUES ON CURVE k62 AND MULTIPLE INTEGRAL VALUES ON OTHER CURVES | | STANDARD DEVIATION DIFFERENCES $\sigma_{DF_k62,k63}$=19.05(%) | STANDARD DEVIATION DIFFERENCES $\sigma_{DF_k62,k64}$=71.82(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k63 AND MULTIPLE INTEGRAL VALUES ON OTHER CURVES | STANDARD DEVIATION DIFFERENCES $\sigma_{DF_k63,k62}$=19.05(%) | | STANDARD DEVIATION DIFFERENCES $\sigma_{DF_k63,k64}$=86.34(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k64 AND MULTIPLE INTEGRAL VALUES ON OTHER CURVES | STANDARD DEVIATION DIFFERENCES $\sigma_{DF_k64,k62}$=71.82(%) | STANDARD DEVIATION DIFFERENCES $\sigma_{DF_k64,k63}$=86.34(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 48

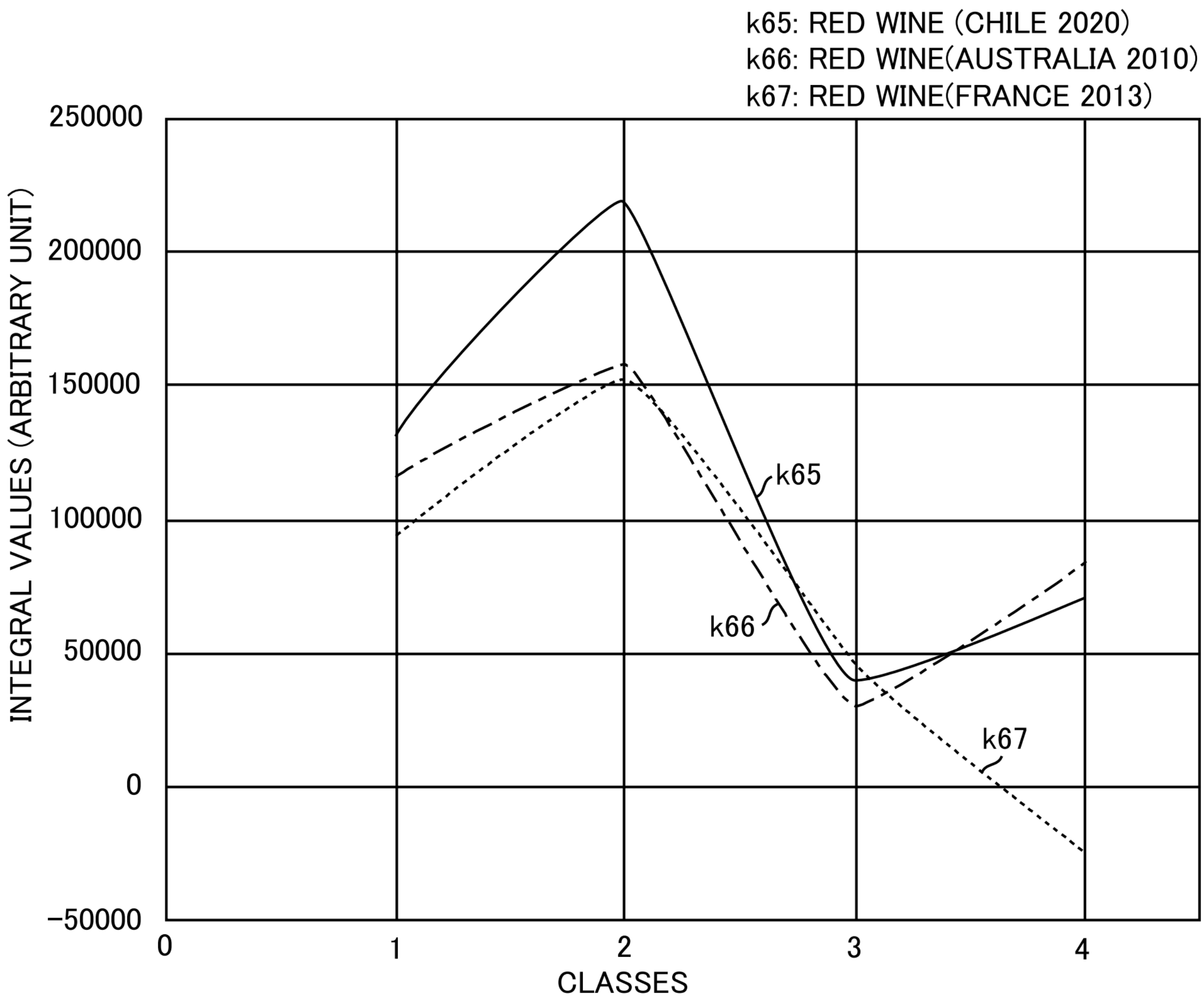
k65: RED WINE (CHILE 2020)
k66: RED WINE(AUSTRALIA 2010)
k67: RED WINE(FRANCE 2013)
INTEGRAL VALUES (ARBITRARY UNIT)
250000
200000
150000
100000
50000
0
−50000
0
1
2
3
4
CLASSES
k65
k66
k67

Fig. 49

| NUMBER OF INTEGRAL VALUES: 4 | CURVE k65 | CURVE k66 | CURVE k67 |
|---|---|---|---|
| STANDARD DEVIATION OF DIFFERENCES BETWEEN MULTIPLE INTEGRAL VALUES ON CURVE k65 AND MULTIPLE INTEGRAL VALUES ON OTHER CURVES | | STANDARD DEVIATION DIFFERENCES $\sigma_{DF_k65,k66}$=19.34(%) | STANDARD DEVIATION DIFFERENCES $\sigma_{DF_k65,k67}$=80.96(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k66 AND MULTIPLE INTEGRAL VALUES ON OTHER CURVES | STANDARD DEVIATION DIFFERENCES $\sigma_{DF_k66,k65}$=19.34(%) | | STANDARD DEVIATION DIFFERENCES $\sigma_{DF_k66,k67}$=91.77(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k67 AND MULTIPLE INTEGRAL VALUES ON OTHER CURVES | STANDARD DEVIATION DIFFERENCES $\sigma_{DF_k67,k65}$=80.96(%) | STANDARD DEVIATION DIFFERENCES $\sigma_{DF_k67,k66}$=91.77(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 50

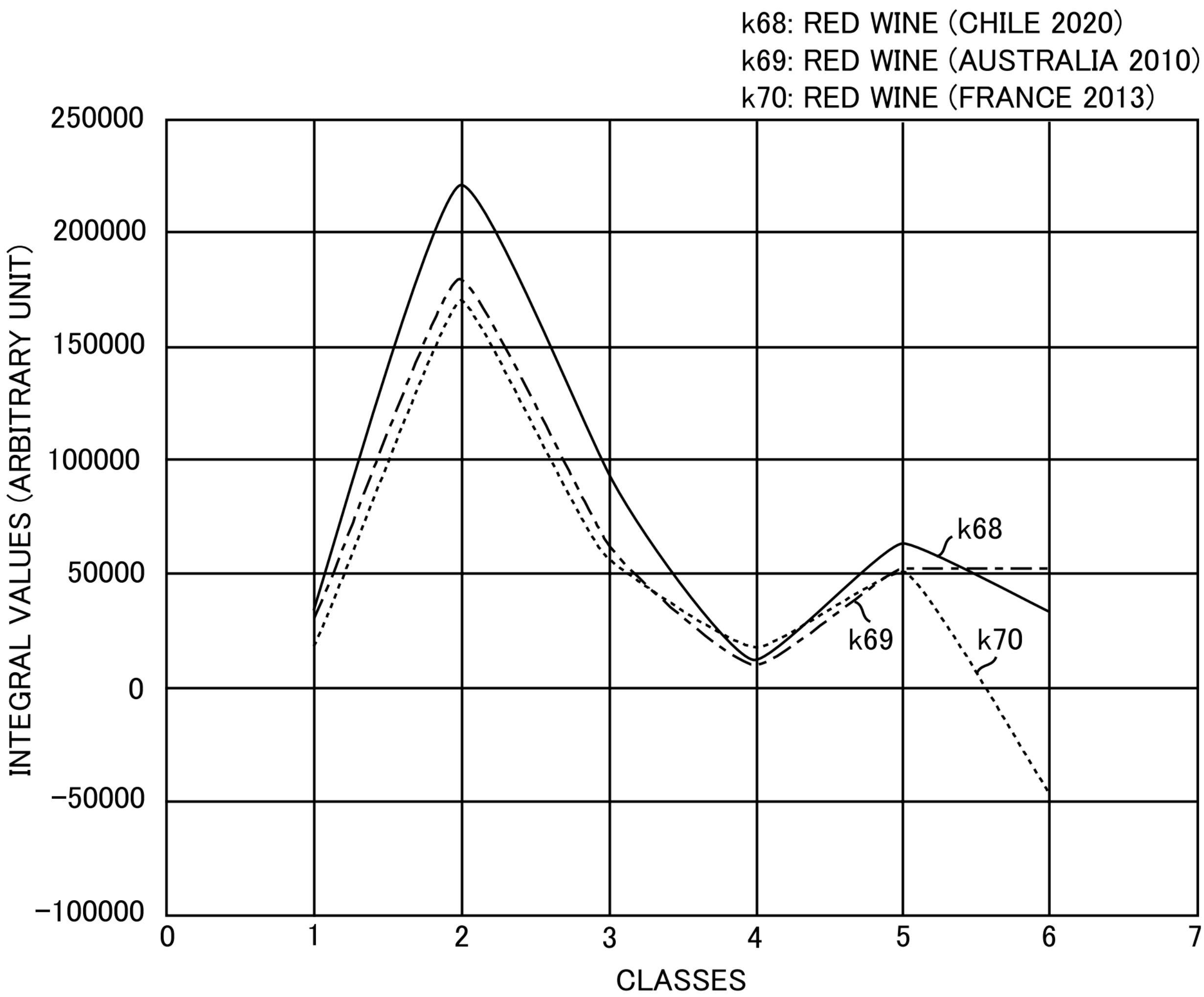
k68: RED WINE (CHILE 2020)
k69: RED WINE (AUSTRALIA 2010)
k70: RED WINE (FRANCE 2013)
INTEGRAL VALUES (ARBITRARY UNIT)
250000
200000
150000
100000
50000
0
−50000
−100000
0
1
2
3
4
5
6
7
CLASSES
k68
k69
k70

Fig. 51

| NUMBER OF INTEGRAL VALUES: 6 | CURVE k68 | CURVE k69 | CURVE k70 |
|---|---|---|---|
| STANDARD DEVIATION OF DIFFERENCES BETWEEN MULTIPLE INTEGRAL VALUES ON CURVE k68 AND MULTIPLE INTEGRAL VALUES ON OTHER CURVES | | STANDARD DEVIATION DIFFERENCES $\sigma_{DF_k68,k69}$=27.33(%) | STANDARD DEVIATION DIFFERENCES $\sigma_{DF_k68,k70}$=70.78(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k69 AND MULTIPLE INTEGRAL VALUES ON OTHER CURVES | STANDARD DEVIATION DIFFERENCES $\sigma_{DF_k69,k68}$=27.33(%) | | STANDARD DEVIATION DIFFERENCES $\sigma_{DF_k69,k70}$=80.57(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k70 AND MULTIPLE INTEGRAL VALUES ON OTHER CURVES | STANDARD DEVIATION DIFFERENCES $\sigma_{DF_k70,k68}$=70.78(%) | STANDARD DEVIATION DIFFERENCES $\sigma_{DF_k70,k69}$=80.57(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 52

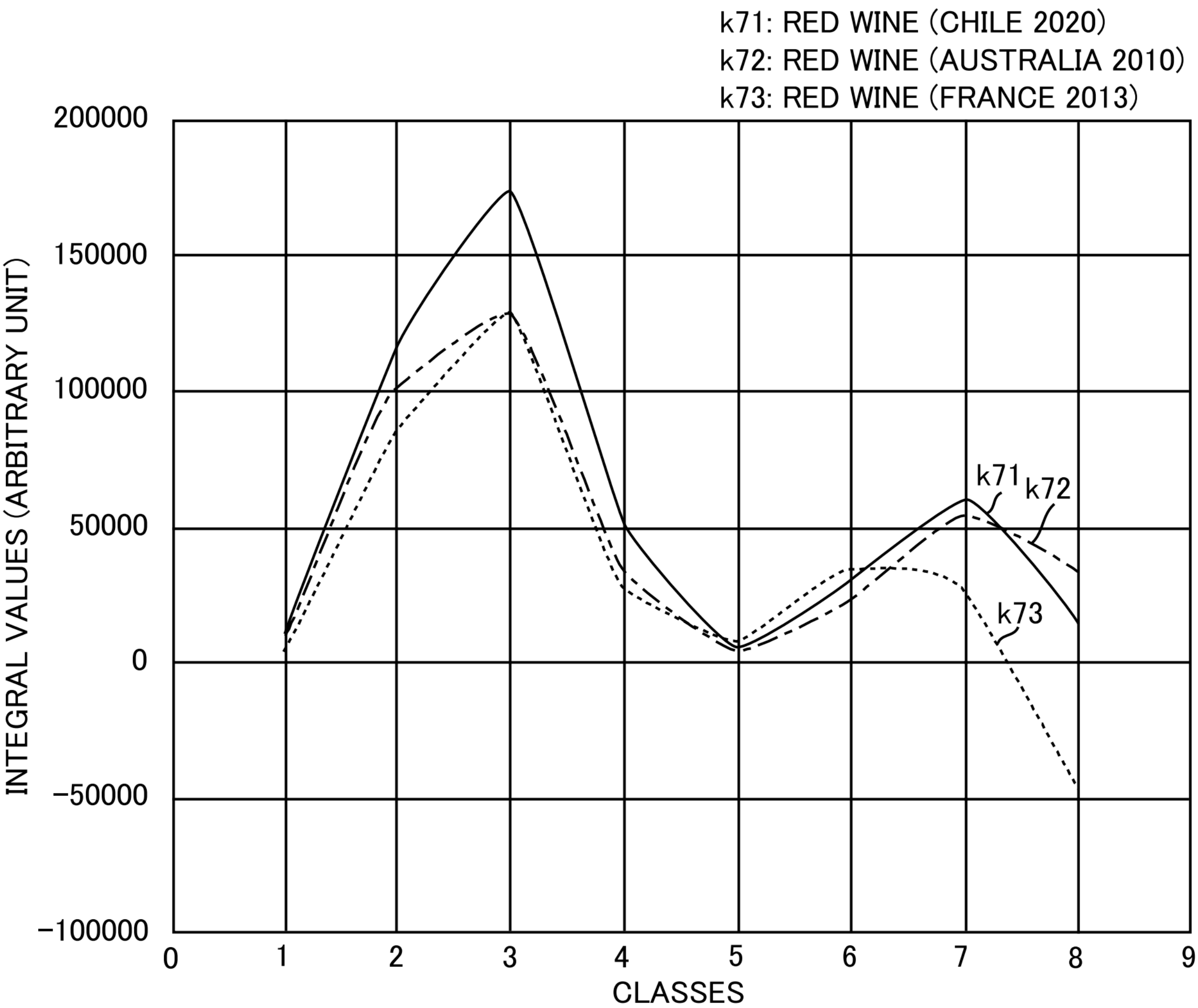
k71: RED WINE (CHILE 2020)
k72: RED WINE (AUSTRALIA 2010)
k73: RED WINE (FRANCE 2013)
200000
150000
100000
50000
0
−50000
−100000
INTEGRAL VALUES (ARBITRARY UNIT)
0
1
2
3
4
5
6
7
8
9
CLASSES
k71
k72
k73

Fig. 53

| NUMBER OF INTEGRAL VALUES: 8 | CURVE k71 | CURVE k72 | CURVE k73 |
|---|---|---|---|
| STANDARD DEVIATION OF DIFFERENCES BETWEEN MULTIPLE INTEGRAL VALUES ON CURVE k71 AND MULTIPLE INTEGRAL VALUES ON OTHER CURVES | | STANDARD DEVIATION DIFFERENCES $\sigma_{DF_k71,k72}$=34.73(%) | STANDARD DEVIATION DIFFERENCES $\sigma_{DF_k71,k73}$=67.65(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k72 AND MULTIPLE INTEGRAL VALUES ON OTHER CURVES | STANDARD DEVIATION DIFFERENCES $\sigma_{DF_k72,k71}$=34.73(%) | | STANDARD DEVIATION DIFFERENCES $\sigma_{DF_k72,k73}$=77.44(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k73 AND MULTIPLE INTEGRAL VALUES ON OTHER CURVES | STANDARD DEVIATION DIFFERENCES $\sigma_{DF_k73,k71}$=67.65(%) | STANDARD DEVIATION DIFFERENCES $\sigma_{DF_k73,k72}$=77.44(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 54

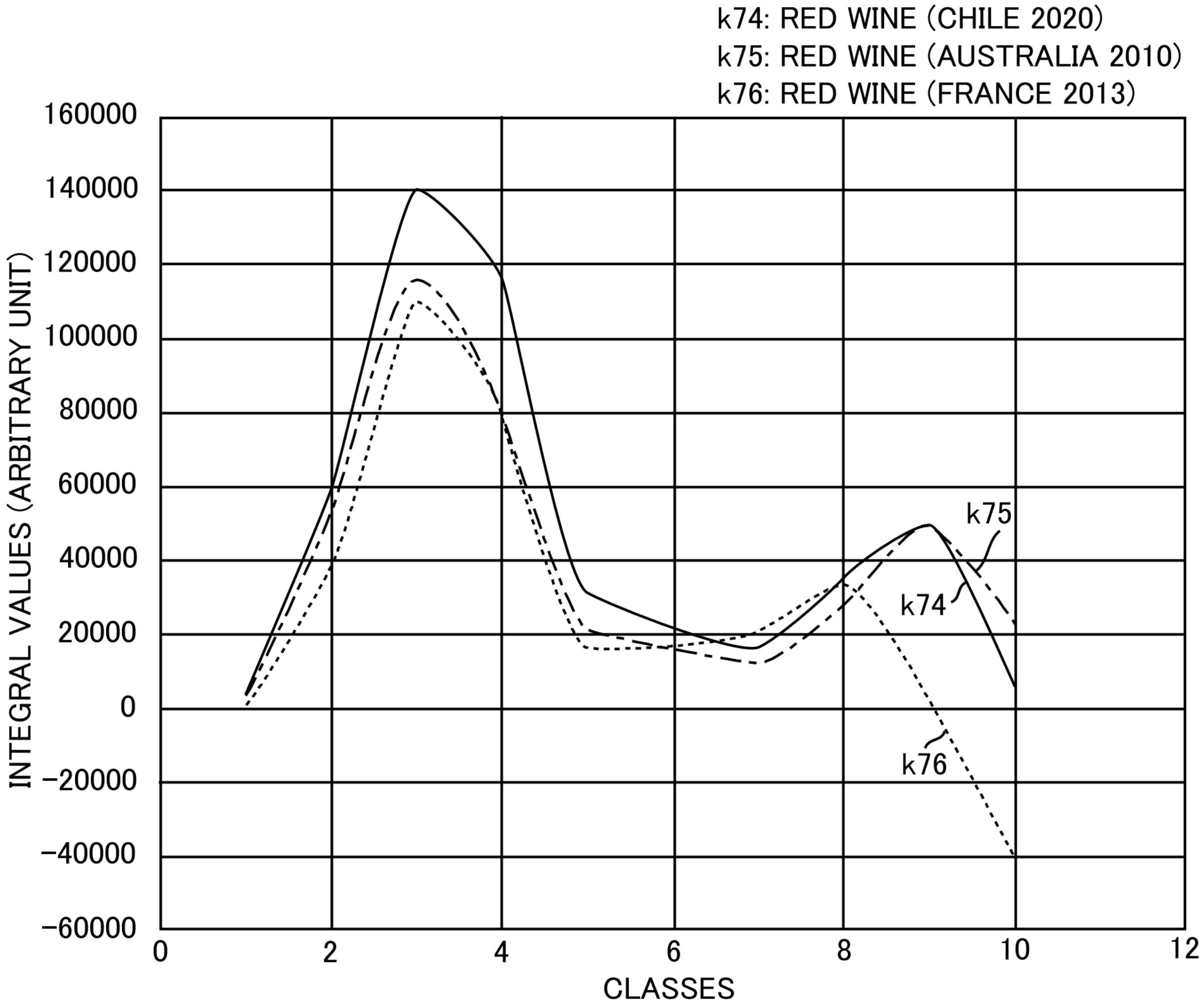
k74: RED WINE (CHILE 2020)
k75: RED WINE (AUSTRALIA 2010)
k76: RED WINE (FRANCE 2013)
160000
140000
120000
100000
80000
60000
40000
20000
0
−20000
−40000
−60000
INTEGRAL VALUES (ARBITRARY UNIT)
0
2
4
6
8
10
12
CLASSES
k75
k74
k76

Fig. 55

| NUMBER OF INTEGRAL VALUES: 10 | CURVE k74 | CURVE k75 | CURVE k76 |
|---|---|---|---|
| STANDARD DEVIATION OF DIFFERENCES BETWEEN MULTIPLE INTEGRAL VALUES ON CURVE k74 AND MULTIPLE INTEGRAL VALUES ON OTHER CURVES | | STANDARD DEVIATION DIFFERENCES $\sigma_{DF_k74,k75}$=45.00(%) | STANDARD DEVIATION DIFFERENCES $\sigma_{DF_k74,k76}$=77.58(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k75 AND MULTIPLE INTEGRAL VALUES ON OTHER CURVES | STANDARD DEVIATION DIFFERENCES $\sigma_{DF_k75,k74}$=45.00(%) | | STANDARD DEVIATION DIFFERENCES $\sigma_{DF_k75,k76}$=89.41(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k76 AND MULTIPLE INTEGRAL VALUES ON OTHER CURVES | STANDARD DEVIATION DIFFERENCES $\sigma_{DF_k76,k74}$=77.58(%) | STANDARD DEVIATION DIFFERENCES $\sigma_{DF_k76,k75}$=89.41(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 56

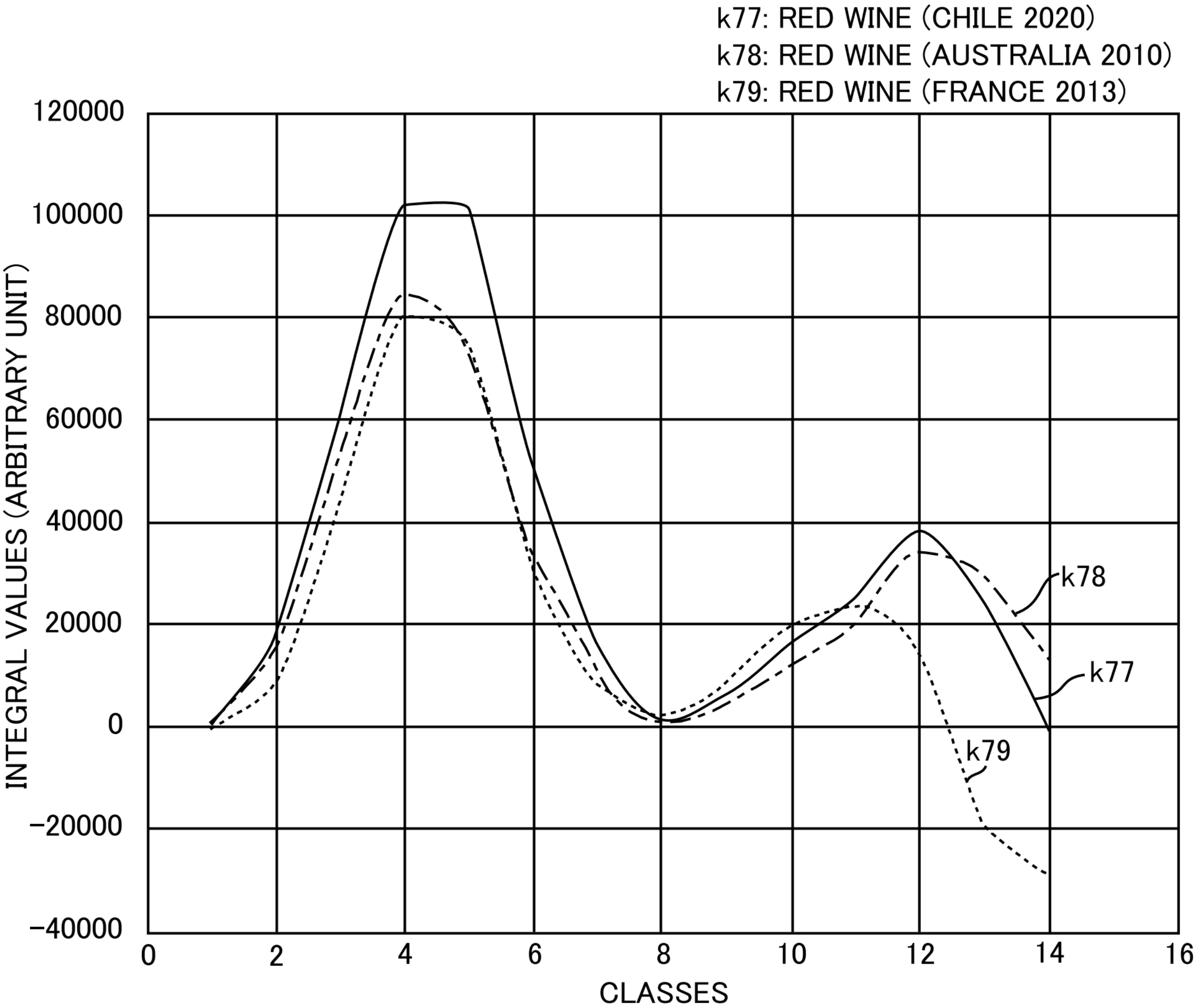
k77: RED WINE (CHILE 2020)
k78: RED WINE (AUSTRALIA 2010)
k79: RED WINE (FRANCE 2013)
INTEGRAL VALUES (ARBITRARY UNIT)
120000
100000
80000
60000
40000
20000
0
−20000
−40000
0
2
4
6
8
10
12
14
16
CLASSES
k78
k77
k79

Fig. 57

| NUMBER OF INTEGRAL VALUES: 14 | CURVE k77 | CURVE k78 | CURVE k79 |
|---|---|---|---|
| STANDARD DEVIATION OF DIFFERENCES BETWEEN MULTIPLE INTEGRAL VALUES ON CURVE k77 AND MULTIPLE INTEGRAL VALUES ON OTHER CURVES | | STANDARD DEVIATION DIFFERENCES $\sigma_{DF_k77,k78}$=61.41(%) | STANDARD DEVIATION DIFFERENCES $\sigma_{DF_k77,k79}$=78.91(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k78 AND MULTIPLE INTEGRAL VALUES ON OTHER CURVES | STANDARD DEVIATION DIFFERENCES $\sigma_{DF_k78,k77}$=61.41(%) | | STANDARD DEVIATION DIFFERENCES $\sigma_{DF_k78,k79}$=91.76(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k79 AND MULTIPLE INTEGRAL VALUES ON OTHER CURVES | STANDARD DEVIATION DIFFERENCES $\sigma_{DF_k79,k77}$=78.91(%) | STANDARD DEVIATION DIFFERENCES $\sigma_{DF_k79,k78}$=91.76(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 58

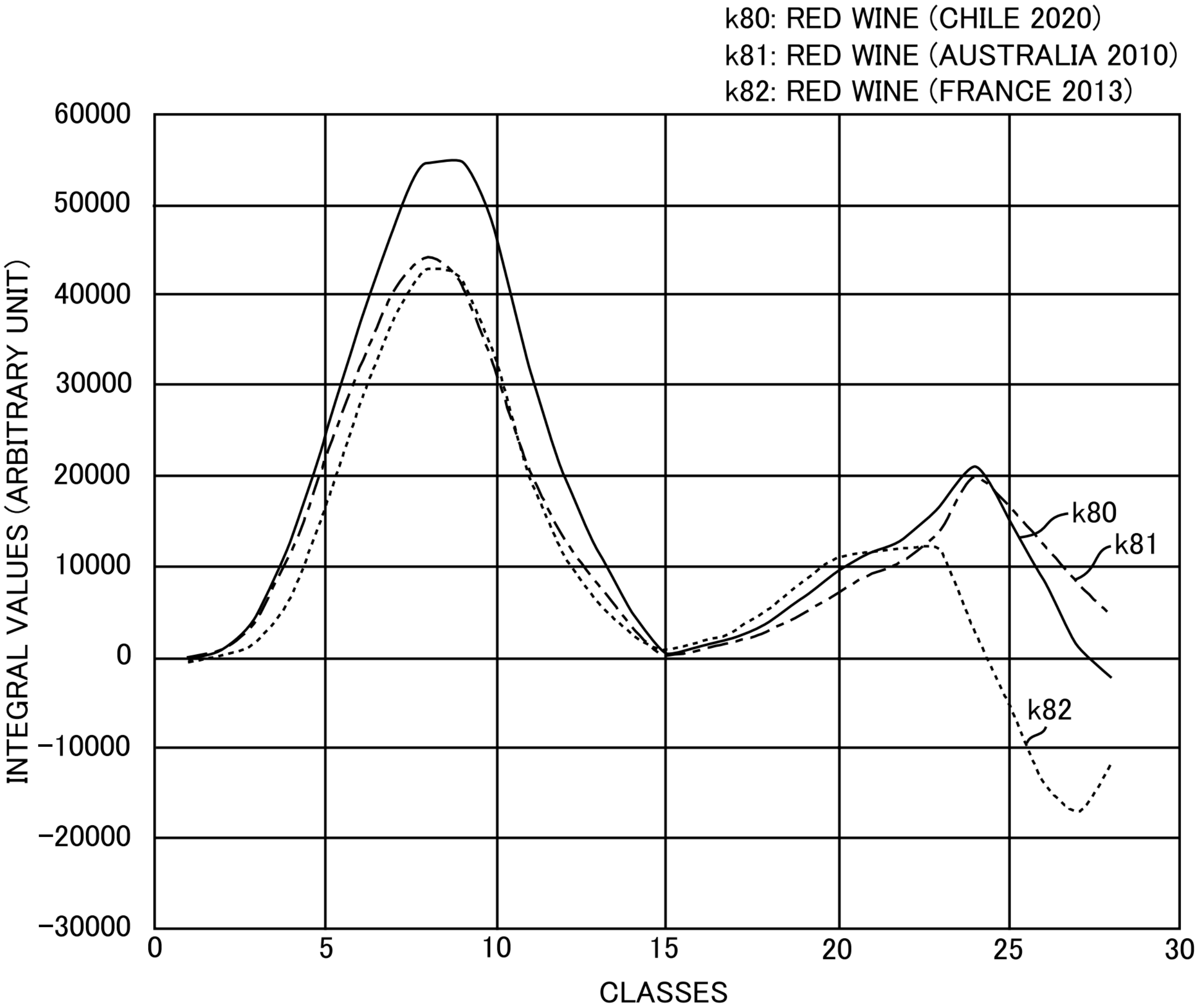
k80: RED WINE (CHILE 2020)
k81: RED WINE (AUSTRALIA 2010)
k82: RED WINE (FRANCE 2013)
60000
50000
40000
30000
20000
10000
0
−10000
−20000
−30000
INTEGRAL VALUES (ARBITRARY UNIT)
0
5
10
15
20
25
30
CLASSES
k80
k81
k82

Fig. 59

| NUMBER OF INTEGRAL VALUES: 28 | CURVE k80 | CURVE k81 | CURVE k82 |
|---|---|---|---|
| STANDARD DEVIATION OF DIFFERENCES BETWEEN MULTIPLE INTEGRAL VALUES ON CURVE k80 AND MULTIPLE INTEGRAL VALUES ON OTHER CURVES | | STANDARD DEVIATION DIFFERENCES $\sigma_{DF_k80,k81}$=58.15(%) | STANDARD DEVIATION DIFFERENCES $\sigma_{DF_k80,k82}$=71.16(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k81 AND MULTIPLE INTEGRAL VALUES ON OTHER CURVES | STANDARD DEVIATION DIFFERENCES $\sigma_{DF_k81,k80}$=58.15(%) | | STANDARD DEVIATION DIFFERENCES $\sigma_{DF_k81,k82}$=89.81(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k82 AND MULTIPLE INTEGRAL VALUES ON OTHER CURVES | STANDARD DEVIATION DIFFERENCES $\sigma_{DF_k82,k80}$=71.16(%) | STANDARD DEVIATION DIFFERENCES $\sigma_{DF_k82,k81}$=89.81(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 60

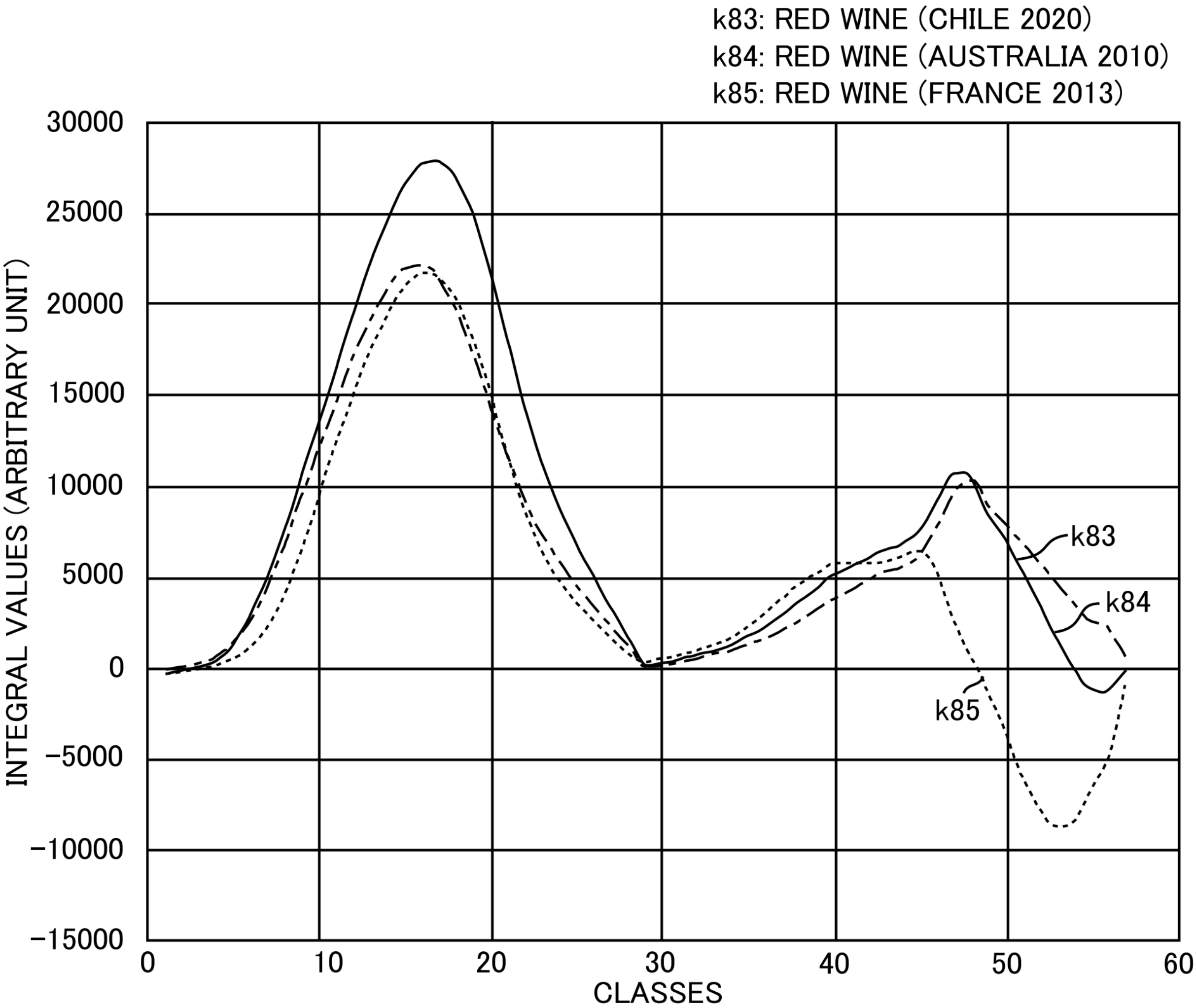
k83: RED WINE (CHILE 2020)
k84: RED WINE (AUSTRALIA 2010)
k85: RED WINE (FRANCE 2013)
INTEGRAL VALUES (ARBITRARY UNIT)
30000
25000
20000
15000
10000
5000
0
−5000
−10000
−15000
0
10
20
30
40
50
60
CLASSES
k83
k84
k85

Fig. 61

| NUMBER OF INTEGRAL VALUES: 57 | CURVE k83 | CURVE k84 | CURVE k85 |
|---|---|---|---|
| STANDARD DEVIATION OF DIFFERENCES BETWEEN MULTIPLE INTEGRAL VALUES ON CURVE k83 AND MULTIPLE INTEGRAL VALUES ON OTHER CURVES | | STANDARD DEVIATION DIFFERENCES $\sigma_{DF_k83,k84}$=67.36(%) | STANDARD DEVIATION DIFFERENCES $\sigma_{DF_k83,k85}$=76.13(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k84 AND MULTIPLE INTEGRAL VALUES ON OTHER CURVES | STANDARD DEVIATION DIFFERENCES $\sigma_{DF_k84,k83}$=67.36(%) | | STANDARD DEVIATION DIFFERENCES $\sigma_{DF_k84,k85}$=95.05(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k85 AND MULTIPLE INTEGRAL VALUES ON OTHER CURVES | STANDARD DEVIATION DIFFERENCES $\sigma_{DF_k85,k83}$=76.13(%) | STANDARD DEVIATION DIFFERENCES $\sigma_{DF_k85,k84}$=95.05(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 62

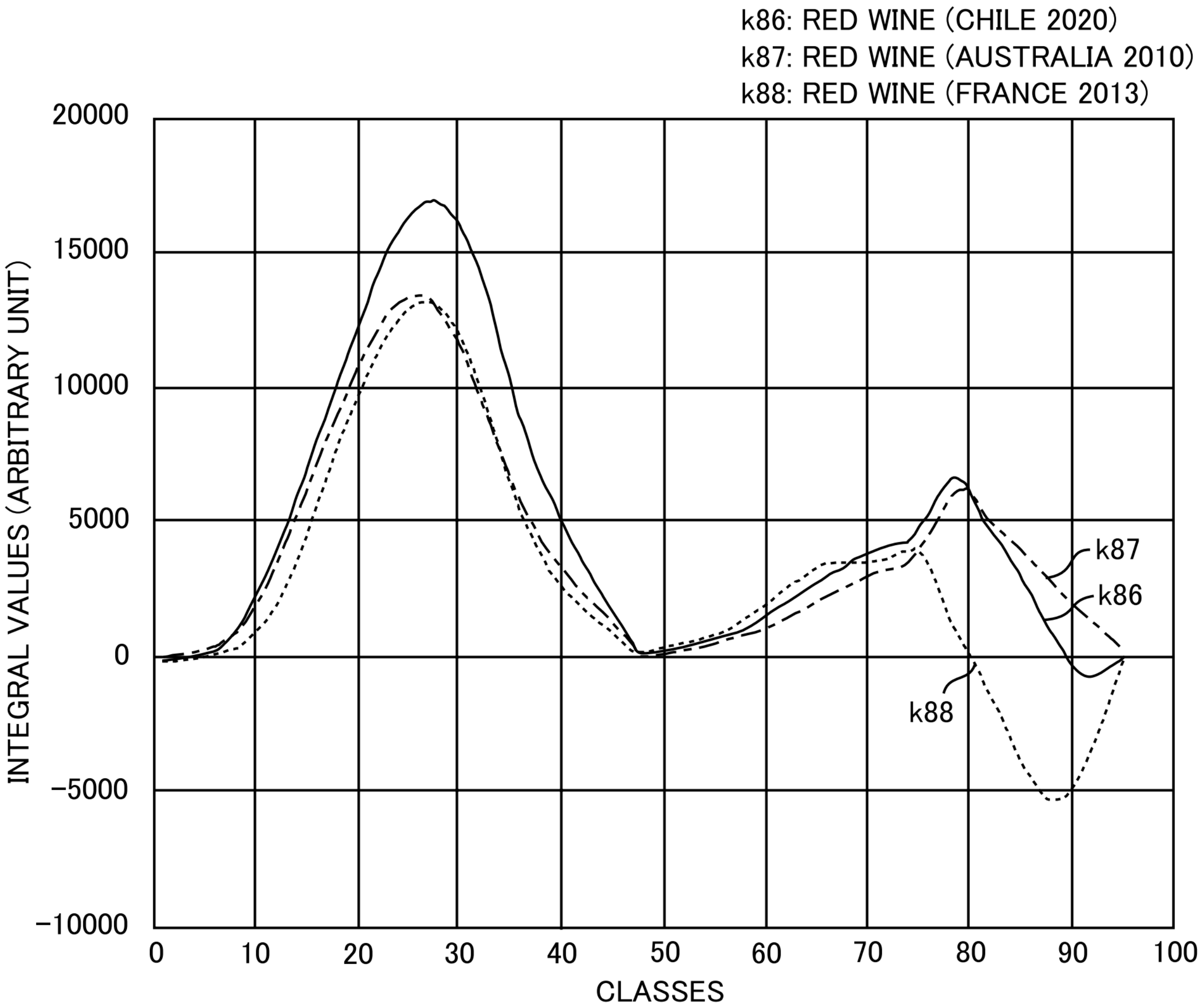
k86: RED WINE (CHILE 2020)
k87: RED WINE (AUSTRALIA 2010)
k88: RED WINE (FRANCE 2013)
20000
15000
10000
5000
0
−5000
−10000
INTEGRAL VALUES (ARBITRARY UNIT)
0
10
20
30
40
50
60
70
80
90
100
CLASSES
k87
k86
k88

Fig. 63

| NUMBER OF INTEGRAL VALUES: 95 | CURVE k86 | CURVE k87 | CURVE k88 |
|---|---|---|---|
| STANDARD DEVIATION OF DIFFERENCES BETWEEN MULTIPLE INTEGRAL VALUES ON CURVE k86 AND MULTIPLE INTEGRAL VALUES ON OTHER CURVES | | STANDARD DEVIATION DIFFERENCES $\sigma_{DF_k86,k87}$=65.84(%) | STANDARD DEVIATION DIFFERENCES $\sigma_{DF_k86,k88}$=75.14(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k87 AND MULTIPLE INTEGRAL VALUES ON OTHER CURVES | STANDARD DEVIATION DIFFERENCES $\sigma_{DF_k87,k86}$=65.84(%) | | STANDARD DEVIATION DIFFERENCES $\sigma_{DF_k87,k88}$=93.73(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k88 AND MULTIPLE INTEGRAL VALUES ON OTHER CURVES | STANDARD DEVIATION DIFFERENCES $\sigma_{DF_k88,k86}$=75.14(%) | STANDARD DEVIATION DIFFERENCES $\sigma_{DF_k88,k87}$=93.73(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 64

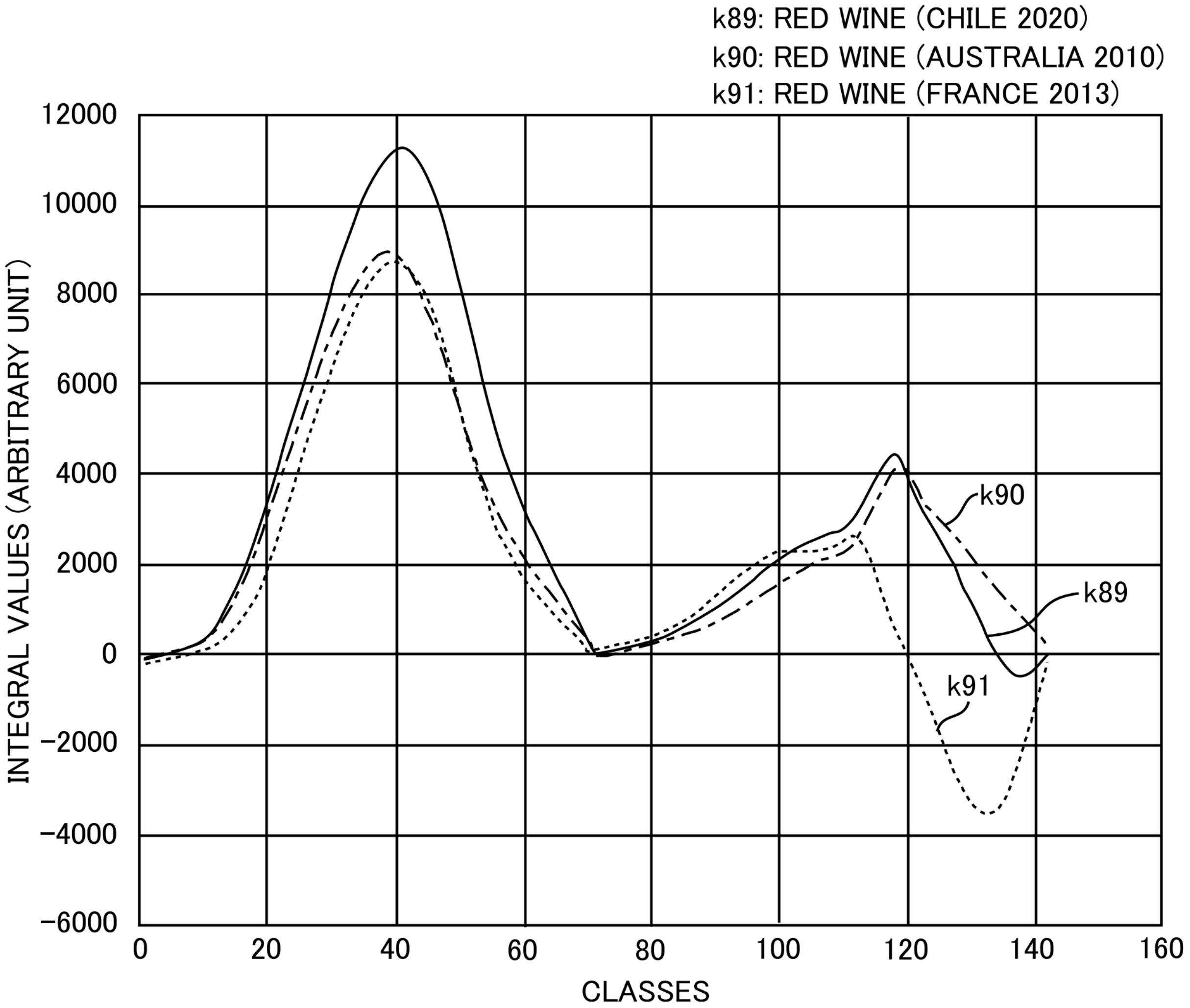
k89: RED WINE (CHILE 2020)
k90: RED WINE (AUSTRALIA 2010)
k91: RED WINE (FRANCE 2013)
12000
10000
8000
6000
4000
2000
0
−2000
−4000
−6000
INTEGRAL VALUES (ARBITRARY UNIT)
0
20
40
60
80
100
120
140
160
CLASSES
k90
k89
k91

Fig. 65

| NUMBER OF INTEGRAL VALUES: 142 | CURVE k89 | CURVE k90 | CURVE k91 |
|---|---|---|---|
| STANDARD DEVIATION OF DIFFERENCES BETWEEN MULTIPLE INTEGRAL VALUES ON CURVE k89 AND MULTIPLE INTEGRAL VALUES ON OTHER CURVES | | STANDARD DEVIATION DIFFERENCES $\sigma_{DF_k89,k90}$=66.26(%) | STANDARD DEVIATION DIFFERENCES $\sigma_{DF_k89,k91}$=75.30(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k90 AND MULTIPLE INTEGRAL VALUES ON OTHER CURVES | STANDARD DEVIATION DIFFERENCES $\sigma_{DF_k90,k89}$=66.26(%) | | STANDARD DEVIATION DIFFERENCES $\sigma_{DF_k90,k91}$=93.45(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k91 AND MULTIPLE INTEGRAL VALUES ON OTHER CURVES | STANDARD DEVIATION DIFFERENCES $\sigma_{DF_k91,k89}$=75.30(%) | STANDARD DEVIATION DIFFERENCES $\sigma_{DF_k91,k90}$=93.45(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 66

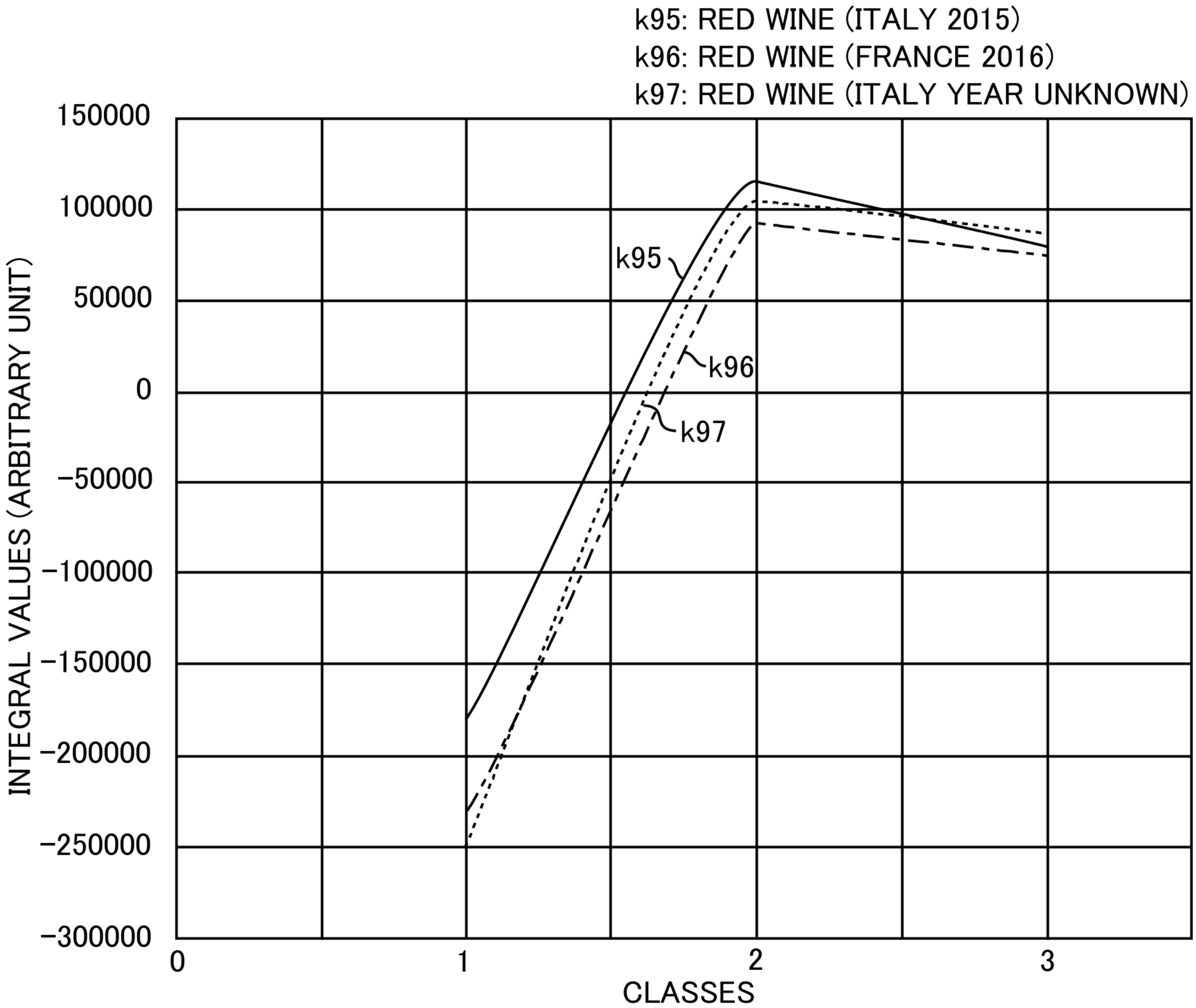
k95: RED WINE (ITALY 2015)
k96: RED WINE (FRANCE 2016)
k97: RED WINE (ITALY YEAR UNKNOWN)
150000
100000
50000
0
−50000
−100000
−150000
−200000
−250000
−300000
INTEGRAL VALUES (ARBITRARY UNIT)
0
1
2
3
CLASSES
k95
k96
k97

Fig. 67

| NUMBER OF INTEGRAL VALUES: 3 | CURVE k95 | CURVE k96 | CURVE k97 |
|---|---|---|---|
| STANDARD DEVIATION OF DIFFERENCES BETWEEN MULTIPLE INTEGRAL VALUES ON CURVE k95 AND MULTIPLE INTEGRAL VALUES ON OTHER CURVES | | STANDARD DEVIATION DIFFERENCES $\sigma_{DF_k95,k96}$=7.62(%) | STANDARD DEVIATION DIFFERENCES $\sigma_{DF_k95,k97}$=16.68(%) |
| THRESHOLD VALUE | | 15(%) | 15(%) |
| JUDGMENT RESULT | | × | ○ |
| STANDARD DEVIATION OF DIFFERENCES BETWEEN MULTIPLE INTEGRAL VALUES ON CURVE k96 AND MULTIPLE INTEGRAL VALUES ON OTHER CURVES | STANDARD DEVIATION DIFFERENCES $\sigma_{DF_k96,k95}$=7.62(%) | | STANDARD DEVIATION DIFFERENCES $\sigma_{DF_k96,k97}$=10.33(%) |
| THRESHOLD VALUE | 15(%) | | 15(%) |
| JUDGMENT RESULT | × | | × |
| STANDARD DEVIATION OF DIFFERENCES BETWEEN MULTIPLE INTEGRAL VALUES ON CURVE k97 AND MULTIPLE INTEGRAL VALUES ON OTHER CURVES | STANDARD DEVIATION DIFFERENCES $\sigma_{DF_k97,k95}$=16.68(%) | STANDARD DEVIATION DIFFERENCES $\sigma_{DF_k97,k96}$=10.33(%) | |
| THRESHOLD VALUE | 15(%) | 15(%) | |
| JUDGMENT RESULT | ○ | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 68

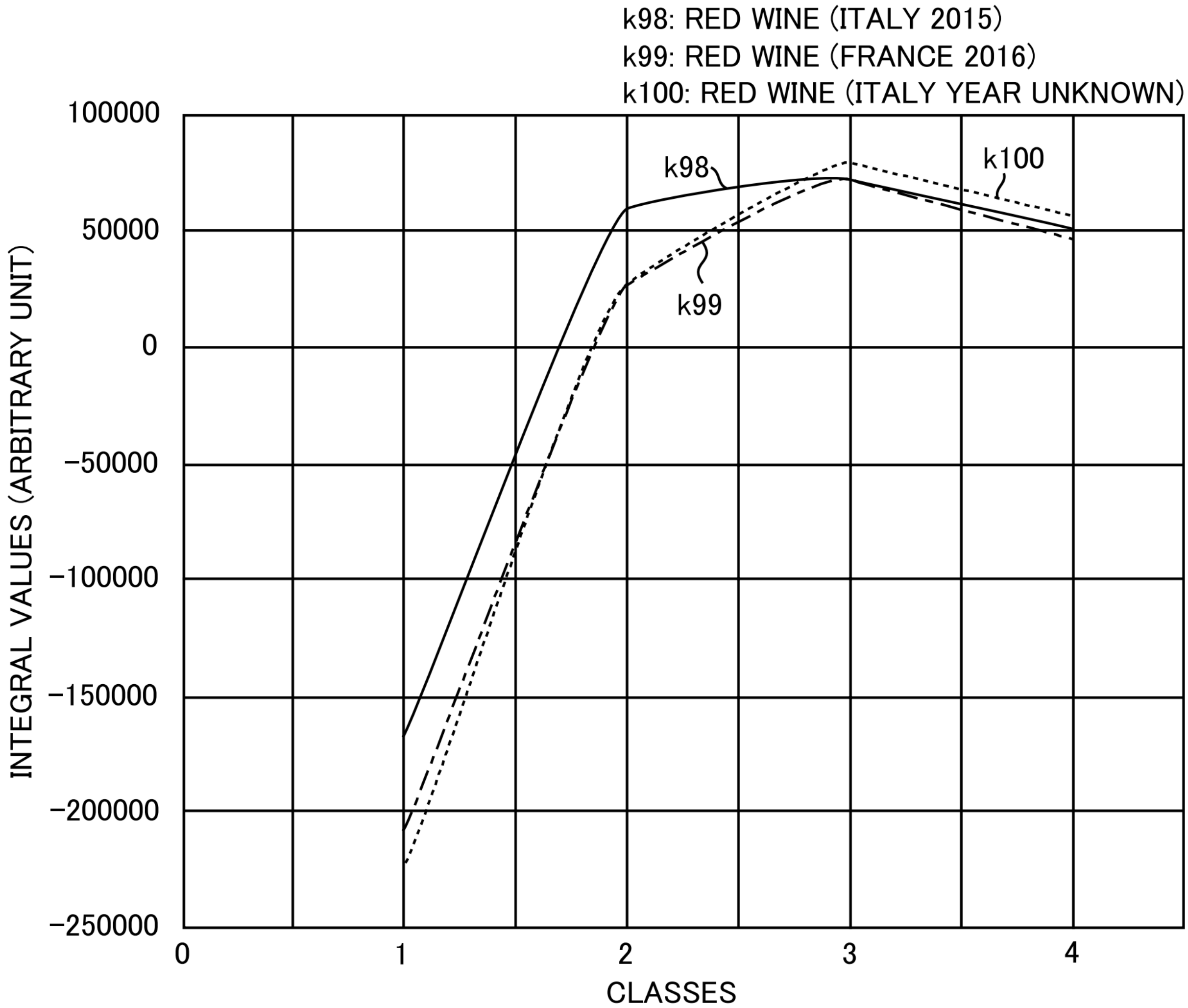
k98: RED WINE (ITALY 2015)
k99: RED WINE (FRANCE 2016)
k100: RED WINE (ITALY YEAR UNKNOWN)
100000
50000
0
−50000
−100000
−150000
−200000
−250000
INTEGRAL VALUES (ARBITRARY UNIT)
k98
k99
k100
0
1
2
3
4
CLASSES

Fig. 69

| NUMBER OF INTEGRAL VALUES: 4 | CURVE k98 | CURVE k99 | CURVE k100 |
|---|---|---|---|
| STANDARD DEVIATION OF DIFFERENCES BETWEEN MULTIPLE INTEGRAL VALUES ON CURVE k98 AND MULTIPLE INTEGRAL VALUES ON OTHER CURVES | | STANDARD DEVIATION DIFFERENCES $\sigma_{DF_k98,k99}$=30.51(%) | STANDARD DEVIATION DIFFERENCES $\sigma_{DF_k98,k100}$=35.29(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k99 AND MULTIPLE INTEGRAL VALUES ON OTHER CURVES | STANDARD DEVIATION DIFFERENCES $\sigma_{DF_k99,k98}$=30.51(%) | | STANDARD DEVIATION DIFFERENCES $\sigma_{DF_k99,k100}$=9.36(%) |
| THRESHOLD VALUE | 15(%) | | 15(%) |
| JUDGMENT RESULT | ○ | | × |
| STANDARD DEVIATION OF DIFFERENCES BETWEEN MULTIPLE INTEGRAL VALUES ON CURVE k100 AND MULTIPLE INTEGRAL VALUES ON OTHER CURVES | STANDARD DEVIATION DIFFERENCES $\sigma_{DF_k100,k98}$=35.29(%) | STANDARD DEVIATION DIFFERENCES $\sigma_{DF_k100,k99}$=9.36(%) | |
| THRESHOLD VALUE | 15(%) | 15(%) | |
| JUDGMENT RESULT | ○ | × | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 70

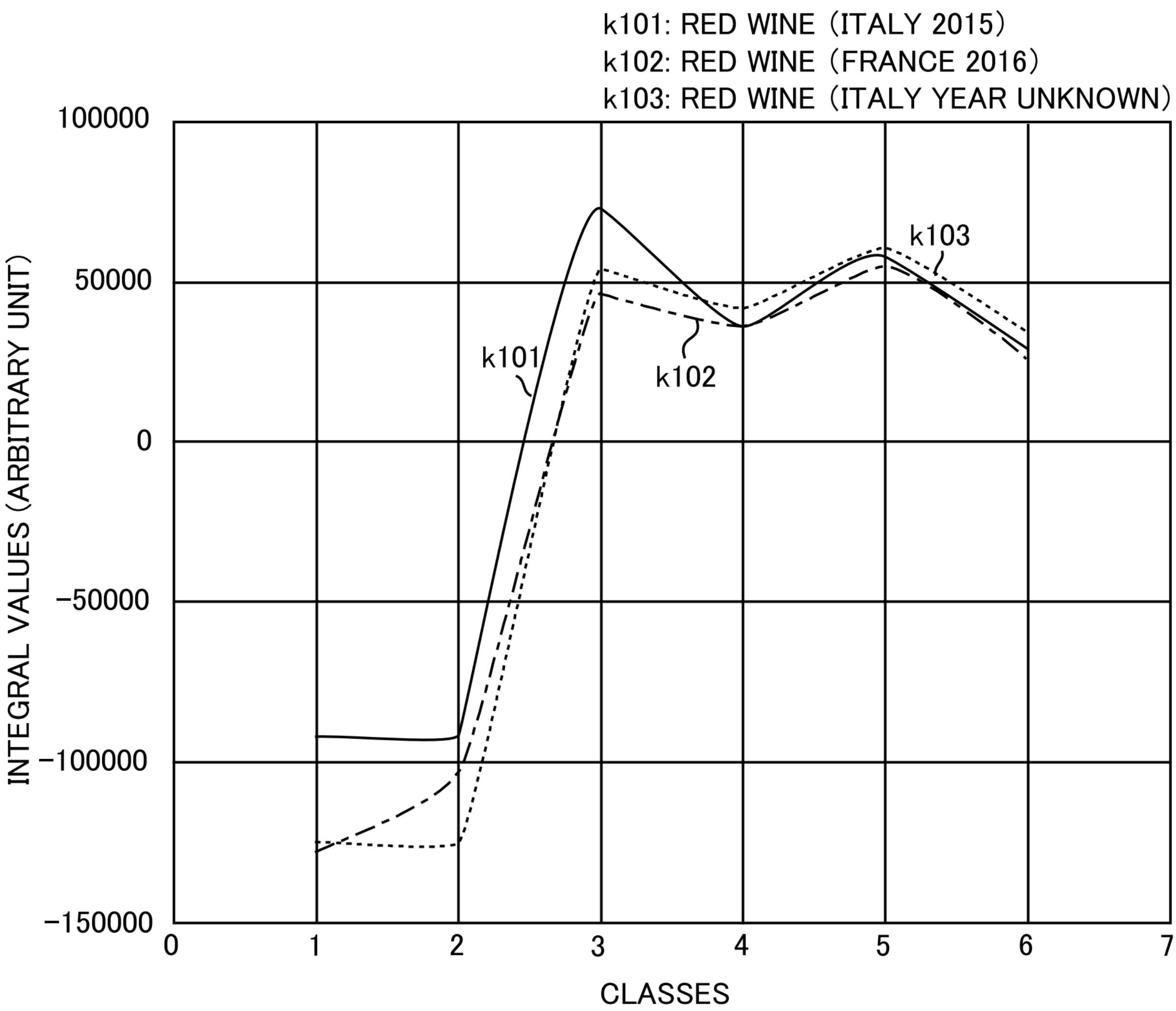
k101: RED WINE (ITALY 2015)
k102: RED WINE (FRANCE 2016)
k103: RED WINE (ITALY YEAR UNKNOWN)
100000
50000
0
−50000
−100000
−150000
INTEGRAL VALUES (ARBITRARY UNIT)
0
1
2
3
4
5
6
7
CLASSES
k101
k102
k103

Fig. 71

| NUMBER OF INTEGRAL VALUES: 6 | CURVE k101 | CURVE k102 | CURVE k103 |
|---|---|---|---|
| STANDARD DEVIATION OF DIFFERENCES BETWEEN MULTIPLE INTEGRAL VALUES ON CURVE k101 AND MULTIPLE INTEGRAL VALUES ON OTHER CURVES | | STANDARD DEVIATION DIFFERENCES $\sigma_{DF_k101,k102}$=16.42(%) | STANDARD DEVIATION DIFFERENCES $\sigma_{DF_k101,k103}$=21.20(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k102 AND MULTIPLE INTEGRAL VALUES ON OTHER CURVES | STANDARD DEVIATION DIFFERENCES $\sigma_{DF_k102,k101}$=16.42(%) | | STANDARD DEVIATION DIFFERENCES $\sigma_{DF_k102,k103}$=13.85(%) |
| THRESHOLD VALUE | 15(%) | | 15(%) |
| JUDGMENT RESULT | ○ | | × |
| STANDARD DEVIATION OF DIFFERENCES BETWEEN MULTIPLE INTEGRAL VALUES ON CURVE k103 AND MULTIPLE INTEGRAL VALUES ON OTHER CURVES | STANDARD DEVIATION DIFFERENCES $\sigma_{DF_k103,k101}$=21.20(%) | STANDARD DEVIATION DIFFERENCES $\sigma_{DF_k103,k102}$=13.85(%) | |
| THRESHOLD VALUE | 15(%) | 15(%) | |
| JUDGMENT RESULT | ○ | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 72

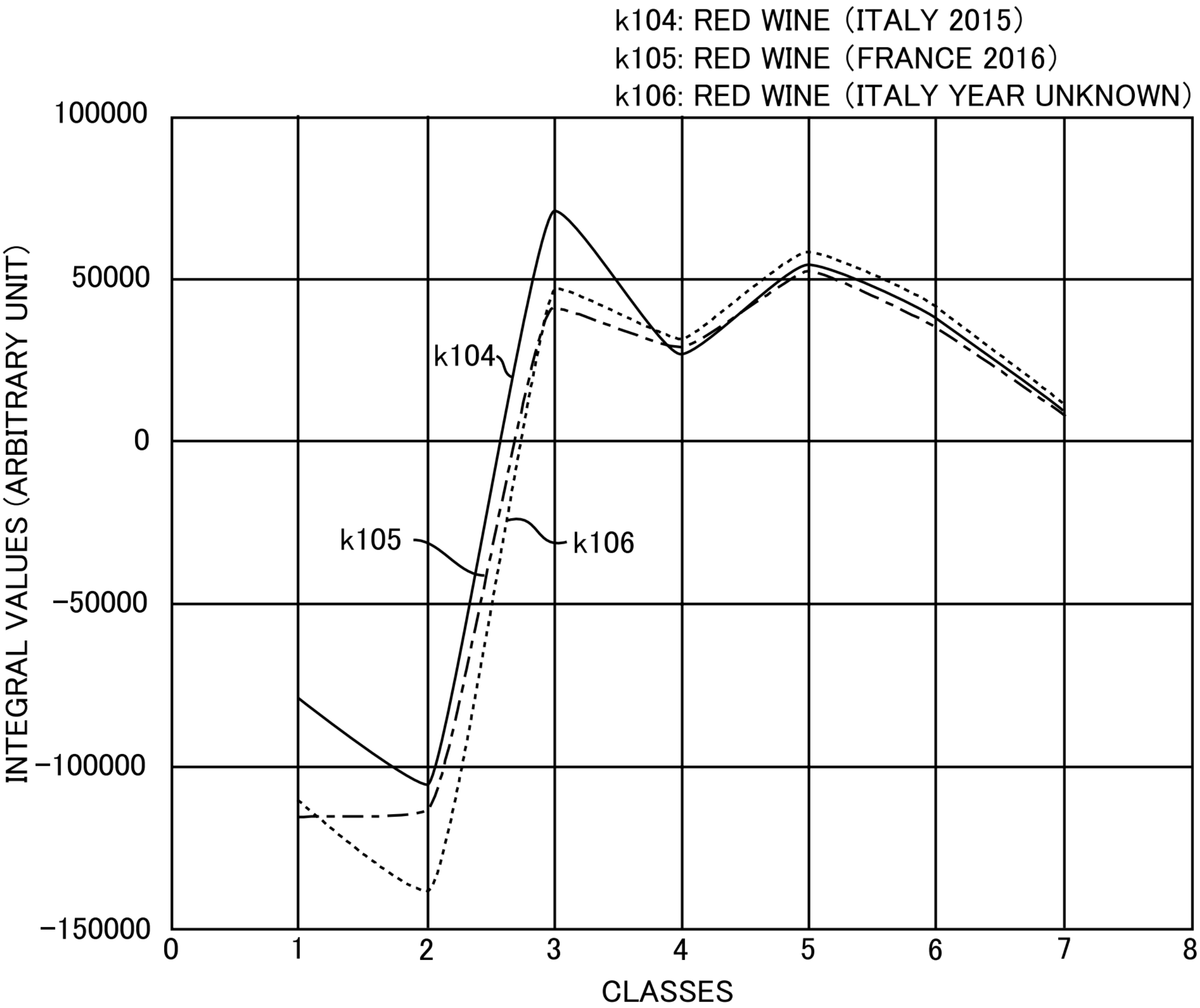
k104: RED WINE (ITALY 2015)
k105: RED WINE (FRANCE 2016)
k106: RED WINE (ITALY YEAR UNKNOWN)
100000
50000
0
−50000
−100000
−150000
INTEGRAL VALUES (ARBITRARY UNIT)
k104
k105
k106
0
1
2
3
4
5
6
7
8
CLASSES

Fig. 73

| NUMBER OF INTEGRAL VALUES: 7 | CURVE k104 | CURVE k105 | CURVE k106 |
|---|---|---|---|
| STANDARD DEVIATION OF DIFFERENCES BETWEEN MULTIPLE INTEGRAL VALUES ON CURVE k104 AND MULTIPLE INTEGRAL VALUES ON OTHER CURVES | | STANDARD DEVIATION DIFFERENCES $\sigma_{DF_k104,k105}$=20.05(%) | STANDARD DEVIATION DIFFERENCES $\sigma_{DF_k104,k106}$=23.59(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k105 AND MULTIPLE INTEGRAL VALUES ON OTHER CURVES | STANDARD DEVIATION DIFFERENCES $\sigma_{DF_k105,k104}$=20.05(%) | | STANDARD DEVIATION DIFFERENCES $\sigma_{DF_k105,k106}$=15.11(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k106 AND MULTIPLE INTEGRAL VALUES ON OTHER CURVES | STANDARD DEVIATION DIFFERENCES $\sigma_{DF_k106,k104}$=23.59(%) | STANDARD DEVIATION DIFFERENCES $\sigma_{DF_k106,k105}$=15.11(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 74

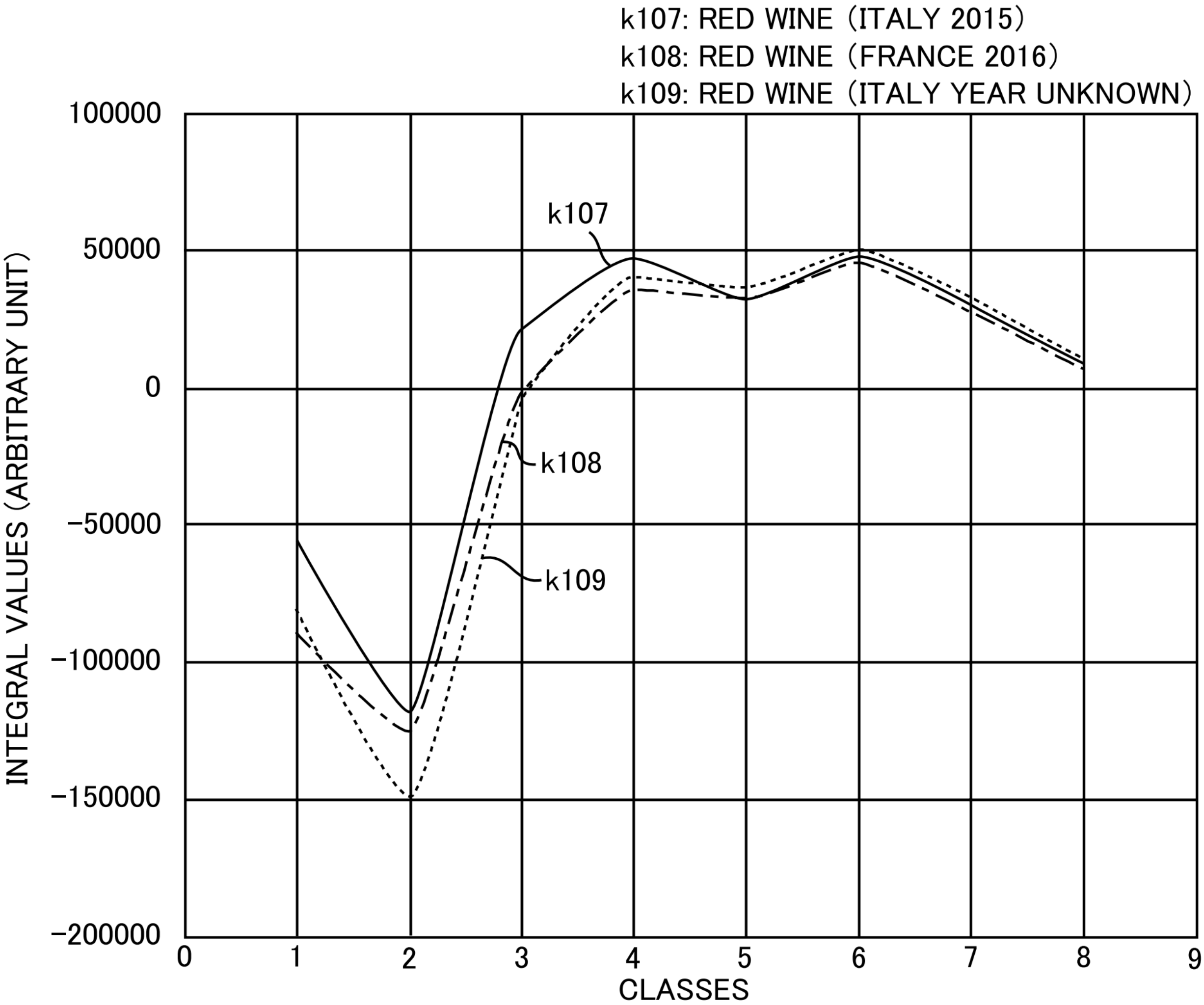
k107: RED WINE (ITALY 2015)
k108: RED WINE (FRANCE 2016)
k109: RED WINE (ITALY YEAR UNKNOWN)
100000
50000
0
−50000
−100000
−150000
−200000
INTEGRAL VALUES (ARBITRARY UNIT)
0
1
2
3
4
5
6
7
8
9
CLASSES
k107
k108
k109

Fig. 75

| NUMBER OF INTEGRAL VALUES: 8 | CURVE k107 | CURVE k108 | CURVE k109 |
|---|---|---|---|
| STANDARD DEVIATION OF DIFFERENCES BETWEEN MULTIPLE INTEGRAL VALUES ON CURVE k107 AND MULTIPLE INTEGRAL VALUES ON OTHER CURVES | | STANDARD DEVIATION DIFFERENCES $\sigma_{DF_k107,k108}$=62.94(%) | STANDARD DEVIATION DIFFERENCES $\sigma_{DF_k107,k109}$=67.43(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k108 AND MULTIPLE INTEGRAL VALUES ON OTHER CURVES | STANDARD DEVIATION DIFFERENCES $\sigma_{DF_k108,k107}$=62.94(%) | | STANDARD DEVIATION DIFFERENCES $\sigma_{DF_k108,k109}$=38.08(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k109 AND MULTIPLE INTEGRAL VALUES ON OTHER CURVES | STANDARD DEVIATION DIFFERENCES $\sigma_{DF_k109,k107}$=67.43(%) | STANDARD DEVIATION DIFFERENCES $\sigma_{DF_k109,k108}$=38.08(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 76

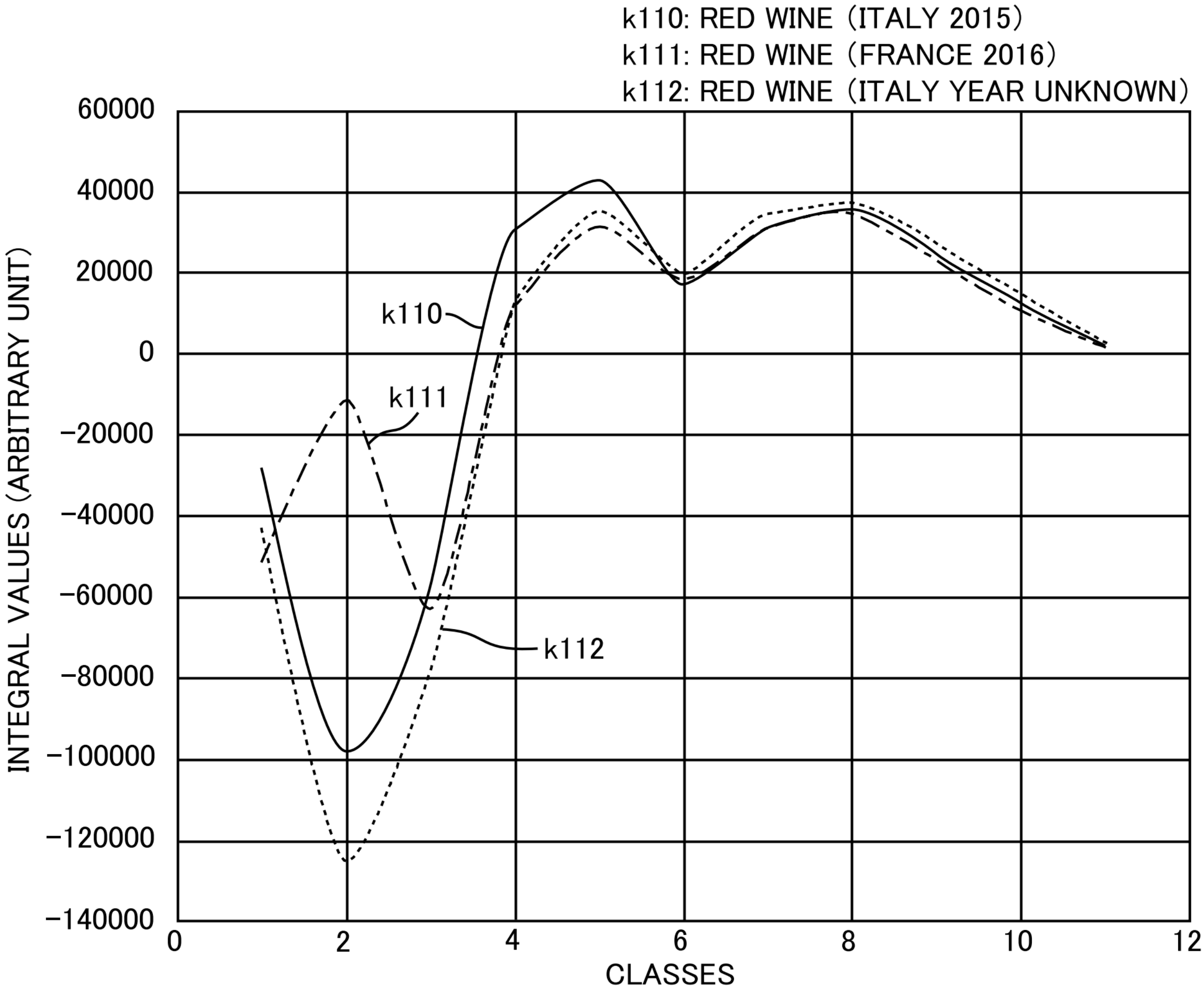
k110: RED WINE (ITALY 2015)
k111: RED WINE (FRANCE 2016)
k112: RED WINE (ITALY YEAR UNKNOWN)
60000
40000
20000
0
−20000
−40000
−60000
−80000
−100000
−120000
−140000
INTEGRAL VALUES (ARBITRARY UNIT)
k110
k111
k112
0
2
4
6
8
10
12
CLASSES

Fig. 77

| NUMBER OF INTEGRAL VALUES: 11 | CURVE k110 | CURVE k111 | CURVE k112 |
|---|---|---|---|
| STANDARD DEVIATION OF DIFFERENCES BETWEEN MULTIPLE INTEGRAL VALUES ON CURVE k110 AND MULTIPLE INTEGRAL VALUES ON OTHER CURVES | | STANDARD DEVIATION DIFFERENCES $\sigma_{DF_k110,k111}$=27.60(%) | STANDARD DEVIATION DIFFERENCES $\sigma_{DF_k110,k112}$=30.63(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k111 AND MULTIPLE INTEGRAL VALUES ON OTHER CURVES | STANDARD DEVIATION DIFFERENCES $\sigma_{DF_k111,k110}$=27.60(%) | | STANDARD DEVIATION DIFFERENCES $\sigma_{DF_k111,k112}$=16.41(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k112 AND MULTIPLE INTEGRAL VALUES ON OTHER CURVES | STANDARD DEVIATION DIFFERENCES $\sigma_{DF_k112,k110}$=30.63(%) | STANDARD DEVIATION DIFFERENCES $\sigma_{DF_k112,k111}$=16.41(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 78

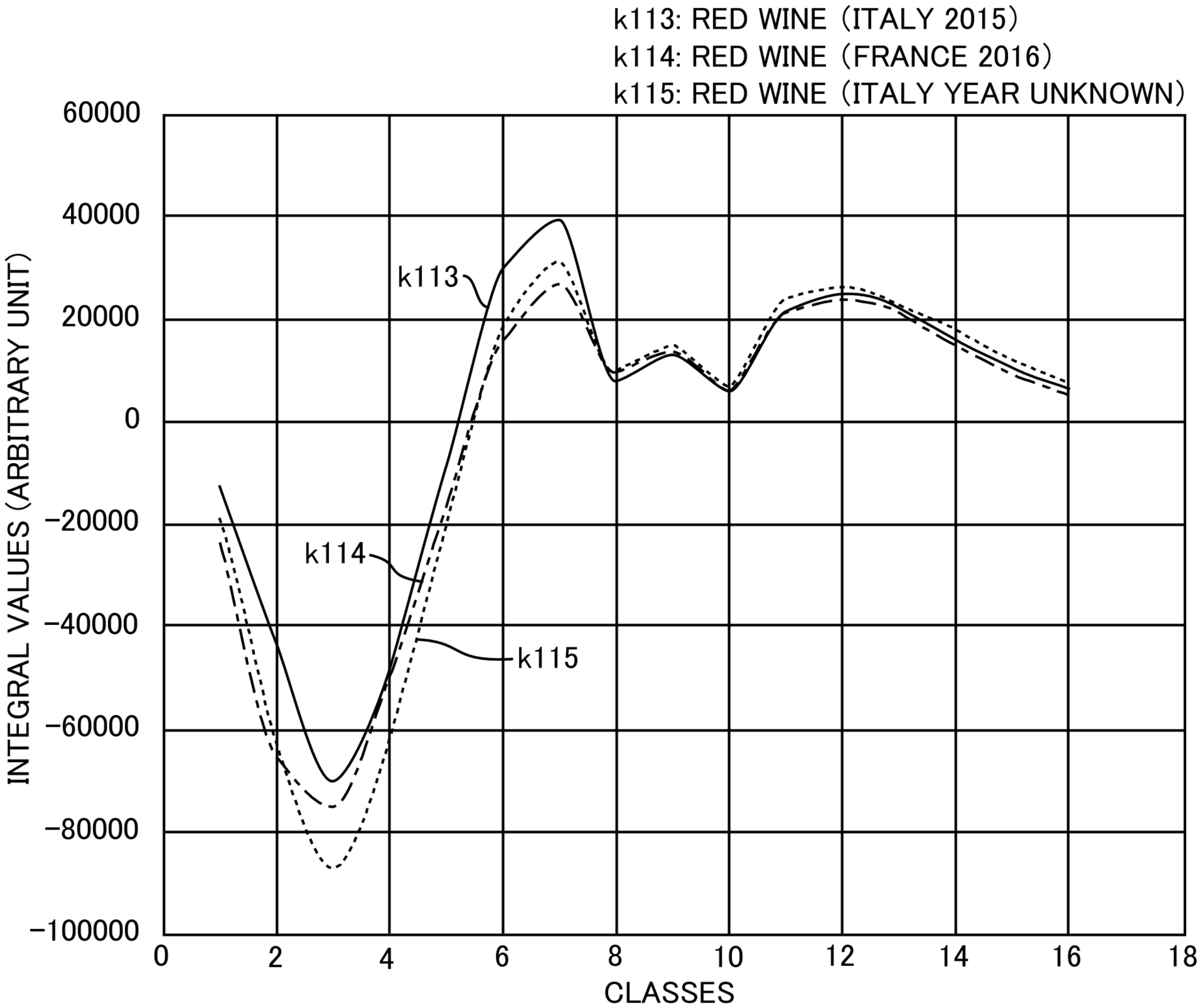
k113: RED WINE (ITALY 2015)
k114: RED WINE (FRANCE 2016)
k115: RED WINE (ITALY YEAR UNKNOWN)
60000
40000
20000
0
−20000
−40000
−60000
−80000
−100000
INTEGRAL VALUES (ARBITRARY UNIT)
0
2
4
6
8
10
12
14
16
18
CLASSES
k113
k114
k115

Fig. 79

| NUMBER OF INTEGRAL VALUES: 16 | CURVE k113 | CURVE k114 | CURVE k115 |
|---|---|---|---|
| STANDARD DEVIATION OF DIFFERENCES BETWEEN MULTIPLE INTEGRAL VALUES ON CURVE k113 AND MULTIPLE INTEGRAL VALUES ON OTHER CURVES | | STANDARD DEVIATION DIFFERENCES $\sigma_{DF_k113,k114}$=25.16(%) | STANDARD DEVIATION DIFFERENCES $\sigma_{DF_k113,k115}$=29.10(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k114 AND MULTIPLE INTEGRAL VALUES ON OTHER CURVES | STANDARD DEVIATION DIFFERENCES $\sigma_{DF_k114,k113}$=25.16(%) | | STANDARD DEVIATION DIFFERENCES $\sigma_{DF_k114,k115}$=16.01(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k115 AND MULTIPLE INTEGRAL VALUES ON OTHER CURVES | STANDARD DEVIATION DIFFERENCES $\sigma_{DF_k115,k113}$=29.10(%) | STANDARD DEVIATION DIFFERENCES $\sigma_{DF_k115,k114}$=16.01(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

Fig. 80

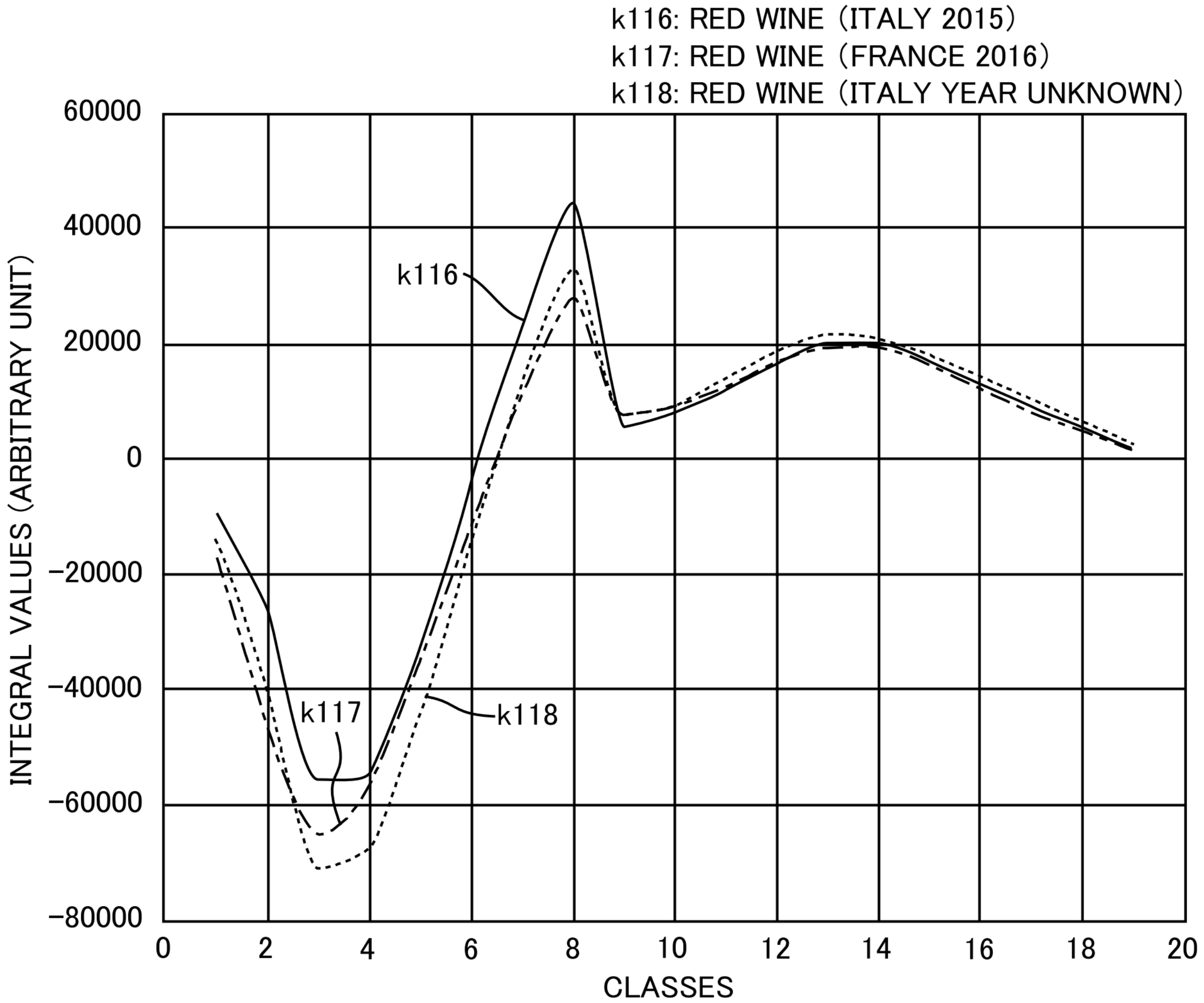
k116: RED WINE (ITALY 2015)
k117: RED WINE (FRANCE 2016)
k118: RED WINE (ITALY YEAR UNKNOWN)
INTEGRAL VALUES (ARBITRARY UNIT)
60000
40000
20000
0
−20000
−40000
−60000
−80000
0
2
4
6
8
10
12
14
16
18
20
CLASSES
k116
k117
k118

Fig. 81

| NUMBER OF INTEGRAL VALUES: 19 | CURVE k116 | CURVE k117 | CURVE k118 |
|---|---|---|---|
| STANDARD DEVIATION OF DIFFERENCES BETWEEN MULTIPLE INTEGRAL VALUES ON CURVE k116 AND MULTIPLE INTEGRAL VALUES ON OTHER CURVES | | STANDARD DEVIATION DIFFERENCES $\sigma_{DF_k116,k117}$=28.90(%) | STANDARD DEVIATION DIFFERENCES $\sigma_{DF_k116,k118}$=33.05(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k117 AND MULTIPLE INTEGRAL VALUES ON OTHER CURVES | STANDARD DEVIATION DIFFERENCES $\sigma_{DF_k117,k116}$=28.90(%) | | STANDARD DEVIATION DIFFERENCES $\sigma_{DF_k117,k118}$=17.31(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k118 AND MULTIPLE INTEGRAL VALUES ON OTHER CURVES | STANDARD DEVIATION DIFFERENCES $\sigma_{DF_k118,k116}$=33.05(%) | STANDARD DEVIATION DIFFERENCES $\sigma_{DF_k118,k117}$=17.31(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG. 82

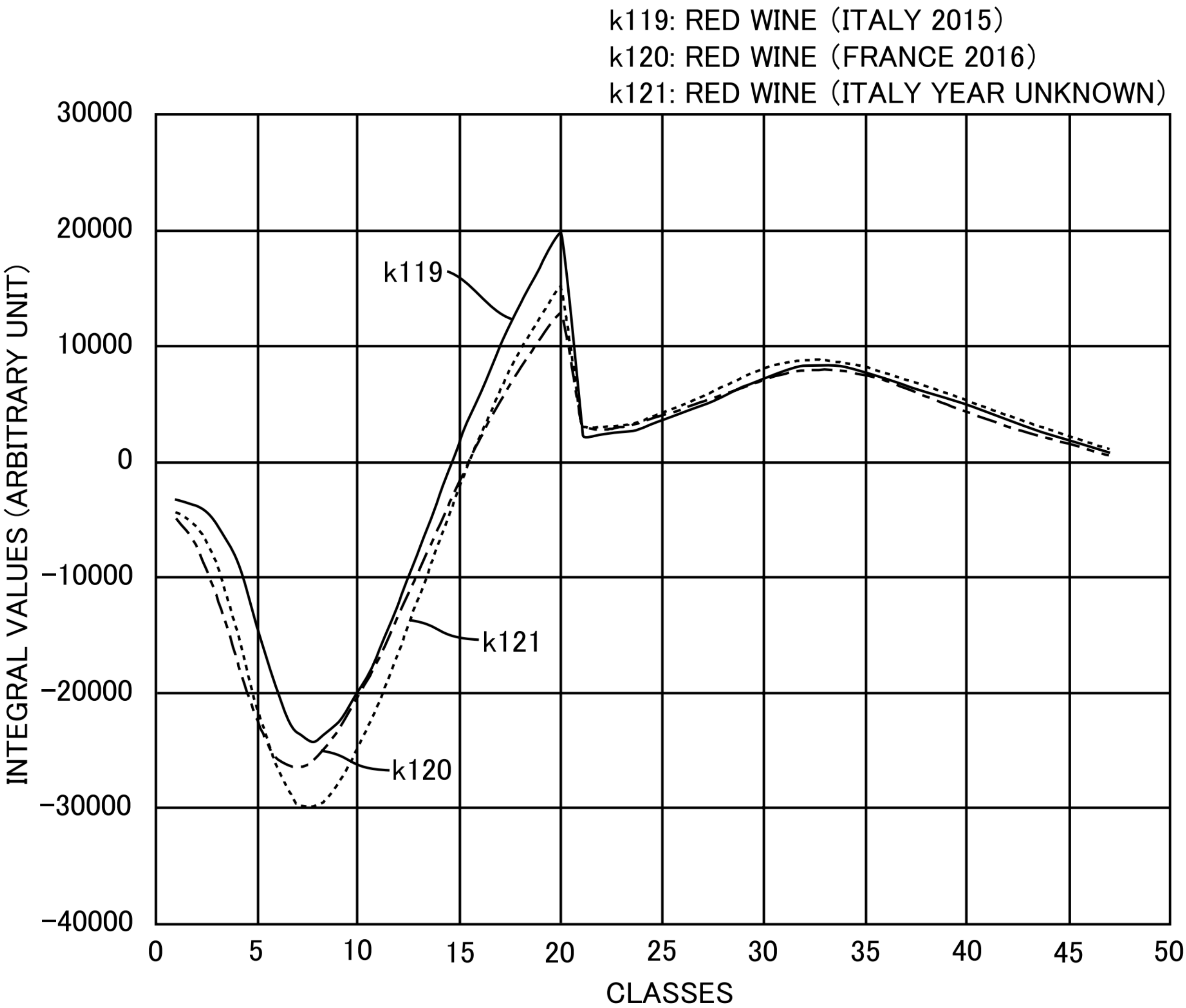
k119: RED WINE (ITALY 2015)
k120: RED WINE (FRANCE 2016)
k121: RED WINE (ITALY YEAR UNKNOWN)
30000
20000
10000
0
−10000
−20000
−30000
−40000
INTEGRAL VALUES (ARBITRARY UNIT)
k119
k121
k120
0
5
10
15
20
25
30
35
40
45
50
CLASSES

FIG. 83

| NUMBER OF INTEGRAL VALUES: 47 | CURVE k119 | CURVE k120 | CURVE k121 |
|---|---|---|---|
| STANDARD DEVIATION OF DIFFERENCES BETWEEN MULTIPLE INTEGRAL VALUES ON CURVE k119 AND MULTIPLE INTEGRAL VALUES ON OTHER CURVES | | STANDARD DEVIATION DIFFERENCES $\sigma_{DF_k119,k120}$=37.61(%) | STANDARD DEVIATION DIFFERENCES $\sigma_{DF_k119,k121}$=39.71(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k120 AND MULTIPLE INTEGRAL VALUES ON OTHER CURVES | STANDARD DEVIATION DIFFERENCES $\sigma_{DF_k120,k119}$=37.61(%) | | STANDARD DEVIATION DIFFERENCES $\sigma_{DF_k120,k121}$=17.49(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k121 AND MULTIPLE INTEGRAL VALUES ON OTHER CURVES | STANDARD DEVIATION DIFFERENCES $\sigma_{DF_k121,k119}$=39.71(%) | STANDARD DEVIATION DIFFERENCES $\sigma_{DF_k121,k120}$=17.49(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.84

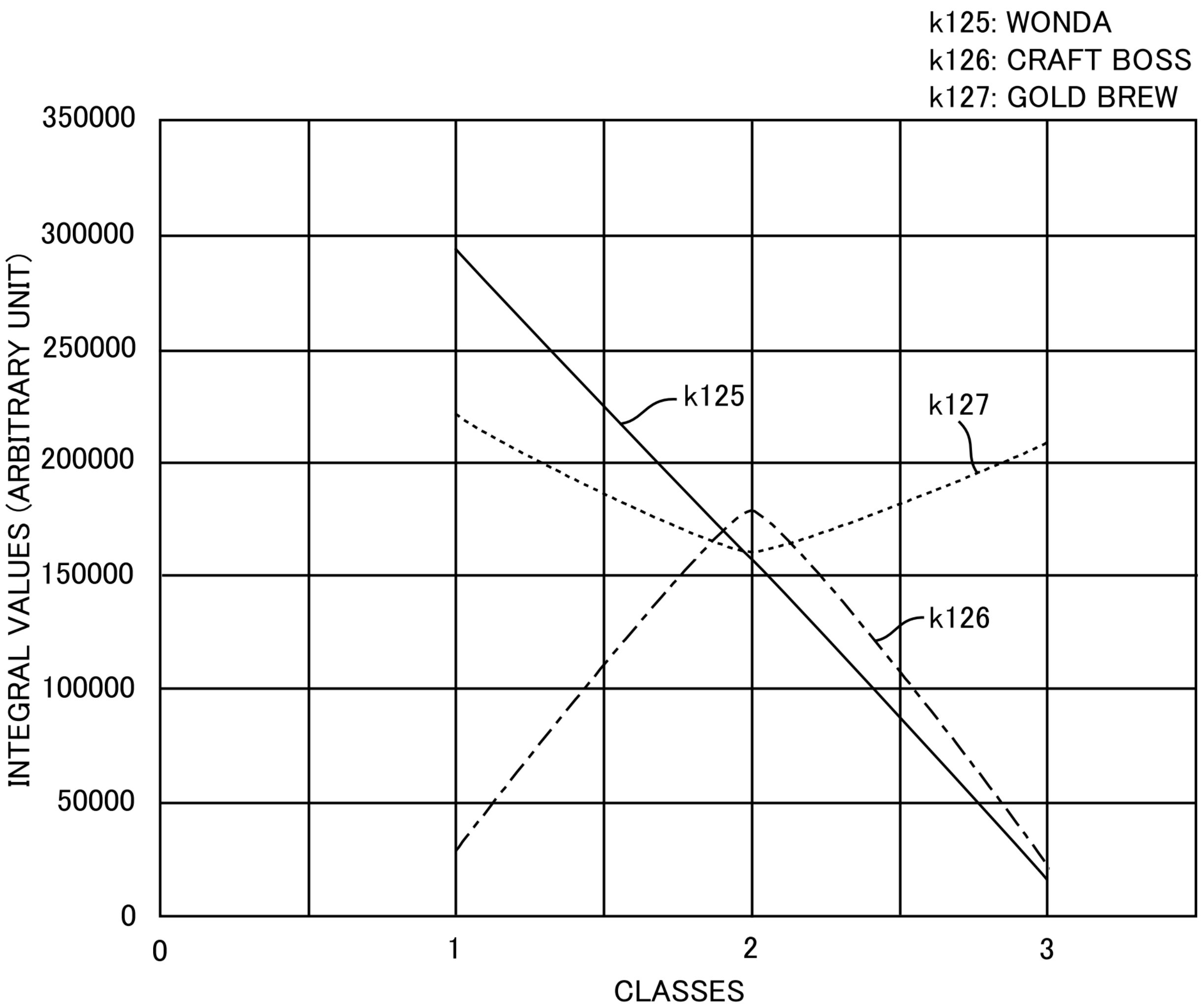
k125: WONDA
k126: CRAFT BOSS
k127: GOLD BREW
350000
300000
250000
200000
150000
100000
50000
0
INTEGRAL VALUES (ARBITRARY UNIT)
k125
k127
k126
0
1
2
3
CLASSES

FIG. 85

| NUMBER OF INTEGRAL VALUES: 3 | CURVE k125 | CURVE k126 | CURVE k127 |
|---|---|---|---|
| STANDARD DEVIATION OF DIFFERENCES BETWEEN MULTIPLE INTEGRAL VALUES ON CURVE k125 AND MULTIPLE INTEGRAL VALUES ON OTHER CURVES | | STANDARD DEVIATION DIFFERENCES $\sigma_{DF_k125,k126}$=10.36(%) | STANDARD DEVIATION DIFFERENCES $\sigma_{DF_k125,k127}$=21.07(%) |
| THRESHOLD VALUE | | 15(%) | 15(%) |
| JUDGMENT RESULT | | × | ○ |
| STANDARD DEVIATION OF DIFFERENCES BETWEEN MULTIPLE INTEGRAL VALUES ON CURVE k126 AND MULTIPLE INTEGRAL VALUES ON OTHER CURVES | STANDARD DEVIATION DIFFERENCES $\sigma_{DF_k126,k125}$=10.36(%) | | STANDARD DEVIATION DIFFERENCES $\sigma_{DF_k126,k127}$=10.73(%) |
| THRESHOLD VALUE | 15(%) | | 15(%) |
| JUDGMENT RESULT | × | | × |
| STANDARD DEVIATION OF DIFFERENCES BETWEEN MULTIPLE INTEGRAL VALUES ON CURVE k127 AND MULTIPLE INTEGRAL VALUES ON OTHER CURVES | STANDARD DEVIATION DIFFERENCES $\sigma_{DF_k127,k125}$=21.07(%) | STANDARD DEVIATION DIFFERENCES $\sigma_{DF_k127,k126}$=10.73(%) | |
| THRESHOLD VALUE | 15(%) | 15(%) | |
| JUDGMENT RESULT | ○ | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG. 86

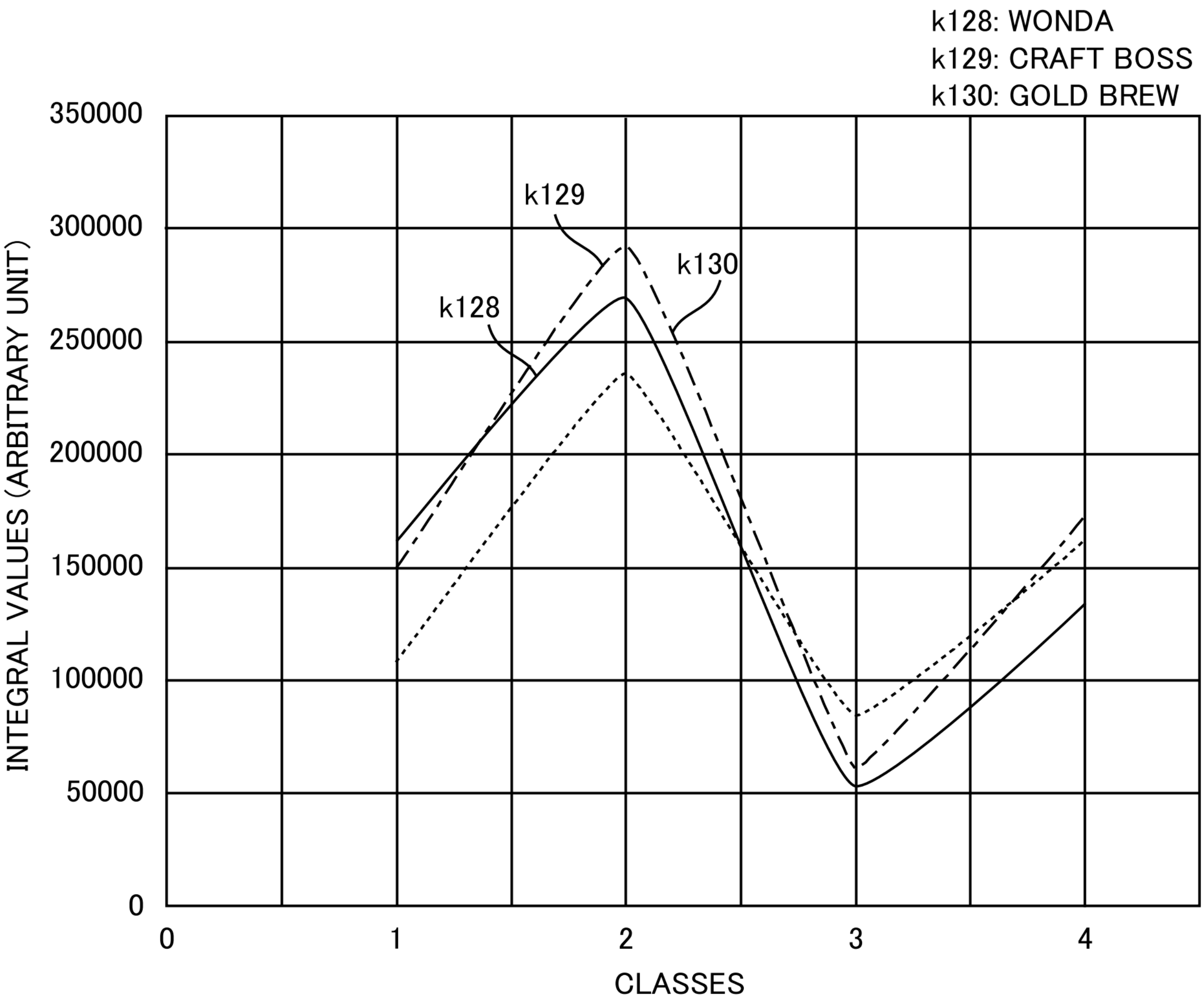
k128: WONDA
k129: CRAFT BOSS
k130: GOLD BREW
350000
300000
250000
200000
150000
100000
50000
0
INTEGRAL VALUES (ARBITRARY UNIT)
k129
k130
k128
0
1
2
3
4
CLASSES

FIG. 87

| NUMBER OF INTEGRAL VALUES: 4 | CURVE k128 | CURVE k129 | CURVE k130 |
|---|---|---|---|
| STANDARD DEVIATION OF DIFFERENCES BETWEEN MULTIPLE INTEGRAL VALUES ON CURVE k128 AND MULTIPLE INTEGRAL VALUES ON OTHER CURVES | | STANDARD DEVIATION DIFFERENCES $\sigma_{DF_k128,k129}$=11.64(%) | STANDARD DEVIATION DIFFERENCES $\sigma_{DF_k128,k130}$=39.98(%) |
| THRESHOLD VALUE | | 15(%) | 15(%) |
| JUDGMENT RESULT | | × | ○ |
| STANDARD DEVIATION OF DIFFERENCES BETWEEN MULTIPLE INTEGRAL VALUES ON CURVE k129 AND MULTIPLE INTEGRAL VALUES ON OTHER CURVES | STANDARD DEVIATION DIFFERENCES $\sigma_{DF_k129,k128}$=11.64(%) | | STANDARD DEVIATION DIFFERENCES $\sigma_{DF_k129,k130}$=24.26(%) |
| THRESHOLD VALUE | 15(%) | | 15(%) |
| JUDGMENT RESULT | × | | ○ |
| STANDARD DEVIATION OF DIFFERENCES BETWEEN MULTIPLE INTEGRAL VALUES ON CURVE k130 AND MULTIPLE INTEGRAL VALUES ON OTHER CURVES | STANDARD DEVIATION DIFFERENCES $\sigma_{DF_k130,k128}$=39.98(%) | STANDARD DEVIATION DIFFERENCES $\sigma_{DF_k130,k129}$=24.26(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.88

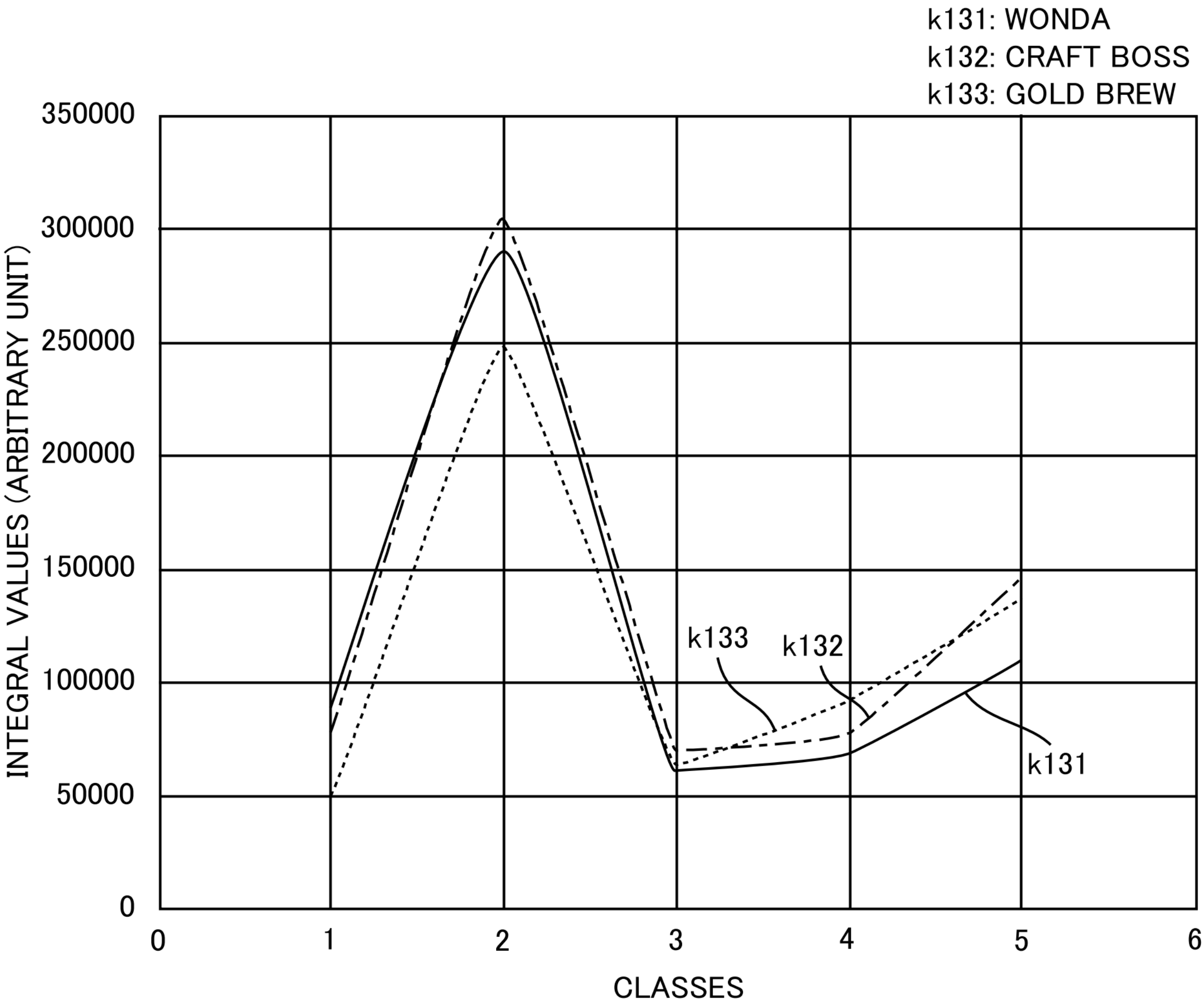
k131: WONDA
k132: CRAFT BOSS
k133: GOLD BREW
INTEGRAL VALUES (ARBITRARY UNIT)
350000
300000
250000
200000
150000
100000
50000
0
0
1
2
3
4
5
6
CLASSES
k133
k132
k131

FIG. 89

| NUMBER OF INTEGRAL VALUES: 5 | CURVE k131 | CURVE k132 | CURVE k133 |
|---|---|---|---|
| STANDARD DEVIATION OF DIFFERENCES BETWEEN MULTIPLE INTEGRAL VALUES ON CURVE k131 AND MULTIPLE INTEGRAL VALUES ON OTHER CURVES | | STANDARD DEVIATION DIFFERENCES $\sigma_{DF_k131,k132}$=13.44(%) | STANDARD DEVIATION DIFFERENCES $\sigma_{DF_k131,k133}$=30.78(%) |
| THRESHOLD VALUE | | 15(%) | 15(%) |
| JUDGMENT RESULT | | × | ○ |
| STANDARD DEVIATION OF DIFFERENCES BETWEEN MULTIPLE INTEGRAL VALUES ON CURVE k132 AND MULTIPLE INTEGRAL VALUES ON OTHER CURVES | STANDARD DEVIATION DIFFERENCES $\sigma_{DF_k132,k131}$=13.44(%) | | STANDARD DEVIATION DIFFERENCES $\sigma_{DF_k132,k133}$=19.88(%) |
| THRESHOLD VALUE | 15(%) | | 15(%) |
| JUDGMENT RESULT | × | | ○ |
| STANDARD DEVIATION OF DIFFERENCES BETWEEN MULTIPLE INTEGRAL VALUES ON CURVE k133 AND MULTIPLE INTEGRAL VALUES ON OTHER CURVES | STANDARD DEVIATION DIFFERENCES $\sigma_{DF_k133,k131}$=30.78(%) | STANDARD DEVIATION DIFFERENCES $\sigma_{DF_k133,k132}$=19.88(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG. 90

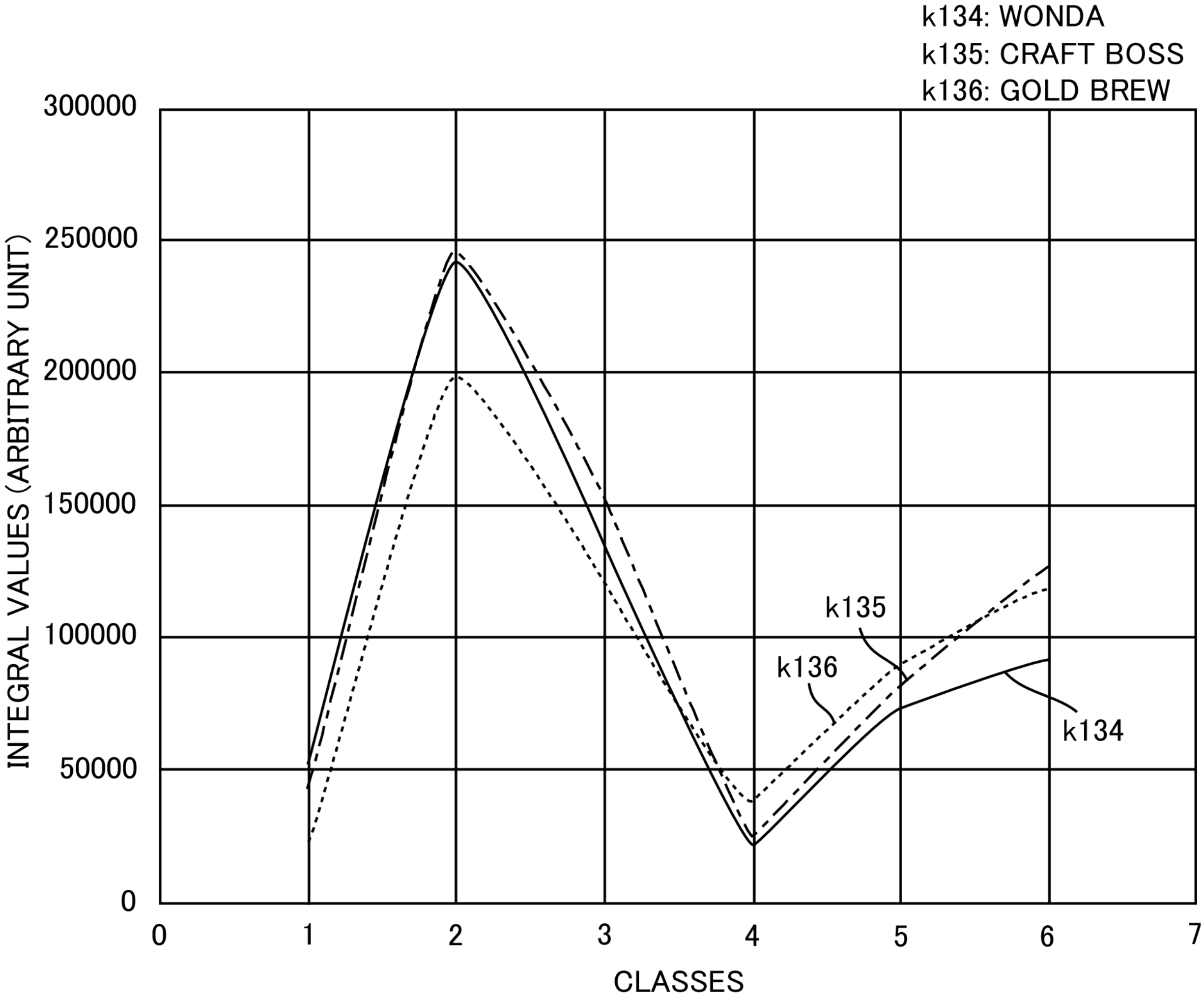
k134: WONDA
k135: CRAFT BOSS
k136: GOLD BREW
300000
250000
200000
150000
100000
50000
0
INTEGRAL VALUES (ARBITRARY UNIT)
0
1
2
3
4
5
6
7
CLASSES
k135
k136
k134

FIG. 91

| NUMBER OF INTEGRAL VALUES: 6 | CURVE k134 | CURVE k135 | CURVE k136 |
|---|---|---|---|
| STANDARD DEVIATION OF DIFFERENCES BETWEEN MULTIPLE INTEGRAL VALUES ON CURVE k134 AND MULTIPLE INTEGRAL VALUES ON OTHER CURVES | | STANDARD DEVIATION DIFFERENCES $\sigma_{DF_k134,k135}$=15.26(%) | STANDARD DEVIATION DIFFERENCES $\sigma_{DF_k134,k136}$=41.83(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k135 AND MULTIPLE INTEGRAL VALUES ON OTHER CURVES | STANDARD DEVIATION DIFFERENCES $\sigma_{DF_k135,k134}$=15.26(%) | | STANDARD DEVIATION DIFFERENCES $\sigma_{DF_k135,k136}$=31.27(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k136 AND MULTIPLE INTEGRAL VALUES ON OTHER CURVES | STANDARD DEVIATION DIFFERENCES $\sigma_{DF_k136,k134}$=41.83(%) | STANDARD DEVIATION DIFFERENCES $\sigma_{DF_k136,k135}$=31.27(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.92

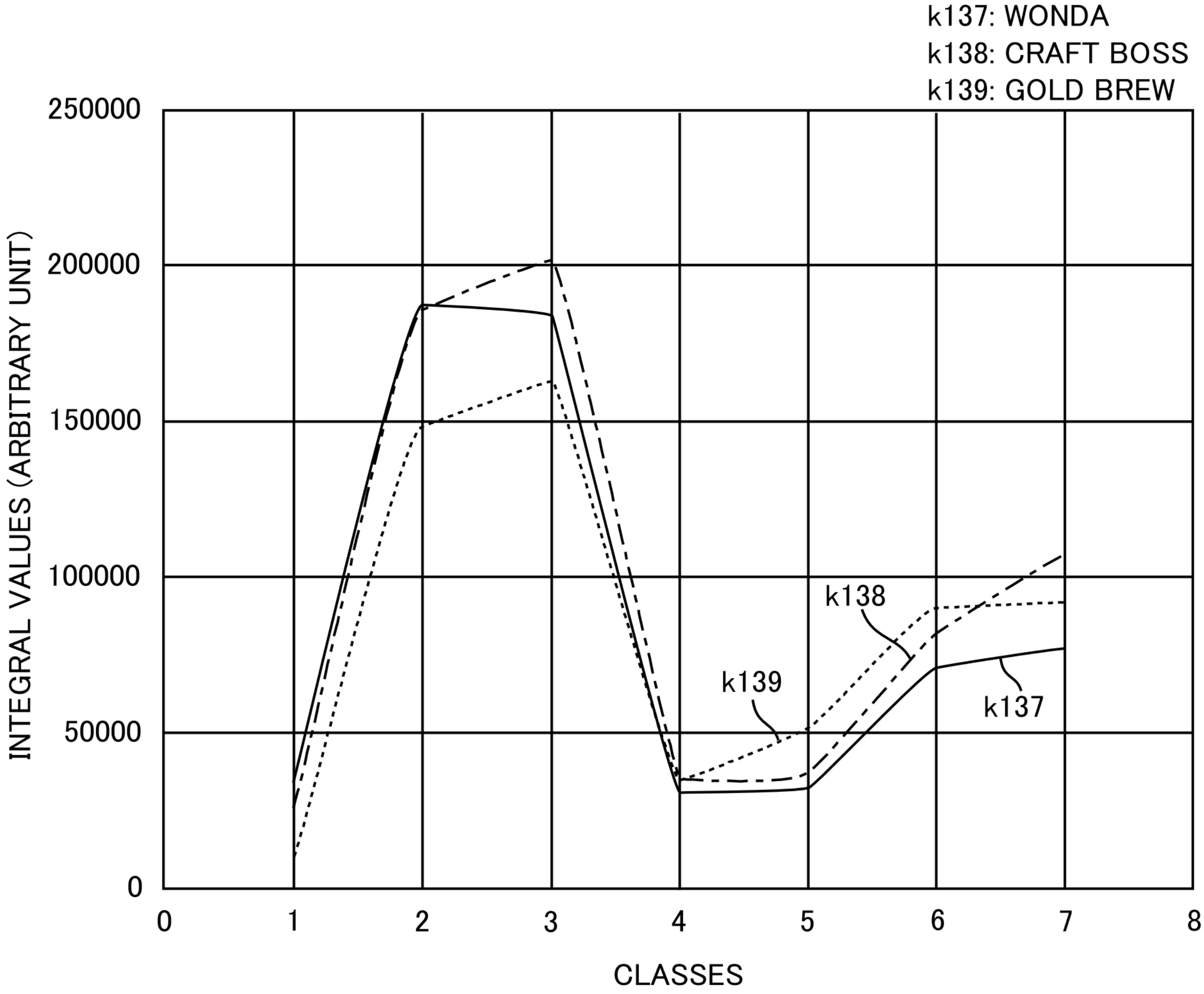
k137: WONDA
k138: CRAFT BOSS
k139: GOLD BREW
INTEGRAL VALUES (ARBITRARY UNIT)
250000
200000
150000
100000
50000
0
0
1
2
3
4
5
6
7
8
CLASSES
k138
k139
k137

FIG. 93

| NUMBER OF INTEGRAL VALUES: 7 | CURVE k137 | CURVE k138 | CURVE k139 |
|---|---|---|---|
| STANDARD DEVIATION OF DIFFERENCES BETWEEN MULTIPLE INTEGRAL VALUES ON CURVE k137 AND MULTIPLE INTEGRAL VALUES ON OTHER CURVES | | STANDARD DEVIATION DIFFERENCES $\sigma_{DF_k137,k138}$=16.64(%) | STANDARD DEVIATION DIFFERENCES $\sigma_{DF_k137,k139}$=45.35(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k138 AND MULTIPLE INTEGRAL VALUES ON OTHER CURVES | STANDARD DEVIATION DIFFERENCES $\sigma_{DF_k138,k137}$=16.64(%) | | STANDARD DEVIATION DIFFERENCES $\sigma_{DF_k138,k139}$=33.46(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k139 AND MULTIPLE INTEGRAL VALUES ON OTHER CURVES | STANDARD DEVIATION DIFFERENCES $\sigma_{DF_k139,k137}$=45.35(%) | STANDARD DEVIATION DIFFERENCES $\sigma_{DF_k139,k138}$=33.46(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.94

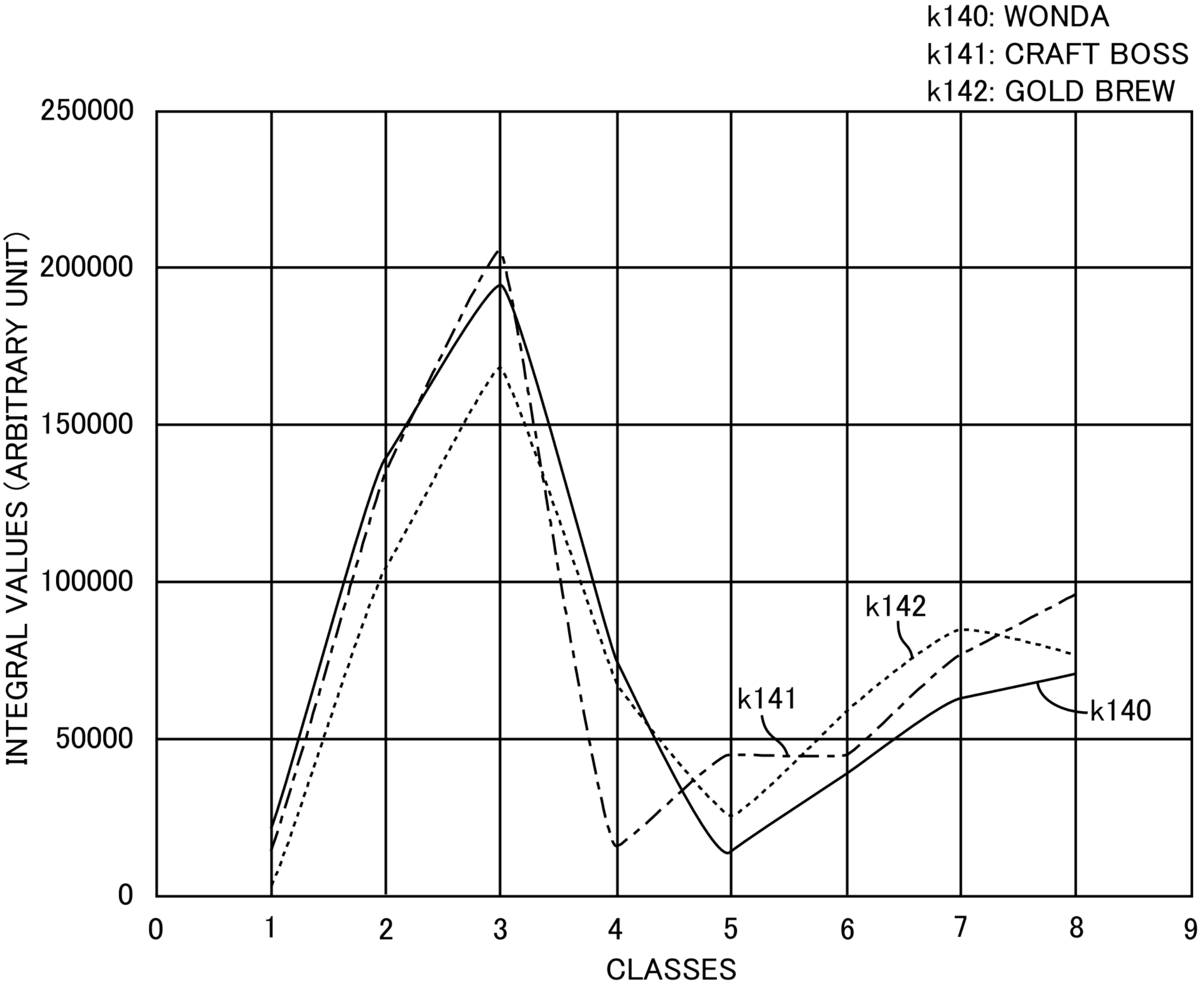
k140: WONDA
k141: CRAFT BOSS
k142: GOLD BREW
INTEGRAL VALUES (ARBITRARY UNIT)
250000
200000
150000
100000
50000
0
0
1
2
3
4
5
6
7
8
9
CLASSES
k140
k141
k142

FIG. 95

| NUMBER OF INTEGRAL VALUES: 8 | CURVE k140 | CURVE k141 | CURVE k142 |
|---|---|---|---|
| STANDARD DEVIATION OF DIFFERENCES BETWEEN MULTIPLE INTEGRAL VALUES ON CURVE k140 AND MULTIPLE INTEGRAL VALUES ON OTHER CURVES | | STANDARD DEVIATION DIFFERENCES $\sigma_{DF_k140,k141}$=18.56(%) | STANDARD DEVIATION DIFFERENCES $\sigma_{DF_k140,k142}$=59.01(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k141 AND MULTIPLE INTEGRAL VALUES ON OTHER CURVES | STANDARD DEVIATION DIFFERENCES $\sigma_{DF_k141,k140}$=18.56(%) | | STANDARD DEVIATION DIFFERENCES $\sigma_{DF_k141,k142}$=48.44(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k142 AND MULTIPLE INTEGRAL VALUES ON OTHER CURVES | STANDARD DEVIATION DIFFERENCES $\sigma_{DF_k142,k140}$=59.01(%) | STANDARD DEVIATION DIFFERENCES $\sigma_{DF_k142,k141}$=48.44(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.96

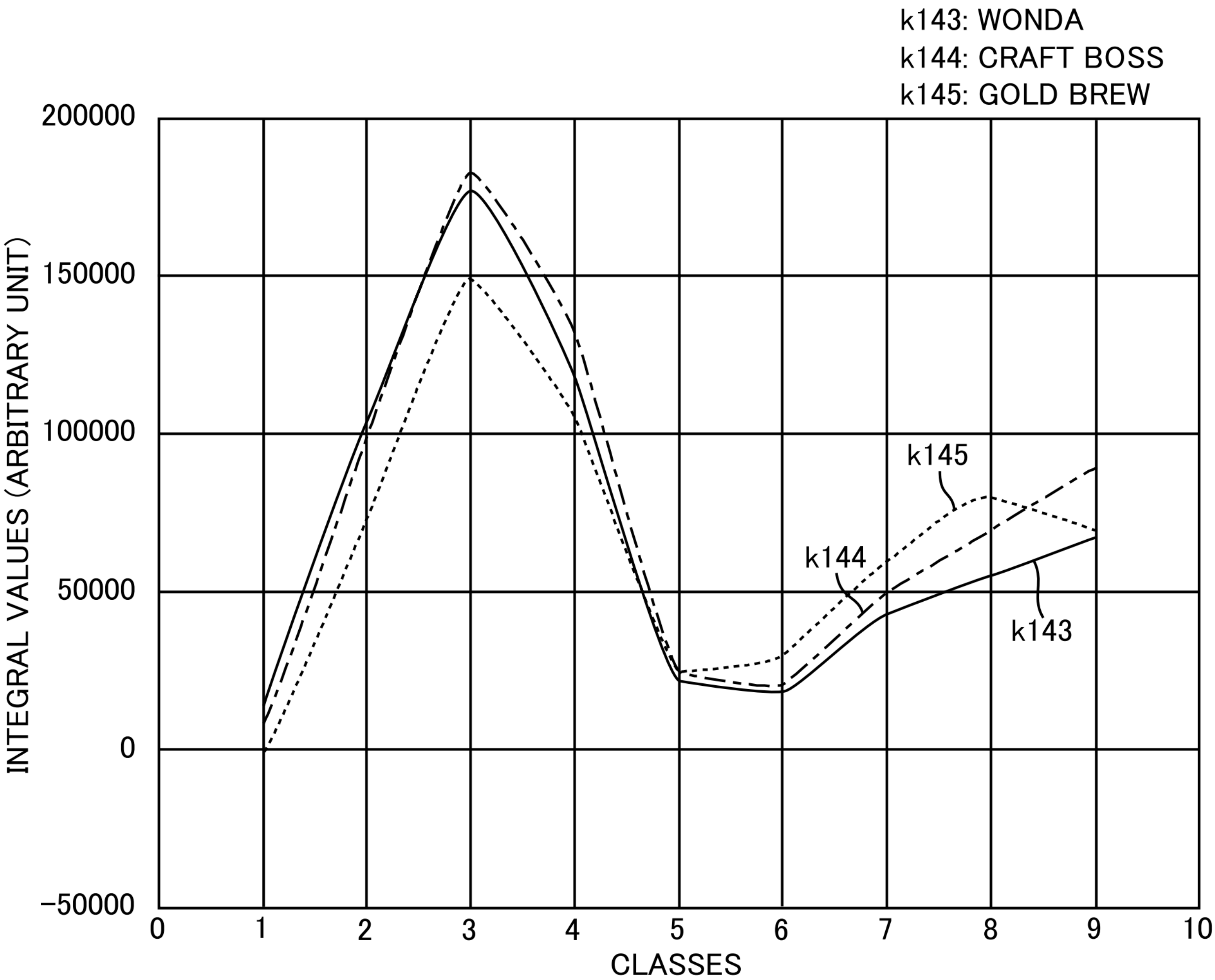
k143: WONDA
k144: CRAFT BOSS
k145: GOLD BREW
200000
150000
100000
50000
0
−50000
INTEGRAL VALUES (ARBITRARY UNIT)
0
1
2
3
4
5
6
7
8
9
10
CLASSES
k145
k144
k143

FIG. 97

| NUMBER OF INTEGRAL VALUES: 9 | CURVE k143 | CURVE k144 | CURVE k145 |
|---|---|---|---|
| STANDARD DEVIATION OF DIFFERENCES BETWEEN MULTIPLE INTEGRAL VALUES ON CURVE k143 AND MULTIPLE INTEGRAL VALUES ON OTHER CURVES | | STANDARD DEVIATION DIFFERENCES $\sigma_{DF_k143,k144}$=21.65(%) | STANDARD DEVIATION DIFFERENCES $\sigma_{DF_k143,k145}$=70.36(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k144 AND MULTIPLE INTEGRAL VALUES ON OTHER CURVES | STANDARD DEVIATION DIFFERENCES $\sigma_{DF_k144,k143}$=21.56(%) | | STANDARD DEVIATION DIFFERENCES $\sigma_{DF_k144,k145}$=65.19(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k145 AND MULTIPLE INTEGRAL VALUES ON OTHER CURVES | STANDARD DEVIATION DIFFERENCES $\sigma_{DF_k145,k143}$=70.36(%) | STANDARD DEVIATION DIFFERENCES $\sigma_{DF_k145,k144}$=65.19(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.98

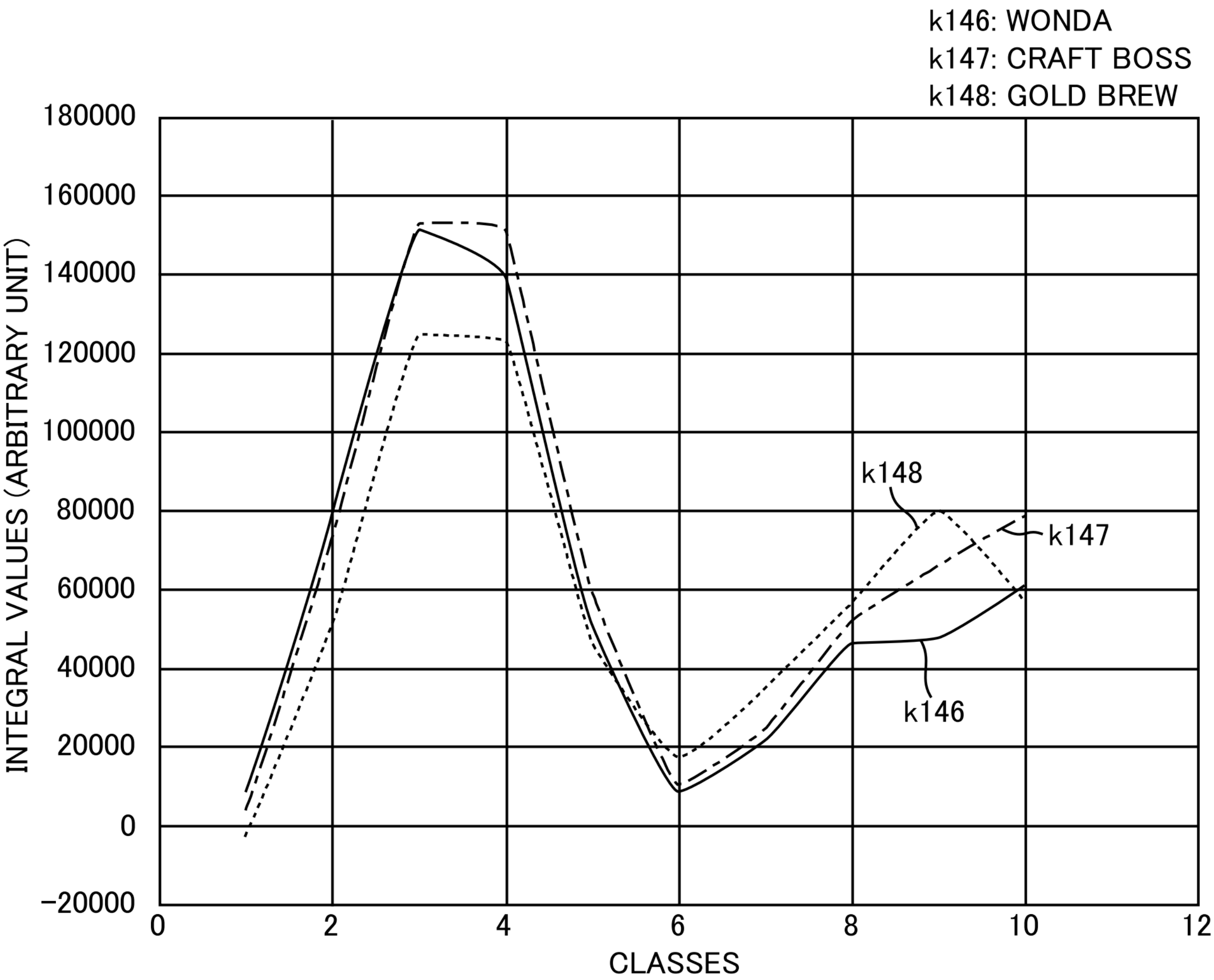
k146: WONDA
k147: CRAFT BOSS
k148: GOLD BREW
INTEGRAL VALUES (ARBITRARY UNIT)
180000
160000
140000
120000
100000
80000
60000
40000
20000
0
−20000
0
2
4
6
8
10
12
CLASSES
k148
k147
k146

FIG. 99

| NUMBER OF INTEGRAL VALUES: 10 | CURVE k146 | CURVE k147 | CURVE k148 |
|---|---|---|---|
| STANDARD DEVIATION OF DIFFERENCES BETWEEN MULTIPLE INTEGRAL VALUES ON CURVE k146 AND MULTIPLE INTEGRAL VALUES ON OTHER CURVES | | STANDARD DEVIATION DIFFERENCES $\sigma_{DF_k146,k147}$=25.21(%) | STANDARD DEVIATION DIFFERENCES $\sigma_{DF_k146,k148}$=84.29(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k147 AND MULTIPLE INTEGRAL VALUES ON OTHER CURVES | STANDARD DEVIATION DIFFERENCES $\sigma_{DF_k147,k146}$=25.21(%) | | STANDARD DEVIATION DIFFERENCES $\sigma_{DF_k147,k148}$=78.52(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k148 AND MULTIPLE INTEGRAL VALUES ON OTHER CURVES | STANDARD DEVIATION DIFFERENCES $\sigma_{DF_k148,k146}$=84.28(%) | STANDARD DEVIATION DIFFERENCES $\sigma_{DF_k148,k147}$=78.52(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.100

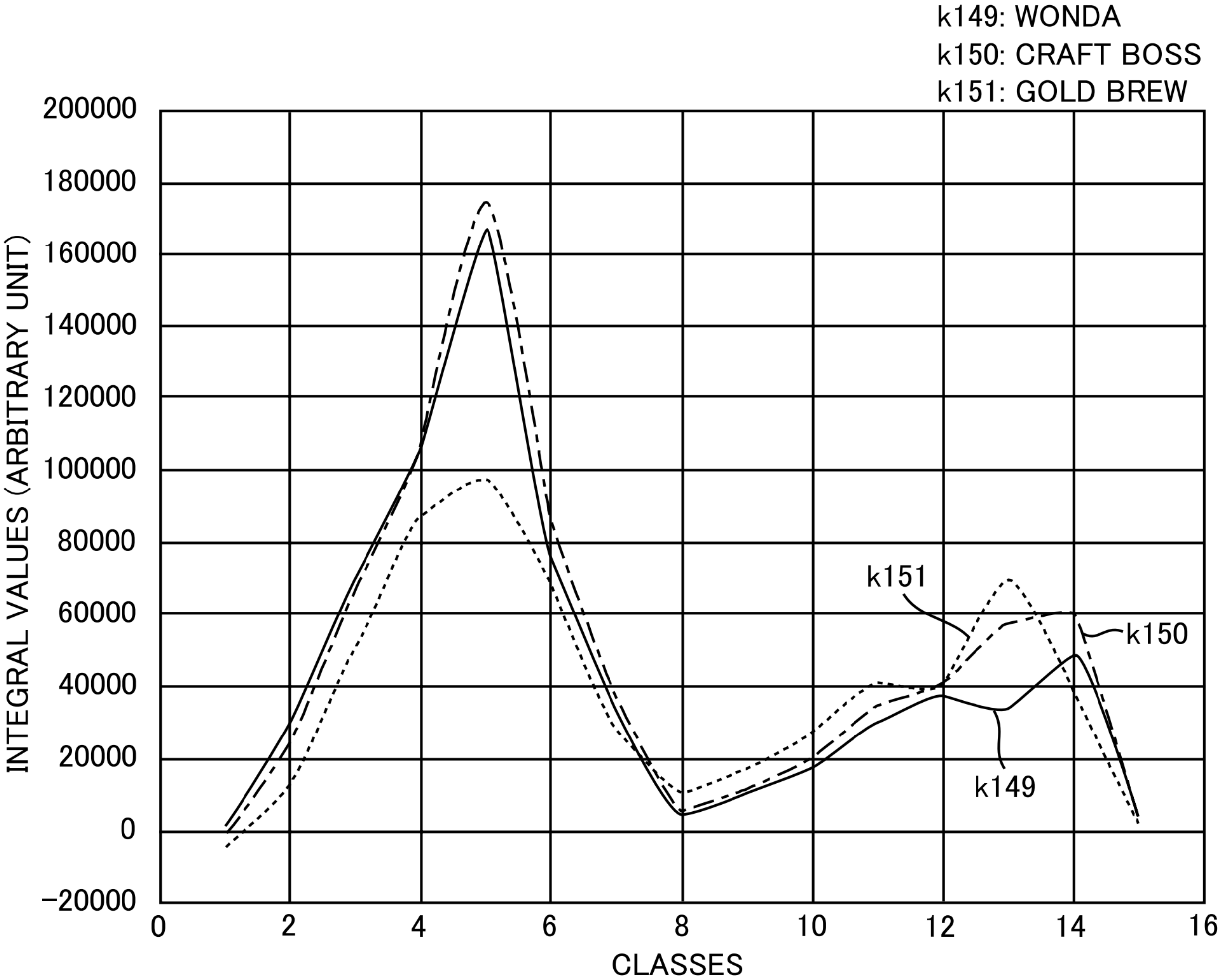
k149: WONDA
k150: CRAFT BOSS
k151: GOLD BREW
INTEGRAL VALUES (ARBITRARY UNIT)
200000
180000
160000
140000
120000
100000
80000
60000
40000
20000
0
−20000
0
2
4
6
8
10
12
14
16
CLASSES
k151
k150
k149

FIG. 101

| NUMBER OF INTEGRAL VALUES: 15 | CURVE k149 | CURVE k150 | CURVE k151 |
|---|---|---|---|
| STANDARD DEVIATION OF DIFFERENCES BETWEEN MULTIPLE INTEGRAL VALUES ON CURVE k149 AND MULTIPLE INTEGRAL VALUES ON OTHER CURVES | | STANDARD DEVIATION DIFFERENCES $\sigma_{DF_k149,k150}$=54.79(%) | STANDARD DEVIATION DIFFERENCES $\sigma_{DF_k149,k151}$=67.29(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k150 AND MULTIPLE INTEGRAL VALUES ON OTHER CURVES | STANDARD DEVIATION DIFFERENCES $\sigma_{DF_k150,k149}$=54.79(%) | | STANDARD DEVIATION DIFFERENCES $\sigma_{DF_k150,k151}$=48.38(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k151 AND MULTIPLE INTEGRAL VALUES ON OTHER CURVES | STANDARD DEVIATION DIFFERENCES $\sigma_{DF_k151,k149}$=67.29(%) | STANDARD DEVIATION DIFFERENCES $\sigma_{DF_k151,k150}$=48.38(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.102

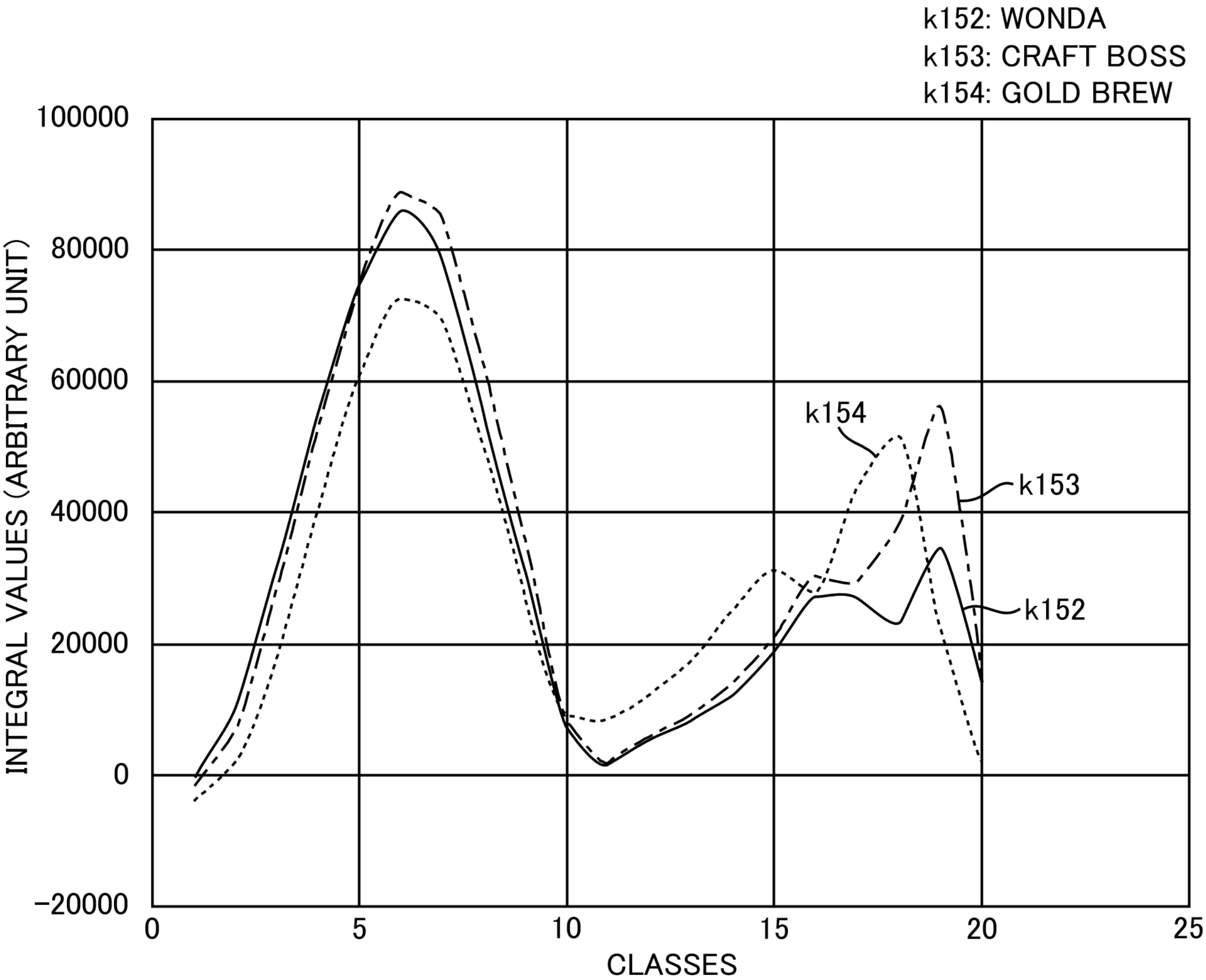
k152: WONDA
k153: CRAFT BOSS
k154: GOLD BREW
100000
80000
60000
40000
20000
0
−20000
INTEGRAL VALUES (ARBITRARY UNIT)
0
5
10
15
20
25
CLASSES
k154
k153
k152

FIG. 103

| NUMBER OF INTEGRAL VALUES: 20 | CURVE k152 | CURVE k153 | CURVE k154 |
|---|---|---|---|
| STANDARD DEVIATION OF DIFFERENCES BETWEEN MULTIPLE INTEGRAL VALUES ON CURVE k152 AND MULTIPLE INTEGRAL VALUES ON OTHER CURVES | | STANDARD DEVIATION DIFFERENCES $\sigma_{DF_k152,k153}$=34.35(%) | STANDARD DEVIATION DIFFERENCES $\sigma_{DF_k152,k154}$=77.77(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k153 AND MULTIPLE INTEGRAL VALUES ON OTHER CURVES | STANDARD DEVIATION DIFFERENCES $\sigma_{DF_k153,k152}$=34.35(%) | | STANDARD DEVIATION DIFFERENCES $\sigma_{DF_k153,k154}$=64.33(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k154 AND MULTIPLE INTEGRAL VALUES ON OTHER CURVES | STANDARD DEVIATION DIFFERENCES $\sigma_{DF_k154,k152}$=77.77(%) | STANDARD DEVIATION DIFFERENCES $\sigma_{DF_k154,k153}$=64.33(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.104

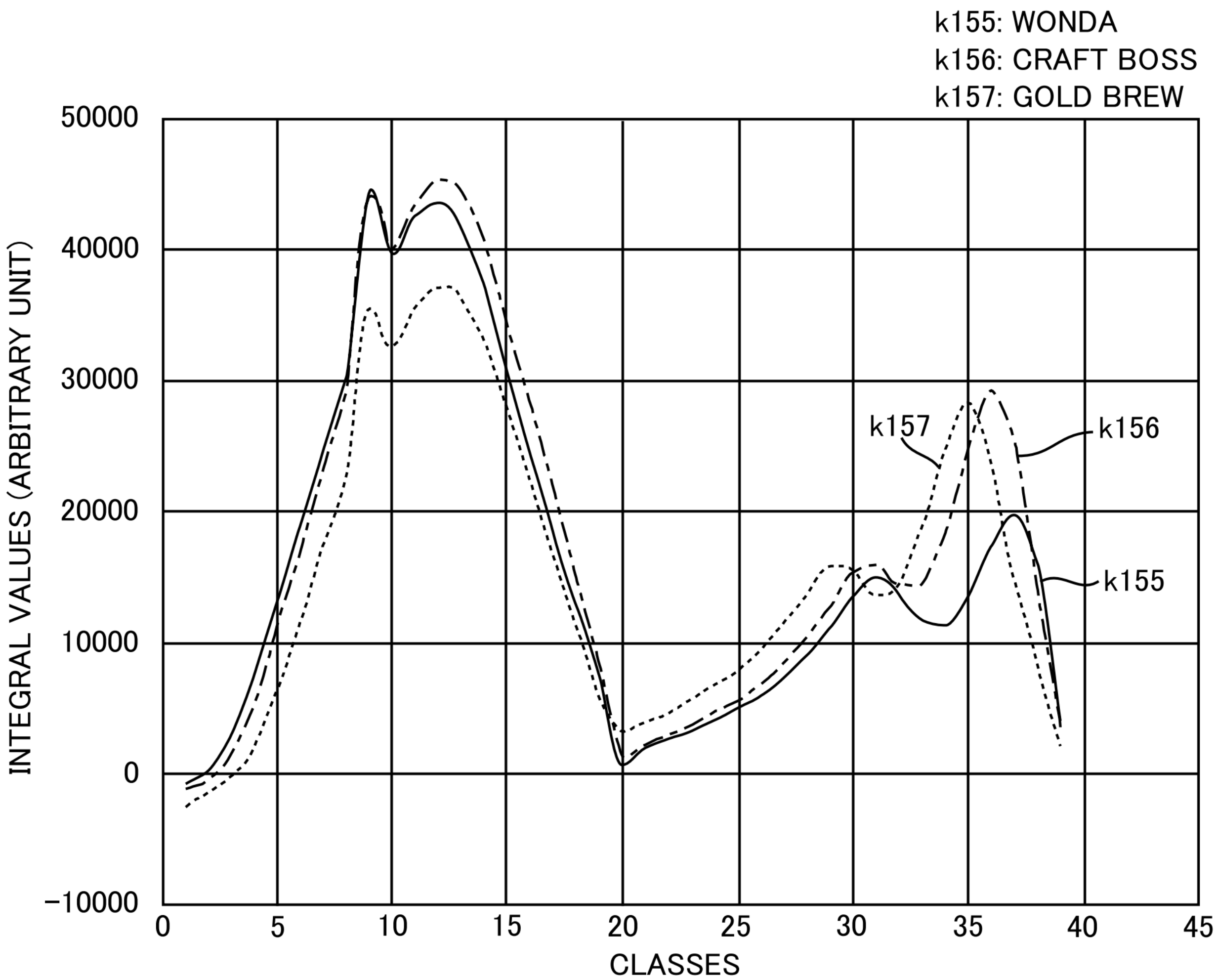
k155: WONDA
k156: CRAFT BOSS
k157: GOLD BREW
50000
40000
30000
20000
10000
0
−10000
INTEGRAL VALUES (ARBITRARY UNIT)
0
5
10
15
20
25
30
35
40
45
CLASSES
k157
k156
k155

FIG. 105

| NUMBER OF INTEGRAL VALUES: 39 | CURVE k155 | CURVE k156 | CURVE k157 |
|---|---|---|---|
| STANDARD DEVIATION OF DIFFERENCES BETWEEN MULTIPLE INTEGRAL VALUES ON CURVE k155 AND MULTIPLE INTEGRAL VALUES ON OTHER CURVES | | STANDARD DEVIATION DIFFERENCES $\sigma_{DF_k155,k156}$=40.61(%) | STANDARD DEVIATION DIFFERENCES $\sigma_{DF_k155,k157}$=67.02(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k156 AND MULTIPLE INTEGRAL VALUES ON OTHER CURVES | STANDARD DEVIATION DIFFERENCES $\sigma_{DF_k156,k155}$=40.61(%) | | STANDARD DEVIATION DIFFERENCES $\sigma_{DF_k156,k157}$=50.55(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k157 AND MULTIPLE INTEGRAL VALUES ON OTHER CURVES | STANDARD DEVIATION DIFFERENCES $\sigma_{DF_k157,k155}$=67.02(%) | STANDARD DEVIATION DIFFERENCES $\sigma_{DF_k157,k156}$=50.55(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.106

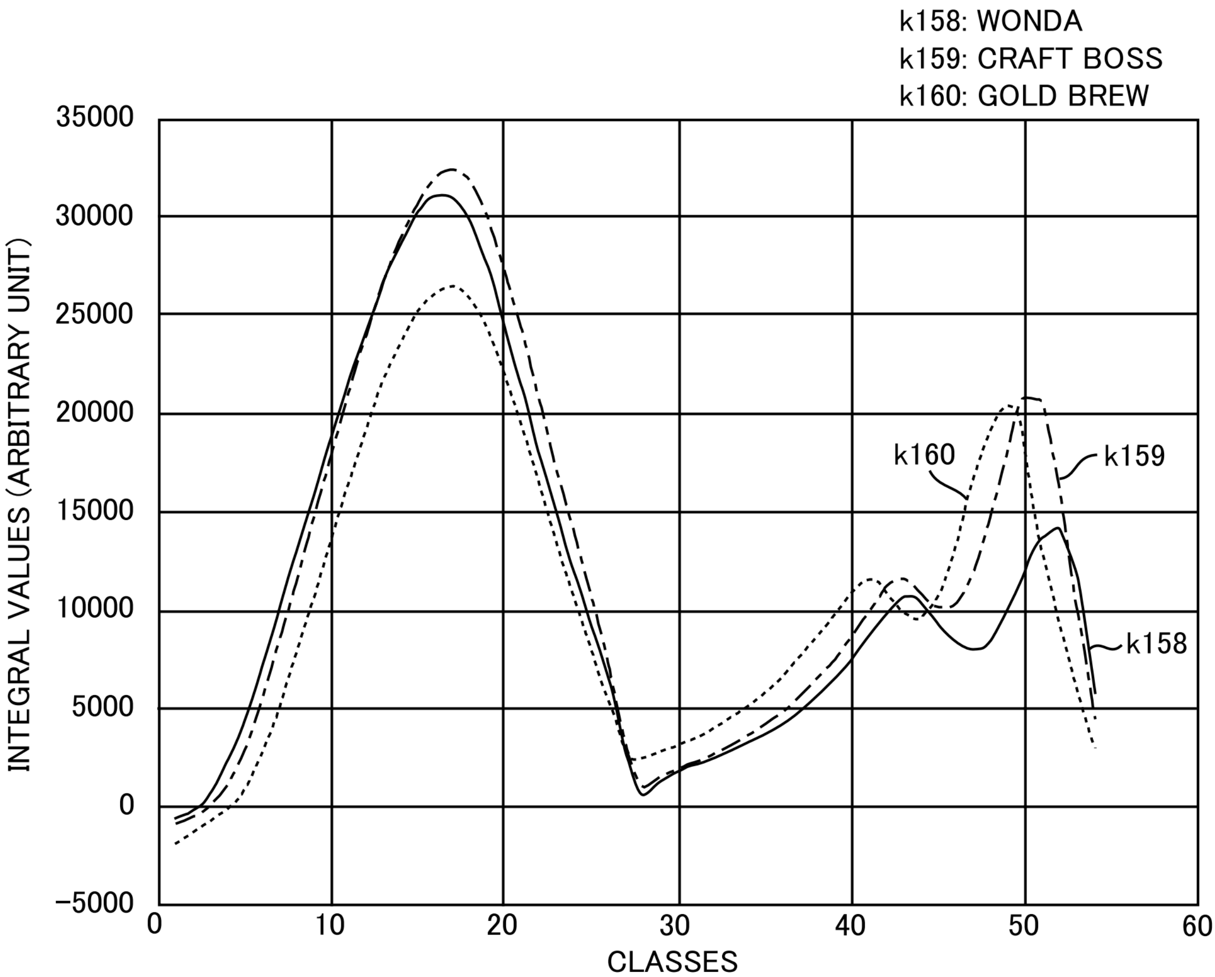
k158: WONDA
k159: CRAFT BOSS
k160: GOLD BREW
INTEGRAL VALUES (ARBITRARY UNIT)
35000
30000
25000
20000
15000
10000
5000
0
−5000
0
10
20
30
40
50
60
CLASSES
k160
k159
k158

FIG. 107

| NUMBER OF INTEGRAL VALUES: 54 | CURVE k158 | CURVE k159 | CURVE k160 |
|---|---|---|---|
| STANDARD DEVIATION OF DIFFERENCES BETWEEN MULTIPLE INTEGRAL VALUES ON CURVE k158 AND MULTIPLE INTEGRAL VALUES ON OTHER CURVES | | STANDARD DEVIATION DIFFERENCES $\sigma_{DF_k158,k159}$=37.13(%) | STANDARD DEVIATION DIFFERENCES $\sigma_{DF_k158,k160}$=64.89(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k159 AND MULTIPLE INTEGRAL VALUES ON OTHER CURVES | STANDARD DEVIATION DIFFERENCES $\sigma_{DF_k159,k158}$=37.13(%) | | STANDARD DEVIATION DIFFERENCES $\sigma_{DF_k159,k160}$=52.12(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k160 AND MULTIPLE INTEGRAL VALUES ON OTHER CURVES | STANDARD DEVIATION DIFFERENCES $\sigma_{DF_k160,k158}$=64.89(%) | STANDARD DEVIATION DIFFERENCES $\sigma_{DF_k160,k159}$=52.12(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.108

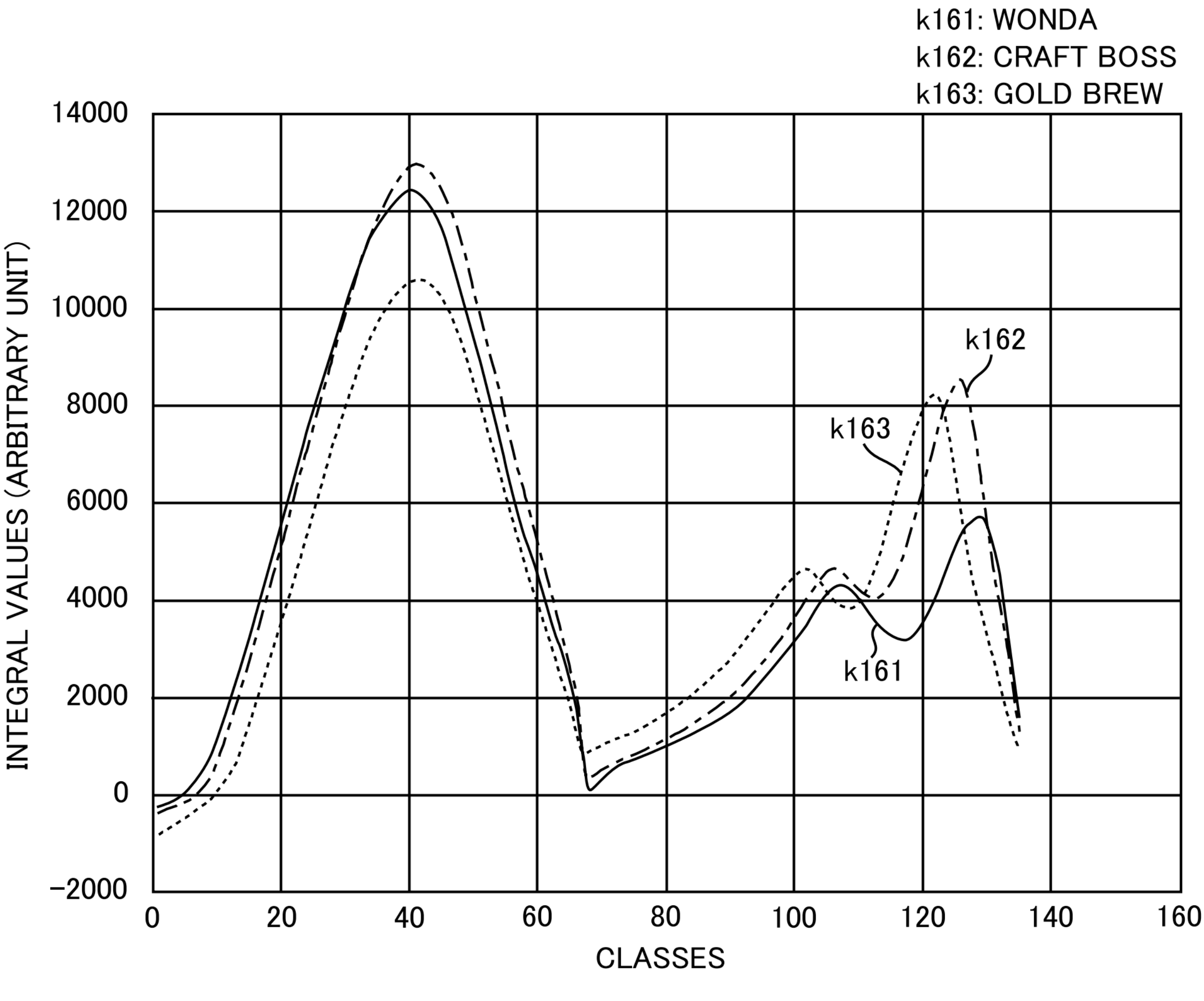
k161: WONDA
k162: CRAFT BOSS
k163: GOLD BREW
14000
12000
10000
8000
6000
4000
2000
0
−2000
0
20
40
60
80
100
120
140
160
CLASSES
INTEGRAL VALUES (ARBITRARY UNIT)
k162
k163
k161

FIG. 109

| NUMBER OF INTEGRAL VALUES: 135 | CURVE k161 | CURVE k162 | CURVE k163 |
|---|---|---|---|
| STANDARD DEVIATION OF DIFFERENCES BETWEEN MULTIPLE INTEGRAL VALUES ON CURVE k161 AND MULTIPLE INTEGRAL VALUES ON OTHER CURVES | | STANDARD DEVIATION DIFFERENCES $\sigma_{DF_k161,k162}$=37.87(%) | STANDARD DEVIATION DIFFERENCES $\sigma_{DF_k161,k163}$=66.31(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k162 AND MULTIPLE INTEGRAL VALUES ON OTHER CURVES | STANDARD DEVIATION DIFFERENCES $\sigma_{DF_k162,k161}$=37.87(%) | | STANDARD DEVIATION DIFFERENCES $\sigma_{DF_k162,k163}$=50.33(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k163 AND MULTIPLE INTEGRAL VALUES ON OTHER CURVES | STANDARD DEVIATION DIFFERENCES $\sigma_{DF_k163,k161}$=66.31(%) | STANDARD DEVIATION DIFFERENCES $\sigma_{DF_k163,k162}$=50.33(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.110

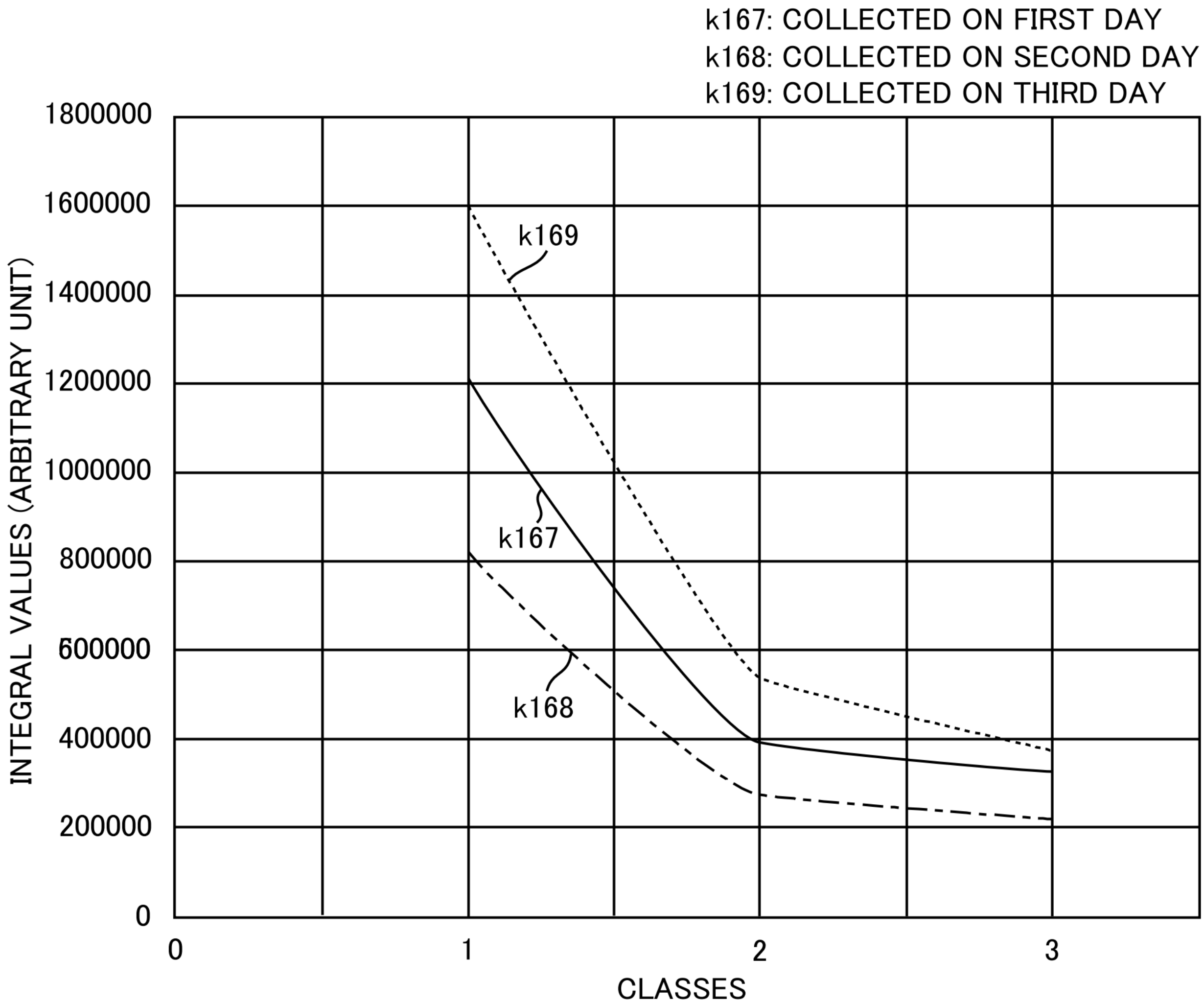
k167: COLLECTED ON FIRST DAY
k168: COLLECTED ON SECOND DAY
k169: COLLECTED ON THIRD DAY
1800000
1600000
1400000
1200000
1000000
800000
600000
400000
200000
0
INTEGRAL VALUES (ARBITRARY UNIT)
k169
k167
k168
0
1
2
3
CLASSES

FIG. 111

| NUMBER OF INTEGRAL VALUES: 3 | CURVE k167 | CURVE k168 | CURVE k169 |
|---|---|---|---|
| STANDARD DEVIATION OF DIFFERENCES BETWEEN MULTIPLE INTEGRAL VALUES ON CURVE k167 AND MULTIPLE INTEGRAL VALUES ON OTHER CURVES | | STANDARD DEVIATION DIFFERENCES $\sigma_{DF_k167,k168}$=1.50(%) | STANDARD DEVIATION DIFFERENCES $\sigma_{DF_k167,k169}$=7.90(%) |
| THRESHOLD VALUE | | 15(%) | 15(%) |
| JUDGMENT RESULT | | × | × |
| STANDARD DEVIATION OF DIFFERENCES BETWEEN MULTIPLE INTEGRAL VALUES ON CURVE k168 AND MULTIPLE INTEGRAL VALUES ON OTHER CURVES | STANDARD DEVIATION DIFFERENCES $\sigma_{DF_k168,k167}$=1.50(%) | | STANDARD DEVIATION DIFFERENCES $\sigma_{DF_k168,k169}$=6.38(%) |
| THRESHOLD VALUE | 15(%) | | 15(%) |
| JUDGMENT RESULT | × | | × |
| STANDARD DEVIATION OF DIFFERENCES BETWEEN MULTIPLE INTEGRAL VALUES ON CURVE k169 AND MULTIPLE INTEGRAL VALUES ON OTHER CURVES | STANDARD DEVIATION DIFFERENCES $\sigma_{DF_k169,k167}$=7.90(%) | STANDARD DEVIATION DIFFERENCES $\sigma_{DF_k169,k168}$=6.38(%) | |
| THRESHOLD VALUE | 15(%) | 15(%) | |
| JUDGMENT RESULT | × | × | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

【図112】

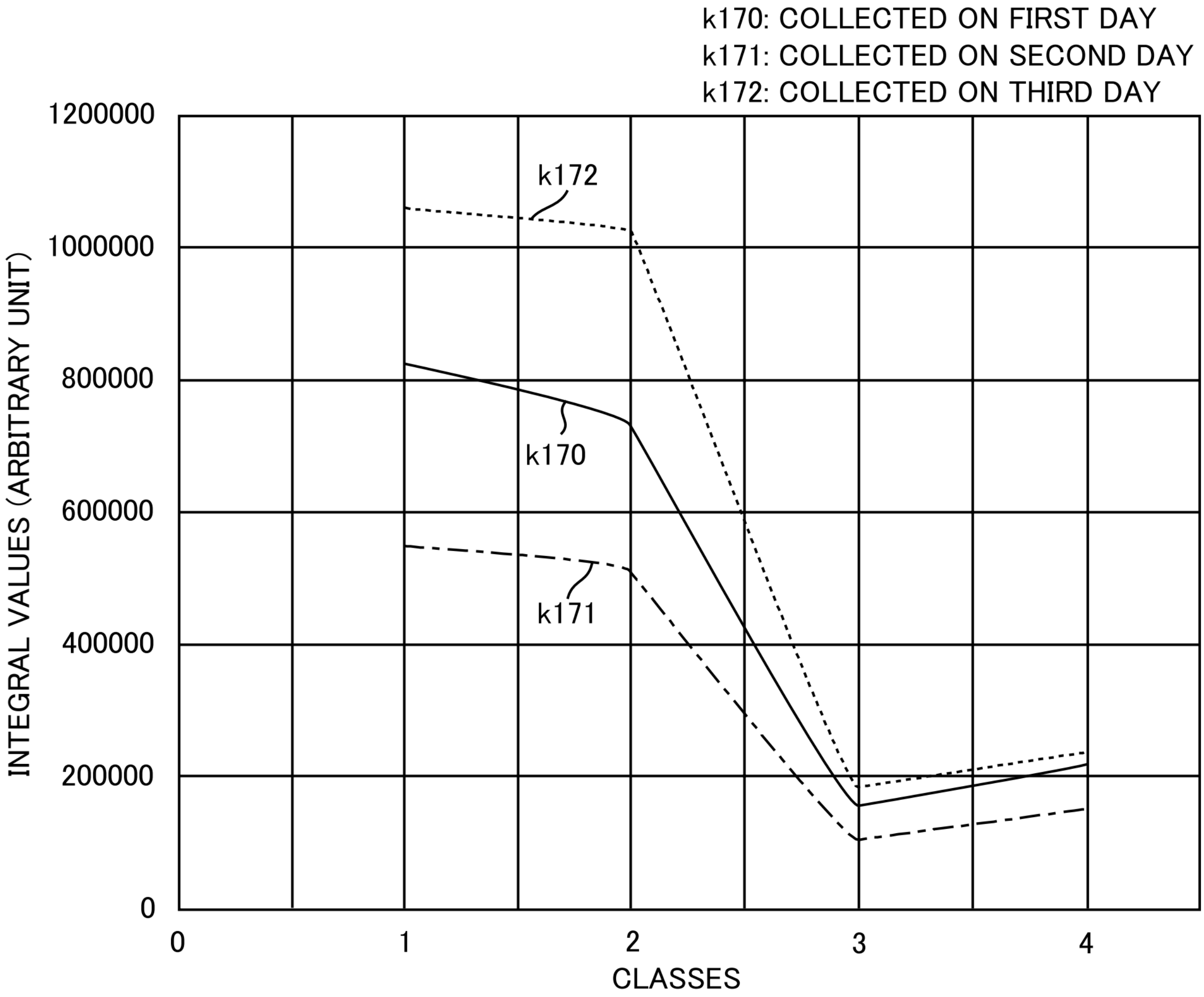
k170: COLLECTED ON FIRST DAY
k171: COLLECTED ON SECOND DAY
k172: COLLECTED ON THIRD DAY
1200000
1000000
800000
600000
400000
200000
0
INTEGRAL VALUES (ARBITRARY UNIT)
k172
k170
k171
0
1
2
3
4
CLASSES

FIG. 113

| NUMBER OF INTEGRAL VALUES: 4 | CURVE k170 | CURVE k171 | CURVE k172 |
|---|---|---|---|
| STANDARD DEVIATION OF DIFFERENCES BETWEEN MULTIPLE INTEGRAL VALUES ON CURVE k170 AND MULTIPLE INTEGRAL VALUES ON OTHER CURVES | | STANDARD DEVIATION DIFFERENCES $\sigma_{DF_k170,k171}$=45.88(%) | STANDARD DEVIATION DIFFERENCES $\sigma_{DF_k170,k172}$=44.49(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k171 AND MULTIPLE INTEGRAL VALUES ON OTHER CURVES | STANDARD DEVIATION DIFFERENCES $\sigma_{DF_k171,k170}$=45.88(%) | | STANDARD DEVIATION DIFFERENCES $\sigma_{DF_k171,k172}$=6.76(%) |
| THRESHOLD VALUE | 15(%) | | 15(%) |
| JUDGMENT RESULT | ○ | | × |
| STANDARD DEVIATION OF DIFFERENCES BETWEEN MULTIPLE INTEGRAL VALUES ON CURVE k172 AND MULTIPLE INTEGRAL VALUES ON OTHER CURVES | STANDARD DEVIATION DIFFERENCES $\sigma_{DF_k172,k170}$=44.49(%) | STANDARD DEVIATION DIFFERENCES $\sigma_{DF_k172,k171}$=6.76(%) | |
| THRESHOLD VALUE | 15(%) | 15(%) | |
| JUDGMENT RESULT | ○ | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.114

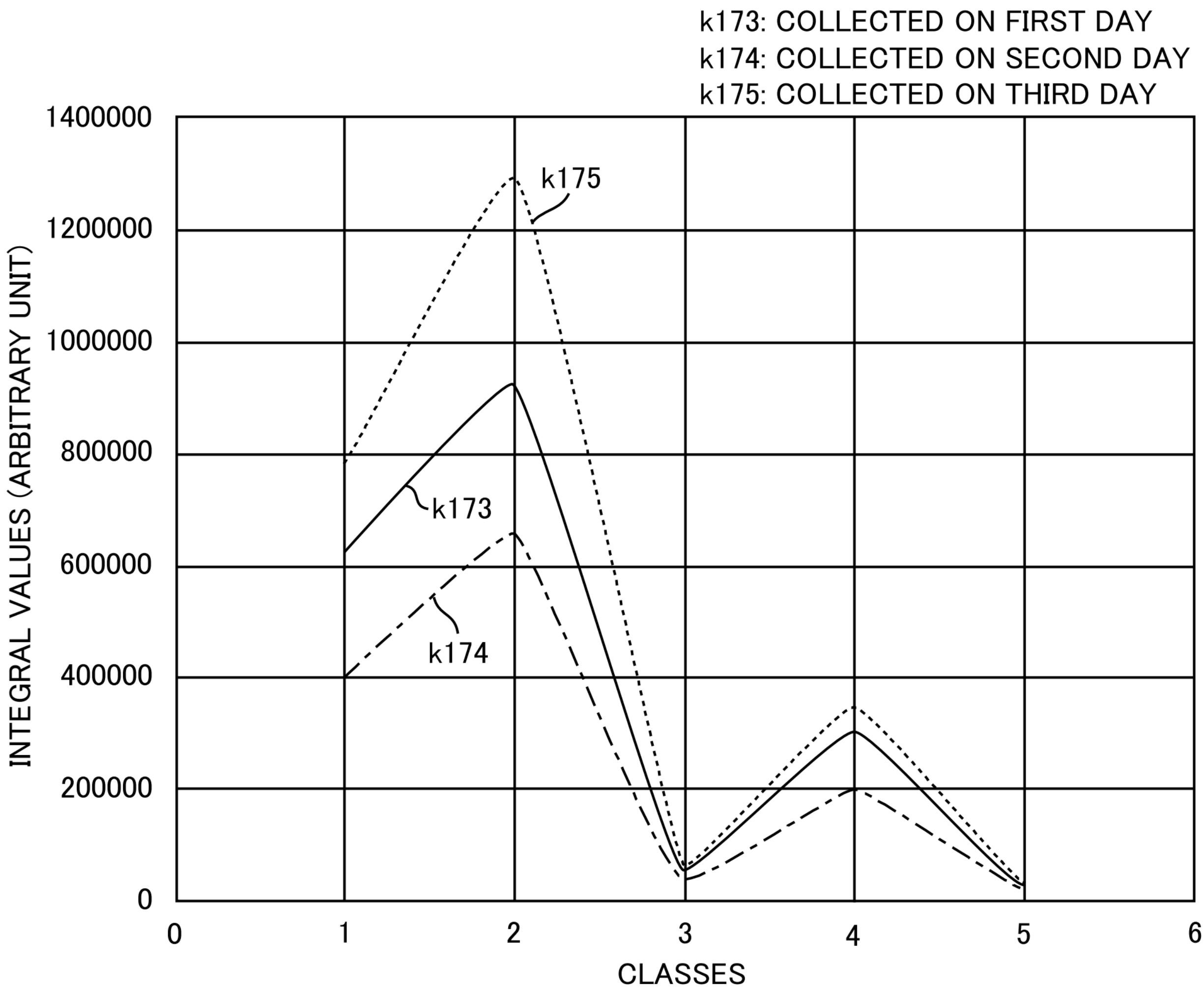
k173: COLLECTED ON FIRST DAY
k174: COLLECTED ON SECOND DAY
k175: COLLECTED ON THIRD DAY
INTEGRAL VALUES (ARBITRARY UNIT)
1400000
1200000
1000000
800000
600000
400000
200000
0
k175
k173
k174
0
1
2
3
4
5
6
CLASSES

FIG. 115

| NUMBER OF INTEGRAL VALUES: 5 | CURVE k173 | CURVE k174 | CURVE k175 |
|---|---|---|---|
| STANDARD DEVIATION OF DIFFERENCES BETWEEN MULTIPLE INTEGRAL VALUES ON CURVE k173 AND MULTIPLE INTEGRAL VALUES ON OTHER CURVES | | STANDARD DEVIATION DIFFERENCES $\sigma_{DF_k173,k174}$=8.95(%) | STANDARD DEVIATION DIFFERENCES $\sigma_{DF_k173,k175}$=10.78(%) |
| THRESHOLD VALUE | | 15(%) | 15(%) |
| JUDGMENT RESULT | | × | × |
| STANDARD DEVIATION OF DIFFERENCES BETWEEN MULTIPLE INTEGRAL VALUES ON CURVE k174 AND MULTIPLE INTEGRAL VALUES ON OTHER CURVES | STANDARD DEVIATION DIFFERENCES $\sigma_{DF_k174,k173}$=8.95(%) | | STANDARD DEVIATION DIFFERENCES $\sigma_{DF_k174,k175}$=16.99(%) |
| THRESHOLD VALUE | 15(%) | | 15(%) |
| JUDGMENT RESULT | × | | ○ |
| STANDARD DEVIATION OF DIFFERENCES BETWEEN MULTIPLE INTEGRAL VALUES ON CURVE k175 AND MULTIPLE INTEGRAL VALUES ON OTHER CURVES | STANDARD DEVIATION DIFFERENCES $\sigma_{DF_k175,k173}$=10.78(%) | STANDARD DEVIATION DIFFERENCES $\sigma_{DF_k175,k174}$=16.99(%) | |
| THRESHOLD VALUE | 15(%) | 15(%) | |
| JUDGMENT RESULT | × | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.116

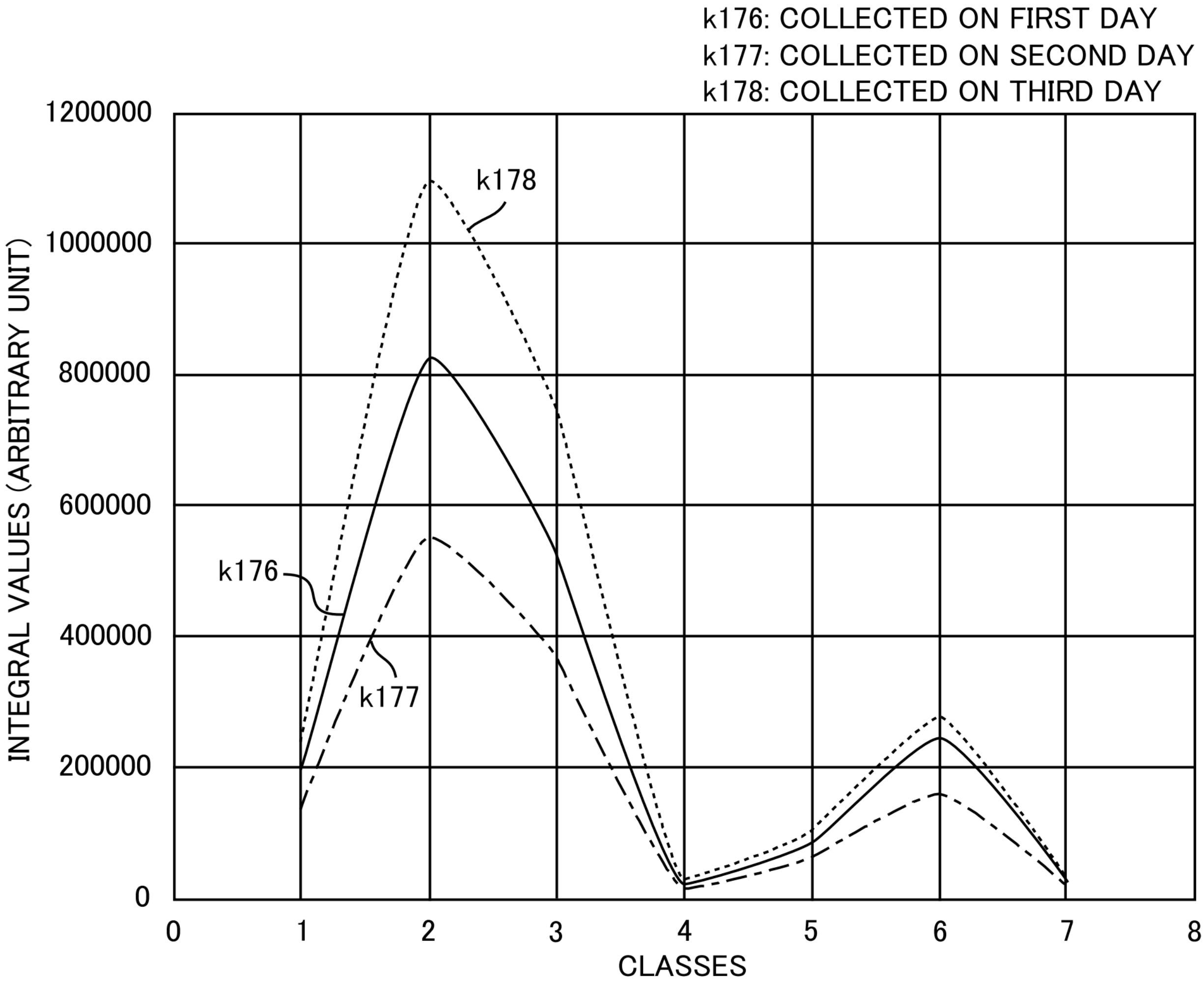
k176: COLLECTED ON FIRST DAY
k177: COLLECTED ON SECOND DAY
k178: COLLECTED ON THIRD DAY
INTEGRAL VALUES (ARBITRARY UNIT)
1200000
1000000
800000
600000
400000
200000
0
0
1
2
3
4
5
6
7
8
CLASSES
k178
k176
k177

FIG. 117

| NUMBER OF INTEGRAL VALUES: 7 | CURVE k176 | CURVE k177 | CURVE k178 |
|---|---|---|---|
| STANDARD DEVIATION OF DIFFERENCES BETWEEN MULTIPLE INTEGRAL VALUES ON CURVE k176 AND MULTIPLE INTEGRAL VALUES ON OTHER CURVES | | STANDARD DEVIATION DIFFERENCES $\sigma_{DF_k176,k177}$=7.75(%) | STANDARD DEVIATION DIFFERENCES $\sigma_{DF_k176,k178}$=10.81(%) |
| THRESHOLD VALUE | | 15(%) | 15(%) |
| JUDGMENT RESULT | | × | × |
| STANDARD DEVIATION OF DIFFERENCES BETWEEN MULTIPLE INTEGRAL VALUES ON CURVE k177 AND MULTIPLE INTEGRAL VALUES ON OTHER CURVES | STANDARD DEVIATION DIFFERENCES $\sigma_{DF_k177,k176}$=7.75(%) | | STANDARD DEVIATION DIFFERENCES $\sigma_{DF_k177,k178}$=14.73(%) |
| THRESHOLD VALUE | 15(%) | | 15(%) |
| JUDGMENT RESULT | × | | × |
| STANDARD DEVIATION OF DIFFERENCES BETWEEN MULTIPLE INTEGRAL VALUES ON CURVE k178 AND MULTIPLE INTEGRAL VALUES ON OTHER CURVES | STANDARD DEVIATION DIFFERENCES $\sigma_{DF_k178,k176}$=10.81(%) | STANDARD DEVIATION DIFFERENCES $\sigma_{DF_k178,k177}$=14.73(%) | |
| THRESHOLD VALUE | 15(%) | 15(%) | |
| JUDGMENT RESULT | × | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.118

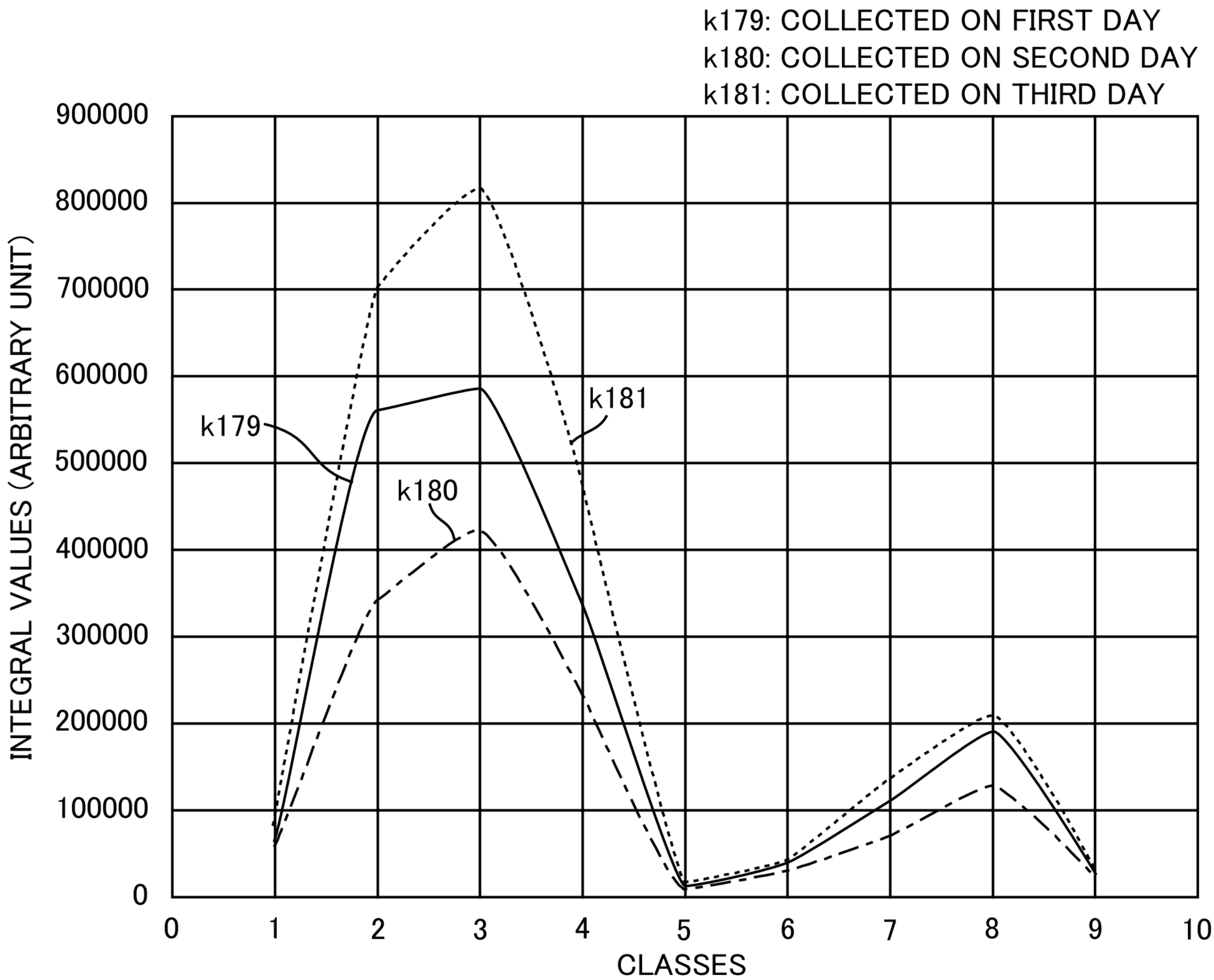
k179: COLLECTED ON FIRST DAY
k180: COLLECTED ON SECOND DAY
k181: COLLECTED ON THIRD DAY
INTEGRAL VALUES (ARBITRARY UNIT)
900000
800000
700000
600000
500000
400000
300000
200000
100000
0
k179
k180
k181
0
1
2
3
4
5
6
7
8
9
10
CLASSES

FIG. 119

| NUMBER OF INTEGRAL VALUES: 9 | CURVE k179 | CURVE k180 | CURVE k181 |
|---|---|---|---|
| STANDARD DEVIATION OF DIFFERENCES BETWEEN MULTIPLE INTEGRAL VALUES ON CURVE k179 AND MULTIPLE INTEGRAL VALUES ON OTHER CURVES | | STANDARD DEVIATION DIFFERENCES $\sigma_{DF_k179,k180}$=12.59(%) | STANDARD DEVIATION DIFFERENCES $\sigma_{DF_k179,k181}$=10.75(%) |
| THRESHOLD VALUE | | 15(%) | 15(%) |
| JUDGMENT RESULT | | × | × |
| STANDARD DEVIATION OF DIFFERENCES BETWEEN MULTIPLE INTEGRAL VALUES ON CURVE k180 AND MULTIPLE INTEGRAL VALUES ON OTHER CURVES | STANDARD DEVIATION DIFFERENCES $\sigma_{DF_k180,k179}$=12.59(%) | | STANDARD DEVIATION DIFFERENCES $\sigma_{DF_k180,k181}$=16.42(%) |
| THRESHOLD VALUE | 15(%) | | 15(%) |
| JUDGMENT RESULT | × | | ○ |
| STANDARD DEVIATION OF DIFFERENCES BETWEEN MULTIPLE INTEGRAL VALUES ON CURVE k181 AND MULTIPLE INTEGRAL VALUES ON OTHER CURVES | STANDARD DEVIATION DIFFERENCES $\sigma_{DF_k181,k179}$=10.75(%) | STANDARD DEVIATION DIFFERENCES $\sigma_{DF_k181,k180}$=16.42(%) | |
| THRESHOLD VALUE | 15(%) | 15(%) | |
| JUDGMENT RESULT | × | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.120

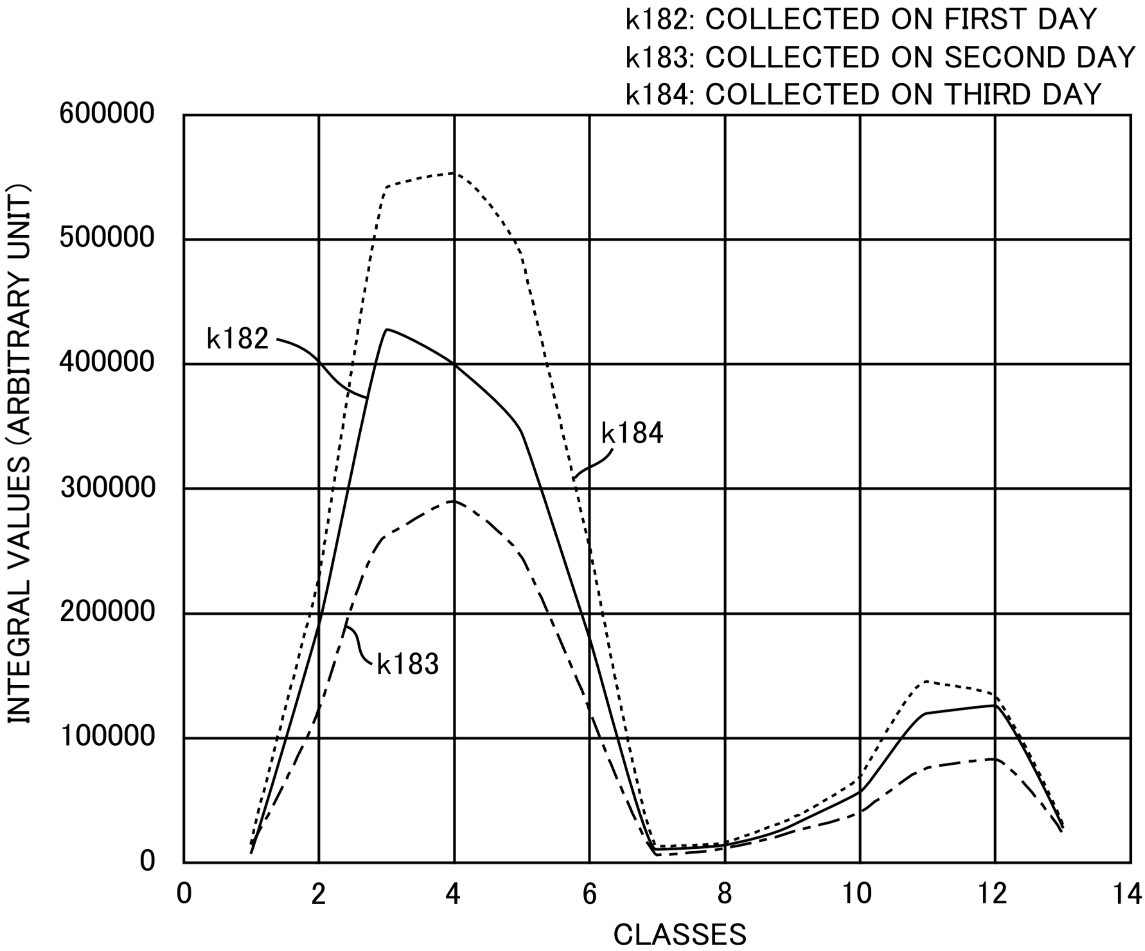
k182: COLLECTED ON FIRST DAY
k183: COLLECTED ON SECOND DAY
k184: COLLECTED ON THIRD DAY
INTEGRAL VALUES (ARBITRARY UNIT)
600000
500000
400000
300000
200000
100000
0
0
2
4
6
8
10
12
14
CLASSES
k182
k183
k184

FIG. 121

| NUMBER OF INTEGRAL VALUES: 13 | CURVE k182 | CURVE k183 | CURVE k184 |
|---|---|---|---|
| STANDARD DEVIATION OF DIFFERENCES BETWEEN MULTIPLE INTEGRAL VALUES ON CURVE k182 AND MULTIPLE INTEGRAL VALUES ON OTHER CURVES | | STANDARD DEVIATION DIFFERENCES $\sigma_{DF_k182,k183}$=29.22(%) | STANDARD DEVIATION DIFFERENCES $\sigma_{DF_k182,k184}$=17.45(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k183 AND MULTIPLE INTEGRAL VALUES ON OTHER CURVES | STANDARD DEVIATION DIFFERENCES $\sigma_{DF_k183,k182}$=29.22(%) | | STANDARD DEVIATION DIFFERENCES $\sigma_{DF_k183,k184}$=21.55(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k184 AND MULTIPLE INTEGRAL VALUES ON OTHER CURVES | STANDARD DEVIATION DIFFERENCES $\sigma_{DF_k184,k182}$=17.45(%) | STANDARD DEVIATION DIFFERENCES $\sigma_{DF_k184,k183}$=21.55(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.122

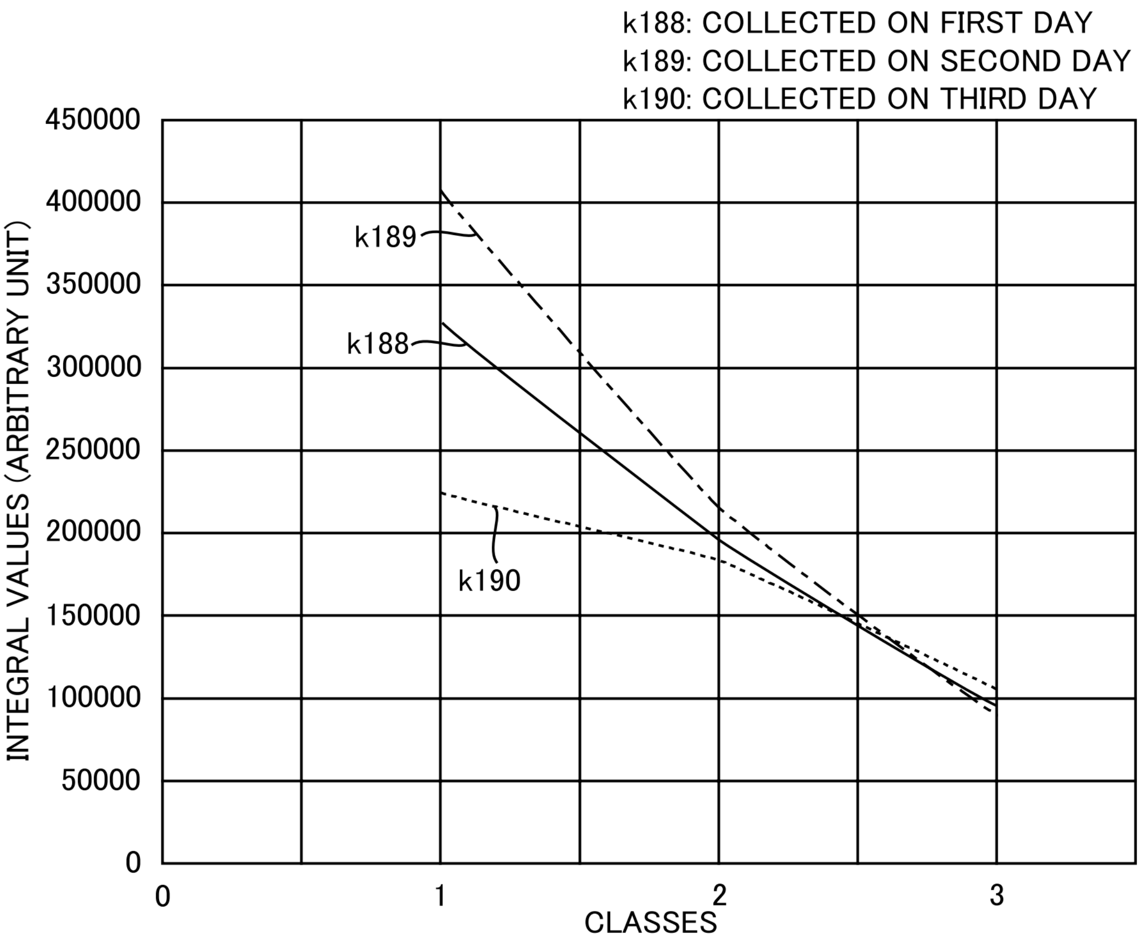
k188: COLLECTED ON FIRST DAY
k189: COLLECTED ON SECOND DAY
k190: COLLECTED ON THIRD DAY
INTEGRAL VALUES (ARBITRARY UNIT)
450000
400000
350000
300000
250000
200000
150000
100000
50000
0
k189
k188
k190
0
1
2
3
CLASSES

FIG. 123

| NUMBER OF INTEGRAL VALUES: 3 | CURVE k188 | CURVE k189 | CURVE k190 |
|---|---|---|---|
| STANDARD DEVIATION OF DIFFERENCES BETWEEN MULTIPLE INTEGRAL VALUES ON CURVE k188 AND MULTIPLE INTEGRAL VALUES ON OTHER CURVES | | STANDARD DEVIATION DIFFERENCES $\sigma_{DF_k188,k189}$=11.45(%) | STANDARD DEVIATION DIFFERENCES $\sigma_{DF_k188,k190}$=19.72(%) |
| THRESHOLD VALUE | | 15(%) | 15(%) |
| JUDGMENT RESULT | | × | ○ |
| STANDARD DEVIATION OF DIFFERENCES BETWEEN MULTIPLE INTEGRAL VALUES ON CURVE k189 AND MULTIPLE INTEGRAL VALUES ON OTHER CURVES | STANDARD DEVIATION DIFFERENCES $\sigma_{DF_k189,k188}$=11.45(%) | | STANDARD DEVIATION DIFFERENCES $\sigma_{DF_k189,k190}$=30.41(%) |
| THRESHOLD VALUE | 15(%) | | 15(%) |
| JUDGMENT RESULT | × | | ○ |
| STANDARD DEVIATION OF DIFFERENCES BETWEEN MULTIPLE INTEGRAL VALUES ON CURVE k190 AND MULTIPLE INTEGRAL VALUES ON OTHER CURVES | STANDARD DEVIATION DIFFERENCES $\sigma_{DF_k190,k188}$=19.72(%) | STANDARD DEVIATION DIFFERENCES $\sigma_{DF_k190,k189}$=30.41(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.124

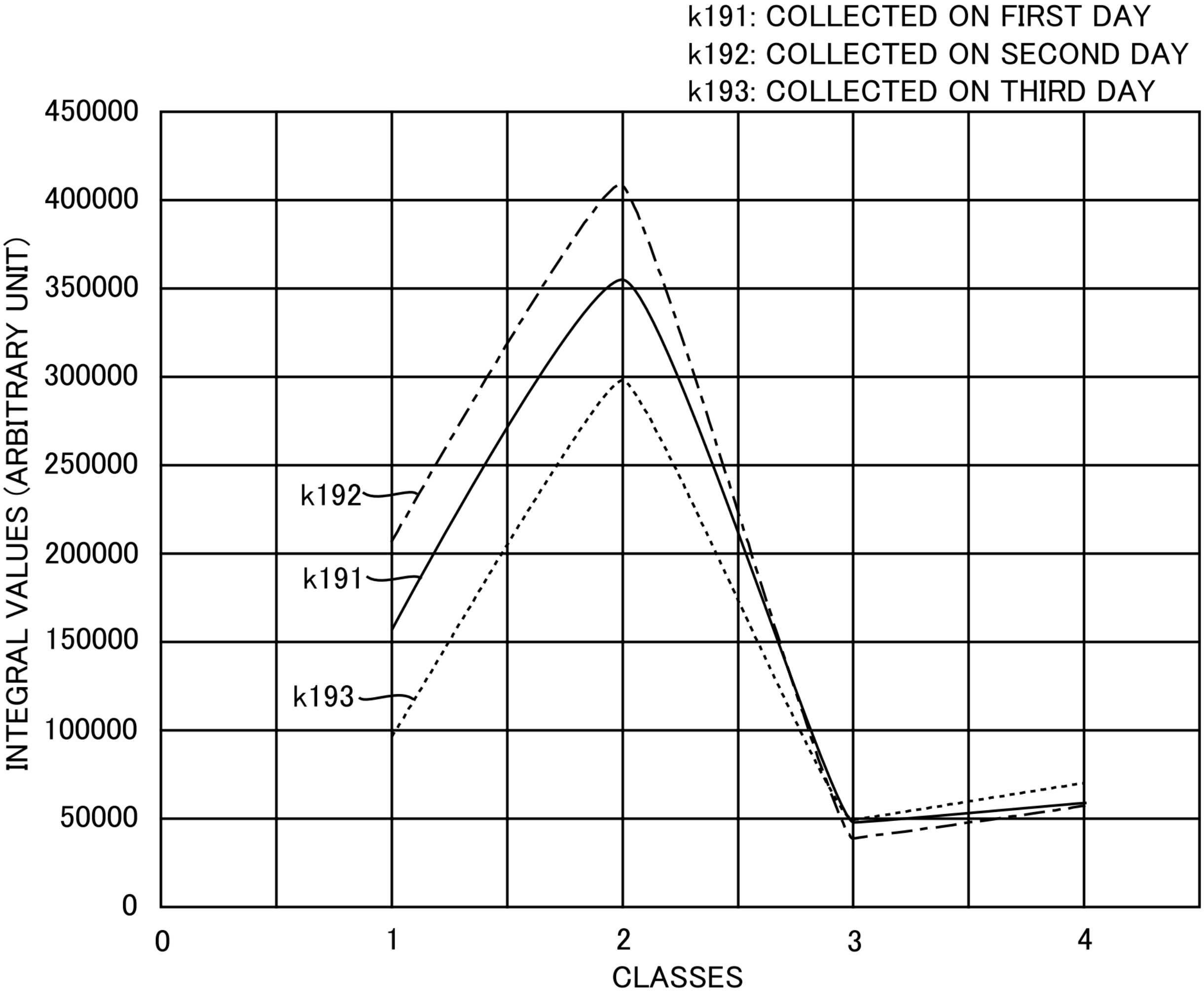
k191: COLLECTED ON FIRST DAY
k192: COLLECTED ON SECOND DAY
k193: COLLECTED ON THIRD DAY
450000
400000
350000
300000
250000
200000
150000
100000
50000
0
INTEGRAL VALUES (ARBITRARY UNIT)
k192
k191
k193
0
1
2
3
4
CLASSES

FIG. 125

| NUMBER OF INTEGRAL VALUES: 4 | CURVE k191 | CURVE k192 | CURVE k193 |
|---|---|---|---|
| STANDARD DEVIATION OF DIFFERENCES BETWEEN MULTIPLE INTEGRAL VALUES ON CURVE k191 AND MULTIPLE INTEGRAL VALUES ON OTHER CURVES | | STANDARD DEVIATION DIFFERENCES $\sigma_{DF_k191,k192}$=18.14(%) | STANDARD DEVIATION DIFFERENCES $\sigma_{DF_k191,k193}$=24.39(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k192 AND MULTIPLE INTEGRAL VALUES ON OTHER CURVES | STANDARD DEVIATION DIFFERENCES $\sigma_{DF_k192,k191}$=18.14(%) | | STANDARD DEVIATION DIFFERENCES $\sigma_{DF_k192,k193}$=39.68(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k193 AND MULTIPLE INTEGRAL VALUES ON OTHER CURVES | STANDARD DEVIATION DIFFERENCES $\sigma_{DF_k193,k191}$=24.39(%) | STANDARD DEVIATION DIFFERENCES $\sigma_{DF_k193,k192}$=39.68(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.126

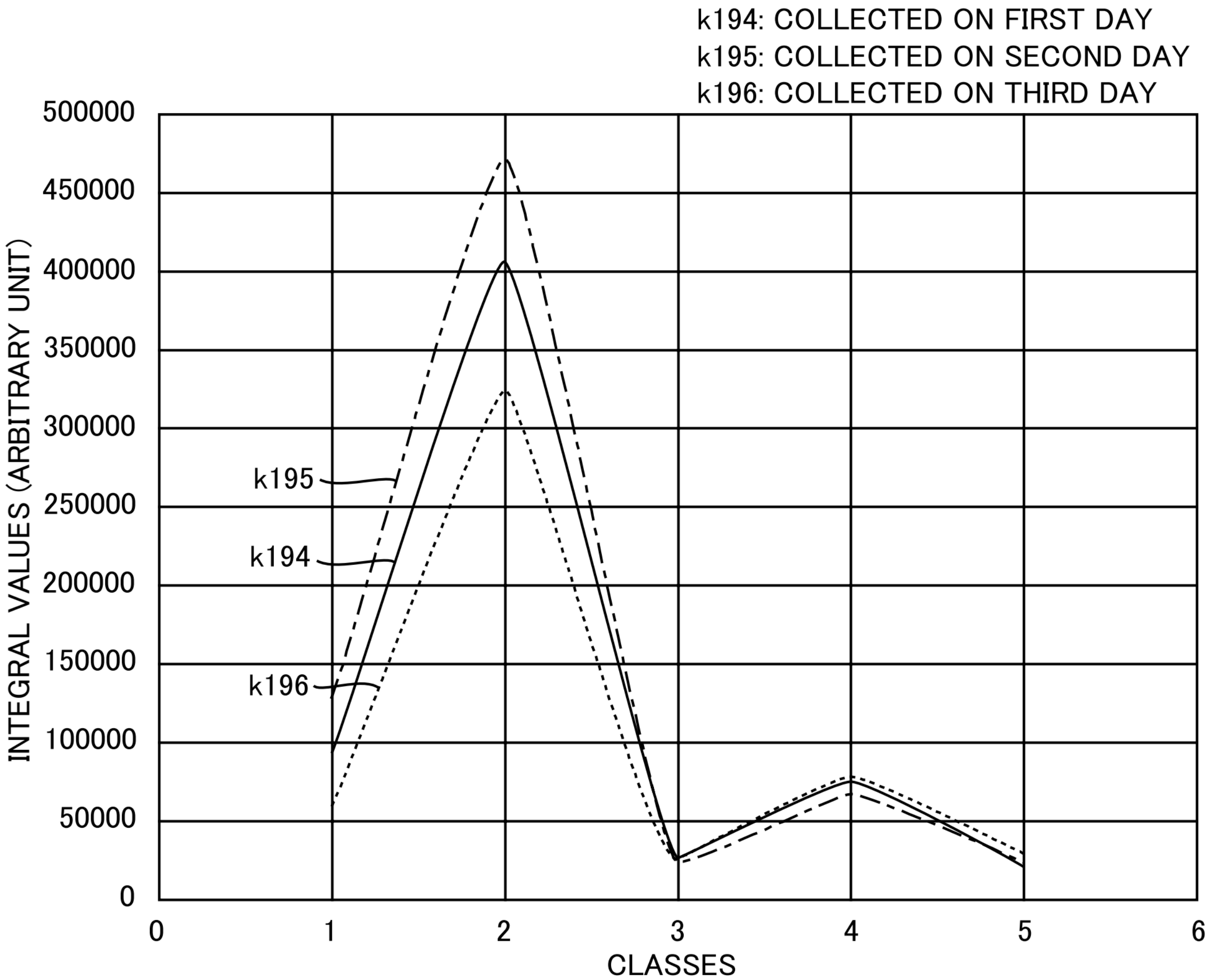
k194: COLLECTED ON FIRST DAY
k195: COLLECTED ON SECOND DAY
k196: COLLECTED ON THIRD DAY
INTEGRAL VALUES (ARBITRARY UNIT)
500000
450000
400000
350000
300000
250000
200000
150000
100000
50000
0
k195
k194
k196
0
1
2
3
4
5
6
CLASSES

FIG. 127

| NUMBER OF INTEGRAL VALUES: 5 | CURVE k194 | CURVE k195 | CURVE k196 |
|---|---|---|---|
| STANDARD DEVIATION OF DIFFERENCES BETWEEN MULTIPLE INTEGRAL VALUES ON CURVE k194 AND MULTIPLE INTEGRAL VALUES ON OTHER CURVES | | STANDARD DEVIATION DIFFERENCES $\sigma_{DF_k194,k195}$=15.52(%) | STANDARD DEVIATION DIFFERENCES $\sigma_{DF_k194,k196}$=26.19(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k195 AND MULTIPLE INTEGRAL VALUES ON OTHER CURVES | STANDARD DEVIATION DIFFERENCES $\sigma_{DF_k195,k194}$=15.52(%) | | STANDARD DEVIATION DIFFERENCES $\sigma_{DF_k195,k196}$=36.17(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k196 AND MULTIPLE INTEGRAL VALUES ON OTHER CURVES | STANDARD DEVIATION DIFFERENCES $\sigma_{DF_k196,k194}$=26.19(%) | STANDARD DEVIATION DIFFERENCES $\sigma_{DF_k196,k195}$=36.17(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.128

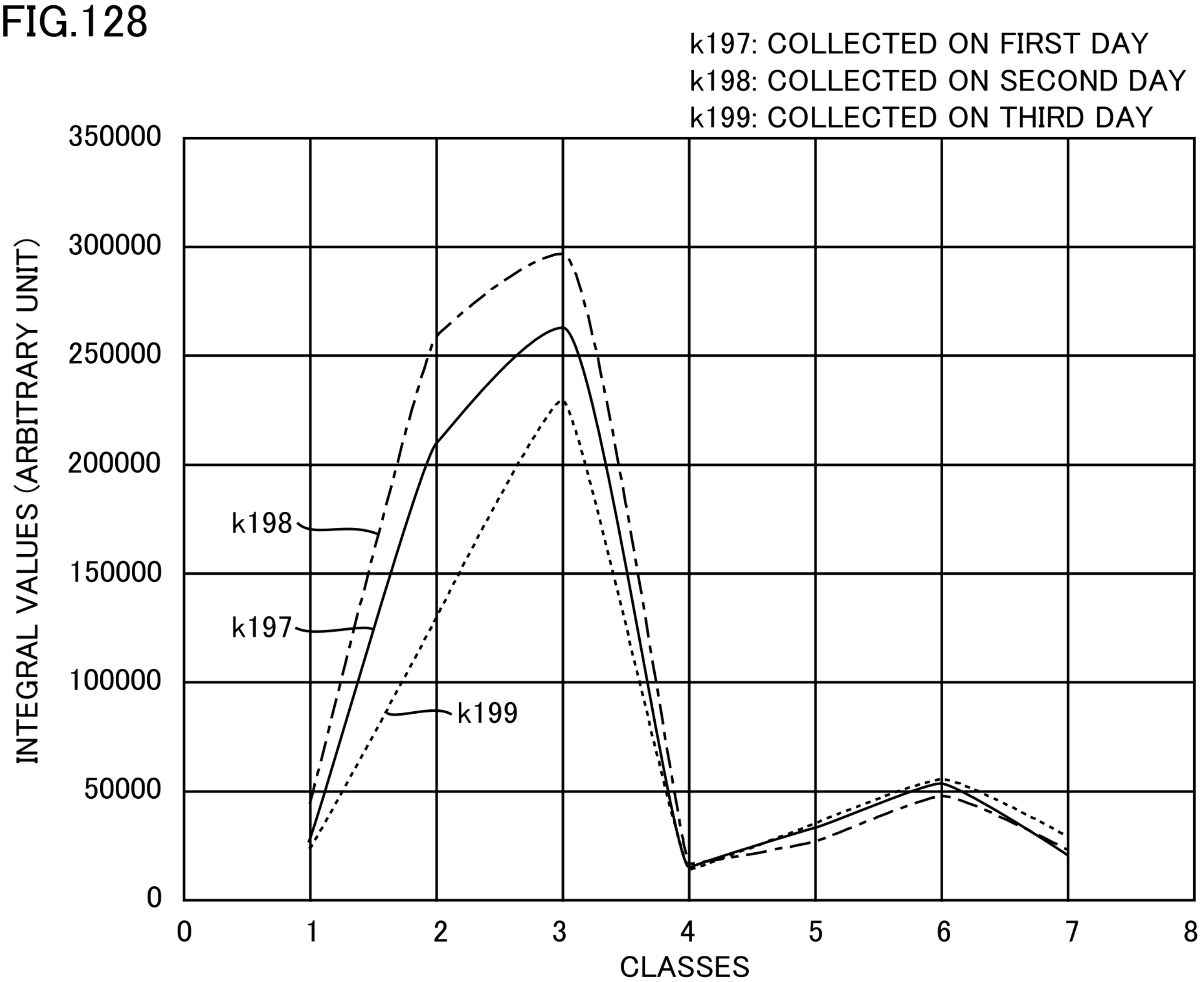
k197: COLLECTED ON FIRST DAY
k198: COLLECTED ON SECOND DAY
k199: COLLECTED ON THIRD DAY
INTEGRAL VALUES (ARBITRARY UNIT)
350000
300000
250000
200000
150000
100000
50000
0
k198
k197
k199
0
1
2
3
4
5
6
7
8
CLASSES

FIG. 129

| NUMBER OF INTEGRAL VALUES: 7 | CURVE k197 | CURVE k198 | CURVE k199 |
|---|---|---|---|
| STANDARD DEVIATION OF DIFFERENCES BETWEEN MULTIPLE INTEGRAL VALUES ON CURVE k197 AND MULTIPLE INTEGRAL VALUES ON OTHER CURVES | | STANDARD DEVIATION DIFFERENCES $\sigma_{DF_k197,k198}$=20.88(%) | STANDARD DEVIATION DIFFERENCES $\sigma_{DF_k197,k199}$=22.47(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k198 AND MULTIPLE INTEGRAL VALUES ON OTHER CURVES | STANDARD DEVIATION DIFFERENCES $\sigma_{DF_k198,k197}$=20.88(%) | | STANDARD DEVIATION DIFFERENCES $\sigma_{DF_k198,k199}$=34.84(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k199 AND MULTIPLE INTEGRAL VALUES ON OTHER CURVES | STANDARD DEVIATION DIFFERENCES $\sigma_{DF_k199,k197}$=22.47(%) | STANDARD DEVIATION DIFFERENCES $\sigma_{DF_k199,k198}$=34.84(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.130

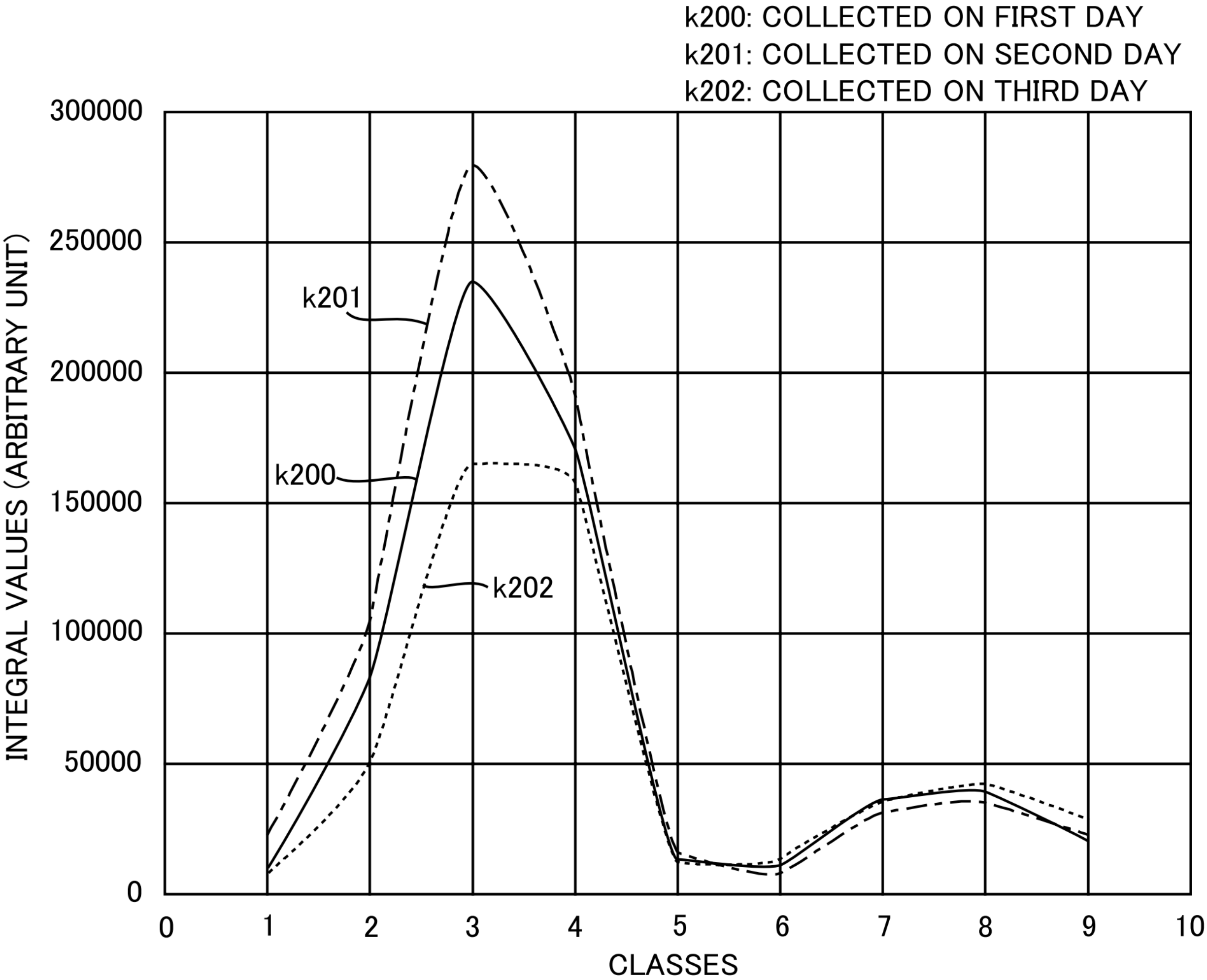
k200: COLLECTED ON FIRST DAY
k201: COLLECTED ON SECOND DAY
k202: COLLECTED ON THIRD DAY
300000
250000
200000
150000
100000
50000
0
INTEGRAL VALUES (ARBITRARY UNIT)
k201
k200
k202
0
1
2
3
4
5
6
7
8
9
10
CLASSES

FIG. 131

| NUMBER OF INTEGRAL VALUES: 9 | CURVE k200 | CURVE k201 | CURVE k202 |
|---|---|---|---|
| STANDARD DEVIATION OF DIFFERENCES BETWEEN MULTIPLE INTEGRAL VALUES ON CURVE k200 AND MULTIPLE INTEGRAL VALUES ON OTHER CURVES | | STANDARD DEVIATION DIFFERENCES $\sigma_{DF_k200,k201}$=29.60(%) | STANDARD DEVIATION DIFFERENCES $\sigma_{DF_k200,k202}$=23.73(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k201 AND MULTIPLE INTEGRAL VALUES ON OTHER CURVES | STANDARD DEVIATION DIFFERENCES $\sigma_{DF_k201,k200}$=29.60(%) | | STANDARD DEVIATION DIFFERENCES $\sigma_{DF_k201,k202}$=43.96(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k202 AND MULTIPLE INTEGRAL VALUES ON OTHER CURVES | STANDARD DEVIATION DIFFERENCES $\sigma_{DF_k202,k200}$=23.73(%) | STANDARD DEVIATION DIFFERENCES $\sigma_{DF_k202,k201}$=43.96(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.132

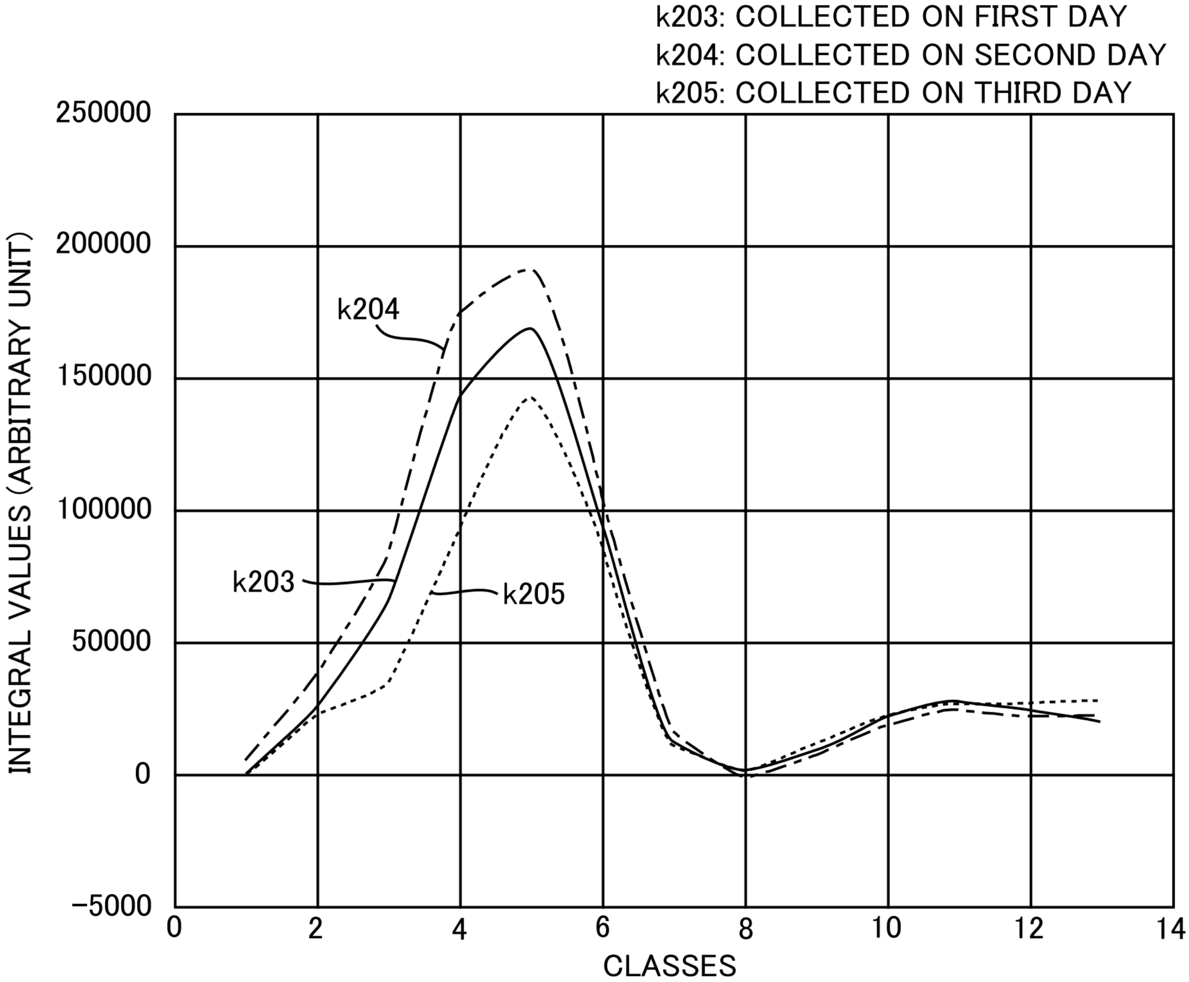
k203: COLLECTED ON FIRST DAY
k204: COLLECTED ON SECOND DAY
k205: COLLECTED ON THIRD DAY
250000
200000
150000
100000
50000
0
−5000
0
2
4
6
8
10
12
14
INTEGRAL VALUES (ARBITRARY UNIT)
CLASSES
k204
k203
k205

FIG. 133

| NUMBER OF INTEGRAL VALUES: 13 | CURVE k203 | CURVE k204 | CURVE k205 |
|---|---|---|---|
| STANDARD DEVIATION OF DIFFERENCES BETWEEN MULTIPLE INTEGRAL VALUES ON CURVE k203 AND MULTIPLE INTEGRAL VALUES ON OTHER CURVES | | STANDARD DEVIATION DIFFERENCES $\sigma_{DF_k203,k204}$=71.00(%) | STANDARD DEVIATION DIFFERENCES $\sigma_{DF_k203,k205}$=24.48(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k204 AND MULTIPLE INTEGRAL VALUES ON OTHER CURVES | STANDARD DEVIATION DIFFERENCES $\sigma_{DF_k204,k203}$=71.00(%) | | STANDARD DEVIATION DIFFERENCES $\sigma_{DF_k204,k205}$=76.92(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k205 AND MULTIPLE INTEGRAL VALUES ON OTHER CURVES | STANDARD DEVIATION DIFFERENCES $\sigma_{DF_k205,k203}$=24.48(%) | STANDARD DEVIATION DIFFERENCES $\sigma_{DF_k205,k204}$=76.92(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.134

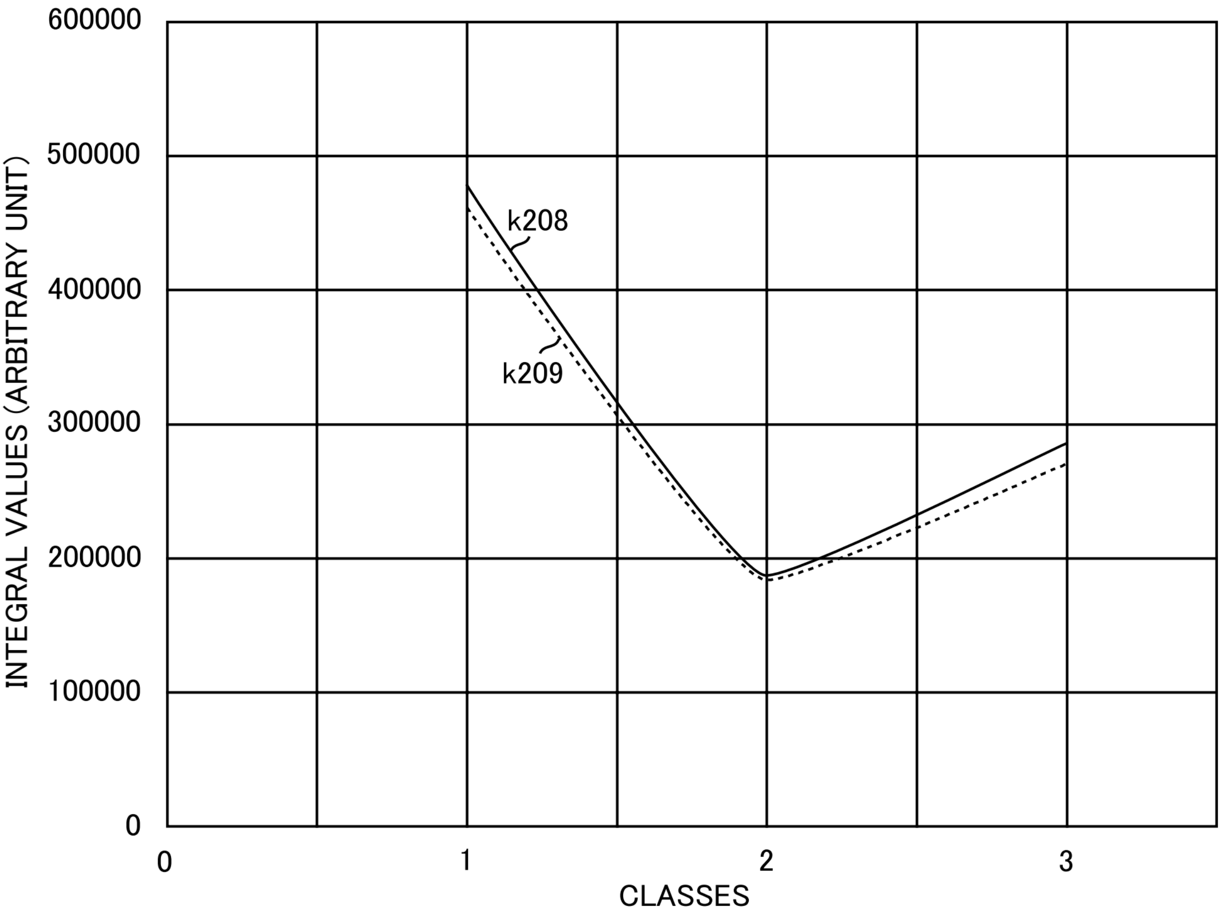
600000
500000
400000
300000
200000
100000
0
INTEGRAL VALUES (ARBITRARY UNIT)
k208
k209
0
1
2
3
CLASSES

FIG. 135

| NUMBER OF INTEGRAL VALUES: 3 | CURVE k208 | CURVE k209 |
|---|---|---|
| STANDARD DEVIATION OF DIFFERENCES BETWEEN MULTIPLE INTEGRAL VALUES ON CURVE k208 AND MULTIPLE INTEGRAL VALUES ON OTHER CURVES | | STANDARD DEVIATION DIFFERENCES $\sigma_{DF_k208,k209}$=1.24(%) |
| THRESHOLD VALUE | | 15(%) |
| JUDGMENT RESULT | | × |
| STANDARD DEVIATION OF DIFFERENCES BETWEEN MULTIPLE INTEGRAL VALUES ON CURVE k209 AND MULTIPLE INTEGRAL VALUES ON OTHER CURVES | STANDARD DEVIATION DIFFERENCES $\sigma_{DF_k209,k208}$=1.24(%) | |
| THRESHOLD VALUE | 15(%) | |
| JUDGMENT RESULT | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.136

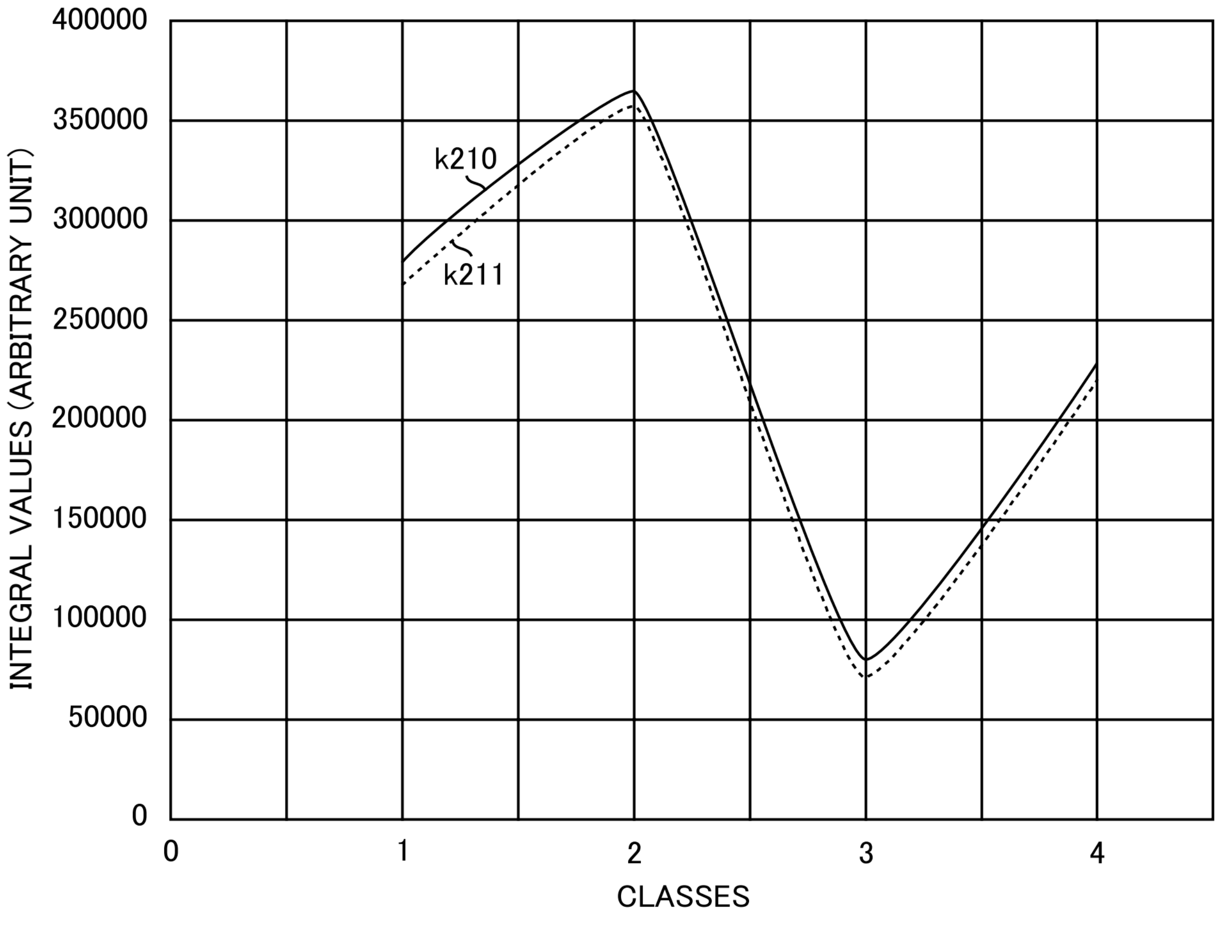
400000
350000
300000
250000
200000
150000
100000
50000
0
INTEGRAL VALUES (ARBITRARY UNIT)
k210
k211
0
1
2
3
4
CLASSES

FIG. 137

| NUMBER OF INTEGRAL VALUES: 4 | CURVE k210 | CURVE k211 |
|---|---|---|
| STANDARD DEVIATION OF DIFFERENCES BETWEEN MULTIPLE INTEGRAL VALUES ON CURVE k210 AND MULTIPLE INTEGRAL VALUES ON OTHER CURVES | | STANDARD DEVIATION DIFFERENCES $\sigma_{DF_k210,k211}$=3.96(%) |
| THRESHOLD VALUE | | 15(%) |
| JUDGMENT RESULT | | × |
| STANDARD DEVIATION OF DIFFERENCES BETWEEN MULTIPLE INTEGRAL VALUES ON CURVE k211 AND MULTIPLE INTEGRAL VALUES ON OTHER CURVES | STANDARD DEVIATION DIFFERENCES $\sigma_{DF_k211,k210}$=3.96(%) | |
| THRESHOLD VALUE | 15(%) | |
| JUDGMENT RESULT | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.138

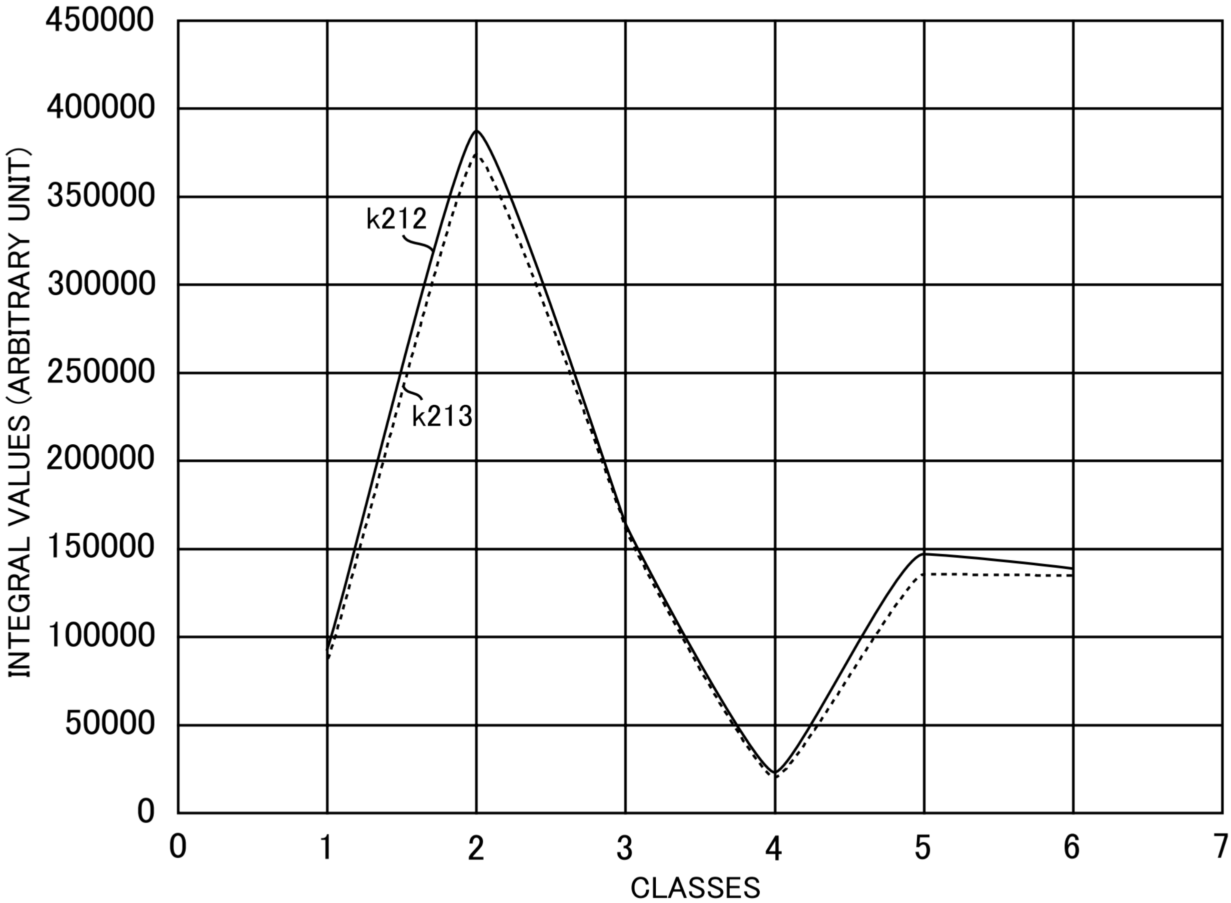
450000
400000
350000
300000
250000
200000
150000
100000
50000
0
INTEGRAL VALUES (ARBITRARY UNIT)
0
1
2
3
4
5
6
7
CLASSES
k212
k213

FIG. 139

| NUMBER OF INTEGRAL VALUES: 6 | CURVE k212 | CURVE k213 |
|---|---|---|
| STANDARD DEVIATION OF DIFFERENCES BETWEEN MULTIPLE INTEGRAL VALUES ON CURVE k212 AND MULTIPLE INTEGRAL VALUES ON OTHER CURVES | | STANDARD DEVIATION DIFFERENCES $\sigma_{DF_k212,k213}$=3.85(%) |
| THRESHOLD VALUE | | 15(%) |
| JUDGMENT RESULT | | × |
| STANDARD DEVIATION OF DIFFERENCES BETWEEN MULTIPLE INTEGRAL VALUES ON CURVE k213 AND MULTIPLE INTEGRAL VALUES ON OTHER CURVES | STANDARD DEVIATION DIFFERENCES $\sigma_{DF_k213,k212}$=3.85(%) | |
| THRESHOLD VALUE | 15(%) | |
| JUDGMENT RESULT | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.140

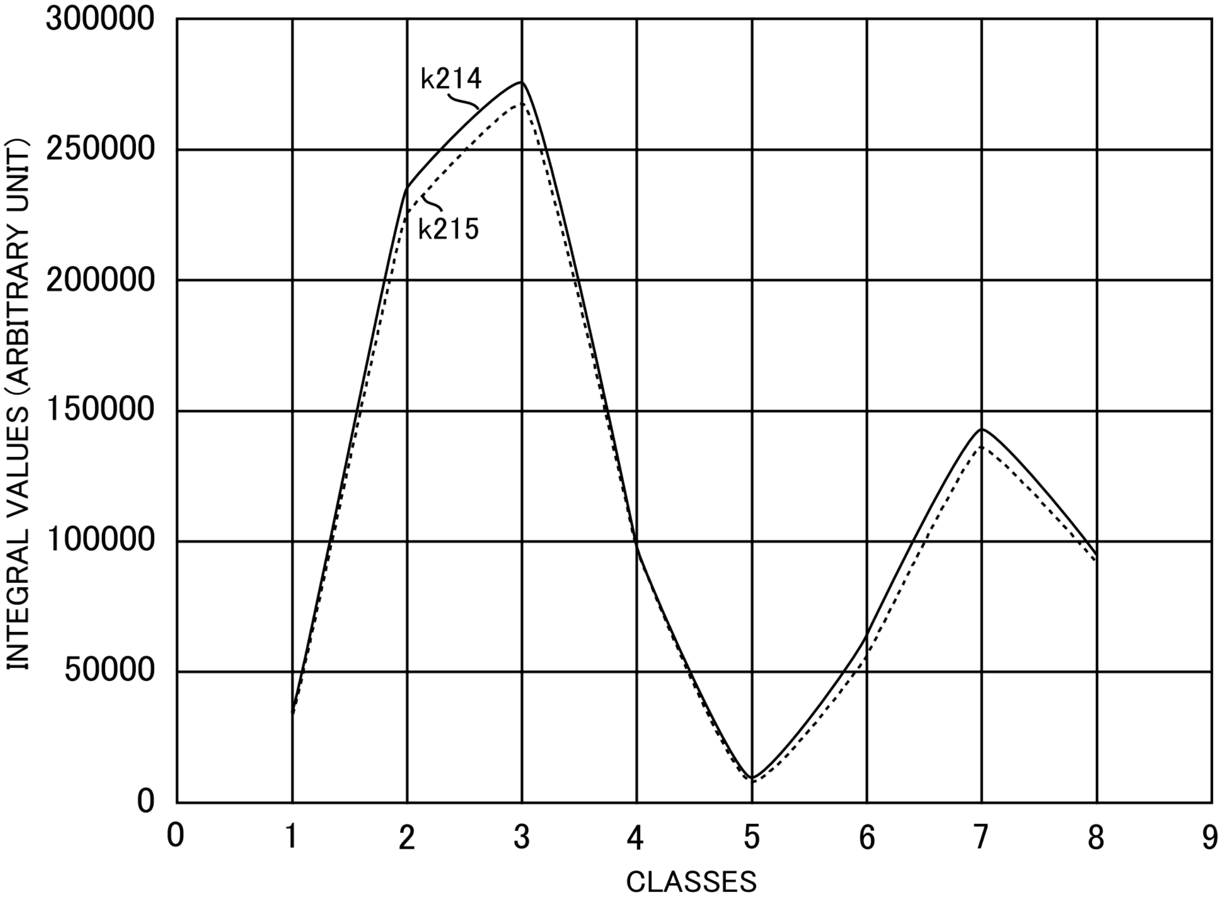

300000
250000
200000
150000
100000
50000
0
INTEGRAL VALUES (ARBITRARY UNIT)
k214
k215
0
1
2
3
4
5
6
7
8
9
CLASSES

FIG. 141

| NUMBER OF INTEGRAL VALUES: 8 | CURVE k214 | CURVE k215 |
|---|---|---|
| STANDARD DEVIATION OF DIFFERENCES BETWEEN MULTIPLE INTEGRAL VALUES ON CURVE k214 AND MULTIPLE INTEGRAL VALUES ON OTHER CURVES | | STANDARD DEVIATION DIFFERENCES $\sigma_{DF_k214,k215}$=4.24(%) |
| THRESHOLD VALUE | | 15(%) |
| JUDGMENT RESULT | | × |
| STANDARD DEVIATION OF DIFFERENCES BETWEEN MULTIPLE INTEGRAL VALUES ON CURVE k215 AND MULTIPLE INTEGRAL VALUES ON OTHER CURVES | STANDARD DEVIATION DIFFERENCES $\sigma_{DF_k215,k214}$=4.24(%) | |
| THRESHOLD VALUE | 15(%) | |
| JUDGMENT RESULT | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.142

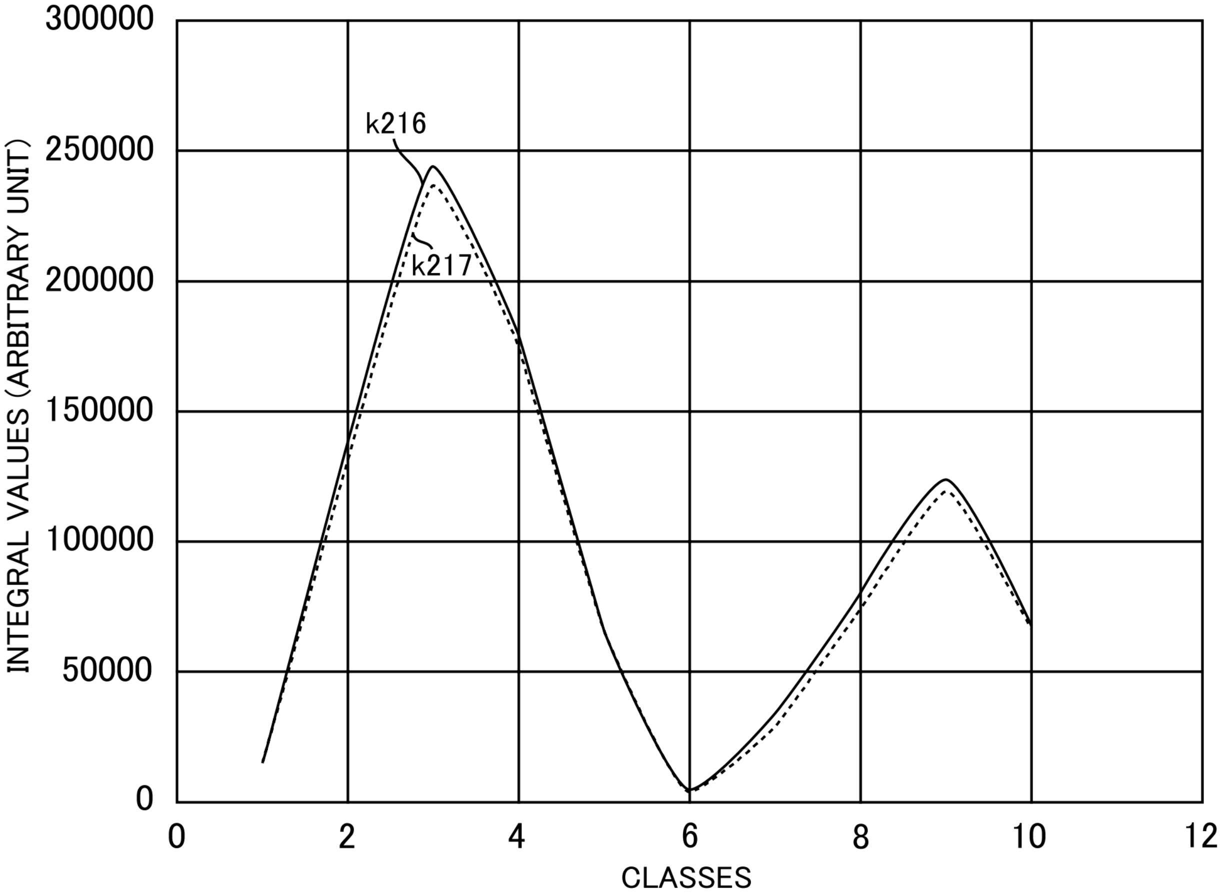
300000
250000
200000
150000
100000
50000
0
INTEGRAL VALUES (ARBITRARY UNIT)
k216
k217
0
2
4
6
8
10
12
CLASSES

FIG. 143

| NUMBER OF INTEGRAL VALUES: 10 | CURVE k216 | CURVE k217 |
|---|---|---|
| STANDARD DEVIATION OF DIFFERENCES BETWEEN MULTIPLE INTEGRAL VALUES ON CURVE k216 AND MULTIPLE INTEGRAL VALUES ON OTHER CURVES | | STANDARD DEVIATION DIFFERENCES $\sigma_{DF_k216,k217}$=4.61(%) |
| THRESHOLD VALUE | | 15(%) |
| JUDGMENT RESULT | | × |
| STANDARD DEVIATION OF DIFFERENCES BETWEEN MULTIPLE INTEGRAL VALUES ON CURVE k217 AND MULTIPLE INTEGRAL VALUES ON OTHER CURVES | STANDARD DEVIATION DIFFERENCES $\sigma_{DF_k217,k216}$=4.61(%) | |
| THRESHOLD VALUE | 15(%) | |
| JUDGMENT RESULT | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.144

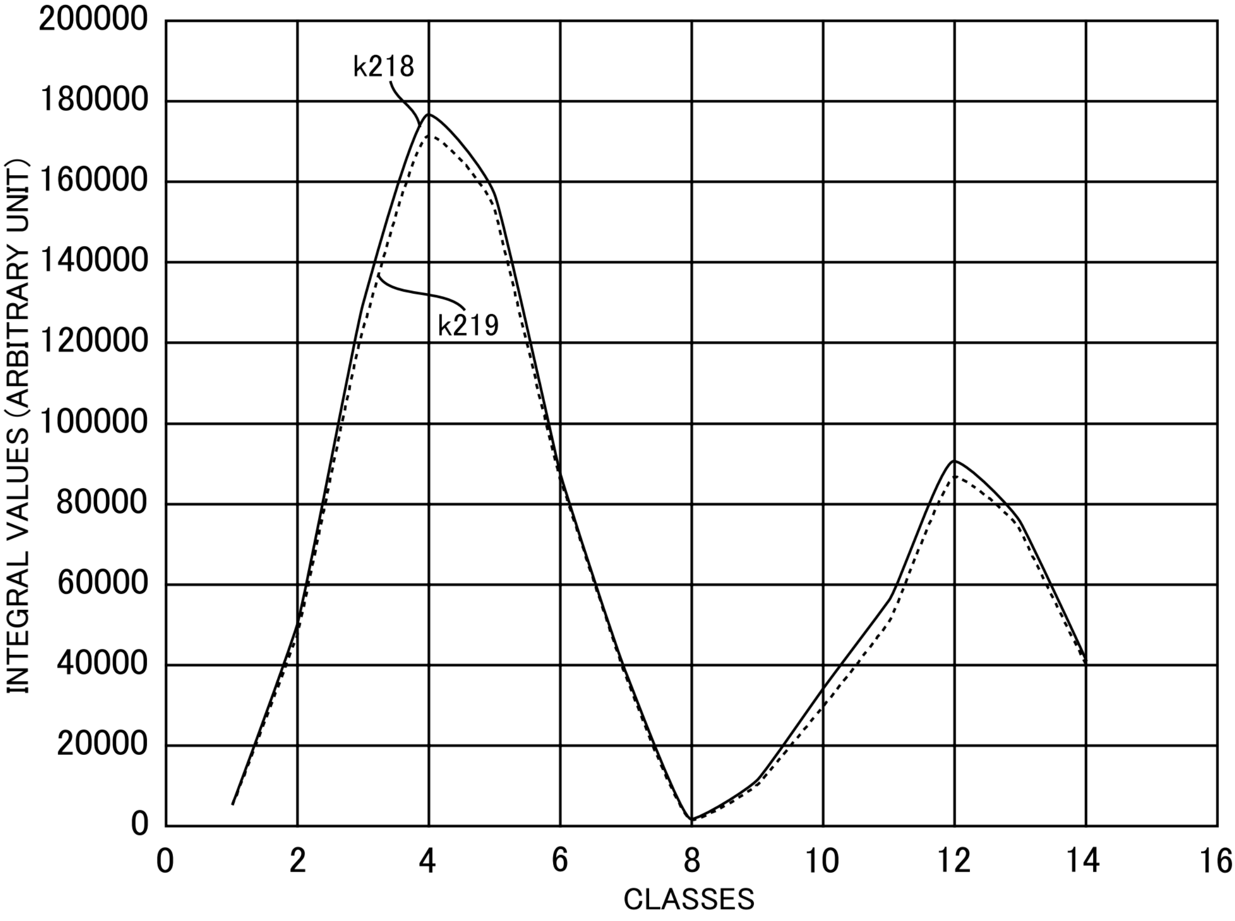
k218
k219
200000
180000
160000
140000
120000
100000
80000
60000
40000
20000
0
INTEGRAL VALUES (ARBITRARY UNIT)
0
2
4
6
8
10
12
14
16
CLASSES

FIG. 145

| NUMBER OF INTEGRAL VALUES: 14 | CURVE k218 | CURVE k219 |
|---|---|---|
| STANDARD DEVIATION OF DIFFERENCES BETWEEN MULTIPLE INTEGRAL VALUES ON CURVE k218 AND MULTIPLE INTEGRAL VALUES ON OTHER CURVES | | STANDARD DEVIATION DIFFERENCES $\sigma_{DF_k218,k219}$=5.00(%) |
| THRESHOLD VALUE | | 15(%) |
| JUDGMENT RESULT | | × |
| STANDARD DEVIATION OF DIFFERENCES BETWEEN MULTIPLE INTEGRAL VALUES ON CURVE k219 AND MULTIPLE INTEGRAL VALUES ON OTHER CURVES | STANDARD DEVIATION DIFFERENCES $\sigma_{DF_k219,k218}$=5.00(%) | |
| THRESHOLD VALUE | 15(%) | |
| JUDGMENT RESULT | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.146

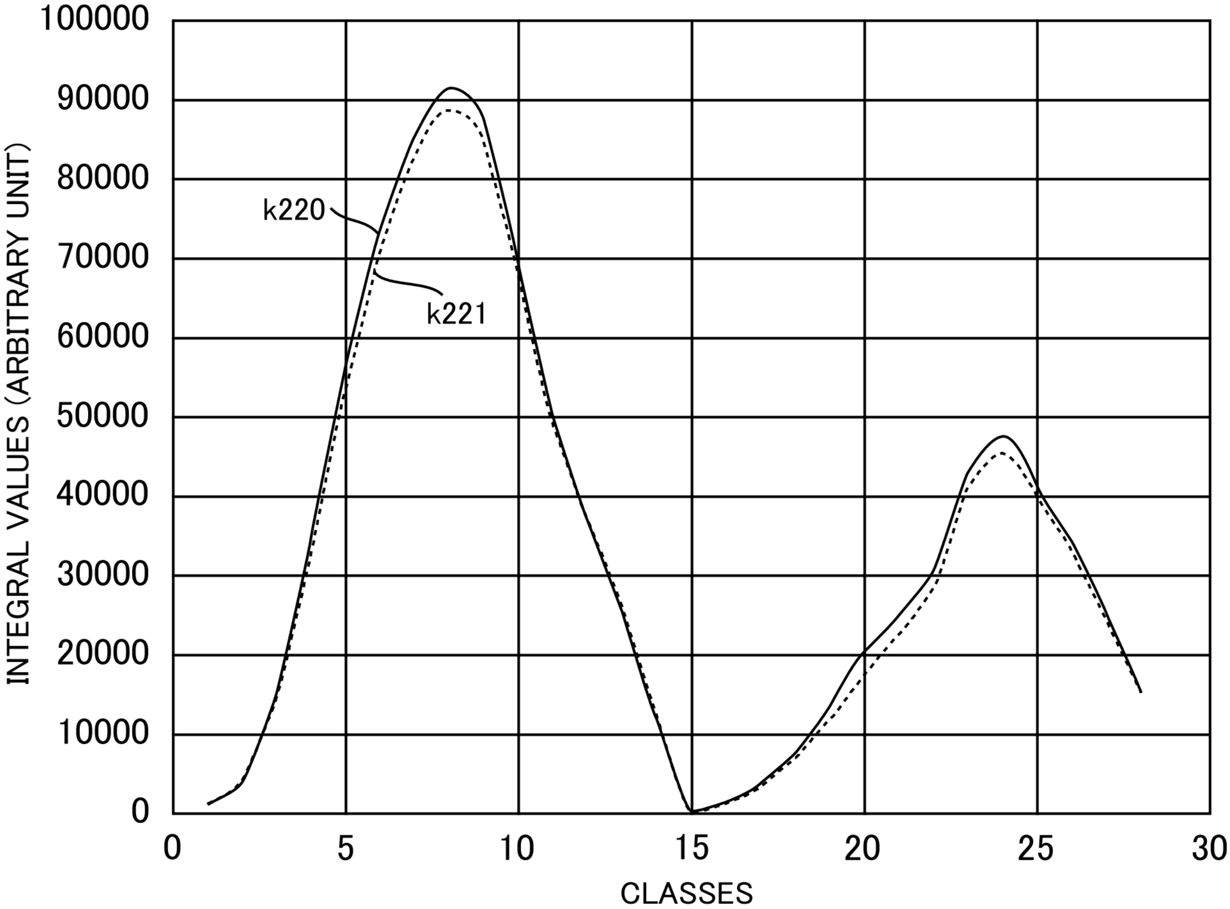
100000
90000
80000
70000
60000
50000
40000
30000
20000
10000
0
INTEGRAL VALUES (ARBITRARY UNIT)
k220
k221
0
5
10
15
20
25
30
CLASSES

FIG. 147

| NUMBER OF INTEGRAL VALUES: 28 | CURVE k220 | CURVE k221 |
|---|---|---|
| STANDARD DEVIATION OF DIFFERENCES BETWEEN MULTIPLE INTEGRAL VALUES ON CURVE k220 AND MULTIPLE INTEGRAL VALUES ON OTHER CURVES | | STANDARD DEVIATION DIFFERENCES $\sigma_{DF_k220,k221}$=7.86(%) |
| THRESHOLD VALUE | | 15(%) |
| JUDGMENT RESULT | | × |
| STANDARD DEVIATION OF DIFFERENCES BETWEEN MULTIPLE INTEGRAL VALUES ON CURVE k221 AND MULTIPLE INTEGRAL VALUES ON OTHER CURVES | STANDARD DEVIATION DIFFERENCES $\sigma_{DF_k221,k220}$=7.86(%) | |
| THRESHOLD VALUE | 15(%) | |
| JUDGMENT RESULT | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.148

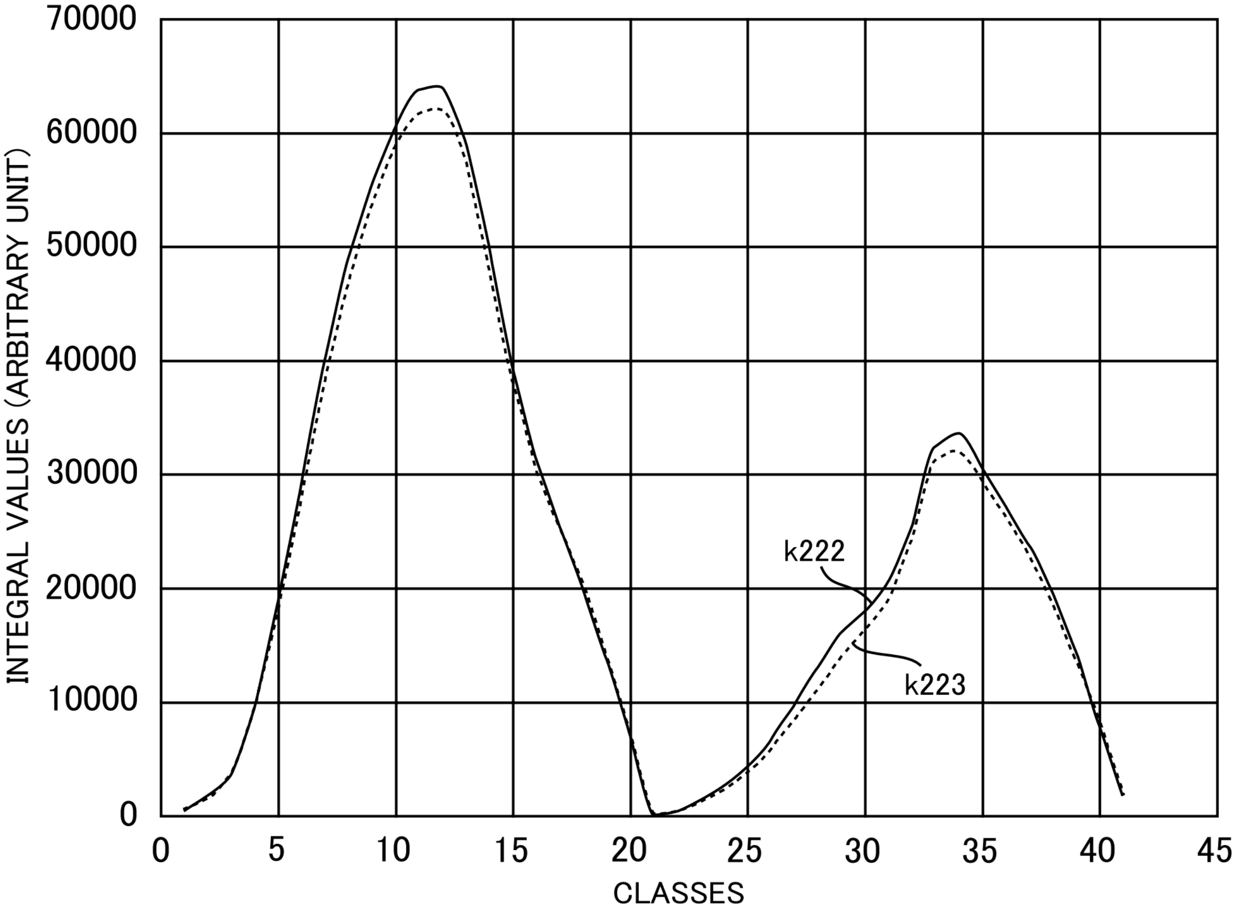
70000
60000
50000
40000
30000
20000
10000
0
INTEGRAL VALUES (ARBITRARY UNIT)
0
5
10
15
20
25
30
35
40
45
CLASSES
k222
k223

FIG. 149

| NUMBER OF INTEGRAL VALUES: 41 | CURVE k222 | CURVE k223 |
|---|---|---|
| STANDARD DEVIATION OF DIFFERENCES BETWEEN MULTIPLE INTEGRAL VALUES ON CURVE k222 AND MULTIPLE INTEGRAL VALUES ON OTHER CURVES | | STANDARD DEVIATION DIFFERENCES $\sigma_{DF_k222,k223}$=6.97(%) |
| THRESHOLD VALUE | | 15(%) |
| JUDGMENT RESULT | | × |
| STANDARD DEVIATION OF DIFFERENCES BETWEEN MULTIPLE INTEGRAL VALUES ON CURVE k223 AND MULTIPLE INTEGRAL VALUES ON OTHER CURVES | STANDARD DEVIATION DIFFERENCES $\sigma_{DF_k223,k222}$=6.97(%) | |
| THRESHOLD VALUE | 15(%) | |
| JUDGMENT RESULT | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.150

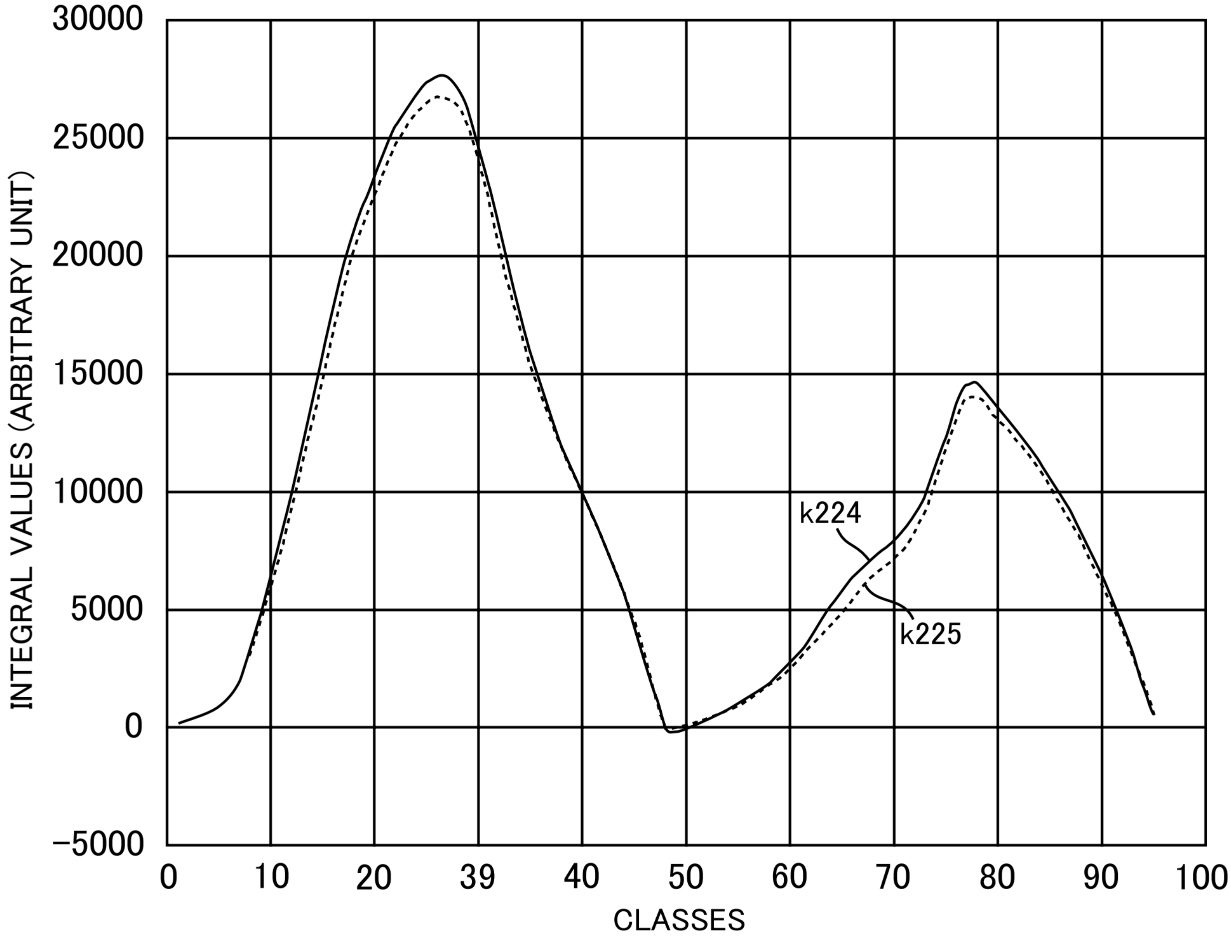
30000
25000
20000
15000
10000
5000
0
−5000
INTEGRAL VALUES (ARBITRARY UNIT)
0
10
20
39
40
50
60
70
80
90
100
CLASSES
k224
k225

FIG. 151

| NUMBER OF INTEGRAL VALUES: 95 | CURVE k224 | CURVE k225 |
|---|---|---|
| STANDARD DEVIATION OF DIFFERENCES BETWEEN MULTIPLE INTEGRAL VALUES ON CURVE k224 AND MULTIPLE INTEGRAL VALUES ON OTHER CURVES | | STANDARD DEVIATION DIFFERENCES $\sigma_{DF_k224,k225}$=9.75(%) |
| THRESHOLD VALUE | | 15(%) |
| JUDGMENT RESULT | | × |
| STANDARD DEVIATION OF DIFFERENCES BETWEEN MULTIPLE INTEGRAL VALUES ON CURVE k225 AND MULTIPLE INTEGRAL VALUES ON OTHER CURVES | STANDARD DEVIATION DIFFERENCES $\sigma_{DF_k225,k224}$=9.75(%) | |
| THRESHOLD VALUE | 15(%) | |
| JUDGMENT RESULT | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.152

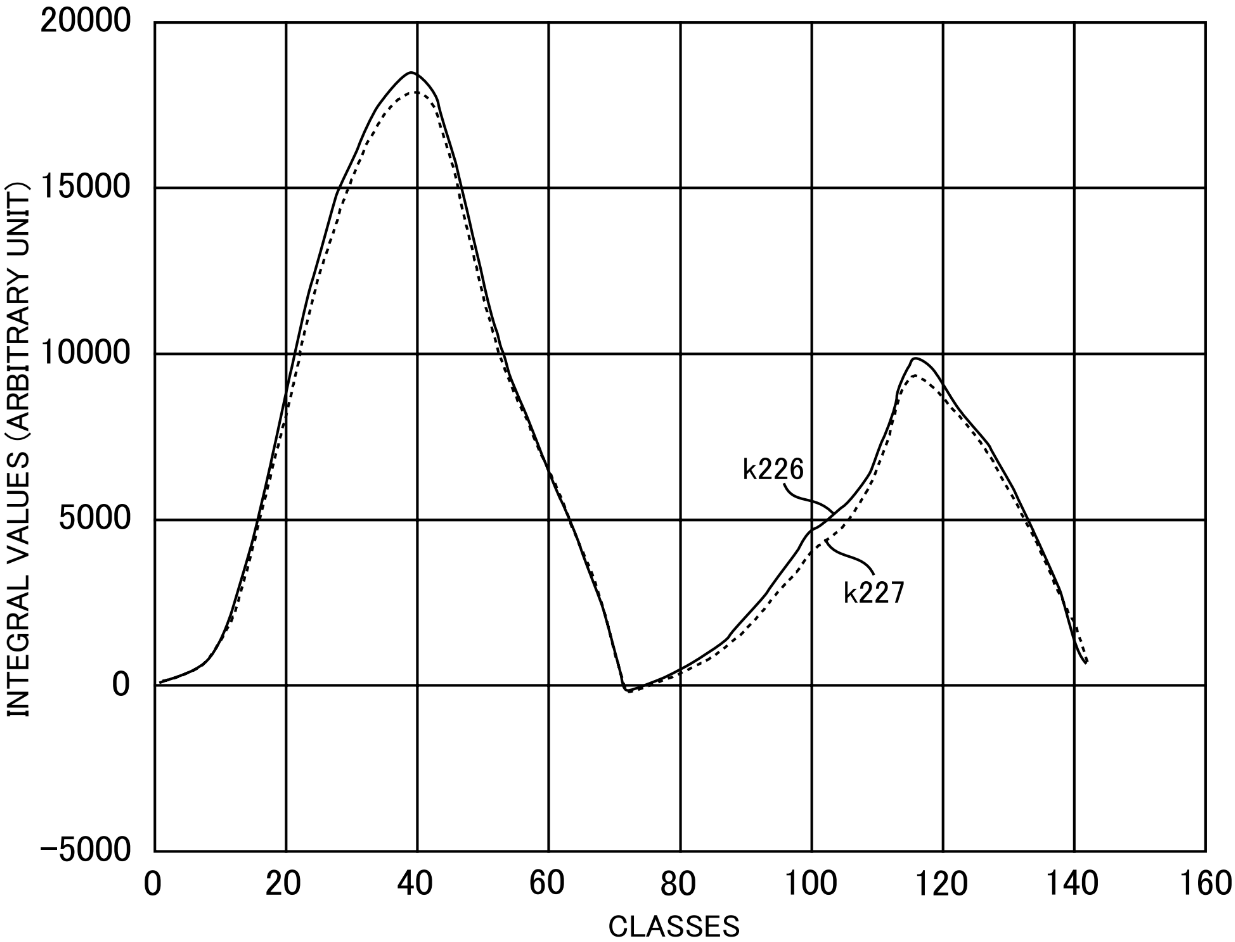

20000
15000
10000
5000
0
−5000
INTEGRAL VALUES (ARBITRARY UNIT)
0
20
40
60
80
100
120
140
160
CLASSES
k226
k227

FIG. 153

| NUMBER OF INTEGRAL VALUES: 142 | CURVE k226 | CURVE k227 |
|---|---|---|
| STANDARD DEVIATION OF DIFFERENCES BETWEEN MULTIPLE INTEGRAL VALUES ON CURVE k226 AND MULTIPLE INTEGRAL VALUES ON OTHER CURVES | | STANDARD DEVIATION DIFFERENCES $\sigma_{DF_k226,k227}$=7.29(%) |
| THRESHOLD VALUE | | 15(%) |
| JUDGMENT RESULT | | × |
| STANDARD DEVIATION OF DIFFERENCES BETWEEN MULTIPLE INTEGRAL VALUES ON CURVE k227 AND MULTIPLE INTEGRAL VALUES ON OTHER CURVES | STANDARD DEVIATION DIFFERENCES $\sigma_{DF_k227,k226}$=7.29(%) | |
| THRESHOLD VALUE | 15(%) | |
| JUDGMENT RESULT | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.154

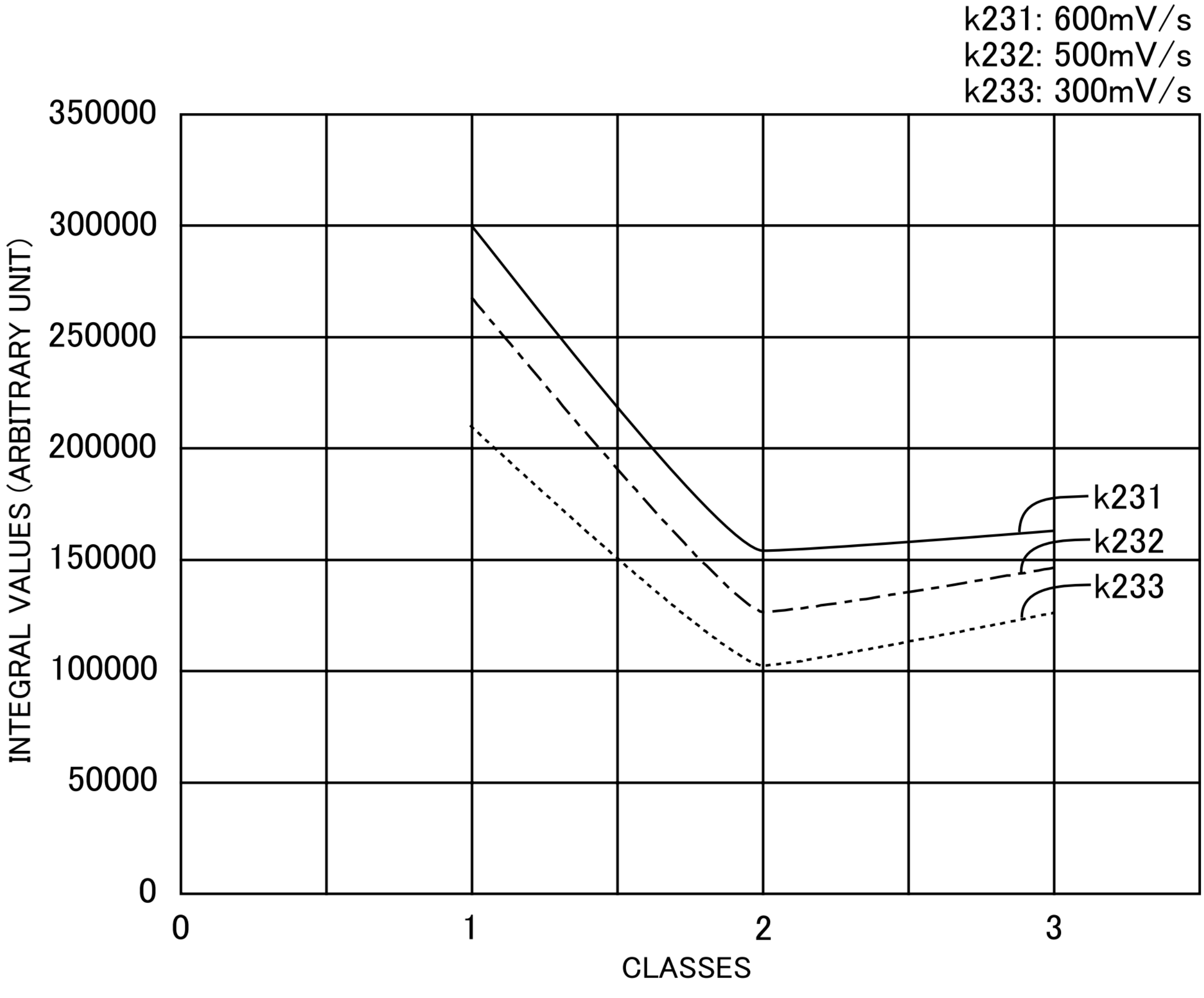
k231: 600mV/s
k232: 500mV/s
k233: 300mV/s
350000
300000
250000
200000
150000
100000
50000
0
INTEGRAL VALUES (ARBITRARY UNIT)
0
1
2
3
CLASSES
k231
k232
k233

FIG. 155

| NUMBER OF INTEGRAL VALUES: 3 | CURVE k231 | CURVE k232 | CURVE k233 |
|---|---|---|---|
| STANDARD DEVIATION OF DIFFERENCES BETWEEN MULTIPLE INTEGRAL VALUES ON CURVE k231 AND MULTIPLE INTEGRAL VALUES ON OTHER CURVES | | STANDARD DEVIATION DIFFERENCES $\sigma_{DF_k231,k232}$=4.16(%) | STANDARD DEVIATION DIFFERENCES $\sigma_{DF_k231,k233}$=6.09(%) |
| THRESHOLD VALUE | | 15(%) | 15(%) |
| JUDGMENT RESULT | | × | × |
| STANDARD DEVIATION OF DIFFERENCES BETWEEN MULTIPLE INTEGRAL VALUES ON CURVE k232 AND MULTIPLE INTEGRAL VALUES ON OTHER CURVES | STANDARD DEVIATION DIFFERENCES $\sigma_{DF_k232,k231}$=4.16(%) | | STANDARD DEVIATION DIFFERENCES $\sigma_{DF_k232,k233}$=3.84(%) |
| THRESHOLD VALUE | 15(%) | | 15(%) |
| JUDGMENT RESULT | × | | × |
| STANDARD DEVIATION OF DIFFERENCES BETWEEN MULTIPLE INTEGRAL VALUES ON CURVE k233 AND MULTIPLE INTEGRAL VALUES ON OTHER CURVES | STANDARD DEVIATION DIFFERENCES $\sigma_{DF_k233,k231}$=6.09(%) | STANDARD DEVIATION DIFFERENCES $\sigma_{DF_k233,k232}$=3.84(%) | |
| THRESHOLD VALUE | 15(%) | 15(%) | |
| JUDGMENT RESULT | × | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.156

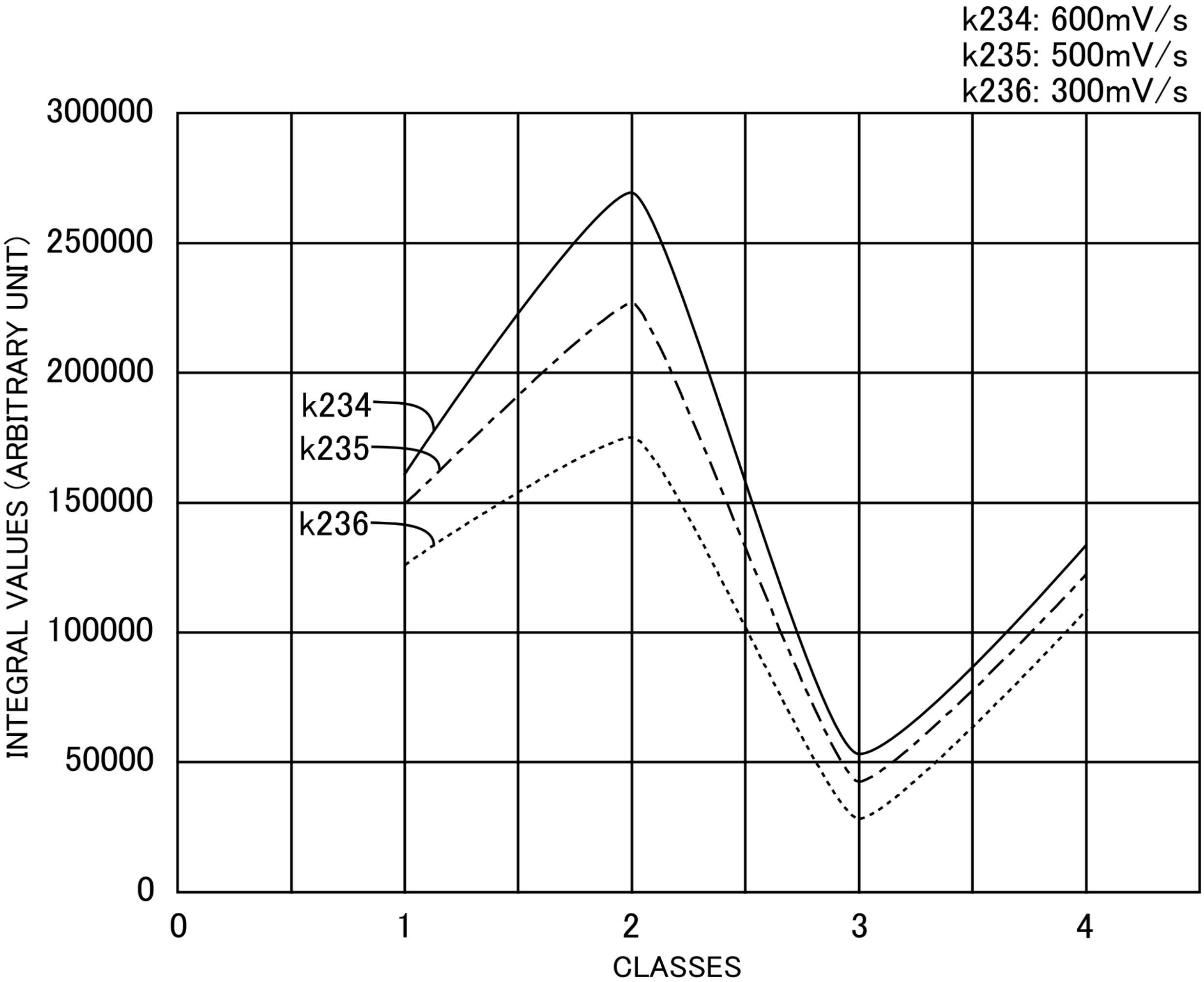
k234: 600mV/s
k235: 500mV/s
k236: 300mV/s
300000
250000
200000
150000
100000
50000
0
INTEGRAL VALUES (ARBITRARY UNIT)
k234
k235
k236
0
1
2
3
4
CLASSES

FIG. 157

| NUMBER OF INTEGRAL VALUES: 4 | CURVE k234 | CURVE k235 | CURVE k236 |
|---|---|---|---|
| STANDARD DEVIATION OF DIFFERENCES BETWEEN MULTIPLE INTEGRAL VALUES ON CURVE k234 AND MULTIPLE INTEGRAL VALUES ON OTHER CURVES | | STANDARD DEVIATION DIFFERENCES $\sigma_{DF_k234,k235}$=6.06(%) | STANDARD DEVIATION DIFFERENCES $\sigma_{DF_k234,k236}$=16.30(%) |
| THRESHOLD VALUE | | 15(%) | 15(%) |
| JUDGMENT RESULT | | × | ○ |
| STANDARD DEVIATION OF DIFFERENCES BETWEEN MULTIPLE INTEGRAL VALUES ON CURVE k235 AND MULTIPLE INTEGRAL VALUES ON OTHER CURVES | STANDARD DEVIATION DIFFERENCES $\sigma_{DF_k235,k234}$=6.06(%) | | STANDARD DEVIATION DIFFERENCES $\sigma_{DF_k235,k236}$=11.05(%) |
| THRESHOLD VALUE | 15(%) | | 15(%) |
| JUDGMENT RESULT | × | | × |
| STANDARD DEVIATION OF DIFFERENCES BETWEEN MULTIPLE INTEGRAL VALUES ON CURVE k236 AND MULTIPLE INTEGRAL VALUES ON OTHER CURVES | STANDARD DEVIATION DIFFERENCES $\sigma_{DF_k236,k234}$=16.30(%) | STANDARD DEVIATION DIFFERENCES $\sigma_{DF_k236,k235}$=11.05(%) | |
| THRESHOLD VALUE | 15(%) | 15(%) | |
| JUDGMENT RESULT | ○ | × | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.158

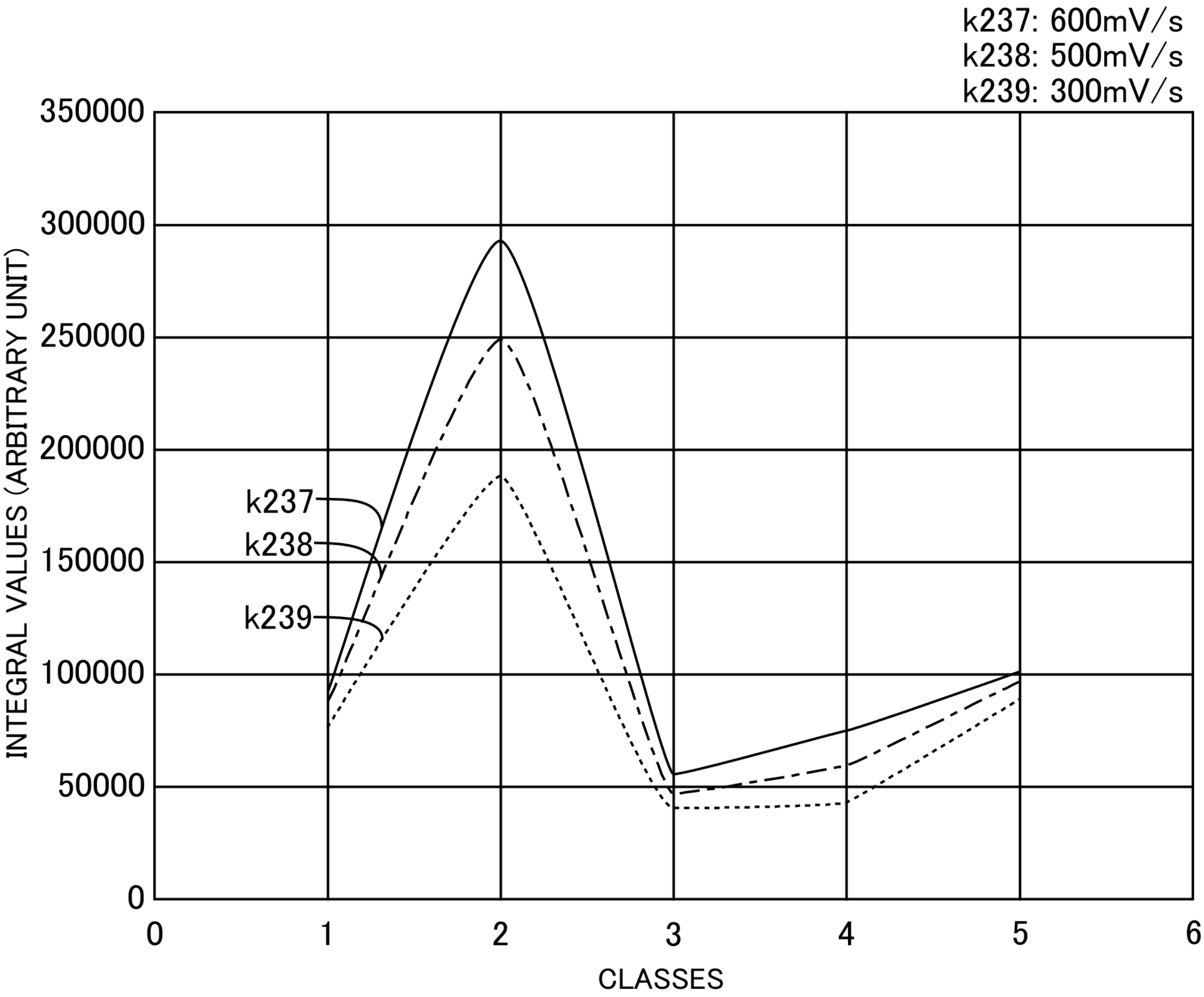
k237: 600mV/s
k238: 500mV/s
k239: 300mV/s
INTEGRAL VALUES (ARBITRARY UNIT)
350000
300000
250000
200000
150000
100000
50000
0
k237
k238
k239
0
1
2
3
4
5
6
CLASSES

FIG. 159

| NUMBER OF INTEGRAL VALUES: 5 | CURVE k237 | CURVE k238 | CURVE k239 |
|---|---|---|---|
| STANDARD DEVIATION OF DIFFERENCES BETWEEN MULTIPLE INTEGRAL VALUES ON CURVE k237 AND MULTIPLE INTEGRAL VALUES ON OTHER CURVES | | STANDARD DEVIATION DIFFERENCES $\sigma_{DF_k237,k238}$=7.06(%) | STANDARD DEVIATION DIFFERENCES $\sigma_{DF_k237,k239}$=15.11(%) |
| THRESHOLD VALUE | | 15(%) | 15(%) |
| JUDGMENT RESULT | | × | ○ |
| STANDARD DEVIATION OF DIFFERENCES BETWEEN MULTIPLE INTEGRAL VALUES ON CURVE k238 AND MULTIPLE INTEGRAL VALUES ON OTHER CURVES | STANDARD DEVIATION DIFFERENCES $\sigma_{DF_k238,k237}$=7.06(%) | | STANDARD DEVIATION DIFFERENCES $\sigma_{DF_k238,k239}$=9.04(%) |
| THRESHOLD VALUE | 15(%) | | 15(%) |
| JUDGMENT RESULT | × | | × |
| STANDARD DEVIATION OF DIFFERENCES BETWEEN MULTIPLE INTEGRAL VALUES ON CURVE k239 AND MULTIPLE INTEGRAL VALUES ON OTHER CURVES | STANDARD DEVIATION DIFFERENCES $\sigma_{DF_k239,k237}$=15.11(%) | STANDARD DEVIATION DIFFERENCES $\sigma_{DF_k239,k238}$=9.04(%) | |
| THRESHOLD VALUE | 15(%) | 15(%) | |
| JUDGMENT RESULT | ○ | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.160

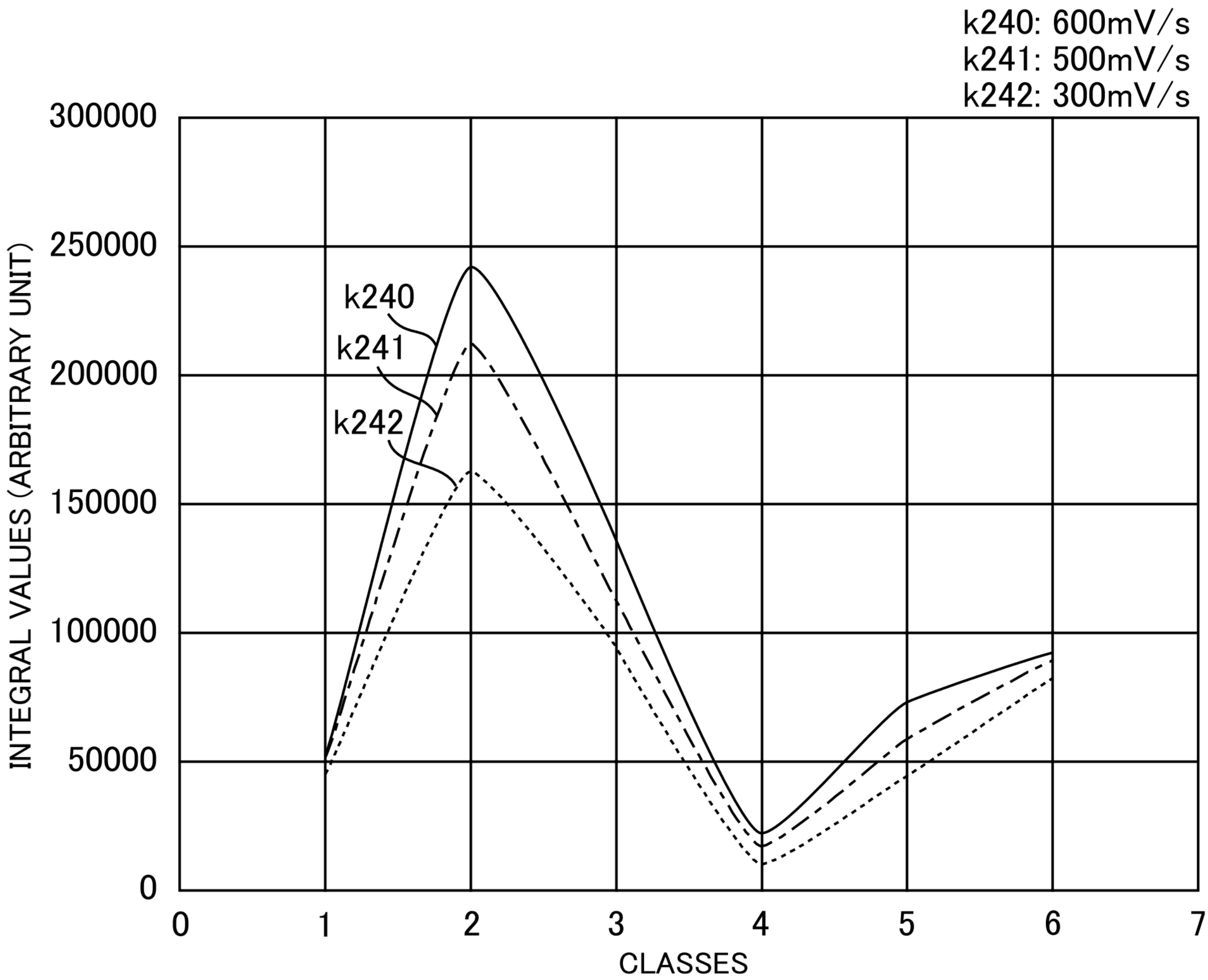
k240: 600mV/s
k241: 500mV/s
k242: 300mV/s
INTEGRAL VALUES (ARBITRARY UNIT)
300000
250000
200000
150000
100000
50000
0
k240
k241
k242
0
1
2
3
4
5
6
7
CLASSES

FIG. 161

| NUMBER OF INTEGRAL VALUES: 6 | CURVE k240 | CURVE k241 | CURVE k242 |
|---|---|---|---|
| STANDARD DEVIATION OF DIFFERENCES BETWEEN MULTIPLE INTEGRAL VALUES ON CURVE k240 AND MULTIPLE INTEGRAL VALUES ON OTHER CURVES | | STANDARD DEVIATION DIFFERENCES $\sigma_{DF_k240,k241}$=9.07(%) | STANDARD DEVIATION DIFFERENCES $\sigma_{DF_k240,k242}$=20.09(%) |
| THRESHOLD VALUE | | 15(%) | 15(%) |
| JUDGMENT RESULT | | × | ○ |
| STANDARD DEVIATION OF DIFFERENCES BETWEEN MULTIPLE INTEGRAL VALUES ON CURVE k241 AND MULTIPLE INTEGRAL VALUES ON OTHER CURVES | STANDARD DEVIATION DIFFERENCES $\sigma_{DF_k241,k240}$=9.07(%) | | STANDARD DEVIATION DIFFERENCES $\sigma_{DF_k241,k242}$=13.67(%) |
| THRESHOLD VALUE | 15(%) | | 15(%) |
| JUDGMENT RESULT | × | | × |
| STANDARD DEVIATION OF DIFFERENCES BETWEEN MULTIPLE INTEGRAL VALUES ON CURVE k242 AND MULTIPLE INTEGRAL VALUES ON OTHER CURVES | STANDARD DEVIATION DIFFERENCES $\sigma_{DF_k242,k240}$=20.09(%) | STANDARD DEVIATION DIFFERENCES $\sigma_{DF_k242,k241}$=13.67(%) | |
| THRESHOLD VALUE | 15(%) | 15(%) | |
| JUDGMENT RESULT | ○ | × | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.162

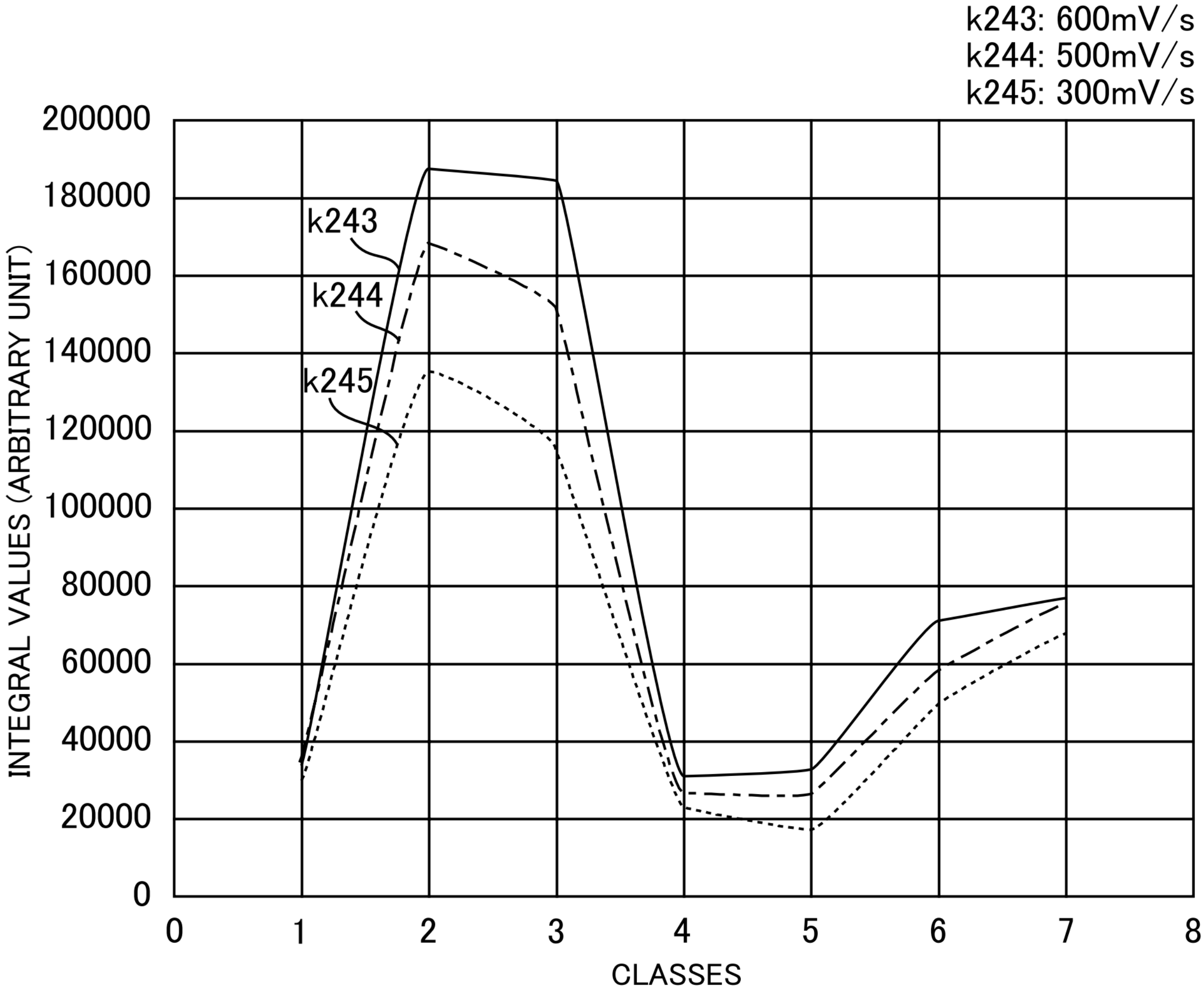
k243: 600mV/s
k244: 500mV/s
k245: 300mV/s
INTEGRAL VALUES (ARBITRARY UNIT)
200000
180000
160000
140000
120000
100000
80000
60000
40000
20000
0
k243
k244
k245
0
1
2
3
4
5
6
7
8
CLASSES

FIG. 163

| NUMBER OF INTEGRAL VALUES: 7 | CURVE k243 | CURVE k244 | CURVE k245 |
|---|---|---|---|
| STANDARD DEVIATION OF DIFFERENCES BETWEEN MULTIPLE INTEGRAL VALUES ON CURVE k243 AND MULTIPLE INTEGRAL VALUES ON OTHER CURVES | | STANDARD DEVIATION DIFFERENCES $\sigma_{DF_k243,k244}$=8.75(%) | STANDARD DEVIATION DIFFERENCES $\sigma_{DF_k243,k245}$=16.32(%) |
| THRESHOLD VALUE | | 15(%) | 15(%) |
| JUDGMENT RESULT | | × | ○ |
| STANDARD DEVIATION OF DIFFERENCES BETWEEN MULTIPLE INTEGRAL VALUES ON CURVE k244 AND MULTIPLE INTEGRAL VALUES ON OTHER CURVES | STANDARD DEVIATION DIFFERENCES $\sigma_{DF_k244,k243}$=8.75(%) | | STANDARD DEVIATION DIFFERENCES $\sigma_{DF_k244,k245}$=9.88(%) |
| THRESHOLD VALUE | 15(%) | | 15(%) |
| JUDGMENT RESULT | × | | × |
| STANDARD DEVIATION OF DIFFERENCES BETWEEN MULTIPLE INTEGRAL VALUES ON CURVE k245 AND MULTIPLE INTEGRAL VALUES ON OTHER CURVES | STANDARD DEVIATION DIFFERENCES $\sigma_{DF_k245,k243}$=16.32(%) | STANDARD DEVIATION DIFFERENCES $\sigma_{DF_k245,k244}$=9.88(%) | |
| THRESHOLD VALUE | 15(%) | 15(%) | |
| JUDGMENT RESULT | ○ | × | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG. 164

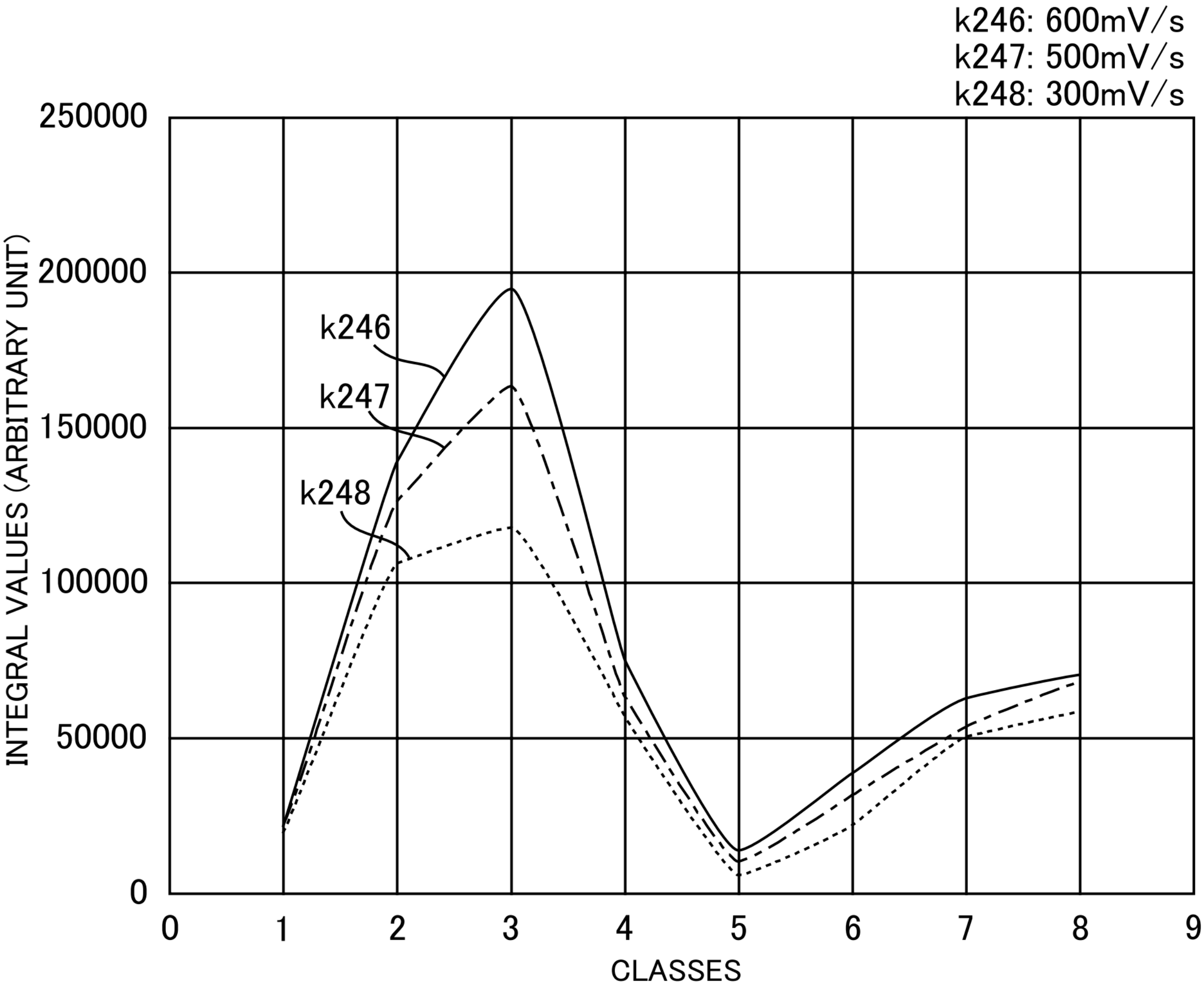
k246: 600mV/s
k247: 500mV/s
k248: 300mV/s
INTEGRAL VALUES (ARBITRARY UNIT)
250000
200000
150000
100000
50000
0
k246
k247
k248
0
1
2
3
4
5
6
7
8
9
CLASSES

FIG. 165

| NUMBER OF INTEGRAL VALUES: 8 | CURVE k246 | CURVE k247 | CURVE k248 |
|---|---|---|---|
| STANDARD DEVIATION OF DIFFERENCES BETWEEN MULTIPLE INTEGRAL VALUES ON CURVE k246 AND MULTIPLE INTEGRAL VALUES ON OTHER CURVES | | STANDARD DEVIATION DIFFERENCES $\sigma_{DF_k246,k247}$=10.30(%) | STANDARD DEVIATION DIFFERENCES $\sigma_{DF_k246,k248}$=22.14(%) |
| THRESHOLD VALUE | | 15(%) | 15(%) |
| JUDGMENT RESULT | | × | ○ |
| STANDARD DEVIATION OF DIFFERENCES BETWEEN MULTIPLE INTEGRAL VALUES ON CURVE k247 AND MULTIPLE INTEGRAL VALUES ON OTHER CURVES | STANDARD DEVIATION DIFFERENCES $\sigma_{DF_k247,k246}$=10.30(%) | | STANDARD DEVIATION DIFFERENCES $\sigma_{DF_k247,k248}$=15.43(%) |
| THRESHOLD VALUE | 15(%) | | 15(%) |
| JUDGMENT RESULT | × | | ○ |
| STANDARD DEVIATION OF DIFFERENCES BETWEEN MULTIPLE INTEGRAL VALUES ON CURVE k248 AND MULTIPLE INTEGRAL VALUES ON OTHER CURVES | STANDARD DEVIATION DIFFERENCES $\sigma_{DF_k248,k246}$=22.14(%) | STANDARD DEVIATION DIFFERENCES $\sigma_{DF_k248,k247}$=15.43(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.166

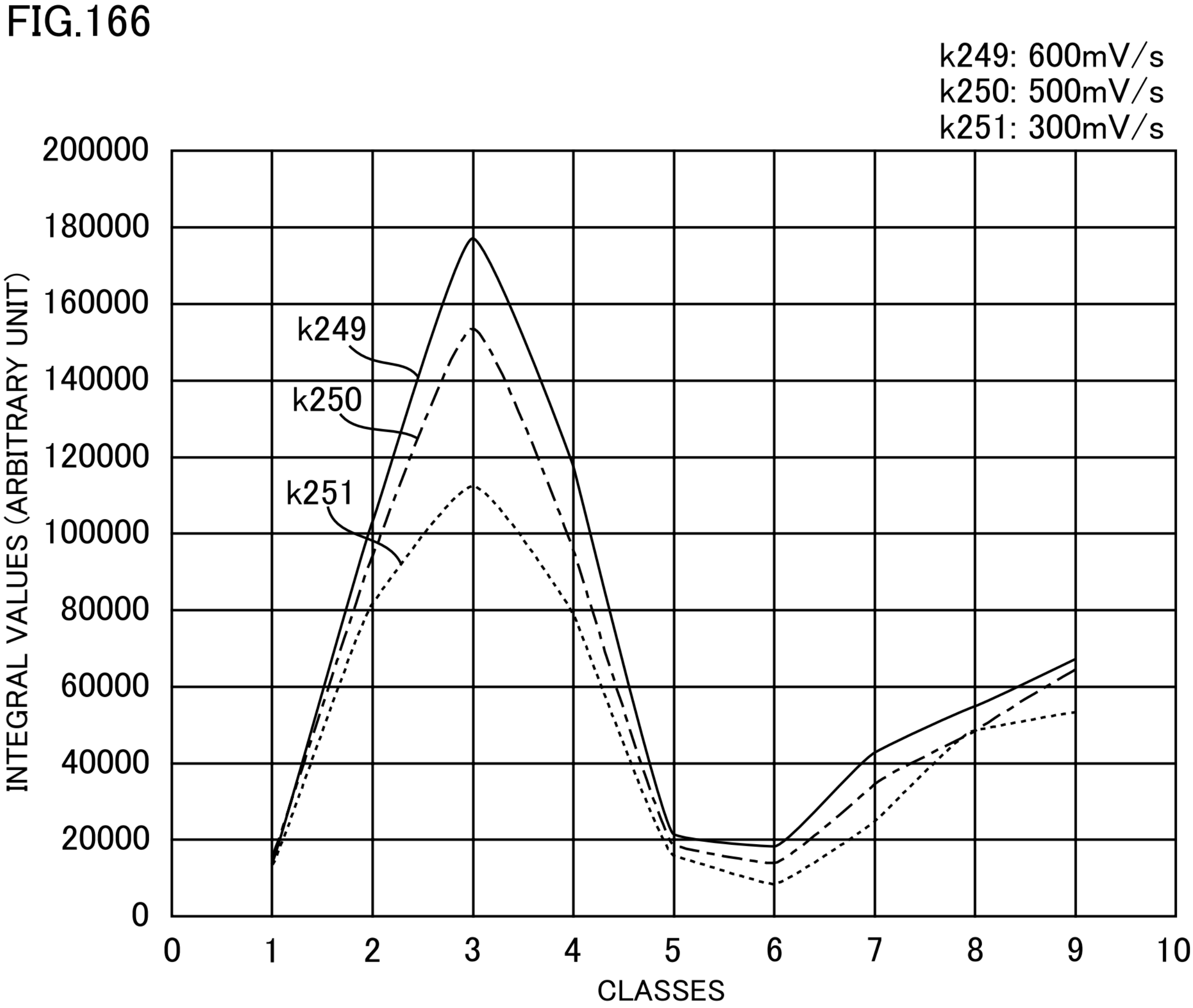
k249: 600mV/s
k250: 500mV/s
k251: 300mV/s
k249
k250
k251
INTEGRAL VALUES (ARBITRARY UNIT)
200000
180000
160000
140000
120000
100000
80000
60000
40000
20000
0
0 1 2 3 4 5 6 7 8 9 10
CLASSES

FIG. 167

| NUMBER OF INTEGRAL VALUES: 9 | CURVE k249 | CURVE k250 | CURVE k251 |
|---|---|---|---|
| STANDARD DEVIATION OF DIFFERENCES BETWEEN MULTIPLE INTEGRAL VALUES ON CURVE k249 AND MULTIPLE INTEGRAL VALUES ON OTHER CURVES | | STANDARD DEVIATION DIFFERENCES $\sigma_{DF_k249,k250}$=11.24(%) | STANDARD DEVIATION DIFFERENCES $\sigma_{DF_k249,k251}$=20.68(%) |
| THRESHOLD VALUE | | 15(%) | 15(%) |
| JUDGMENT RESULT | | × | ○ |
| STANDARD DEVIATION OF DIFFERENCES BETWEEN MULTIPLE INTEGRAL VALUES ON CURVE k250 AND MULTIPLE INTEGRAL VALUES ON OTHER CURVES | STANDARD DEVIATION DIFFERENCES $\sigma_{DF_k250,k249}$=11.24(%) | | STANDARD DEVIATION DIFFERENCES $\sigma_{DF_k250,k251}$=13.46(%) |
| THRESHOLD VALUE | 15(%) | | 15(%) |
| JUDGMENT RESULT | × | | × |
| STANDARD DEVIATION OF DIFFERENCES BETWEEN MULTIPLE INTEGRAL VALUES ON CURVE k251 AND MULTIPLE INTEGRAL VALUES ON OTHER CURVES | STANDARD DEVIATION DIFFERENCES $\sigma_{DF_k251,k249}$=20.68(%) | STANDARD DEVIATION DIFFERENCES $\sigma_{DF_k251,k250}$=13.46(%) | |
| THRESHOLD VALUE | 15(%) | 15(%) | |
| JUDGMENT RESULT | ○ | × | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.168

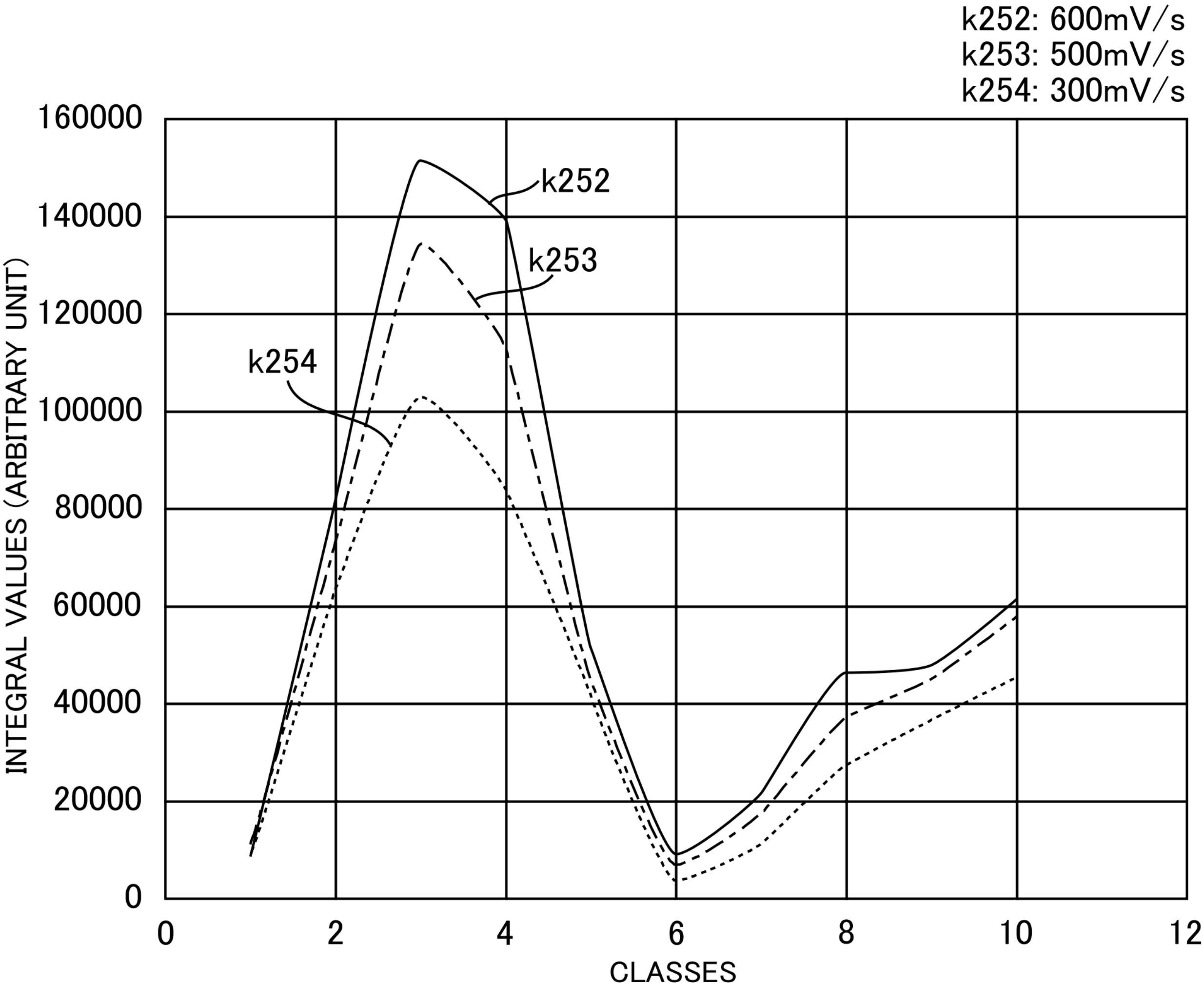
k252: 600mV/s
k253: 500mV/s
k254: 300mV/s
160000
140000
120000
100000
80000
60000
40000
20000
0
INTEGRAL VALUES (ARBITRARY UNIT)
k252
k253
k254
0
2
4
6
8
10
12
CLASSES

FIG. 169

| NUMBER OF INTEGRAL VALUES: 10 | CURVE k252 | CURVE k253 | CURVE k254 |
|---|---|---|---|
| STANDARD DEVIATION OF DIFFERENCES BETWEEN MULTIPLE INTEGRAL VALUES ON CURVE k252 AND MULTIPLE INTEGRAL VALUES ON OTHER CURVES | | STANDARD DEVIATION DIFFERENCES $\sigma_{DF_k252,k253}$=13.34(%) | STANDARD DEVIATION DIFFERENCES $\sigma_{DF_k252,k254}$=26.22(%) |
| THRESHOLD VALUE | | 15(%) | 15(%) |
| JUDGMENT RESULT | | × | ○ |
| STANDARD DEVIATION OF DIFFERENCES BETWEEN MULTIPLE INTEGRAL VALUES ON CURVE k253 AND MULTIPLE INTEGRAL VALUES ON OTHER CURVES | STANDARD DEVIATION DIFFERENCES $\sigma_{DF_k253,k252}$=13.34(%) | | STANDARD DEVIATION DIFFERENCES $\sigma_{DF_k253,k254}$=17.22(%) |
| THRESHOLD VALUE | 15(%) | | 15(%) |
| JUDGMENT RESULT | × | | ○ |
| STANDARD DEVIATION OF DIFFERENCES BETWEEN MULTIPLE INTEGRAL VALUES ON CURVE k254 AND MULTIPLE INTEGRAL VALUES ON OTHER CURVES | STANDARD DEVIATION DIFFERENCES $\sigma_{DF_k254,k252}$=26.22(%) | STANDARD DEVIATION DIFFERENCES $\sigma_{DF_k254,k253}$=17.22(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.170

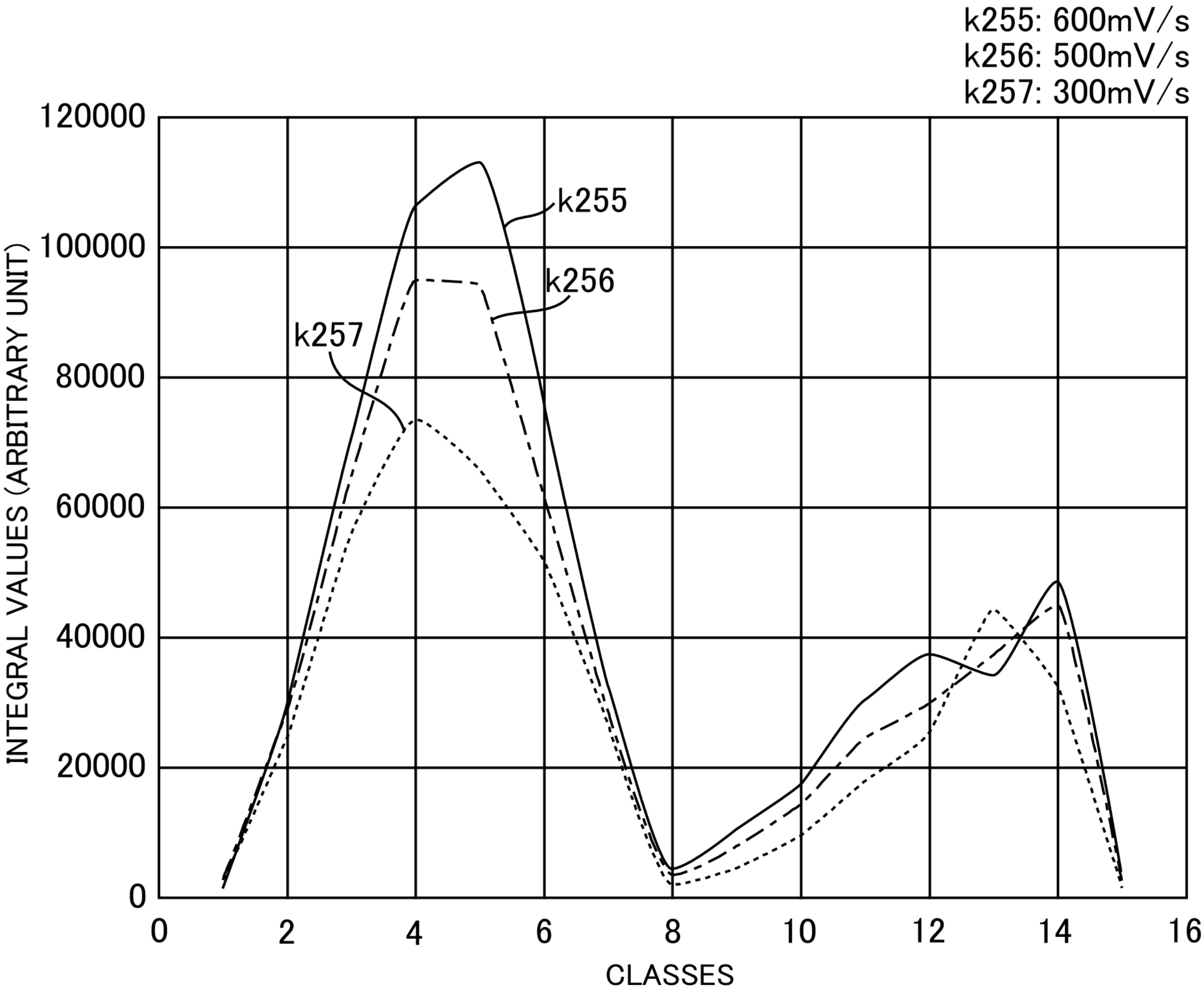
k255: 600mV/s
k256: 500mV/s
k257: 300mV/s
k255
k256
k257
INTEGRAL VALUES (ARBITRARY UNIT)
120000
100000
80000
60000
40000
20000
0
0
2
4
6
8
10
12
14
16
CLASSES

FIG. 171

| NUMBER OF INTEGRAL VALUES: 15 | CURVE k255 | CURVE k256 | CURVE k257 |
|---|---|---|---|
| STANDARD DEVIATION OF DIFFERENCES BETWEEN MULTIPLE INTEGRAL VALUES ON CURVE k255 AND MULTIPLE INTEGRAL VALUES ON OTHER CURVES | | STANDARD DEVIATION DIFFERENCES $\sigma_{DF_k255,k256}$=26.26(%) | STANDARD DEVIATION DIFFERENCES $\sigma_{DF_k255,k257}$=39.25(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k256 AND MULTIPLE INTEGRAL VALUES ON OTHER CURVES | STANDARD DEVIATION DIFFERENCES $\sigma_{DF_k256,k255}$=26.26(%) | | STANDARD DEVIATION DIFFERENCES $\sigma_{DF_k256,k257}$=19.46(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k257 AND MULTIPLE INTEGRAL VALUES ON OTHER CURVES | STANDARD DEVIATION DIFFERENCES $\sigma_{DF_k257,k255}$=39.25(%) | STANDARD DEVIATION DIFFERENCES $\sigma_{DF_k257,k256}$=19.46(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.172

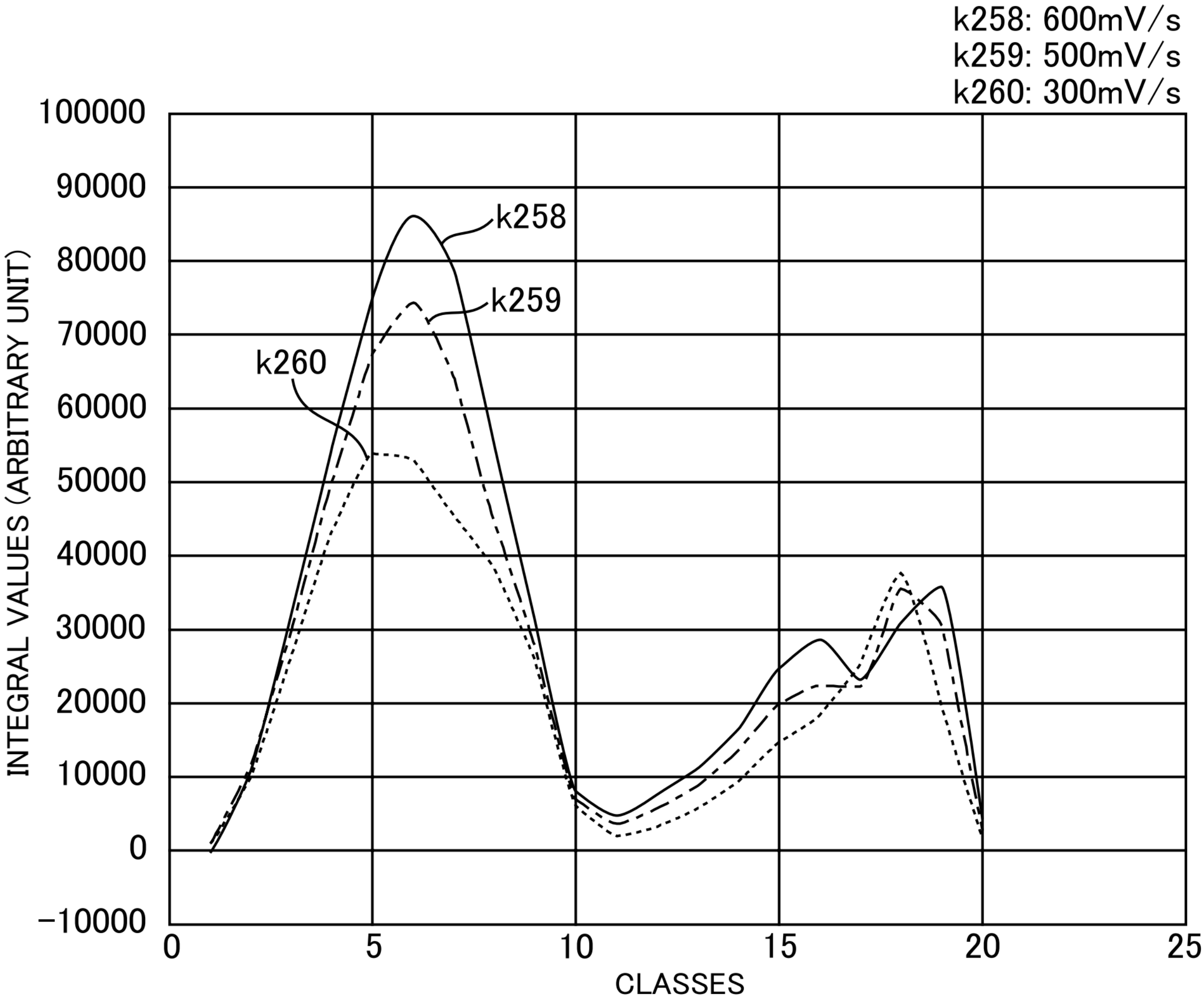
k258: 600mV/s
k259: 500mV/s
k260: 300mV/s
100000
90000
80000
70000
60000
50000
40000
30000
20000
10000
0
−10000
INTEGRAL VALUES (ARBITRARY UNIT)
k258
k259
k260
0
5
10
15
20
25
CLASSES

FIG. 173

| NUMBER OF INTEGRAL VALUES: 20 | CURVE k258 | CURVE k259 | CURVE k260 |
|---|---|---|---|
| STANDARD DEVIATION OF DIFFERENCES BETWEEN MULTIPLE INTEGRAL VALUES ON CURVE k258 AND MULTIPLE INTEGRAL VALUES ON OTHER CURVES | | STANDARD DEVIATION DIFFERENCES $\sigma_{DF_k258,k259}$=48.49(%) | STANDARD DEVIATION DIFFERENCES $\sigma_{DF_k258,k260}$=59.43(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k259 AND MULTIPLE INTEGRAL VALUES ON OTHER CURVES | STANDARD DEVIATION DIFFERENCES $\sigma_{DF_k259,k258}$=48.49(%) | | STANDARD DEVIATION DIFFERENCES $\sigma_{DF_k259,k260}$=20.12(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k260 AND MULTIPLE INTEGRAL VALUES ON OTHER CURVES | STANDARD DEVIATION DIFFERENCES $\sigma_{DF_k260,k258}$=59.43(%) | STANDARD DEVIATION DIFFERENCES $\sigma_{DF_k260,k259}$=20.12(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.174

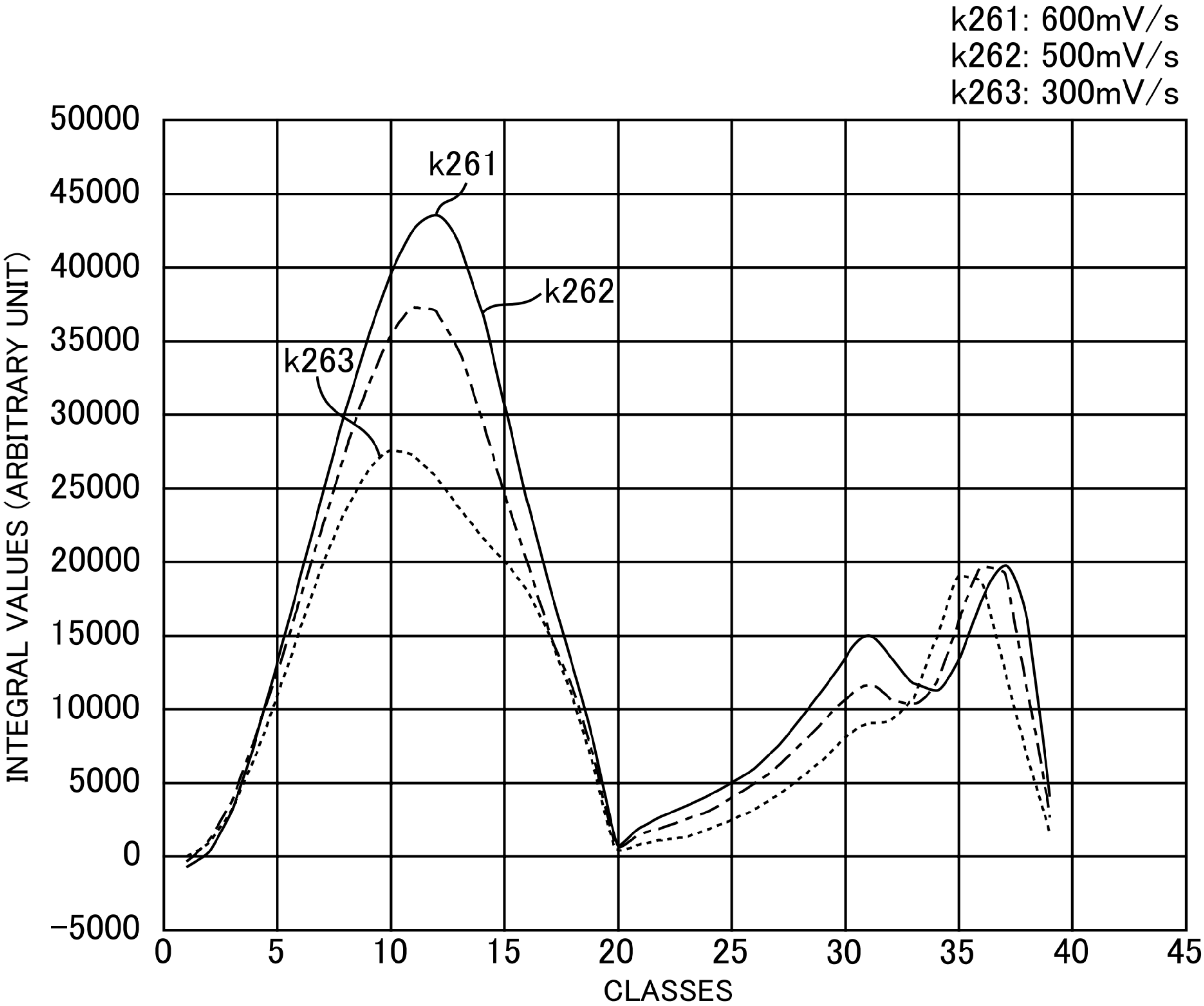
k261: 600mV/s
k262: 500mV/s
k263: 300mV/s
k261
k262
k263
INTEGRAL VALUES (ARBITRARY UNIT)
50000
45000
40000
35000
30000
25000
20000
15000
10000
5000
0
−5000
0
5
10
15
20
25
30
35
40
45
CLASSES

FIG. 175

| NUMBER OF INTEGRAL VALUES: 39 | CURVE k261 | CURVE k262 | CURVE k263 |
|---|---|---|---|
| STANDARD DEVIATION OF DIFFERENCES BETWEEN MULTIPLE INTEGRAL VALUES ON CURVE k261 AND MULTIPLE INTEGRAL VALUES ON OTHER CURVES | | STANDARD DEVIATION DIFFERENCES $\sigma_{DF_k261,k262}$=29.26(%) | STANDARD DEVIATION DIFFERENCES $\sigma_{DF_k261,k263}$=49.81(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k262 AND MULTIPLE INTEGRAL VALUES ON OTHER CURVES | STANDARD DEVIATION DIFFERENCES $\sigma_{DF_k262,k261}$=29.26(%) | | STANDARD DEVIATION DIFFERENCES $\sigma_{DF_k262,k263}$=34.00(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k263 AND MULTIPLE INTEGRAL VALUES ON OTHER CURVES | STANDARD DEVIATION DIFFERENCES $\sigma_{DF_k263,k261}$=49.81(%) | STANDARD DEVIATION DIFFERENCES $\sigma_{DF_k263,k262}$=34.00(%) | |
| THRESHOLD VALUE | 15(%) | 15(%) | |
| JUDGMENT RESULT | ○ | ○ | |

○ : TWO CURVES DIFFER FROM EACH OTHER
× : TWO CURVES DO NOT DIFFER FROM EACH OTHER
$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.176

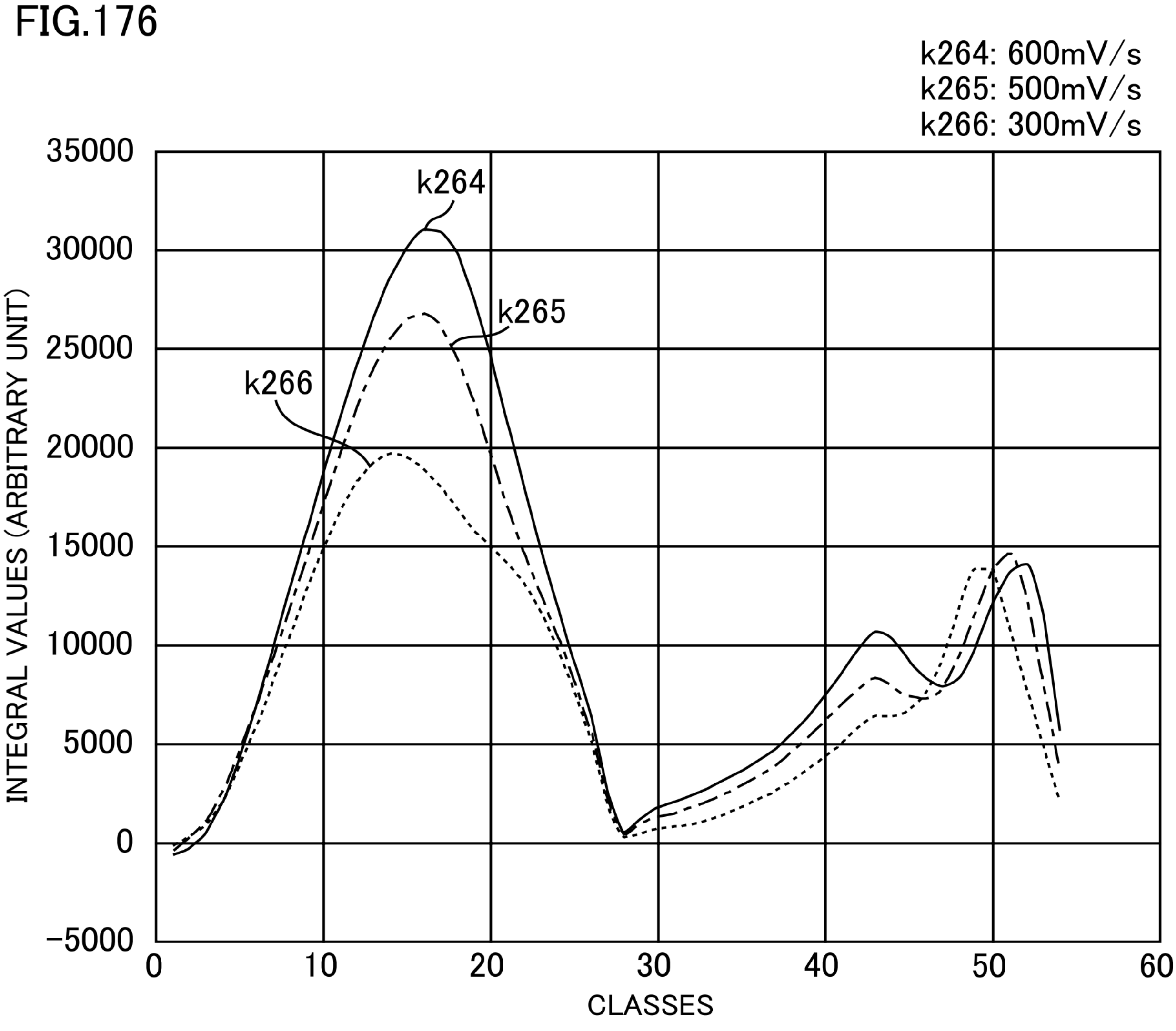
k264: 600mV/s
k265: 500mV/s
k266: 300mV/s
k264
k265
k266
35000
30000
25000
20000
15000
10000
5000
0
−5000
INTEGRAL VALUES (ARBITRARY UNIT)
0
10
20
30
40
50
60
CLASSES

FIG. 177

| NUMBER OF INTEGRAL VALUES: 54 | CURVE k264 | CURVE k265 | CURVE k266 |
|---|---|---|---|
| STANDARD DEVIATION OF DIFFERENCES BETWEEN MULTIPLE INTEGRAL VALUES ON CURVE k264 AND MULTIPLE INTEGRAL VALUES ON OTHER CURVES | | STANDARD DEVIATION DIFFERENCES $\sigma_{DF_k264,k265}$=34.33(%) | STANDARD DEVIATION DIFFERENCES $\sigma_{DF_k264,k266}$=49.35(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k265 AND MULTIPLE INTEGRAL VALUES ON OTHER CURVES | STANDARD DEVIATION DIFFERENCES $\sigma_{DF_k265,k264}$=34.33(%) | | STANDARD DEVIATION DIFFERENCES $\sigma_{DF_k265,k266}$=24.81(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k266 AND MULTIPLE INTEGRAL VALUES ON OTHER CURVES | STANDARD DEVIATION DIFFERENCES $\sigma_{DF_k266,k264}$=49.35(%) | STANDARD DEVIATION DIFFERENCES $\sigma_{DF_k266,k265}$=24.81(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.178

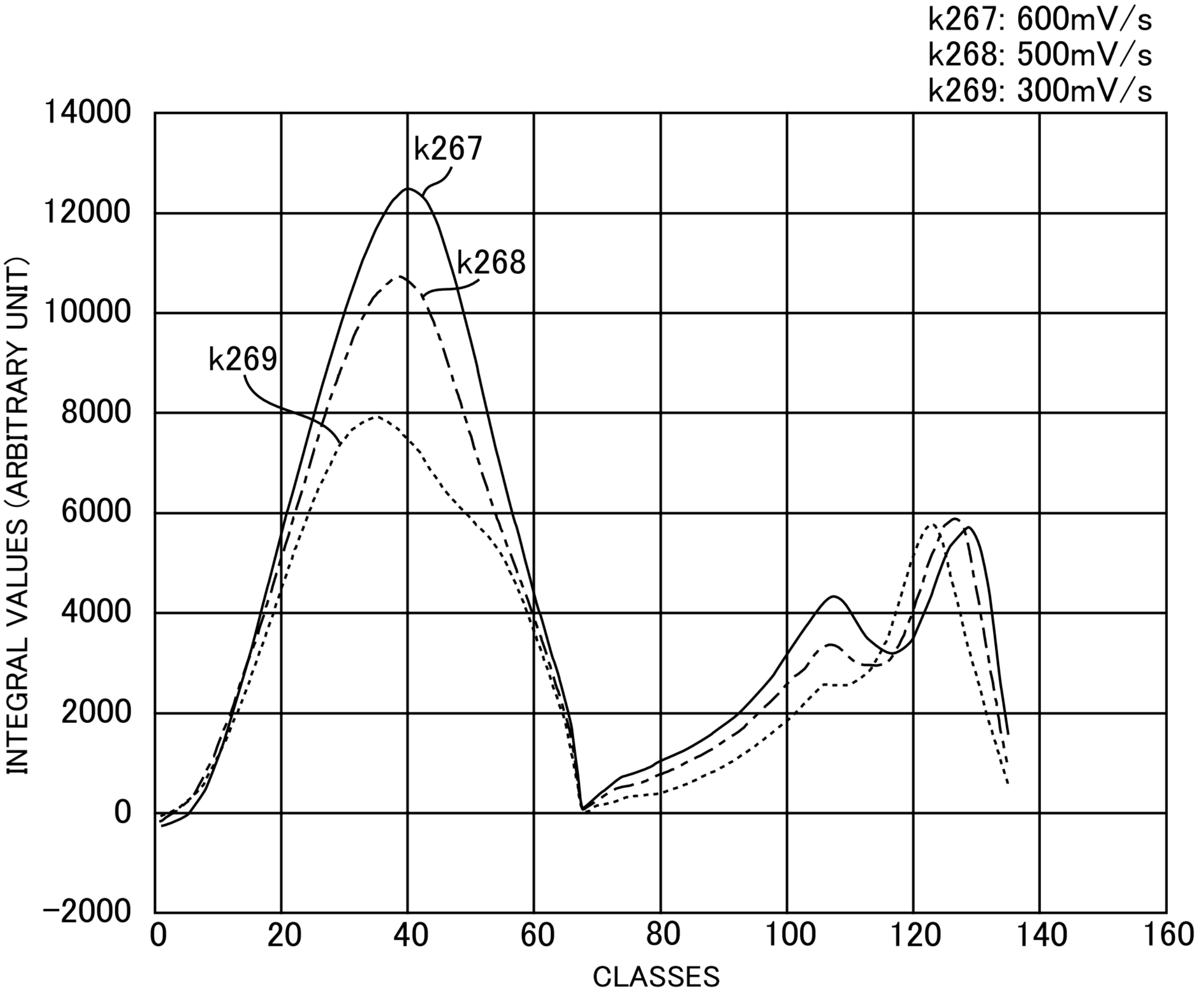
k267: 600mV/s
k268: 500mV/s
k269: 300mV/s
k267
k268
k269
14000
12000
10000
8000
6000
4000
2000
0
−2000
0
20
40
60
80
100
120
140
160
INTEGRAL VALUES (ARBITRARY UNIT)
CLASSES

FIG. 179

| NUMBER OF INTEGRAL VALUES: 135 | CURVE k267 | CURVE k268 | CURVE k269 |
|---|---|---|---|
| STANDARD DEVIATION OF DIFFERENCES BETWEEN MULTIPLE INTEGRAL VALUES ON CURVE k267 AND MULTIPLE INTEGRAL VALUES ON OTHER CURVES | | STANDARD DEVIATION DIFFERENCES $\sigma_{DF_k267,k268}$=36.71(%) | STANDARD DEVIATION DIFFERENCES $\sigma_{DF_k267,k269}$=50.79(%) |
| THRESHOLD VALUE | | 15(%) | 15(%) |
| JUDGMENT RESULT | | ○ | ○ |
| STANDARD DEVIATION OF DIFFERENCES BETWEEN MULTIPLE INTEGRAL VALUES ON CURVE k268 AND MULTIPLE INTEGRAL VALUES ON OTHER CURVES | STANDARD DEVIATION DIFFERENCES $\sigma_{DF_k268,k267}$=36.71(%) | | STANDARD DEVIATION DIFFERENCES $\sigma_{DF_k268,k269}$=25.96(%) |
| THRESHOLD VALUE | 15(%) | | 15(%) |
| JUDGMENT RESULT | ○ | | ○ |
| STANDARD DEVIATION OF DIFFERENCES BETWEEN MULTIPLE INTEGRAL VALUES ON CURVE k269 AND MULTIPLE INTEGRAL VALUES ON OTHER CURVES | STANDARD DEVIATION DIFFERENCES $\sigma_{DF_k269,k267}$=50.79(%) | STANDARD DEVIATION DIFFERENCES $\sigma_{DF_k269,k268}$=25.96(%) | |
| THRESHOLD VALUE | 15(%) | 15(%) | |
| JUDGMENT RESULT | ○ | ○ | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG.180

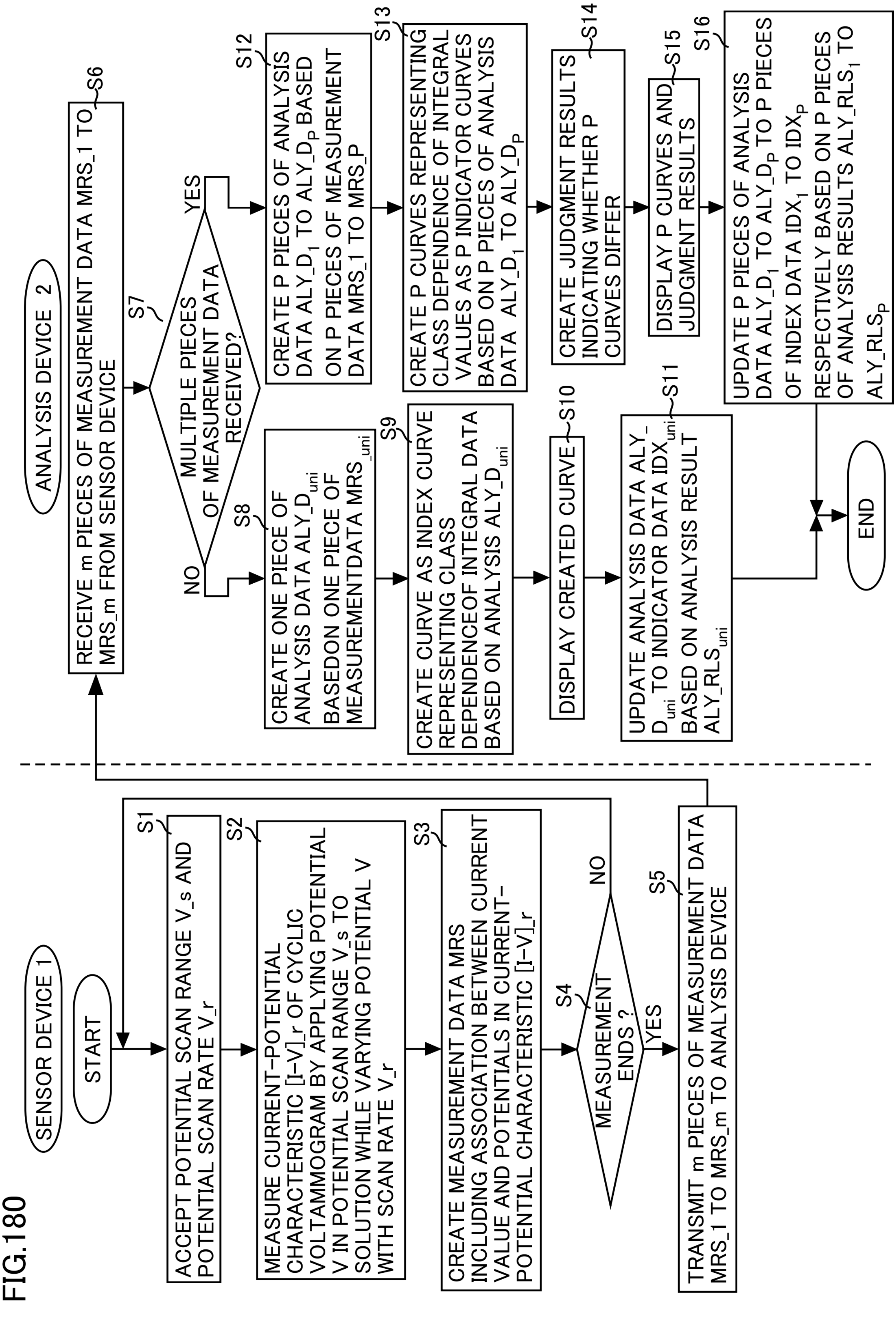
SENSOR DEVICE 1
START
ACCEPT POTENTIAL SCAN RANGE V_s AND POTENTIAL SCAN RATE V_r
S1
MEASURE CURRENT–POTENTIAL CHARACTERISTIC [I–V]_r OF CYCLIC VOLTAMMOGRAM BY APPLYING POTENTIAL V IN POTENTIAL SCAN RANGE V_s TO SOLUTION WHILE VARYING POTENTIAL V WITH SCAN RATE V_r
S2
CREATE MEASUREMENT DATA MRS INCLUDING ASSOCIATION BETWEEN CURRENT VALUE AND POTENTIALS IN CURRENT–POTENTIAL CHARACTERISTIC [I–V]_r
S3
MEASUREMENT ENDS ?
S4
NO
YES
TRANSMIT m PIECES OF MEASUREMENT DATA MRS_1 TO MRS_m TO ANALYSIS DEVICE
S5
ANALYSIS DEVICE 2
RECEIVE m PIECES OF MEASUREMENT DATA MRS_1 TO MRS_m FROM SENSOR DEVICE
S6
MULTIPLE PIECES OF MEASUREMENT DATA RECEIVED?
S7
NO
YES
CREATE ONE PIECE OF ANALYSIS DATA ALY_$D_{uni}$ BASEDON ONE PIECE OF MEASUREMENTDATA MRS_uni
S8
CREATE CURVE AS INDEX CURVE REPRESENTING CLASS DEPENDENCEOF INTEGRAL DATA BASED ON ANALYSIS ALY_$D_{uni}$
S9
DISPLAY CREATED CURVE
S10
UPDATE ANALYSIS DATA ALY_$D_{uni}$ TO INDICATOR DATA $IDX_{uni}$ BASED ON ANALYSIS RESULT ALY_$RLS_{uni}$
S11
CREATE P PIECES OF ANALYSIS DATA ALY_$D_1$ TO ALY_$D_P$ BASED ON P PIECES OF MEASUREMENT DATA MRS_1 TO MRS_P
S12
CREATE P CURVES REPRESENTING CLASS DEPENDENCE OF INTEGRAL VALUES AS P INDICATOR CURVES BASED ON P PIECES OF ANALYSIS DATA ALY_$D_1$ TO ALY_$D_P$
S13
CREATE JUDGMENT RESULTS INDICATING WHETHER P CURVES DIFFER
S14
DISPLAY P CURVES AND JUDGMENT RESULTS
S15
UPDATE P PIECES OF ANALYSIS DATA ALY_$D_1$ TO ALY_$D_P$ TO P PIECES OF INDEX DATA $IDX_1$ TO $IDX_P$ RESPECTIVELY BASED ON P PIECES OF ANALYSIS RESULTS ALY_$RLS_1$ TO ALY_$RLS_P$
S16
END

FIG. 181

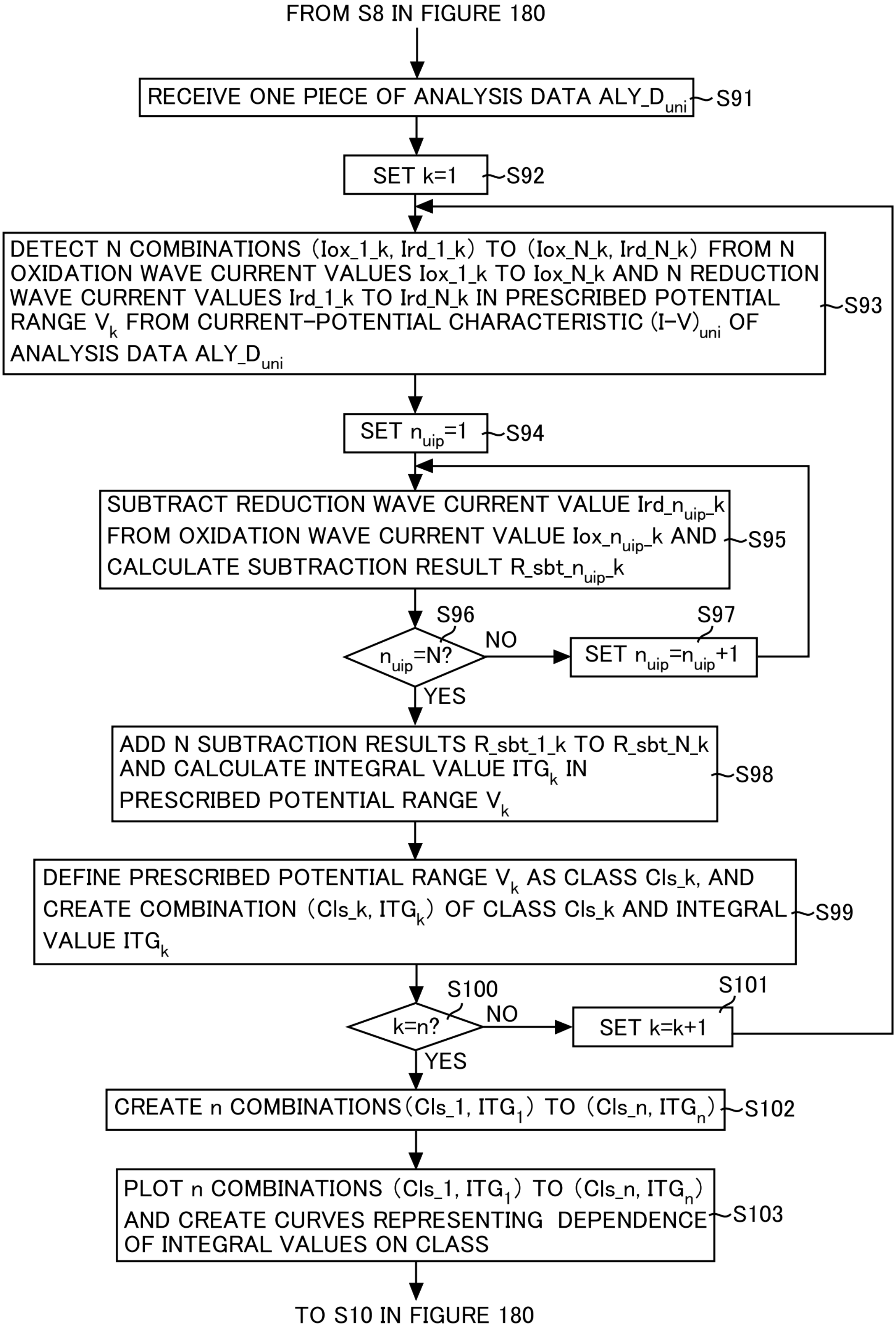

FROM S8 IN FIGURE 180
RECEIVE ONE PIECE OF ANALYSIS DATA $ALY_D_{uni}$
S91
SET k=1
S92
DETECT N COMBINATIONS (Iox_1_k, Ird_1_k) TO (Iox_N_k, Ird_N_k) FROM N OXIDATION WAVE CURRENT VALUES Iox_1_k TO Iox_N_k AND N REDUCTION WAVE CURRENT VALUES Ird_1_k TO Ird_N_k IN PRESCRIBED POTENTIAL RANGE $V_k$ FROM CURRENT-POTENTIAL CHARACTERISTIC $(I-V)_{uni}$ OF ANALYSIS DATA $ALY_D_{uni}$
S93
SET $n_{uip}$=1
S94
SUBTRACT REDUCTION WAVE CURRENT VALUE $Ird_n_{uip}_k$ FROM OXIDATION WAVE CURRENT VALUE $Iox_n_{uip}_k$ AND CALCULATE SUBTRACTION RESULT $R_sbt_n_{uip}_k$
S95
S96
$n_{uip}$=N?
NO
YES
S97
SET $n_{uip}=n_{uip}+1$
ADD N SUBTRACTION RESULTS R_sbt_1_k TO R_sbt_N_k AND CALCULATE INTEGRAL VALUE $ITG_k$ IN PRESCRIBED POTENTIAL RANGE $V_k$
S98
DEFINE PRESCRIBED POTENTIAL RANGE $V_k$ AS CLASS Cls_k, AND CREATE COMBINATION (Cls_k, $ITG_k$) OF CLASS Cls_k AND INTEGRAL VALUE $ITG_k$
S99
S100
k=n?
NO
YES
S101
SET k=k+1
CREATE n COMBINATIONS (Cls_1, $ITG_1$) TO (Cls_n, $ITG_n$)
S102
PLOT n COMBINATIONS (Cls_1, $ITG_1$) TO (Cls_n, $ITG_n$) AND CREATE CURVES REPRESENTING DEPENDENCE OF INTEGRAL VALUES ON CLASS
S103
TO S10 IN FIGURE 180

FIG. 182

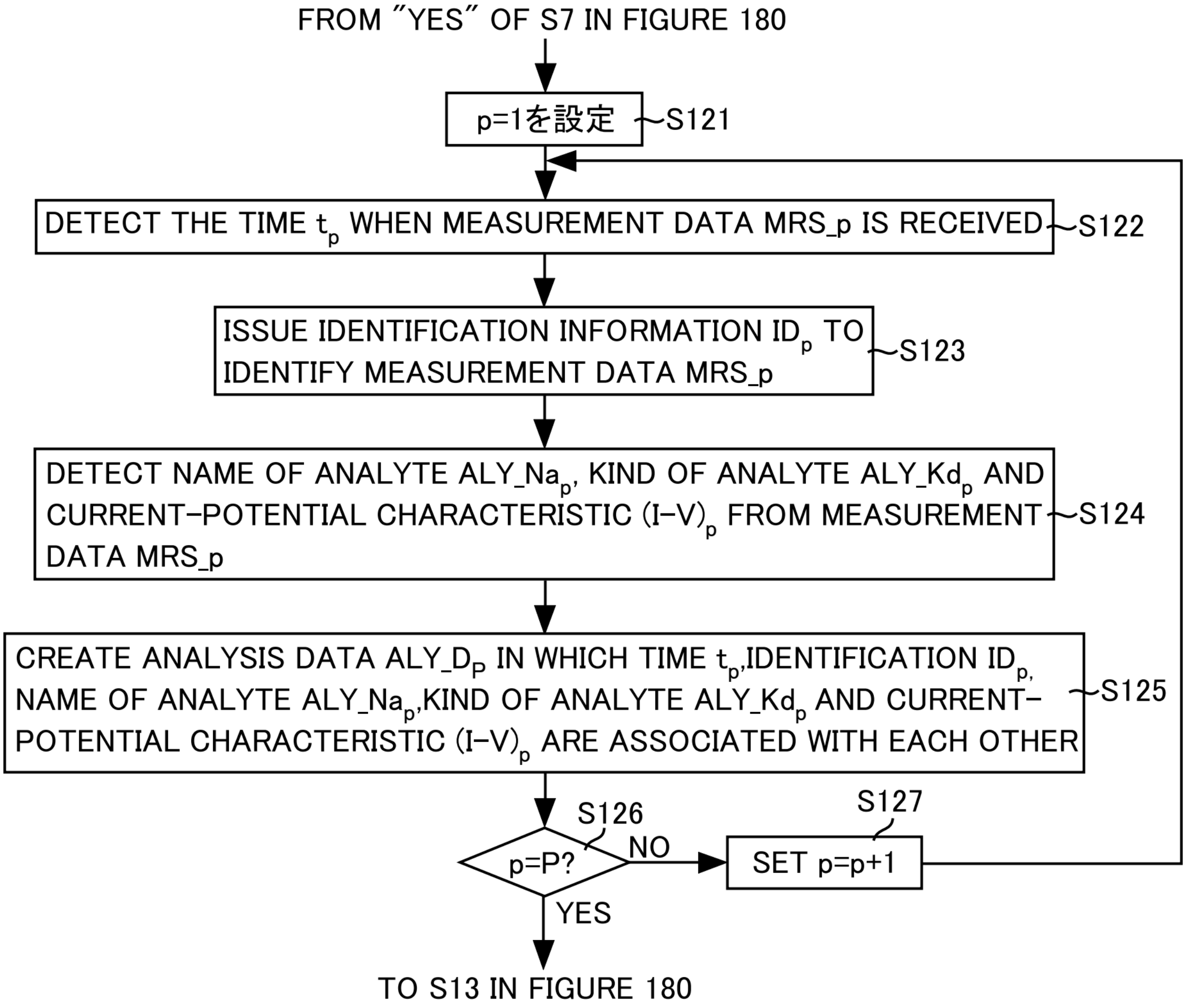
FROM "YES" OF S7 IN FIGURE 180
p=1を設定
S121
DETECT THE TIME $t_p$ WHEN MEASUREMENT DATA MRS_p IS RECEIVED
S122
ISSUE IDENTIFICATION INFORMATION $ID_p$ TO IDENTIFY MEASUREMENT DATA MRS_p
S123
DETECT NAME OF ANALYTE $ALY_Na_p$, KIND OF ANALYTE $ALY_Kd_p$ AND CURRENT-POTENTIAL CHARACTERISTIC $(I-V)_p$ FROM MEASUREMENT DATA MRS_p
S124
CREATE ANALYSIS DATA $ALY_D_P$ IN WHICH TIME $t_p$,IDENTIFICATION $ID_p$, NAME OF ANALYTE $ALY_Na_p$,KIND OF ANALYTE $ALY_Kd_p$ AND CURRENT-POTENTIAL CHARACTERISTIC $(I-V)_p$ ARE ASSOCIATED WITH EACH OTHER
S125
S126
p=P?
NO
S127
SET p=p+1
YES
TO S13 IN FIGURE 180

FIG.183

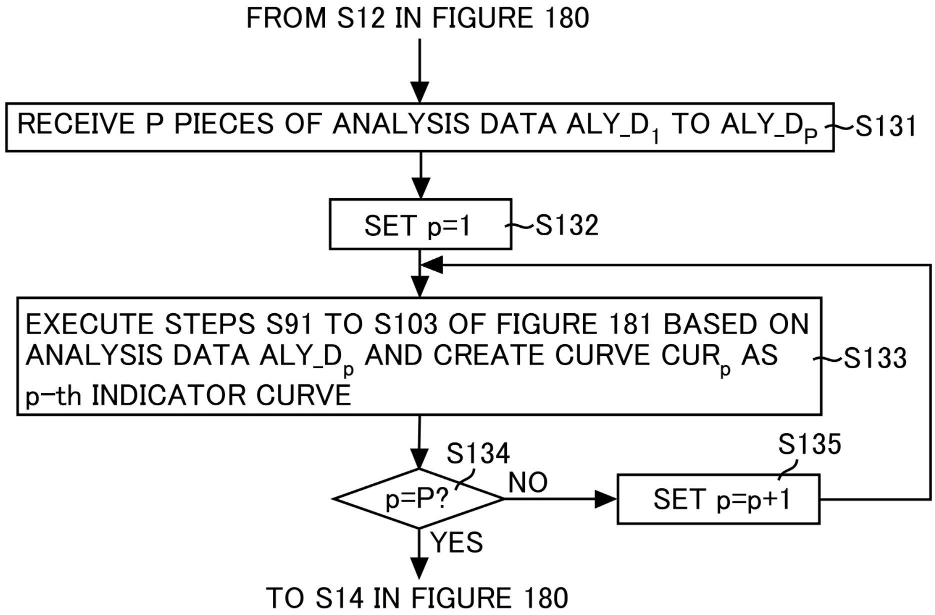


FIG. 184

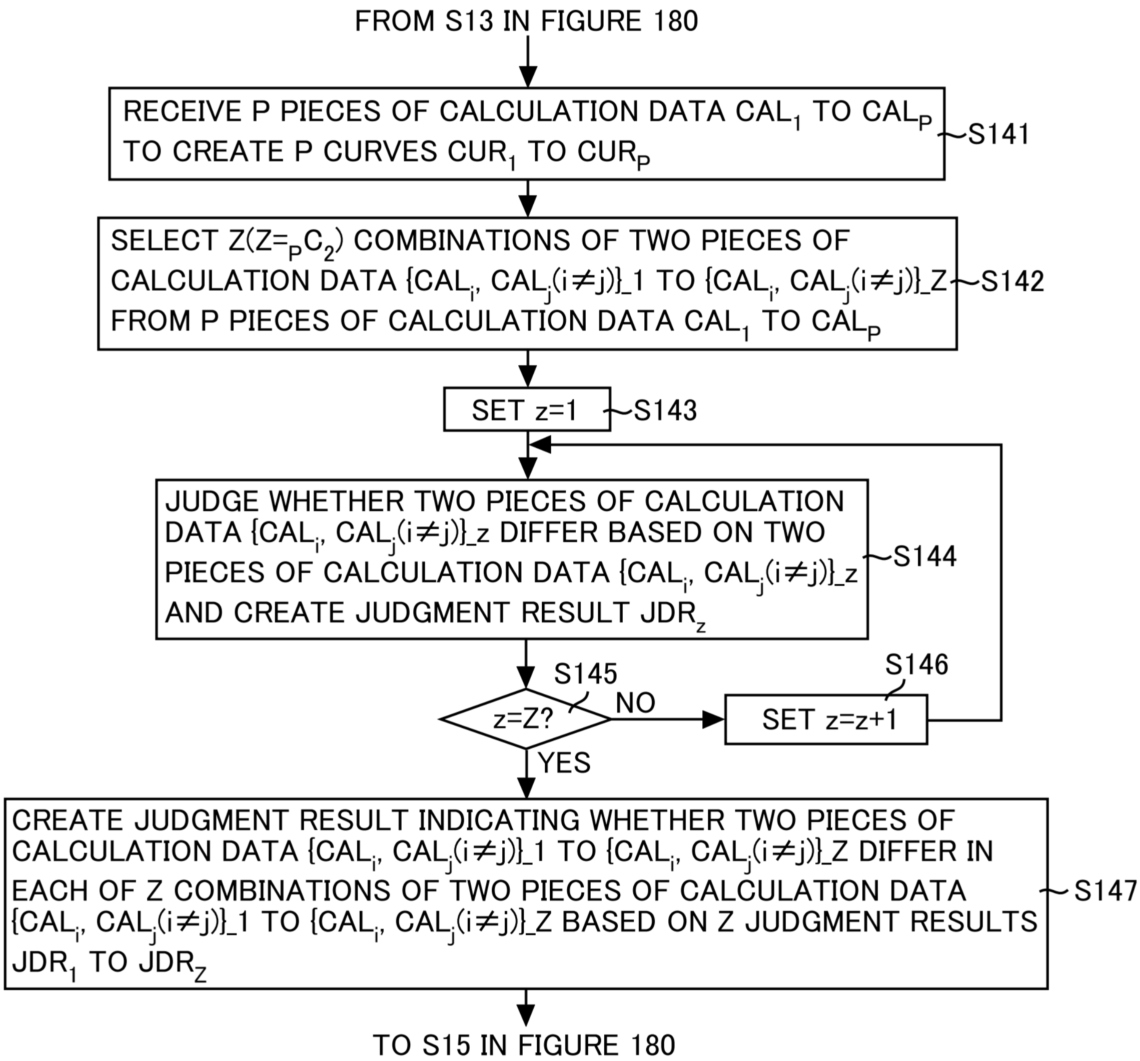

FIG.185

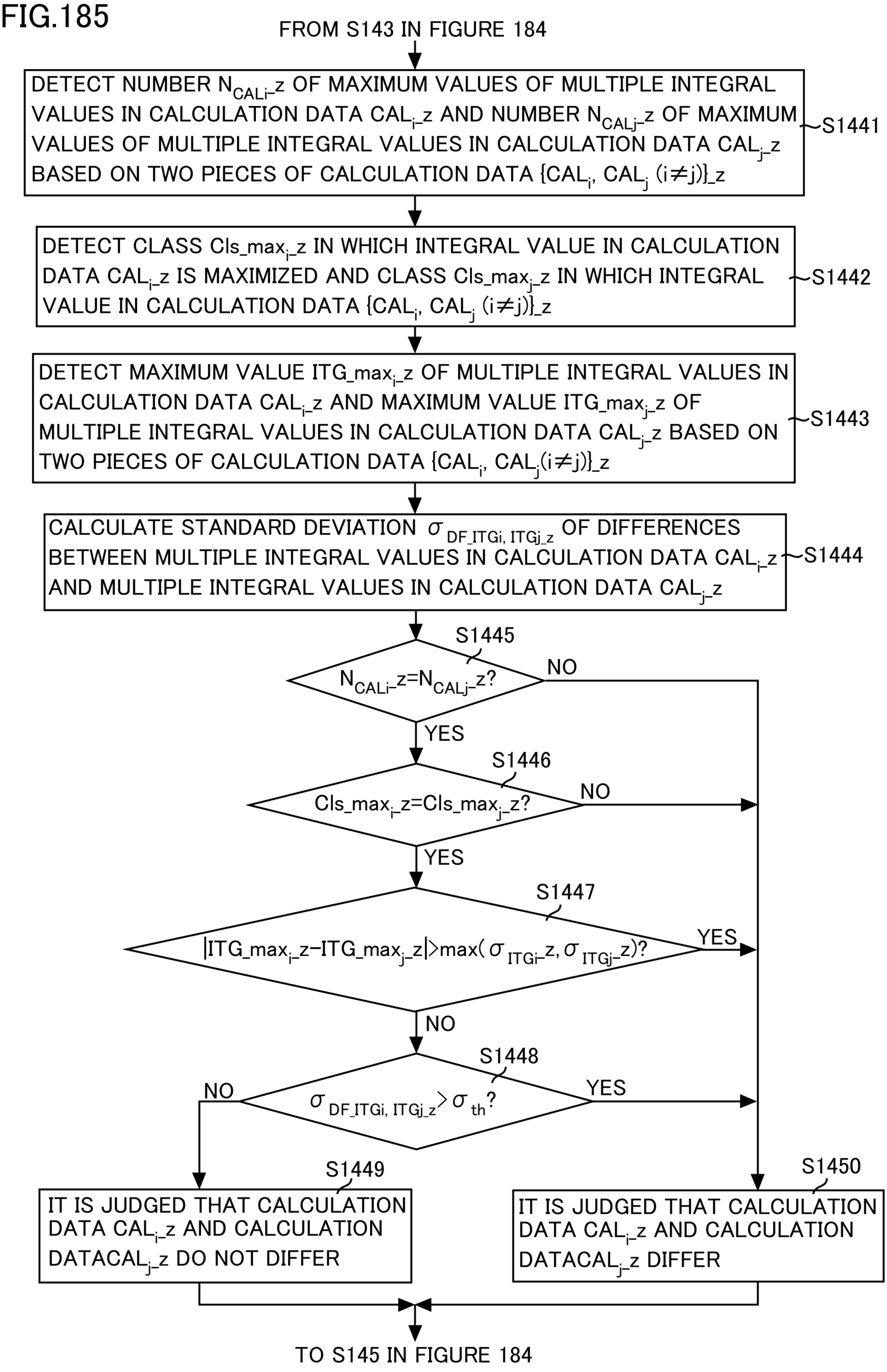
FROM S143 IN FIGURE 184
DETECT NUMBER $N_{CALi}$_z OF MAXIMUM VALUES OF MULTIPLE INTEGRAL VALUES IN CALCULATION DATA $CAL_i$_z AND NUMBER $N_{CALj}$_z OF MAXIMUM VALUES OF MULTIPLE INTEGRAL VALUES IN CALCULATION DATA $CAL_j$_z BASED ON TWO PIECES OF CALCULATION DATA {$CAL_i$, $CAL_j$ ($i \neq j$)}_z
S1441
DETECT CLASS Cls_$max_i$_z IN WHICH INTEGRAL VALUE IN CALCULATION DATA $CAL_i$_z IS MAXIMIZED AND CLASS Cls_$max_j$_z IN WHICH INTEGRAL VALUE IN CALCULATION DATA {$CAL_i$, $CAL_j$ ($i \neq j$)}_z
S1442
DETECT MAXIMUM VALUE ITG_$max_i$_z OF MULTIPLE INTEGRAL VALUES IN CALCULATION DATA $CAL_i$_z AND MAXIMUM VALUE ITG_$max_j$_z OF MULTIPLE INTEGRAL VALUES IN CALCULATION DATA $CAL_j$_z BASED ON TWO PIECES OF CALCULATION DATA {$CAL_i$, $CAL_j$($i \neq j$)}_z
S1443
CALCULATE STANDARD DEVIATION $\sigma_{DF_ITGi, ITGj_z}$ OF DIFFERENCES BETWEEN MULTIPLE INTEGRAL VALUES IN CALCULATION DATA $CAL_i$_z AND MULTIPLE INTEGRAL VALUES IN CALCULATION DATA $CAL_j$_z
S1444
S1445
$N_{CALi}$_z=$N_{CALj}$_z?
NO
YES
S1446
Cls_$max_i$_z=Cls_$max_j$_z?
NO
YES
S1447
$|ITG_max_i_z - ITG_max_j_z| > max(\sigma_{ITGi}_z, \sigma_{ITGj}_z)$?
YES
NO
S1448
$\sigma_{DF_ITGi, ITGj_z} > \sigma_{th}$?
NO
YES
S1449
IT IS JUDGED THAT CALCULATION DATA $CAL_i$_z AND CALCULATION DATACAL$_j$_z DO NOT DIFFER
S1450
IT IS JUDGED THAT CALCULATION DATA $CAL_i$_z AND CALCULATION DATACAL$_j$_z DIFFER
TO S145 IN FIGURE 184

FIG.186

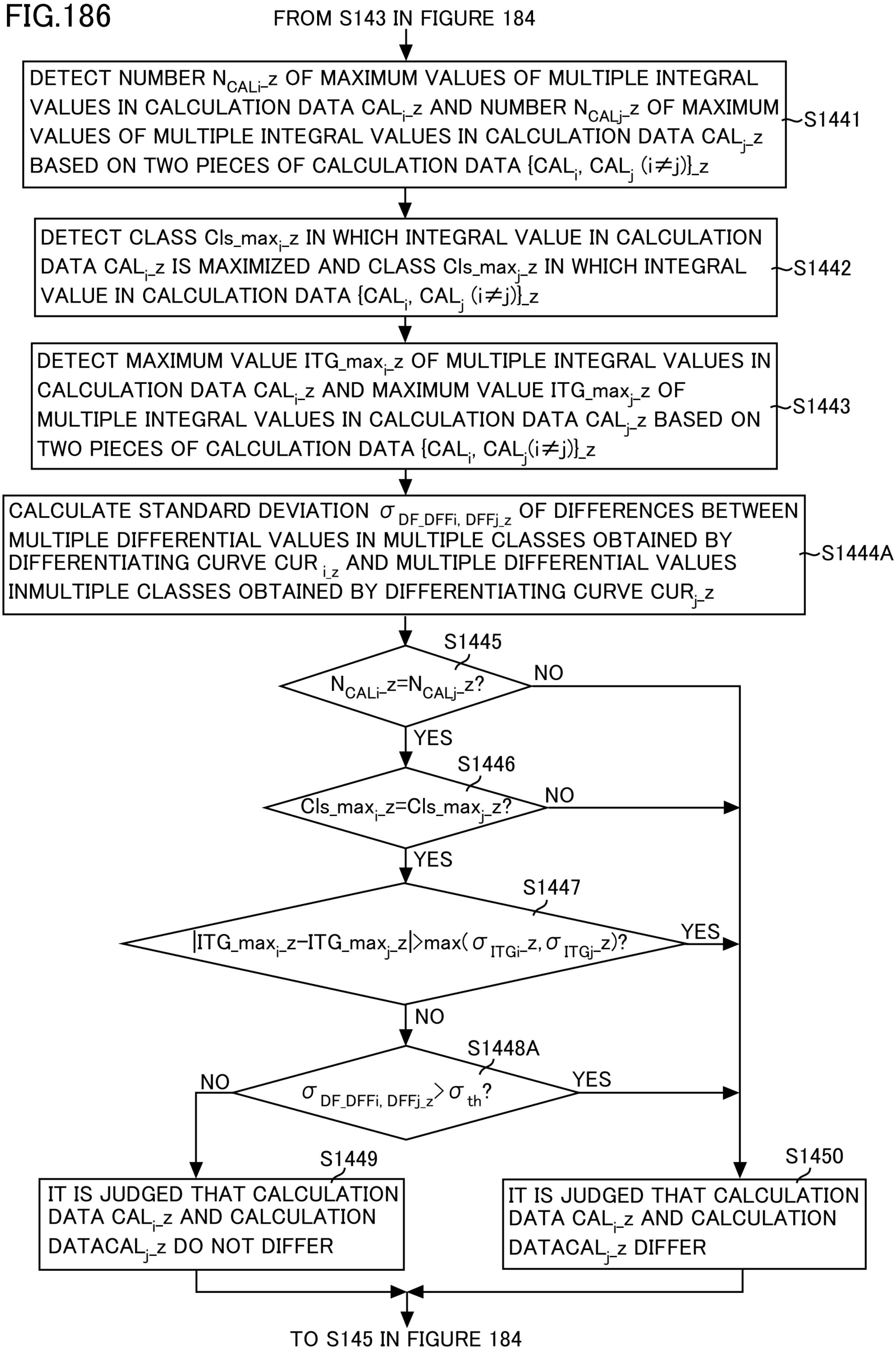
FROM S143 IN FIGURE 184
DETECT NUMBER $N_{CALi}$_z OF MAXIMUM VALUES OF MULTIPLE INTEGRAL VALUES IN CALCULATION DATA $CAL_i$_z AND NUMBER $N_{CALj}$_z OF MAXIMUM VALUES OF MULTIPLE INTEGRAL VALUES IN CALCULATION DATA $CAL_j$_z BASED ON TWO PIECES OF CALCULATION DATA {$CAL_i$, $CAL_j$ (i≠j)}_z
S1441
DETECT CLASS Cls_$max_i$_z IN WHICH INTEGRAL VALUE IN CALCULATION DATA $CAL_i$_z IS MAXIMIZED AND CLASS Cls_$max_j$_z IN WHICH INTEGRAL VALUE IN CALCULATION DATA {$CAL_i$, $CAL_j$ (i≠j)}_z
S1442
DETECT MAXIMUM VALUE ITG_$max_i$_z OF MULTIPLE INTEGRAL VALUES IN CALCULATION DATA $CAL_i$_z AND MAXIMUM VALUE ITG_$max_j$_z OF MULTIPLE INTEGRAL VALUES IN CALCULATION DATA $CAL_j$_z BASED ON TWO PIECES OF CALCULATION DATA {$CAL_i$, $CAL_j$(i≠j)}_z
S1443
CALCULATE STANDARD DEVIATION $\sigma_{DF_DFFi,\ DFFj_z}$ OF DIFFERENCES BETWEEN MULTIPLE DIFFERENTIAL VALUES IN MULTIPLE CLASSES OBTAINED BY DIFFERENTIATING CURVE $CUR_{i_z}$ AND MULTIPLE DIFFERENTIAL VALUES INMULTIPLE CLASSES OBTAINED BY DIFFERENTIATING CURVE $CUR_j$_z
S1444A
S1445
$N_{CALi}$_z=$N_{CALj}$_z?
NO
YES
S1446
Cls_$max_i$_z=Cls_$max_j$_z?
NO
YES
S1447
|ITG_$max_i$_z−ITG_$max_j$_z|>max($\sigma_{ITGi}$_z, $\sigma_{ITGj}$_z)?
YES
NO
S1448A
$\sigma_{DF_DFFi,\ DFFj_z} > \sigma_{th}$?
NO
YES
S1449
IT IS JUDGED THAT CALCULATION DATA $CAL_i$_z AND CALCULATION DATACAL$_j$_z DO NOT DIFFER
S1450
IT IS JUDGED THAT CALCULATION DATA $CAL_i$_z AND CALCULATION DATACAL$_j$_z DIFFER
TO S145 IN FIGURE 184

FIG. 187

| | CURVE $CUR_1$ | CURVE $CUR_2$ | ··· | CURVE $CUR_{P-1}$ | CURVE $CUR_P$ |
|---|---|---|---|---|---|
| STANDARD DEVIATION OF DIFFERENCES BETWEEN MULTIPLE INTEGRAL VALUES ON CURVE $CUR_1$ AND MULTIPLE INTEGRAL VALUES ON OTHER CURVES | | STANDARD DEVIATION DIFFERENCES $\sigma_{DF_CUR_1,CUR_2}$ | ··· | STANDARD DEVIATION DIFFERENCES $\sigma_{DF_CUR_1,CUR_{P-1}}$ | STANDARD DEVIATION DIFFERENCES $\sigma_{DF_CUR_1,CUR_P}$ |
| THRESHOLD VALUE | | 15(%) | ··· | 15(%) | 15(%) |
| JUDGMENT RESULT | | ○ or × | ··· | ○ or × | ○ or × |
| STANDARD DEVIATION OF DIFFERENCES BETWEEN MULTIPLE INTEGRAL VALUES ON CURVE $CUR_2$ AND MULTIPLE INTEGRAL VALUES ON OTHER CURVES | STANDARD DEVIATION DIFFERENCES $\sigma_{DF_CUR_1,CUR_2}$ | | ··· | STANDARD DEVIATION DIFFERENCES $\sigma_{DF_CUR_2,CUR_{P-1}}$ | STANDARD DEVIATION DIFFERENCES $\sigma_{DF_CUR_2,CUR_P}$ |
| THRESHOLD VALUE | 15(%) | | ··· | 15(%) | 15(%) |
| JUDGMENT RESULT | ○ or × | | ··· | ○ or × | ○ or × |
| ⋮ | ⋮ | ⋮ | ⋮ | ⋮ | ⋮ |
| STANDARD DEVIATION OF DIFFERENCES BETWEEN MULTIPLE INTEGRAL VALUES ON CURVE $CUR_{P-1}$ AND MULTIPLE INTEGRAL VALUES ON OTHER CURVES | STANDARD DEVIATION DIFFERENCES $\sigma_{DF_CUR_1,CUR_{P-1}}$ | STANDARD DEVIATION DIFFERENCES $\sigma_{DF_CUR_2,CUR_{P-1}}$ | ··· | | STANDARD DEVIATION DIFFERENCES $\sigma_{DF_CUR_{P-1},CUR_P}$ |
| THRESHOLD VALUE | 15(%) | 15(%) | ··· | | 15(%) |
| JUDGMENT RESULT | ○ or × | ○ or × | ··· | | ○ or × |
| STANDARD DEVIATION OF DIFFERENCES BETWEEN MULTIPLE INTEGRAL VALUES ON CURVE $CUR_P$ AND MULTIPLE INTEGRAL VALUES ON OTHER CURVES | STANDARD DEVIATION DIFFERENCES $\sigma_{DF_CUR_1,CUR_P}$ | STANDARD DEVIATION DIFFERENCES $\sigma_{DF_CUR_2,CUR_P}$ | ··· | STANDARD DEVIATION DIFFERENCES $\sigma_{DF_CUR_{P-1},CUR_P}$ | |
| THRESHOLD VALUE | 15(%) | 15(%) | ··· | 15(%) | |
| JUDGMENT RESULT | ○ or × | ○ or × | ··· | ○ or × | |

○ : TWO CURVES DIFFER FROM EACH OTHER

× : TWO CURVES DO NOT DIFFER FROM EACH OTHER

$\sigma_{DF_ki,kj}$: STANDARD DEVIATION OF DIFFERENCES BETWEEN INTEGRAL VALUES ON INTERGRAL VALUE SPECTRUM $CUR_i$ AND INTEGRAL VALUES ON INTEGRAL VALUE SPECTRUM $CUR_j$

FIG. 188

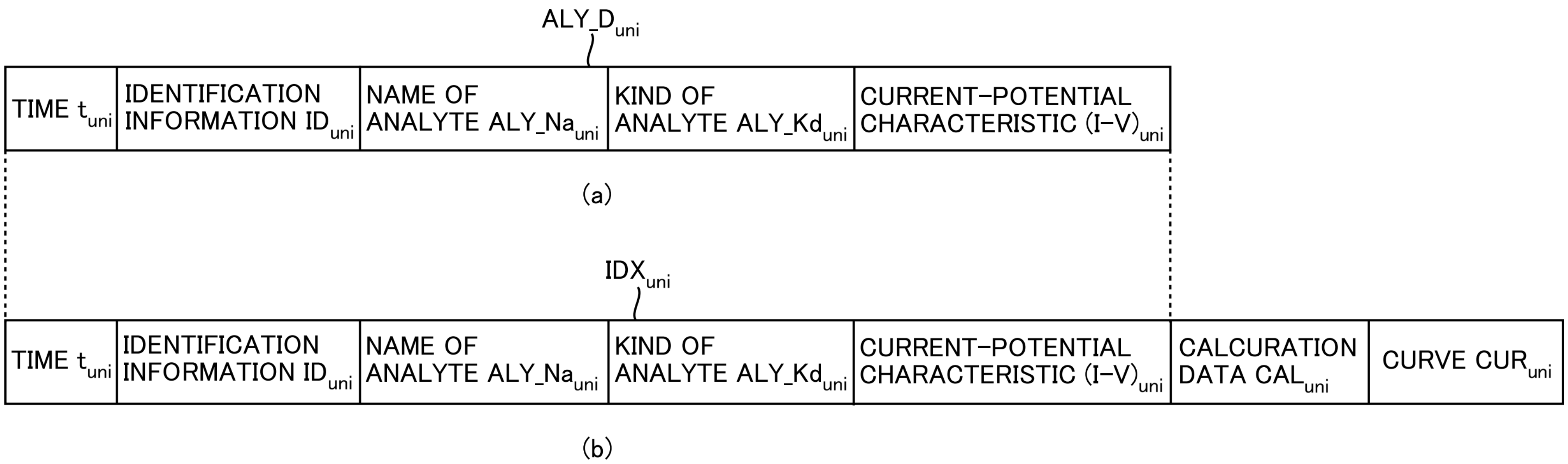
ALY_D$_{uni}$
TIME $t_{uni}$
IDENTIFICATION INFORMATION $ID_{uni}$
NAME OF ANALYTE ALY_$Na_{uni}$
KIND OF ANALYTE ALY_$Kd_{uni}$
CURRENT-POTENTIAL CHARACTERISTIC $(I-V)_{uni}$
(a)
$IDX_{uni}$
TIME $t_{uni}$
IDENTIFICATION INFORMATION $ID_{uni}$
NAME OF ANALYTE ALY_$Na_{uni}$
KIND OF ANALYTE ALY_$Kd_{uni}$
CURRENT-POTENTIAL CHARACTERISTIC $(I-V)_{uni}$
CALCURATION DATA $CAL_{uni}$
CURVE $CUR_{uni}$
(b)

FIG.189

| | | | | | |
|---|---|---|---|---|---|
| $ALY_D_1$ | TIME $t_1$ | IDENTIFICATION INFORMATION $ID_1$ | NAME OF ANALYTE $ALY_Na_1$ | KIND OF ANALYTE $ALY_Kd_1$ | CURRENT-POTENTIAL CHARACTERISTIC $(I-V)_1$ |
| $ALY_D_2$ | TIME $t_2$ | IDENTIFICATION INFORMATION $ID_2$ | NAME OF ANALYTE $ALY_Na_2$ | KIND OF ANALYTE $ALY_Kd_2$ | CURRENT-POTENTIAL CHARACTERISTIC $(I-V)_2$ |
| ⋮ | | | | | |
| $ALY_D_P$ | TIME $t_P$ | IDENTIFICATION INFORMATION $ID_P$ | NAME OF ANALYTE $ALY_Na_P$ | KIND OF ANALYTE $ALY_Kd_P$ | CURRENT-POTENTIAL CHARACTERISTIC $(I-V)_P$ |

(a)

| | | | | | | | | |
|---|---|---|---|---|---|---|---|---|
| $IDX_1$ | TIME $t_1$ | IDENTIFICATION INFORMATION $ID_1$ | NAME OF ANALYTE $ALY_Na_1$ | KIND OF ANALYTE $ALY_Kd_1$ | CURRENT-POTENTIAL CHARACTERISTIC $(I-V)_1$ | CALCULATION DATA $CAL_1$ | CURVE $CUR_1$ | JUDGEMENT RESULTS IN FIG.187 |
| $IDX_2$ | TIME $t_2$ | IDENTIFICATION INFORMATION $ID_2$ | NAME OF ANALYTE $ALY_Na_2$ | KIND OF ANALYTE $ALY_Kd_2$ | CURRENT-POTENTIAL CHARACTERISTIC $(I-V)_2$ | CALCULATION DATA $CAL_2$ | CURVE $CUR_2$ | |
| ⋮ | | | | | | | | |
| $IDX_P$ | TIME $t_P$ | IDENTIFICATION INFORMATION $ID_P$ | NAME OF ANALYTE $ALY_Na_P$ | KIND OF ANALYTE $ALY_Kd_P$ | CURRENT-POTENTIAL CHARACTERISTIC $(I-V)_P$ | CALCULATION DATA $CAL_P$ | CURVE $CUR_P$ | |

(b)

FIG. 190

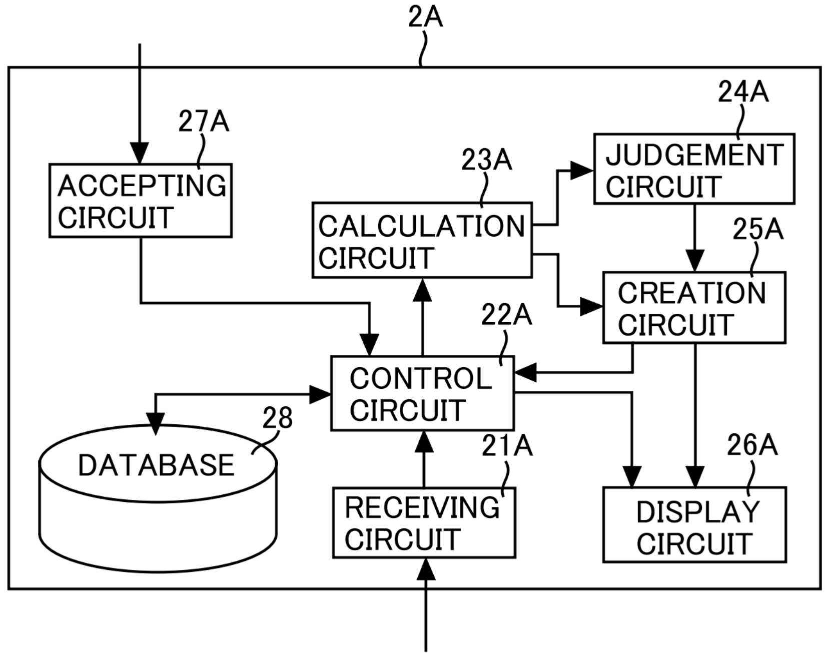


FIG.191

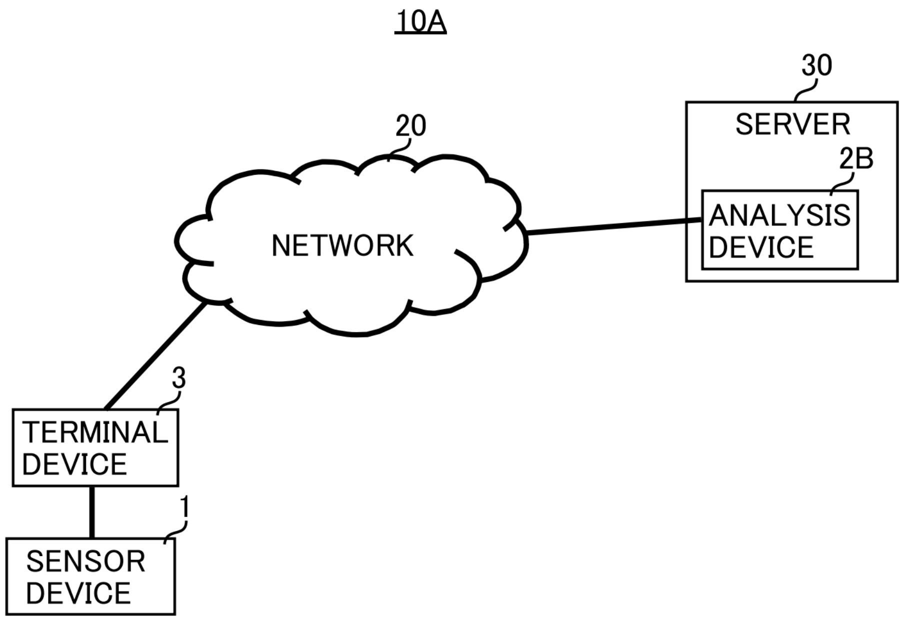

FIG.192

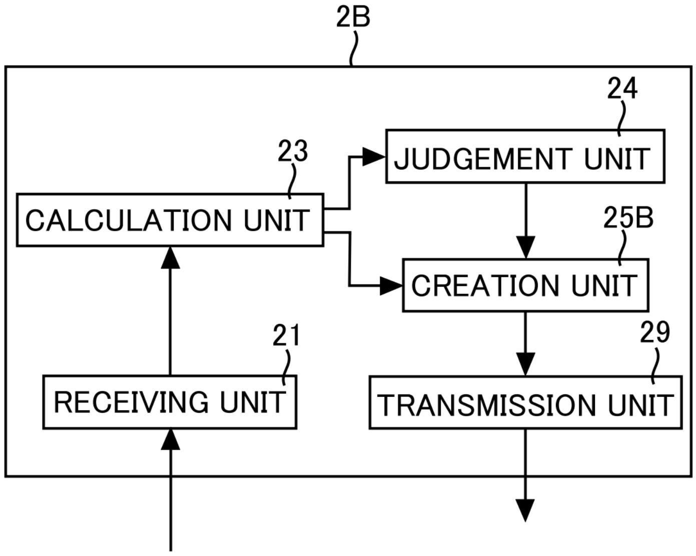


FIG.193

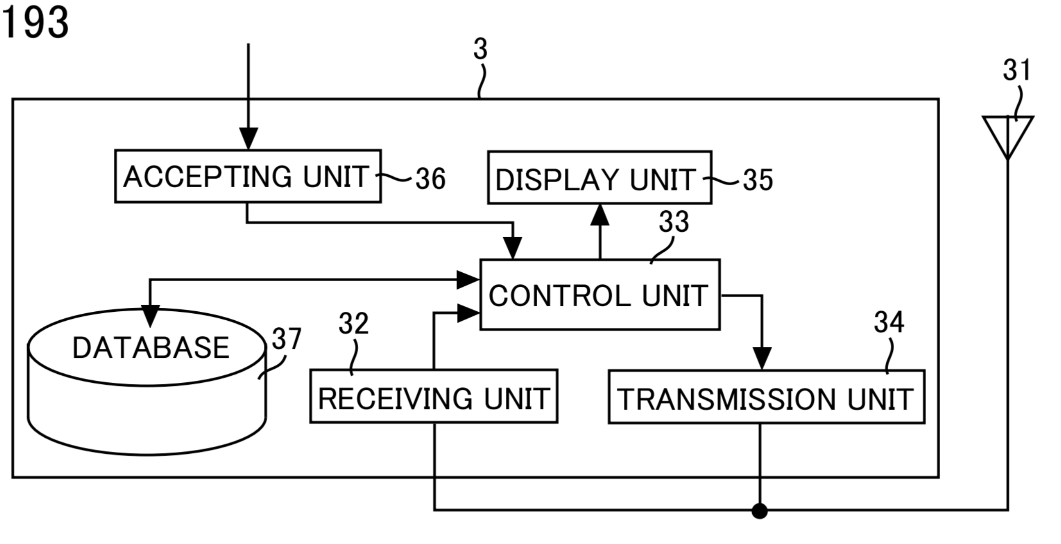

FIG.194

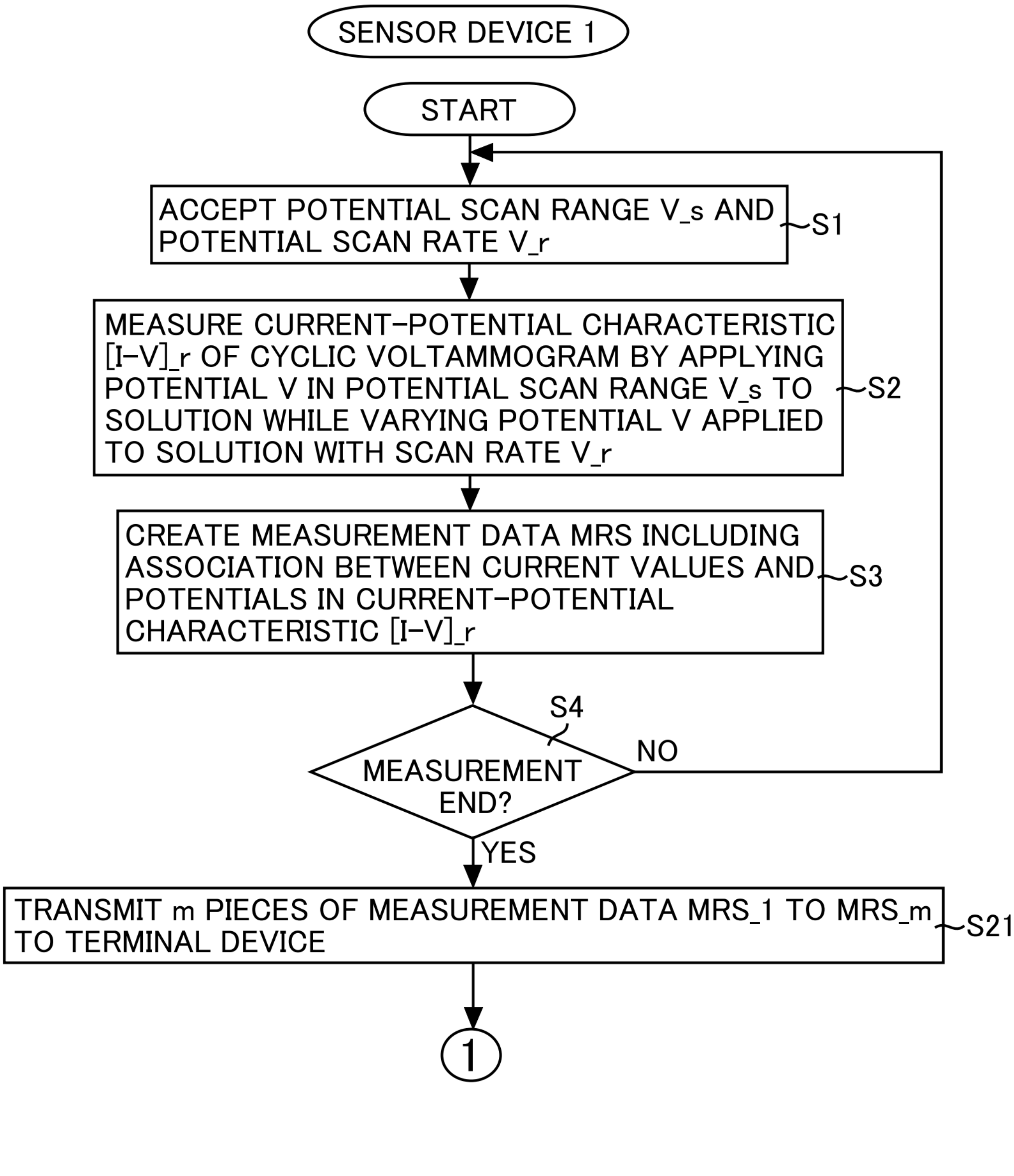
SENSOR DEVICE 1
START
ACCEPT POTENTIAL SCAN RANGE V_s AND POTENTIAL SCAN RATE V_r
S1
MEASURE CURRENT-POTENTIAL CHARACTERISTIC [I-V]_r OF CYCLIC VOLTAMMOGRAM BY APPLYING POTENTIAL V IN POTENTIAL SCAN RANGE V_s TO SOLUTION WHILE VARYING POTENTIAL V APPLIED TO SOLUTION WITH SCAN RATE V_r
S2
CREATE MEASUREMENT DATA MRS INCLUDING ASSOCIATION BETWEEN CURRENT VALUES AND POTENTIALS IN CURRENT-POTENTIAL CHARACTERISTIC [I-V]_r
S3
S4
MEASUREMENT END?
NO
YES
TRANSMIT m PIECES OF MEASUREMENT DATA MRS_1 TO MRS_m TO TERMINAL DEVICE
S21
1

FIG.195

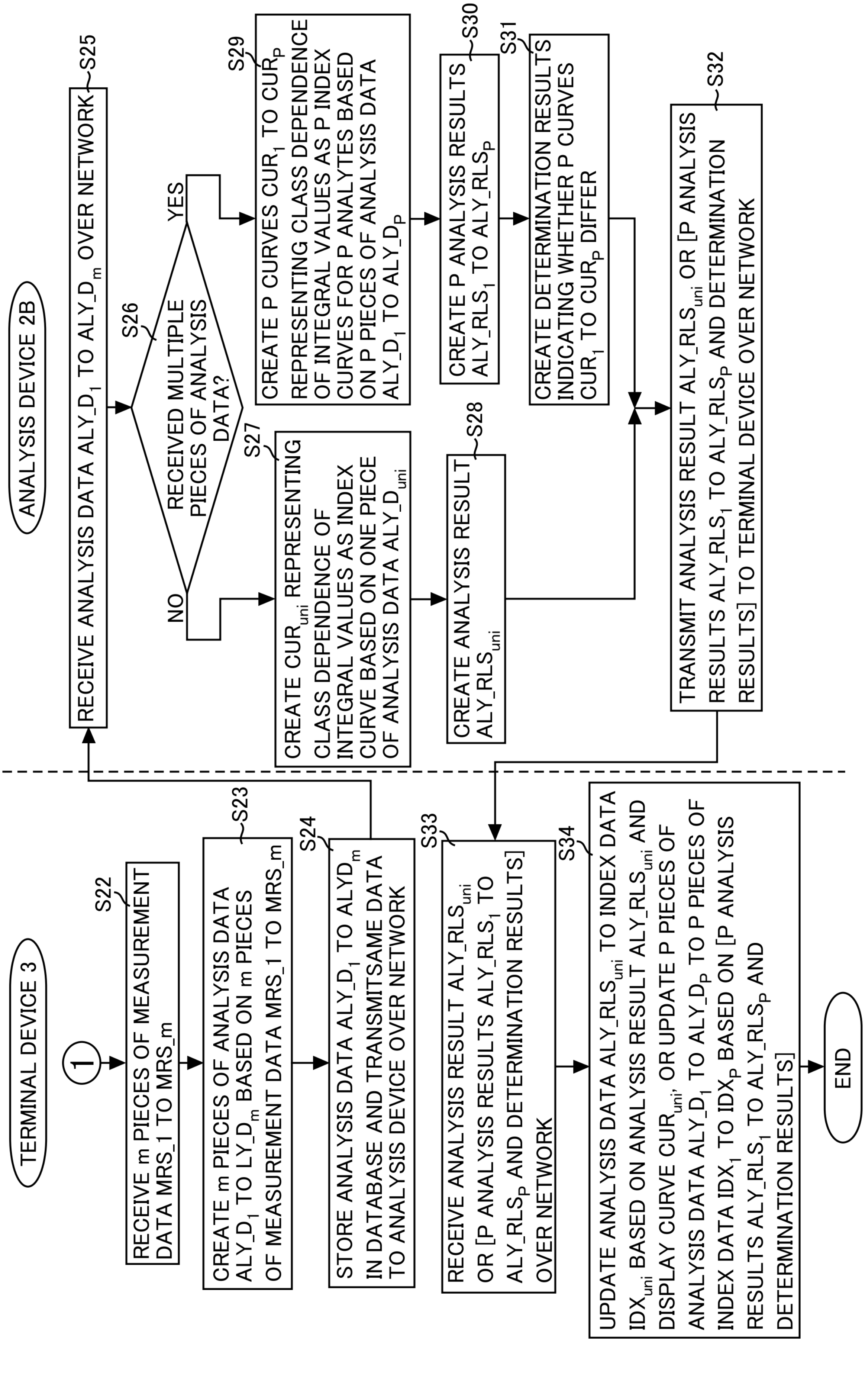
TERMINAL DEVICE 3
ANALYSIS DEVICE 2B
1
S22 RECEIVE m PIECES OF MEASUREMENT DATA MRS_1 TO MRS_m
S23 CREATE m PIECES OF ANALYSIS DATA $ALY_D_1$ TO $LY_D_m$ BASED ON m PIECES OF MEASUREMENT DATA MRS_1 TO MRS_m
S24 STORE ANALYSIS DATA $ALY_D_1$ TO $ALYD_m$ IN DATABASE AND TRANSMITSAME DATA TO ANALYSIS DEVICE OVER NETWORK
S25 RECEIVE ANALYSIS DATA $ALY_D_1$ TO $ALY_D_m$ OVER NETWORK
S26 RECEIVED MULTIPLE PIECES OF ANALYSIS DATA?
YES
NO
S27 CREATE $CUR_{uni}$ REPRESENTING CLASS DEPENDENCE OF INTEGRAL VALUES AS INDEX CURVE BASED ON ONE PIECE OF ANALYSIS DATA $ALY_D_{uni}$
S28 CREATE ANALYSIS RESULT $ALY_RLS_{uni}$
S29 CREATE P CURVES $CUR_1$ TO $CUR_P$ REPRESENTING CLASS DEPENDENCE OF INTEGRAL VALUES AS P INDEX CURVES FOR P ANALYTES BASED ON P PIECES OF ANALYSIS DATA $ALY_D_1$ TO $ALY_D_P$
S30 CREATE P ANALYSIS RESULTS $ALY_RLS_1$ TO $ALY_RLS_P$
S31 CREATE DETERMINATION RESULTS INDICATING WHETHER P CURVES $CUR_1$ TO $CUR_P$ DIFFER
S32 TRANSMIT ANALYSIS RESULT $ALY_RLS_{uni}$ OR [P ANALYSIS RESULTS $ALY_RLS_1$ TO $ALY_RLS_P$ AND DETERMINATION RESULTS] TO TERMINAL DEVICE OVER NETWORK
S33 RECEIVE ANALYSIS RESULT $ALY_RLS_{uni}$ OR [P ANALYSIS RESULTS $ALY_RLS_1$ TO $ALY_RLS_P$ AND DETERMINATION RESULTS] OVER NETWORK
S34 UPDATE ANALYSIS DATA $ALY_RLS_{uni}$ TO INDEX DATA $IDX_{uni}$ BASED ON ANALYSIS RESULT $ALY_RLS_{uni}$ AND DISPLAY CURVE $CUR_{uni}$, OR UPDATE P PIECES OF ANALYSIS DATA $ALY_D_1$ TO $ALY_D_P$ TO P PIECES OF INDEX DATA $IDX_1$ TO $IDX_P$ BASED ON [P ANALYSIS RESULTS $ALY_RLS_1$ TO $ALY_RLS_P$ AND DETERMINATION RESULTS]
END

FIG. 196

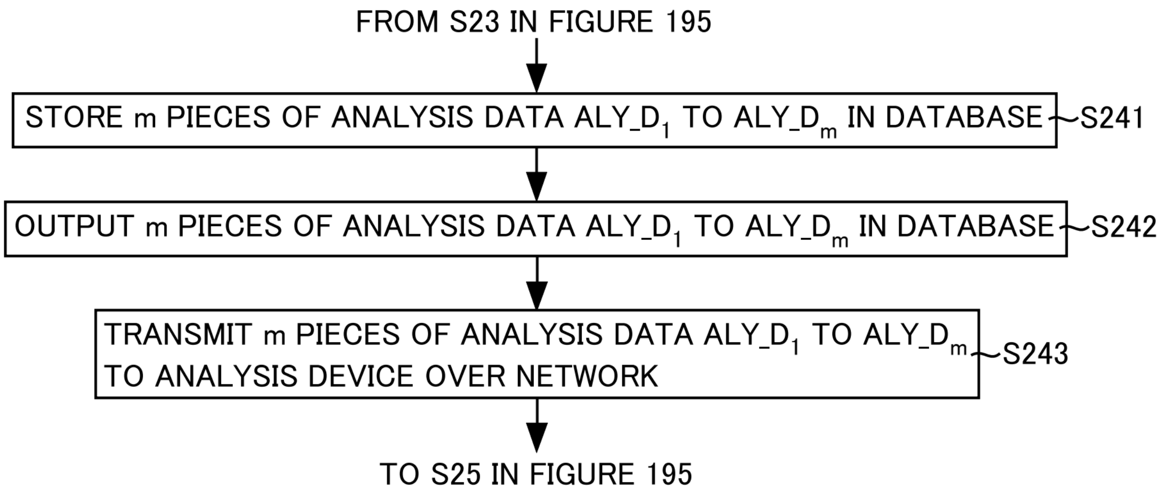
FROM S23 IN FIGURE 195
STORE m PIECES OF ANALYSIS DATA $ALY_D_1$ TO $ALY_D_m$ IN DATABASE
S241
OUTPUT m PIECES OF ANALYSIS DATA $ALY_D_1$ TO $ALY_D_m$ IN DATABASE
S242
TRANSMIT m PIECES OF ANALYSIS DATA $ALY_D_1$ TO $ALY_D_m$ TO ANALYSIS DEVICE OVER NETWORK
S243
TO S25 IN FIGURE 195

FIG. 197

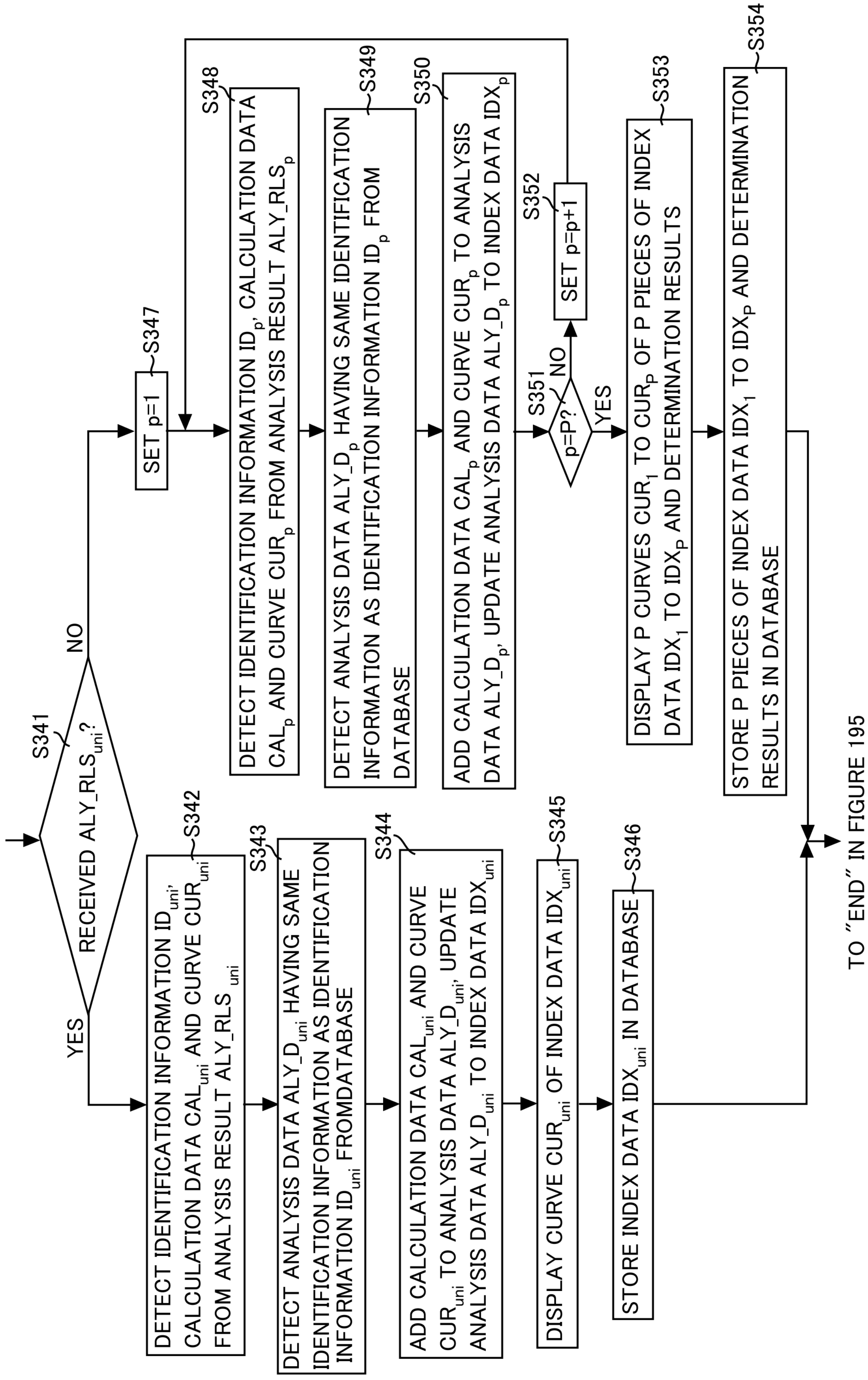
FROM S33 IN FIGURE 195
S341
RECEIVED ALY_RLS$_{uni}$?
YES
NO
S342
DETECT IDENTIFICATION INFORMATION ID$_{uni}$, CALCULATION DATA CAL$_{uni}$ AND CURVE CUR$_{uni}$ FROM ANALYSIS RESULT ALY_RLS$_{uni}$
S343
DETECT ANALYSIS DATA ALY_D$_{uni}$ HAVING SAME IDENTIFICATION INFORMATION AS IDENTIFICATION INFORMATION ID$_{uni}$ FROMDATABASE
S344
ADD CALCULATION DATA CAL$_{uni}$ AND CURVE CUR$_{uni}$ TO ANALYSIS DATA ALY_D$_{uni}$, UPDATE ANALYSIS DATA ALY_D$_{uni}$ TO INDEX DATA IDX$_{uni}$
S345
DISPLAY CURVE CUR$_{uni}$ OF INDEX DATA IDX$_{uni}$
S346
STORE INDEX DATA IDX$_{uni}$ IN DATABASE
S347
SET p=1
S348
DETECT IDENTIFICATION INFORMATION ID$_p$, CALCULATION DATA CAL$_p$ AND CURVE CUR$_p$ FROM ANALYSIS RESULT ALY_RLS$_p$
S349
DETECT ANALYSIS DATA ALY_D$_p$ HAVING SAME IDENTIFICATION INFORMATION AS IDENTIFICATION INFORMATION ID$_p$ FROM DATABASE
S350
ADD CALCULATION DATA CAL$_p$ AND CURVE CUR$_p$ TO ANALYSIS DATA ALY_D$_p$, UPDATE ANALYSIS DATA ALY_D$_p$ TO INDEX DATA IDX$_p$
S351
p=P?
NO
YES
S352
SET p=p+1
S353
DISPLAY P CURVES CUR$_1$ TO CUR$_P$ OF P PIECES OF INDEX DATA IDX$_1$ TO IDX$_P$ AND DETERMINATION RESULTS
S354
STORE P PIECES OF INDEX DATA IDX$_1$ TO IDX$_P$ AND DETERMINATION RESULTS IN DATABASE
TO "END" IN FIGURE 195

FIG.198

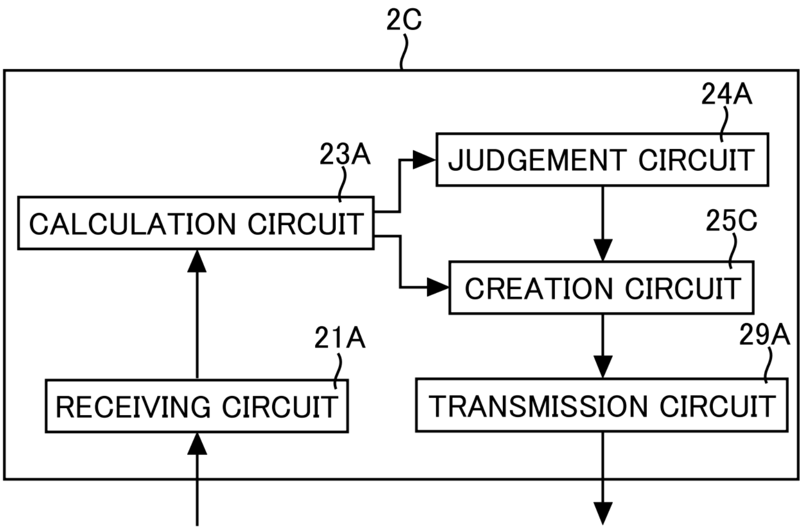


FIG.199

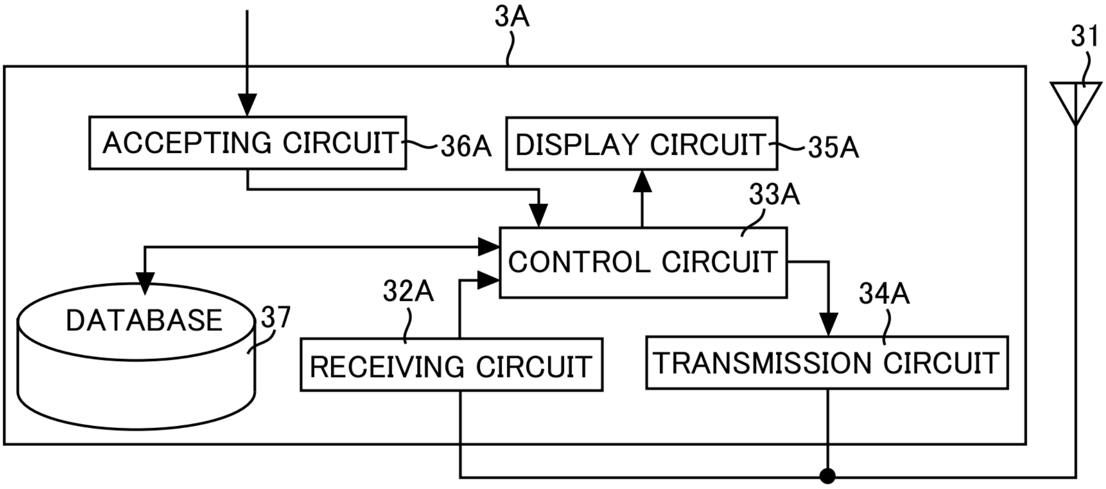

## INTERNATIONAL SEARCH REPORT

International application No.
**PCT/JP2024/026224**

### A. CLASSIFICATION OF SUBJECT MATTER

***G01N 27/48***(2006.01)i; ***G01N 27/26***(2006.01)i; ***G01N 27/28***(2006.01)i
FI: G01N27/48 Z; G01N27/26 371Z; G01N27/28 331Z

According to International Patent Classification (IPC) or to both national classification and IPC

### B. FIELDS SEARCHED

Minimum documentation searched (classification system followed by classification symbols)

G01N27/48; G01N27/26; G01N27/28; G01N27/00

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2012-242274 A (UNIV TSUKUBA) 10 December 2012 (2012-12-10)<br>paragraphs [0016]-[0021], [0028], [0034]-[0035], fig. 1 | 1 |
| Y | WO 2021/015067 A1 (SUMITOMO CHEMICAL COMPANY, LIMITED) 28 January 2021 (2021-01-28)<br>paragraphs [0009], [0030], [0034], fig. 1 | 1 |
| Y | WO 2022/185696 A1 (UNIV OSAKA PUBLIC CORP.) 09 September 2022 (2022-09-09)<br>paragraphs [0069], [0106], fig. 1 | 1 |
| A | JP 2006-504096 A (ABBOTT LABORATORIES) 02 February 2006 (2006-02-02)<br>entire text, all drawings | 1 |
| A | US 2020/0355640 A1 (BATTELLE ENERGY ALLIANCE, LLC) 12 November 2020 (2020-11-12)<br>entire text, all drawings | 1 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **10 September 2024** | **24 September 2024** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (July 2022)

**INTERNATIONAL SEARCH REPORT**

International application No.
**PCT/JP2024/026224**

**C. DOCUMENTS CONSIDERED TO BE RELEVANT**

| Category* | Citation of document, with indication, where appropriate, of the relevant passages | Relevant to claim No. |
|---|---|---|
| A | WO 2012/133633 A1 (TECHNO MEDICA CO., LTD.) 04 October 2012 (2012-10-04) entire text, all drawings | 1 |
| A | JP 2-120657 A (A & D CO., LTD.) 08 May 1990 (1990-05-08) entire text, all drawings | 1 |
| A | JP 10-54823 A (DAIKIN INDUSTRIES, LTD.) 24 February 1998 (1998-02-24) entire text, all drawings | 2-24 |
| A | JP 8-292173 A (SHIONOGI & CO., LTD.) 05 November 1996 (1996-11-05) entire text, all drawings | 2-24 |

Form PCT/ISA/210 (second sheet) (July 2022)

INTERNATIONAL SEARCH REPORT

International application No.
PCT/JP2024/026224

**Box No. III Observations where unity of invention is lacking (Continuation of item 3 of first sheet)**

This International Searching Authority found multiple inventions in this international application, as follows:

(Invention 1) Claim 1
Claim 1 has the special technical feature of the sensor described in claim 1, and is thus classified as invention 1.

(Invention 2) Claims 2-24
Claims 2-12 and 15-24 share, with claim 1 classified as invention 1, the common technical feature of measuring a cyclic voltammogram of an analysis target formed of a liquid.
However, the technical feature does not make a contribution over the prior art in light of the disclosure of document 1, and thus cannot be said to have a special technical feature.
Also, there are no other same or corresponding special technical features between these inventions.
Additionally, claims 2-12, and 15-24 are not dependent on claim 1. Furthermore, claims 2-12, and 15-24 are not substantially identical or similarly closely related to any of the claims classified as invention 1.
Therefore, claims 2-12, and 15-24 cannot be classified as invention 1.
Moreover, claims 2-12 and 15-24 have, the special technical feature in which a curved line, indicating a predetermined potential range dependency of a plurality of integral values in a plurality of predetermined potential ranges in a cyclic voltammogram of an analysis target formed of a liquid, the cyclic voltammogram being obtained by measured through a cyclic voltammetry method as described in each of claims 2, 12 and 15, is set as an index curved line for identifying the analysis target, and are thus classified as invention 2.

Claims 13-14 are dependent on claim 1 and have the common special technical feature of the sensor described in claim 1.
However, claims 13-14 have, the technical feature, added to claim 1, in which a curved line, indicating a predetermined potential range dependency of a plurality of integral values in a plurality of predetermined potential ranges in a cyclic voltammogram of an analysis target formed of a liquid, the cyclic voltammogram being obtained by measured through a cyclic voltammetry method as described in claim 2, is set as an index curved line for identifying the analysis target, whereas claim 1 has the technical feature of the sensor described in claim 1, and thus these features have little technical relevance.
Therefore, claims 13-14 cannot be classified as invention 1.
Moreover, claims 13-14 have, the special technical feature in which a curved line, indicating a predetermined potential range dependency of a plurality of integral values in a plurality of predetermined potential ranges in a cyclic voltammogram of an analysis target formed of a liquid, the cyclic voltammogram being measured through a cyclic voltammetry method as described in claim 2, is set as an index curved line for identifying the analysis target, and are thus classified as invention 2.

Document 1: JP 2012-242274 A (UNIV TSUKUBA) 10 December 2012 (2012-12-10) paragraphs ［００１６］－［００２１］，［００２８］，［００３４］－［００３５］，and fig. 1 (Family: none)

Form PCT/ISA/210 (continuation of first sheet) (July 2022)

**INTERNATIONAL SEARCH REPORT**

International application No.
**PCT/JP2024/026224**

**Box No. III Observations where unity of invention is lacking (Continuation of item 3 of first sheet)**

1. ☑ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**

☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☑ No protest accompanied the payment of additional search fees.

Form PCT/ISA/210 (continuation of first sheet) (July 2022)

**INTERNATIONAL SEARCH REPORT**
**Information on patent family members**

International application No.
**PCT/JP2024/026224**

| Patent document cited in search report | Publication date (day/month/year) | Patent family member(s) | Publication date (day/month/year) |
|---|---|---|---|
| JP 2012-242274 A | 10 December 2012 | (Family: none) | |
| WO 2021/015067 A1 | 28 January 2021 | US 2022/0260516 A1<br>paragraphs [0021], [0047], [0052], fig. 1<br>EP 4001908 A1<br>CN 114072664 A<br>TW 202113350 A<br>JP 2021-18122 A | |
| WO 2022/185696 A1 | 09 September 2022 | US 2024/0151721 A1<br>paragraphs [0315], [0446], fig. 1<br>CN 116940835 A | |
| JP 2006-504096 A | 02 February 2006 | US 2004/0079653 A1<br>whole document<br>WO 2004/038401 A2<br>EP 1556689 A2<br>CA 2503086 A1<br>AU 2003286597 A1 | |
| US 2020/0355640 A1 | 12 November 2020 | (Family: none) | |
| WO 2012/133633 A1 | 04 October 2012 | (Family: none) | |
| JP 2-120657 A | 08 May 1990 | (Family: none) | |
| JP 10-54823 A | 24 February 1998 | (Family: none) | |
| JP 8-292173 A | 05 November 1996 | (Family: none) | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- FR 2013
- FR 2016

### Non-patent literature cited in the description


- **H. YU** ; **Y. ZHANG** ; **J. ZHAO** ; **H. TIAN**. Taste characteristics of Chinese bayberry juice characterized by sensory evaluation, chromatography analysis, and an electronic tongue. *J Food Sci Technol*, 2018, vol. 55 (5), 1624-1631
- **G.F. ABREU** ; **F.M. BOREM** ; **L.F.C. OLIVEIRA** ; **M.R. ALMEIDA** ; **A.P.C. ALVES**. Raman spectroscopy: A new strategy for monitoring the quality of green coffee beans during storage. *Food Chem*, 2019, vol. 287, 241-248
- **R. FERRER-GALLEGO** ; **J.M. HERNANDEZ-HIERRO** ; **J.C. RIVAS-GONZALO** ; **M.T. ESCRIBANO-BAILON**. Evaluation of sensory parameters of grapes using near infrared spectroscopy. *J Food Eng*, 2013, vol. 118 (3), 333-339